# EUROPEAN PATENT SPECIFICATION

(11) **EP 1 369 789 B1**
(45) Date of publication and mention of the grant of the patent: **11.04.2007**
(21) Application number: 03012166.9
(22) Date of filing: 03.06.2003
(51) Int. Cl.: G06F 15/80, G06F 9/38

(54) **Processor executing SIMD instructions**
SIMD Befehle ausführender Prozessor
Processeur exécutant des instructions SIMD

(30) Priority: 03.06.2002 JP 2002161381
(43) Date of publication of application: 10.12.2003
(60) Divisional application: 04027704.8
(73) Proprietor: MATSUSHITA ELECTRIC INDUSTRIAL CO., LTD., Kadoma-shi, Osaka 571-8501 (JP)
(72) Inventor: Koga, Yoshihiro, Otokuni-gun, Kyoto 618-0171 (JP); Kuroda, Manabu, Takarazuka-shi, Hyogo 665-0877 (JP); Suzuki, Masato, Shiga-gun, Shiga 520-0532 (JP); Kiyohara, Tokuzo, Osaka-shi, Osaka 545-0053 (JP); Tanaka, Tetsuya, Soraku-gun, Kyoto 619-0238 (JP); Okabayashi, Hazuki, Hirakata-shi, Osaka 573-0026 (JP); Heishi, Taketo, Osaka-shi, Osaka 536-0008 (JP); Ogawa, Hajime, Suita-shi, Osaka 564-0004 (JP); Tanaka, Takeshi, Neyagawa-shi, Osaka 572-0004 (JP); Nishida, Hideshi, Nishinomiya-shi, Hyogo 662-0862 (JP); Miyasaka, Shuji, Neyagawa-shi, Osaka 572-0004 (JP)
(74) Representative: Balsters, Robert

(56) References cited:
- US-A- 5 778 241
- US-A1- 2002 026 570

## Description

### BACKGROUND OF THE INVENTION

### (1) Field of the Invention

The present invention relates to a processor such as DSP and CPU, and more particularly to a processor that executes SIMD instructions.

### (2) Description of the Related Art

Pentium (R)/ Pentium (R) III/ Pentium 4 (R) MMX/SSE/SSE2 and others of the Intel Corporation of the United States are some of the existing processors that support SIMD (Single Instruction Multiple Data) instructions.

For example, MMX is capable of performing the same operations in one instruction on maximum of eight integers stored in a 64-bit MMX register.

However, such existing processors have many limitations concerning the positions of operands on which SIMD operations are performed.

For example, when an existing processor executes a SIMD add instruction on the first register and the second register as its operands, with values A and B stored in the higher bits and the lower bits of the first register respectively and values C and D stored in the higher bits and the lower bits of the second register respectively, resulting values are A+C and B+D. In other words, such added values are obtained as a result of adding data stored in the higher bits of the respective registers and as a result of adding data stored in the lower bits of the respective registers, meaning that an operand depends uniquely on the position in a register where data is stored.

Therefore, in order to obtain an added value A+D and an added value B+C targeting at the aforementioned first and second registers, the storage positions of data stored in the higher bits and data stored in the lower bits in either of the registers need to be exchanged before a SIMD add instruction is executed, or an ordinary SISD (Single Instruction Single Data) add instruction needs to be executed twice instead of using a SIMD add instruction.

Meanwhile, with the recent digitization of communications, it is necessary, in the fields of image processing and sound processing requiring digital signal processing (e.g. Fourier transform and filter processing), to perform the same operations on a plurality of data elements, but many cases require such processing as one for performing the same operations on a plurality of data elements located at a symmetric position with respect to the center of the data array. In such a case, two types of operands need to be sorted in reverse order, and the operation shall be performed on data stored in the higher bits of one of two registers and data stored in the lower bits of the other register, for example.

However, there is a problem that a SIMD operation performed by the existing processors requires operands to be placed in the same order as each other in respective data arrays as mentioned above, which necessitates the reordering and the like of the operands as well as consuming a substantial time for digital signal processing.

US patent application US 2002/00226570 A1 discloses a SIMD processor having at least one register designation field capable of designating a plurality of data registers having consecutive numbers. Thus, a single operand can designate a plurality of registers, thereby enabling to simultaneously make access to these registers.

US patent application US 5,778,241 A discloses a programmable processor using a mode field in each instruction to specify whether an operand is processed in a vector mode or in a scalar mode. The vector mode indicates to a plurality of sub-processing units for receiving the operand that there are a plurality of elements within the operand and each element is processed by one of the sub-processing units to generate a vector result. Thus, different operations use different portions of the vectors having vector coordinates at the same or at different positions.

### SUMMARY OF THE INVENTION

The present invention has been conceived in view of the above problem, and it is an object of the present invention to provide a processor which involves fewer limitations concerning the positions of operands handled in SIMD operations and which is capable of executing SIMD operations with a high degree of flexibility. More specifically, the present invention aims at providing a processor suited to be used for multimedia performing high-speed digital signal processing.

As is obvious from the above explanations, the processor according to the present invention, which is a processor capable of executing SIMD instructions for performing operations on a plurality of data elements in a single instruction, executes parallel operations, not only on two pieces of data in the same ordinal rank in different data arrays, but also on data in a diagonally crossed position, and data in a symmetric position. Thus, the present invention enhances the speed of digital filtering and other processing in which the same operations are performed on data in a symmetric position, and therefore, it is possible to embody a processor suitable for multimedia processing and other purposes.

When the type of an operation concerned is multiplication, sum of products or difference of products, only the lower bits, the higher bits, or a part of operation results of the respective operation types may be outputted. Accordingly, since bit extraction, required to be performed when integer data and fixed point data are handled, is carried out in concurrence with the operation in calculating an inner product of complex numbers and others, an increased speed can be achieved of an operation utilizing two-dimensional data including complex numbers (e.g. image processing using a two-dimensional coordinate, audio signal processing using two-dimensional representation of amplitude and phase).

As described above, capable of offering a higher degree of parallelism than an ordinary microcomputer, performing high-speed AV media signal processing, as well as capable of being employed as a core processor to be commonly used in mobile phone, mobile AV device, digital television, DVD and others, the processor according to the present invention is extremely useful in the present age in which the advent of high-performance and cost effective multimedia apparatuses is desired.

Note that it possible to embody the present invention not only as a processor executing the above-mentioned characteristic instructions, but also as an operation processing method for a plurality of data elements and the like, and as a program including such characteristic instructions. Also, it should be also understood that such program can be distributed via recording medium including CD-ROM and the like as well as via transmission medium including the internet and the like.

Japanese patent application No.2002-161381 filed June 3, 2002, provides further information about the technical background to this application.

### BRIEF DESCRIPTION OF THE DRAWINGS

These and other subjects, advantages and features of the invention will become apparent from the following description thereof taken in conjunction with the accompanying drawings that illustrate a specific embodiment of the invention. In the Drawings:
Fig.1 is a schematic block diagram showing a processor according to the present invention.
Fig.2 is a schematic diagram showing arithmetic and logic/comparison operation units of the processor.
Fig.3 is a block diagram showing a configuration of a barrel shifter of the processor.
Fig.4 is a block diagram showing a configuration of a converter of the processor.
Fig.5 is a block diagram showing a configuration of a divider of the processor.
Fig.6 is a block diagram showing a configuration of a multiplication/sum of products operation unit of the processor.
Fig.7 is a block diagram showing a configuration of an instruction control unit of the processor.
Fig.8 is a diagram showing a configuration of general-purpose registers (R0~R31) of the processor.
Fig.9 is a diagram showing a configuration of a link register (LR) of the processor.
Fig.10 is a diagram showing a configuration of a branch register (TAR) of the processor.
Fig.11 is a diagram showing a configuration of a program status register (PSR) of the processor.
Fig.12 is a diagram showing a configuration of a condition flag register (CFR) of the processor.
Figs.13A and 13B are diagrams showing configurations of accumulators (M0, M1) of the processor.
Fig.14 is a diagram showing a configuration of a program counter (PC) of the processor.
Fig.15 is a diagram showing a configuration of a PC save register (IPC) of the processor.
Fig. 16 is a diagram showing a configuration of a PSR save register (IPSR) of the processor.
Fig.17 is a timing diagram showing a pipeline behavior of the processor.
Fig. 18 is a timing diagram showing each stage of the pipeline behavior of the processor at the time of executing an instruction.
Fig.19 is a diagram showing a parallel behavior of the processor.
Figs.20 is a diagram showing format of instructions executed by the processor.
Fig.21 is a diagram explaining an instruction belonging to a category "ALUadd (addition) system)".
Fig.22 is a diagram explaining an instruction belonging to a category "ALUsub (subtraction) system)".
Fig.23 is a diagram explaining an instruction belonging to a category "ALUlogic (logical operation) system and others".
Fig.24 is a diagram explaining an instruction belonging to a category "CMP (comparison operation) system".
Fig.25 is a diagram explaining an instruction belonging to a category "mul (multiplication) system".
Fig.26 is a diagram explaining an instruction belonging to a category "mac (sum of products operation) system".
Fig.27 is a diagram explaining an instruction belonging to a category "msu (difference of products) system".
Fig.28 is a diagram explaining an instruction belonging to a category "MEMld (load from memory) system".
Fig.29 is a diagram explaining an instruction belonging to a category "MEMstore (store in memory) system".
Fig.30 is a diagram explaining an instruction belonging to a category "BRA (branch) system".
Fig.31 is a diagram explaining an instruction belonging to a category "BSasl (arithmetic barrel shift) system and others".
Fig.32 is a diagram explaining an instruction belonging to a category "BSlsr (logical barrel shift) system and others".
Fig.33 is a diagram explaining an instruction belonging to a category "CNVvaln (arithmetic conversion) system".
Fig.34 is a diagram explaining an instruction belonging to a category "CNV (general conversion) system".
Fig.35 is a diagram explaining an instruction belonging to a category "SATvlpk (saturation processing) system".
Fig.36 is a diagram explaining an instruction belonging to a category "ETC (et cetera) system".
Fig.37 is a diagram explaining Instruction "ld Rb,(Ra,D10)".
Fig.38 is a diagram explaining Instruction "ld Rb3,(Ra3,D5)".
Fig.39 is a diagram explaining Instruction "ld Rb,(GP,D13)".
Fig.40 is a diagram explaining Instruction "ld Rb2,(GP,D6)".
Fig.41 is a diagram explaining Instruction "ld Rb2,(GP)".
Fig.42 is a diagram explaining Instruction "ld Rb,(SP,D13)".
Fig.43 is a diagram explaining Instruction "ld Rb2,(SP,D6)".
Fig.44 is a diagram explaining Instruction "ld Rb2,(SP)".
Fig.45 is a diagram explaining Instruction "ld Rb,(Ra+)I10".
Fig.46 is a diagram explaining Instruction "ld Rb,(Ra+)".
Fig.47 is a diagram explaining Instruction "ld Rb2,(Ra2+)".
Fig.48 is a diagram explaining Instruction "ld Rb,(Ra)".
Fig.49 is a diagram explaining Instruction "ld Rb2,(Ra2)".
Fig.50 is a diagram explaining Instruction "ldh Rb,(Ra,D9)".
Fig.51 is a diagram explaining Instruction "ldh Rb3,(Ra3,D4)".
Fig.52 is a diagram explaining Instruction "ldh Rb,(GP,D12)".
Fig.53 is a diagram explaining Instruction "ldh Rb2,(GP,D5)".
Fig.54 is a diagram explaining Instruction "ldh Rb2,(GP)".
Fig.55 is a diagram explaining Instruction "ldh Rb,(SP,D12)".
Fig.56 is a diagram explaining Instruction "ldh Rb2,(SP,D5)".
Fig.57 is a diagram explaining Instruction "ldh Rb2,(SP)".
Fig.58 is a diagram explaining Instruction "ldh Rb,(Ra+)I9".
Fig.59 is a diagram explaining Instruction "ldh Rb,(Ra+)".
Fig.60 is a diagram explaining Instruction "ldh Rb2,(Ra2+)".
Fig.61 is a diagram explaining Instruction "ldh Rb,(Ra)".
Fig.62 is a diagram explaining Instruction "ldh Rb2,(Ra2)".
Fig.63 is a diagram explaining Instruction "ldhu Rb,(Ra,D9)".
Fig.64 is a diagram explaining Instruction "ldhu Rb,(GP,D12)".
Fig.65 is a diagram explaining Instruction "ldhu Rb,(SP,D12)".
Fig.66 is a diagram explaining Instruction "ldhu Rb,(Ra+)I9".
Fig.67 is a diagram explaining Instruction "ldhu Rb,(Ra+)".
Fig.68 is a diagram explaining Instruction "ldhu Rb,(Ra)".
Fig.69 is a diagram explaining Instruction "ldb Rb,(Ra,D8)".
Fig.70 is a diagram explaining Instruction "ldb Rb,(GP,D11)".
Fig.71 is a diagram explaining Instruction "ldb Rb,(SP,D11)".
Fig.72 is a diagram explaining Instruction "ldb Rb,(Ra+)I8".
Fig.73 is a diagram explaining Instruction "ldb Rb,(Ra+)".
Fig.74 is a diagram explaining Instruction "ldb Rb,(Ra)".
Fig.75 is a diagram explaining Instruction "ldbu Rb,(Ra,D8)".
Fig.76 is a diagram explaining Instruction "ldbu Rb, (GP,D11)".
Fig.77 is a diagram explaining Instruction "ldbu Rb, (SP,D11)".
Fig.78 is a diagram explaining Instruction "ldbu Rb,(Ra+)18".
Fig.79 is a diagram explaining Instruction "ldbu Rb,(Ra+)".
Fig.80 is a diagram explaining Instruction "ldbu Rb,(Ra)".
Fig.81 is a diagram explaining Instruction "ldp Rb:Rb+1,(Ra,D11)".
Fig.82 is a diagram explaining Instruction "ldp Rb:Rb+1, (GP,D14)".
Fig.83 is a diagram explaining Instruction "ldp Rb:Rb+1,(SP,D14)".
Fig.84 is a diagram explaining Instruction "ldp Rb:Rb+1,(SP,D7)".
Fig.85 is a diagram explaining Instruction "ldp Rb:Rb+1,(SP)".
Fig.86 is a diagram explaining Instruction "ldp Rb:Rb+1,(Ra+)I11".
Fig.87 is a diagram explaining Instruction "ldp Rb2:Rb2+1,(Ra2+)".
Fig.88 is a diagram explaining Instruction "ldp Rb:Rb+1,(Ra+)".
Fig.89 is a diagram explaining Instruction "ldp Rb:Rb+1,(Ra)".
Fig.90 is a diagram explaining Instruction "ldp LR:SVR,(Ra,D14)".
Fig.91 is a diagram explaining Instruction "ldp LR:SVR,(Ra)".
Fig.92 is a diagram explaining Instruction "ldp LR:SVR,(GP,D14)".
Fig.93 is a diagram explaining Instruction "ldp LR:SVR,(SP,D14)".
Fig.94 is a diagram explaining Instruction "ldp LR:SVR,(SP,D7)".
Fig.95 is a diagram explaining Instruction "ldp LR:SVR,(SP)".
Fig.96 is a diagram explaining Instruction "ldp TAR:UDR,(Ra,D11)".
Fig.97 is a diagram explaining Instruction "ldp TAR:UDR,(GP,D14)".
Fig.98 is a diagram explaining Instruction "ldp TAR:UDR,(SP,D14)".
Fig.99 is a diagram explaining Instruction "ldhp Rb:Rb+1,(Ra,D10)".
Fig.100 is a diagram explaining Instruction "ldhp Rb:Rb+1,(Ra+)I10".
Fig.101 is a diagram explaining Instruction "ldhp Rb2:Rb2+1,(Ra2+)".
Fig.102 is a diagram explaining Instruction "ldhp Rb:Rb+1, (Ra+)".
Fig.103 is a diagram explaining Instruction "ldhp Rb: Rb+1,(Ra)".
Fig.104 is a diagram explaining Instruction "ldbp Rb:Rb+1,(Ra,D9)".
Fig.105 is a diagram explaining Instruction "ldbp Rb:Rb+ 1,(Ra +)19".
Fig.106 is a diagram explaining Instruction "ldbp Rb:Rb+1,(Ra+)".
Fig.107 is a diagram explaining Instruction "ldbp Rb:Rb+1,(Ra)".
Fig.108 is a diagram explaining Instruction "ldbh Rb,(Ra+)I7".
Fig.109 is a diagram explaining Instruction "ldbh Rb,(Ra+)".
Fig.110 is a diagram explaining Instruction "ldbh Rb,(Ra)".
Fig.111 is a diagram explaining Instruction "ldbuh Rb,(Ra+)I7".
Fig.112 is a diagram explaining Instruction "ldbuh Rb,(Ra+)".
Fig.113 is a diagram explaining Instruction "ldbuh Rb,(Ra)".
Fig.114 is a diagram explaining Instruction "ldbhp Rb:Rb+1,(Ra+)I7".
Fig. 115 is a diagram explaining Instruction "ldbhp Rb:Rb+1,(Ra+)".
Fig.116 is a diagram explaining Instruction "ldbhp Rb:Rb+1,(Ra)".
Fig.117 is a diagram explaining Instruction "ldbuhp Rb:Rb+1,(Ra+)I7".
Fig.118 is a diagram explaining Instruction "ldbuhp Rb:Rb+1,(Ra+)".
Fig.119 is a diagram explaining Instruction "ldbuhp Rb:Rb+1,(Ra)".
Fig.120 is a diagram explaining Instruction "st (Ra,D10),Rb".
Fig.121 is a diagram explaining Instruction "st (Ra3,D5),Rb3".
Fig.122 is a diagram explaining Instruction "st (GP,D13),Rb".
Fig.123 is a diagram explaining Instruction "st (GP,D6),Rb2".
Fig.124 is a diagram explaining Instruction "st (GP),Rb2".
Fig.125 is a diagram explaining Instruction "st (SP,D13),Rb".
Fig.126 is a diagram explaining Instruction "st (SP,D6),Rb2".
Fig.127 is a diagram explaining Instruction "st (SP),Rb2".
Fig.128 is a diagram explaining Instruction "st (Ra+)I10,Rb".
Fig.129 is a diagram explaining Instruction "st (Ra+),Rb".
Fig.130 is a diagram explaining Instruction "st (Ra2+),Rb2".
Fig.131 is a diagram explaining Instruction "st (Ra),Rb".
Fig.132 is a diagram explaining Instruction "st (Ra2),Rb2".
Fig.133 is a diagram explaining Instruction "sth (Ra,D9),Rb".
Fig.134 is a diagram explaining Instruction "sth (Ra3,D4),Rb3".
Fig.135 is a diagram explaining Instruction "sth (GP,D12),Rb".
Fig.136 is a diagram explaining Instruction "sth (GP,D5),Rb2".
Fig.137 is a diagram explaining Instruction "sth (GP),Rb2".
Fig.138 is a diagram explaining Instruction "sth (SP,D12),Rb".
Fig.139 is a diagram explaining Instruction "sth (SP,D5),Rb2".
Fig.140 is a diagram explaining Instruction "sth (SP),Rb2".
Fig.141 is a diagram explaining Instruction "sth (Ra+)I9,Rb".
Fig.142 is a diagram explaining Instruction "sth (Ra+),Rb".
Fig.143 is a diagram explaining Instruction "sth (Ra2+),Rb2".
Fig.144 is a diagram explaining Instruction "sth (Ra),Rb".
Fig.145 is a diagram explaining Instruction "sth (Ra2),Rb2".
Fig.146 is a diagram explaining Instruction "stb (Ra,D8),Rb".
Fig.147 is a diagram explaining Instruction "stb (GP,D11),Rb".
Fig.148 is a diagram explaining Instruction "stb (SP,D11),Rb".
Fig.149 is a diagram explaining Instruction "stb (Ra+)I8,Rb".
Fig.150 is a diagram explaining Instruction "stb (Ra+),Rb".
Fig.151 is a diagram explaining Instruction "stb (Ra),Rb".
Fig.152 is a diagram explaining Instruction "stp (Ra,D11),Rb:Rb+1".
Fig.153 is a diagram explaining Instruction "stp (GP,D14),Rb:Rb+1".
Fig.154 is a diagram explaining Instruction "stp (SP,D14),Rb:Rb+1".
Fig.155 is a diagram explaining Instruction "stp (SP,D7),Rb:Rb+1".
Fig.156 is a diagram explaining Instruction "stp (SP),Rb:Rb+1".
Fig.157 is a diagram explaining Instruction "stp (Ra+)I11,Rb:Rb+1".
Fig.158 is a diagram explaining Instruction "stp (Ra+),Rb:Rb+1".
Fig.159 is a diagram explaining Instruction "stp (Ra2+),Rb2:Rb2+1".
Fig.160 is a diagram explaining Instruction "stp (Ra),Rb:Rb+1".
Fig.161 is a diagram explaining Instruction "stp (Ra,D11),LR:SVR".
Fig. 162 is a diagram explaining Instruction "stp (Ra),LR:SVR".
Fig. 163 is a diagram explaining Instruction "stp (GP,D14),LR:SVR".
Fig.164 is a diagram explaining Instruction "stp (SP,D14),LR:SVR".
Fig.165 is a diagram explaining Instruction "stp (SP,D7),LR:SVR".
Fig.166 is a diagram explaining Instruction "stp (SP),LR:SVR".
Fig.167 is a diagram explaining Instruction "stp (Ra,D11),TAR:UDR".
Fig.168 is a diagram explaining Instruction "stp (GP,D14),TAR:UDR".
Fig.169 is a diagram explaining Instruction "stp (SP,D14),TAR:UDR".
Fig.170 is a diagram explaining Instruction "sthp (Ra,D10),Rb:Rb+1".
Fig.171 is a diagram explaining Instruction "sthp (Ra+)I10,Rb:Rb+1".
Fig.172 is a diagram explaining Instruction "sthp (Ra+),Rb:Rb+1".
Fig.173 is a diagram explaining Instruction "sthp (Ra2+),Rb2:Rb2+1".
Fig.174 is a diagram explaining Instruction "sthp (Ra),Rb:Rb+1".
Fig.175 is a diagram explaining Instruction "stbp (Ra,D9),Rb:Rb+1".
Fig.176 is a diagram explaining Instruction "stbp (Ra+)19,Rb:Rb+1".
Fig.177 is a diagram explaining Instruction "stbp (Ra+),Rb:Rb+1".
Fig.178 is a diagram explaining Instruction "stbp (Ra),Rb:Rb+1".
Fig.179 is a diagram explaining Instruction "stbh (Ra+)I7,Rb".
Fig.180 is a diagram explaining Instruction "stbh (Ra+),Rb".
Fig. 181 is a diagram explaining Instruction "stbh (Ra),Rb".
Fig.182 is a diagram explaining Instruction "stbhp (Ra+)I7,Rb:Rb+1".
Fig.183 is a diagram explaining Instruction "stbhp (Ra+),Rb:Rb+1".
Fig.184 is a diagram explaining Instruction "stbhp (Ra),Rb:Rb+1".
Fig.185 is a diagram explaining Instruction "dpref (Ra,D8)".
Fig.186 is a diagram explaining Instruction "ldstb Rb,(Ra)".
Fig.187 is a diagram explaining Instruction "rd C0:C1,Rb,(D11)".
Fig.188 is a diagram explaining Instruction "rd C0:C1,Rb,(Ra,D5)".
Fig.189 is a diagram explaining Instruction "rd C0:C1,Rb,(Ra)".
Fig. 190 is a diagram explaining Instruction "rd C0:C1,Rb2,(Ra2)".
Fig.191 is a diagram explaining Instruction "rd C2:C3,Rb,(Ra,D5)".
Fig.192 is a diagram explaining Instruction "rd C2:C3,Rb,(Ra)".
Fig.193 is a diagram explaining Instruction "rde C0:C1,Rb,(Ra,D5)".
Fig.194 is a diagram explaining Instruction "rde C0:C1,Rb,(Ra)".
Fig.195 is a diagram explaining Instruction "rde C2:C3,Rb,(Ra,D5)".
Fig.196 is a diagram explaining Instruction "rde C2:C3,Rb,(Ra)".
Fig.197 is a diagram explaining Instruction "wt C0:C1,(D11),Rb".
Fig.198 is a diagram explaining Instruction "wt C0:C1,(Ra,D5),Rb".
Fig.199 is a diagram explaining Instruction "wt C0:C1,(Ra),Rb".
Fig.200 is a diagram explaining Instruction "wt C0:C1,(Ra2),Rb2".
Fig.201 is a diagram explaining Instruction "wt C2:C3,(Ra,D5),Rb".
Fig.202 is a diagram explaining Instruction "wt C2:C3,(Ra),Rb".
Fig.203 is a diagram explaining Instruction "wte C0:C1,(Ra,D5),Rb".
Fig.204 is a diagram explaining Instruction "wte C0:C1,(Ra),Rb".
Fig.205 is a diagram explaining Instruction "wte C2:C3, (Ra,D5),Rb".
Fig.206 is a diagram explaining Instruction "wte C2:C3,(Ra),Rb".
Fig.207 is a diagram explaining Instruction "br D20".
Fig.208 is a diagram explaining Instruction "br D9".
Fig.209 is a diagram explaining Instruction "brl D20".
Fig.210 is a diagram explaining Instruction "call D20".
Fig.211 is a diagram explaining Instruction "brl D9".
Fig.212 is a diagram explaining Instruction "call D9".
Fig.213 is a diagram explaining Instruction "jmp LR".
Fig.214 is a diagram explaining Instruction "jmp TAR".
Fig.215 is a diagram explaining Instruction "jmpl LR".
Fig.216 is a diagram explaining Instruction "call LR".
Fig.217 is a diagram explaining Instruction "jmpl TAR".
Fig.218 is a diagram explaining Instruction "call TAR".
Fig.219 is a diagram explaining Instruction "jmpr LR".
Fig.220 is a diagram explaining Instruction "ret".
Fig.221 is a diagram explaining Instruction "jmpf LR".
Fig.222 is a diagram explaining Instruction "jmpf C6,C2:C4,TAR".
Fig.223 is a diagram explaining Instruction "jmpf Cm,TAR".
Fig.224 is a diagram explaining Instruction "jmpf TAR".
Fig.225 is a diagram explaining Instruction "jloop C6,TAR,Ra,I8".
Fig.226 is a diagram explaining Instruction "jloop C6,TAR,Ra".
Fig.227 is a diagram explaining Instruction "jloop C6,TAR,Ra2".
Fig.228 is a diagram explaining Instruction "jloop C6,TAR,Ra2,-1".
Fig.229 is a diagram explaining Instruction "jloop C6,Cm,TAR,Ra,I8".
Fig.230 is a diagram explaining Instruction "jloop C6,Cm,TAR,Ra".
Fig.231 is a diagram explaining Instruction "jloop C6,Cm,TAR,Ra2".
Fig.232 is a diagram explaining Instruction "jloop C6,Cm,TAR,Ra2,-1".
Fig.233 is a diagram explaining Instruction "jloop C6,C2:C4,TAR,Ra,I8".
Fig.234 is a diagram explaining Instruction "jloop C6,C2:C4,TAR,Ra".
Fig.235 is a diagram explaining Instruction "jloop C6,C2:C4,TAR,Ra2 ".
Fig.236 is a diagram explaining Instruction "jloop C6,C2:C4,TAR,Ra2,-1".
Fig.237 is a diagram explaining Instruction "jloop C5,LR,Ra,I8".
Fig.238 is a diagram explaining Instruction "jloop C5,LR,Ra".
Fig.239 is a diagram explaining Instruction "settar D9".
Fig.240 is a diagram explaining Instruction "settar C6,Cm,D9.
Fig.241 is a diagram explaining Instruction "settar C6,D9".
Fig.242 is a diagram explaining Instruction "settar C6,C2:C4,D9".
Fig.243 is a diagram explaining Instruction "settar C6,C4,D9".
Fig.244 is a diagram explaining Instruction "setlr D9".
Fig.245 is a diagram explaining Instruction "setlr C5,D9".
Fig.246 is a diagram explaining Instruction "setbb TAR".
Fig.247 is a diagram explaining Instruction "setbb LR".
Fig.248 is a diagram explaining Instruction "intd".
Fig.249 is a diagram explaining Instruction "inte".
Fig.250 is a diagram explaining Instruction "vmpswd".
Fig.251 is a diagram explaining Instruction "vmpswe".
Fig.252 is a diagram explaining Instruction "vmpsleep".
Fig.253 is a diagram explaining Instruction "vmpwait".
Fig.254 is a diagram explaining Instruction "vmpsus".
Fig.255 is a diagram explaining Instruction "rti".
Fig.256 is a diagram explaining Instruction "piNl(pi0l,pi1l,pi2l,pi3l,pi4l,pi5l,pi6l,pi7l)".
Fig.257 is a diagram explaining Instruction "piN(pi0,pi1,pi2,pi3,pi4,pi5,pi6,pi7)".
Fig.258 is a diagram explaining Instruction "scN(sc0,sc1,sc2,sc3,sc4,sc5,sc6,sc7)".
Fig.259 is a diagram explaining Instruction "add Rc,Ra,Rb".
Fig.260 is a diagram explaining Instruction "add Rc3,Ra3,Rb3".
Fig.261 is a diagram explaining Instruction "add Ra2,Rb2".
Fig.262 is a diagram explaining Instruction "add Rb,Ra,I12".
Fig.263 is a diagram explaining Instruction "add Ra2,I5".
Fig.264 is a diagram explaining Instruction "add SP,I19".
Fig.265 is a diagram explaining Instruction "add SP,I11".
Fig.266 is a diagram explaining Instruction "addu Rb,GP,I13".
Fig.267 is a diagram explaining Instruction "addu Rb,SP,I13".
Fig.268 is a diagram explaining Instruction "addu Ra3,SP,I6".
Fig.269 is a diagram explaining Instruction "addvw Rc,Ra,Rb".
Fig.270 is a diagram explaining Instruction "addvh Rc,Ra,Rb".
Fig.271 is a diagram explaining Instruction "addc Rc,Ra,Rb".
Fig.272 is a diagram explaining Instruction "adds Rc,Ra,Rb".
Fig.273 is a diagram explaining Instruction "addsr Rc,Ra,Rb".
Fig.274 is a diagram explaining Instruction "s1add Rc,Ra,Rb".
Fig.275 is a diagram explaining Instruction "s1add Rc3,Ra3,Rb3".
Fig.276 is a diagram explaining Instruction "s2add Rc,Ra,Rb".
Fig.277 is a diagram explaining Instruction "s2add Rc3,Ra3,Rb3".
Fig.278 is a diagram explaining Instruction "addmsk Rc,Ra,Rb".
Fig.279 is a diagram explaining Instruction "addarvw Rc,Ra,Rb".
Fig.280 is a diagram explaining Instruction "sub Rc,Rb,Ra".
Fig.281 is a diagram explaining Instruction "sub Rc3,Rb3,Ra3".
Fig.282 is a diagram explaining Instruction "sub Rb2,Ra2".
Fig.283 is a diagram explaining Instruction "sub Rb,Ra,I12".
Fig.284 is a diagram explaining Instruction "sub Ra2,I5".
Fig.285 is a diagram explaining Instruction "sub SP,I19".
Fig.286 is a diagram explaining Instruction "sub SP,I11".
Fig.287 is a diagram explaining Instruction "subc Rc,Rb,Ra".
Fig.288 is a diagram explaining Instruction "subvw Rc,Rb,Ra".
Fig.289 is a diagram explaining Instruction "subvh Rc,Rb,Ra".
Fig.290 is a diagram explaining Instruction "subs Rc,Rb,Ra".
Fig.291 is a diagram explaining Instruction "submsk Rc,Rb,Ra".
Fig.292 is a diagram explaining Instruction "rsub Rb,Ra,I8".
Fig.293 is a diagram explaining Instruction "rsub Ra2,I4".
Fig.294 is a diagram explaining Instruction "rsub Ra2,Rb2".
Fig.295 is a diagram explaining Instruction "neg Rb,Ra".
Fig.296 is a diagram explaining Instruction "neg Ra2".
Fig.297 is a diagram explaining Instruction "negvh Rb,Ra".
Fig.298 is a diagram explaining Instruction "negvw Rb,Ra".
Fig.299 is a diagram explaining Instruction "abs Rb,Ra".
Fig.300 is a diagram explaining Instruction "absvw Rb,Ra".
Fig.301 is a diagram explaining Instruction "absvh Rb,Ra".
Fig.302 is a diagram explaining Instruction "max Rc,Ra,Rb".
Fig.303 is a diagram explaining Instruction "min Rc,Ra,Rb".
Fig.304 is a diagram explaining Instruction "and Rc,Ra,Rb".
Fig.305 is a diagram explaining Instruction "and Ra2,Rb2".
Fig.306 is a diagram explaining Instruction "and Rb,Ra,I8".
Fig.307 is a diagram explaining Instruction "andn Rc,Ra,Rb".
Fig.308 is a diagram explaining Instruction "andn Ra2,Rb2".
Fig.309 is a diagram explaining Instruction "andn Rb,Ra,I8".
Fig.310 is a diagram explaining Instruction "or Rc,Ra,Rb".
Fig.311 is a diagram explaining Instruction "or Ra2,Rb2".
Fig.312 is a diagram explaining Instruction "or Rb,Ra,I8".
Fig.313 is a diagram explaining Instruction "xor Rc,Ra,Rb".
Fig.314 is a diagram explaining Instruction "xor Ra2,Rb2".
Fig.315 is a diagram explaining Instruction "xor Rb,Ra,I8".
Fig.316 is a diagram explaining Instruction "not Rb,Ra".
Fig.317 is a diagram explaining Instruction "not Ra2".
Fig.318 is a diagram explaining Instruction "cmpCC Cm,Ra,Rb".
Fig.319 is a diagram explaining Instruction "cmpCC C6,Ra2,Rb2".
Fig.320 is a diagram explaining Instruction "cmpCC".
Fig.321 is a diagram explaining Instruction "cmpCC C6,Ra2,I4".
Fig.322 is a diagram explaining Instruction "cmpCC".
Fig.323 is a diagram explaining Instruction "cmpCC".
Fig.324 is a diagram explaining Instruction "cmpCCn Cm,Ra,Rb,Cn".
Fig.325 is a diagram explaining Instruction "cmpCCn Cm,Ra,I5,Cn".
Fig.326 is a diagram explaining Instruction "cmpCCn Cm:Cm+1,Ra,Rb,Cn".
Fig.327 is a diagram explaining Instruction "cmpCCn Cm:Cm+1,Ra,I5,Cn".
Fig.328 is a diagram explaining Instruction "cmpCCa Cm:Cm+1,Ra,Rb,Cn".
Fig.329 is a diagram explaining Instruction "cmpCCa Cm:Cm+1,Ra,I5,Cn".
Fig.330 is a diagram explaining Instruction "cmpCCo Cm:Cm+1,Ra,Rb,Cn".
Fig.331 is a diagram explaining Instruction "cmpCCo Cm:Cm+1,Ra,I5,Cn".
Fig.332 is a diagram explaining Instruction "tstz Cm,Ra,Rb".
Fig.333 is a diagram explaining Instruction "tstz C6,Ra2,Rb2".
Fig.334 is a diagram explaining Instruction "tstz Cm,Ra,I5".
Fig.335 is a diagram explaining Instruction "tstz C6,Ra2,I4".
Fig.336 is a diagram explaining Instruction "tstz Cm:Cm+1,Ra,Rb".
Fig.337 is a diagram explaining Instruction "tstz Cm:Cm+1,Ra,I5".
Fig.338 is a diagram explaining Instruction "tstzn Cm,Ra,Rb,Cn".
Fig.339 is a diagram explaining Instruction "tstzn Cm,Ra,I5,Cn".
Fig.340 is a diagram explaining Instruction "tstzn Cm:Cm+1,Ra,Rb,Cn".
Fig.341 is a diagram explaining Instruction "tstzn Cm:Cm+1,Ra,I5,Cn".
Fig.342 is a diagram explaining Instruction "tstza Cm:Cm+1,Ra,Rb,Cn".
Fig.343 is a diagram explaining Instruction "tstza Cm:Cm+1,Ra,I5,Cn".
Fig.344 is a diagram explaining Instruction "tstzo Cm:Cm+1,Ra,Rb,Cn".
Fig.345 is a diagram explaining Instruction "tstzo Cm:Cm+1,Ra,I5,Cn".
Fig.346 is a diagram explaining Instruction "tstn Cm,Ra,Rb".
Fig.347 is a diagram explaining Instruction "tstn C6,Ra2,Rb2".
Fig.348 is a diagram explaining Instruction "tstn Cm,Ra,15".
Fig.349 is a diagram explaining Instruction "tstn C6,Ra2,I4".
Fig.350 is a diagram explaining Instruction "tstn Cm:Cm+1,Ra,Rb".
Fig.351 is a diagram explaining Instruction "tstn Cm:Cm+1,Ra,I5".
Fig.352 is a diagram explaining Instruction "tstnn Cm,Ra,Rb,Cn".
Fig.353 is a diagram explaining Instruction "tstnn Cm,Ra,I5,Cn".
Fig.354 is a diagram explaining Instruction "tstnn Cm:Cm+1,Ra,Rb,Cn".
Fig.355 is a diagram explaining Instruction "tstnn Cm:Cm+1,Ra,15,Cn".
Fig.356 is a diagram explaining Instruction "tstna Cm : Cm+1,Ra,Rb,Cn".
Fig.357 is a diagram explaining Instruction "tstna Cm:Cm+1,Ra,I5,Cn".
Fig.358 is a diagram explaining Instruction "tstno Cm:Cm+1,Ra,Rb,Cn".
Fig.359 is a diagram explaining Instruction "tstno Cm:Cm+1,Ra,I5,Cn".
Fig.360 is a diagram explaining Instruction "mov Rb,Ra".
Fig.361 is a diagram explaining Instruction "mov Ra2,Rb".
Fig.362 is a diagram explaining Instruction "mov Ra,I16".
Fig.363 is a diagram explaining Instruction "mov Ra2,I8".
Fig.364 is a diagram explaining Instruction "mov Rb,TAR".
Fig.365 is a diagram explaining Instruction "mov Rb2,TAR".
Fig.366 is a diagram explaining Instruction "mov Rb,LR".
Fig.367 is a diagram explaining Instruction "mov Rb2,LR".
Fig.368 is a diagram explaining Instruction "mov Rb,SVR".
Fig.369 is a diagram explaining Instruction "mov Rb,PSR".
Fig.370 is a diagram explaining Instruction "mov Rb,CFR".
Fig.371 is a diagram explaining Instruction "mov Rb,MH0".
Fig.372 is a diagram explaining Instruction "mov Rb2,MH0".
Fig.373 is a diagram explaining Instruction "mov Rb,MH1".
Fig.374 is a diagram explaining Instruction "mov Rb2,MH1".
Fig.375 is a diagram explaining Instruction "mov Rb,ML0".
Fig.376 is a diagram explaining Instruction "mov Rb,ML1".
Fig.377 is a diagram explaining Instruction "mov Rb,IPC".
Fig.378 is a diagram explaining Instruction "mov Rb,IPSR".
Fig.379 is a diagram explaining Instruction "mov Rb,PC".
Fig.380 is a diagram explaining Instruction "mov Rb,EPC".
Fig.381 is a diagram explaining Instruction "mov Rb,EPSR".
Fig.382 is a diagram explaining Instruction "mov Rb,PSR0".
Fig.383 is a diagram explaining Instruction "mov Rb,PSR1".
Fig.384 is a diagram explaining Instruction "mov Rb,PSR2".
Fig.385 is a diagram explaining Instruction "mov Rb,PSR3".
Fig.386 is a diagram explaining Instruction "mov Rb,CFR0".
Fig.387 is a diagram explaining Instruction "mov Rb,CFR1".
Fig.388 is a diagram explaining Instruction "mov Rb,CFR2".
Fig.389 is a diagram explaining Instruction "mov Rb,CFR3".
Fig.390 is a diagram explaining Instruction "mov LR,Rb".
Fig.391 is a diagram explaining Instruction "mov LR,Rb2".
Fig.392 is a diagram explaining Instruction "mov TAR,Rb".
Fig.393 is a diagram explaining Instruction "mov TAR,Rb2".
Fig.394 is a diagram explaining Instruction "mov SVR,Rb".
Fig.395 is a diagram explaining Instruction "mov PSR,Rb".
Fig.396 is a diagram explaining Instruction "mov CFR,Rb".
Fig.397 is a diagram explaining Instruction "mov MH0,Rb".
Fig.398 is a diagram explaining Instruction "mov MH0,Rb2".
Fig.399 is a diagram explaining Instruction "mov MH1,Rb".
Fig.400 is a diagram explaining Instruction "mov MH1,Rb2".
Fig.401 is a diagram explaining Instruction "mov ML0,Rb".
Fig.402 is a diagram explaining Instruction "mov ML1,Rb".
Fig.403 is a diagram explaining Instruction "mov IPC,Rb".
Fig.404 is a diagram explaining Instruction "mov IPSR,Rb".
Fig.405 is a diagram explaining Instruction "mov EPC,Rb".
Fig.406 is a diagram explaining Instruction "mov EPSR,Rb".
Fig.407 is a diagram explaining Instruction "mov PSR0, Rb".
Fig.408 is a diagram explaining Instruction "mov PSR1,Rb".
Fig.409 is a diagram explaining Instruction "mov PSR2,Rb".
Fig.410 is a diagram explaining Instruction "mov PSR3,Rb".
Fig.411 is a diagram explaining Instruction "mov CFR0,Rb".
Fig.412 is a diagram explaining Instruction "mov CFR1,Rb".
Fig.413 is a diagram explaining Instruction "mov CFR2,Rb".
Fig.414 is a diagram explaining Instruction "mov CFR3,Rb".
Fig.415 is a diagram explaining Instruction "mvclovs Cm:Cm+1".
Fig.416 is a diagram explaining Instruction "movcf Ci,Cj,Cm,Cn".
Fig.417 is a diagram explaining Instruction "mvclcas Cm:Cm+1".
Fig.418 is a diagram explaining Instruction "sethi Ra,I16".
Fig.419 is a diagram explaining Instruction "setlo Ra,I16".
Fig.420 is a diagram explaining Instruction "vcchk".
Fig.421 is a diagram explaining Instruction "nop".
Fig.422 is a diagram explaining Instruction "asl Rc,Ra,Rb".
Fig.423 is a diagram explaining Instruction "asl Rb,Ra,I5".
Fig.424 is a diagram explaining Instruction "asl Ra2,I4".
Fig.425 is a diagram explaining Instruction "aslvw Rc,Ra,Rb".
Fig.426 is a diagram explaining Instruction "aslvw Rb,Ra,15".
Fig.427 is a diagram explaining Instruction "aslvh Rc,Ra,Rb".
Fig.428 is a diagram explaining Instruction "aslvh Rb,Ra,I5".
Fig.429 is a diagram explaining Instruction "asr Rc,Ra,Rb".
Fig.430 is a diagram explaining Instruction "asr Rb,Ra,15".
Fig.431 is a diagram explaining Instruction "asr Ra2,I4".
Fig.432 is a diagram explaining Instruction "asrvw Rc,Ra,Rb".
Fig.433 is a diagram explaining Instruction "asrvh Rc,Ra,Rb".
Fig.434 is a diagram explaining Instruction "lsl Rc,Ra,Rb".
Fig.435 is a diagram explaining Instruction "lsl Rc,Ra,I5".
Fig.436 is a diagram explaining Instruction "lsl Ra2,I4".
Fig.437 is a diagram explaining Instruction "lsr Rc,Ra,Rb".
Fig.438 is a diagram explaining Instruction "lsr Rb,Ra,I5".
Fig.439 is a diagram explaining Instruction "rol Rc,Ra,Rb".
Fig.440 is a diagram explaining Instruction "rol Rb,Ra,I5".
Fig.441 is a diagram explaining Instruction "ror Rb,Ra,15".
Fig.442 is a diagram explaining Instruction "aslp Mm,Ra,Mn,Rb".
Fig.443 is a diagram explaining Instruction "aslp Mm,Rb,Mn,I6".
Fig.444 is a diagram explaining Instruction "aslp Mm,Rc,MHn,Ra,Rb".
Fig.445 is a diagram explaining Instruction "aslp Mm,Rb,MHn,Ra,I6".
Fig.446 is a diagram explaining Instruction "aslpvw Mm,Ra,Mn,Rb".
Fig.447 is a diagram explaining Instruction "aslpvw Mm,Rb,Mn,I6".
Fig.448 is a diagram explaining Instruction "asrp Mm,Ra,Mn,Rb".
Fig.449 is a diagram explaining Instruction "asrp Mm,Rb,Mn,I6".
Fig.450 is a diagram explaining Instruction "asrp Mm,Rc,MHn,Ra,Rb".
Fig.451 is a diagram explaining Instruction "asrp Mm,Rb,MHn,Ra,I6".
Fig.452 is a diagram explaining Instruction "asrpvw Mm,Ra,Mn,Rb".
Fig.453 is a diagram explaining Instruction "lslp Mm,Ra,Mn,Rb".
Fig.454 is a diagram explaining Instruction "lslp Mm,Rb,Mn,I6".
Fig.455 is a diagram explaining Instruction "lslp Mm,Rc,MHn,Ra,Rb".
Fig.456 is a diagram explaining Instruction "lslp Mm,Rb,MHn,Ra,I6".
Fig.457 is a diagram explaining Instruction "lsrp Mm,Ra,Mn,Rb".
Fig.458 is a diagram explaining Instruction "lsrp Mm,Rb,Mn,I6".
Fig.459 is a diagram explaining Instruction "lsrp Mm,Rc,MHn,Ra,Rb".
Fig.460 is a diagram explaining Instruction "lsrp Mm,Rb,MHn,Ra,I6".
Fig.461 is a diagram explaining Instruction "extr Rc,Ra,Rb".
Fig.462 is a diagram explaining Instruction "extr Rb,Ra,Ib5,Ia5".
Fig.463 is a diagram explaining Instruction "ext Rb,Ra,I5".
Fig.464 is a diagram explaining Instruction "exth Ra2".
Fig.465 is a diagram explaining Instruction "extb Ra2".
Fig.466 is a diagram explaining Instruction "extru Rc,Ra,Rb".
Fig.467 is a diagram explaining Instruction "extru Rb,Ra,Ib5,Ia5".
Fig.468 is a diagram explaining Instruction "extu Rb,Ra,15".
Fig.469 is a diagram explaining Instruction "exthu Ra2".
Fig.470 is a diagram explaining Instruction "extbu Ra2".
Fig.471 is a diagram explaining Instruction "mskgen Rc,Rb".
Fig.472 is a diagram explaining Instruction "mskgen Rb,Ib5,Ia5".
Fig.473 is a diagram explaining Instruction "msk Rc,Ra,Rb".
Fig.474 is a diagram explaining Instruction "msk Rb,Ra,Ib5,Ia5".
Fig.475 is a diagram explaining Instruction "satw Mm,Rb,Mn".
Fig.476 is a diagram explaining Instruction "sath Rb,Ra".
Fig.477 is a diagram explaining Instruction "sat12 Rb,Ra".
Fig.478 is a diagram explaining Instruction "sat9 Rb,Ra".
Fig.479 is a diagram explaining Instruction "satb Rb,Ra".
Fig.480 is a diagram explaining Instruction "satbu Rb,Ra".
Fig.481 is a diagram explaining Instruction "extw Mm,Rb,Ra".
Fig.482 is a diagram explaining Instruction "vintllh Rc,Ra,Rb".
Fig.483 is a diagram explaining Instruction "vintlhh Rc,Ra,Rb".
Fig.484 is a diagram explaining Instruction "vintllb Rc,Ra,Rb".
Fig.485 is a diagram explaining Instruction "vintlhb Rc,Ra,Rb".
Fig.486 is a diagram explaining Instruction "valn Rc,Ra,Rb".
Fig.487 is a diagram explaining Instruction "valn1 Rc,Ra,Rb".
Fig.488 is a diagram explaining Instruction "valn2 Rc,Ra,Rb".
Fig.489 is a diagram explaining Instruction "valn3 Rc,Ra,Rb".
Fig.490 is a diagram explaining Instruction "valnvc1 Rc,Ra,Rb".
Fig.491 is a diagram explaining Instruction "valnvc2 Rc,Ra,Rb".
Fig.492 is a diagram explaining Instruction "valnvc3 Rc,Ra,Rb".
Fig.493 is a diagram explaining Instruction "valnvc4 Rc,Ra,Rb".
Fig.494 is a diagram explaining Instruction "vxchngh Rb,Ra".
Fig.495 is a diagram explaining Instruction "byterev Rb,Ra".
Fig.496 is a diagram explaining Instruction "vstovb Rb,Ra".
Fig.497 is a diagram explaining Instruction "vstovh Rb,Ra".
Fig.498 is a diagram explaining Instruction "vlunpkh Rb:Rb+1,Ra".
Fig.499 is a diagram explaining Instruction "vlunpkhu Rb: Rb+ 1,Ra".
Fig.500 is a diagram explaining Instruction "vlunpkb Rb:Rb+1,Ra".
Fig.501 is a diagram explaining Instruction "vlunpkbu Rb:Rb+1,Ra".
Fig.502 is a diagram explaining Instruction "vhunpkh Rb:Rb+1,Ra".
Fig.503 is a diagram explaining Instruction "vhunpkb Rb:Rb+1,Ra".
Fig.504 is a diagram explaining Instruction "vunpk1 Rb,Mn".
Fig.505 is a diagram explaining Instruction "vunpk2 Rb,Mn".
Fig.506 is a diagram explaining Instruction "vlpkh Rc,Rb,Ra".
Fig.507 is a diagram explaining Instruction "vlpkhu Rc,Rb,Ra".
Fig.508 is a diagram explaining Instruction "vlpkb Rc,Rb,Ra".
Fig.509 is a diagram explaining Instruction "vlpkbu Rc,Rb,Ra".
Fig.510 is a diagram explaining Instruction "vhpkh Rc,Ra,Rb".
Fig.511 is a diagram explaining Instruction "vhpkb Rc,Ra,Rb".
Fig.512 is a diagram explaining Instruction "vexth Mm,Rb,Ra".
Fig.513 is a diagram explaining Instruction "bseq0 Rb,Ra".
Fig.514 is a diagram explaining Instruction "bseq1 Rb,Ra".
Fig.515 is a diagram explaining Instruction "bseq Rb,Ra".
Fig.516 is a diagram explaining Instruction "bcnt1 Rb,Ra".
Fig.517 is a diagram explaining Instruction "rndvh Rb,Ra".
Fig.518 is a diagram explaining Instruction "mskbrvb Rc,Ra,Rb".
Fig.519 is a diagram explaining Instruction "mskbrvh Rc,Ra,Rb".
Fig.520 is a diagram explaining Instruction "movp Rc:Rc+1,Ra,Rb".
Fig.521 is a diagram explaining Instruction "hmul Mm,Rc,Ra,Rb".
Fig.522 is a diagram explaining Instruction "Imul Mm,Rc,Ra,Rb".
Fig.523 is a diagram explaining Instruction "fmulhh Mm,Rc,Ra,Rb".
Fig.524 is a diagram explaining Instruction "fmulhhr Mm,Rc,Ra,Rb".
Fig.525 is a diagram explaining Instruction "fmulhw Mm,Rc,Ra,Rb".
Fig.526 is a diagram explaining Instruction "fmulhww Mm,Rc,Ra,Rb".
Fig.527 is a diagram explaining Instruction "mul Mm,Rc,Ra,Rb".
Fig.528 is a diagram explaining Instruction "mul Mm,Rb,Ra,I8".
Fig.529 is a diagram explaining Instruction "mulu Mm,Rc,Ra,Rb".
Fig.530 is a diagram explaining Instruction "mulu Mm,Rb,Ra,I8".
Fig.531 is a diagram explaining Instruction "fmulww Mm,Rc,Ra,Rb".
Fig.532 is a diagram explaining Instruction "hmac Mm,Rc,Ra,Rb,Mn".
Fig.533 is a diagram explaining Instruction "hmac M0,Rc,Ra,Rb,Rx".
Fig.534 is a diagram explaining Instruction "lmac Mm,Rc,Ra,Rb,Mn".
Fig.535 is a diagram explaining Instruction "lmac M0,Rc,Ra,Rb,Rx"
Fig.536 is a diagram explaining Instruction "fmachh Mm,Rc,Ra,Rb,Mn".
Fig.537 is a diagram explaining Instruction "fmachh M0,Rc,Ra,Rb,Rx".
Fig.538 is a diagram explaining Instruction "fmachhr Mm,Rc,Ra,Rb,Mn".
Fig.539 is a diagram explaining Instruction "fmachhr M0,Rc,Ra,Rb,Rx".
Fig.540 is a diagram explaining Instruction "fmachw Mm,Rc,Ra,Rb,Mn".
Fig.541 is a diagram explaining Instruction "fmachw M0,Rc,Ra,Rb,Rx".
Fig.542 is a diagram explaining Instruction "fmachww Mm,Rc,Ra,Rb,Mn".
Fig.543 is a diagram explaining Instruction "fmachww M0,Rc,Ra,Rb,Rx".
Fig.544 is a diagram explaining Instruction "mac Mm,Rc,Ra,Rb,Mn".
Fig.545 is a diagram explaining Instruction "mac M0,Rc,Ra,Rb,Rx".
Fig.546 is a diagram explaining Instruction "fmacww Mm,Rc,Ra,Rb,Mn".
Fig.547 is a diagram explaining Instruction "fmacww M0,Rc,Ra,Rb,Rx".
Fig.548 is a diagram explaining Instruction "hmsu Mm,Rc,Ra,Rb,Mn".
Fig.549 is a diagram explaining Instruction "hmsu M0,Rc,Ra,Rb,Rx".
Fig.550 is a diagram explaining Instruction "lmsu Mm,Rc,Ra,Rb,Mn".
Fig.551 is a diagram explaining Instruction "lmsu M0,Rc,Ra,Rb,Rx".
Fig.552 is a diagram explaining Instruction "fmsuhh Mm,Rc,Ra,Rb,Mn".
Fig.553 is a diagram explaining Instruction "fmsuhh M0,Rc,Ra,Rb,Rx".
Fig.554 is a diagram explaining Instruction "fmsuhhr Mm,Rc,Ra,Rb,Mn".
Fig.555 is a diagram explaining Instruction "fmsuhhr M0,Rc,Ra,Rb,Rx".
Fig.556 is a diagram explaining Instruction "fmsuhw Mm,Rc,Ra,Rb,Mn".
Fig.557 is a diagram explaining Instruction "fmsuhw M0,Rc,Ra,Rb,Rx".
Fig.558 is a diagram explaining Instruction "fmsuhww Mm,Rc,Ra,Rb,Mn".
Fig.559 is a diagram explaining Instruction "fmsuhww M0,Rc,Ra,Rb,Rx".
Fig.560 is a diagram explaining Instruction "msu Mm,Rc,Ra,Rb,Mn".
Fig.561 is a diagram explaining Instruction "msu M0,Rc,Ra,Rb,Rx".
Fig.562 is a diagram explaining Instruction "fmsuww Mm,Rc,Ra,Rb,Mn".
Fig.563 is a diagram explaining Instruction "fmsuww M0,Rc,Ra,Rb,Rx".
Fig.564 is a diagram explaining Instruction "div MHm,Rc,MHn,Ra,Rb".
Fig.565 is a diagram explaining Instruction "divu MHm,Rc,MHn,Ra,Rb".
Fig.566 is a diagram explaining Instruction "dbgm0".
Fig.567 is a diagram explaining Instruction "dbgm1".
Fig.568 is a diagram explaining Instruction "dbgm2 115".
Fig.569 is a diagram explaining Instruction "dbgm3 115".
Fig.570 is a diagram explaining Instruction "vaddh Rc,Ra,Rb".
Fig.571 is a diagram explaining Instruction "vxaddh Rc,Ra,Rb".
Fig.572 is a diagram explaining Instruction "vhaddh Rc,Ra,Rb".
Fig.573 is a diagram explaining Instruction "vladdh Rc,Ra,Rb".
Fig.574 is a diagram explaining Instruction "vaddhvh Rc,Ra,Rb".
Fig.575 is a diagram explaining Instruction "vxaddhvh Rc,Ra,Rb".
Fig.576 is a diagram explaining Instruction "vhaddhvh Rc,Ra,Rb".
Fig.577 is a diagram explaining Instruction "vladdhvh Rc,Ra,Rb".
Fig.578 is a diagram explaining Instruction "vsaddh Rb,Ra,I8".
Fig.579 is a diagram explaining Instruction "vaddsh Rc,Ra,Rb".
Fig.580 is a diagram explaining Instruction "vaddsrh Rc,Ra,Rb".
Fig.581 is a diagram explaining Instruction "vaddhvc Rc,Ra,Rb".
Fig.582 is a diagram explaining Instruction "vaddrhvc Rc,Ra,Rb".
Fig.583 is a diagram explaining Instruction "vaddb Rc,Ra,Rb".
Fig.584 is a diagram explaining Instruction "vsaddb Rb,Ra,I8".
Fig.585 is a diagram explaining Instruction "vaddsb Rc,Ra,Rb".
Fig.586 is a diagram explaining Instruction "vaddsrb Rc,Ra,Rb".
Fig.587 is a diagram explaining Instruction "vsubh Rc,Rb,Ra".
Fig.588 is a diagram explaining Instruction "vxsubh Rc,Rb,Ra".
Fig. 589 is a diagram explaining Instruction "vhsubh Rc,Rb,Ra".
Fig.590 is a diagram explaining Instruction "vlsubh Rc,Rb,Ra".
Fig.591 is a diagram explaining Instruction "vsubhvh Rc,Rb,Ra".
Fig.592 is a diagram explaining Instruction "vxsubhvh Rc,Rb,Ra".
Fig.593 is a diagram explaining Instruction "vhsubhvh Rc,Rb,Ra".
Fig.594 is a diagram explaining Instruction "vlsubhvh Rc,Rb,Ra".
Fig.595 is a diagram explaining Instruction "vssubh Rb,Ra,I8".
Fig.596 is a diagram explaining Instruction "vsubb Rc,Rb,Ra".
Fig.597 is a diagram explaining Instruction "vssubb Rb,Ra,I8".
Fig.598 is a diagram explaining Instruction "vsubsh Rc,Rb,Ra".
Fig.599 is a diagram explaining Instruction "vsrsubh Rb,Ra,I8".
Fig.600 is a diagram explaining Instruction "vsrsubb Rb,Ra,18".
Fig.601 is a diagram explaining Instruction "vsumh Rb,Ra".
Fig.602 is a diagram explaining Instruction "vsumh2 Rb,Ra".
Fig.603 is a diagram explaining Instruction "vsumrh2 Rb,Ra".
Fig.604 is a diagram explaining Instruction "vnegh Rb,Ra".
Fig.605 is a diagram explaining Instruction "vneghvh Rb,Ra".
Fig.606 is a diagram explaining Instruction "vnegb Rb,Ra".
Fig.607 is a diagram explaining Instruction "vabshvh Rb,Ra".
Fig.608 is a diagram explaining Instruction "vasubb Rc,Rb,Ra".
Fig.609 is a diagram explaining Instruction "vsgnh Rb,Ra".
Fig.610 is a diagram explaining Instruction "vmaxh Rc,Ra,Rb".
Fig.611 is a diagram explaining Instruction "vmaxb Rc,Ra,Rb".
Fig.612 is a diagram explaining Instruction "vminh Rc,Ra,Rb".
Fig.613 is a diagram explaining Instruction "vminb Rc,Ra,Rb".
Fig.614 is a diagram explaining Instruction "vsel Rc,Ra,Rb".
Fig.615 is a diagram explaining Instruction "vmovt Rb,Ra".
Fig.616 is a diagram explaining Instruction "vscmpeqb Ra,I5".
Fig.617 is a diagram explaining Instruction "vscmpneb Ra,I5".
Fig.618 is a diagram explaining Instruction "vscmpgtb Ra,I5".
Fig.619 is a diagram explaining Instruction "vscmpleb Ra,I5".
Fig.620 is a diagram explaining Instruction "vscmpgeb Ra,I5".
Fig.621 is a diagram explaining Instruction "vscmpltb Ra,I5".
Fig.622 is a diagram explaining Instruction "vscmpeqh Ra,I5".
Fig.623 is a diagram explaining Instruction "vscmpneh Ra,I5".
Fig.624 is a diagram explaining Instruction "vscmpgth Ra,I5".
Fig.625 is a diagram explaining Instruction "vscmpleh Ra,I5".
Fig.626 is a diagram explaining Instruction "vscmpgeh Ra,I5".
Fig.627 is a diagram explaining Instruction "vscmplth Ra,I5".
Fig.628 is a diagram explaining Instruction "vcmpeqh Ra,Rb".
Fig.629 is a diagram explaining Instruction "vcmpneh Ra,Rb".
Fig.630 is a diagram explaining Instruction "vcmpgth Ra,Rb".
Fig.631 is a diagram explaining Instruction "vcmpleh Ra,Rb".
Fig.632 is a diagram explaining Instruction "vcmpgeh Ra,Rb".
Fig.633 is a diagram explaining Instruction "vcmplth Ra,Rb".
Fig.634 is a diagram explaining Instruction "vcmpeqb Ra,Rb".
Fig.635 is a diagram explaining Instruction "vcmpneb Ra,Rb".
Fig.636 is a diagram explaining Instruction "vcmpgtb Ra,Rb".
Fig.637 is a diagram explaining Instruction "vcmpleb Ra,Rb".
Fig.638 is a diagram explaining Instruction "vcmpgeb Ra,Rb".
Fig.639 is a diagram explaining Instruction "vcmpltb Ra,Rb".
Fig.640 is a diagram explaining Instruction "vaslh Rc,Ra,Rb".
Fig.641 is a diagram explaining Instruction "vaslh Rb,Ra,I4".
Fig.642 is a diagram explaining Instruction "vaslvh Rc,Ra,Rb".
Fig.643 is a diagram explaining Instruction "vaslvh Rb,Ra,I4".
Fig.644 is a diagram explaining Instruction "vasrh Rb,Ra,I4".
Fig.645 is a diagram explaining Instruction "vasrvh Rc,Ra,Rb".
Fig.646 is a diagram explaining Instruction "vlslh Rc,Ra,Rb".
Fig.647 is a diagram explaining Instruction "vlslh Rb,Ra,I4".
Fig.648 is a diagram explaining Instruction "vlsrh Rc,Ra,Rb".
Fig.649 is a diagram explaining Instruction "vlsrh Rb,Ra,I4".
Fig.650 is a diagram explaining Instruction "vrolh Rc,Ra,Rb".
Fig.651 is a diagram explaining Instruction "vrolh Rb,Ra,I4".
Fig.652 is a diagram explaining Instruction "vrorh Rb,Ra,I4".
Fig.653 is a diagram explaining Instruction "vasrh Rc,Ra,Rb".
Fig.654 is a diagram explaining Instruction "vaslb Rc,Ra,Rb".
Fig.655 is a diagram explaining Instruction "vaslb Rb,Ra,I3".
Fig.656 is a diagram explaining Instruction "vasrb Rc,Ra,Rb".
Fig.657 is a diagram explaining Instruction "vasrb Rb,Ra,I3".
Fig.658 is a diagram explaining Instruction "vlslb Rc,Ra,Rb".
Fig.659 is a diagram explaining Instruction "vlslb Rb,Ra,I3".
Fig.660 is a diagram explaining Instruction "vlsrb Rc,Ra,Rb".
Fig.661 is a diagram explaining Instruction "vlsrb Rb,Ra,I3".
Fig.662 is a diagram explaining Instruction "vrolb Rc,Ra,Rb".
Fig.663 is a diagram explaining Instruction "vrolb Rb,Ra,I3".
Fig.664 is a diagram explaining Instruction "vrorb Rb,Ra,I3".
Fig.665 is a diagram explaining Instruction "vasl Mm,Ra,Mn,Rb".
Fig.666 is a diagram explaining Instruction "vasl Mm,Rb,Mn,I5".
Fig.667 is a diagram explaining Instruction "vaslvw Mm,Ra,Mn,Rb".
Fig.668 is a diagram explaining Instruction "vaslvw Mm,Rb,Mn,I5".
Fig.669 is a diagram explaining Instruction "vasr Mm,Ra,Mn,Rb".
Fig.670 is a diagram explaining Instruction "vasr Mm,Rb,Mn,I5".
Fig.671 is a diagram explaining Instruction "vasrvw Mm,Ra,Mn,Rb".
Fig.672 is a diagram explaining Instruction "vlsl Mm,Ra,Mn,Rb".
Fig.673 is a diagram explaining Instruction "vlsl Mm,Rb,Mn,I5".
Fig.674 is a diagram explaining Instruction "vlsr Mm,Ra,Mn,Rb".
Fig.675 is a diagram explaining Instruction "vlsr Mm,Rb,Mn,I5".
Fig.676 is a diagram explaining Instruction "vsath Mm,Rb,Mn".
Fig.677 is a diagram explaining Instruction "vsath12 Rb,Ra".
Fig.678 is a diagram explaining Instruction "vsath9 Rb,Ra".
Fig.679 is a diagram explaining Instruction "vsath8 Rb,Ra".
Fig.680 is a diagram explaining Instruction "vsath8u Rb,Ra".
Fig.681 is a diagram explaining Instruction "vrndvh Rb,Mn".
Fig.682 is a diagram explaining Instruction "vabssumb Rc,Ra,Rb".
Fig.683 is a diagram explaining Instruction "vmul Mm,Rc,Ra,Rb".
Fig.684 is a diagram explaining Instruction "vxmul Mm,Rc,Ra,Rb".
Fig.685 is a diagram explaining Instruction "vhmul Mm,Rc,Ra,Rb".
Fig.686 is a diagram explaining Instruction "vlmul Mm,Rc,Ra,Rb".
Fig.687 is a diagram explaining Instruction "vfmulh Mm,Rc,Ra,Rb".
Fig.688 is a diagram explaining Instruction "vxfmulh Mm,Rc,Ra,Rb".
Fig.689 is a diagram explaining Instruction "vhfmulh Mm,Rc,Ra,Rb".
Fig.690 is a diagram explaining Instruction "vlfmulh Mm,Rc,Ra,Rb".
Fig.691 is a diagram explaining Instruction "vfmulhr Mm,Rc,Ra,Rb".
Fig.692 is a diagram explaining Instruction "vxfmulhr Mm,Rc,Ra,Rb".
Fig.693 is a diagram explaining Instruction "vhfmulhr Mm,Rc,Ra,Rb".
Fig.694 is a diagram explaining Instruction "vlfmulhr Mm,Rc,Ra,Rb".
Fig.695 is a diagram explaining Instruction "vfmulw Mm,Rc,Ra,Rb".
Fig.696 is a diagram explaining Instruction "vxfmulw Mm,Rc,Ra,Rb".
Fig.697 is a diagram explaining Instruction "vhfmulw Mm,Rc,Ra,Rb".
Fig.698 is a diagram explaining Instruction "vlfmulw Mm,Rc,Ra,Rb".
Fig.699 is a diagram explaining Instruction "vpfmulhww Mm,Rc:Rc+1,Ra,Rb".
Fig.700 is a diagram explaining Instruction "vmac Mm,Rc,Ra,Rb,Mn".
Fig.701 is a diagram explaining Instruction "vmac M0,Rc,Ra,Rb,Rx".
Fig.702 is a diagram explaining Instruction "vxmac Mm,Rc,Ra,Rb,Mn".
Fig.703 is a diagram explaining Instruction "vxmac M0,Rc,Ra,Rb,Rx".
Fig.704 is a diagram explaining Instruction "vhmac Mm,Rc,Ra,Rb,Mn".
Fig.705 is a diagram explaining Instruction "vhmac M0,Rc,Ra,Rb,Rx".
Fig.706 is a diagram explaining Instruction "vlmac Mm,Rc,Ra,Rb,Mn".
Fig.707 is a diagram explaining Instruction "vlmac M0,Rc,Ra,Rb,Rx".
Fig.708 is a diagram explaining Instruction "vfmach Mm,Rc,Ra,Rb,Mn".
Fig.709 is a diagram explaining Instruction "vfmach M0,Rc,Ra,Rb,Rx".
Fig.710 is a diagram explaining Instruction "vxfmach Mm,Rc,Ra,Rb,Mn".
Fig.711 is a diagram explaining Instruction "vxfmach M0,Rc,Ra,Rb,Rx".
Fig.712 is a diagram explaining Instruction "vhfmach Mm,Rc,Ra,Rb,Mn".
Fig.713 is a diagram explaining Instruction "vhfmach M0,Rc,Ra,Rb,Rx".
Fig.714 is a diagram explaining Instruction "vlfmach Mm,Rc,Ra,Rb,Mn".
Fig.715 is a diagram explaining Instruction "vlfmach M0,Rc,Ra,Rb,Rx".
Fig.716 is a diagram explaining Instruction "vfmachr Mm,Rc,Ra,Rb,Mn".
Fig.717 is a diagram explaining Instruction "vfmachr M0,Rc,Ra,Rb,Rx".
Fig.718 is a diagram explaining Instruction "vxfmachr Mm,Rc,Ra,Rb,Mn".
Fig.719 is a diagram explaining Instruction "vxfmachr M0,Rc,Ra,Rb,Rx".
Fig.720 is a diagram explaining Instruction "vhfmachr Mm,Rc,Ra,Rb,Mn".
Fig.721 is a diagram explaining Instruction "vhfmachr M0,Rc,Ra,Rb,Rx".
Fig.722 is a diagram explaining Instruction "vlfmachr Mm,Rc,Ra,Rb,Mn".
Fig.723 is a diagram explaining Instruction "vlfmachr M0,Rc,Ra,Rb,Rx".
Fig.724 is a diagram explaining Instruction "vfmacw Mm,Rc,Ra,Rb,Mn".
Fig.725 is a diagram explaining Instruction "vxfmacw Mm,Rc,Ra,Rb,Mn".
Fig.726 is a diagram explaining Instruction "vhfmacw Mm,Rc,Ra,Rb,Mn".
Fig.727 is a diagram explaining Instruction "vlfmacw Mm,Rc,Ra,Rb,Mn".
Fig.728 is a diagram explaining Instruction "vpfmachww Mm,Rc : Rc+1,Ra,Rb,Mn".
Fig.729 is a diagram explaining Instruction "vmsu Mm,Rc,Ra,Rb,Mn".
Fig.730 is a diagram explaining Instruction "vmsu M0,Rc,Ra,Rb,Rx".
Fig.731 is a diagram explaining Instruction "vxmsu Mm,Rc,Ra,Rb,Mn".
Fig.732 is a diagram explaining Instruction "vxmsu M0,Rc,Ra,Rb,Rx".
Fig.733 is a diagram explaining Instruction "vhmsu Mm,Rc,Ra,Rb,Mn".
Fig.734 is a diagram explaining Instruction "vhmsu M0,Rc,Ra,Rb,Rx".
Fig.735 is a diagram explaining Instruction "vlmsu Mm,Rc,Ra,Rb,Mn".
Fig.736 is a diagram explaining Instruction "vlmsu M0,Rc,Ra,Rb,Rx".
Fig.737 is a diagram explaining Instruction "vfmsuh Mm,Rc,Ra,Rb,Mn".
Fig.738 is a diagram explaining Instruction "vfmsuh M0,Rc,Ra,Rb,Rx".
Fig.739 is a diagram explaining Instruction "vxfmsuh Mm,Rc,Ra,Rb,Mn".
Fig.740 is a diagram explaining Instruction "vxfmsuh M0,Rc,Ra,Rb,Rx".
Fig.741 is a diagram explaining Instruction "vhfmsuh Mm,Rc,Ra,Rb,Mn".
Fig.742 is a diagram explaining Instruction "vhfmsuh M0,Rc,Ra,Rb,Rx".
Fig.743 is a diagram explaining Instruction "vlfmsuh Mm,Rc,Ra,Rb,Mn".
Fig.744 is a diagram explaining Instruction "vlfmsuh M0,Rc,Ra,Rb,Rx".
Fig.745 is a diagram explaining Instruction "vfmsuw Mm,Rc,Ra,Rb,Mn".
Fig.746 is a diagram explaining Instruction "vxfmsuw Mm,Rc,Ra,Rb,Mn".
Fig.747 is a diagram explaining Instruction "vhfmsuw Mm,Rc,Ra,Rb,Mn".
Fig.748 is a diagram explaining Instruction "vlfmsuw Mm,Rc,Ra,Rb,Mn".

### DESCRIPTION OF THE PREFERRED EMBODIMENT

An explanation is given for the architecture of the processor according to the present invention. The processor of the present invention is a general-purpose processor which has been developed targeting at the field of AV media signal processing technology, and instructions issued in this processor offer a higher degree of parallelism than ordinary microcomputers. Used as a core common to mobile phones, mobile AV devices, digital televisions, DVDs and others, the processor can improve software usability. Furthermore, the present processor allows multiple high-performance media processes to be performed with high cost effectiveness, and provides a development environment for high-level languages intended for improving development efficiency.

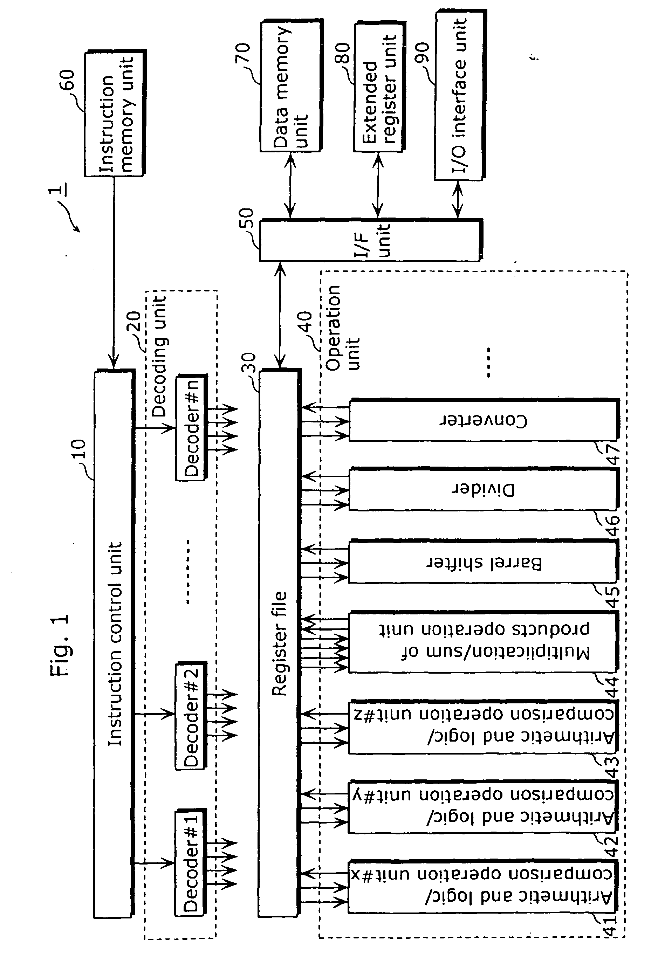

Fig.1 is a schematic block diagram showing the present processor. The processor 1 is comprised of an instruction control unit 10, a decoding unit 20, a register file 30, an operation unit 40, an I/F unit 50, an instruction memory unit 60, a data memory unit 70, an extended register unit 80, and an I/O interface unit 90. The operation unit 40 includes arithmetic and logic/comparison operation units 41~43, a multiplication/sum of products operation unit 44, a barrel shifter 45, a divider 46, and a converter 47 for performing SIMD instructions. The multiplication/sum of products operation unit 44 is capable of handling maximum of 65-bit accumulation so as not to decrease bit precision. The multiplication/sum of products operation unit 44 is also capable of executing SIMD instructions as in the case of the arithmetic and logic/comparison operation units 41~43. Furthermore, the processor 1 is capable of parallel execution of an arithmetic and logic/comparison operation instruction on maximum of three data elements.

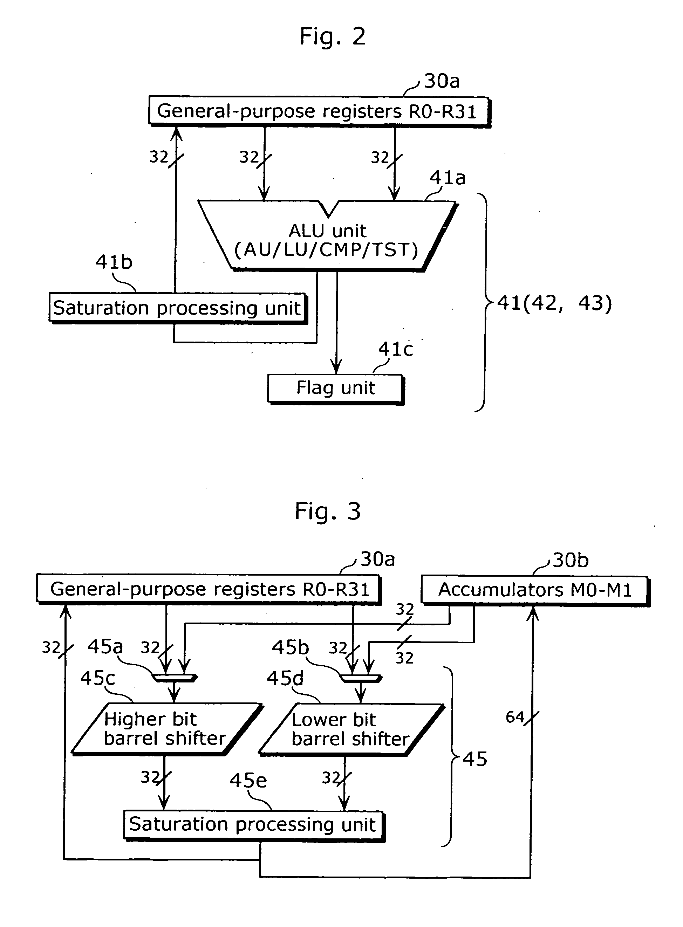

Fig.2 is a schematic diagram showing the arithmetic and logic/comparison operation units 41~43. Each of the arithmetic and logic/comparison operation units 41~43 is made up of an ALU unit 41a, a saturation processing unit 41b, and a flag unit 41c. The ALU unit 41a includes an arithmetic operation unit, a logical operation unit, a comparator, and a TST. The bit widths of operation data to be supported are 8 bits (use four operation units in parallel), 16 bits (use two operation units in parallel) and 32 bits (process 32-bit data using all operation units). For a result of an arithmetic operation, the flag unit 41c and the like detects an overflow and generates a condition flag. For a result of each of the operation units, the comparator and the TST, an arithmetic shift right, saturation by the saturation processing unit 41b, the detection of maximum/minimum values, absolute value generation processing are performed.

Fig.3 is a block diagram showing the configuration of the barrel shifter 45. The barrel shifter 45, which is made up of selectors 45a and 45b, a higher bit shifter 45c, a lower bit shifter 45d, and a saturation processing unit 45e, executes an arithmetic shift of data (shift in the 2's complement number system) or a logical shift of data (unsigned shift). Usually, 32-bit or 64-bit data are inputted to and outputted from the barrel shifter 45. The amount of shift of target data stored in the registers 30a and 30b are specified by another register or according to its immediate value. An arithmetic or logical shift in the range of left 63 bits and right 63 bits is performed for the data, which is then outputted in an input bit length.

The barrel shifter 45 is capable of shifting 8-, 16-, 32-, and 64-bit data in response to a SIMD instruction. For example, the barrel shifter 45 can shift four pieces of 8-bit data in parallel.

Arithmetic shift, which is a shift in the 2's complement number system, is performed for aligning decimal points at the time of addition and subtraction, for multiplying a power of 2 (2, the 2^{nd} power of 2, the -1^{st} power of 2) and other purposes.

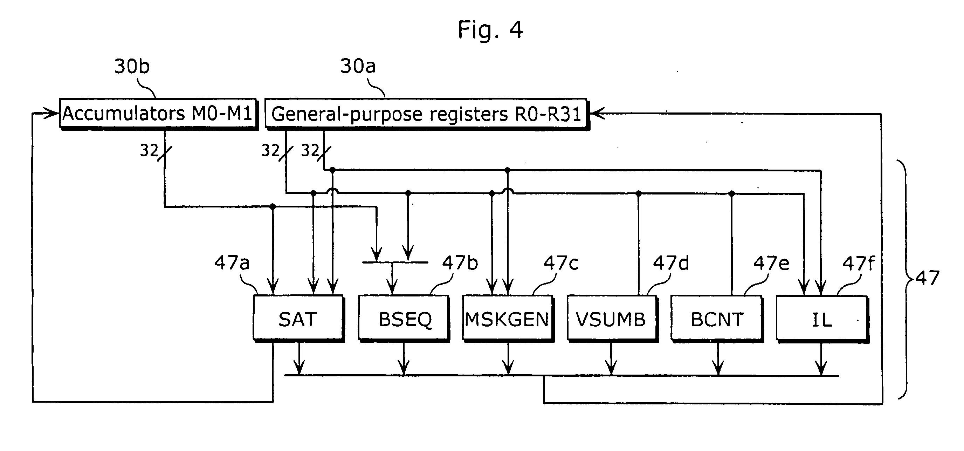

Fig.4 is a block diagram showing the configuration of the converter 47. The converter 47 is made up of a saturation block (SAT) 47a, a BSEQ block 47b, an MSKGEN block 47c, a VSUMB block 47d, a BCNT block 47e, and an IL block 47f.

The saturation block (SAT) 47a performs saturation processing for input data. Having two blocks for the saturation processing of 32-bit data makes it possible to support a SIMD instruction executed for two data elements in parallel.

The BSEQ block 47b counts consecutive 0s or 1s from the MSB.

The MSKGEN block 47c outputs a specified bit segment as 1, while outputting the others as 0.

The VSUMB block 47d divides the input data into specified bit widths, and outputs their total sum.

The BCNT block 47e counts the number of bits in the input data specified as 1.

The IL block 47f divides the input data into specified bit widths, and outputs a value resulted from exchanging the position of each data block.

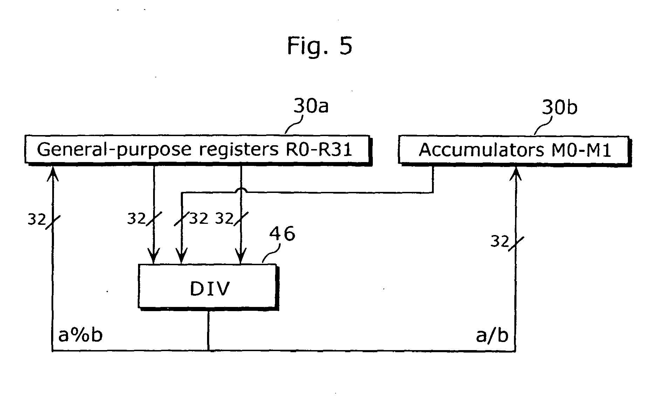

Fig.5 is a block diagram showing the configuration of the divider 46. Letting a dividend be 64 bits and a divisor be 32 bits, the divider 46 outputs 32 bits as a quotient and a modulo, respectively. 34 cycles are involved for obtaining a quotient and a modulo. The divider 46 can handle both singed and unsigned data. Note, however, that an identical setting is made concerning the presence/absence of signs of data serving as a dividend and a divisor. Also, the divider 46 has the capability of outputting an overflow flag, and a 0 division flag.

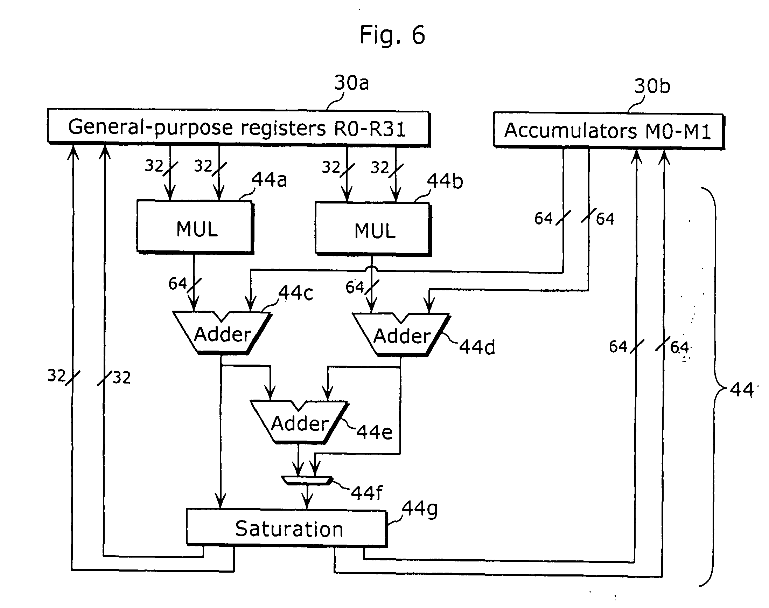

Fig.6 is a block diagram showing the configuration of the multiplication/sum of products operation unit 44. The multiplication/sum of products operation unit 44, which is made up of two 32-bit multipliers (MUL) 44a and 44b, three 64-bit adders (Adder) 44c~44e, a selector 44f and a saturation processing unit (Saturation) 44g, performs the following multiplications and sums of products:
- 32x32-bit signed multiplication, sum of products, and difference of products;
- 32x32-bit unsigned multiplication;
- 16x16-bit signed multiplication, sum of products, and difference of products performed on two data elements in parallel; and
- 32x16-bit t signed multiplication, sum of products, and difference of products performed on two data elements in parallel;

The above operations are performed on data in integer and fixed point format (h1, h2, w1, and w2). Also, the results of these operations are rounded and saturated.

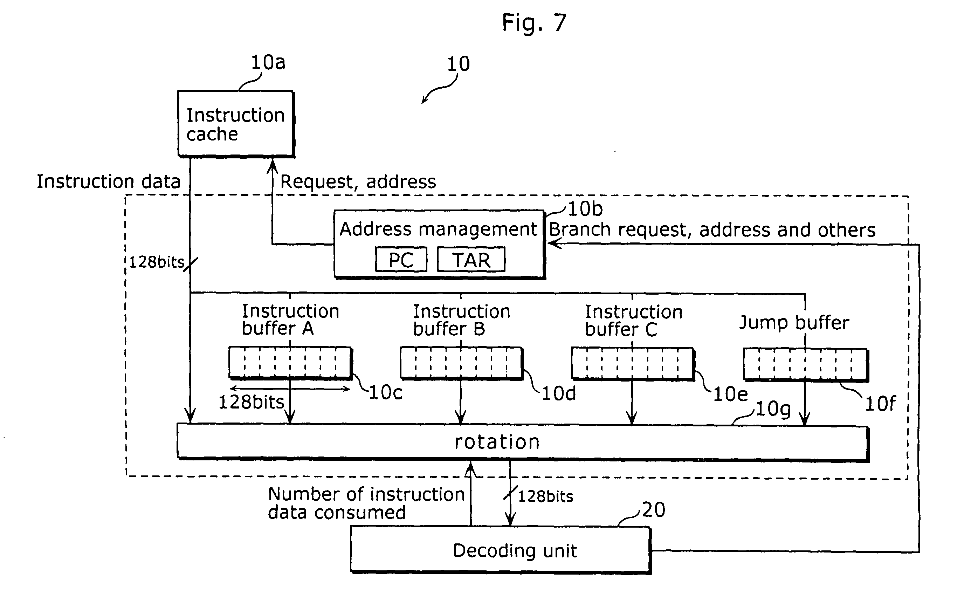

Fig.7 is a block diagram showing the configuration of the instruction control unit 10. The instruction control unit 10, which is made up of an instruction cache 10a, an address management unit 10b, instruction buffers 10c~10e, a jump buffer 10f, and a rotation unit (rotation) 10g, issues instructions at ordinary times and at branch points. Having three 128-bit instruction buffers (the instruction buffers 10c~10e) makes it possible to support the maximum number of parallel instruction execution. Regarding branch processing, the instruction control unit 10 stores in advance a branch destination address in the below-described TAR register via the jump buffer 10f and others before performing a branch (settar instruction). The branch is performed using the branch destination address stored in the TAR register.

Note that the processor 1 is a processor employing the VLIW architecture. The VLIW architecture is an architecture allowing a plurality of instructions (e.g. load, store, operation, and branch) to be stored in a single instruction word, and such instructions to be executed all at once. By programmers describing a set of instructions which can be executed in parallel as a single issue group, it is possible for such issue group to be processed in parallel. In this specification, the delimiter of an issue group is indicated by ";;". Notational examples are described below.

### (Example 1)

mov r1, 0×23;;

This instruction description indicates that only an instruction "mov" shall be executed.

### (Example 2)

mov r1, 0x38
add r0, r1, r2
sub r3, r1, r2;;

These instruction descriptions indicate that three instructions of "mov", "add" and "sub" shall be executed in parallel.

The instruction control unit 10 identifies an issue group and sends it to the decoding unit 20. The decoding unit 20 decodes the instructions in the issue group, and controls resources required for executing such instructions.

Next, an explanation is given for registers included in the processor 1.

Table 1 below lists a set of registers of the processor 1.

**[Table 1]**

| Register name | Bit width | No. of registers | Usage |
|---|---|---|---|
| R0~R31 | 32 bits | 32 | General-purpose registers. Used as data memory pointer, data storage and the like when operation instruction is executed. |
| TAR | 32 bits | 1 | Branch register. Used as branch address storage at branch point. |
| LR | 32 bits | 1 | Link register. |
| SVR | 16 bits | 2 | Save register. Used for saving condition flag (CFR) and various modes. |
| M0~M1 (MH0:ML0~MH1~ML1) | 64 bits | 2 | Operation registers. Used as data storage when operation instruction is executed. |

Table 2 below lists a set of flags (flags managed in a condition flag register and the like described later) of the processor 1.

**[Table 2]**

| Flag name | Bit width | No. of flags | Usage |
|---|---|---|---|
| C0~C7 | 1 | 8 | Condition flags. Indicate if condition is established or not. |
| VC0~VC3 | 1 | 4 | Condition flags for media processing extension instruction. Indicate if condition is established or not. |
| OVS | 1 | 1 | Overflow flag. Detects overflow at the time of operation. |
| CAS | 1 | 1 | Carry flag. Detects carry at the time of operation. |
| BPO | 5 | 1 | Specifies bit position. Specifies bit positions to be processed when mask processing instruction is executed. |
| ALN | 2 | 1 | Specified byte alignment. |
| FXP | 1 | 1 | Fixed point operation mode. |
| UDR | 32 | 1 | Undefined register. |

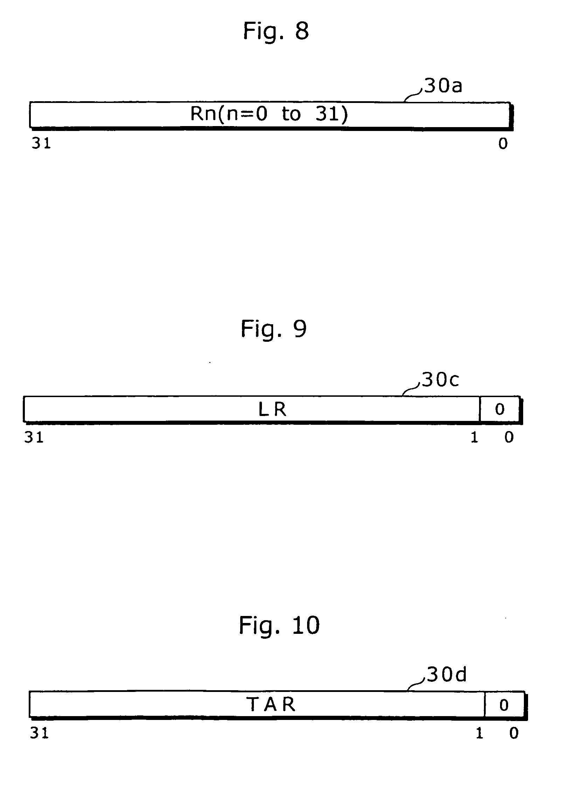

Fig.8 is a diagram showing the configuration of the general-purpose registers (R0~R31) 30a. The general-purpose registers (R0~R31) 30a are a group of 32-bit registers that constitute an integral part of the context of a task to be executed and that store data or addresses. Note that the general-purpose registers R30 and R31 are used by hardware as a global pointer and a stack pointer, respectively.

Fig.9 is a diagram showing the configuration of a link register (LR) 30c. In connection with this link register (LR) 30c, the processor 1 also has a save register (SVR) not illustrated in the diagram. The link register (LR) 30c is a 32-bit register for storing a return address at the time of a function call. Note that the save register (SVR) is a 16-bit register for saving a condition flag (CFR.CF) of the condition flag register at the time of a function call. The link register (LR) 30c is used also for the purpose of increasing the speed of loops, as in the case of a branch register (TAR) to be explained later. 0 is always read out as the lower 1 bit, but 0 must be written at the time of writing.

For example, when "call (brl, jmpl)" instructions are executed, the processor 1 saves a return address in the link register (LR) 30c and saves a condition flag (CFR.CF) in the save register (SVR). When "jmp" instruction is executed, the processor 1 fetches the return address (branch destination address) from the link register (LR) 30c, and restores a program counter (PC). Furthermore, when "ret (jmpr)" instruction is executed, the processor 1 fetches the branch destination address (return address) from the link register (LR) 30c, and stores (restores) it in/to the program counter (PC). Moreover, the processor 1 fetches the condition flag from the save register (SVR) so as to store (restore) it in/to a condition flag area CFR.CF in the condition flag register (CFR) 32.

Fig. 10 is a diagram showing the configuration of the branch register (TAR) 30d. The branch register (TAR) 30d is a 32-bit register for storing a branch target address, and used mainly for the purpose of increasing the speed of loops. 0 is always read out as the lower 1 bit, but 0 must be written at the time of writing.

For example, when "jmp" and "jloop" instructions are executed, the processor 1 fetches a branch destination address from the branch register (TAR) 30d, and stores it in the program counter (PC). When the instruction indicated by the address stored in the branch register (TAR) 30d is stored in a branch instruction buffer, a branch penalty will be 0. An increased loop speed can be achieved by storing the top address of a loop in the branch register (TAR) 30d.

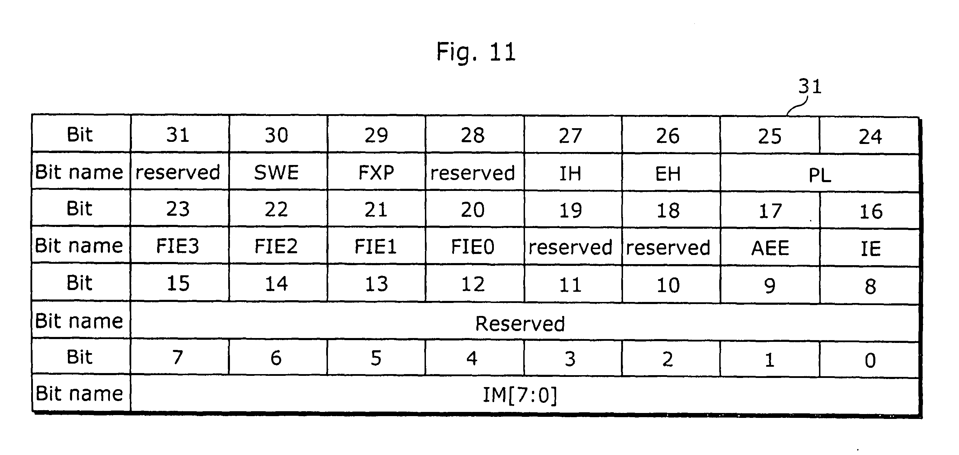

Fig.11 is a diagram showing the configuration of a program status register (PSR) 31. The program status register (PSR) 31, which constitutes an integral part of the context of a task to be executed, is a 32-bit register for storing the following processor status information:
Bit SWE: indicates whether the switching of VMP (Virtual Multi-Processor) to LP (Logical Processor) is enabled or disabled. "0" indicates that switching to LP is disabled and "1" indicates that switching to LP is enabled.
Bit FXP : indicates a fixed point mode. "0" indicates the mode 0 and "1" indicates the mode 1.
Bit IH: is an interrupt processing flag indicating that maskable interrupt processing is ongoing or not. "1" indicates that there is an ongoing interrupt processing and "0" indicates that there is no ongoing interrupt processing. This flag is automatically set on the occurrence of an interrupt. This flag is used to make a distinction of whether interrupt processing or program processing is taking place at a point in the program to which the processor returns in response to "rti" instruction.
Bit EH: is a flag indicating that an error or an NMI is being processed or not. "0" indicates that error/NMI interrupt processing is not ongoing and "1" indicates that error/NMI interrupt processing is ongoing. This flag is masked if an asynchronous error or an NMI occurs when EH=1. Meanwhile, when VMP is enabled, plate switching of VMP is masked.
Bit PL [1:0]: indicates a privilege level. "00" indicates the privilege level 0, i.e., the processor abstraction level, "01" indicates the privilege level 1 (non-settable), "10" indicates the privilege level 2, i.e., the system program level, and "11" indicates the privilege level 3, i.e., the user program level.
Bit LPIE3: indicates whether LP-specific interrupt 3 is enabled or disabled. "1" indicates that an interrupt is enabled and "0" indicates that an interrupt is disabled.
Bit LPIE2: indicates whether LP-specific interrupt 2 is enabled or disabled. "1" indicates that an interrupt is enabled and "0" indicates that an interrupt is disabled.
Bit LPIE1: indicates whether LP-specific interrupt 1 is enabled or disabled. "1" indicates that an interrupt is enabled and "0" indicates that an interrupt is disabled.
Bit LPIE0: indicates whether LP-specific interrupt 0 is enabled or disabled. "1" indicates that an interrupt is enabled and "0" indicates that an interrupt is disabled.
Bit AEE: indicates whether a misalignment exception is enabled or disabled. "1" indicates that a misalignment exception is enabled and "0" indicates that a misalignment exception is disabled.
Bit IE: indicates whether a level interrupt is enabled or disabled. "1" indicates that a level interrupt is enabled and "0" indicates a level interrupt is disabled.
Bit IM [7:0]: indicates an interrupt mask, and ranges from levels 0~7, each being able to be masked at its own level. Level 0 is the highest level. Of interrupt requests which are not masked by any IMs, only the interrupt request with the highest level is accepted by the processor 1. When an interrupt request is accepted, levels below the accepted level are automatically masked by hardware. IM[0] denotes a mask of level 0, IM[1] a mask of level 1, IM[2] a mask of level 2, IM[3] a mask of level 3, IM[4] a mask of level 4, IM[5] a mask of level 5, IM[6] a mask of level 6, and IM[7] a mask of level 7.
reserved: indicates a reserved bit. 0 is always read out. 0 must be written at the time of writing.

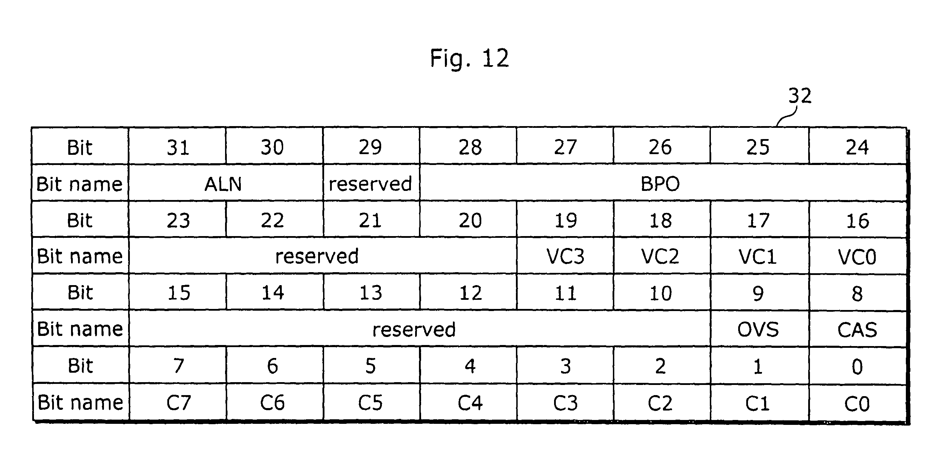

Fig.12 is a diagram showing the configuration of the condition flag register (CFR) 32. The condition flag register (CFR) 32, which constitutes an integral part of the context of a task to be executed, is a 32-bit register made up of condition flags, operation flags, vector condition flags, an operation instruction bit position specification field, and a SIMD data alignment information field.
Bit ALN [1:0]: indicates an alignment mode. An alignment mode of "valnvc" instruction is set.
Bit BPO [4:0]: indicates a bit position. It is used in an instruction that requires a bit position specification.
Bit VC0~VC3 : are vector condition flags. Starting from a byte on the LSB side or a half word through to the MSB side, each corresponds to a flag ranging from VC0 through to VC3.
Bit OVS: is an overflow flag (summary). It is set on the detection of saturation and overflow. If not detected, a value before the instruction is executed is retained. Clearing of this flag needs to be carried out by software.
Bit CAS: is a carry flag (summary). It is set when a carry occurs under "addc" instruction, or when a borrow occurs under "subc" instruction. If there is no occurrence of a carry under "addc" instruction, or a borrow under "subc" instruction, a value before the instruction is executed is retained. Clearing of this flag needs to be carried out by software.
Bit C0~C7: are condition flags. The value of the flag C7 is always 1. A reflection of a FALSE condition (writing of 0) made to the flag C7 is ignored.
reserved: indicates a reserved bit. 0 is always read out. 0 must be written at the time of writing.

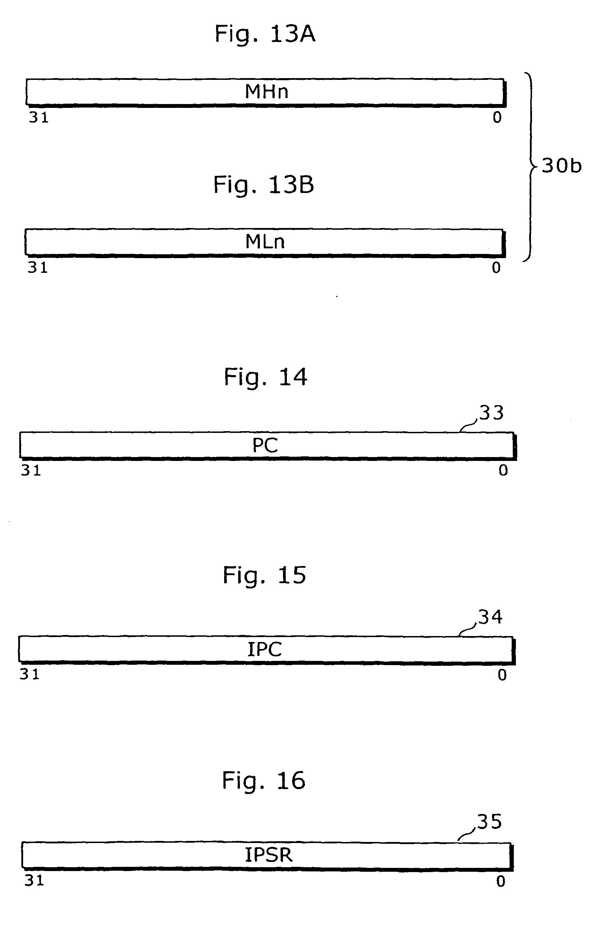

Figs.13A and 13B are diagrams showing the configurations of accumulators (M0, M1) 30b. Such accumulators (M0, M1) 30b, which constitute an integral part of the context of a task to be executed, are made up of a 32-bit register MHO-MH1 (register for multiply and divide/sum of products (the higher 32 bits)) shown in Fig.13A and a 32-bit register MLO-ML1 (register for multiply and divide/sum of products (the lower 32 bits)) shown in Fig.13B.

The register MHO-MH1 is used for storing the higher 32 bits of operation results at the time of a multiply instruction, while used as the higher 32 bits of the accumulators at the time of a sum of products instruction. Moreover, the register MHO-MH1 can be used in combination with the general-purpose registers in the case where a bit stream is handled. Meanwhile, the register MLO-ML1 is used for storing the lower 32 bits of operation results at the time of a multiply instruction, while used as the lower 32 bits of the accumulators at the time of a sum of products instruction.

Fig.14 is a diagram showing the configuration of a program counter (PC) 33. This program counter (PC) 33, which constitutes an integral part of the context of a task to be executed, is a 32-bit counter that holds the address of an instruction being executed.

Fig. 15 is a diagram showing the configuration of a PC save register (IPC) 34. This PC save register (IPC) 34, which constitutes an integral part of the context of a task to be executed is a 32-bit register.

Fig.16 is a diagram showing the configuration of a PSR save register (IPSR) 35. This PSR save register (IPSR) 35, which constitutes an integral part of the context of a task to be executed, is a 32-bit register for saving the program status register (PSR) 31. 0 is always read out as a part corresponding to a reserved bit, but 0 must be written at the time of writing.

Next, an explanation is given for the memory space of the processor 1. In the processor 1, a linear memory space with a capacity of 4 GB is divided into 32 segments, and an instruction SRAM (Static RAM) and a data SRAM are allocated to 128-MB segments. With a 128-MB segment serving as one block, a target block to be accessed is set in a SAR (SRAM Area Register). A direct access is made to the instruction SRAM/data SRAM when the accessed address is a segment set in the SAR, but an access request shall be issued to a bus controller (BCU) when such address is not a segment set in the SAR. An on chip memory (OCM), an external memory, an external device, an I/O port and others are connected to the BUC. Data reading/writing from and to these devices is possible.

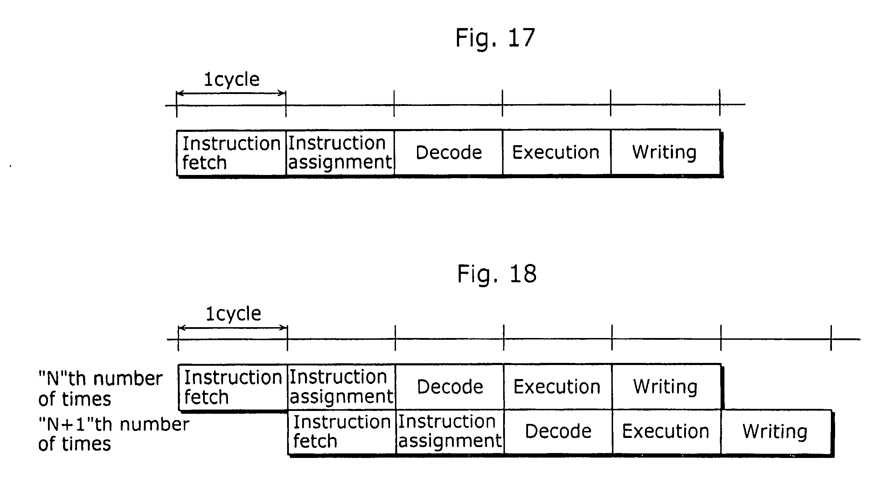

Fig.17 is a timing diagram showing the pipeline behavior of the processor 1. As illustrated in the diagram, the pipeline of the processor 1 basically consists of the following five stages: instruction fetch; instruction assignment (dispatch); decode; execution; and writing.

Fig.18 is a timing diagram showing each stage of the pipeline behavior of the processor 1 at the time of executing an instruction. In the instruction fetch stage, an access is made to an instruction memory which is indicated by an address specified by the program counter (PC) 33, and the instruction is transferred to the instruction buffers 10c~10e and the like. In the instruction assignment stage, the output of branch destination address information in response to a branch instruction, the output of an input register control signal, the assignment of a variable length instruction are carried out, which is followed by the transfer of the instruction to an instruction register (IR). In the decode stage, the IR is inputted to the decoding unit 20, and an operation unit control signal and a memory access signal are outputted. In the execution stage, an operation is executed and the result of the operation is outputted either to the data memory or the general-purpose registers (R0~R31) 30a. In the writing stage, a value obtained as a result of data transfer, and the operation results are stored in the general-purpose registers.

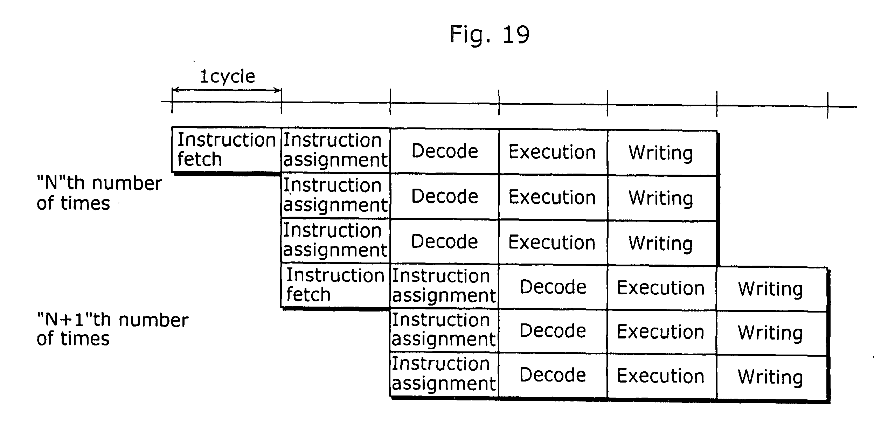

The VLIW architecture of the processor 1 allows parallel execution of the above processing on maximum of three data elements. Therefore, the processor 1 performs the behavior shown in Fig.18 in parallel at the timing shown in Fig.19.

Next, an explanation is given for a set of instructions executed by the processor 1 with the above configuration.

Tables 3~5 list categorized instructions to be executed by the processor 1.

**[Table 3]**

| Category | Operation unit | Instruction operation code |
|---|---|---|
| Memory transfer instruction (load) | M | ld,ldh,ldhu,ldb,ldbu,ldp,ldhp,ldbp,ldbh,ldbuh,ldbhp,ldbuhp |
| Memory transfer instruction (store) | M | st,sth,stb,stp,sthp,stbp,stbh,stbhp |
| Memory transfer instruction (others) | M | dpref, ldstb |
| External register transfer instruction | M | rd,rde,wt,wte |
| Branch instruction | B | br,brl,call,jmp,jmpl,jmpr,ret,jmpf,jloop,setbb,setlr,settar |
| Software interrupt instruction | B | rti,pi0,pi0l,pi1,pi1l,pi2,pi2l,pi3,pi3l,pi4,pi4l,pi5,pi5l,pi6,pi6l,pi7,pi7l,sc0,sc1,sc2, sc3,sc4,sc5,sc6,sc7 |
| VMP/interrupt control instruction | B | intd,inte,vmpsleep,vmpsus,vmpswd, vmpswe,vmpwait |
| Arithmetic operation instruction | A | abs,absvh,absvw,add,addarvw,addc,addmsk,adds,addsr,addu,addvh,addvw,neg,negvh,negvw,rsub,s1add,s2add,sub, subc,submsk,subs,subvh,subvw,max,min |
| Logical operation instruction | A | and,andn,or,sethi,xor,not |
| Compare instruction | A | cmpCC,cmpCCa,cmpCCn,cmpCCo,tstn,tstna,tstnn,tstno,tstz,tstza,tstzn,tstzo |
| Move instruction | A | mov,movcf,mvclcas,mvclovs,setlo,vcchk |
| NOP instruction | A | nop |
| Shift instruction1 | S1 | asl,aslvh,aslvw,asr,asrvh,asrvw,lsl,lsr,rol,ror |
| Shift instruction2 | S2 | aslp,aslpvw,asrp,asrpvw,lslp,lsrp |

**[Table 4]**

| Category | Operation unit | Instruction operation code |
|---|---|---|
| Extraction instruction | S2 | ext,extb,extbu,exth,exthu,extr,extru,extu |
| Mask instruction | C | msk,mskgen |
| Saturation instruction | C | sat12,sat9,satb,satbu,sath,satw |
| Conversion instruction | C | valn,valn1,valn2,valn3,valnvc1,valnvc2,valnvc3,valnvc4,vhpkb,vhpkh,vhunpkb,vhunpkh,vintlhb,vintlhh,vintllb,vintllh, vlpkb,vlpkbu,vlpkh,vlpkhu,vlunpkb,vlunpkbu,vlunpkh,vlunpkhu,vstovb,vstovh,vunpk1,vunpk2,vxchngh,vexth |
| Bit count instruction | C | bcnt1,bseq,bseq0,bseq1 |
| Others | C | byterev,extw,mskbrvb,mskbrvh,rndvh,movp |
| Multiply instruction1 | X1 | fmulhh,fmulhhr,fmulhw,fmulhww,hmul,lmul |
| Multiply instruction2 | X2 | fmulww,mul,mulu |
| Sum of products instruction 1 | X1 | fmachh,fmachhr,fmachw,fmachww,hmac,lmac |
| Sum of products instruction 2 | X2 | fmacww,mac |
| Difference of products instruction 1 | X1 | fmsuhh,fmsuhhr,fmsuhw,fmsuww,hmsu,lmsu |
| Difference of products instruction2 | X2 | fmsuww,msu |
| Divide instruction | DIV | div,divu |
| Debugger instruction | DBGM | dbgm0,dbgm1,dbgm2,dbgm3 |

**[Table 5]**

| Category | Operation unit | Instruction operation code |
|---|---|---|
| SIMD arithmetic operation instruction | A | vabshvh,vaddb,vaddh,vaddhvc,vaddhvh,vaddrhvc,vaddsb,vaddsh,vaddsrb,vaddsrh,vasubb,vcchk,vhaddh,vhaddhvh, vhsubh,vhsubhvh,vladdh,vladdhvh,vlsubh, vlsubhvh,vnegb,vnegh,vneghvh,vsaddb,vsaddh,vsgnh,vsrsubb,vsrsubh,vssubb,vssubh,vsubb,vsubh,vsubhvh,vsubsh,vsumh,vsumh2,vsumrh2,vxaddh,vxaddhvh,vxsubh,vxsubhvh,vmaxb,vmaxh,vminb,vminh,vmovt,vsel |
| SIMD compare instruction | A | vcmpeqb,vcmpeqh,vcmpgeb,vcmpgeh,vcmpgtb,vcmpgth,vcmpleb,vcmpleh,vcmpltb,vcmplth,vcmpneb,vcmpneh,vscmpeqb,vscmpeqh,vscmpgeb,vscmpgeh,vscmpgtb,vscmpgth,vscmpleb,vscmpleh,vscmpltb,vscmplth,vscmpneb,vscmpneh |
| SIMD shift instruction1 | S1 | vaslb,vaslh,vaslvh,vasrb,vasrh,vasrvh,vlslb,vlslh,vlsrb,vlsrh,vrolb,vrolh,vrorb,vrorh |
| SIMD shift instruction2 | S2 | vasl,vaslvw,vasr,vasrvw,vlsl,vlsr |
| SIMD saturation instruction | C | vsath,vsath12,vsath8,vsath8u,vsath9 |
| Other SIMD instruction | C | vabssumb,vrndvh |
| SIMD multiply instruction | X2 | vfmulh,vfmulhr,vfmulw,vhfmulh,vhfmulhr,vhfmulw,vhmul,vlfmulh,vlfmulhr,vlfmulw,vlmul,vmul,vpfmulhww,vxfmulh, vxfmulhr,vxfmulw,vxmul |
| SIMD sum of products instruction | X2 | vfmach,vfmachr,vfmacw,vhfmach,vhfmachr,vhfmacw,vhmac,vlfmach,vlfmachr,vlfmacw,vlmac,vmac,vpfmachww,vxfmach, vxfmachr,vxfmacw,vxmac |
| SIMD difference of products instruction | X2 | vfmsuh,vfmsuw,vhfmsuh,vhfmsuw,vhmsu,vlfmsuh,vlfmsuw,vlmsu,vmsu,vxfmsuh,vxfmsuw,vxmsu |

Note that "Operation units" in the above tables refer to operation units used in the respective instructions. More specifically, "A" denotes ALU instruction, "B" branch instruction, "C" conversion instruction, "DIV" divide instruction, "DBGM" debug instruction, "M" memory access instruction, "S1" and "S2" shift instruction, and "X1" and "X2" multiply instruction.

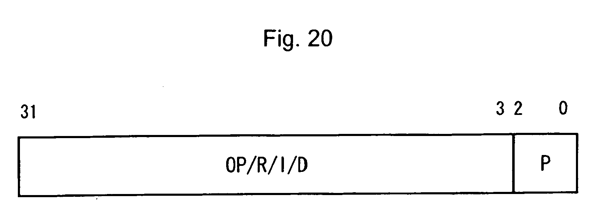

Figs.20 is a diagram showing the format of the instructions executed by the processor 1.

The following describes what acronyms stand for in the diagrams: "P" is predicate (execution condition: one of the eight condition flags C0~C7 is specified); "OP" is operation code field; "R" is register field; "I" is immediate field; and "D" is displacement field.

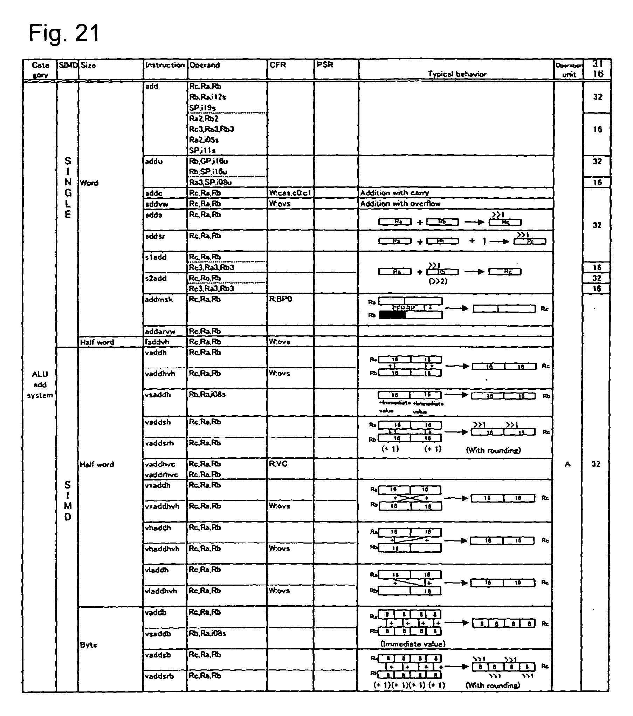

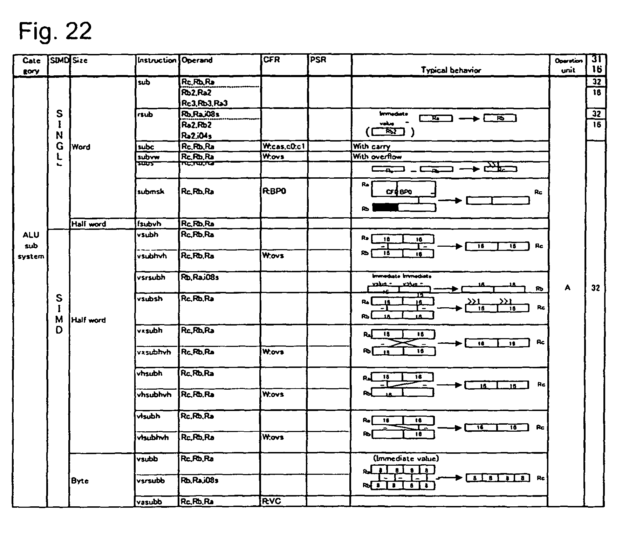

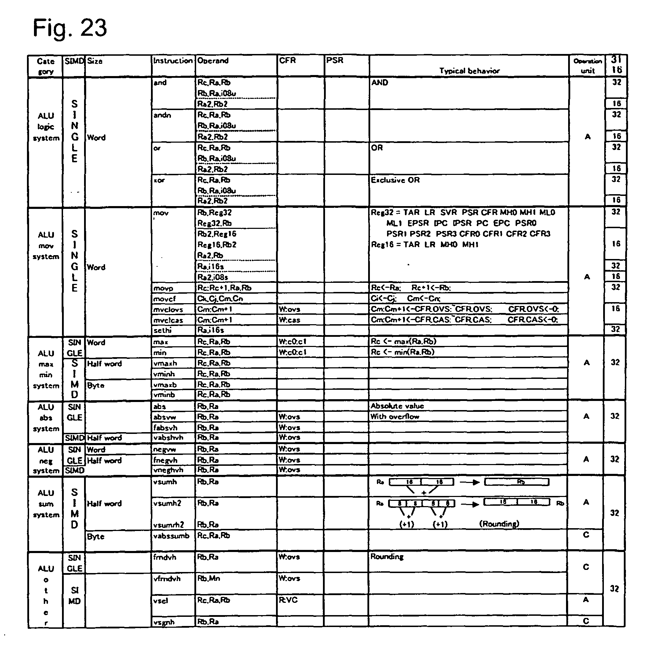

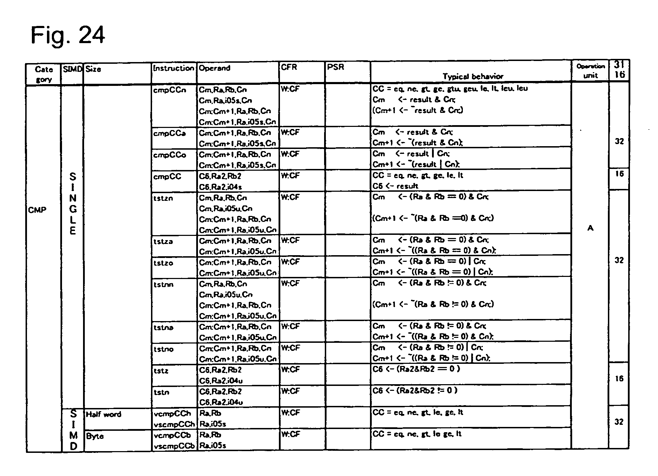

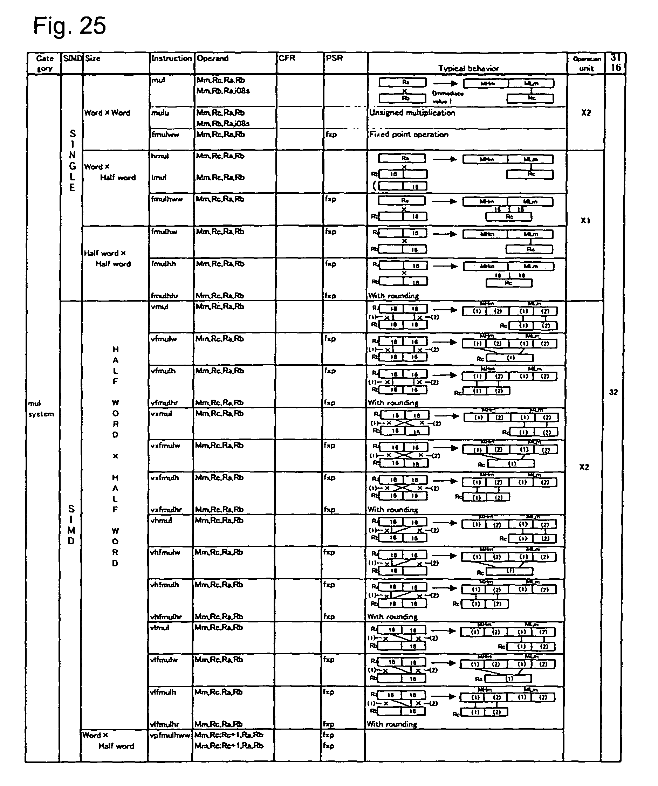

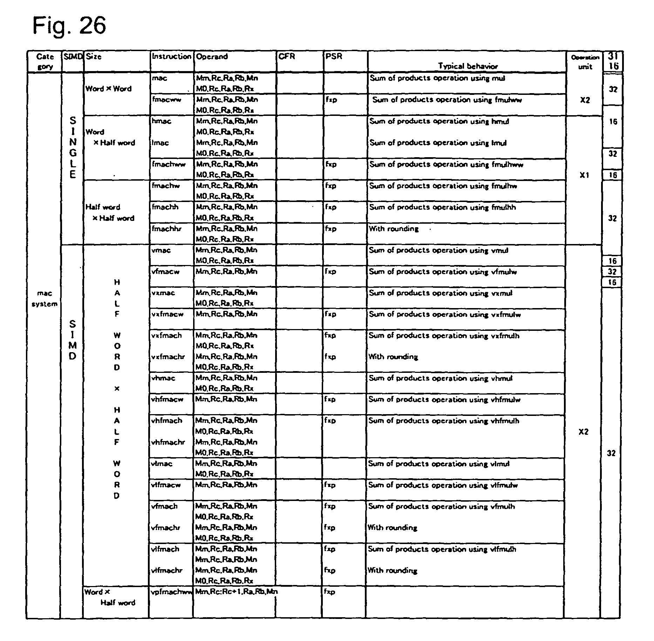

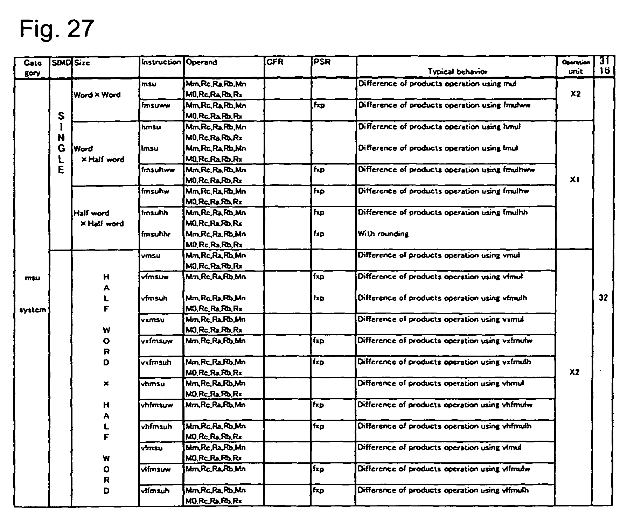

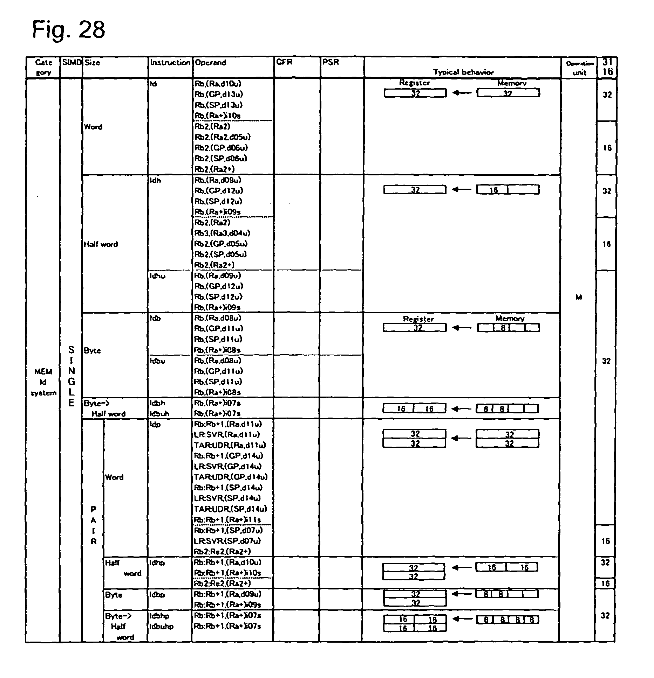

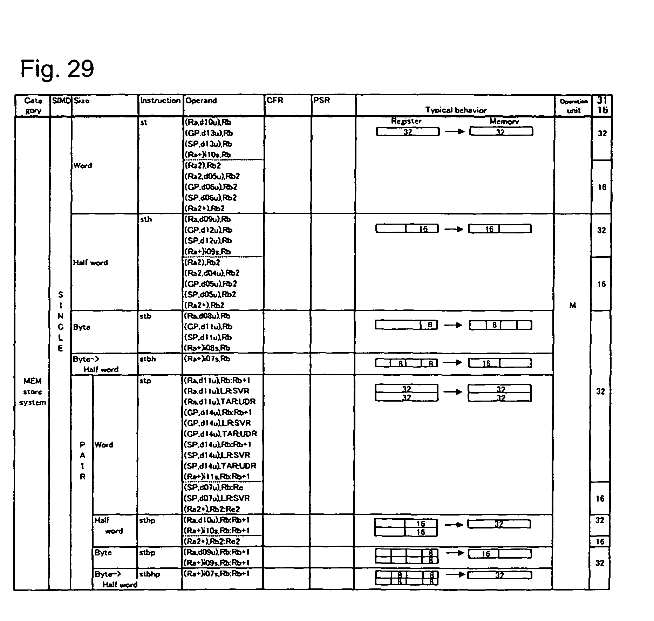

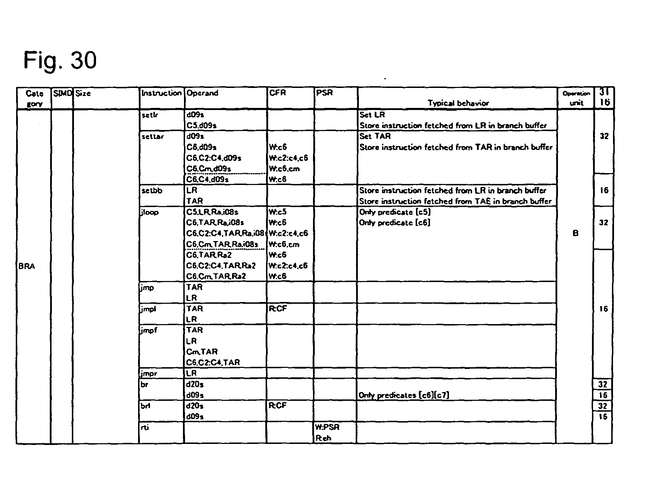

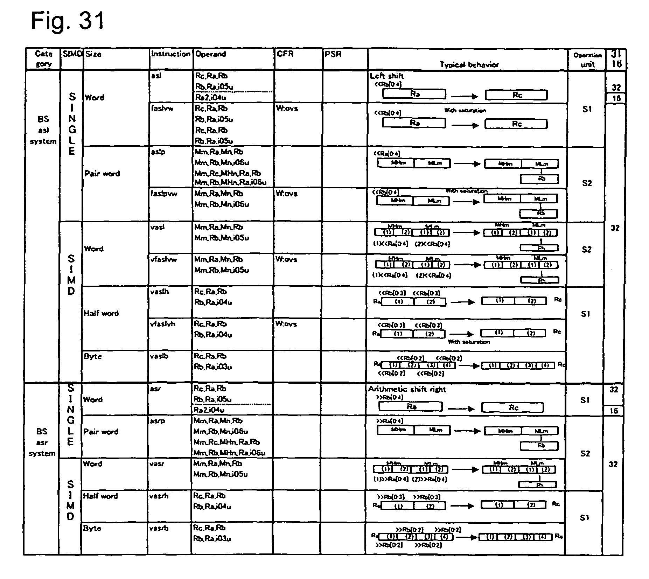

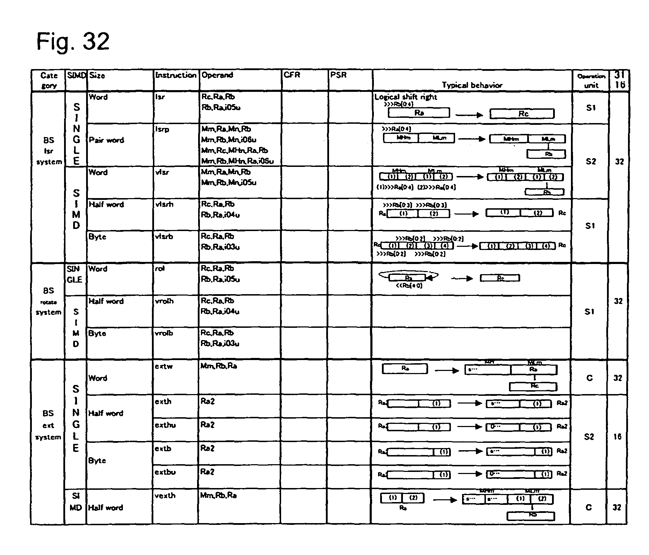

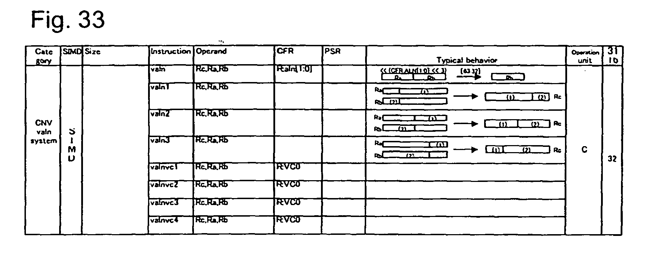

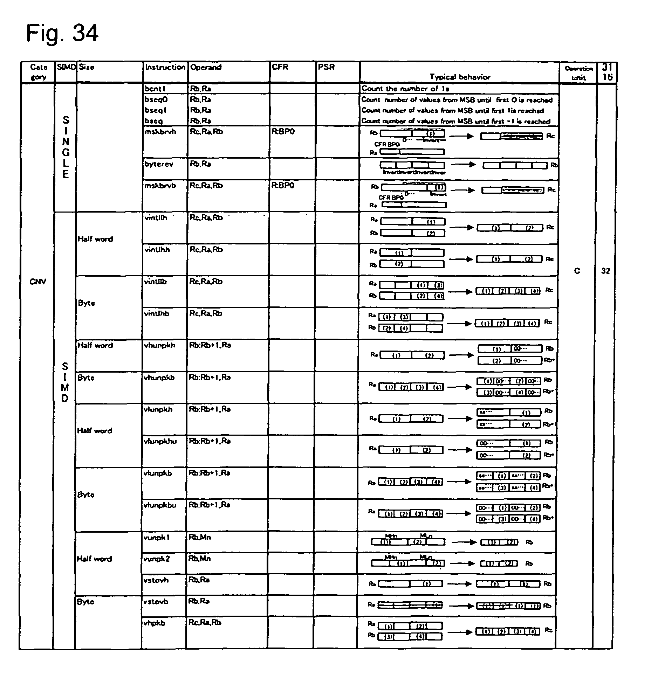

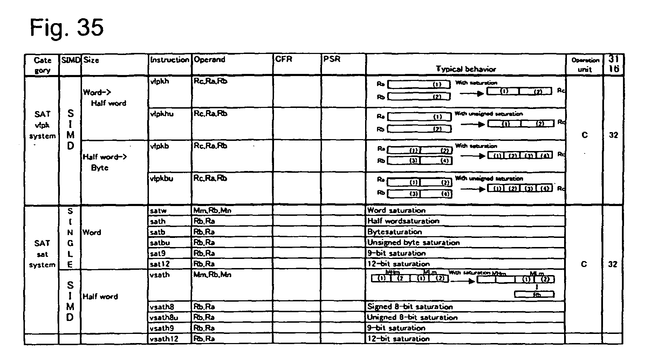

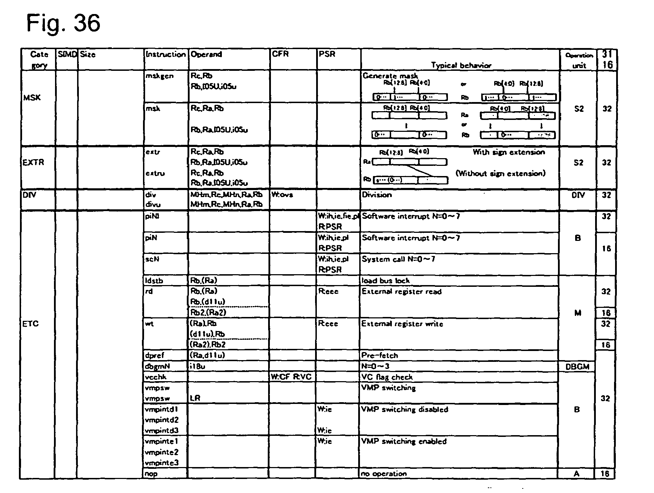

Figs.21~36 are diagrams explaining outlined functionality of the instructions executed by the processor 1. More specifically, Fig.21 explains an instruction belonging to the category "ALUadd (addition) system)"; Fig.22 explains an instruction belonging to the category "ALUsub (subtraction) system)"; Fig.23 explains an instruction belonging to the category "ALUlogic (logical operation) system and others"; Fig.24 explains an instruction belonging to the category "CMP (comparison operation) system"; Fig.25 explains an instruction belonging to the category "mul (multiplication) system"; Fig.26 explains an instruction belonging to the category "mac (sum of products operation) system"; Fig.27 explains an instruction belonging to the category "msu (difference of products) system"; Fig.28 explains an instruction belonging to the category "MEMld (load from memory) system"; Fig.29 explains an instruction belonging to the category "MEMstore (store in memory) system"; Fig.30 explains an instruction belonging to the category "BRA (branch) system"; Fig.31 explains an instruction belonging to the category "BSasl (arithmetic barrel shift) system and others"; Fig.32 explains an instruction belonging to the category "BSlsr (logical barrel shift) system and others"; Fig.33 explains an instruction belonging to the category "CNVvaln (arithmetic conversion) system"; Fig.34 explains an instruction belonging to the category "CNV (general conversion) system"; Fig.35 explains an instruction belonging to the category "SATvlpk (saturation processing) system"; and Fig.36 explains an instruction belonging to the category "ETC (et cetera) system".

The following describes the meaning of each column in these diagrams: "SIMD" indicates the type of an instruction (distinction between SISD (SINGLE) and SIMD); "Size" indicates the size of individual operand to be an operation target; "Instruction" indicates the operation code of an operation; "Operand" indicates the operands of an instruction; "CFR" indicates a change in the condition flag register; "PSR" indicates a change in the processor status register; "Typical behavior" indicates the overview of a behavior; "Operation unit" indicates a operation unit to be used; and "3116" indicates the size of an instruction.

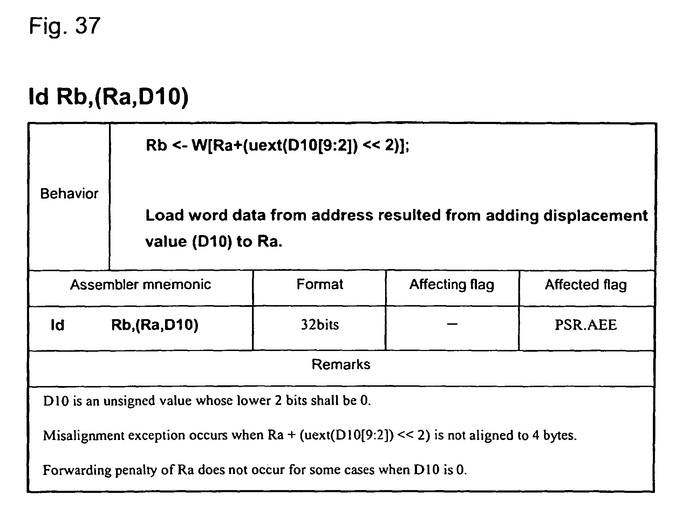

Figs.37~748 are diagrams explaining the detailed functionality of the instructions executed by the processor 1. Note that the meaning of each symbol used for explaining the instructions is as described in Tables 6~10 below.

**[Table 6]**

| Symbol | | Meaning |
|---|---|---|
| X[i] | Bit number i of X | |
| X[i:j] | Bit number j to bit number i of X | |
| X:Y | Concatenated X and Y | |
| {n{X}} | | n repetitions of X |
| sextM(X,N) | | Sign-extend X from N bit width to M bit width. Default of |
| M is 32. | | |
| Default of N is all possible bit widths of X. | | |
| uextM(X,N) | | Zero-extend X from N bit width to M bit width. Default of M is 32. |
| Default of N is all possible bit widths of X. | | |
| smul(X,Y) | | Signed multiplication X * Y |
| umul(X,Y) | | Unsigned multiplication X * Y |
| sdiv(X,Y) | | Integer part in quotient of signed division X / Y |
| smod(X,Y) | | Modulo with the same sign as dividend. |
| udiv(X,Y) | | Quotient of unsigned division X / Y |
| umod(X,Y) | | Modulo |
| abs(X) | | Absolute value |
| bseq(X,Y) for (i=0; i<32; i++) { | | |
| | | if (X[31-i] != Y) break; |
| | } | |
| | result = i; | |
| bcnt(X,Y) | | S = 0; |
| | for (i=0; i<32; i++) { | |
| | | if (X[i] == Y) S++; |
| | } | |
| | result = S; | |
| max(X,Y) | | result = (X > Y)? X : Y |
| min(X,Y) | | result = (X < Y)? X : Y; |
| tstz(X,Y) | | X & Y == 0 |
| tstn(X,Y) | | X & Y != 0 |

**[Table 7]**

| Symbol | | Meaning |
|---|---|---|
| Ra | Ra[31:0] | Register numbered a (0 <= a <= 31) |
| Ra+1 | R(a+1)[31:0] | Register numbered a+1 (0 <= a <= 30) |
| Rb | Rb[31:0] | Register numbered b (0 <= b <= 31) |
| Rb+1 | R(b+1)[31:0] | Register numbered b+1 (0 <= b <= 30) |
| Rc | Rc[31:0] | Register numbered c (0 <= c <= 31) |
| Rc+1 | R(c+1)[31:0] | Register numbered c+lRegister (0 <= c <= 30) |
| Ra2 | Ra2[31:0] | Register numbered a2 (0 <= a2 <= 15) |
| Ra2+1 | R(a2+1)[31:0] | Register numbered a2+1 (0 <= a2 <= 14) |
| Rb2 | Rb2[31:0] | Register numbered b2 (0 <= b2 <= 15) |
| Rb2+1 | R(b2+1)[31:0] | Register numbered b2+1 (0 <= b2 <= 14) |
| Rc2 | Rc2[31:0] | Register numbered c2 (0 <= c2 <= 15) |
| Rc2+1 | R(c2+1)[31:0] | Register numbered c2+1 (0 <= c2 <= 14) |
| Ra3 | Ra3[31:0] | Register numbered a3 (0 <= a3 <= 7) |
| Ra3+1 | R(a3+1)[31:0] | Register numbered a3+1 (0 <= a3 <= 6) |
| Rb3 | Rb3[31:0] | Register numbered b3 (0 <= b3 <= 7) |
| Rb3+1 | R(b3+1)[31:0] | Register numbered b3+1 (0 <= b3 <= 6) |
| Rc3 | Rc3[31:0] | Register numbered c3 (0 <= c3 <= 7) |
| Rc3+1 | R(c3+1)[31:0] | Register numbered c3+1 (0 <= c3 <= 6) |
| Rx | Rx[31:0] | Register numbered x (0 <= x <= 3) |

**[Table 8]**

| Symbol | Meaning | |
|---|---|---|
| + | Addition | |
| - | Subtraction | |
| & | Logical AND | |
| \| | Logical OR | |
| ! | Logical NOT | |
| << | Logical shift left (arithmetic shift left) | |
| >> | Arithmetic shift right | |
| >>> | Logical shift right | |
| ^ | Exclusive OR | |
| ~ | Logical NOT | |
| == | Equal | |
| ! = | Not equal | |
| > | Greater than | Signed(regard left-and right-part MSBs as sign) |
| >= | Greater than or equal to | Signed(regard left-and right-part MSBs as sign) |
| >(u) | Greater than | Unsigned(Not regard left-and right-part MSBs as sign) |
| >=(u) | Greater than or equal to | Unsigned(Not regard left-and right-part MSBs as sign) |
| < | Less than | Signed(regard left-and right-part MSBs as sign) |
| <= | Less than or equal to | Signed(regard left-and right-part MSBs as sign) |
| <(u) | Less than | Unsigned(Not regard left-and right-part MSBs as sign) |
| <=(u) | Less than or equal to | Unsigned(Not regard left-and right-part MSBs as sign) |

**[Table 9]**

| Symbol | Meaning |
|---|---|
| D(addr) Double word data corresponding to address "addr" in Memory | |
| W(addr)Word data corresponding to address "addr" in Memory | |
| H(addr) Half data corresponding to address "addr" in Memory | |
| B(addr) Byte data corresponding to address "addr" in Memory | |
| B(addr,bus_lock) | |
| Access byte data corresponding to address "addr" in Memory, and lock used bus concurrently (unlockable bus shall not be locked) | |
| B(addr,bus_unlock) | |
| Access byte data corresponding to address "addr" in Memory, and unlock used bus concurrently (unlock shall be ignored for unlockable bus and bus which has not been locked) | |
| EREG(num) | Extended register numbered "num" |
| EREG_ERR | To be 1 if error occurs when immediately previous access is made to extended register. |
| To be 0, when there was no error. | |
| <- | Write result |
| => | Synonym of instruction (translated by assembler) |
| reg#(Ra) | Register number of general-purpose register Ra(5-bit value) |
| Ox | Prefix of hexadecimal numbers |
| 0b | Prefix of binary numbers |
| tmp | Temporally variable |
| UD | Undefined value (value which is implementation-dependent value or which varies dynamically) |
| Dn | Displacement value (n is a natural value indicating the number of bits) |
| In | Immediate value (n is a natural value indicating the number of bits) |

**[Table 10]**

| Symbol | Meaning | | |
|---|---|---|---|
| OExplanation for syntax | | | |
| if (condition) { | | | |
| | Executed when condition is met; | | |
| } else { | | | |
| | Executed when condition is not met; | | |
| } | | | |
| Executed when condition A is met, if (condition A); | | | * Not executed when condition A is not met |
| for (Expression1;Expression2;Expression3) | | | * Same as C language |
| (Expression1)? Expression2:Expression3 | | | * Same as C language |
| OExplanation for terms | | | |
| The following explains terms used for explanations: | | | |
| Integer multiplication Multiplication defined as "smul" | | | |
| Fixed point multiplication | | | |
| Arithmetic shift left is performed after integer operation. When PSR.FXP is 0, the amount of shift is 1 bit, and when PSR.FXP is 1, 2 bits. | | | |
| SIMD operation straight / cross / high / low / pair | | | |
| Higher 16 bits and lower 16 bits of half word vector data is RH and RL, respectively. When operations performed on at Ra register and Rb register are defined as follows: | | | |
| | straight | Operation is performed between RHa and RHb | |
| | cross | Operation is performed between RHa and RLb, and RLa and RHb | |
| | high | Operation is performed between RHa and RHb, and RLa and RHb | |
| | low | Operation is performed between RHa and RLb, and RLa and RLb | |
| | pair | Operation is performed between RH and RHb, and RH and RLb | |
| (RH is 32-bit data) | | | |

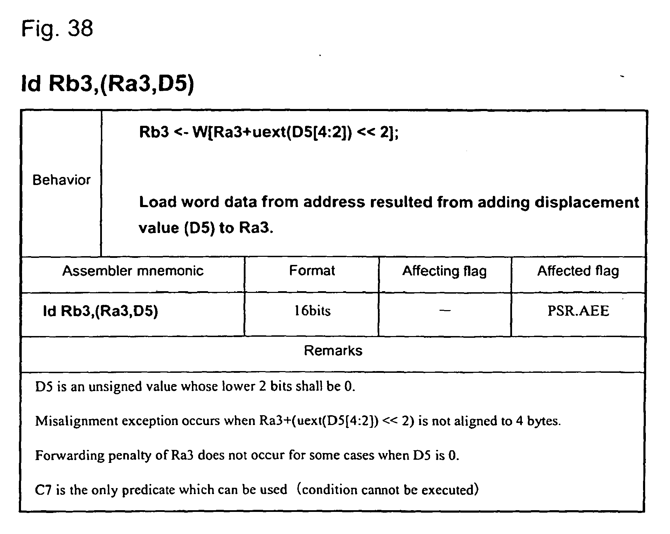

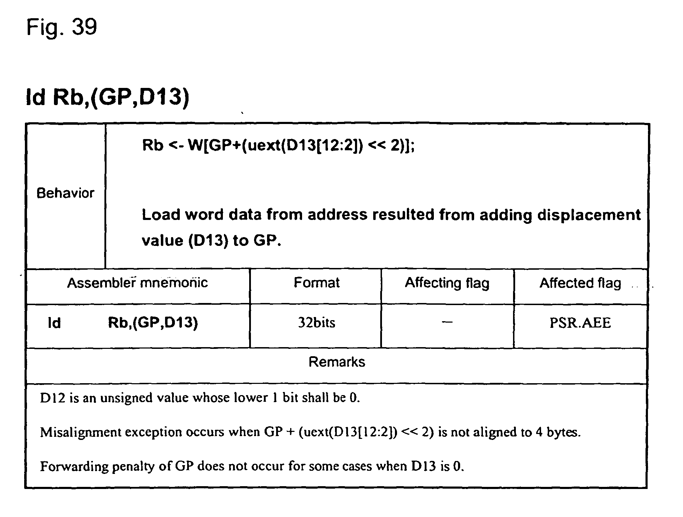

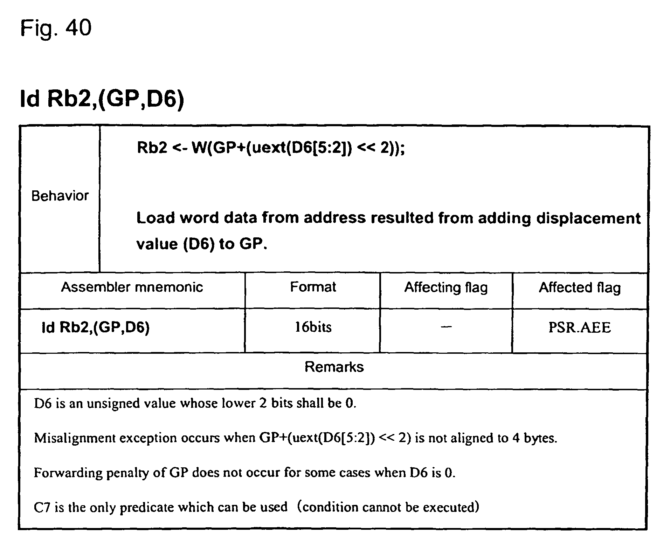

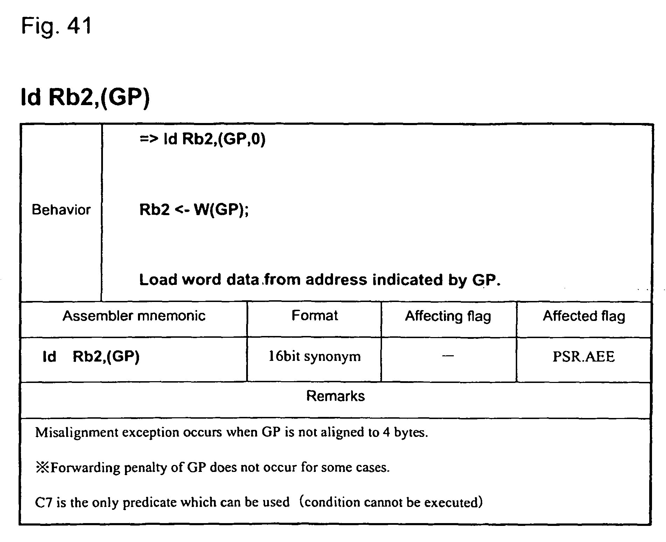

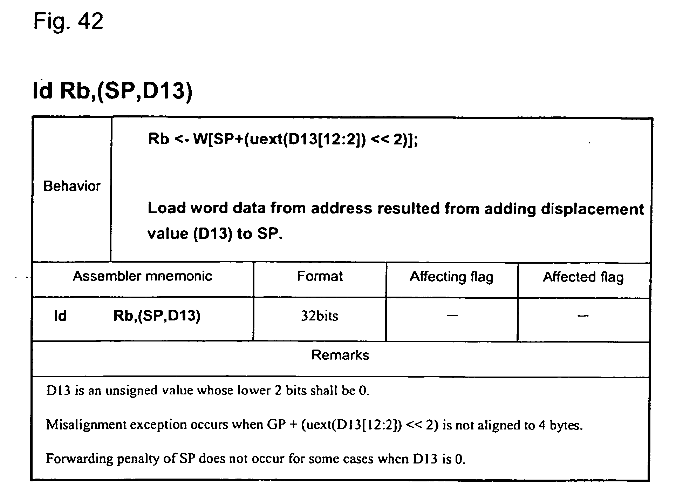

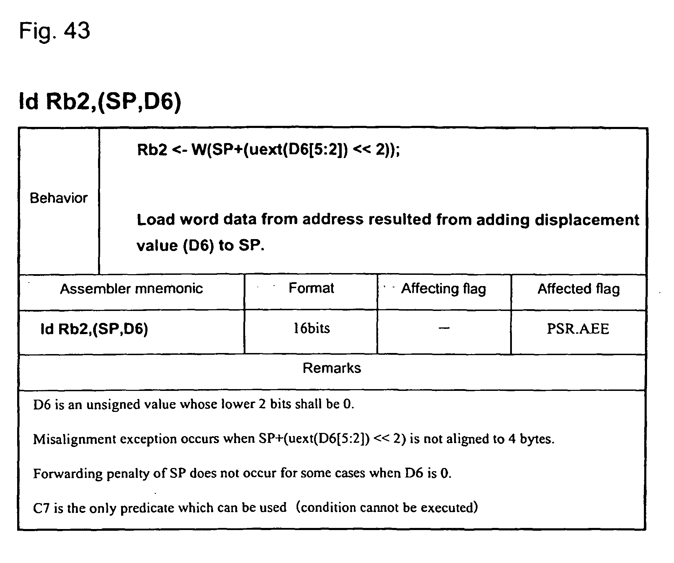

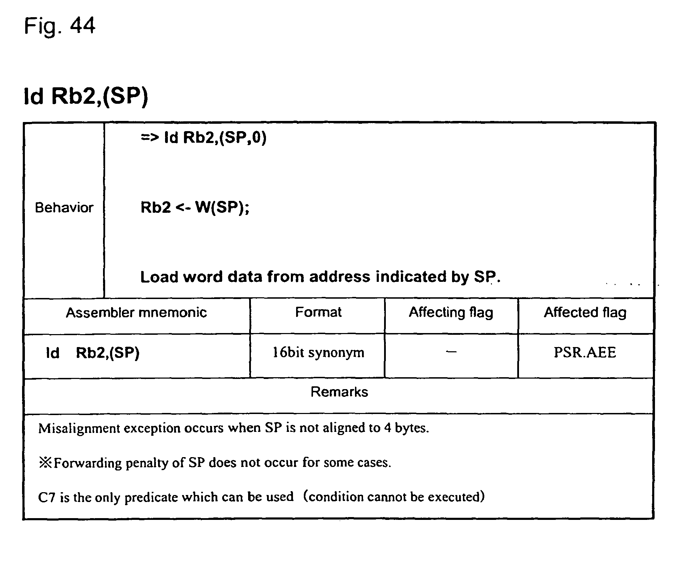

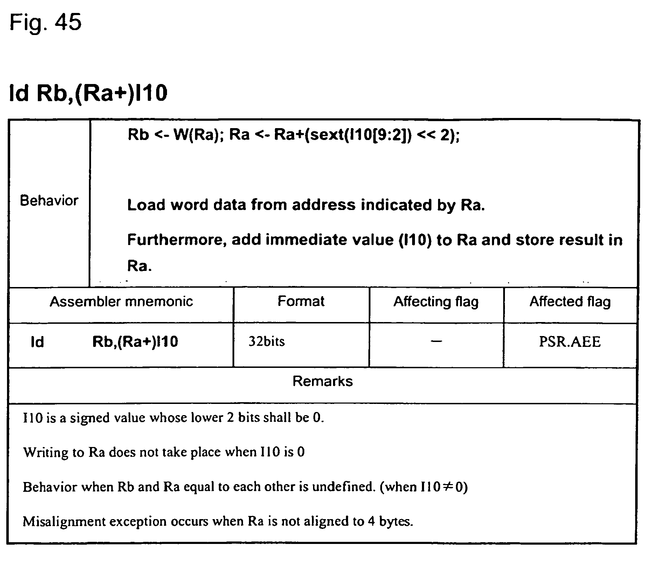

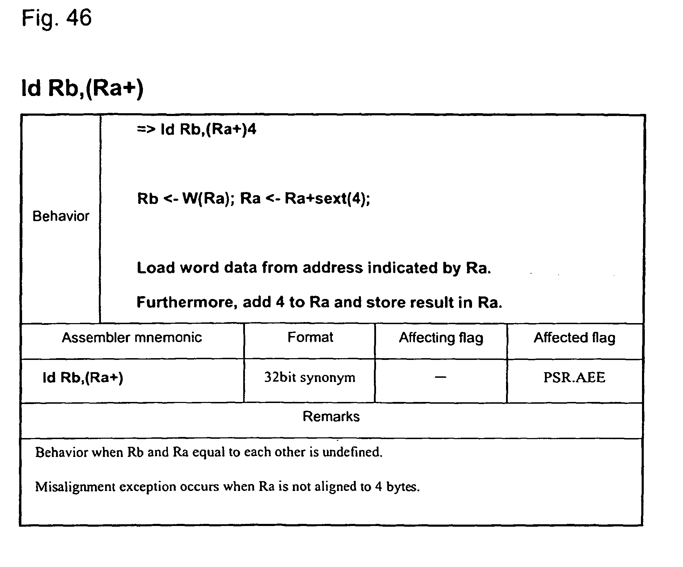

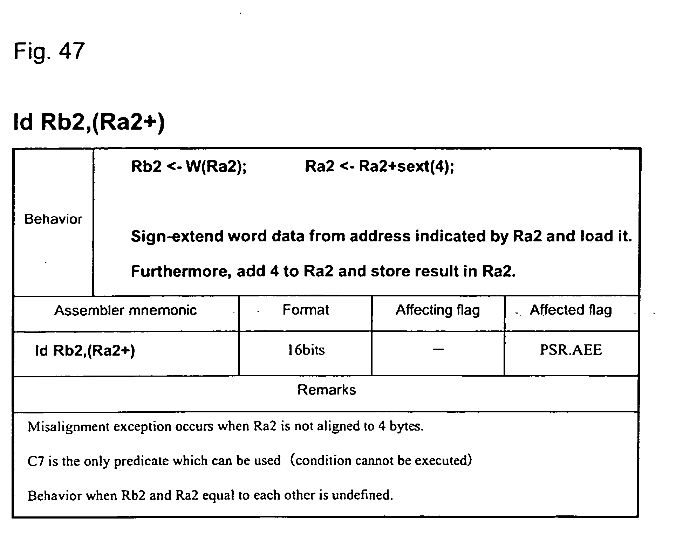

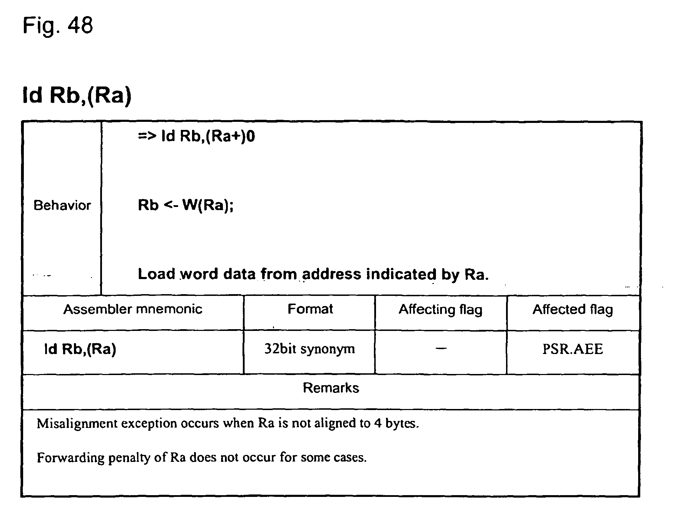

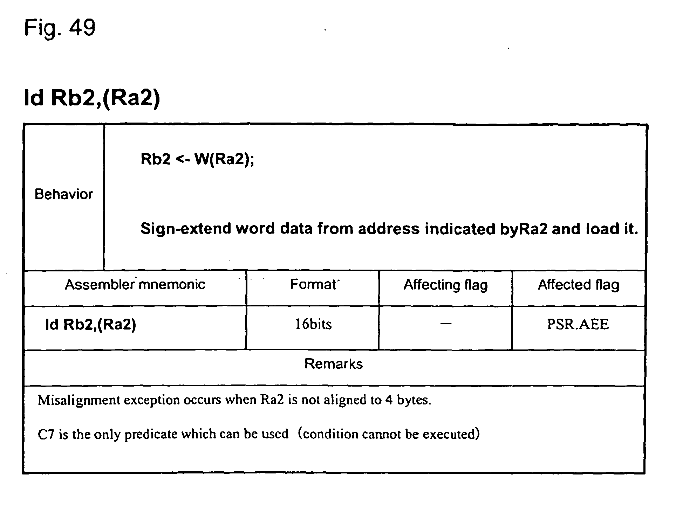

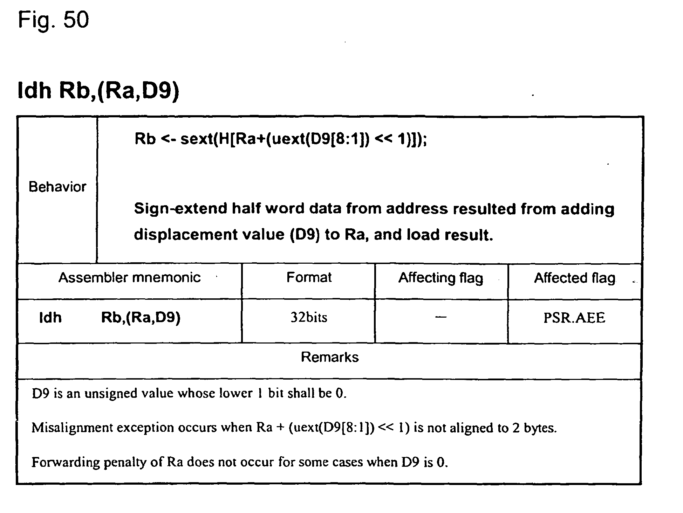

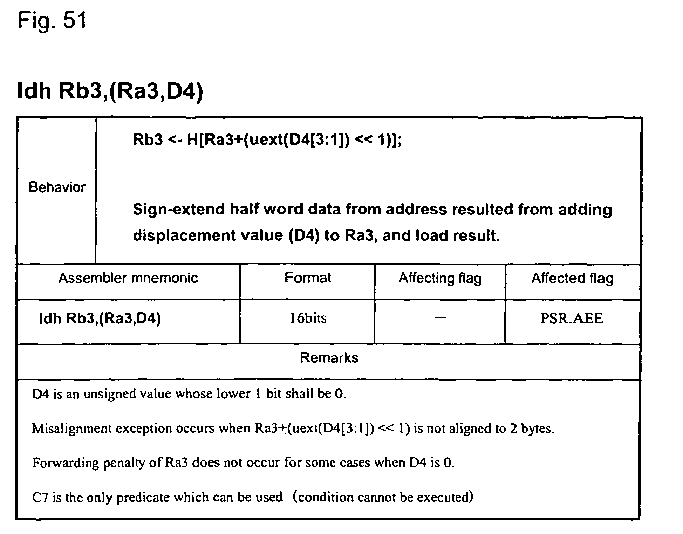

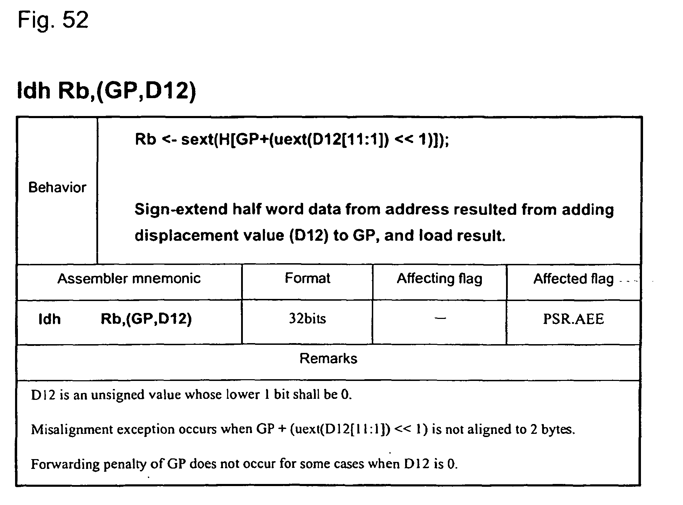

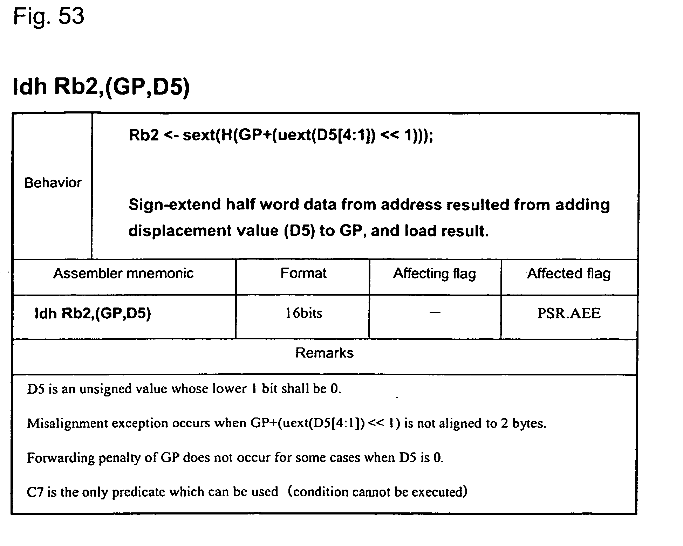

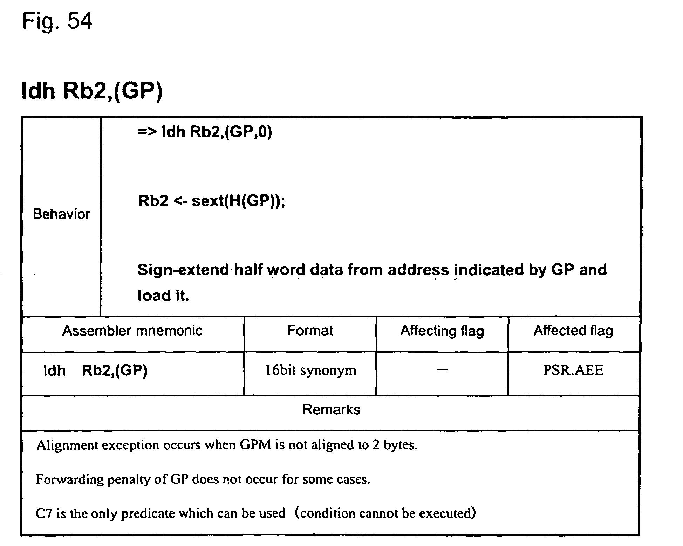

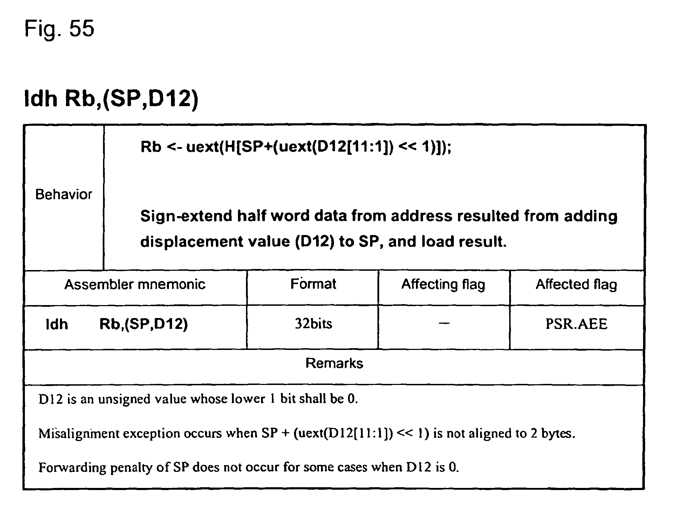

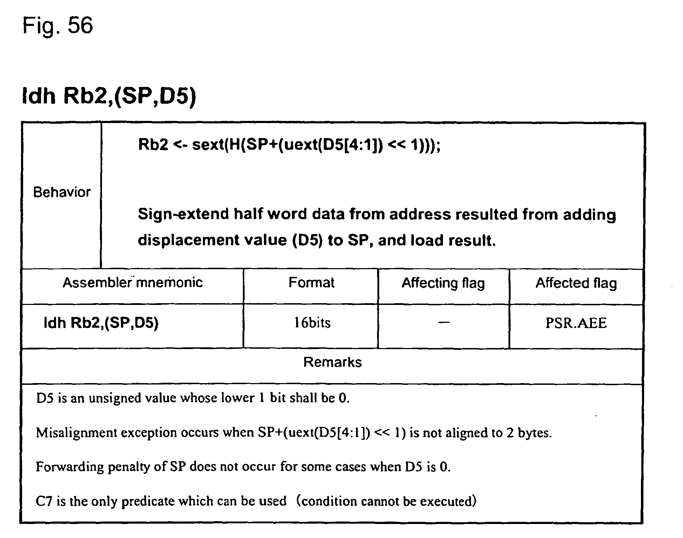

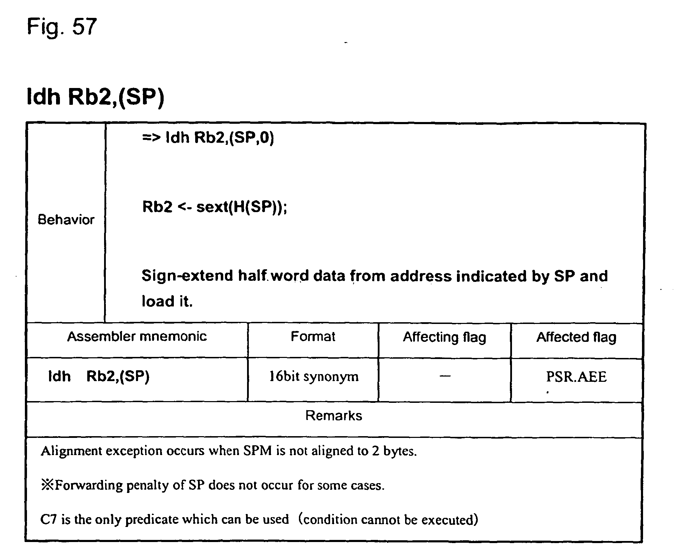

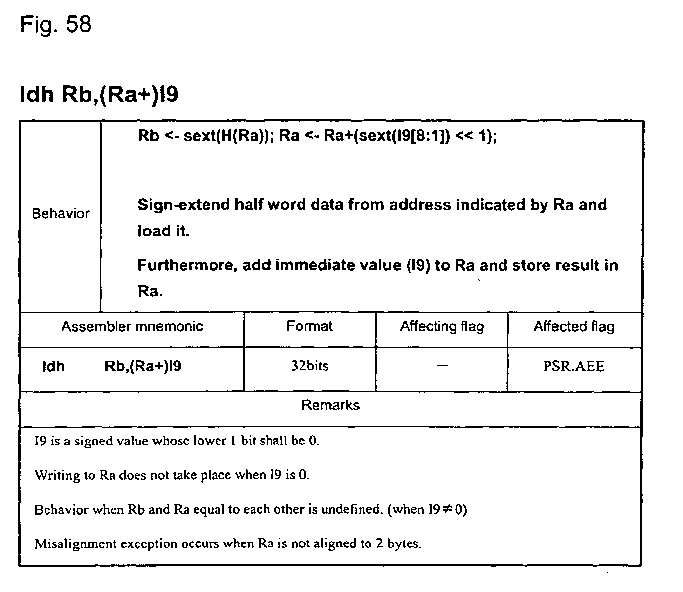

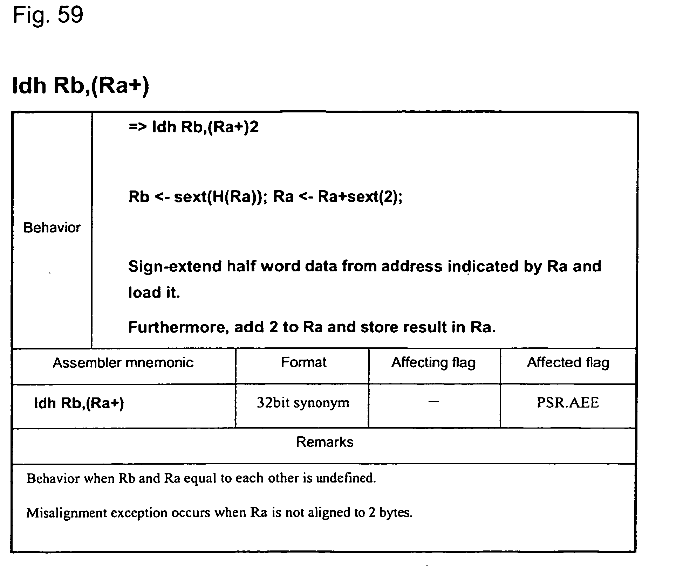

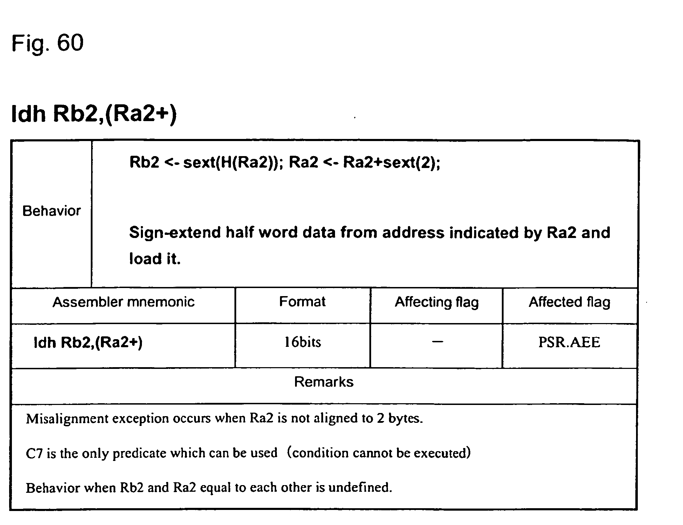

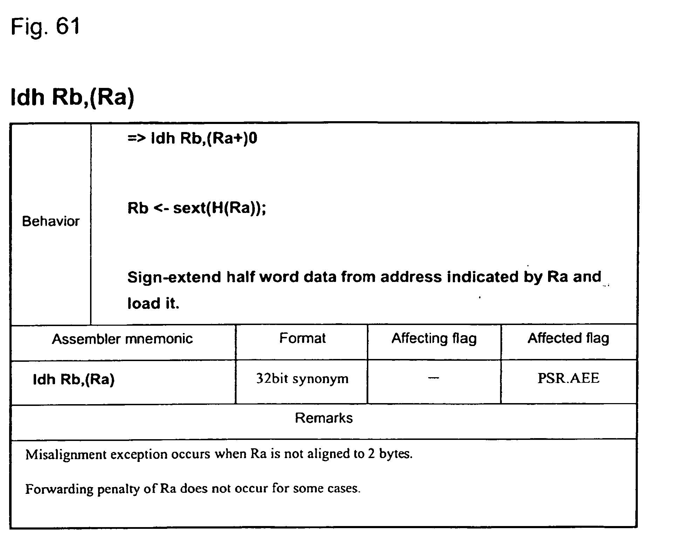

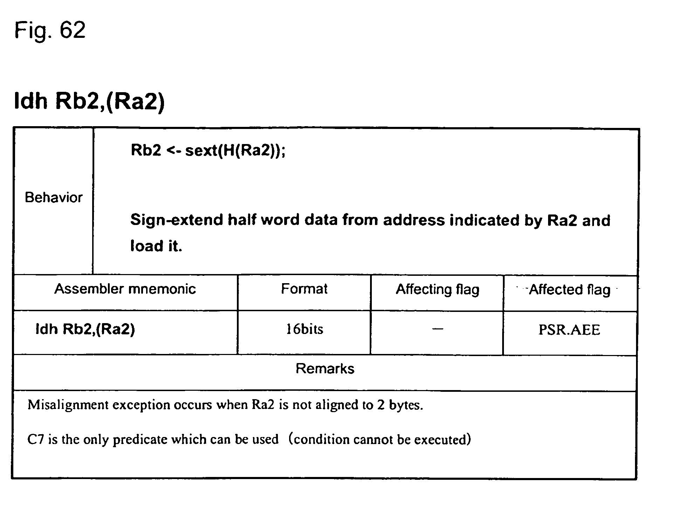

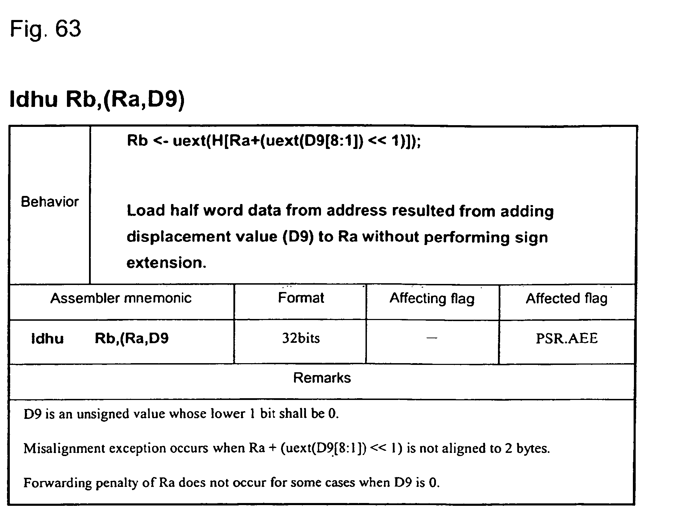

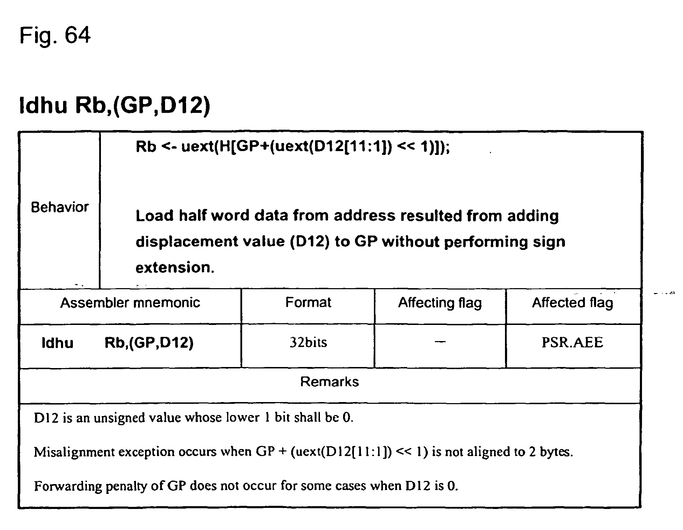

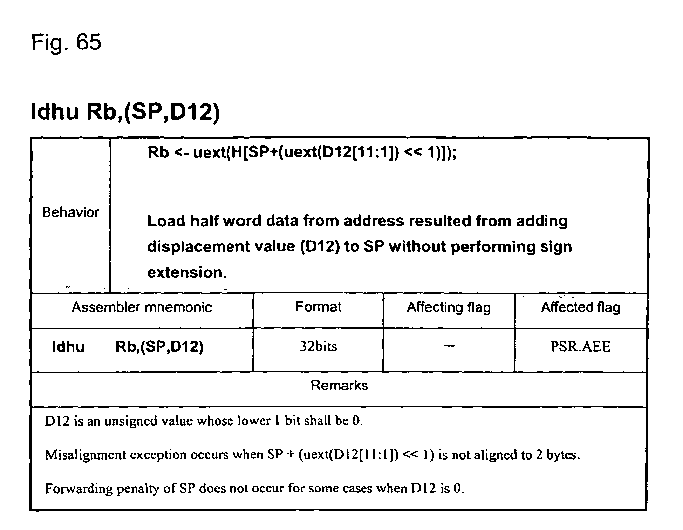

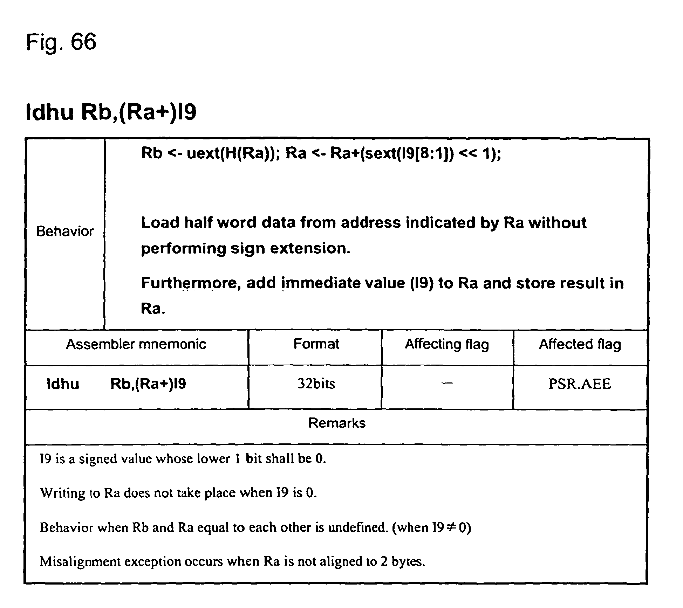

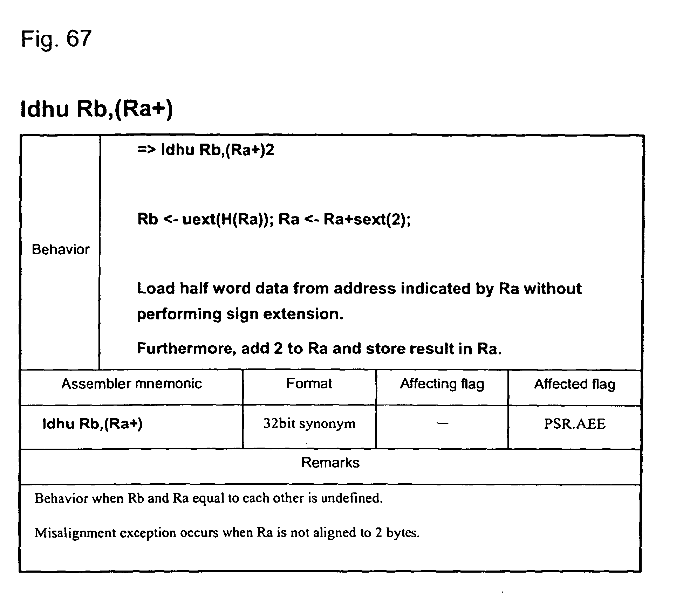

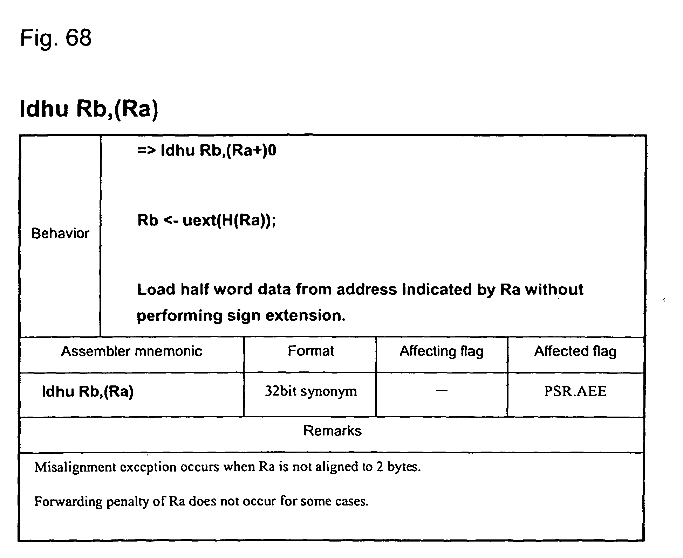

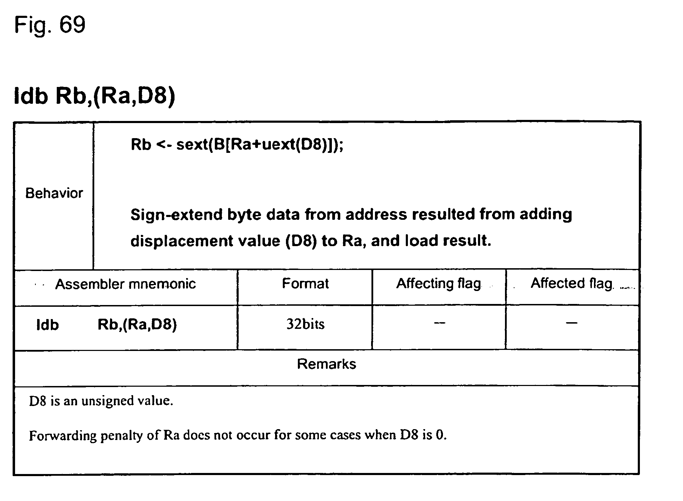

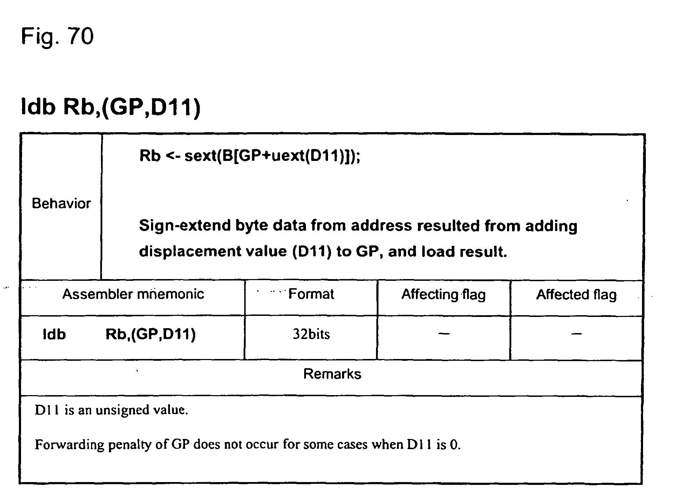

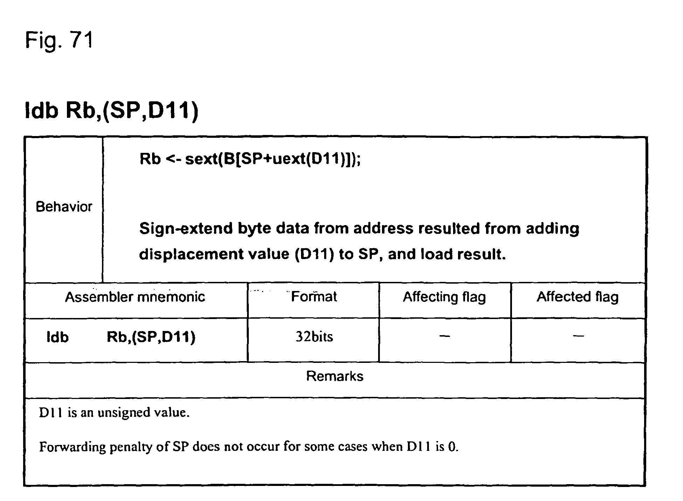

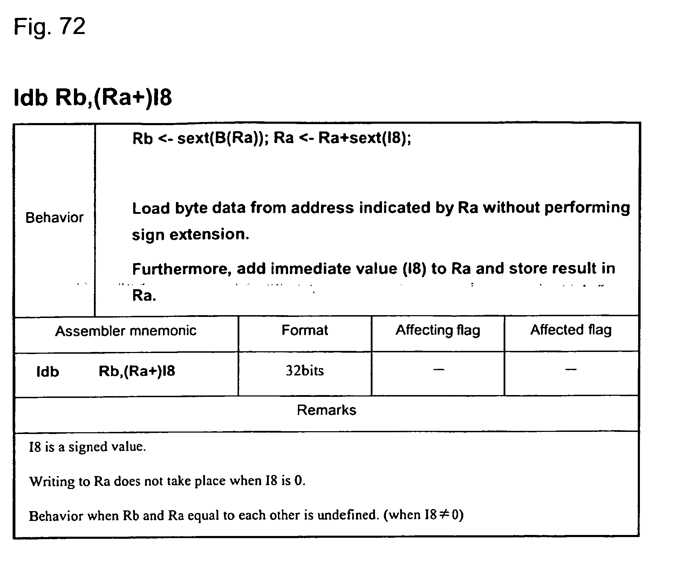

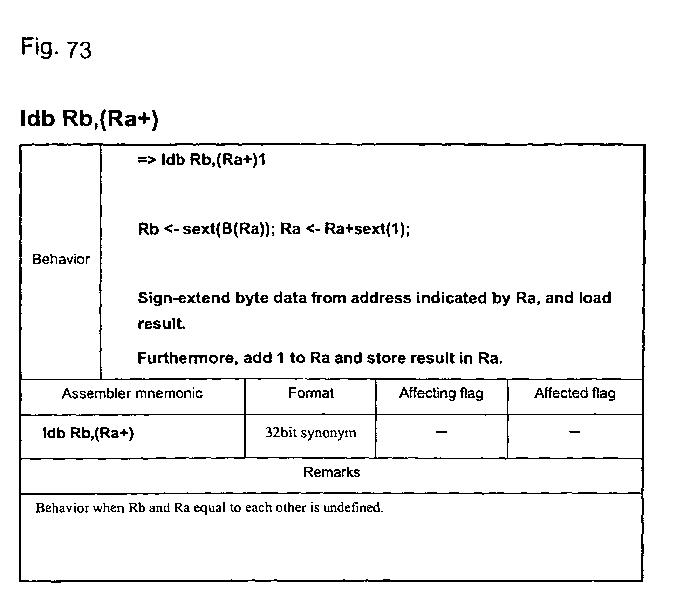

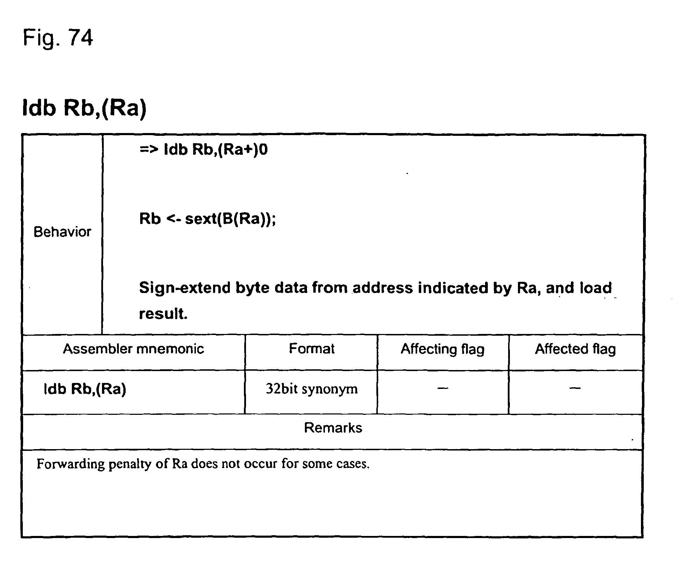

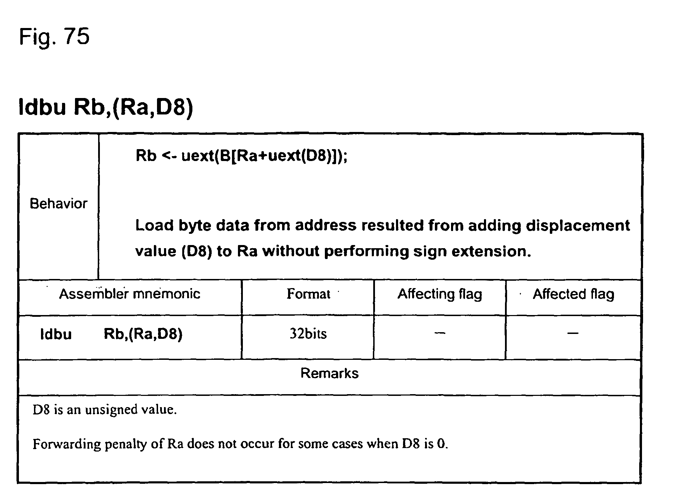

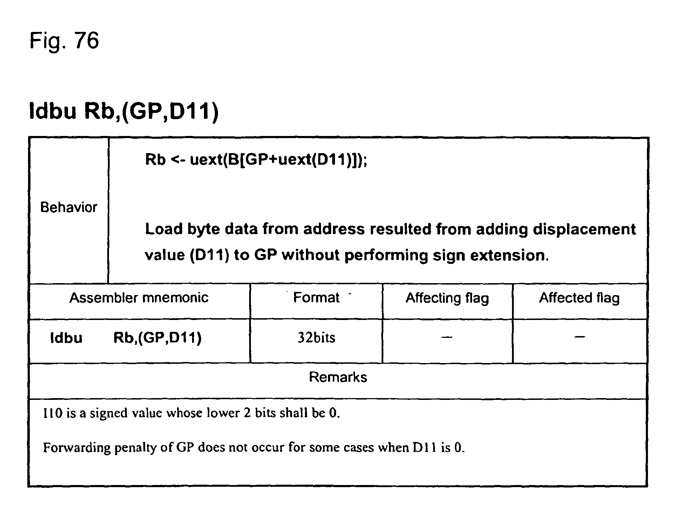

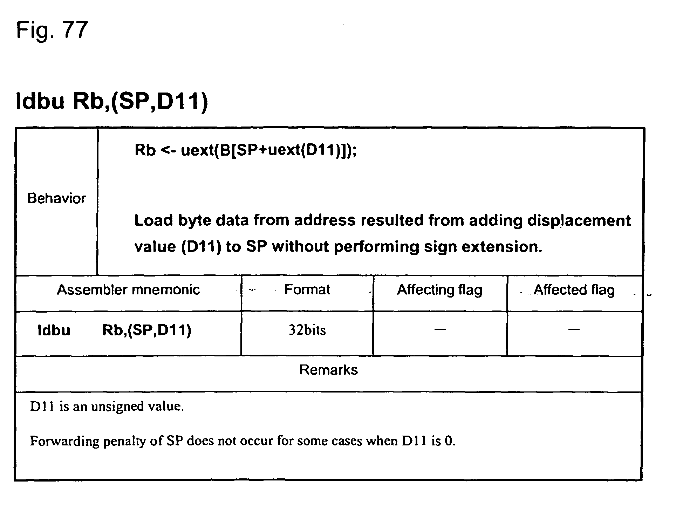

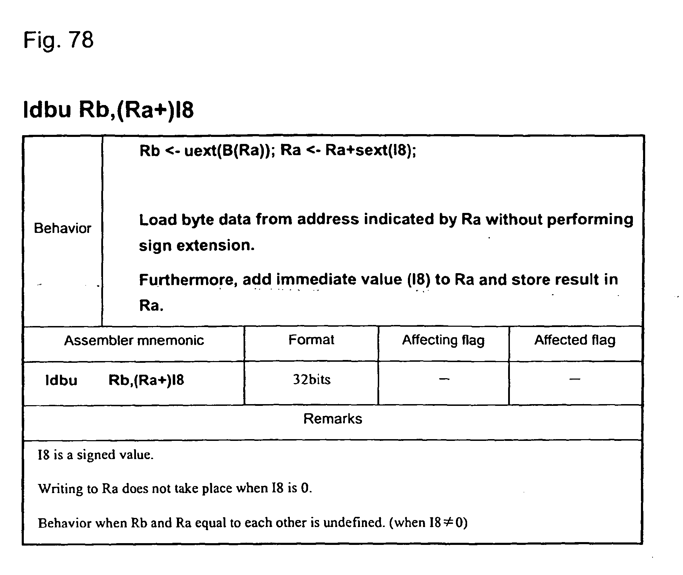

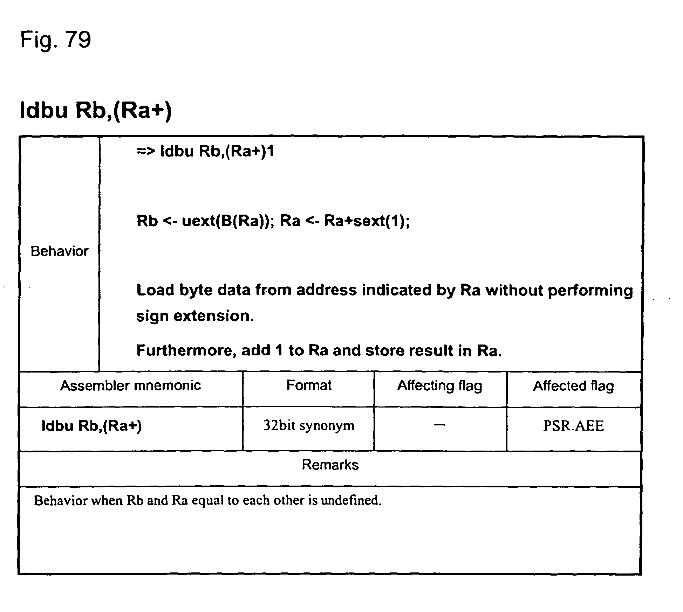

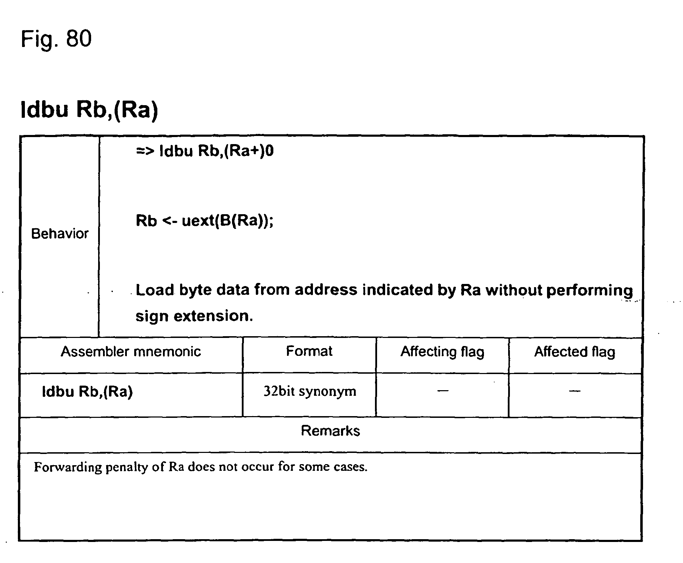

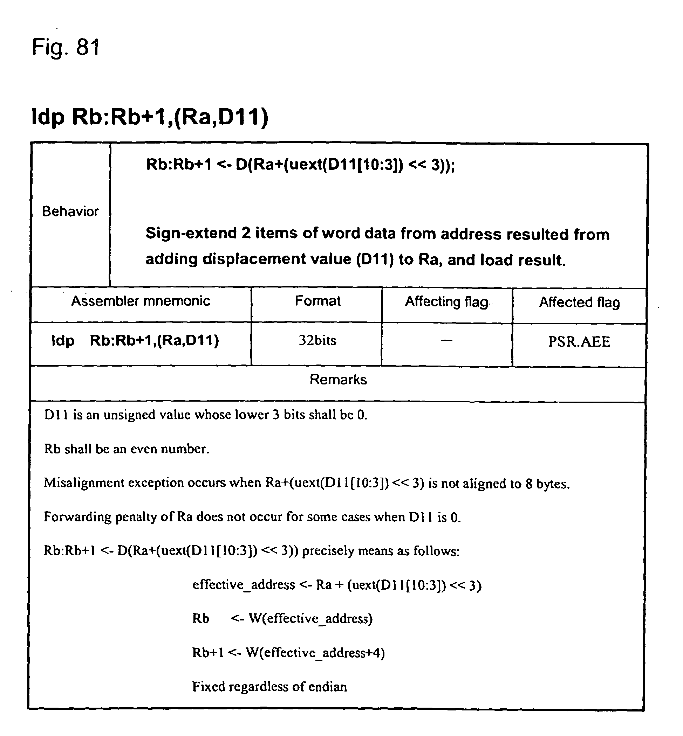

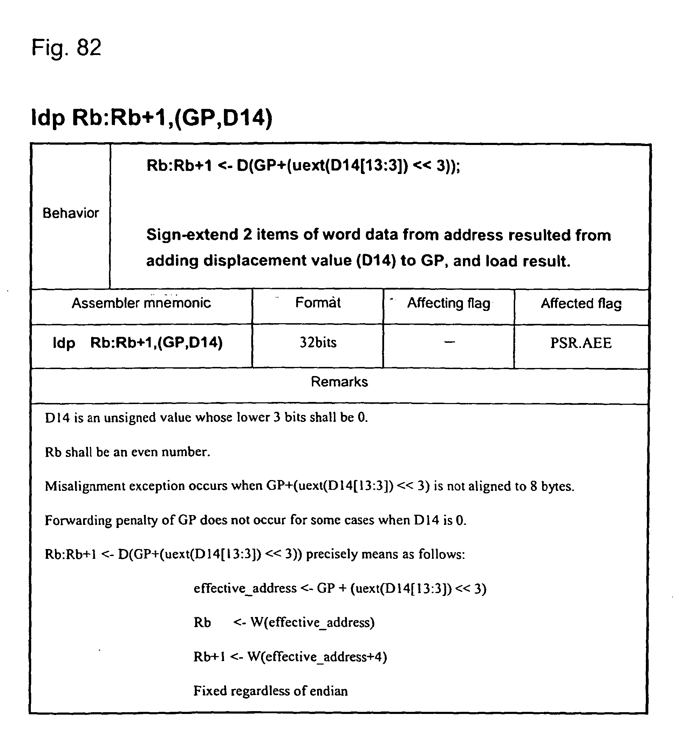

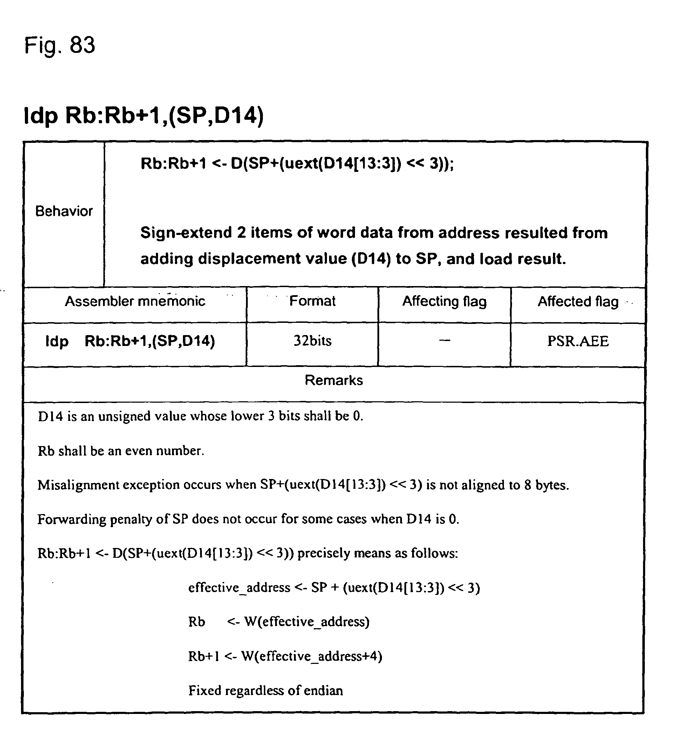

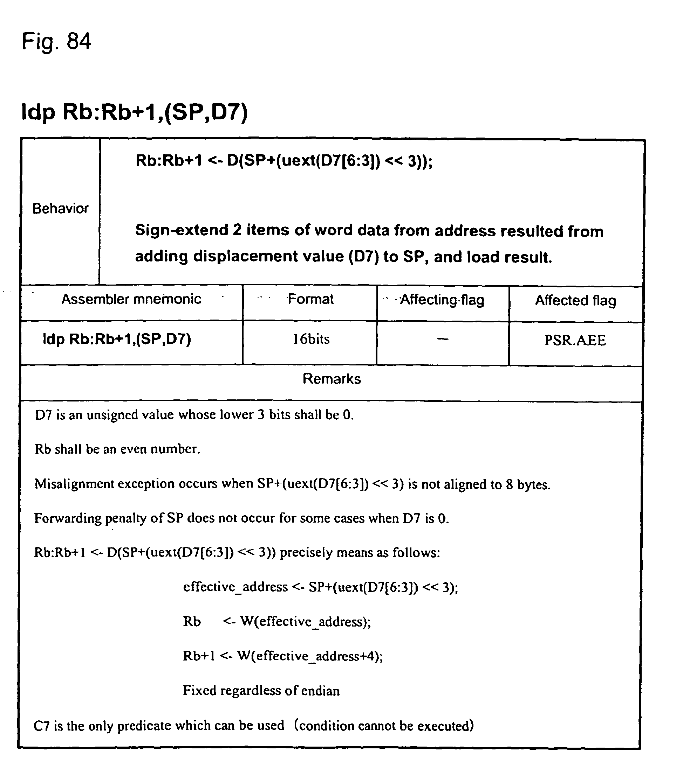

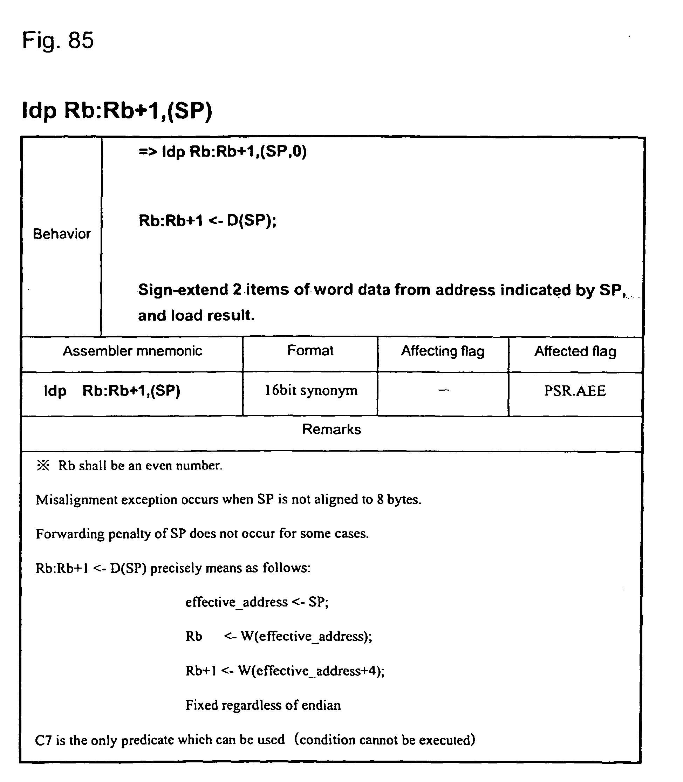

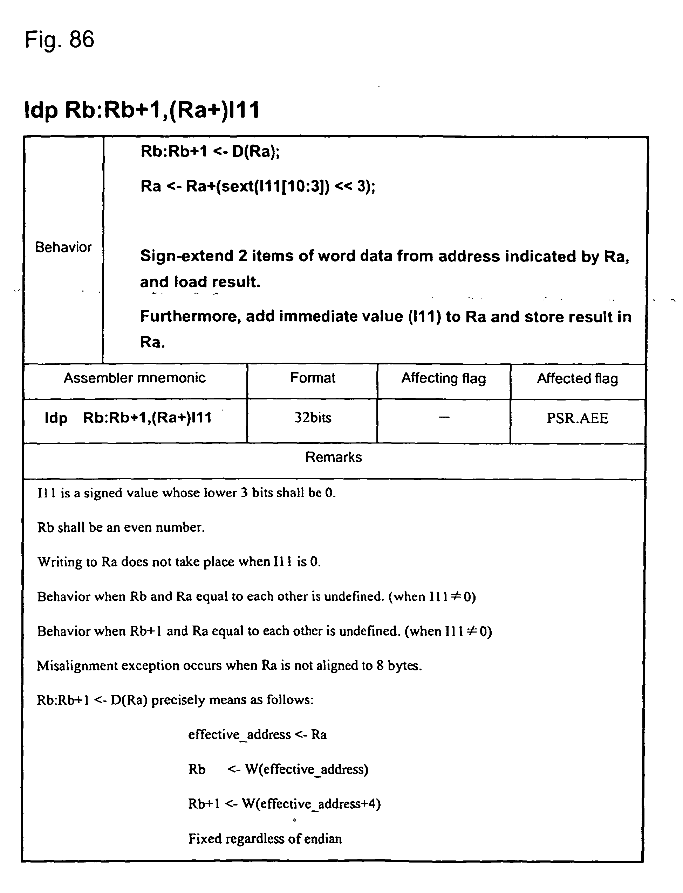

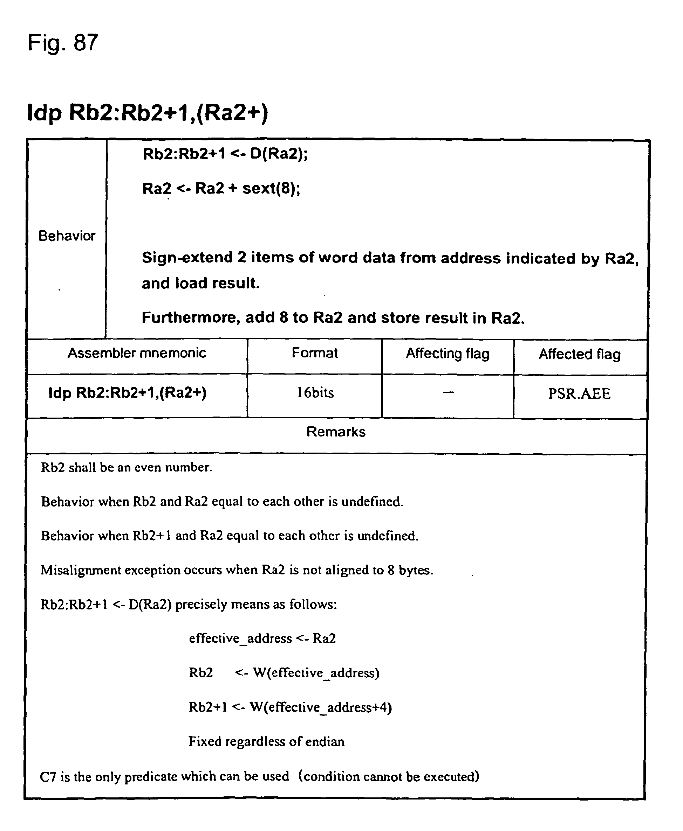

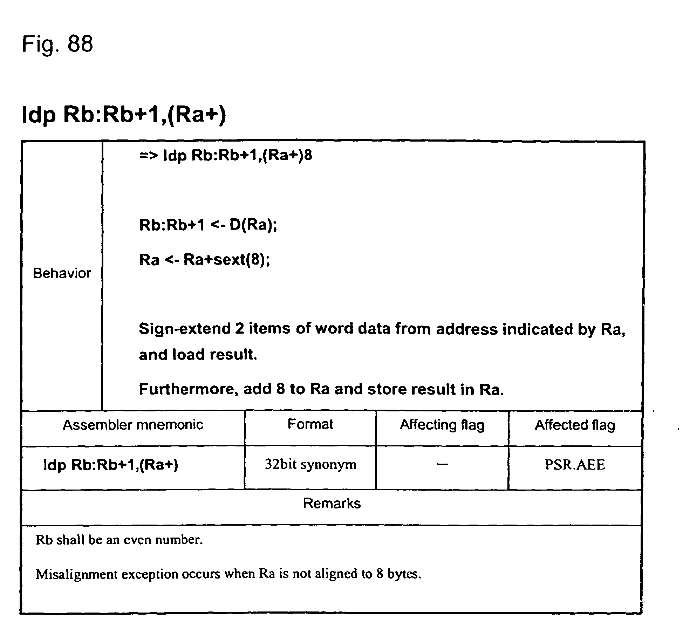

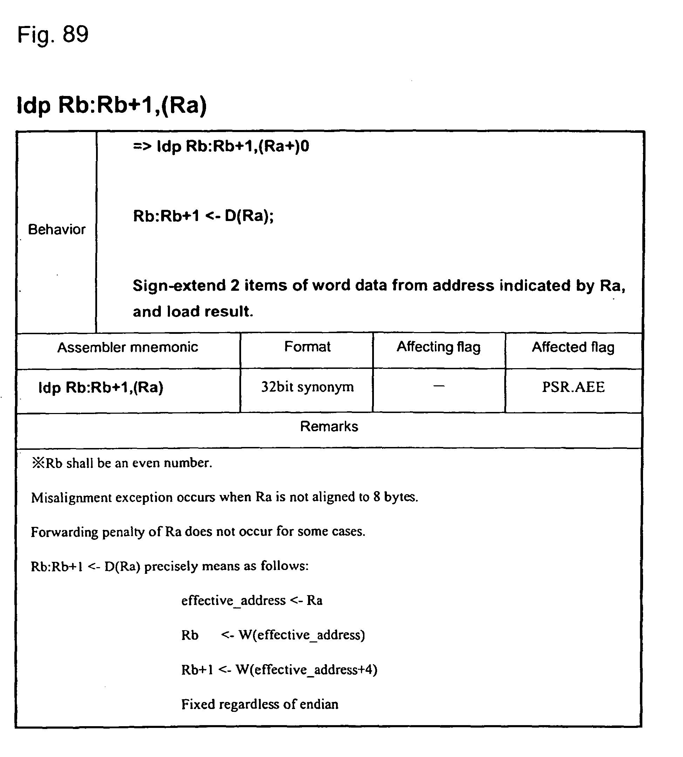

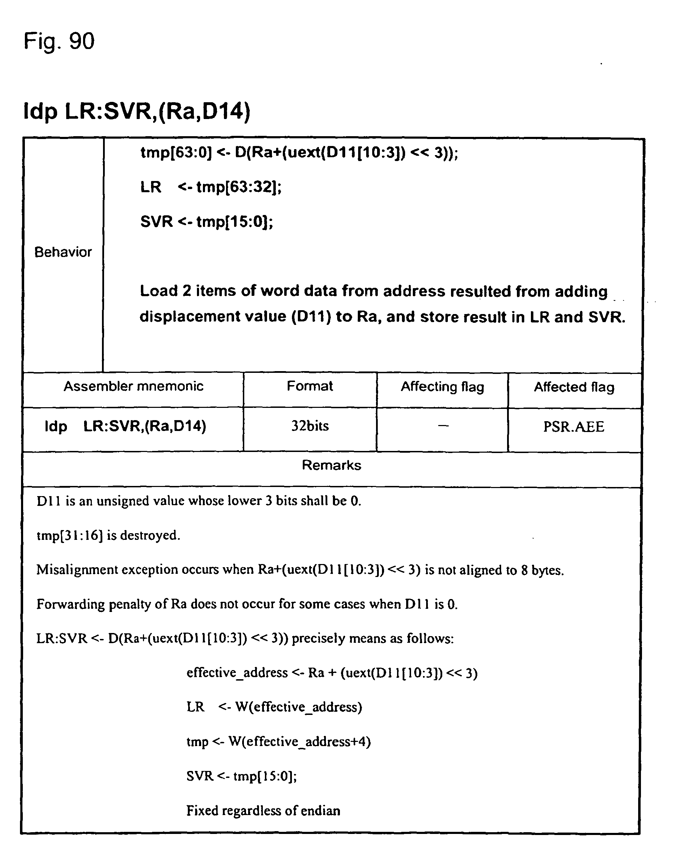

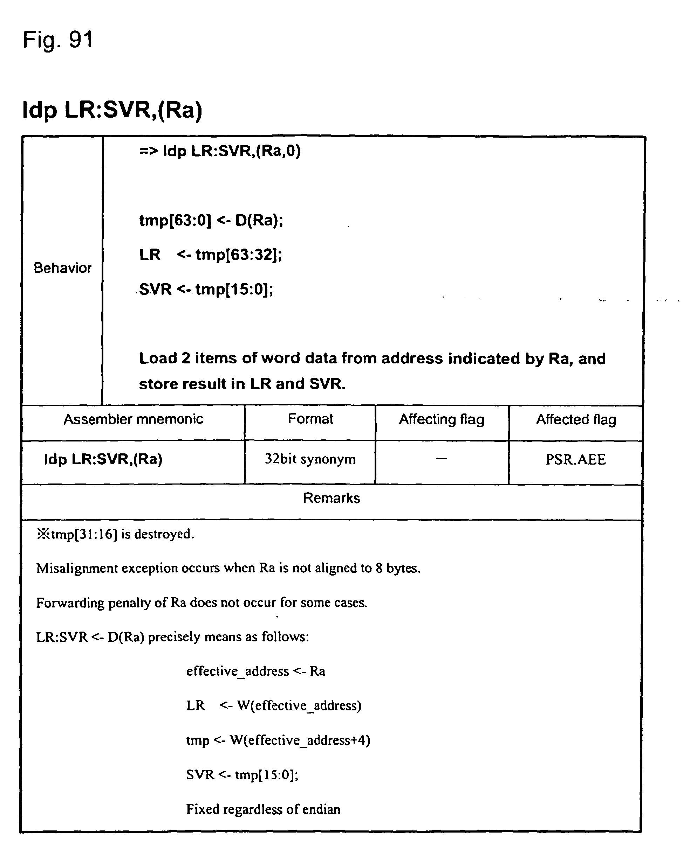

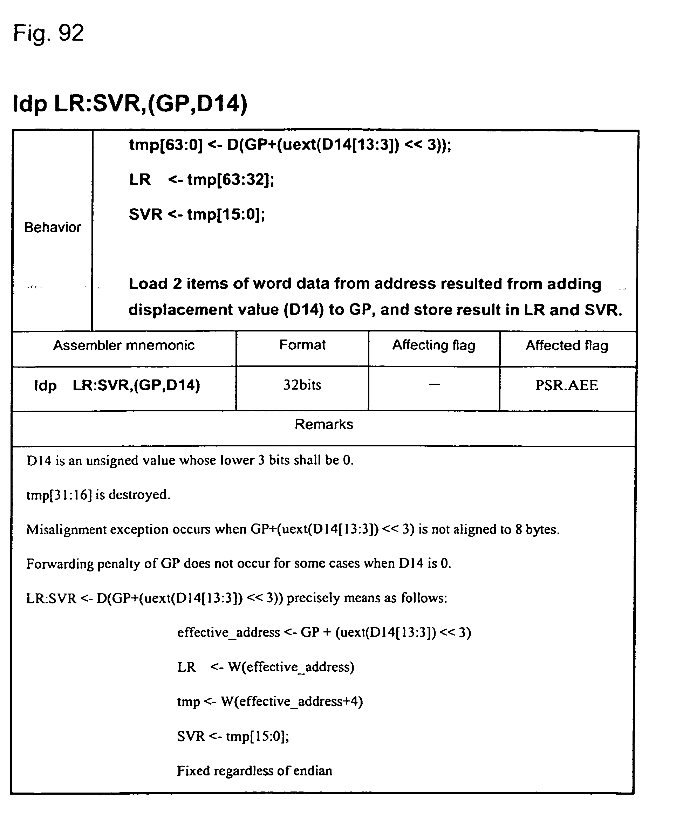

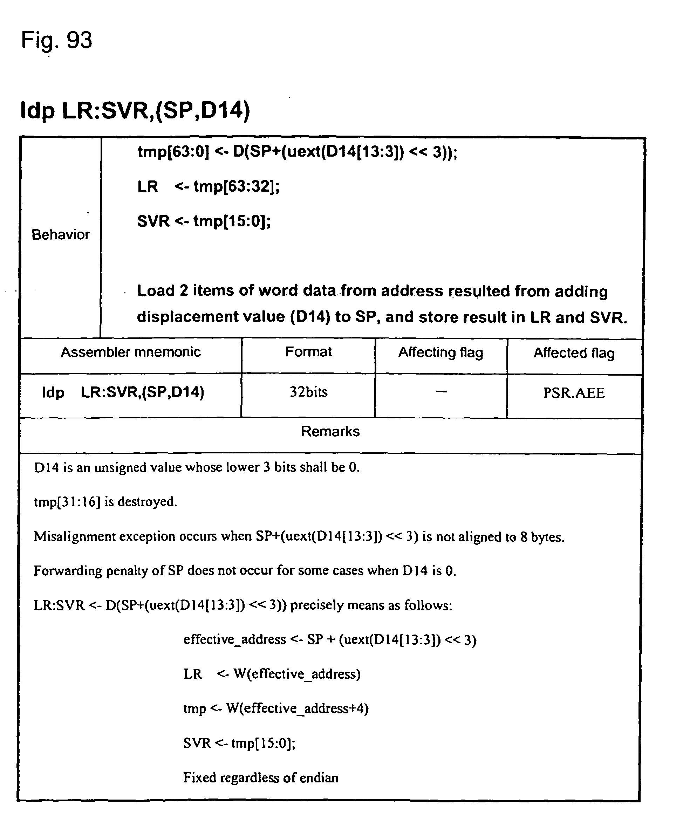

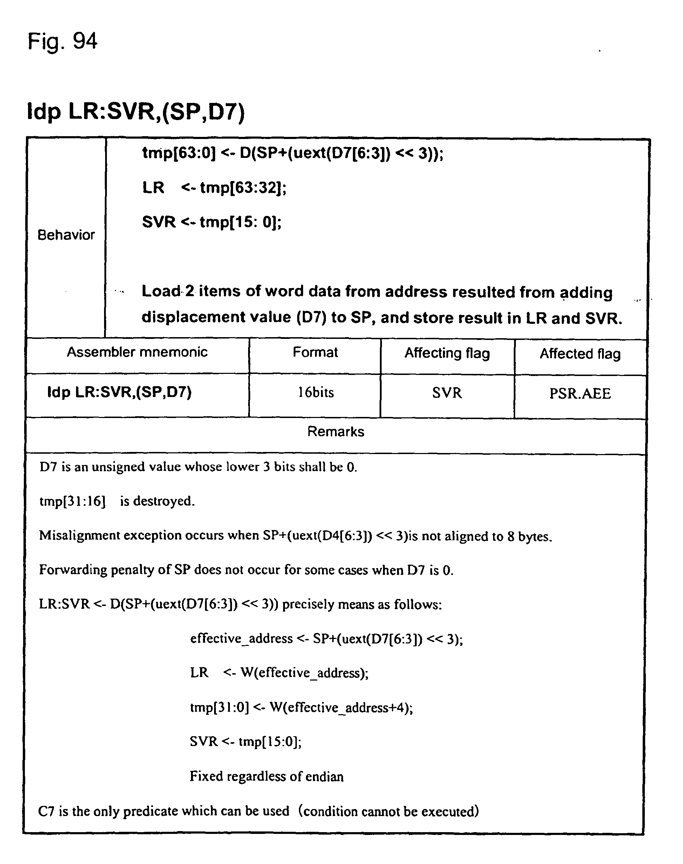

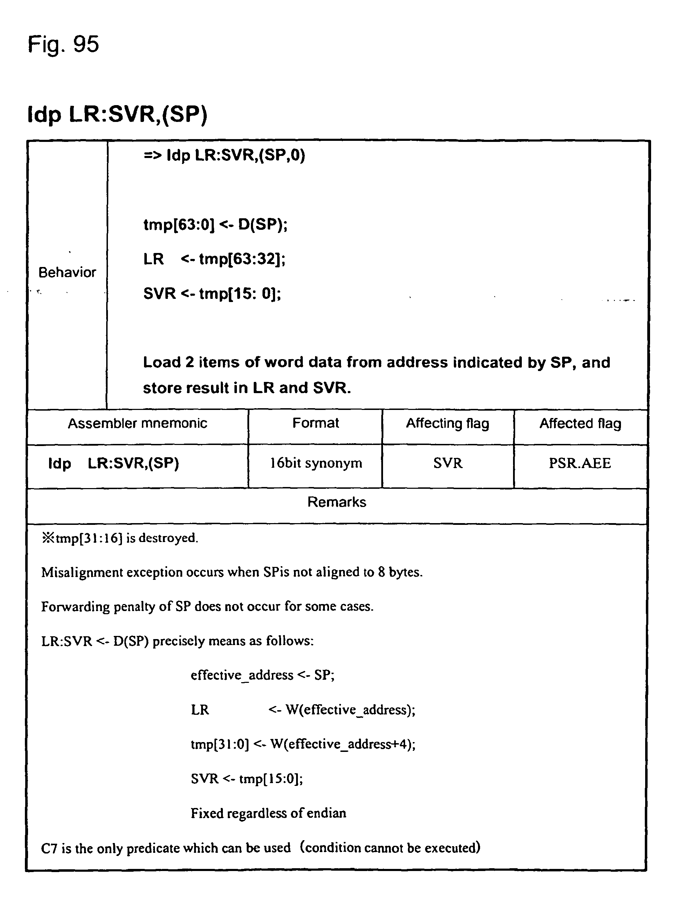

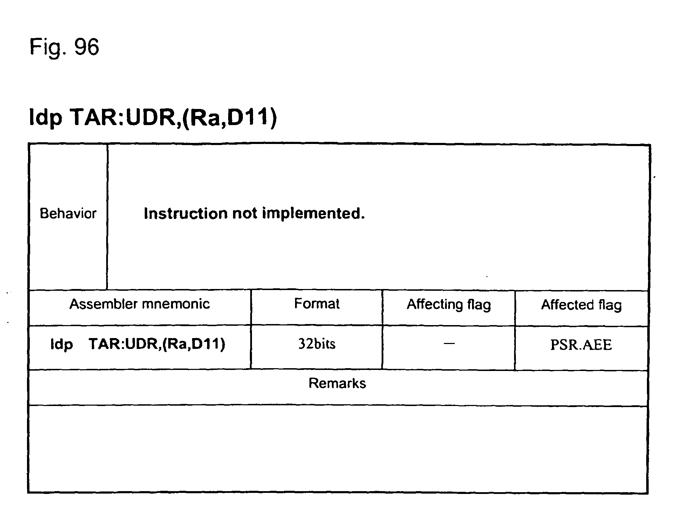

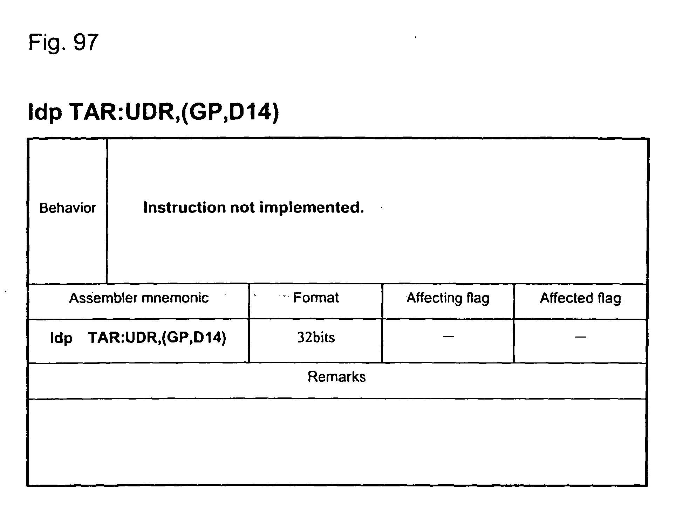

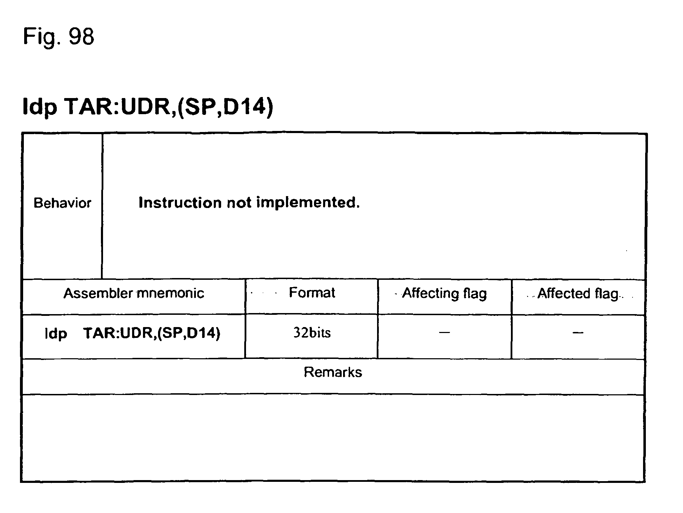

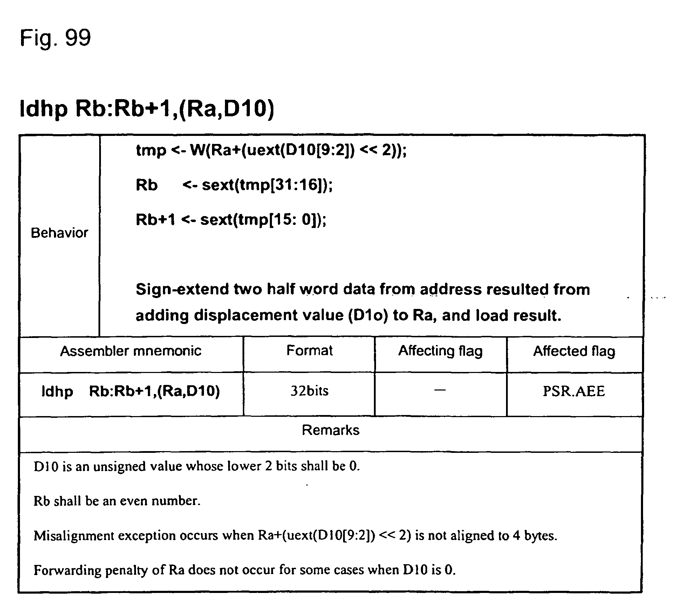

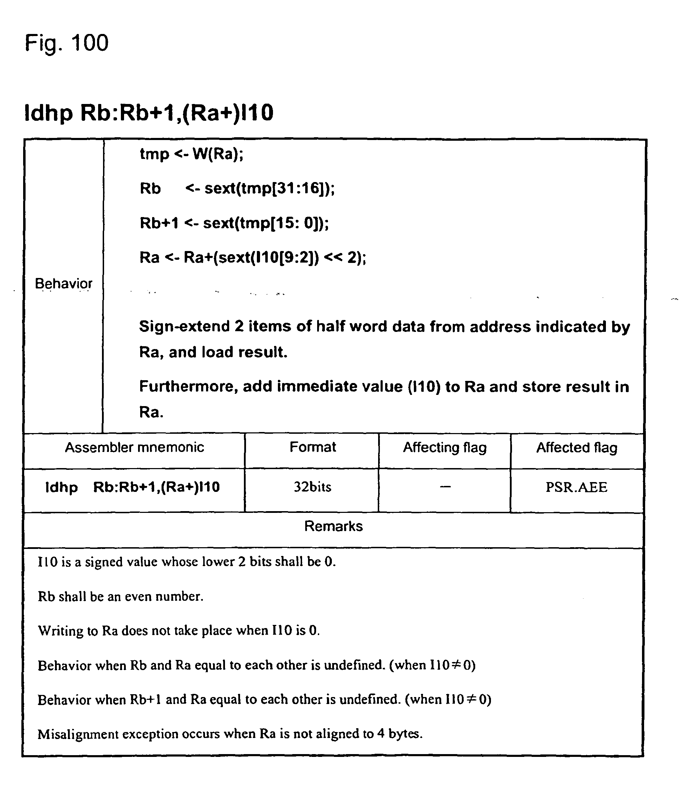

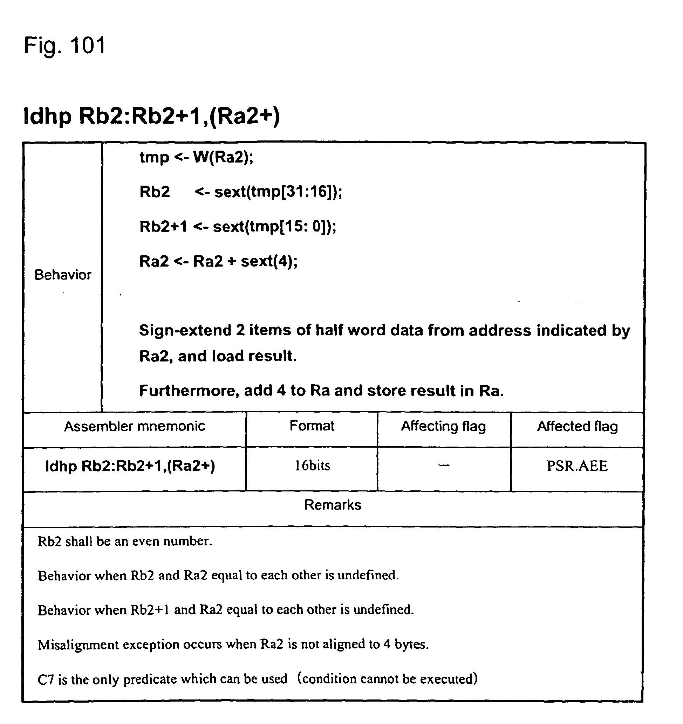

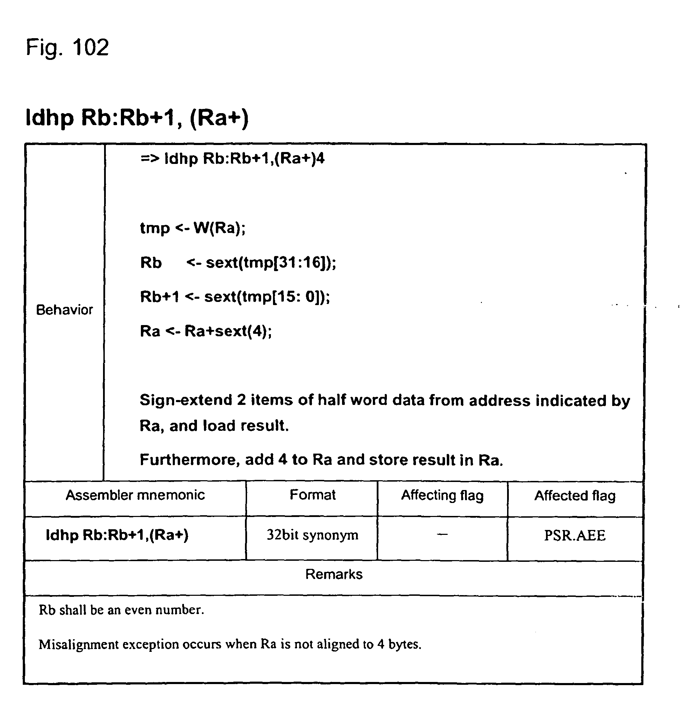

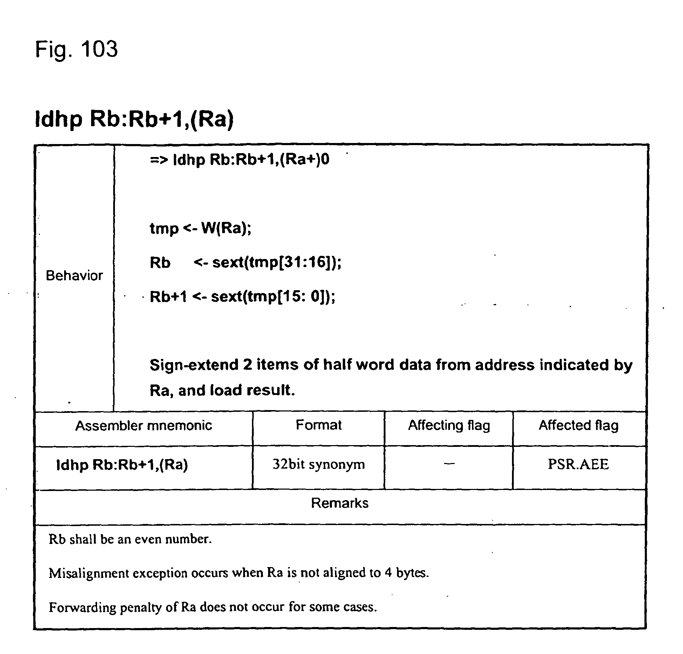

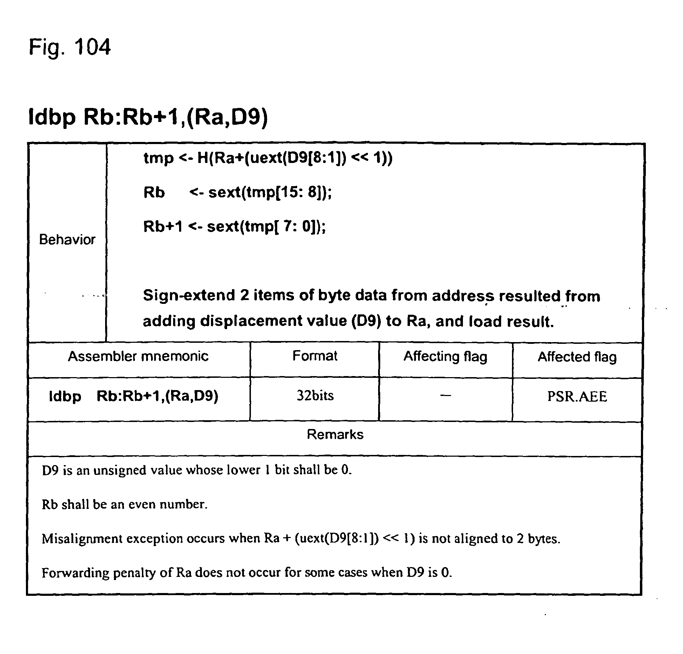

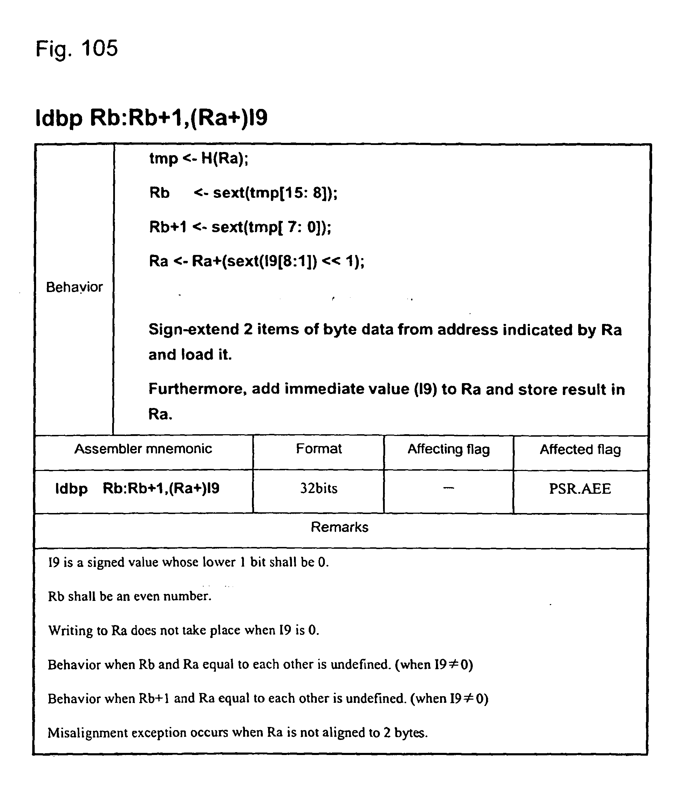

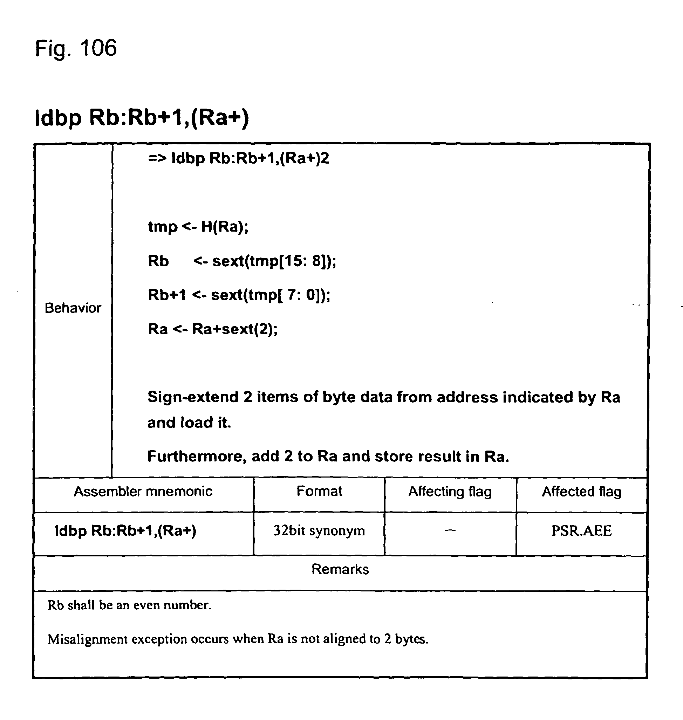

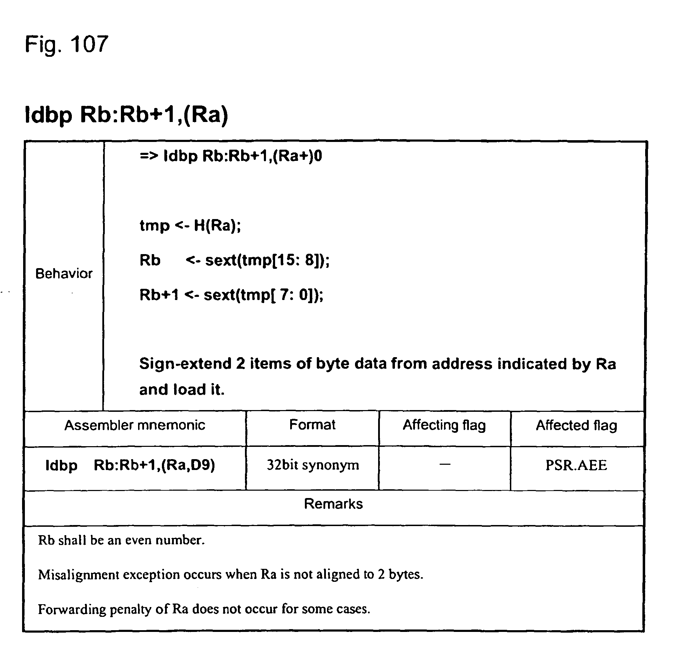

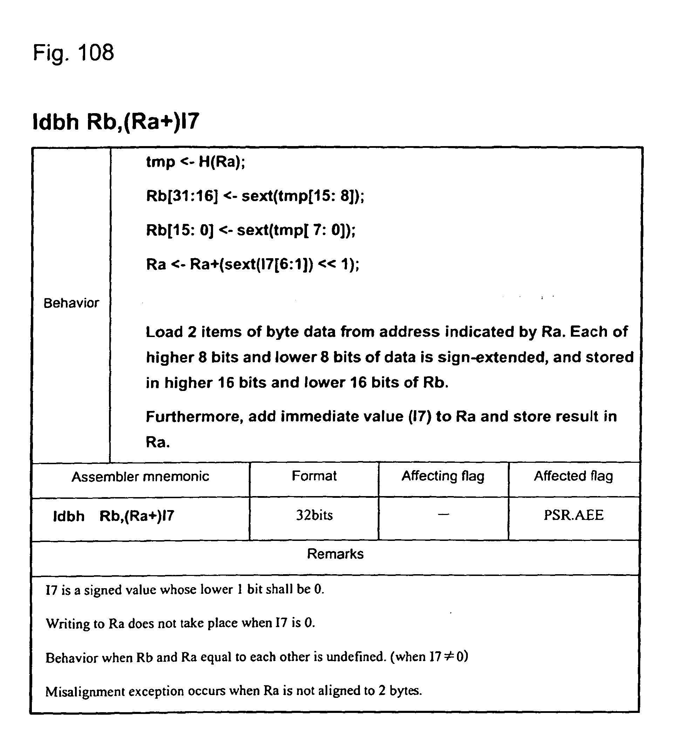

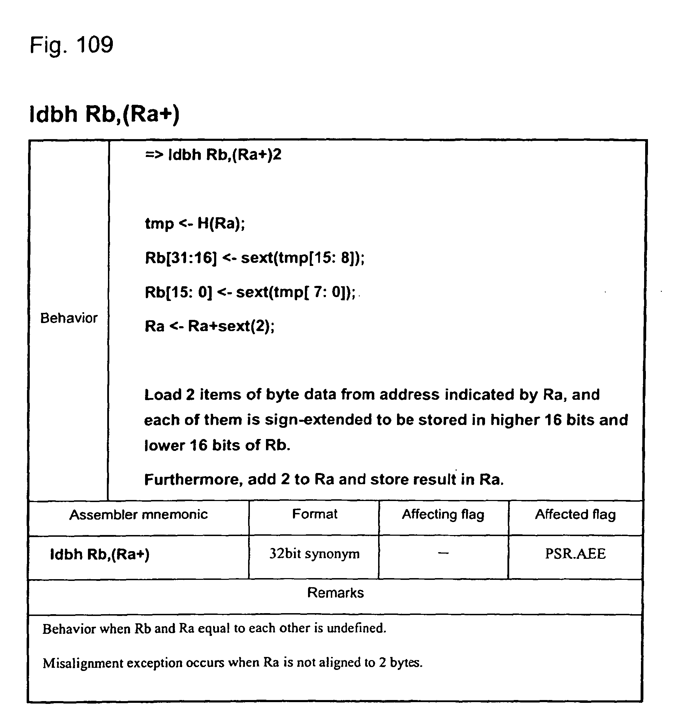

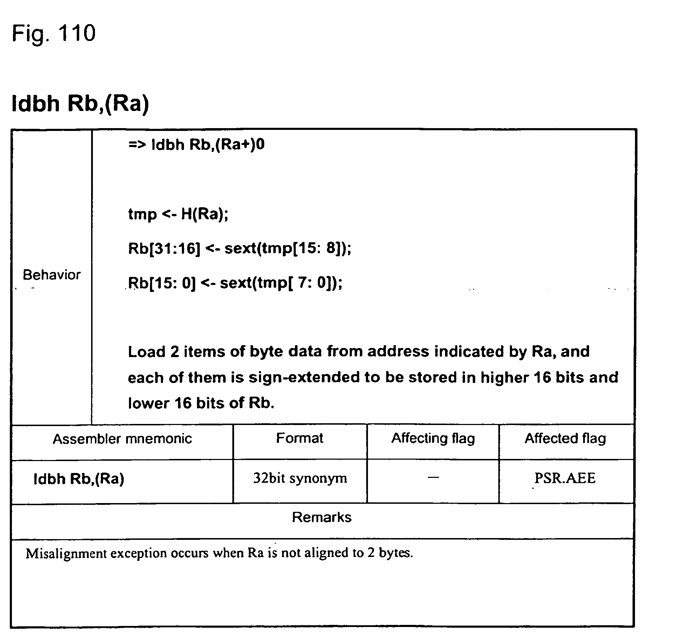

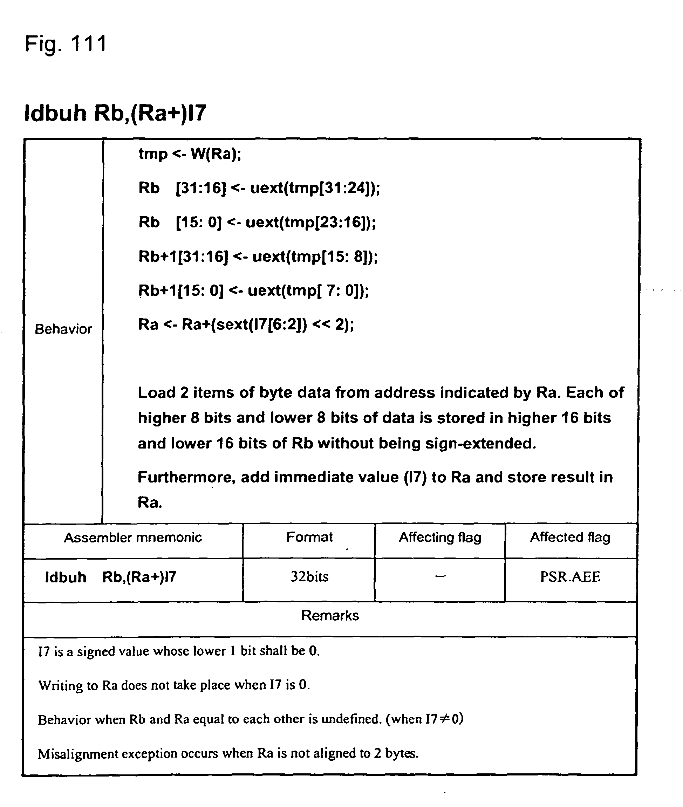

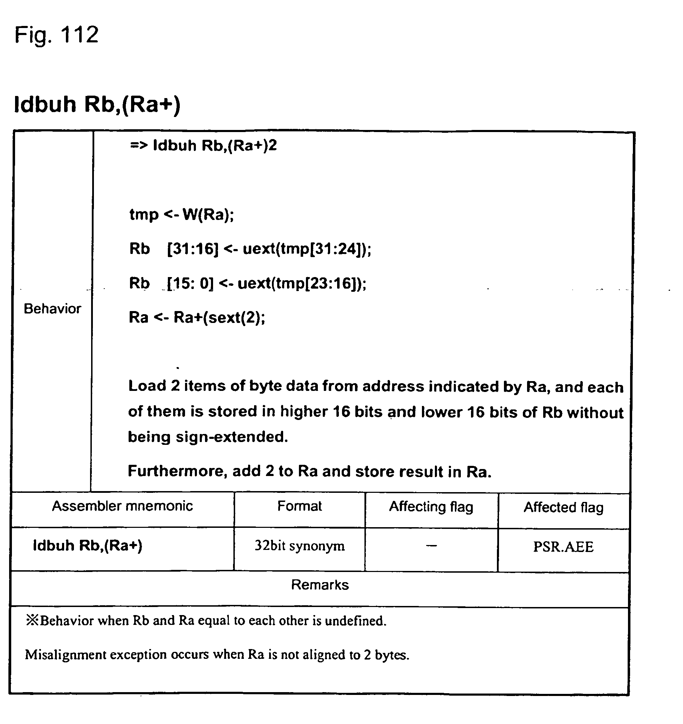

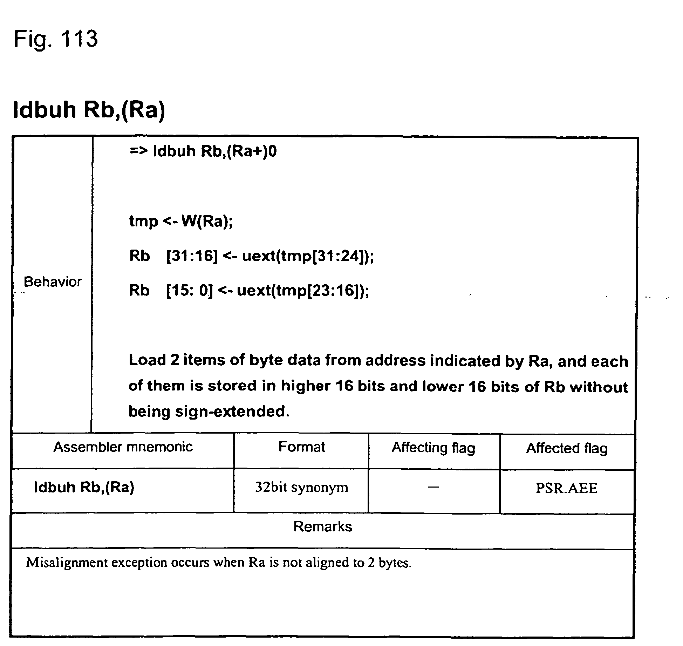

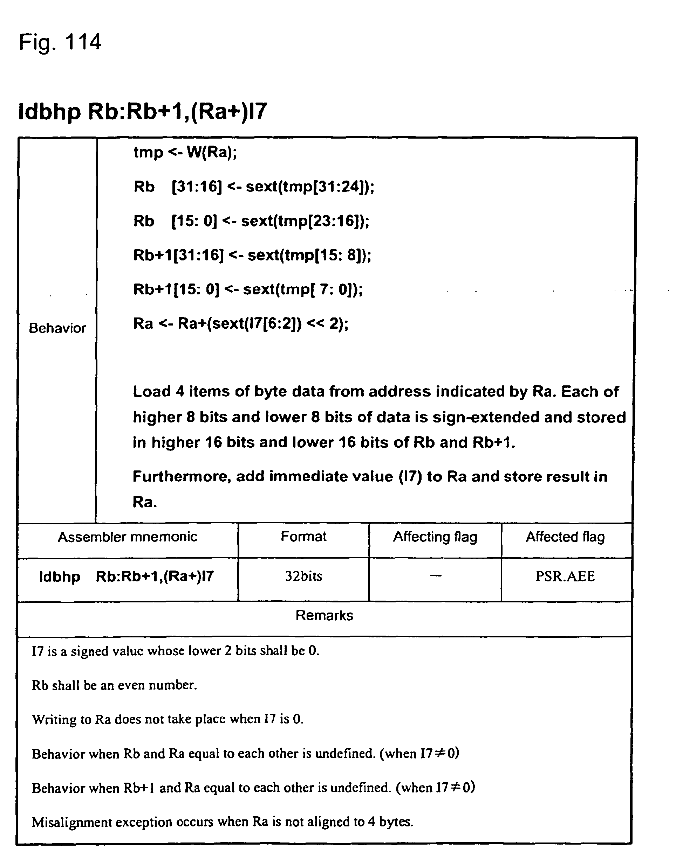

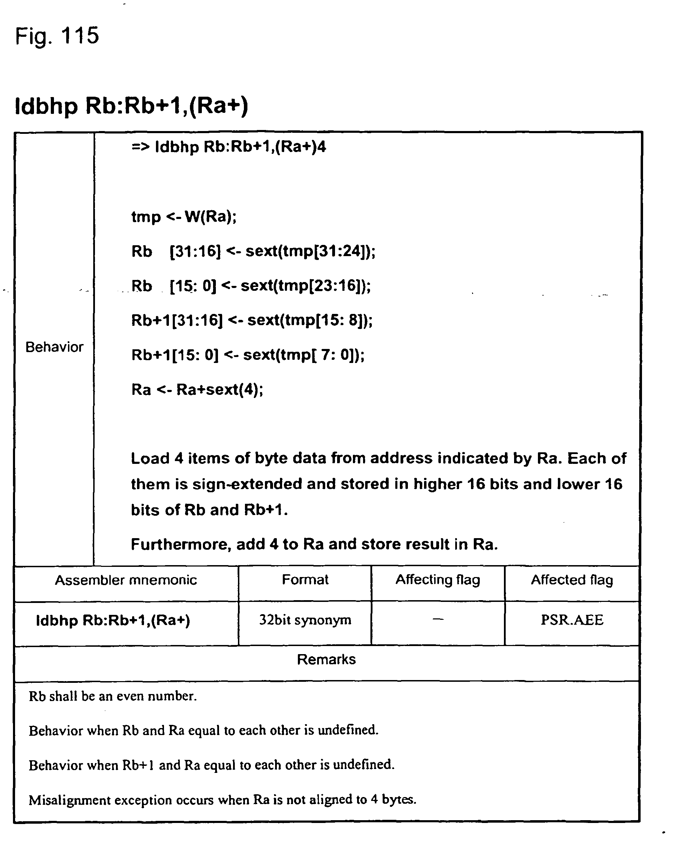

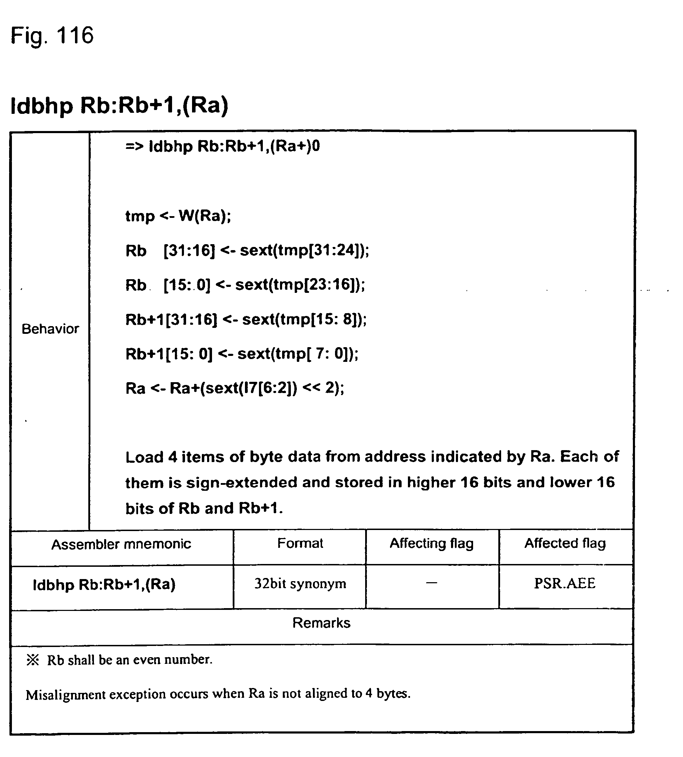

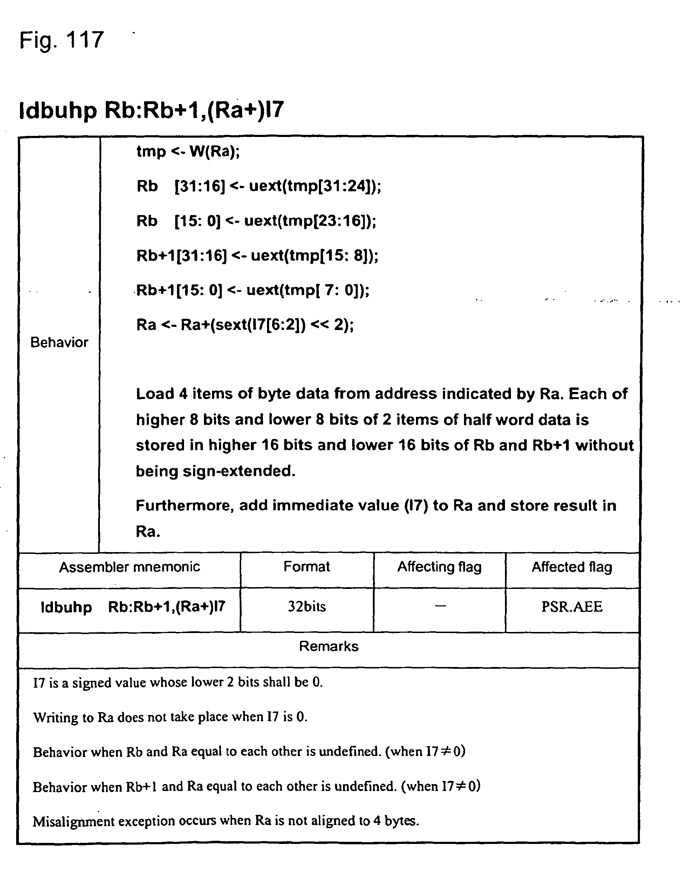

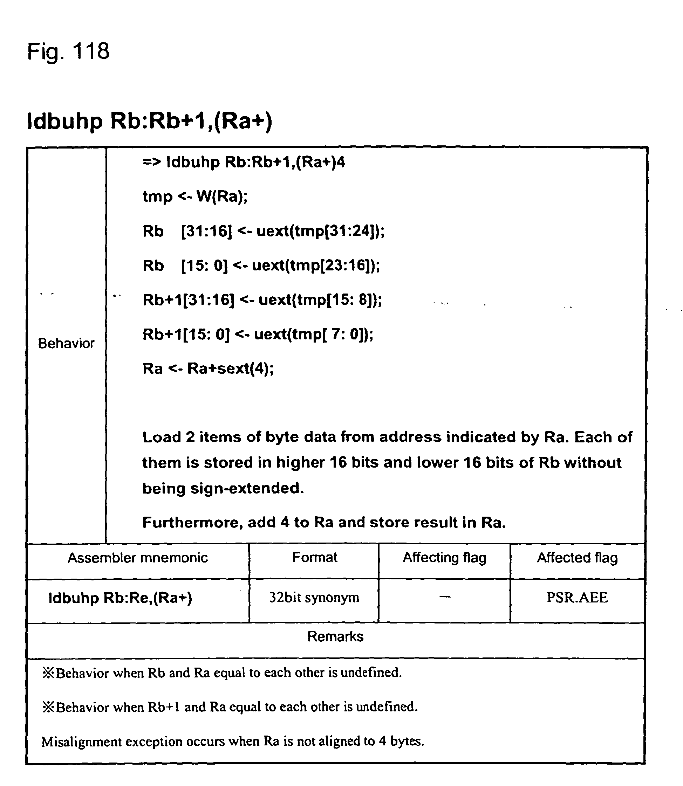

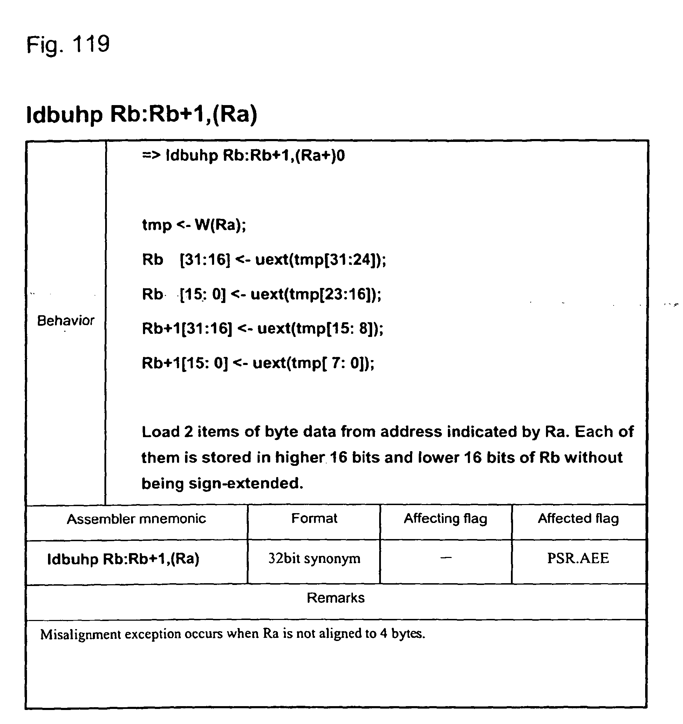

Figs.37~ 119 are diagrams explaining instructions relating to "load".

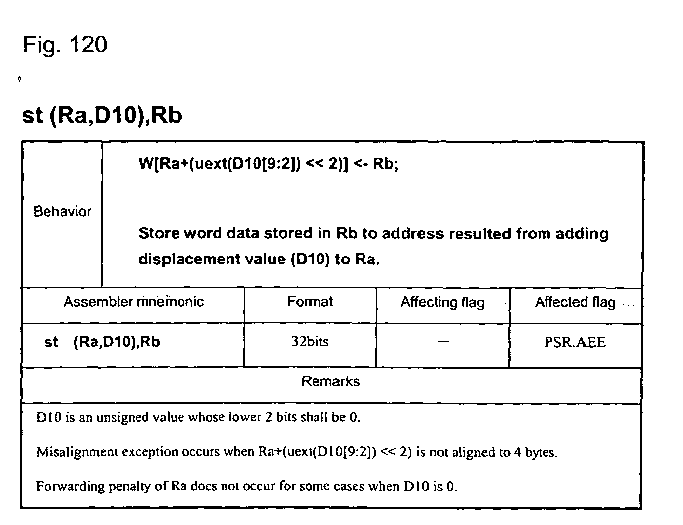

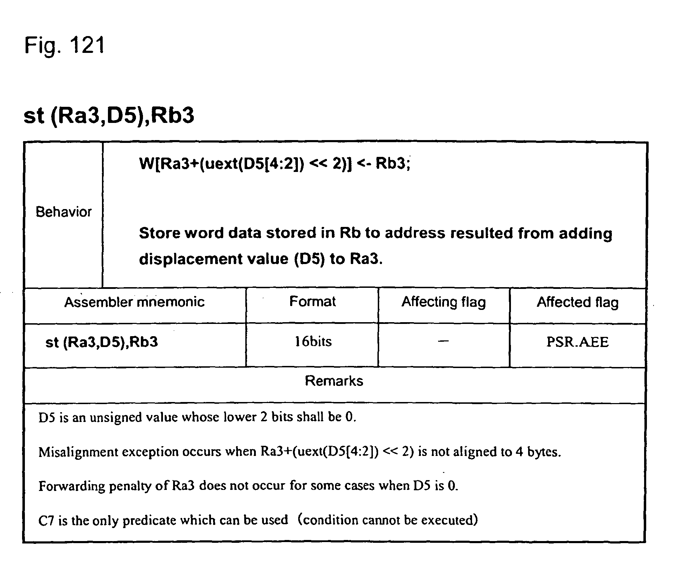

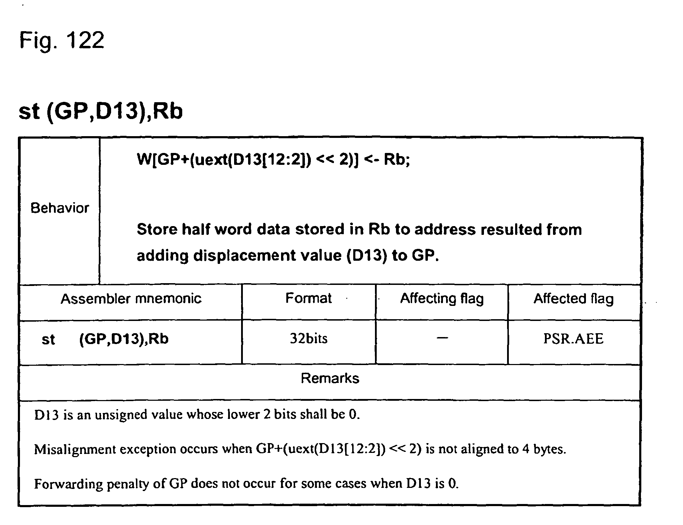

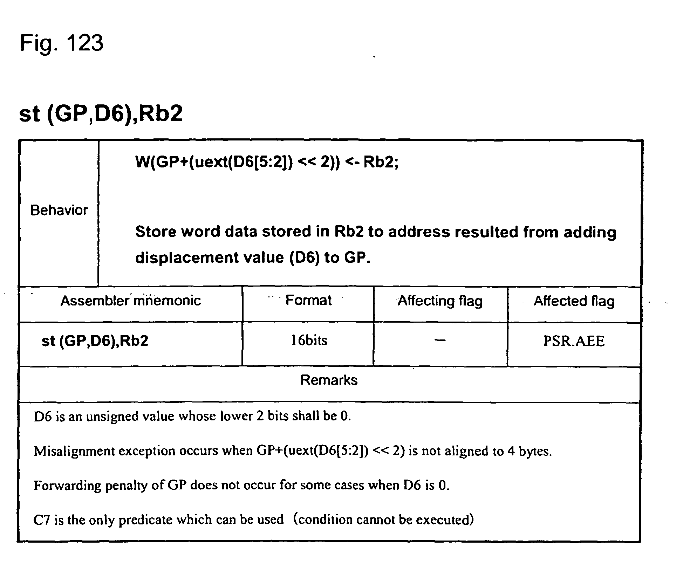

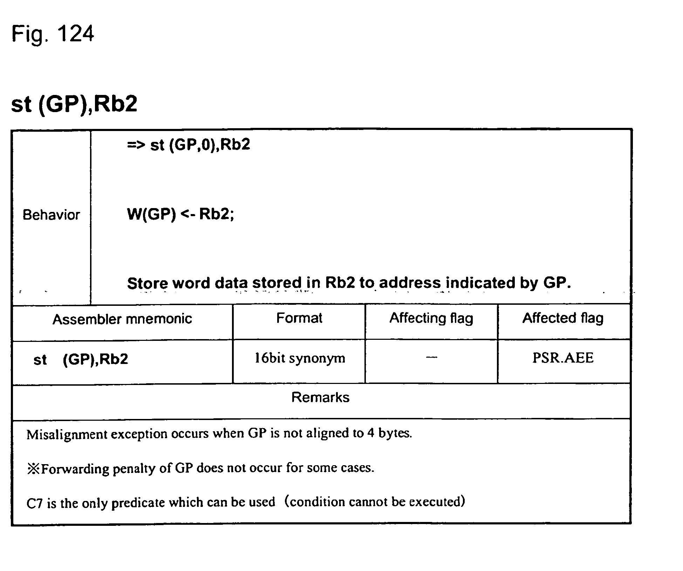

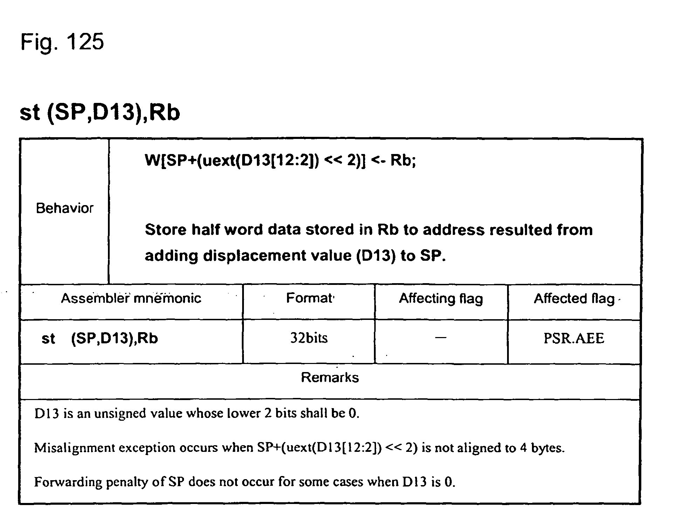

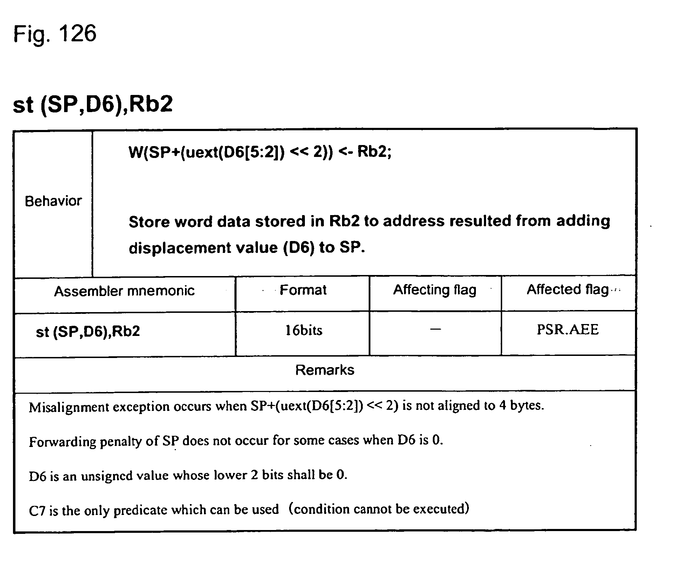

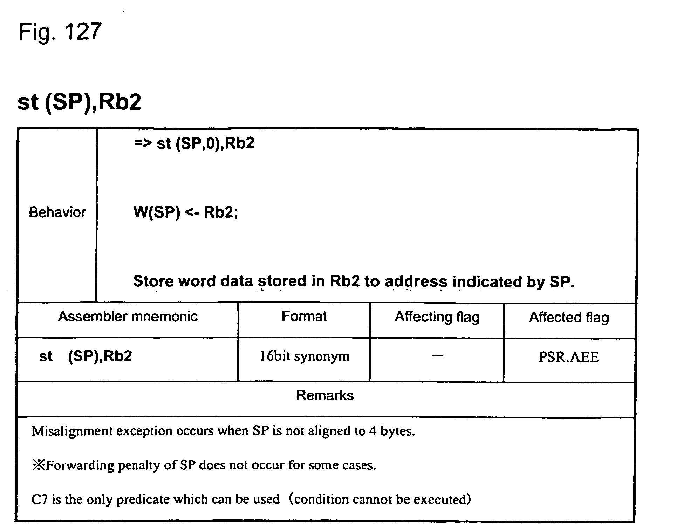

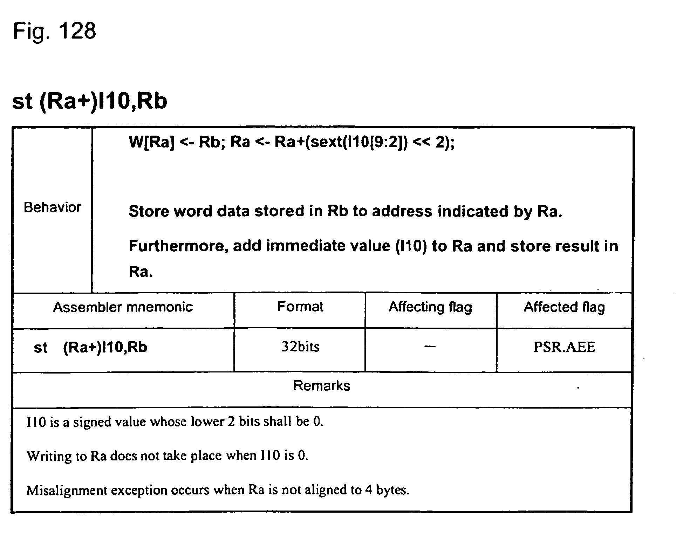

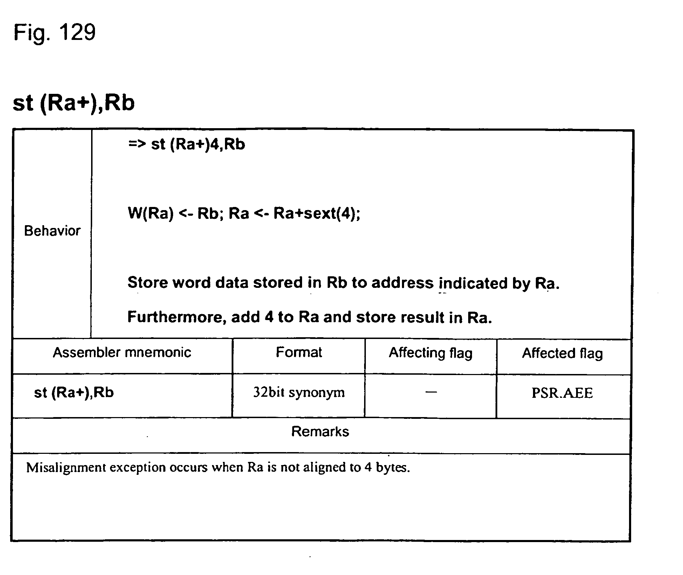

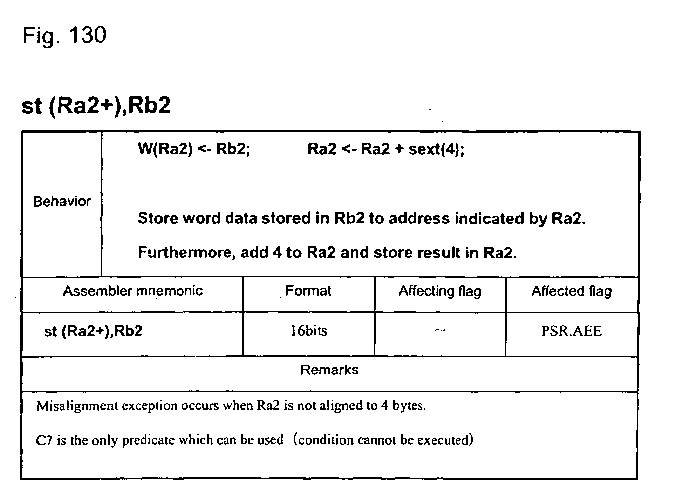

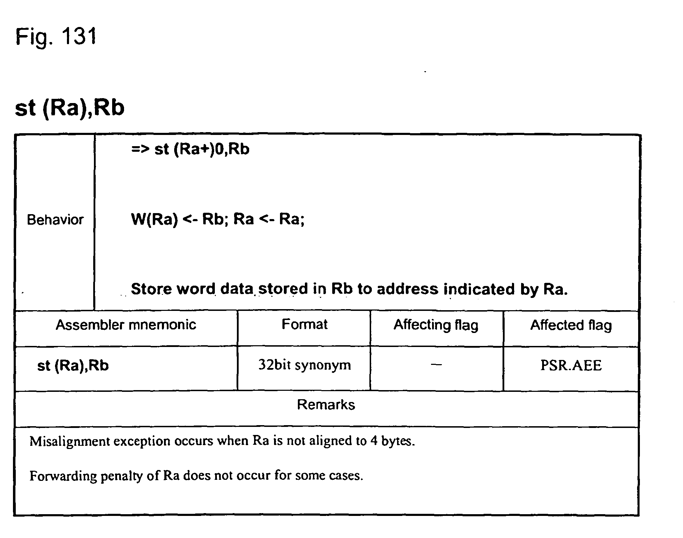

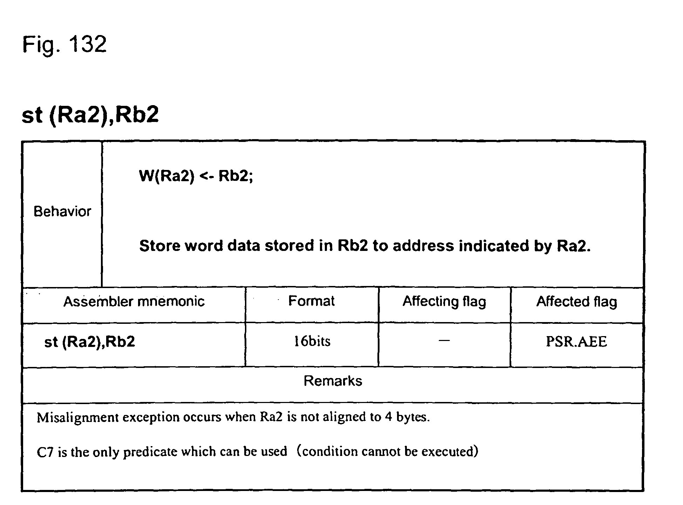

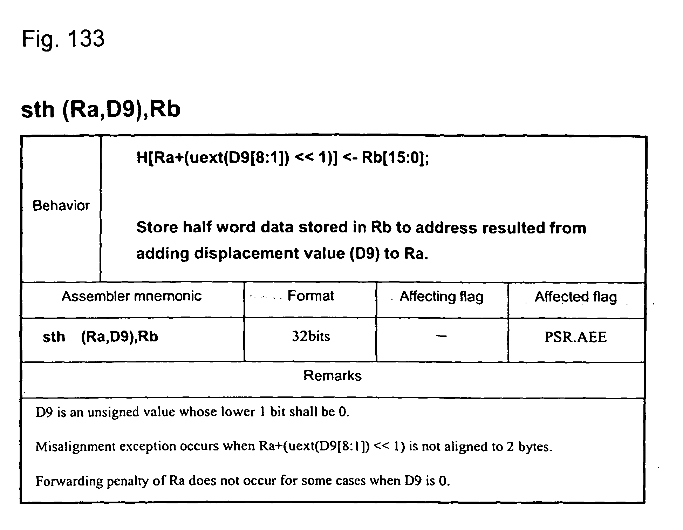

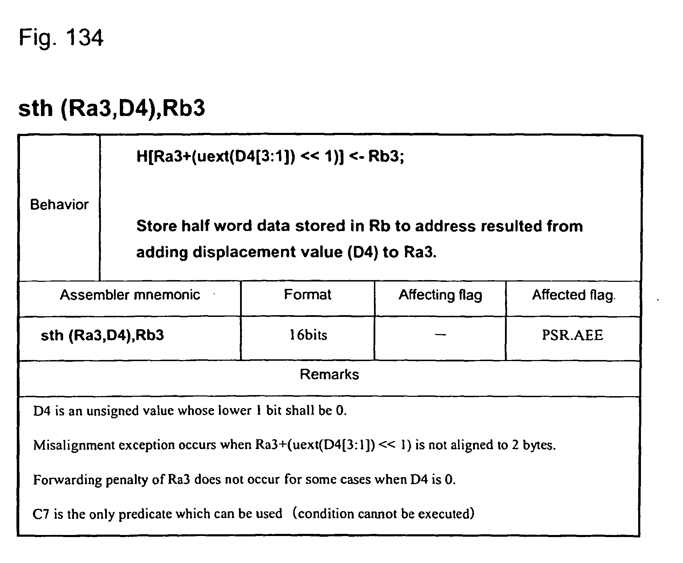

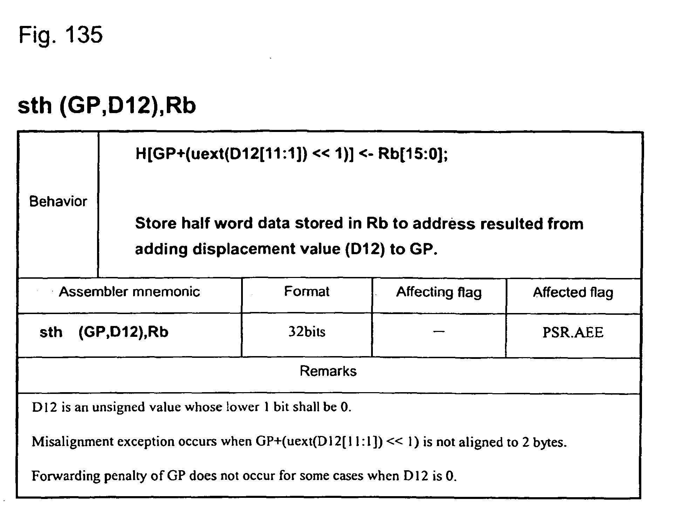

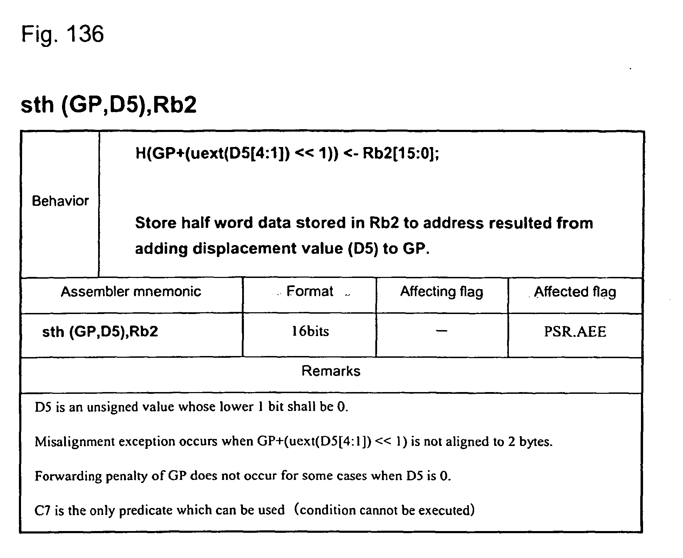

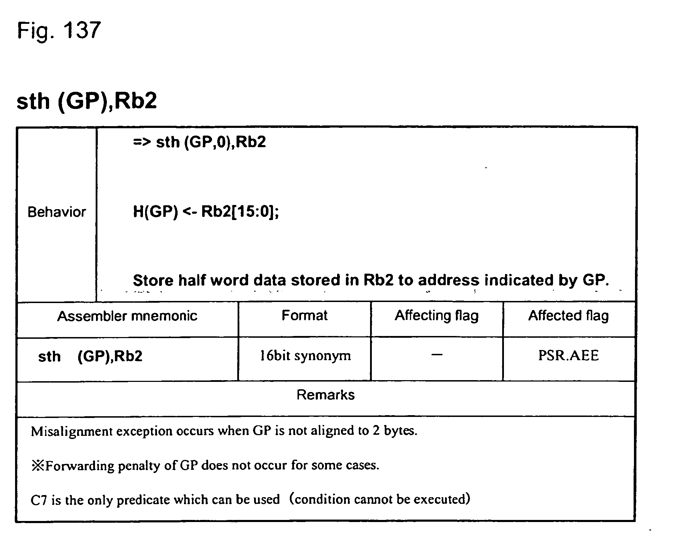

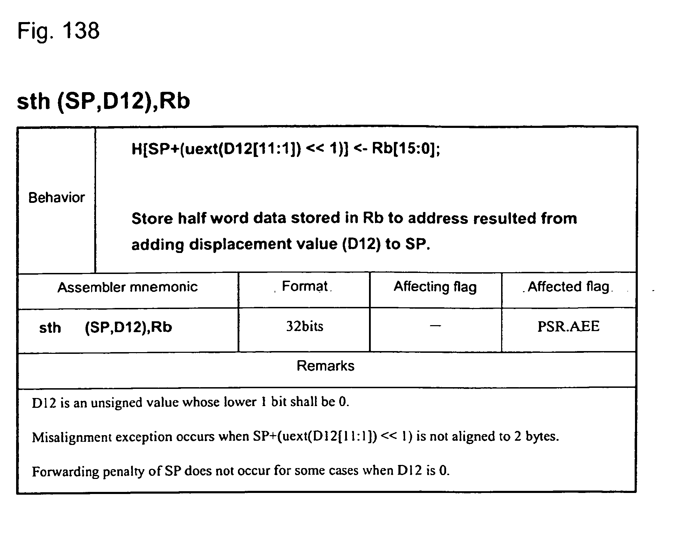

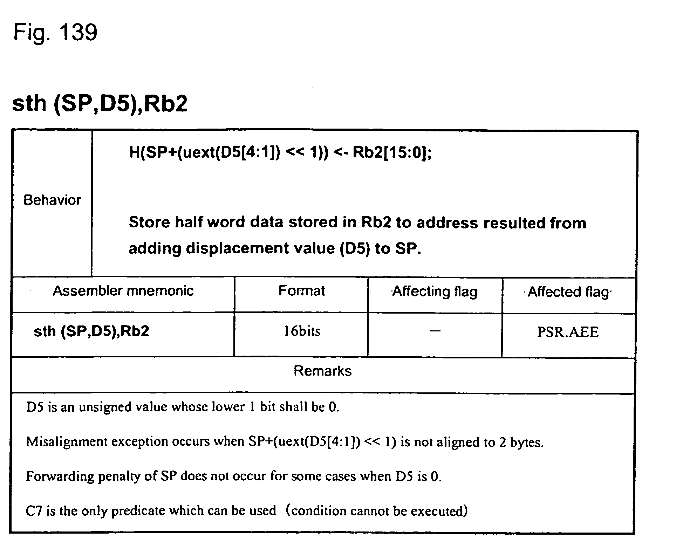

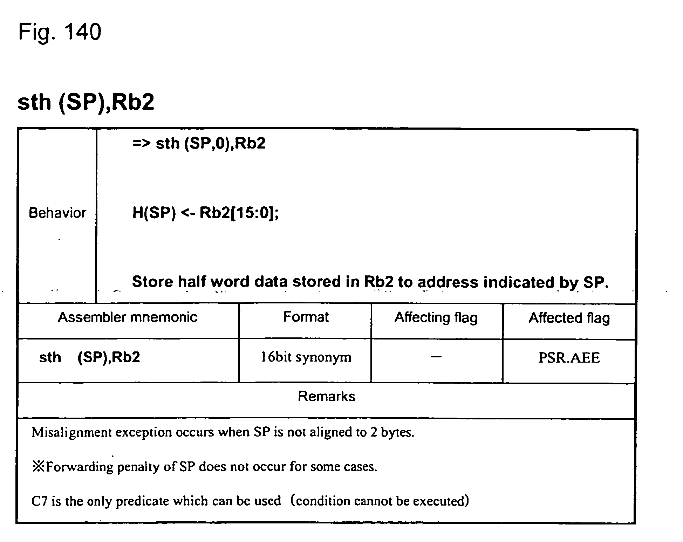

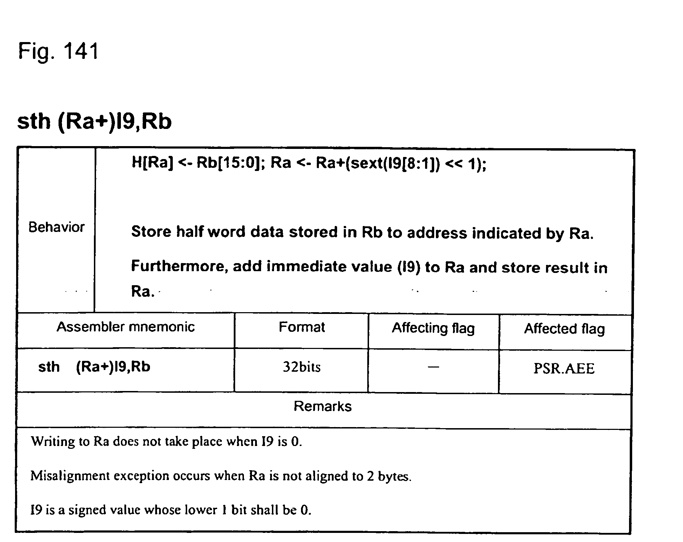

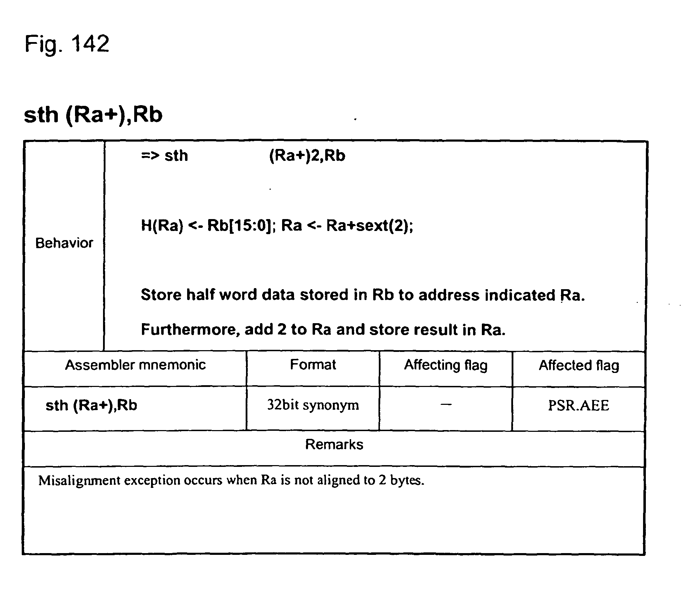

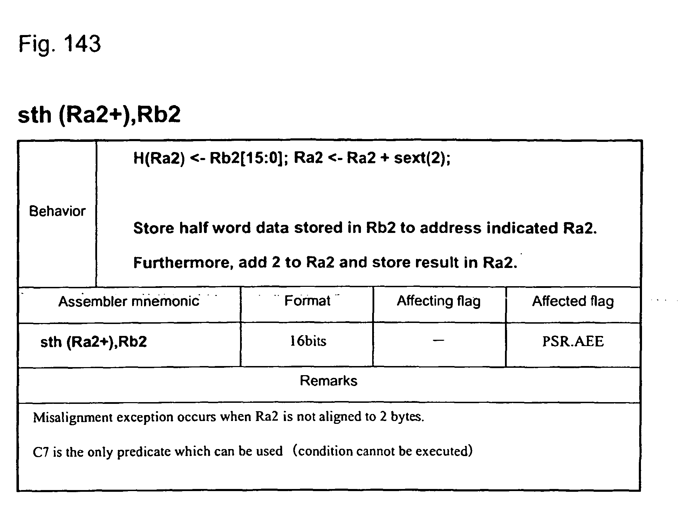

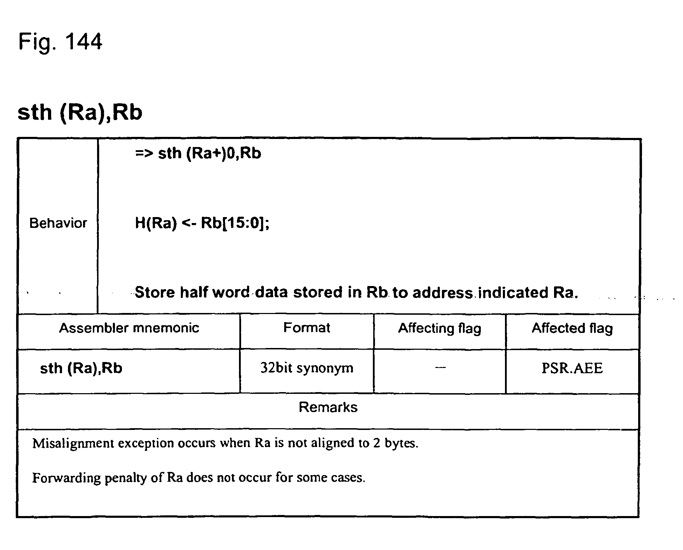

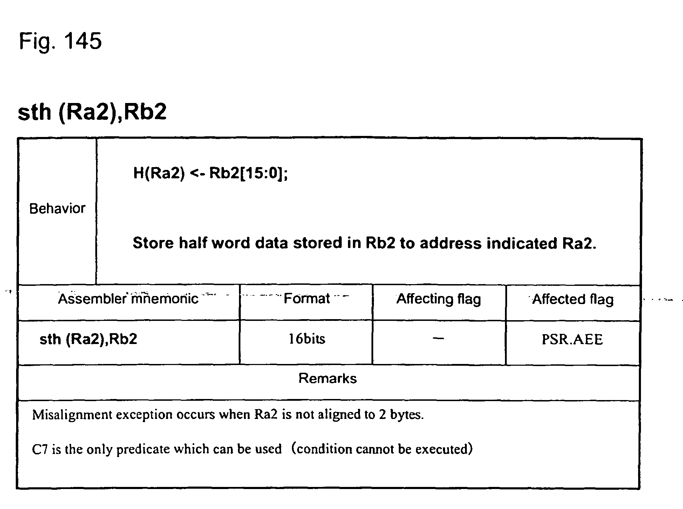

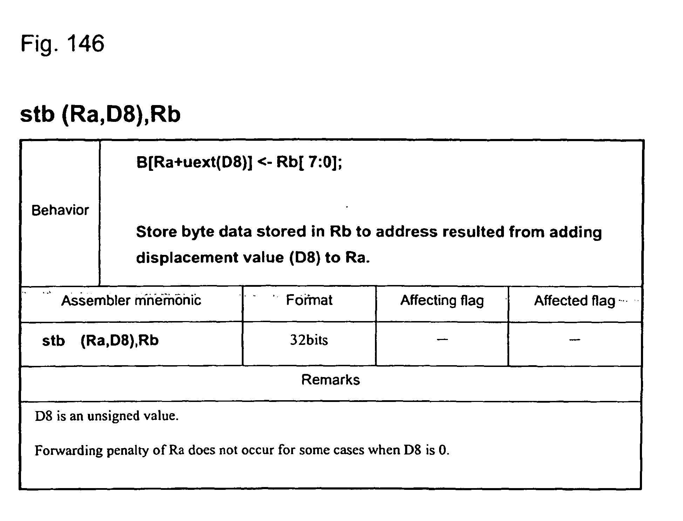

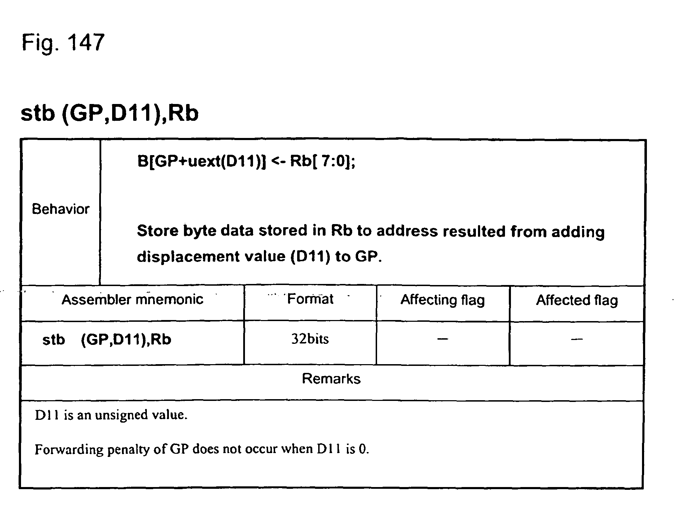

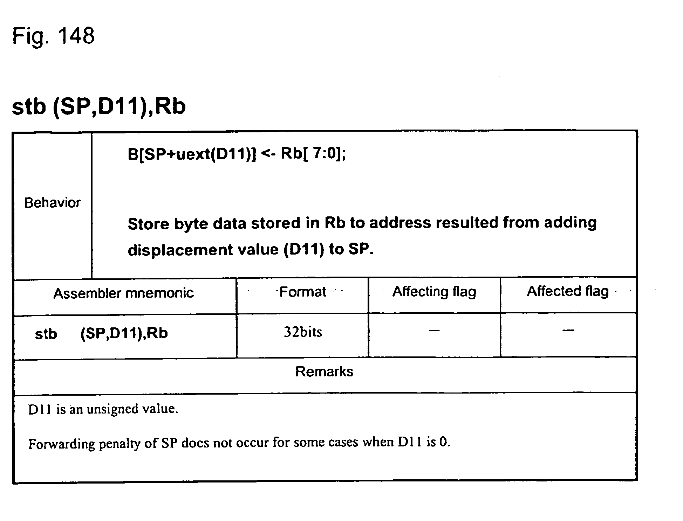

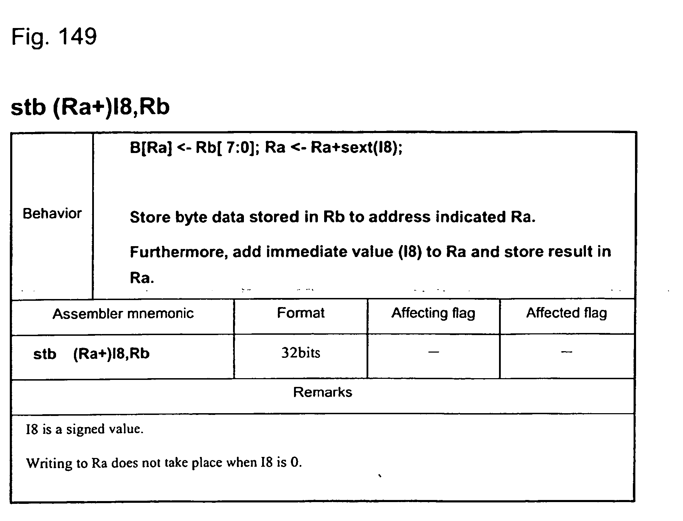

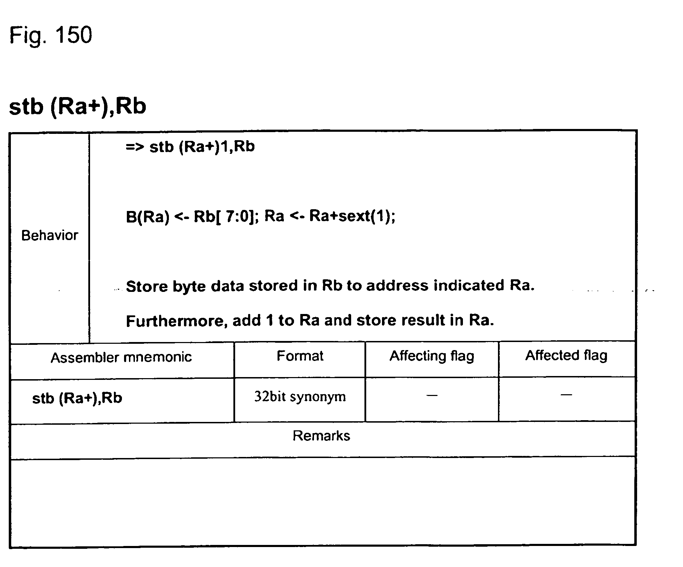

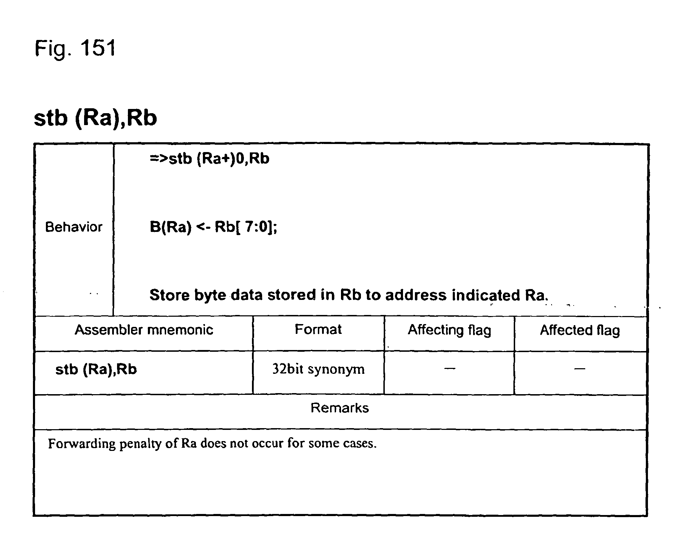

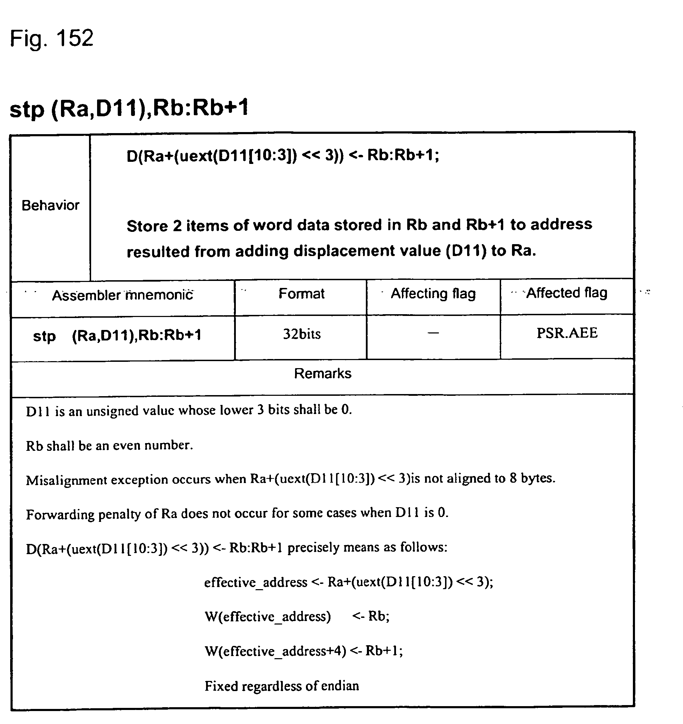

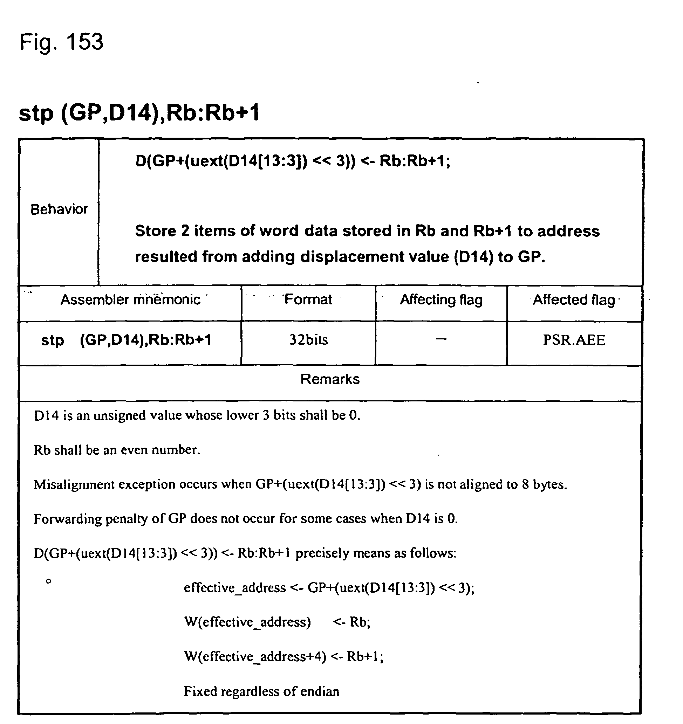

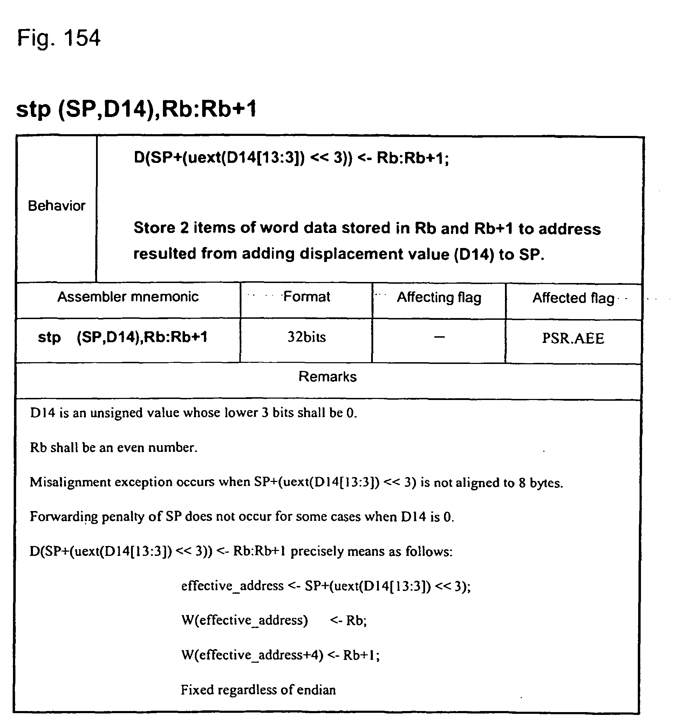

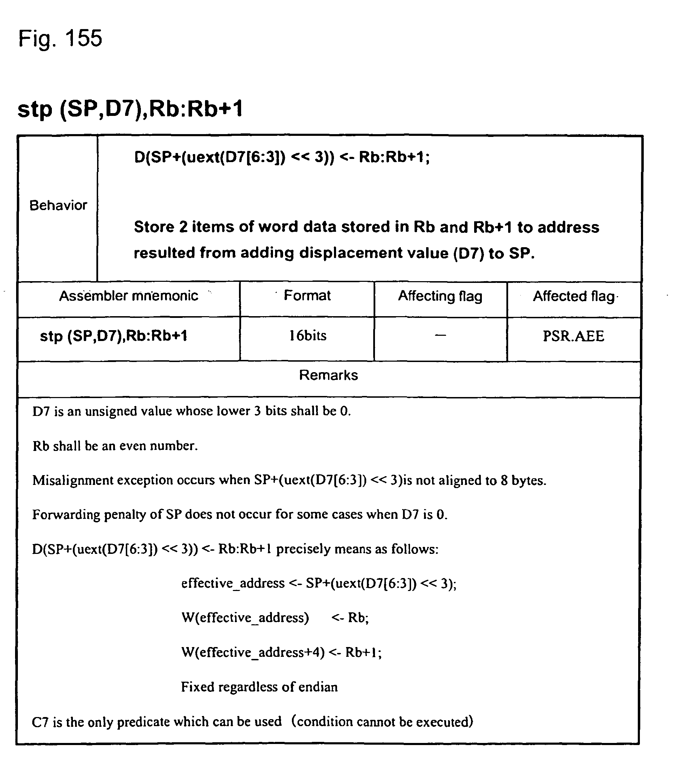

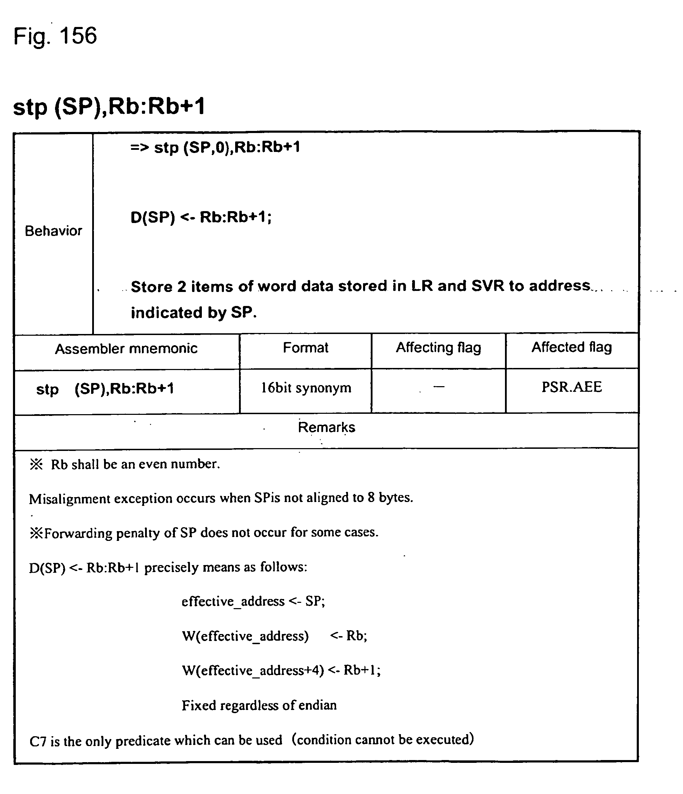

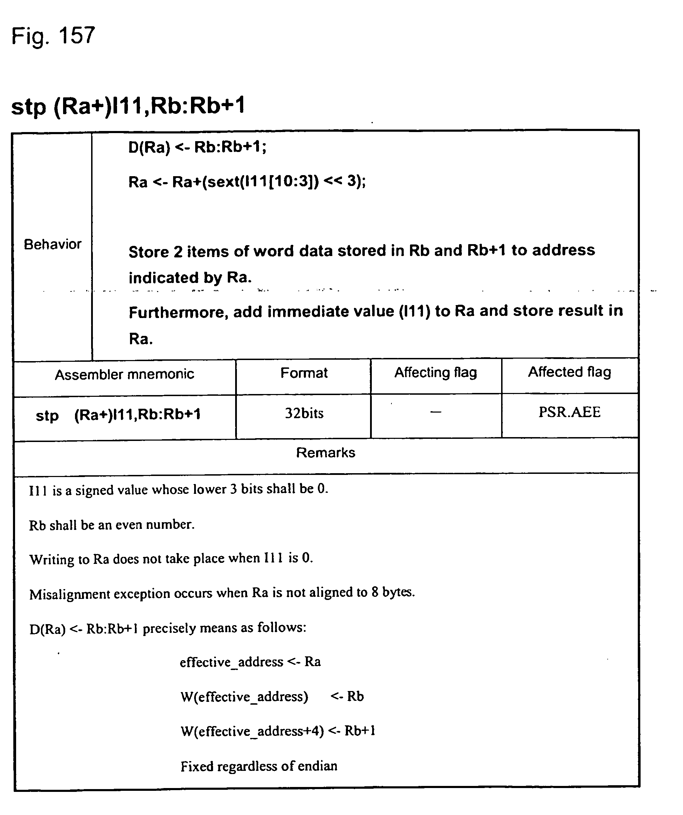

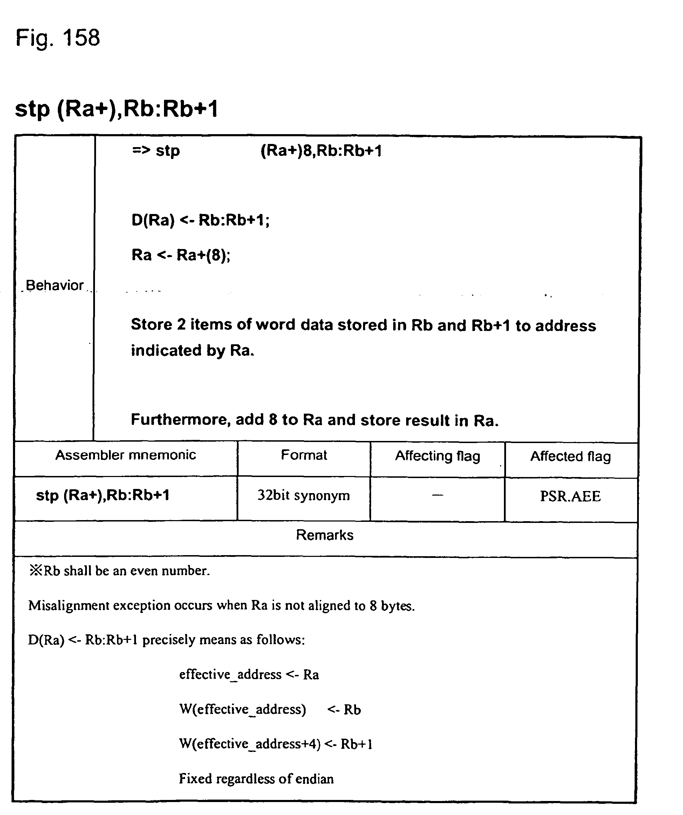

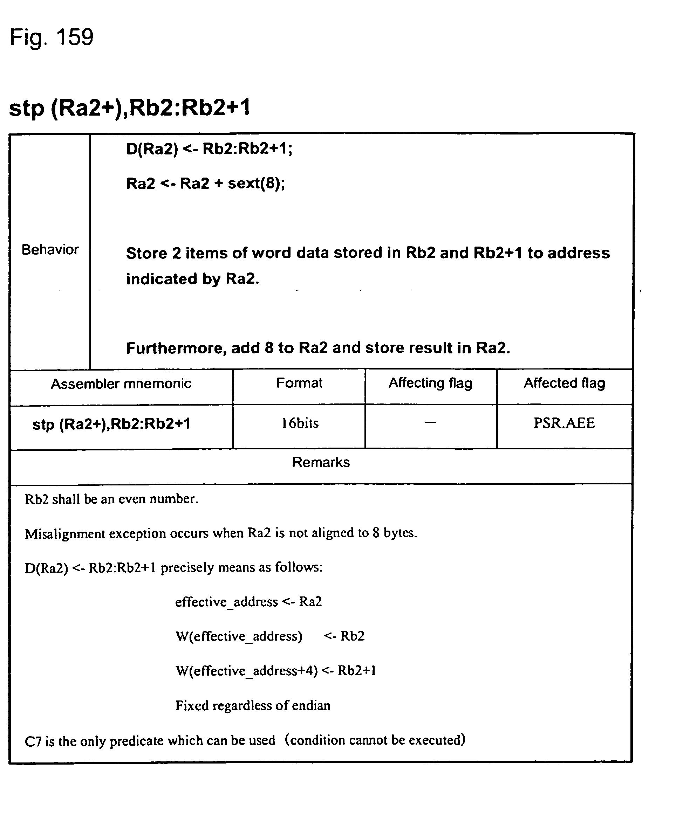

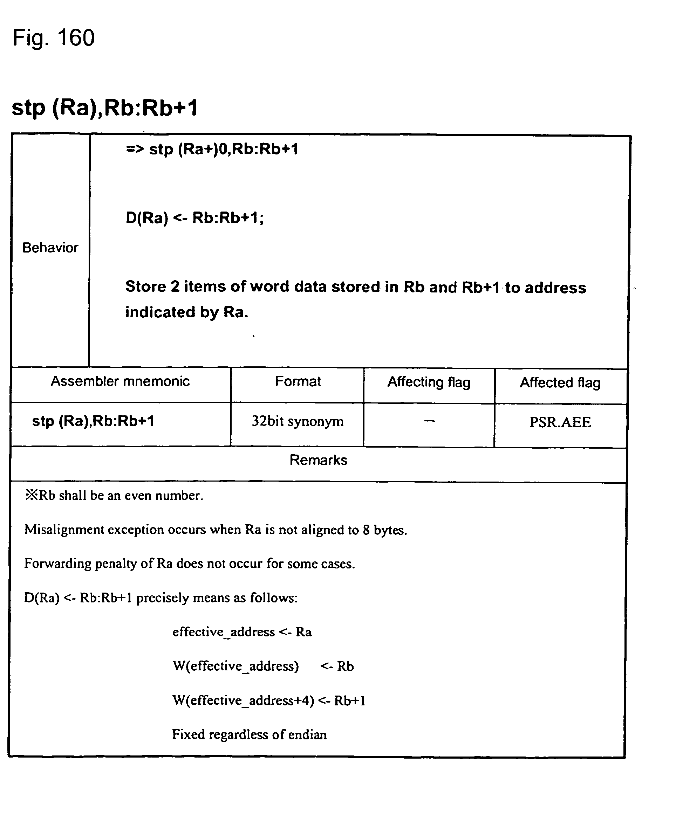

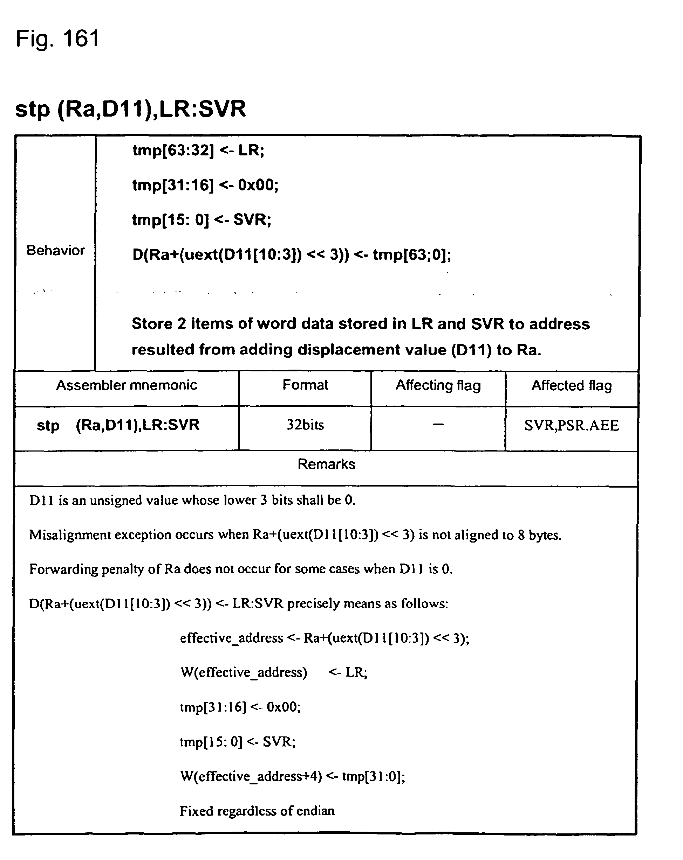

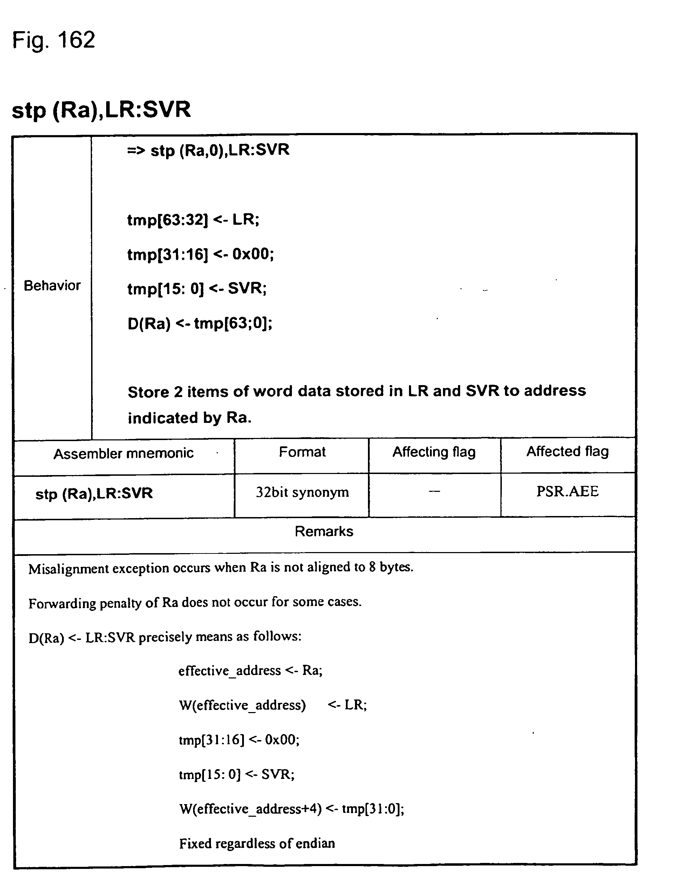

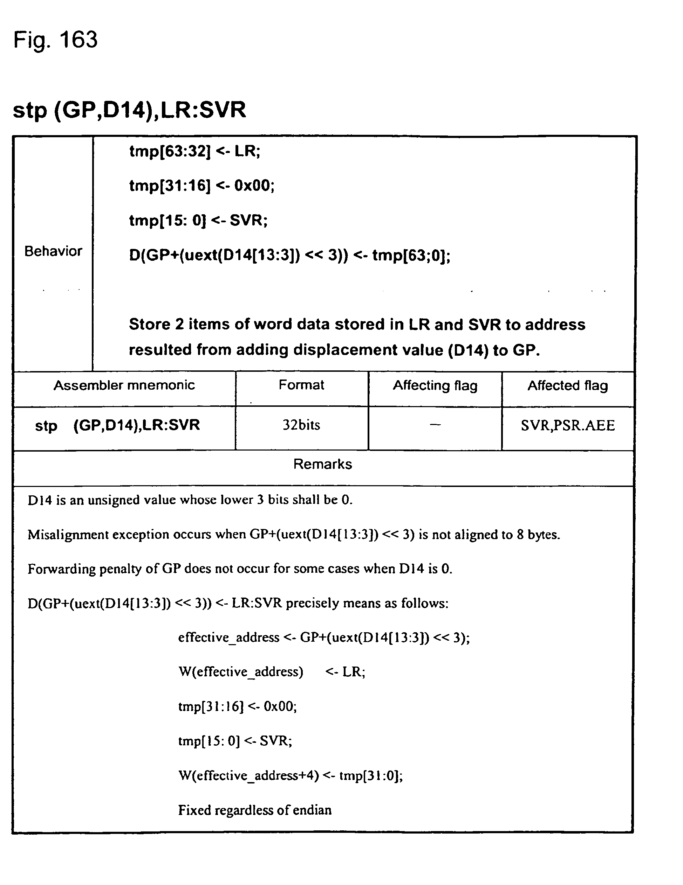

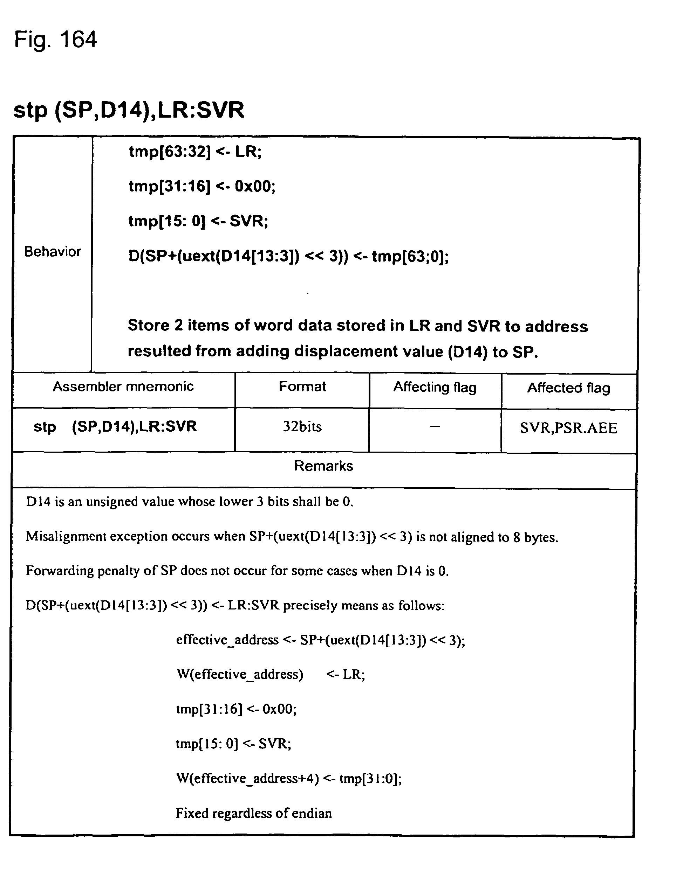

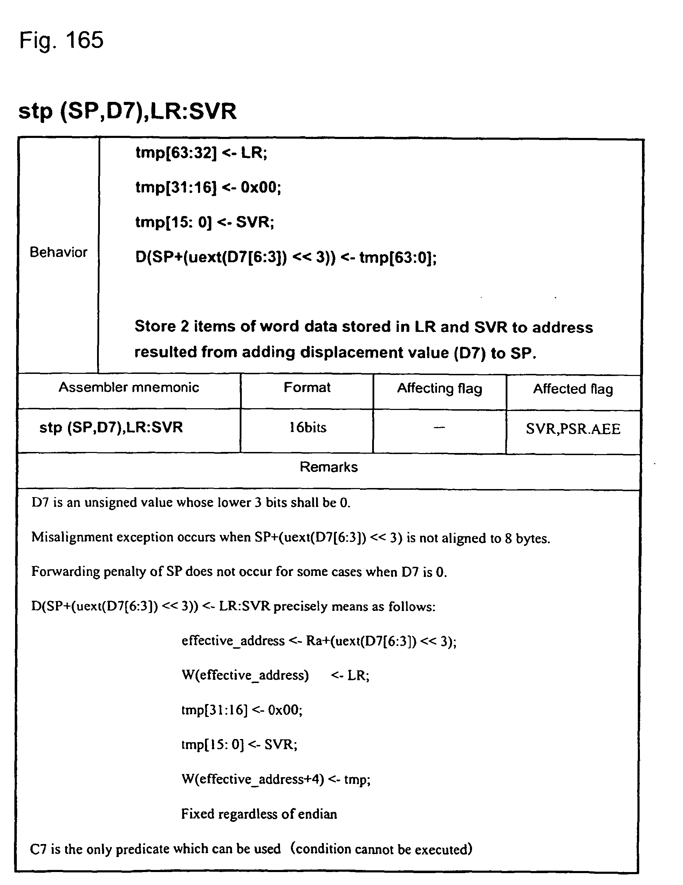

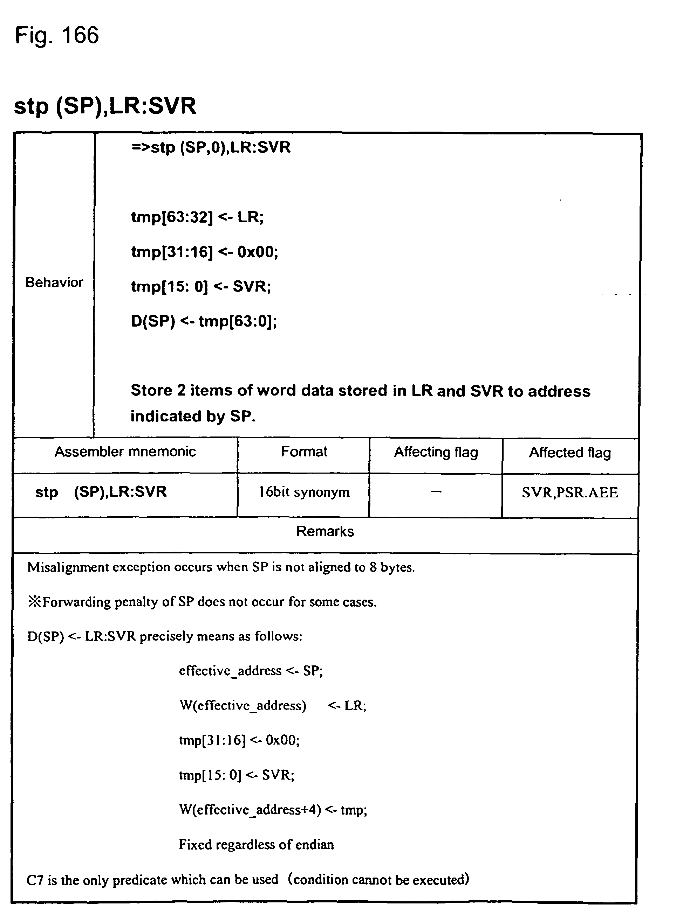

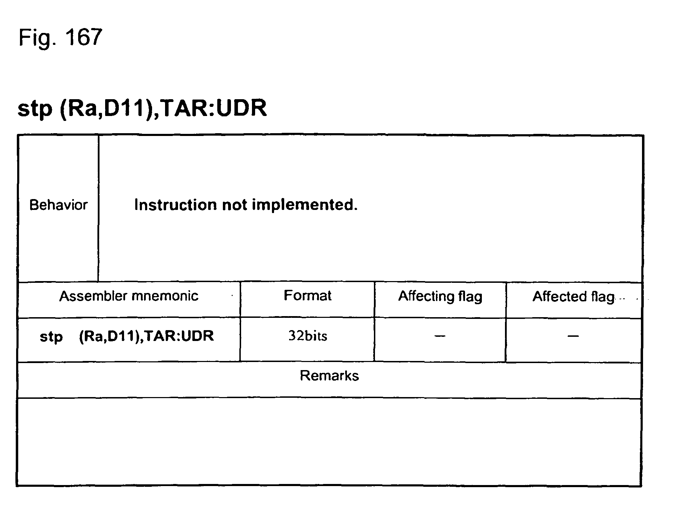

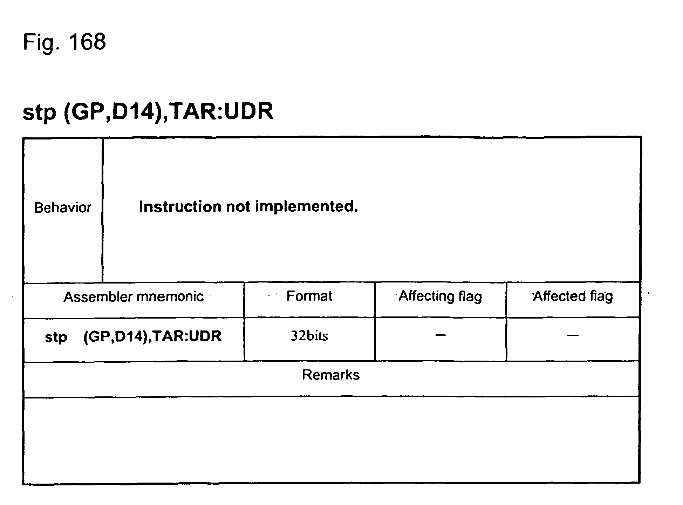

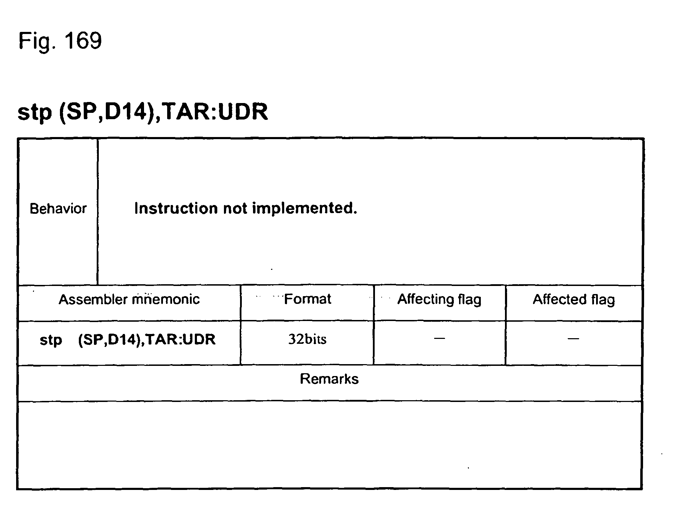

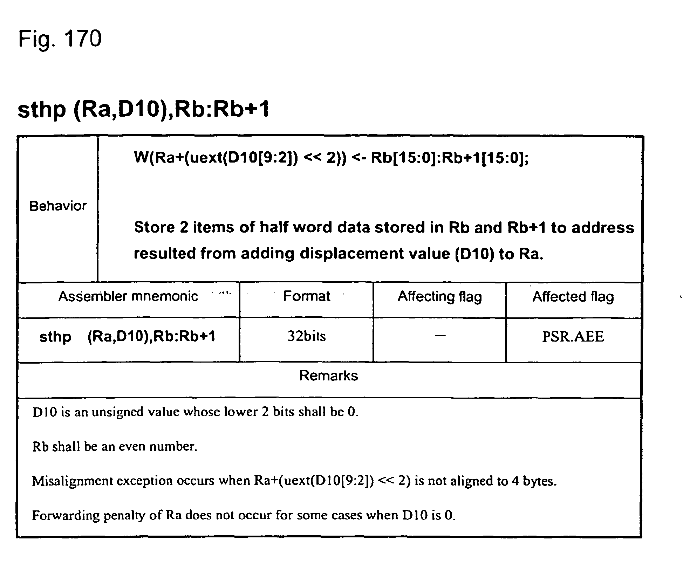

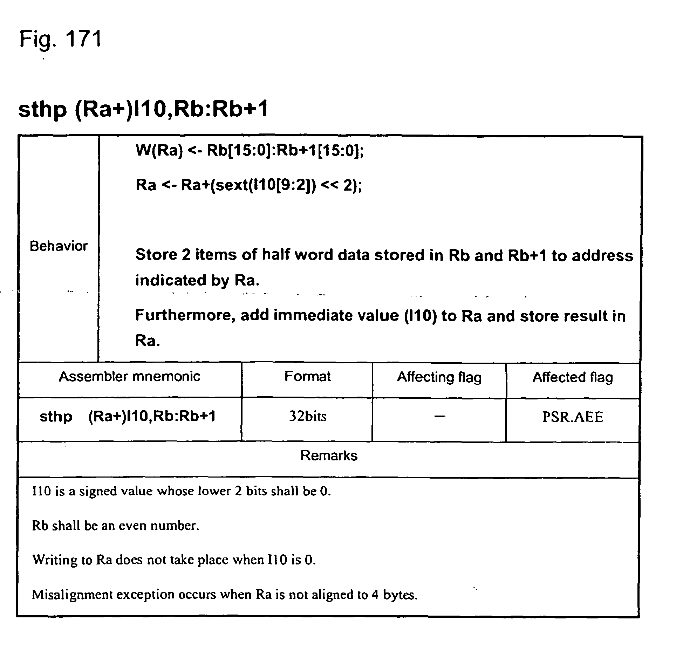

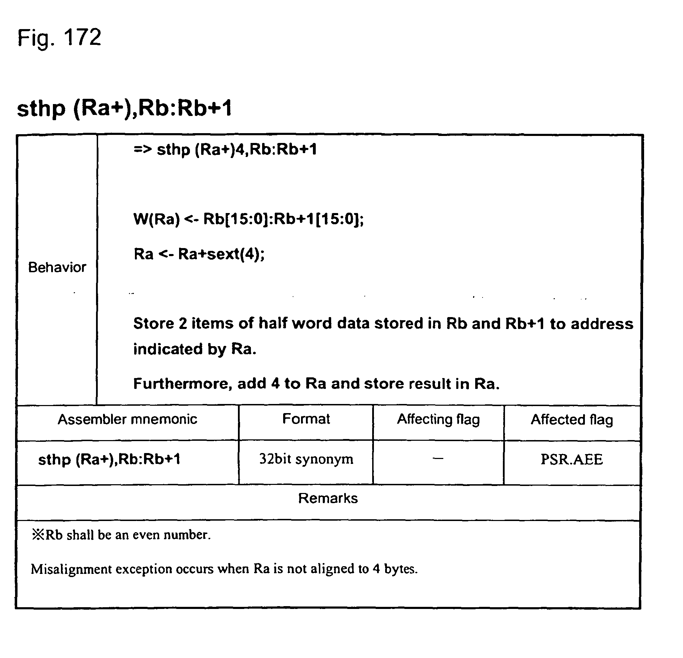

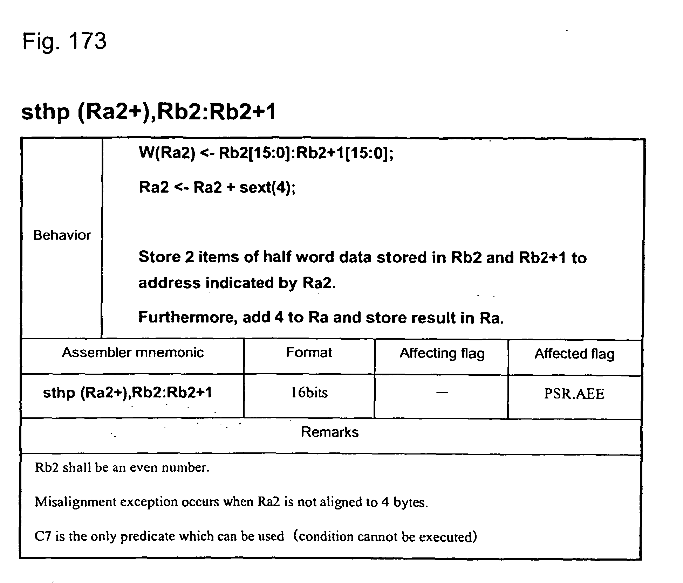

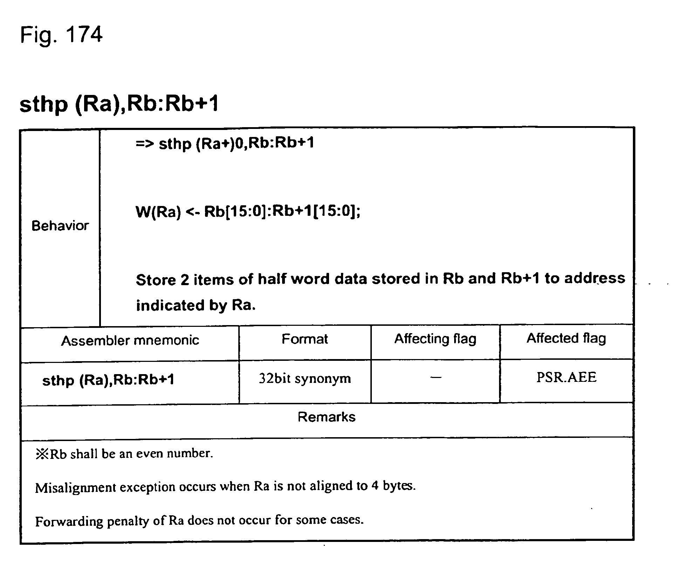

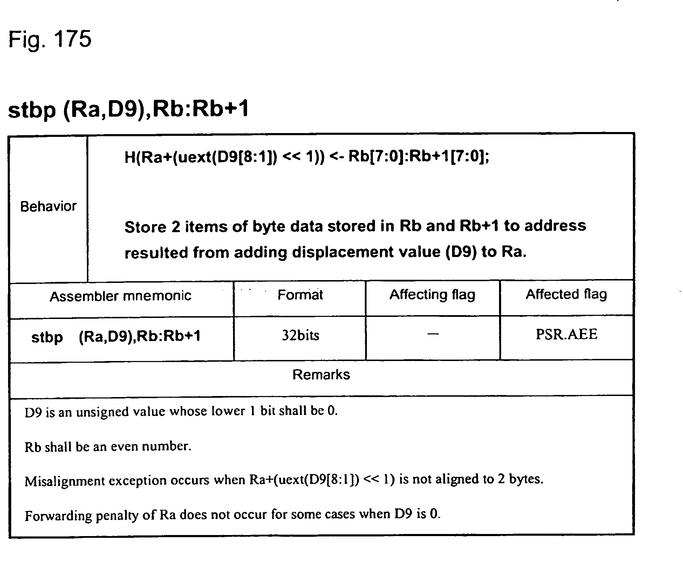

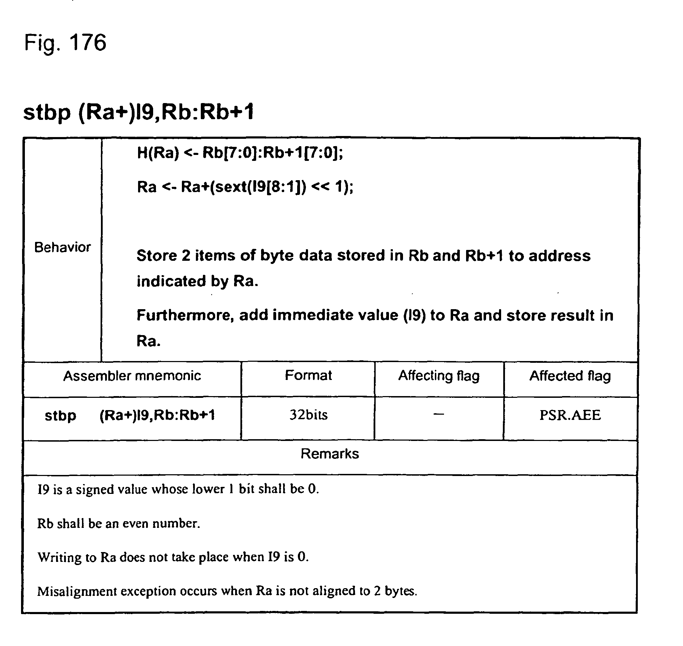

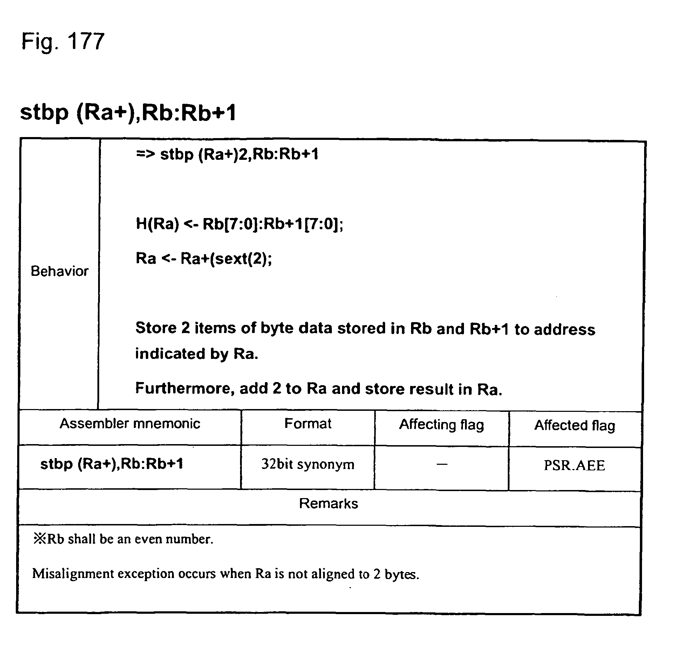

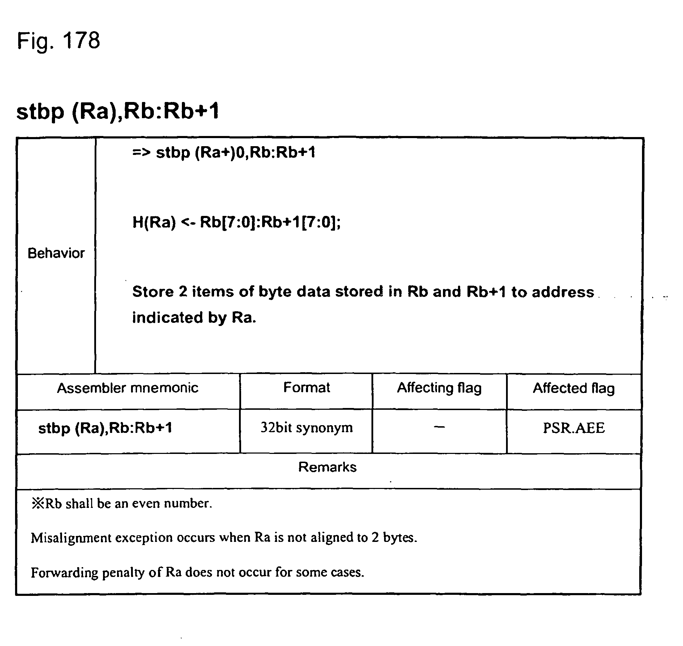

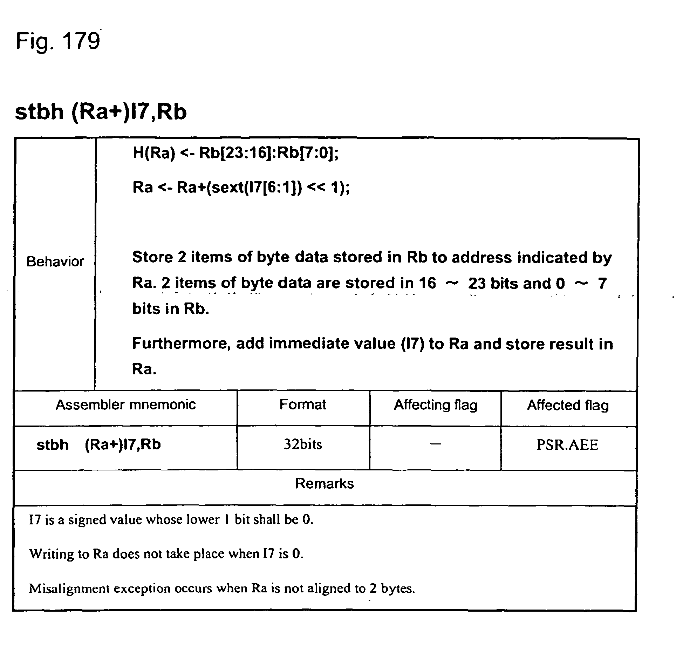

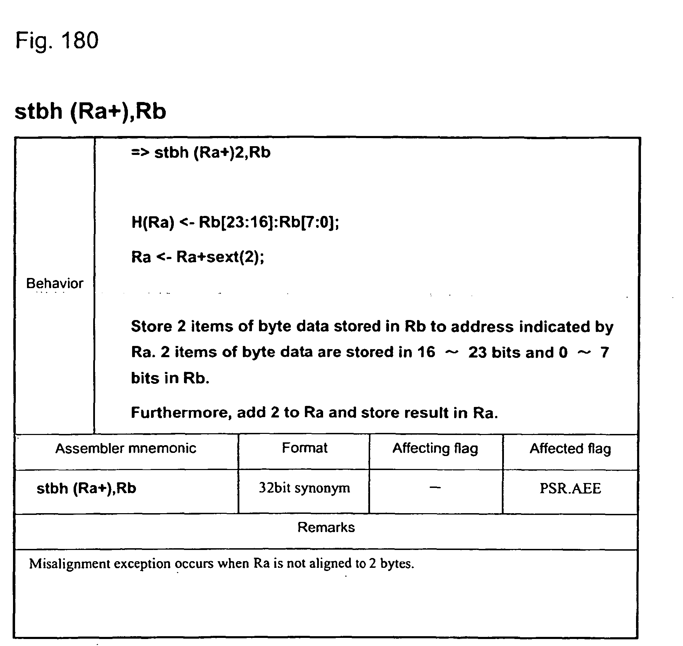

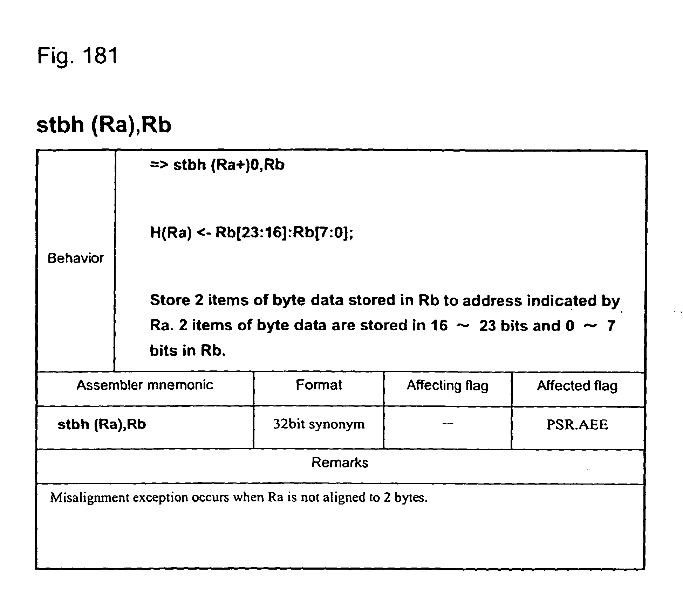

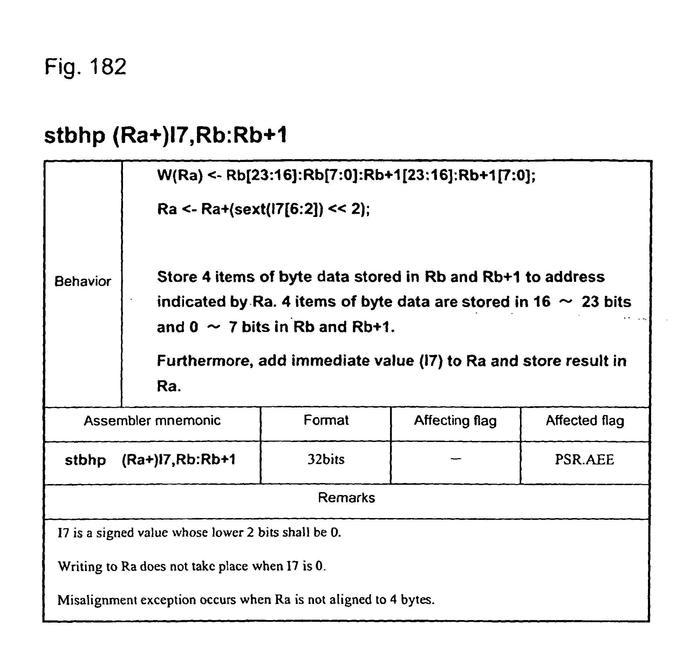

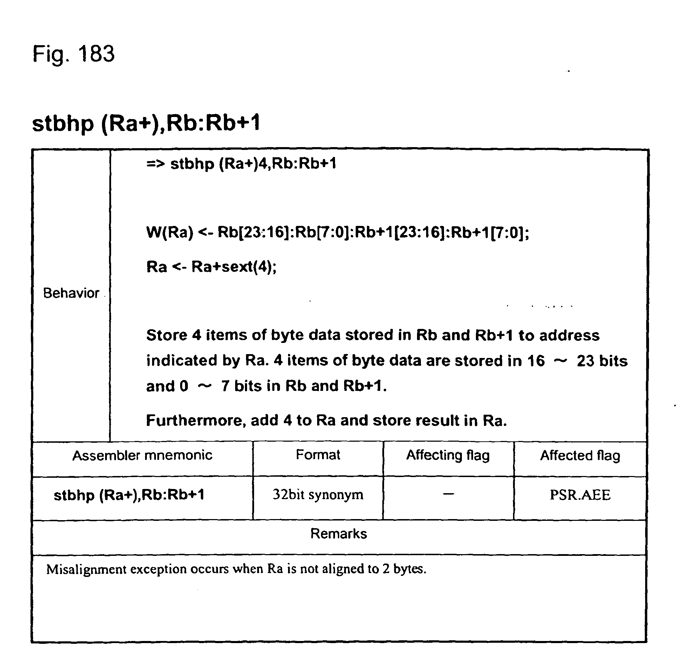

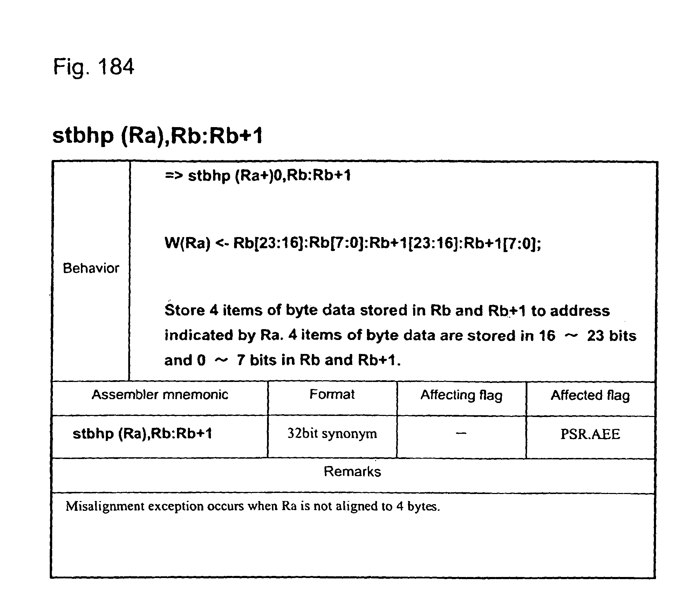

Figs.120~184 are diagrams explaining instructions relating to "store".

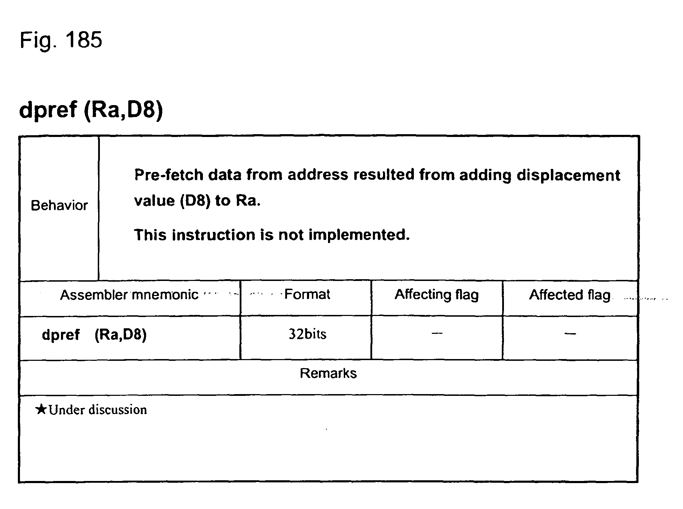

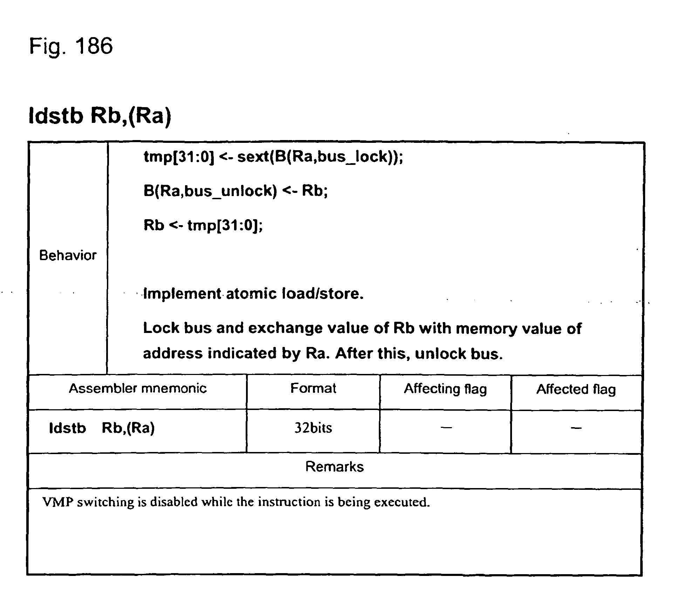

Figs. 185~186 are diagrams explaining instructions relating to "memory (etc)".

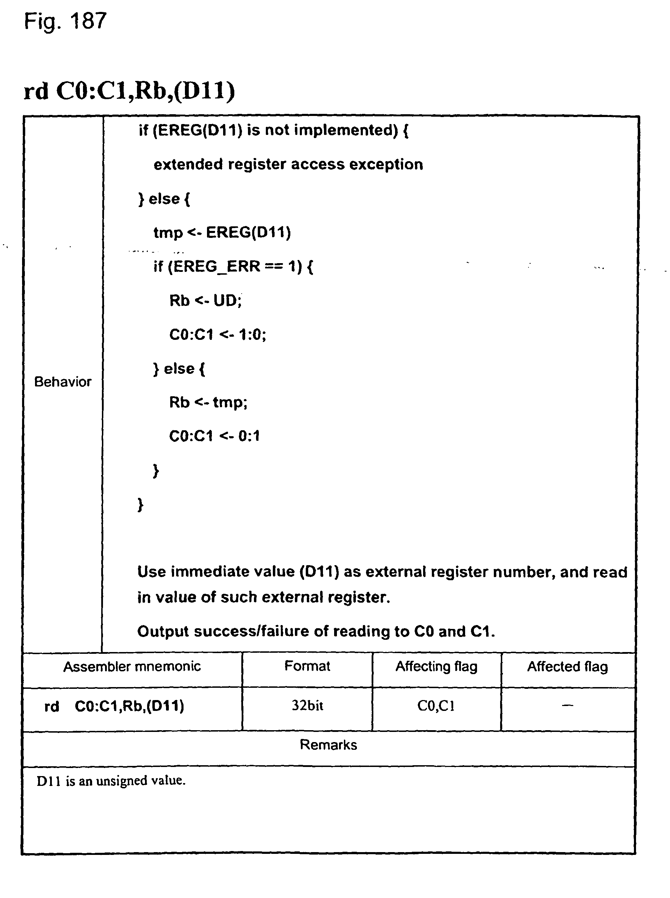

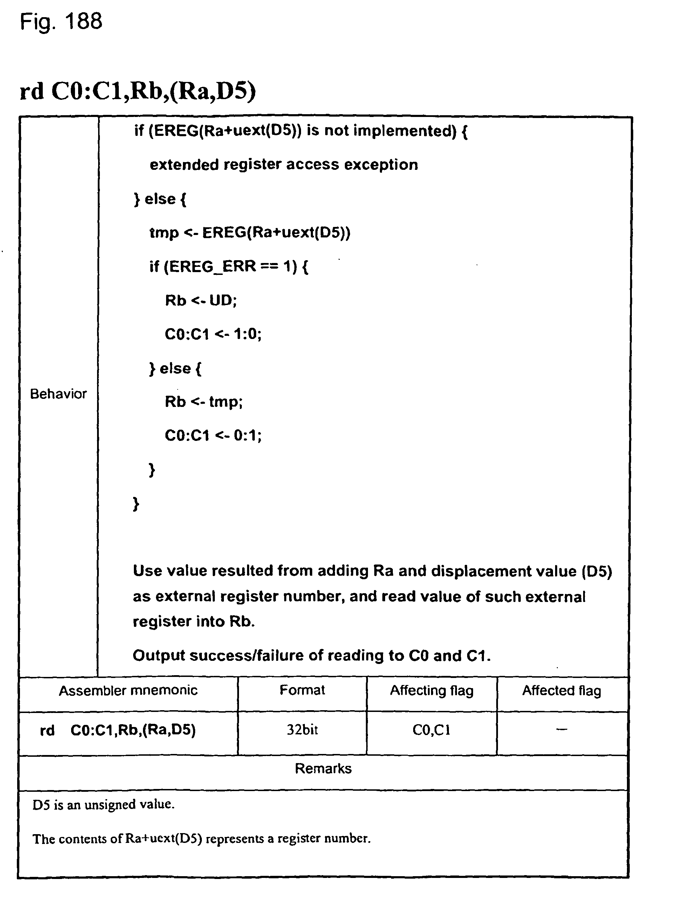

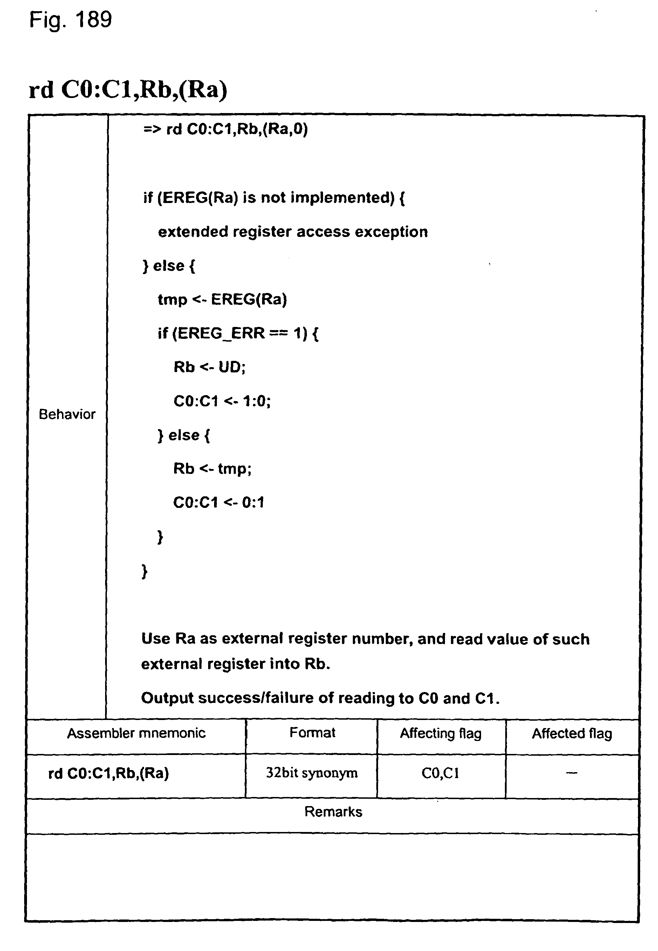

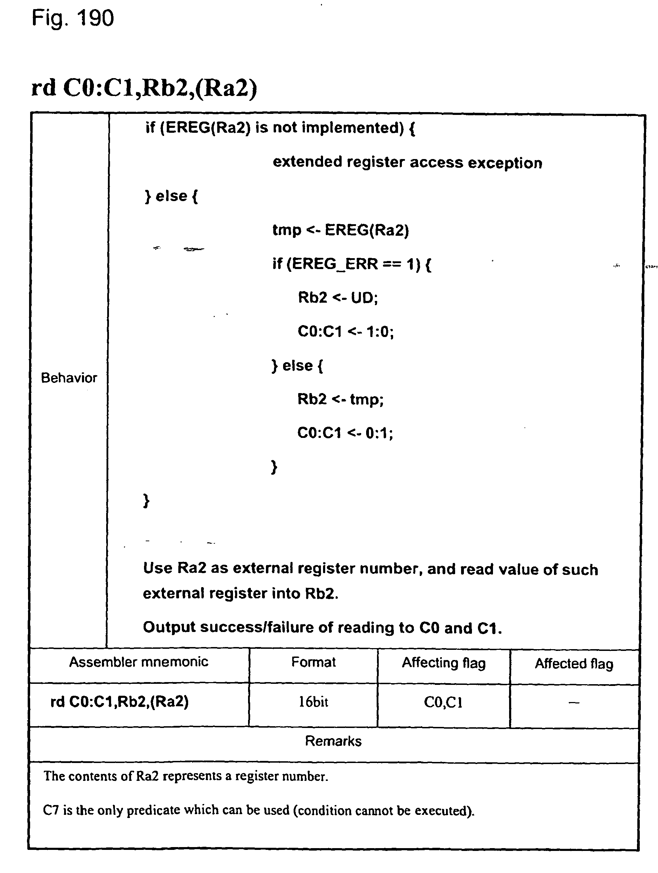

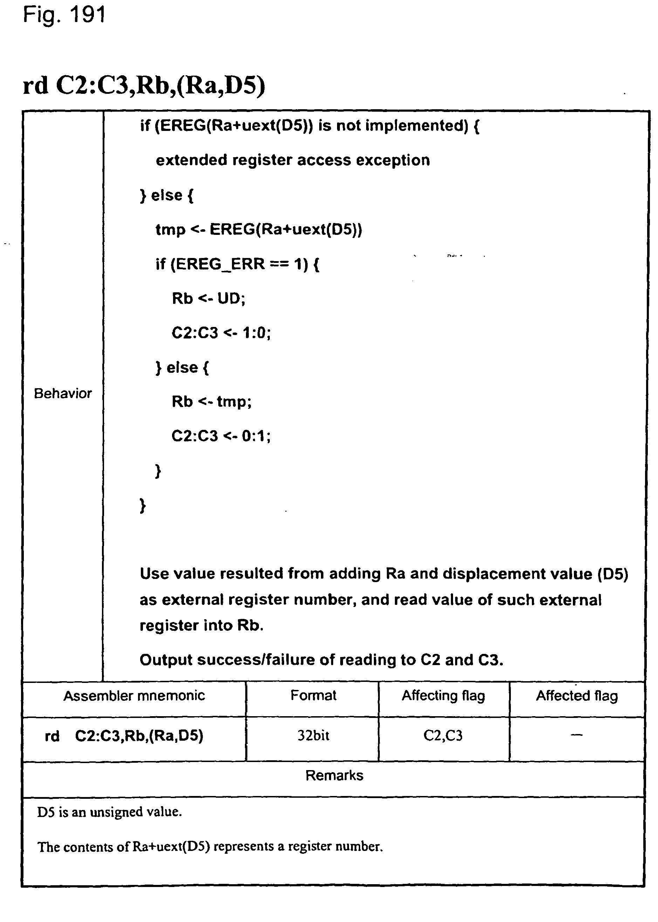

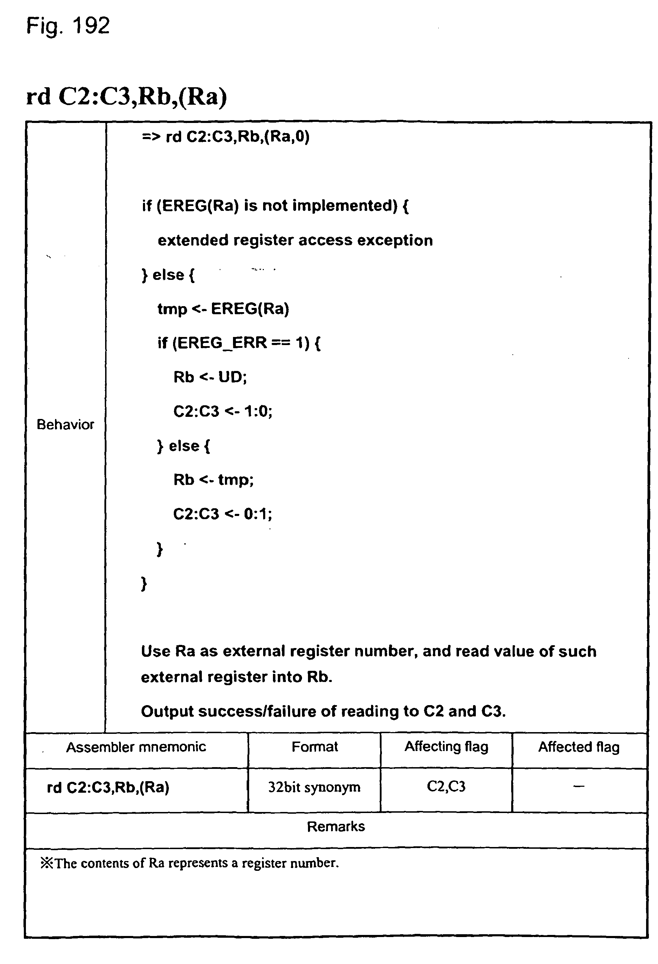

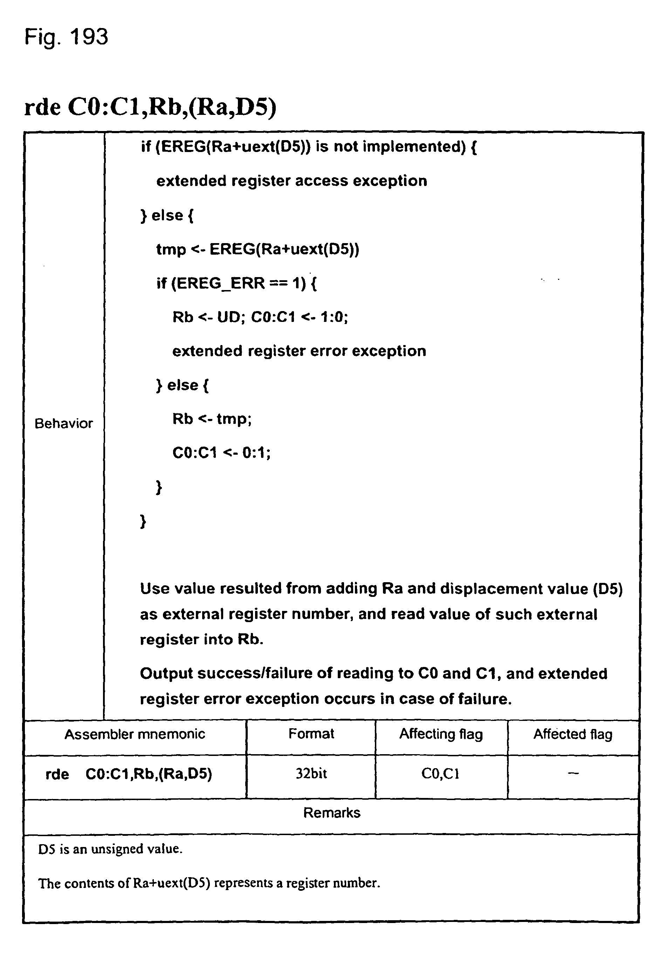

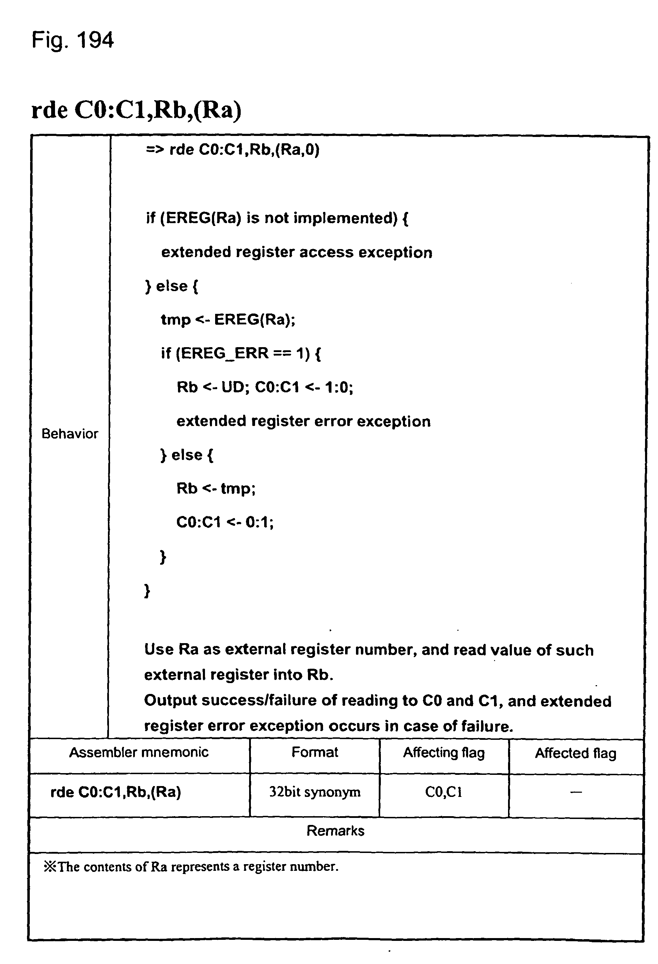

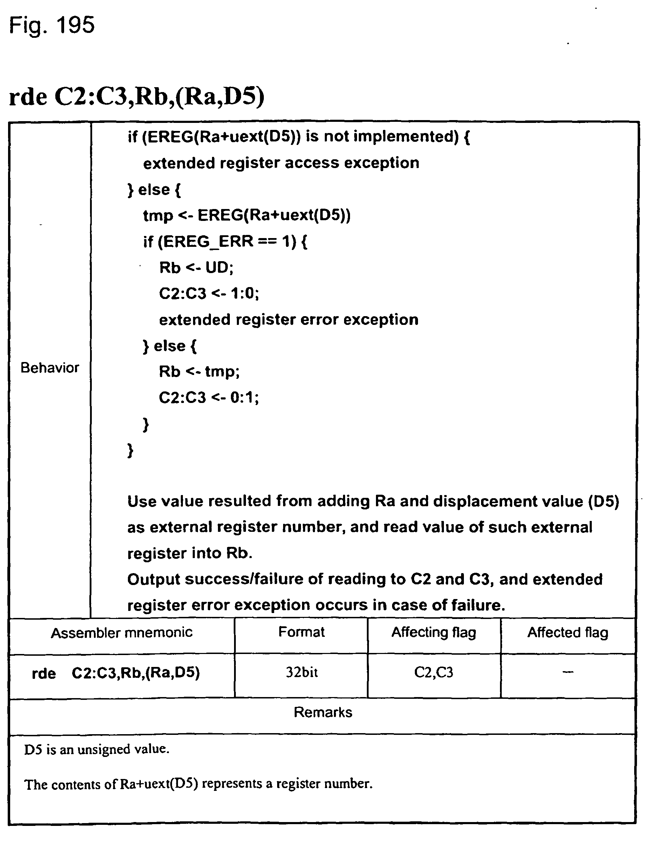

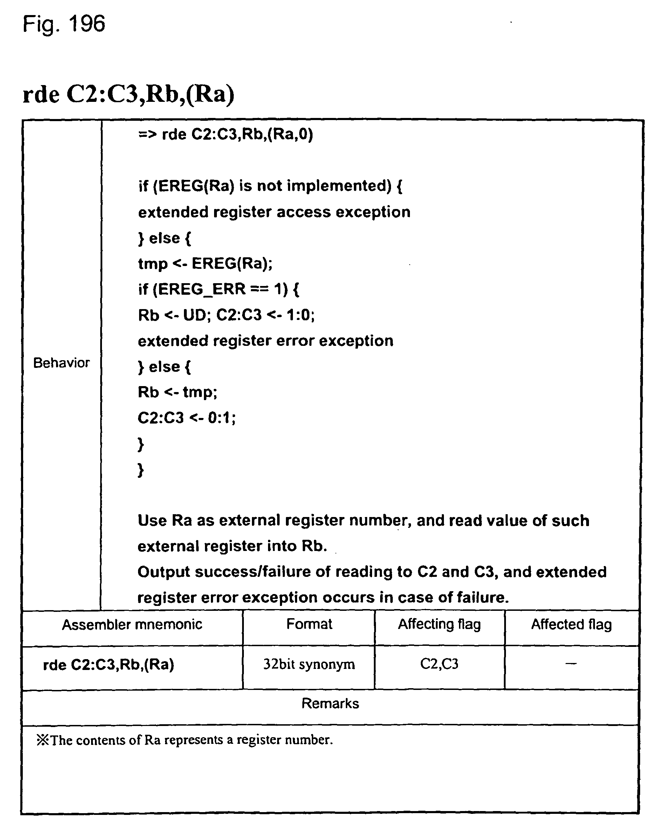

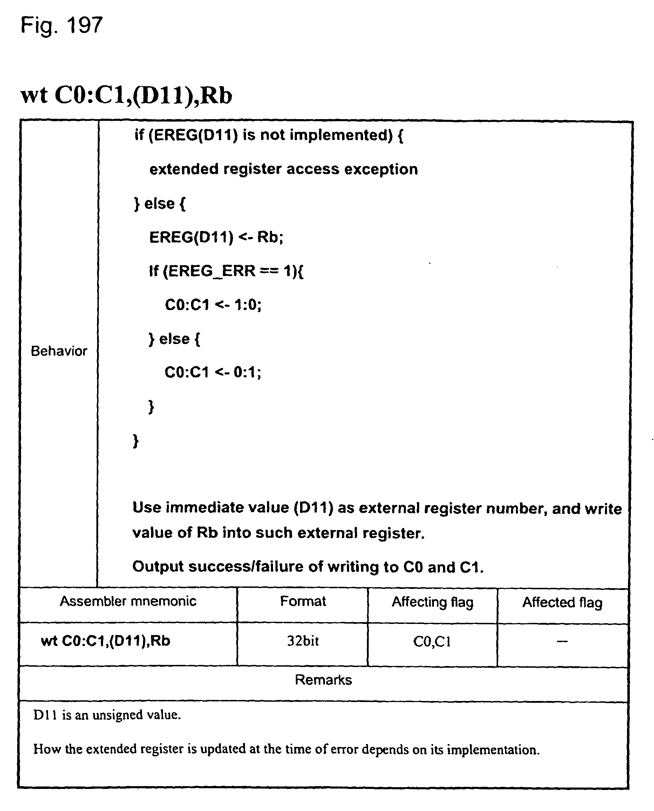

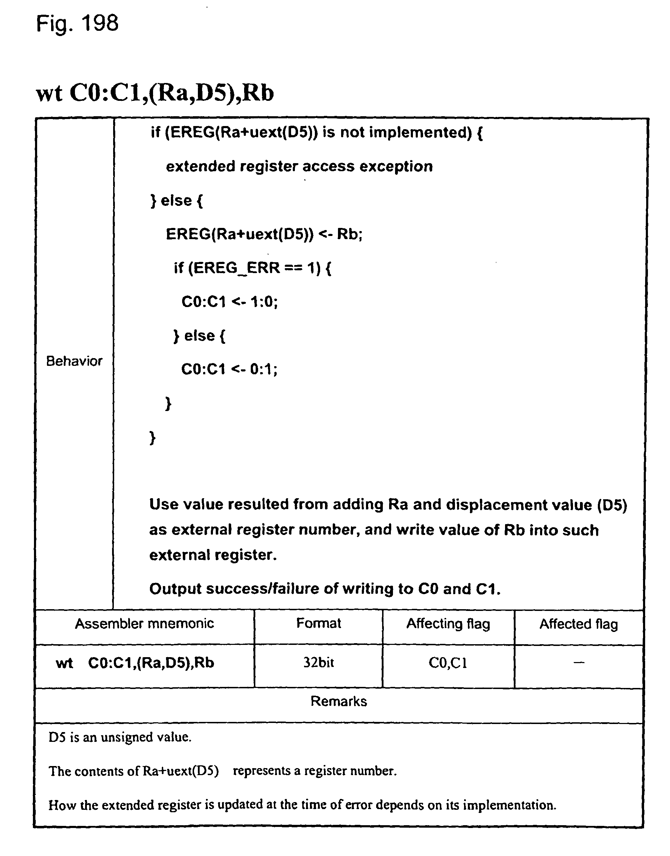

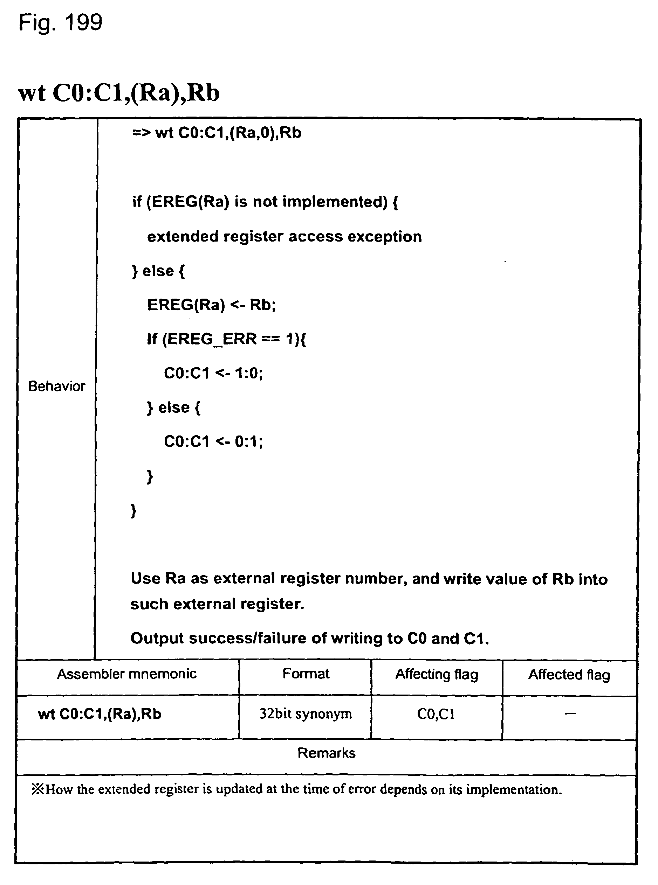

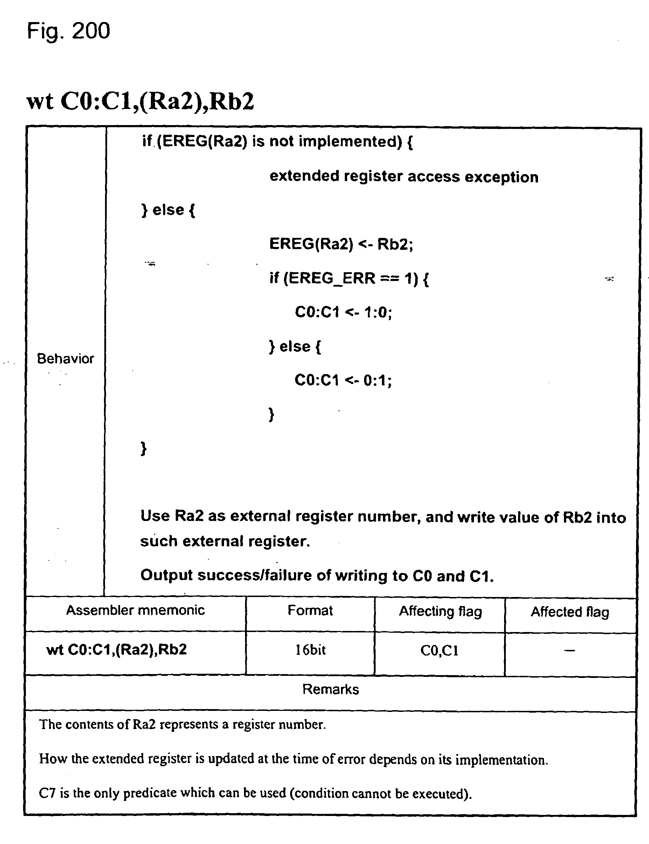

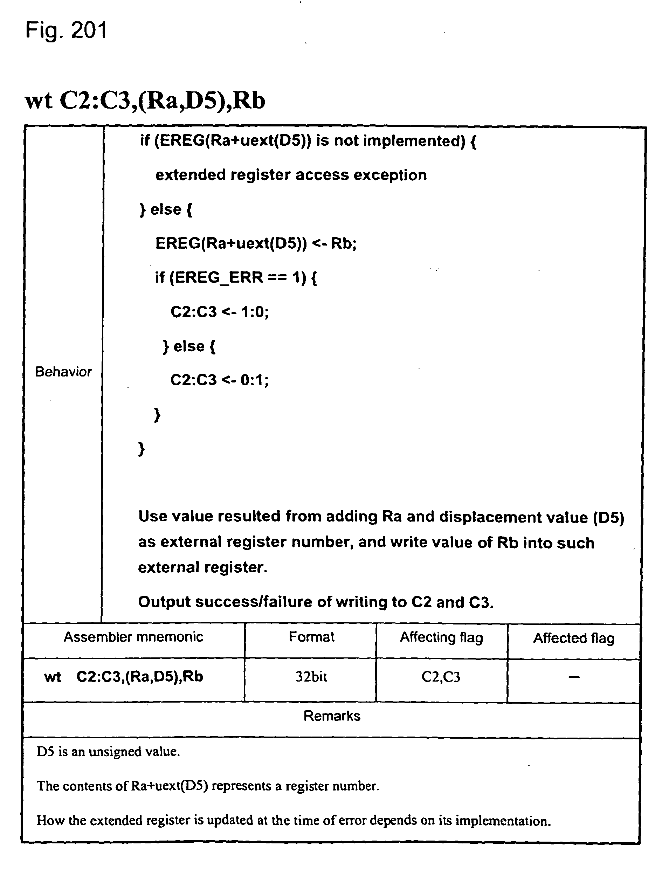

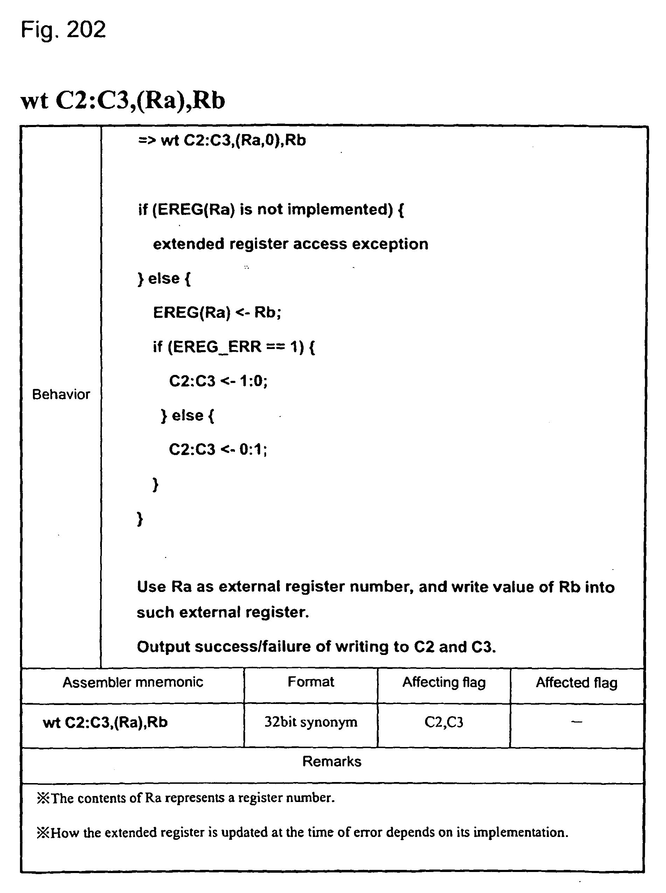

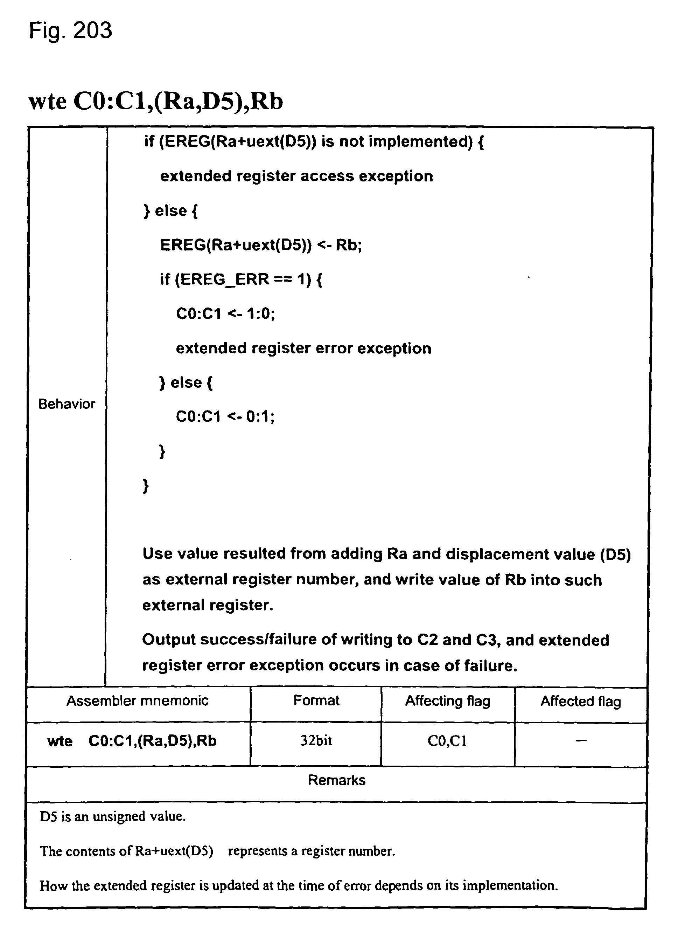

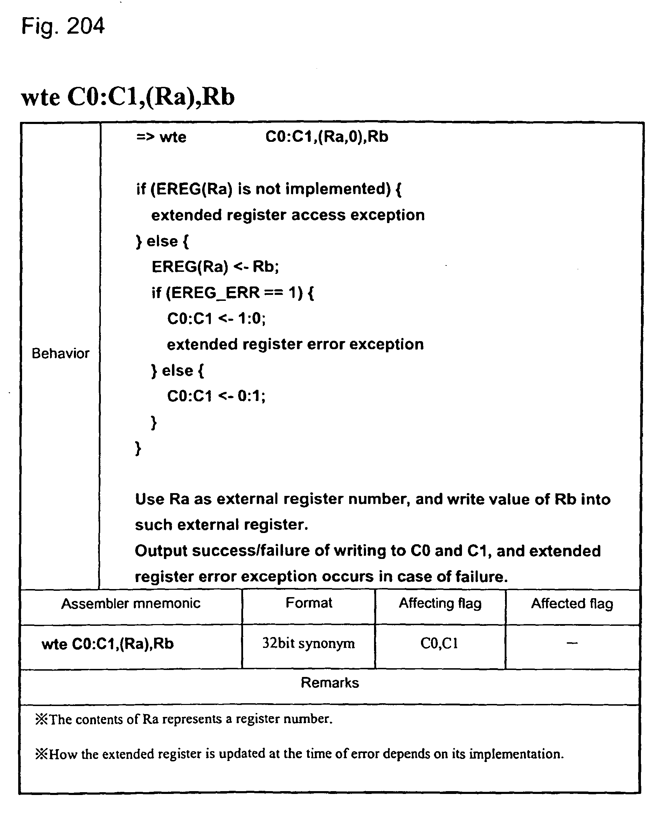

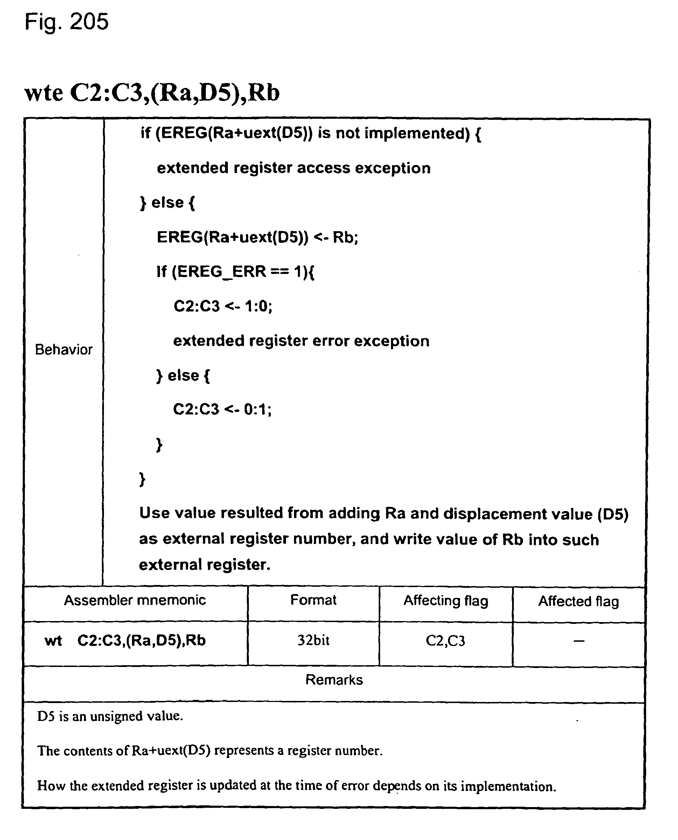

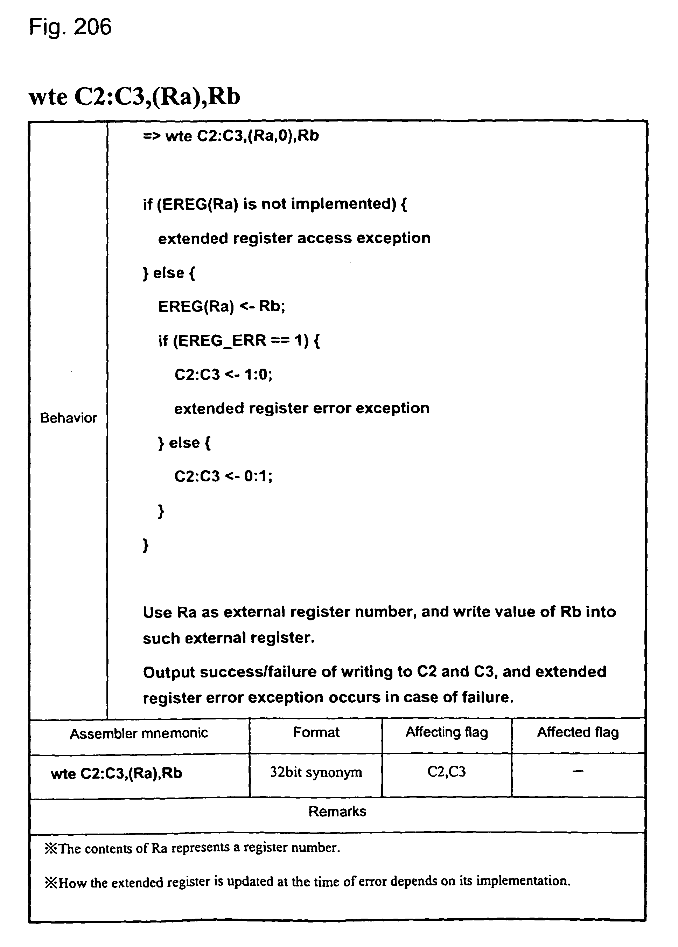

Figs. 187~206 are diagrams explaining instructions relating to "external register".

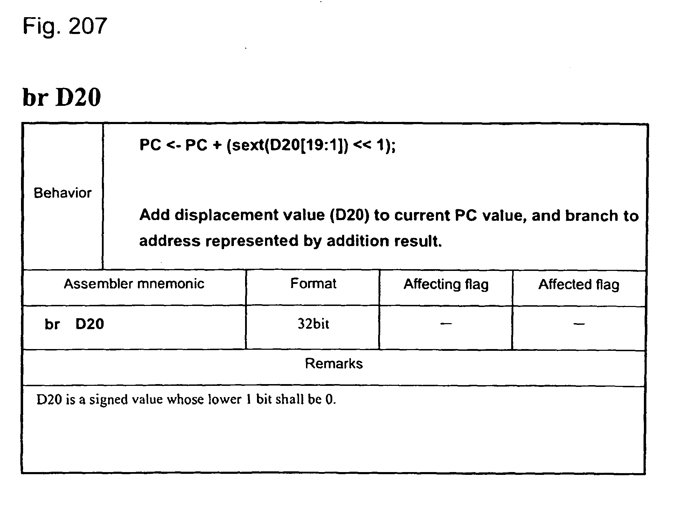

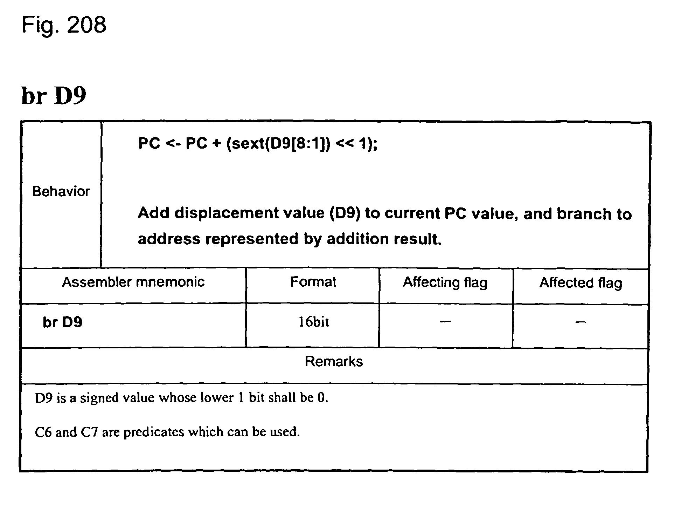

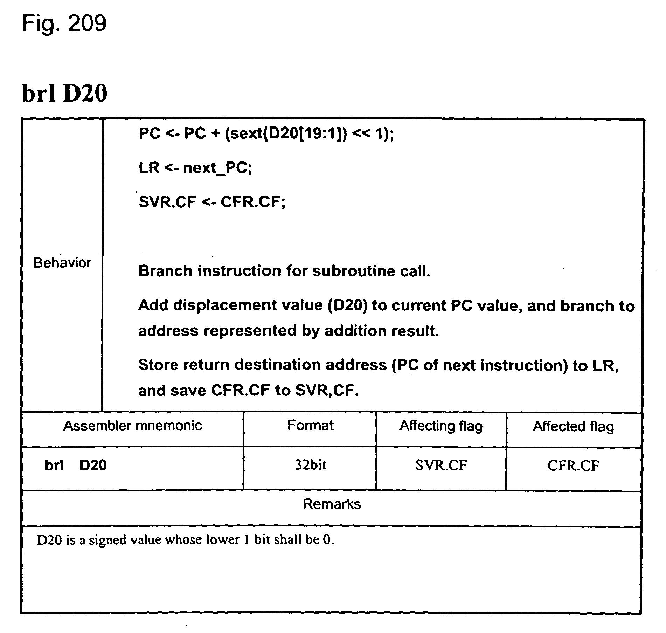

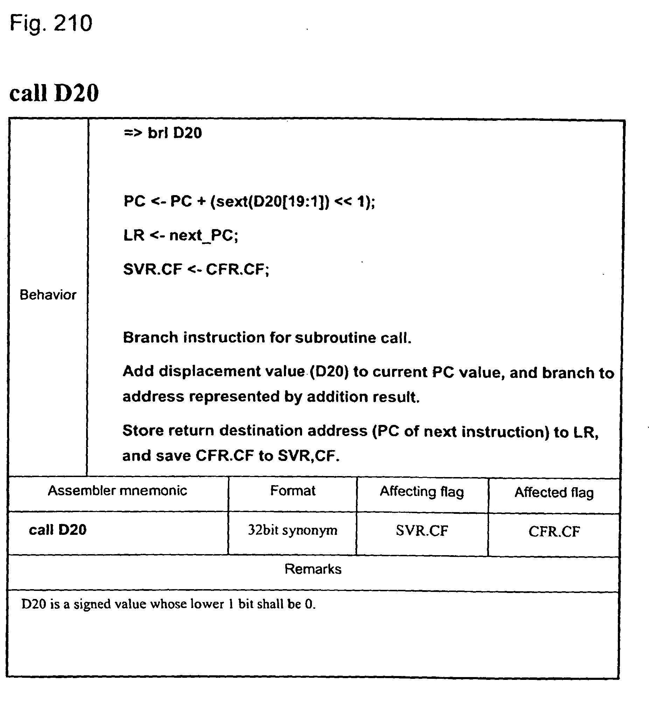

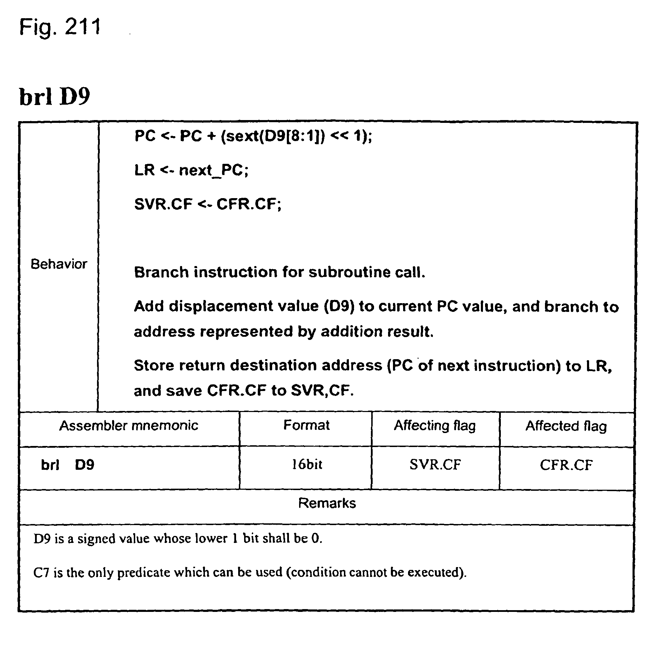

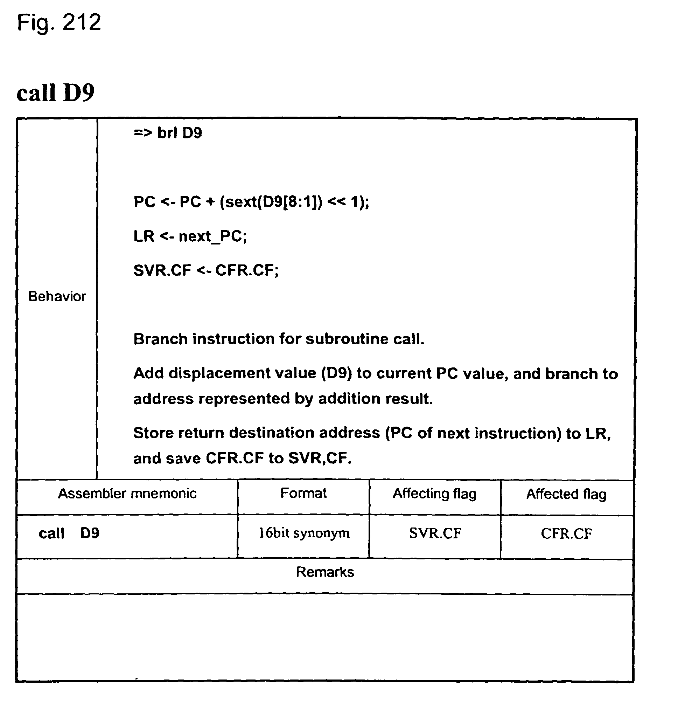

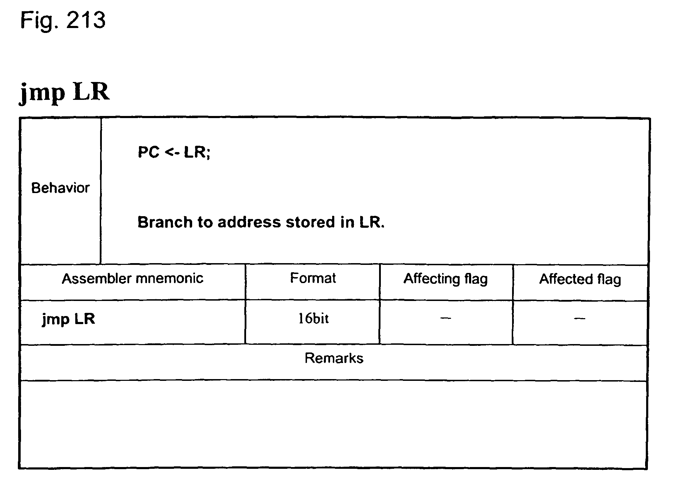

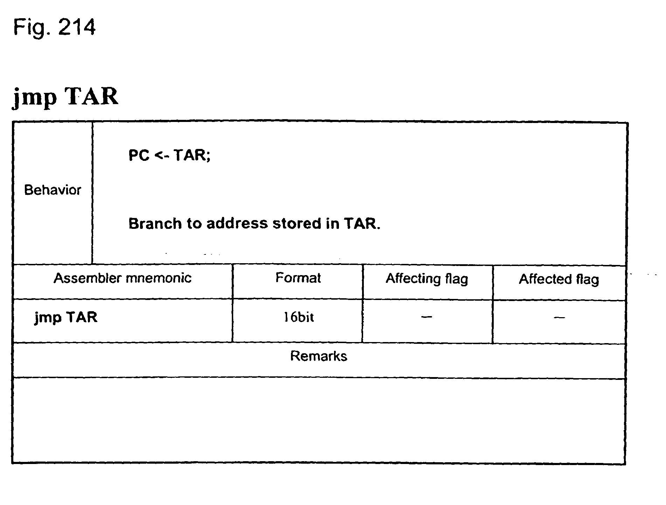

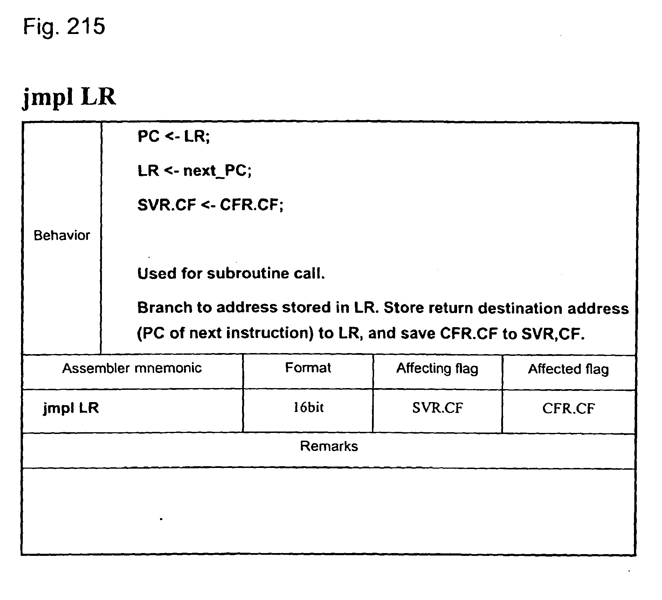

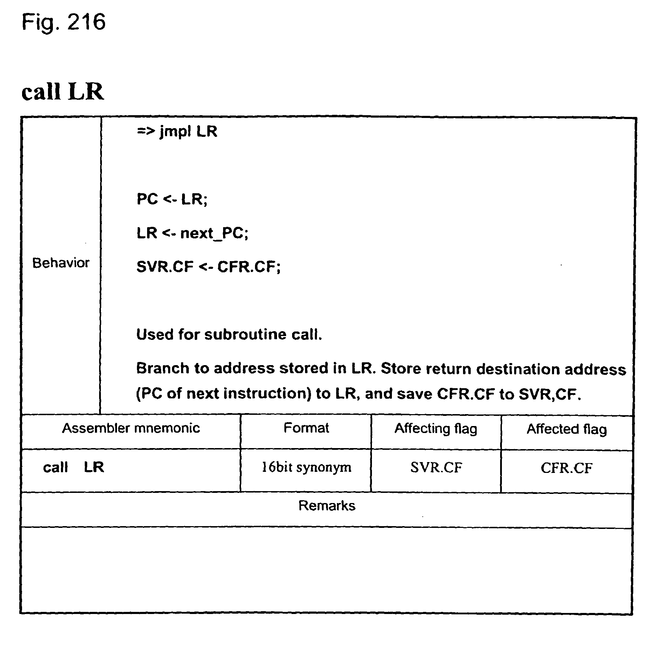

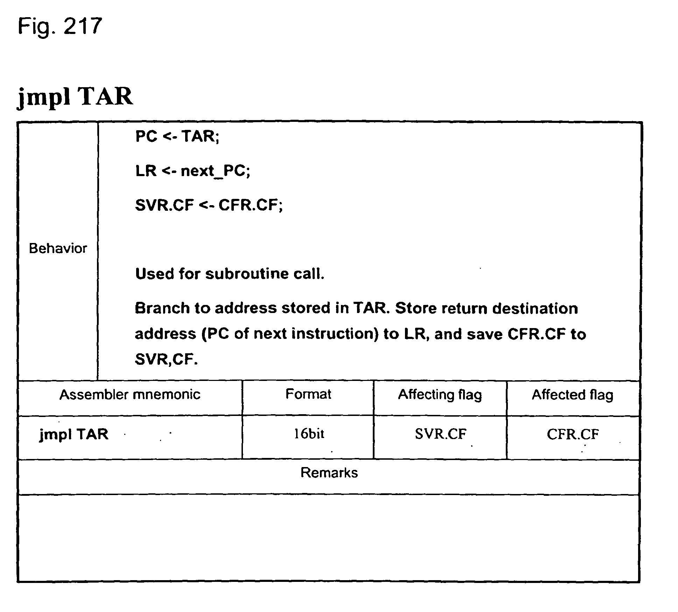

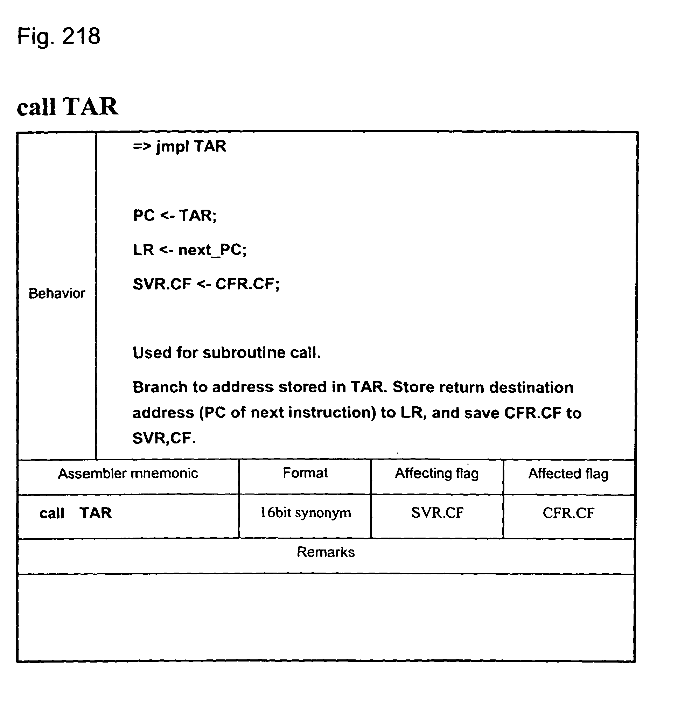

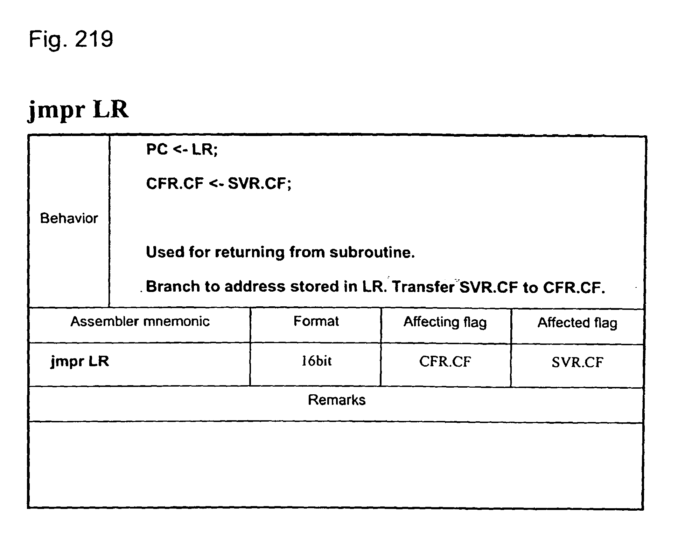

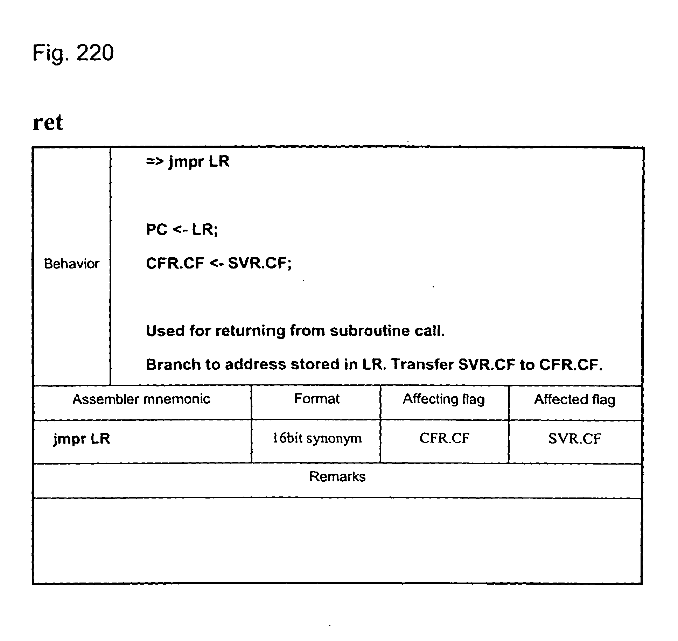

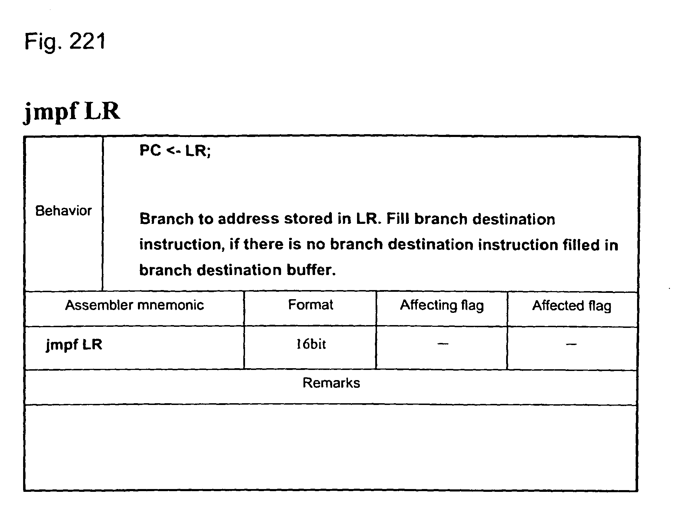

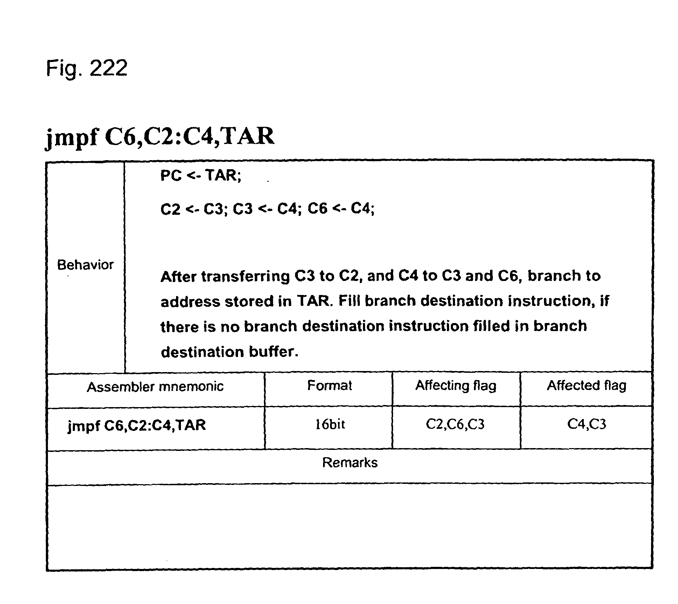

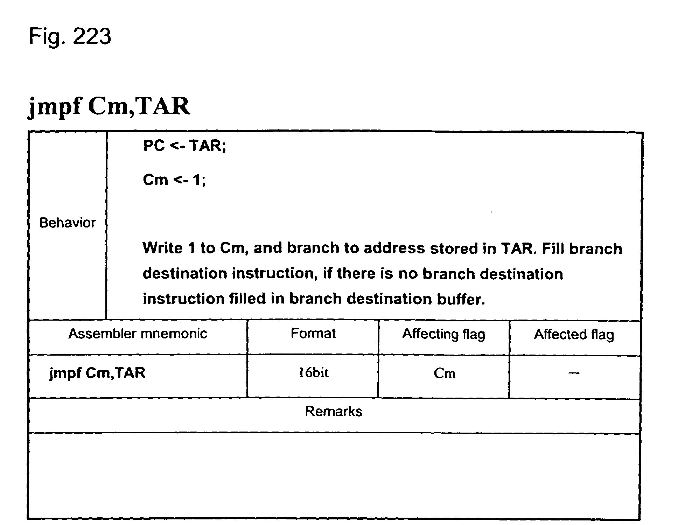

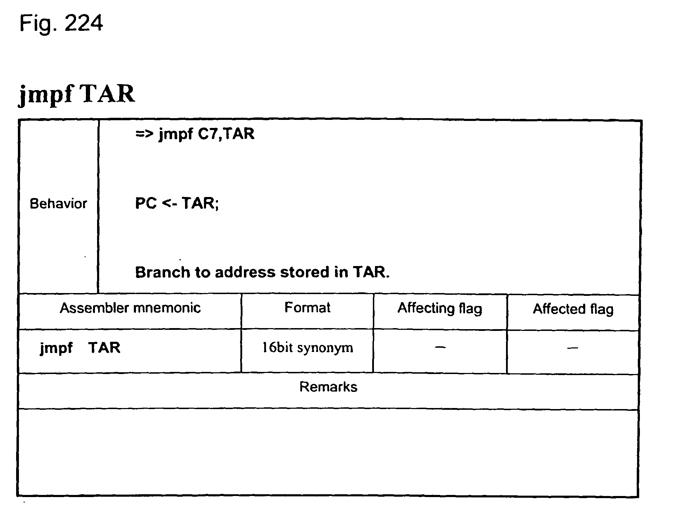

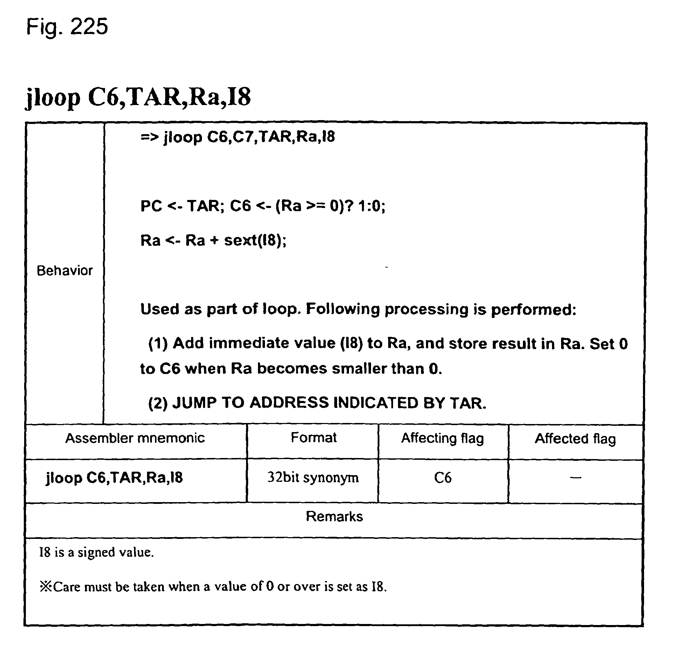

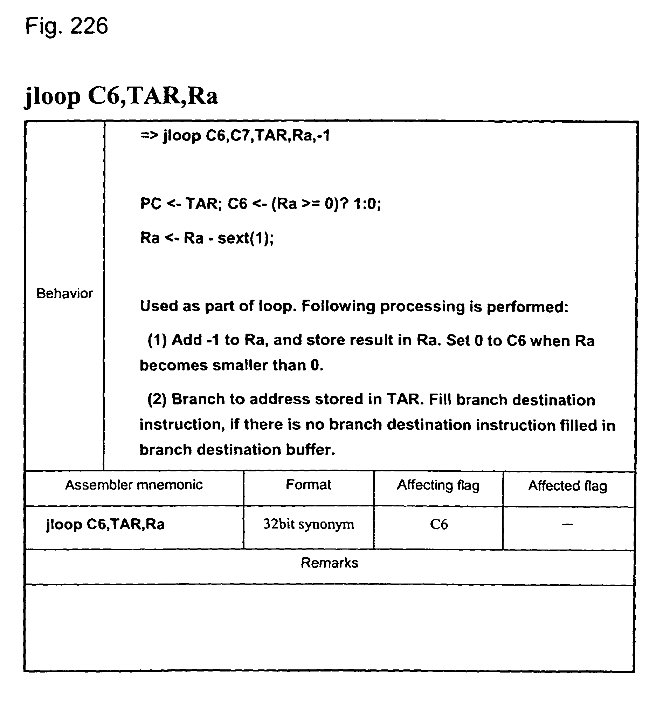

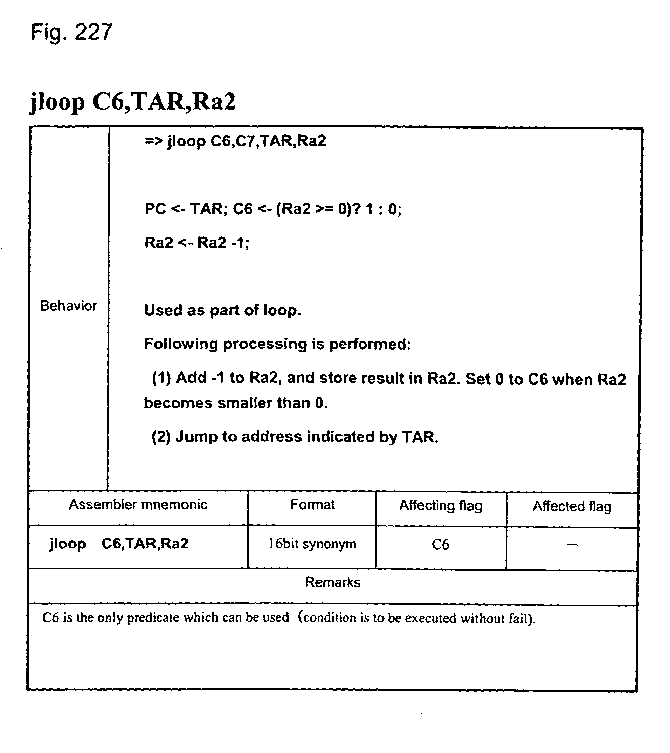

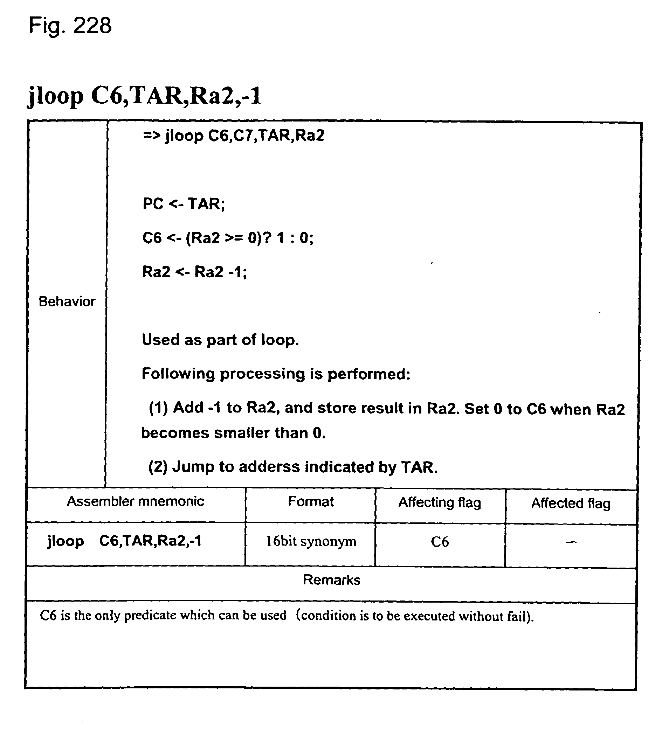

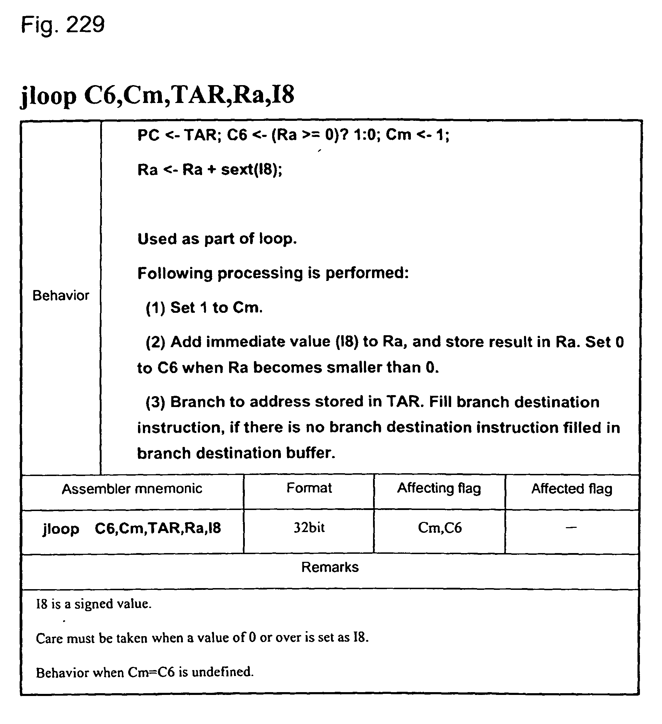

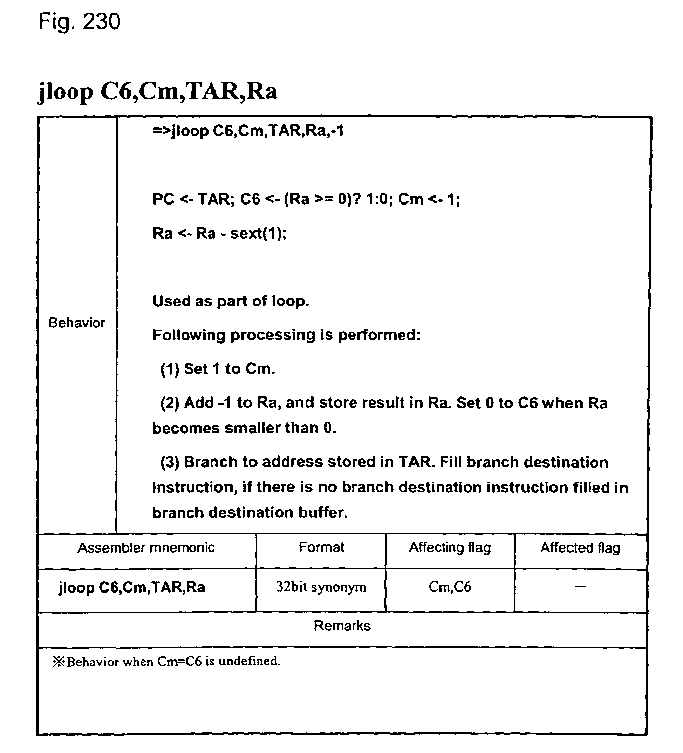

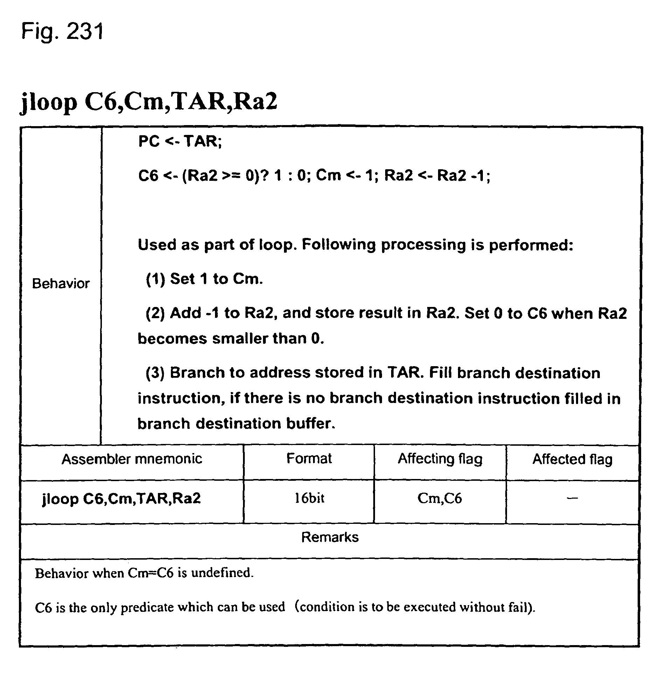

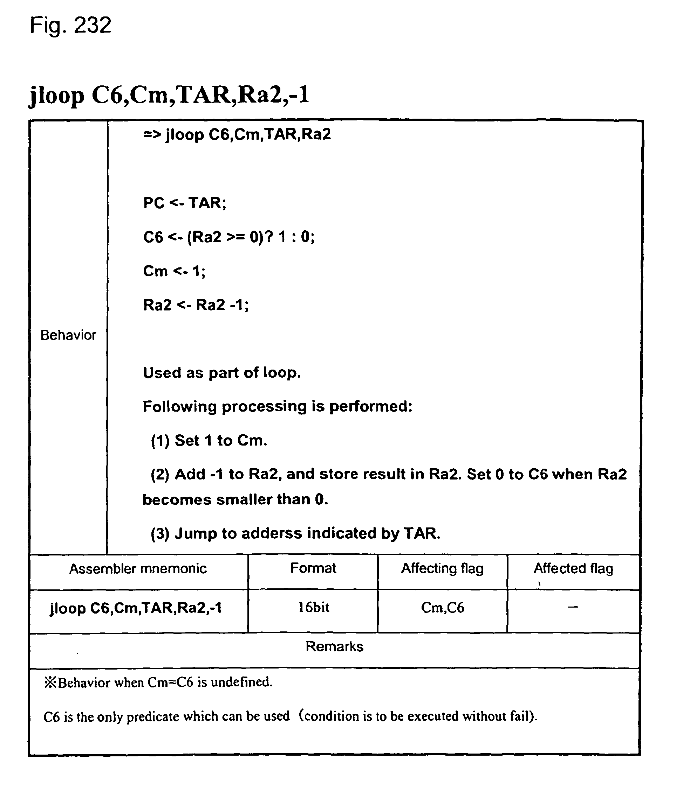

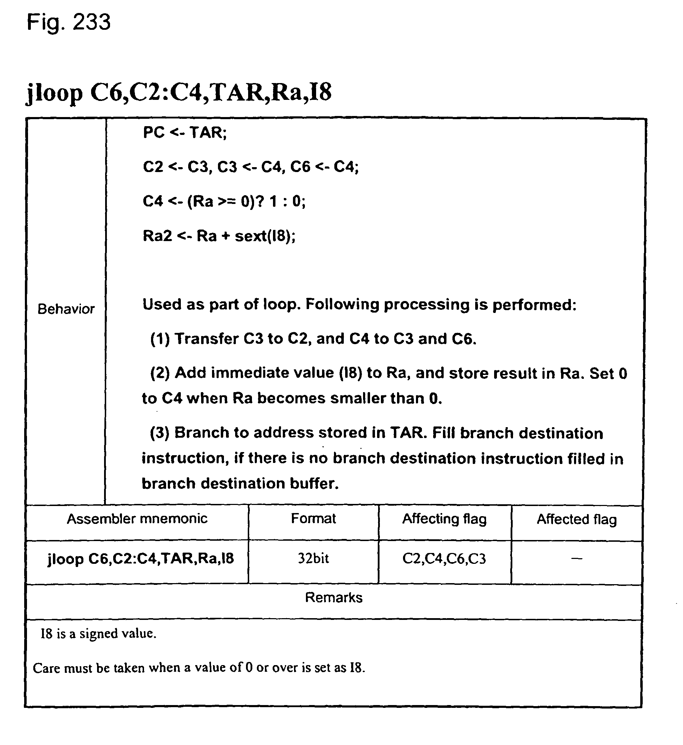

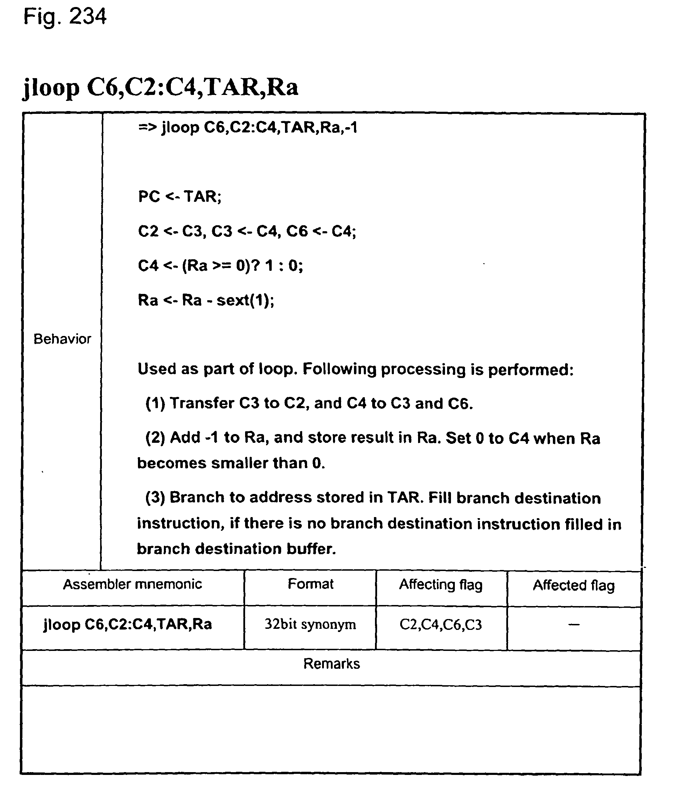

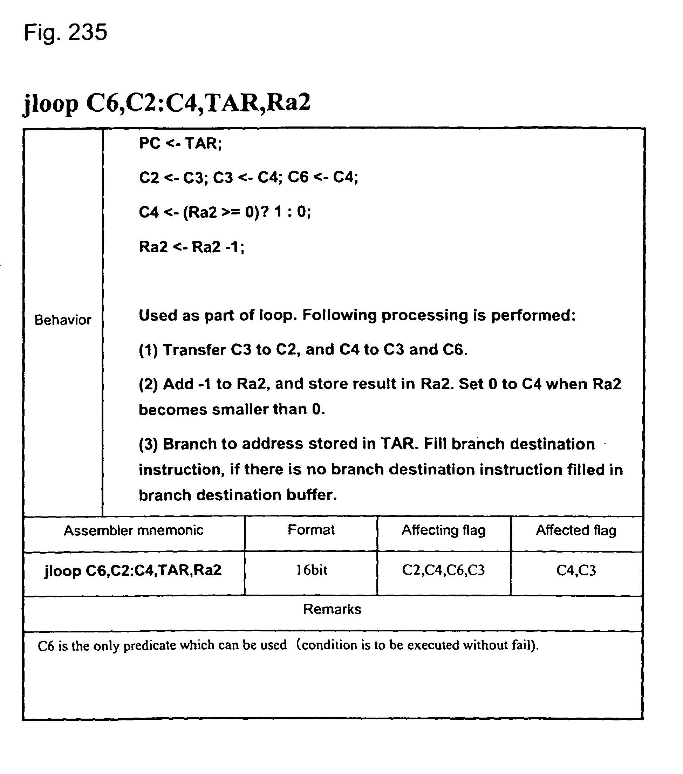

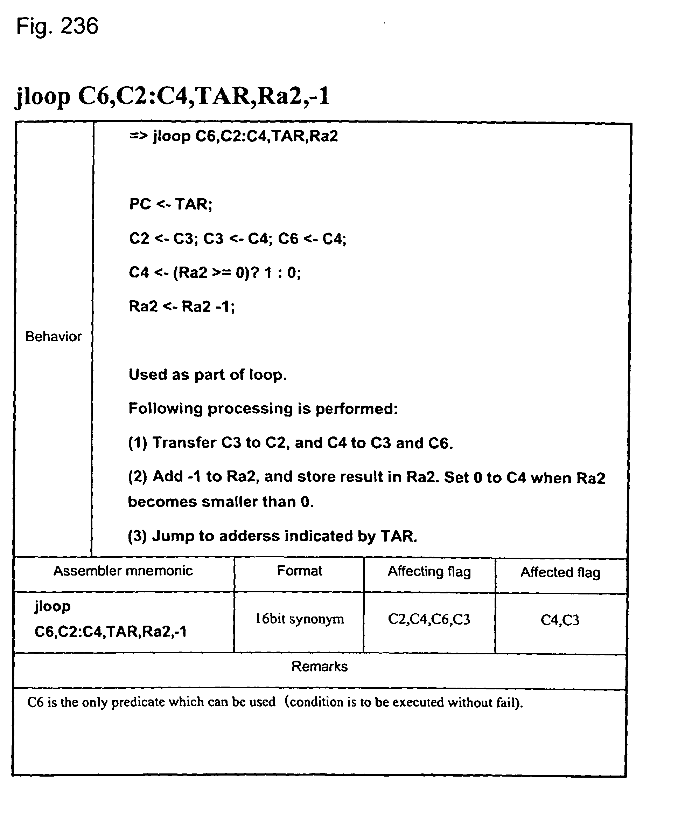

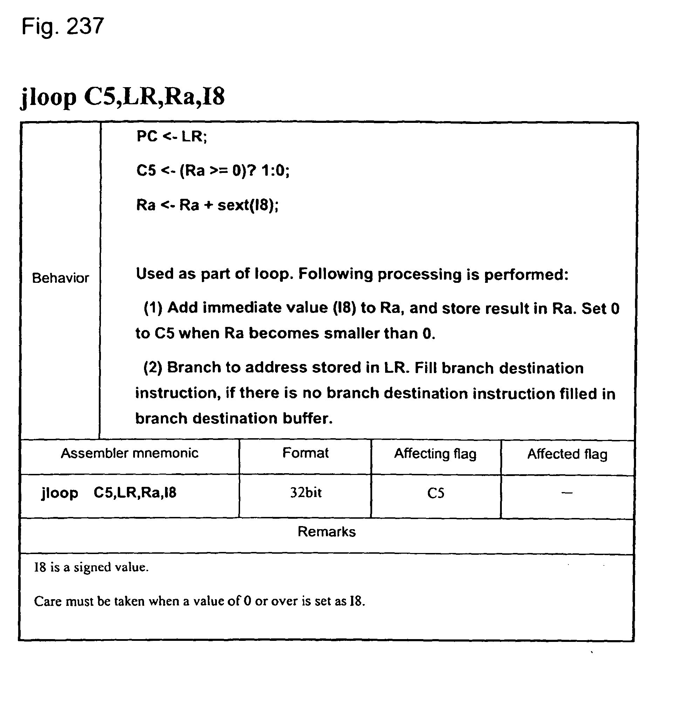

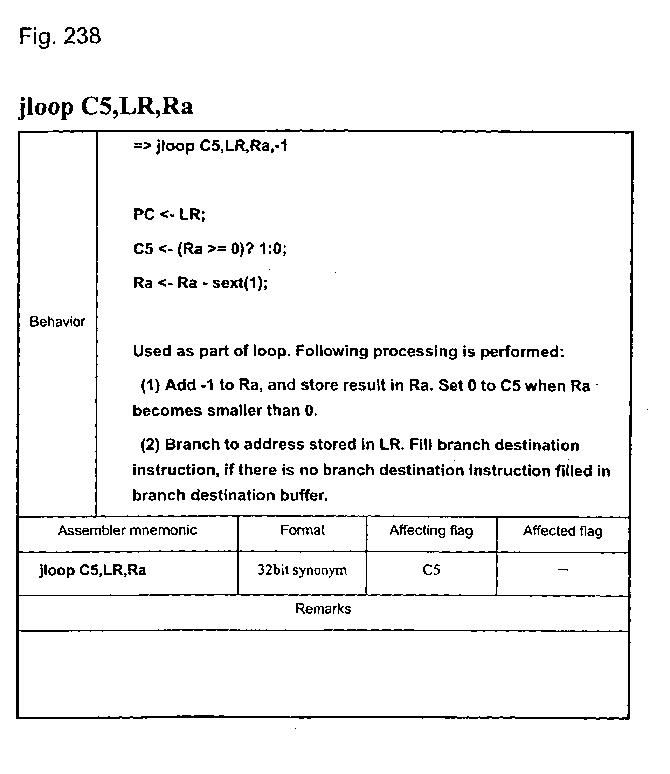

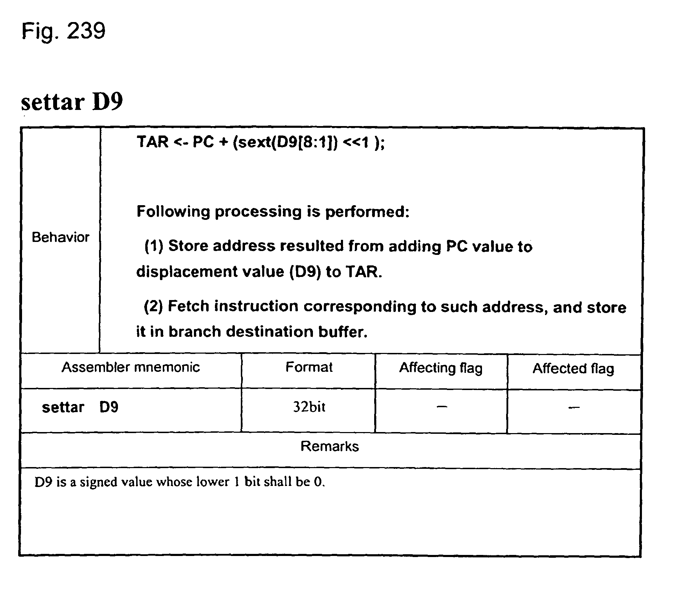

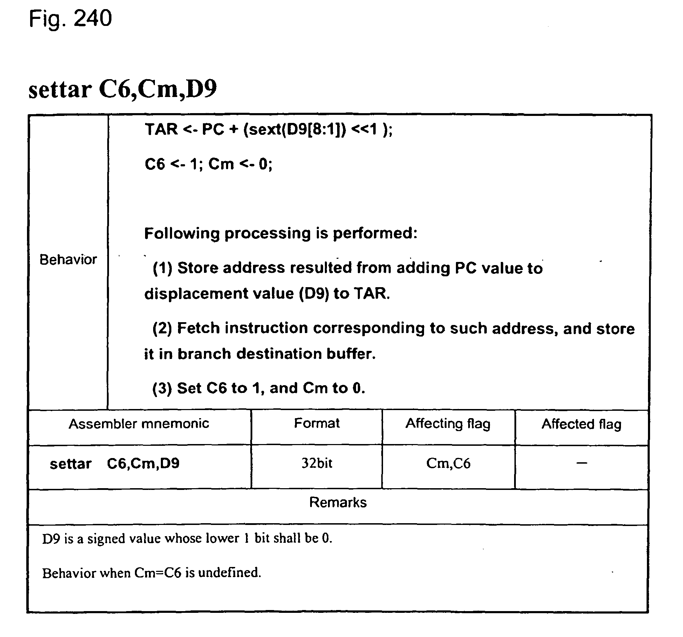

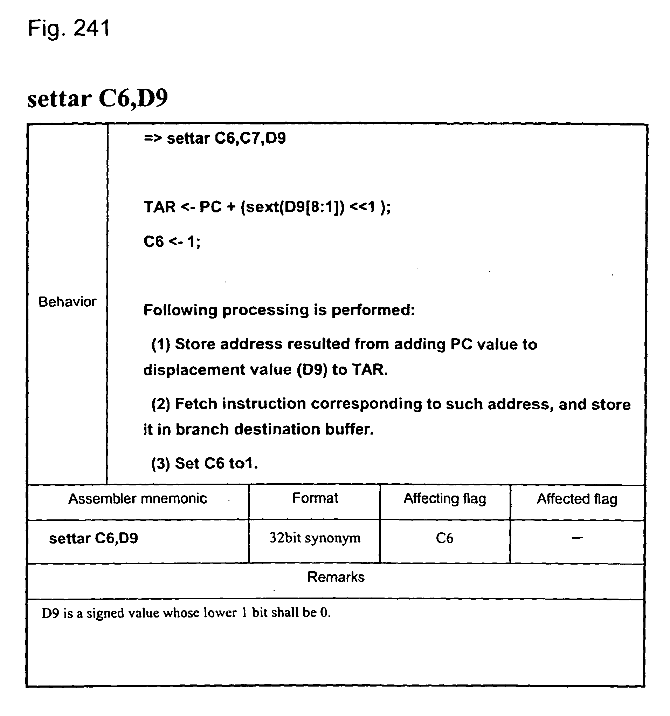

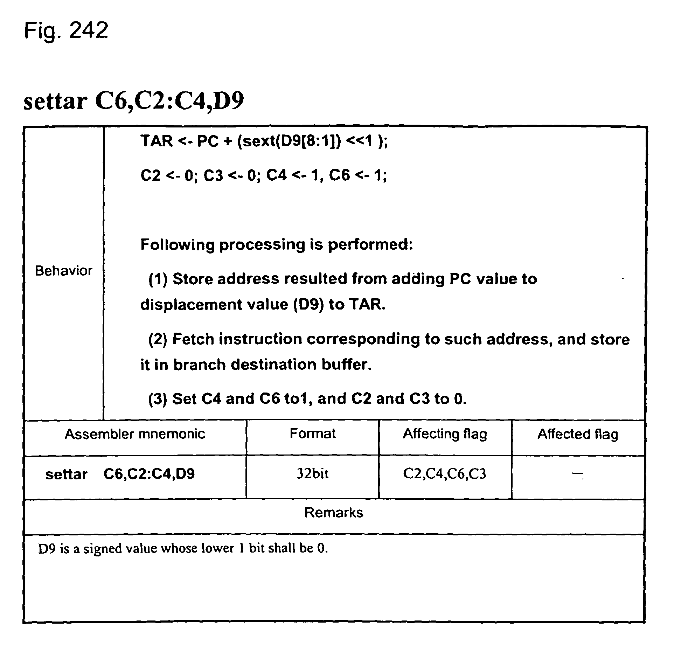

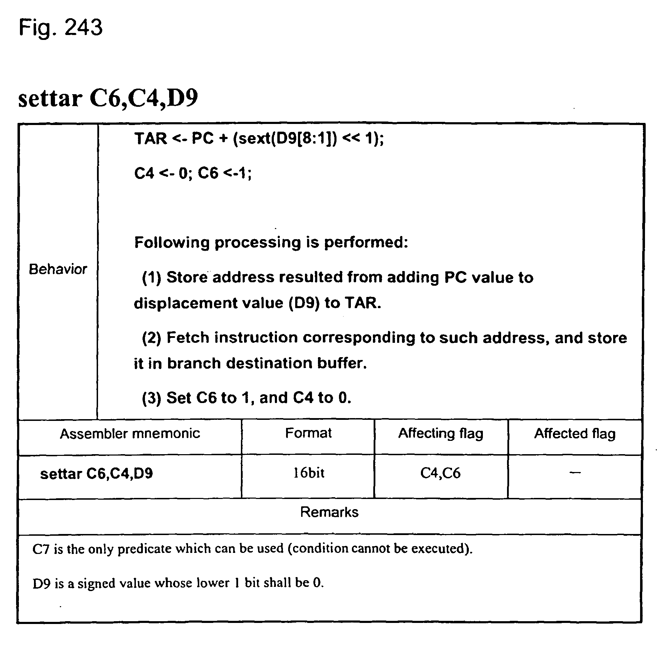

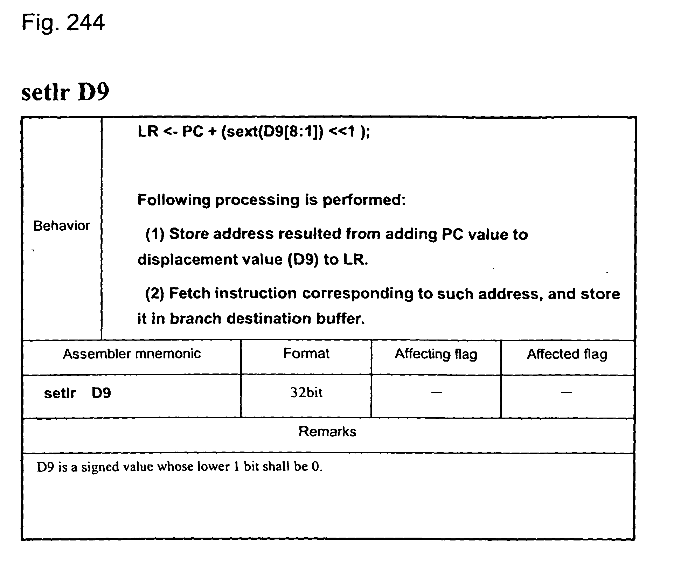

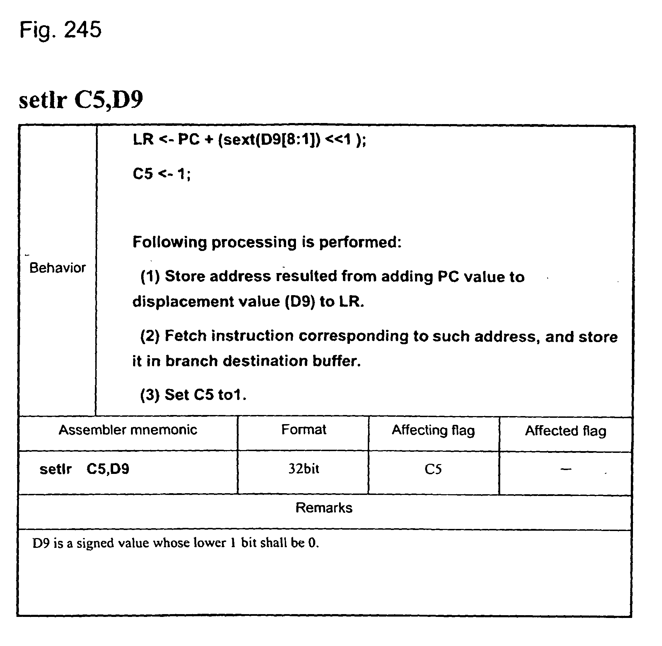

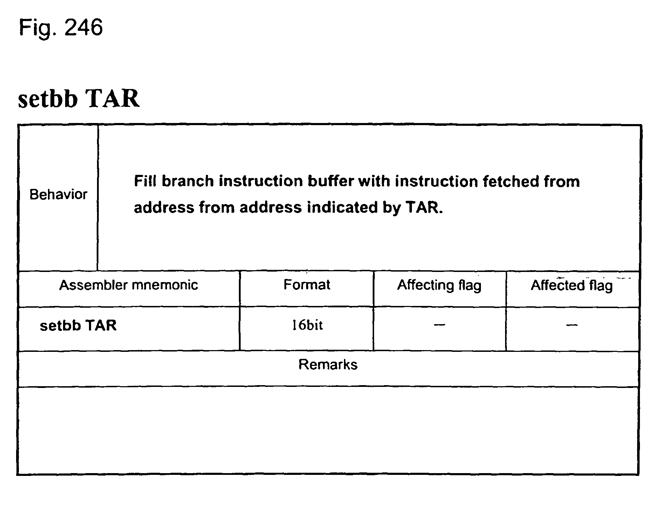

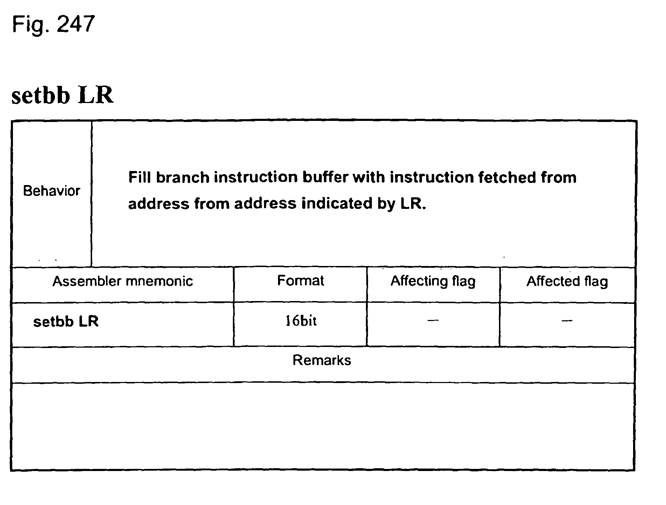

Figs.207~247 are diagrams explaining instructions relating to "branch".

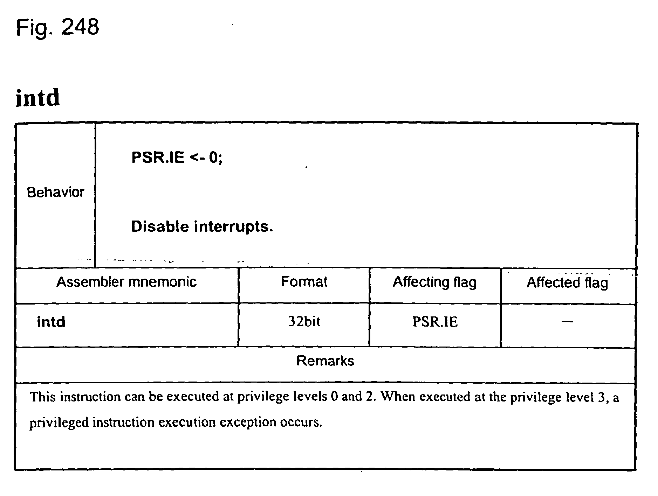

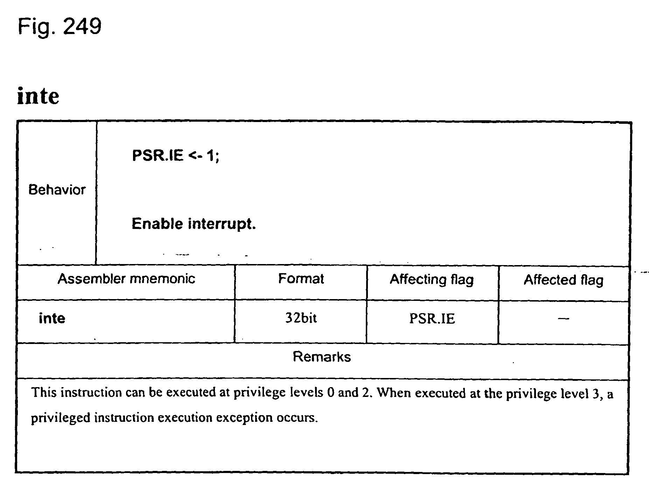

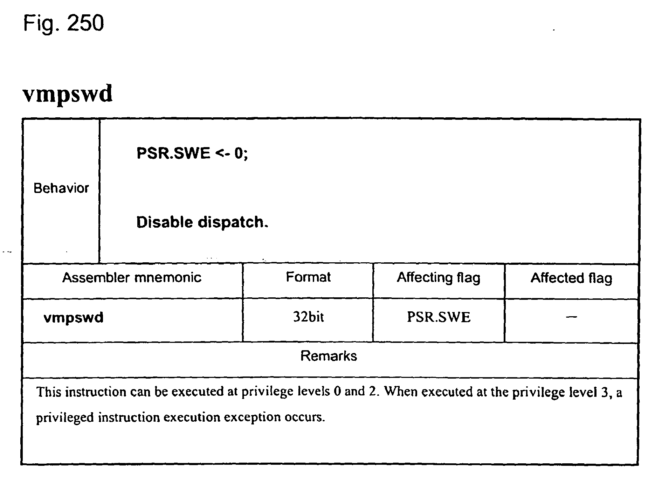

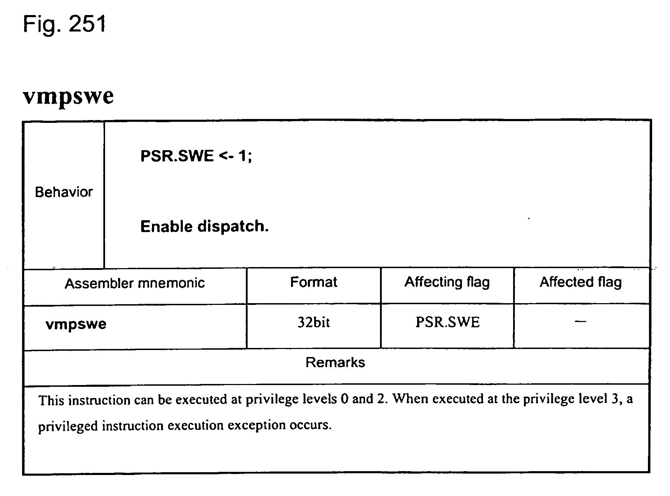

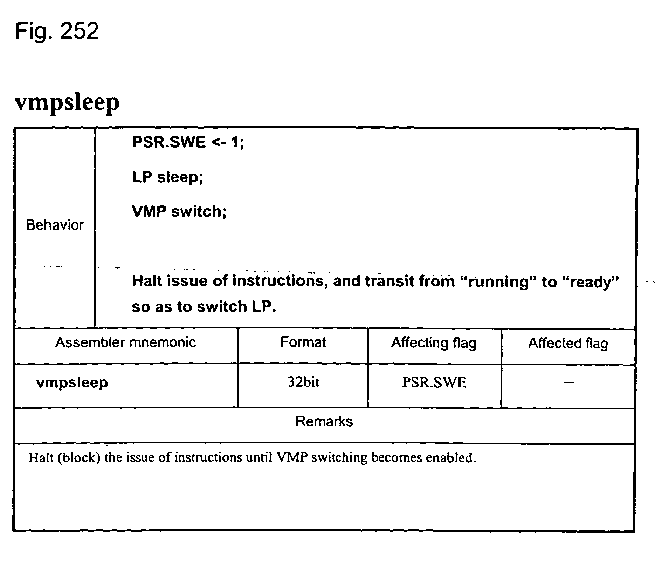

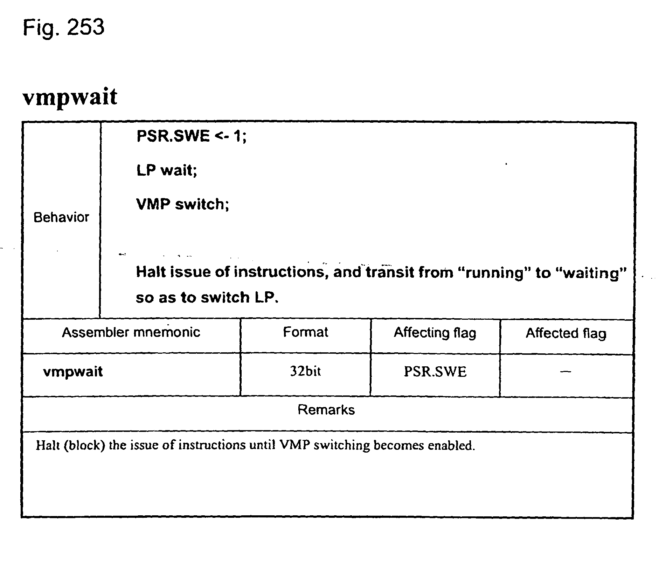

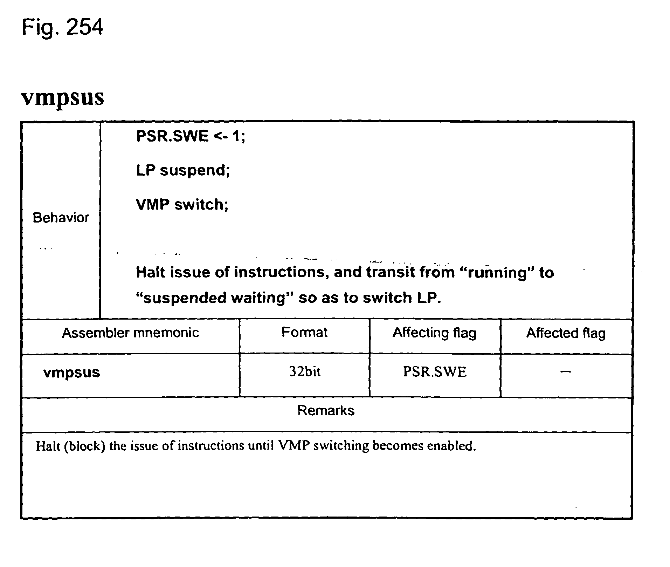

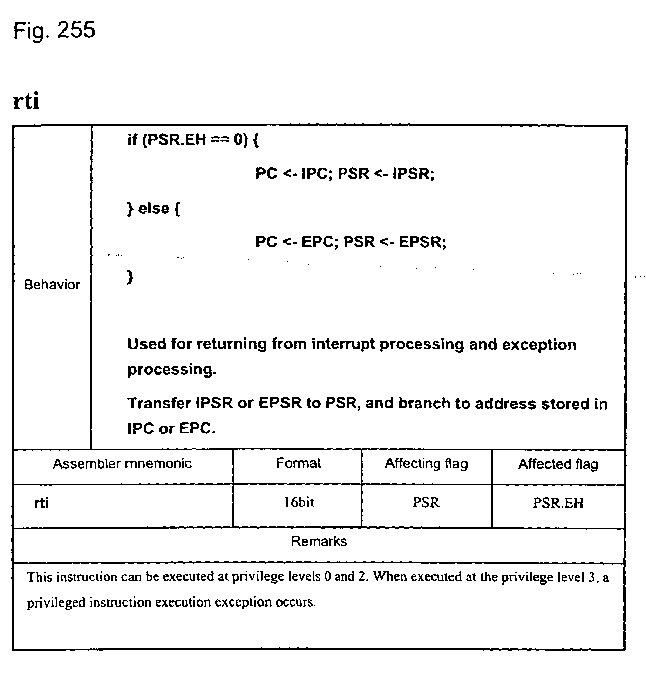

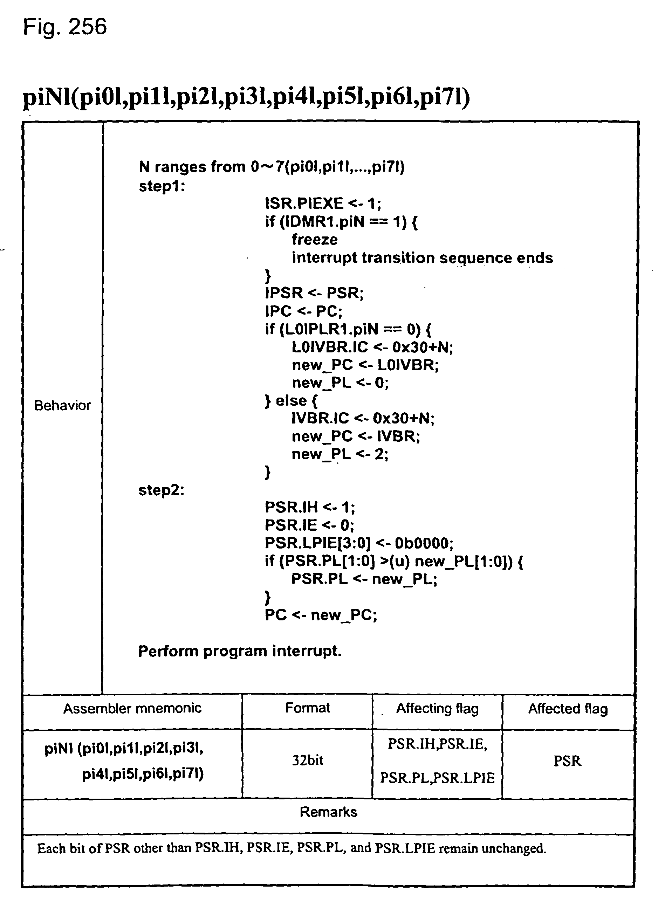

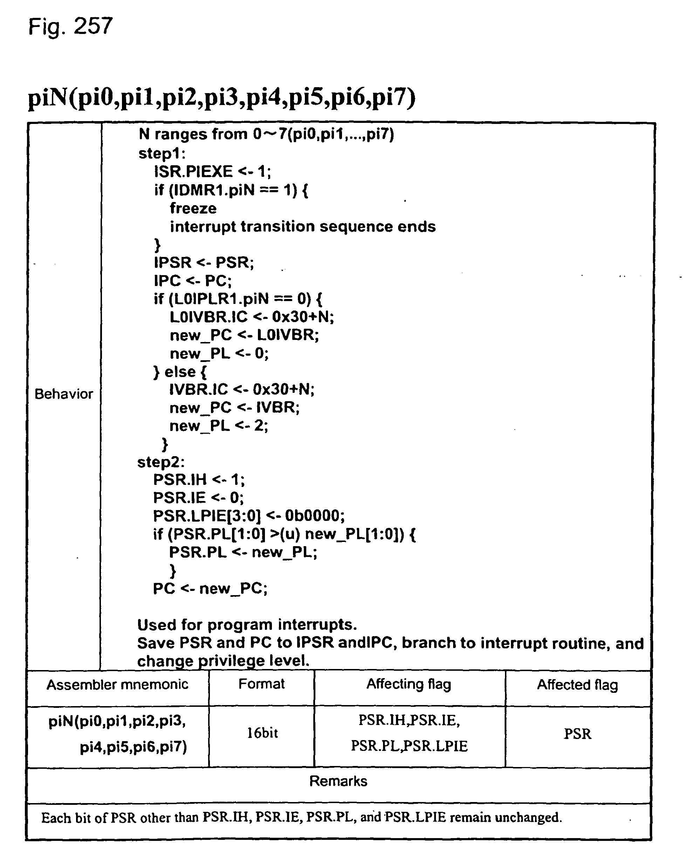

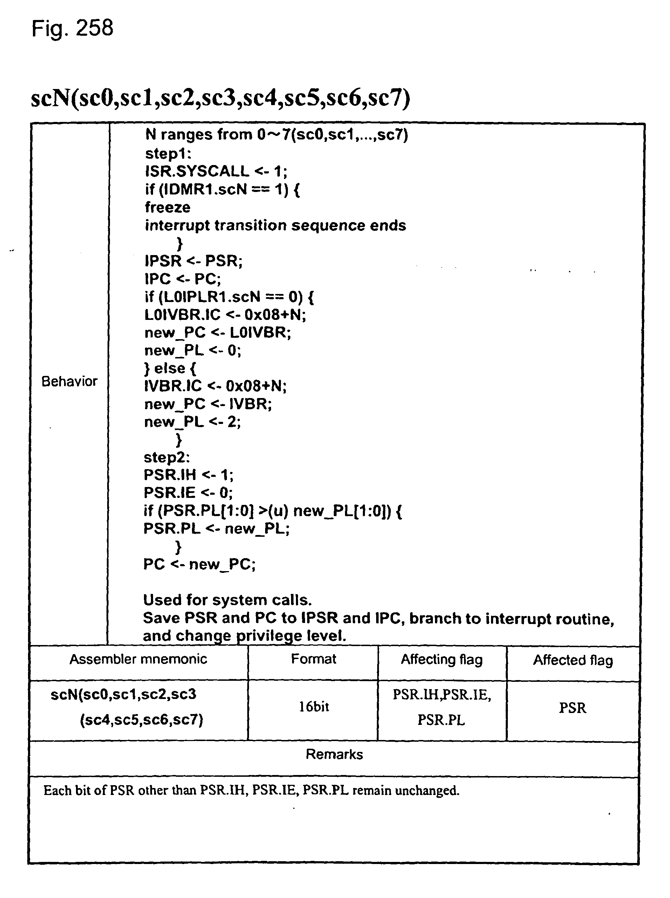

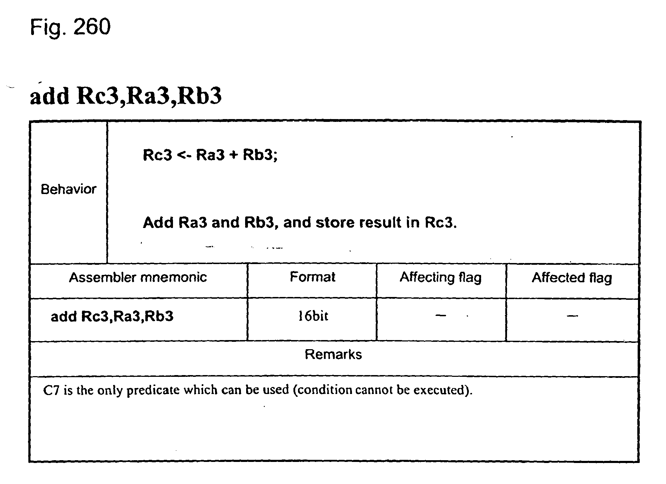

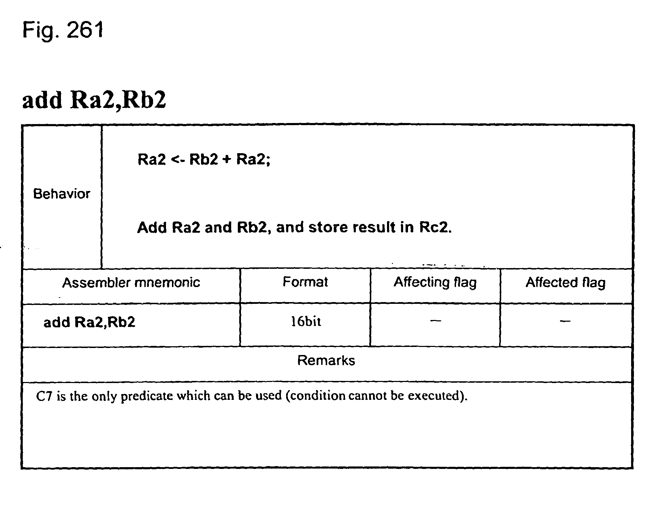

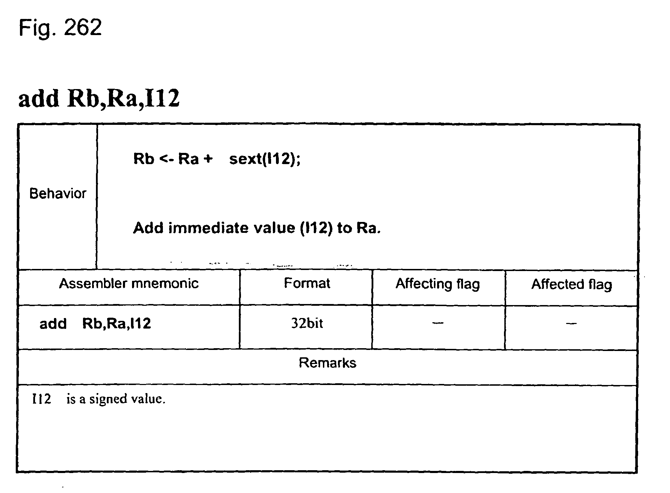

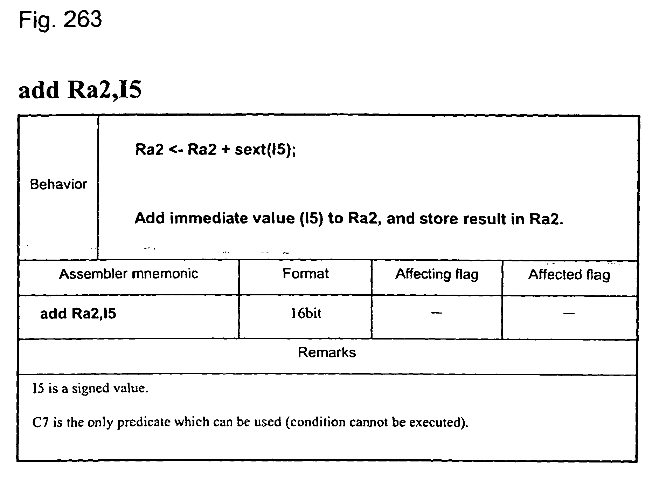

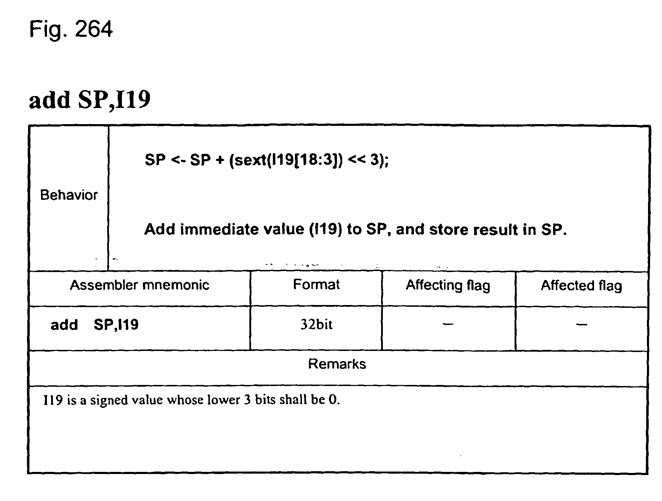

Figs.248~264 are diagrams explaining instructions relating to "VMP/interrupt".

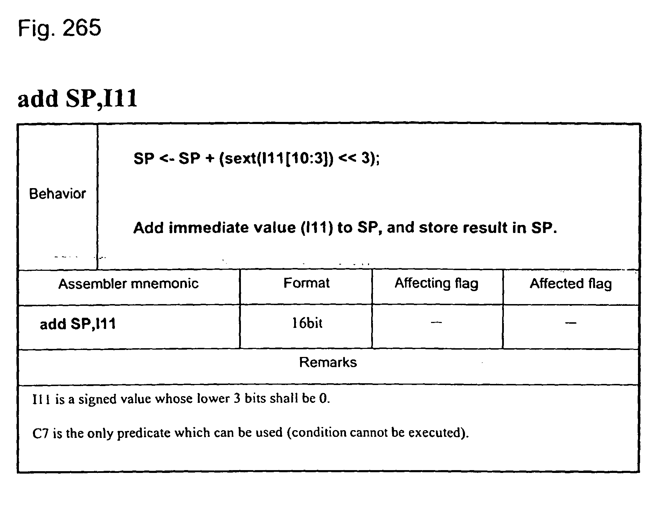

Figs.265~258 are diagrams explaining instructions relating to "program interrupt".

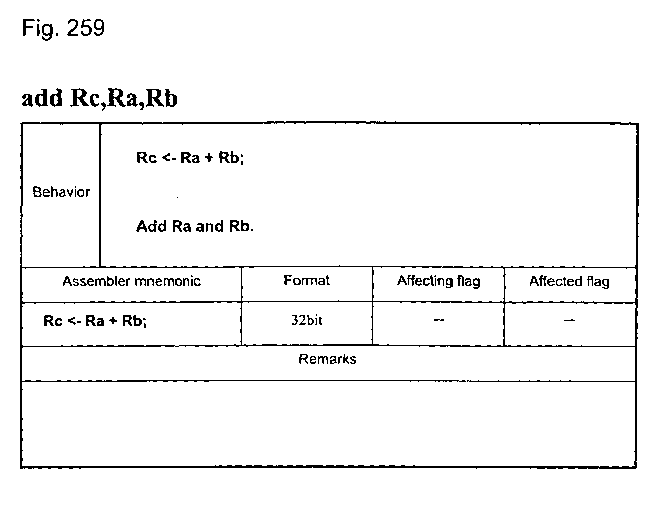

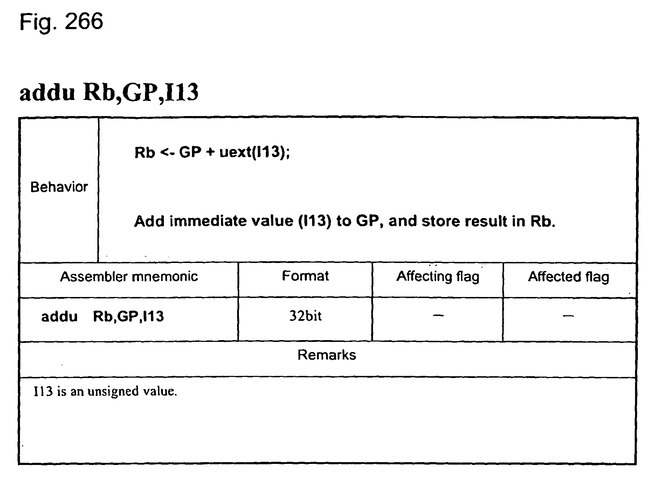

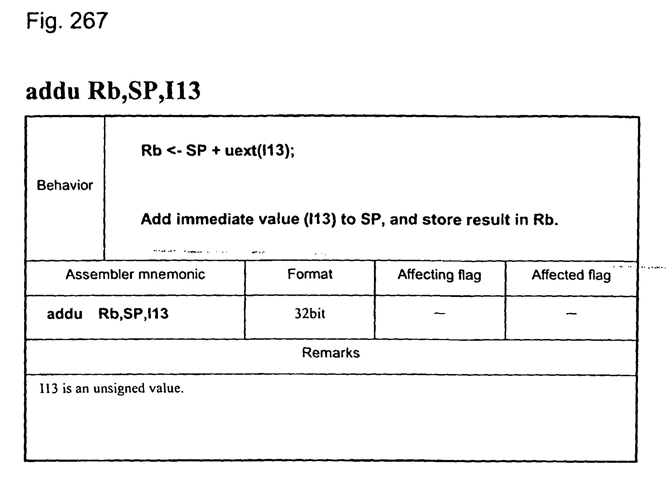

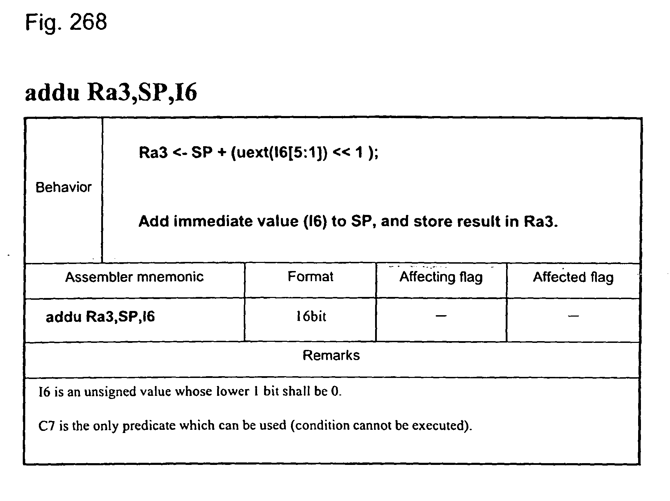

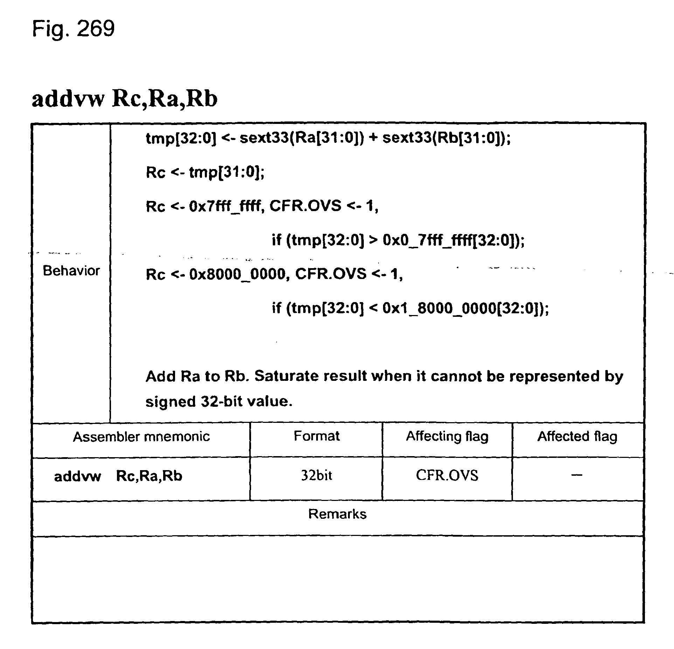

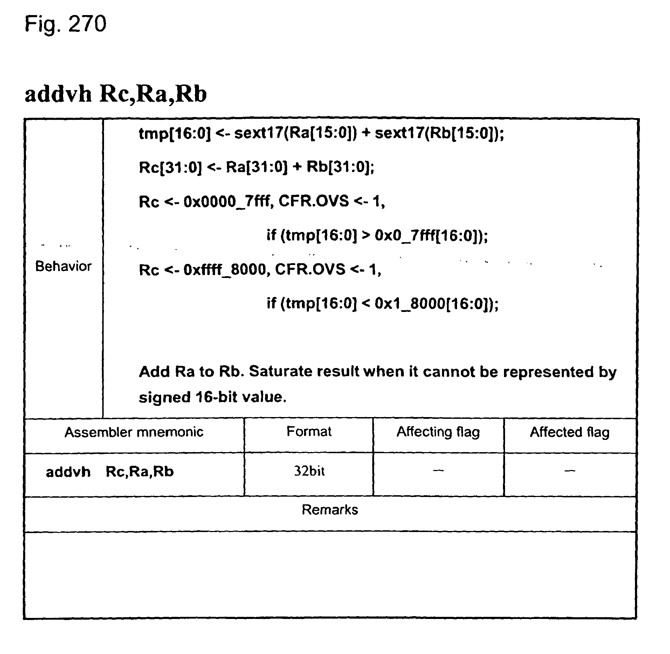

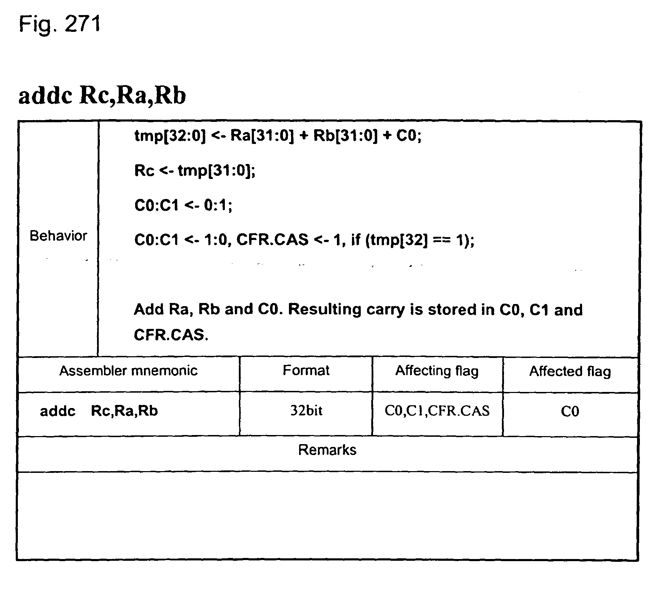

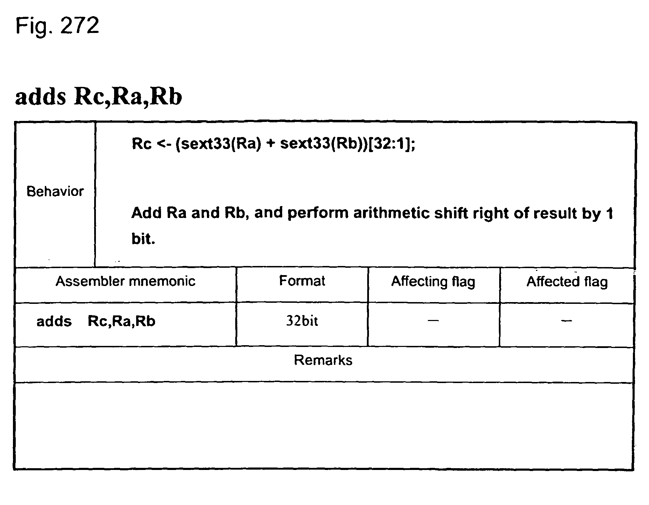

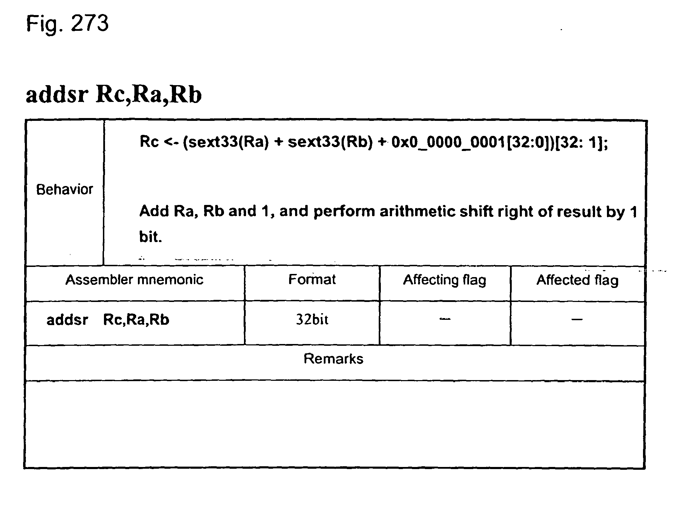

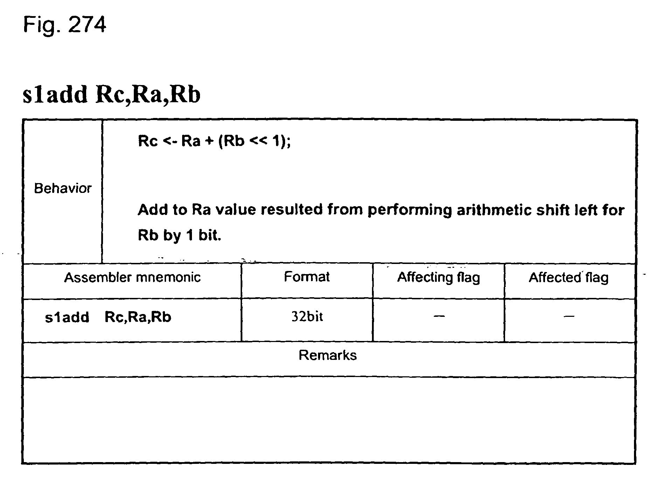

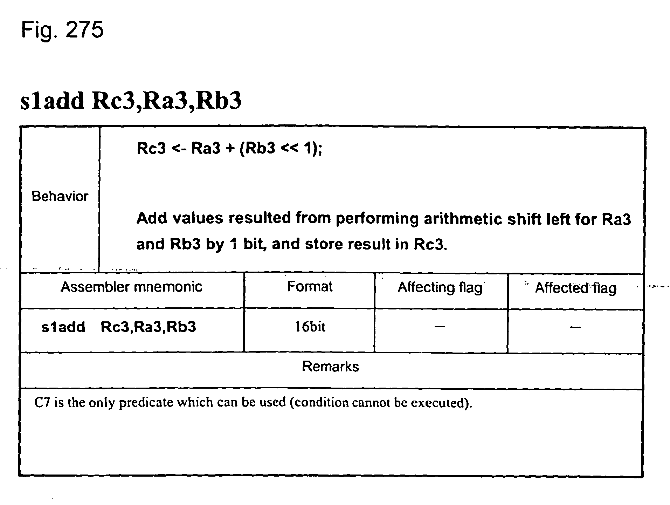

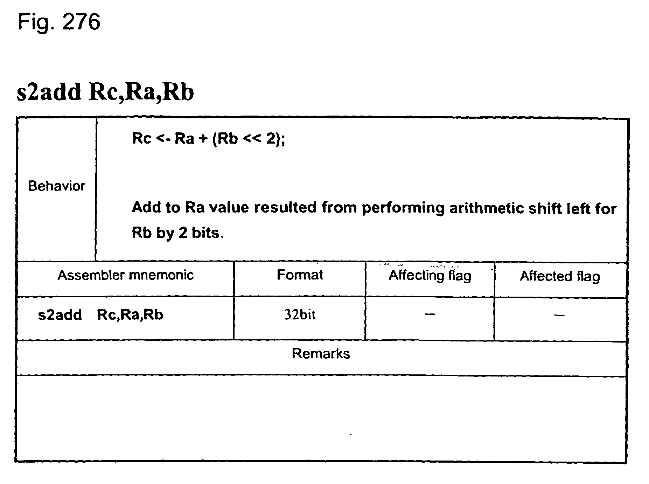

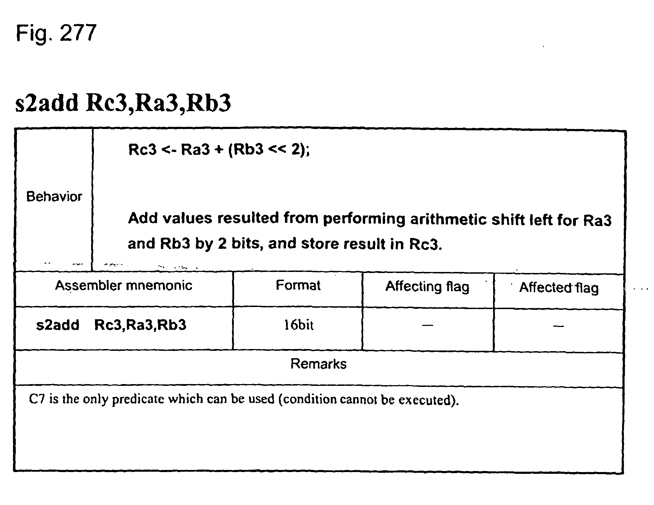

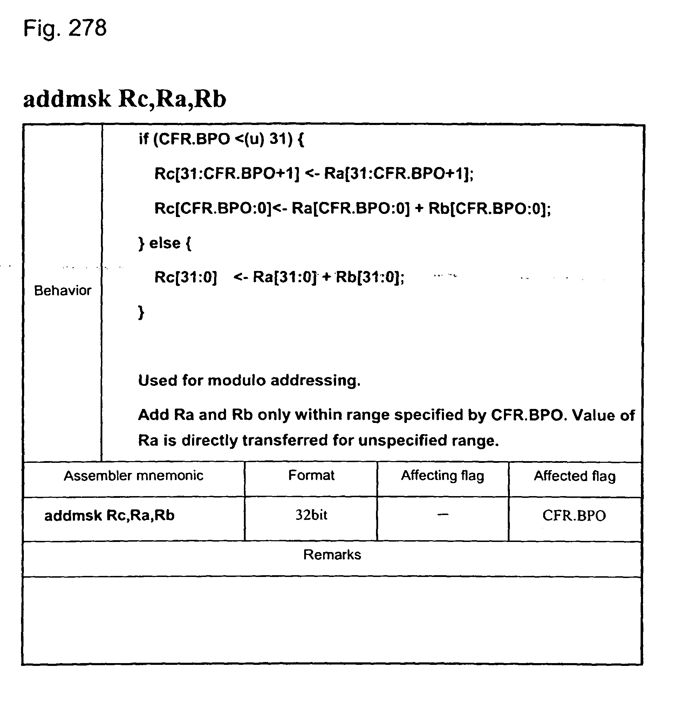

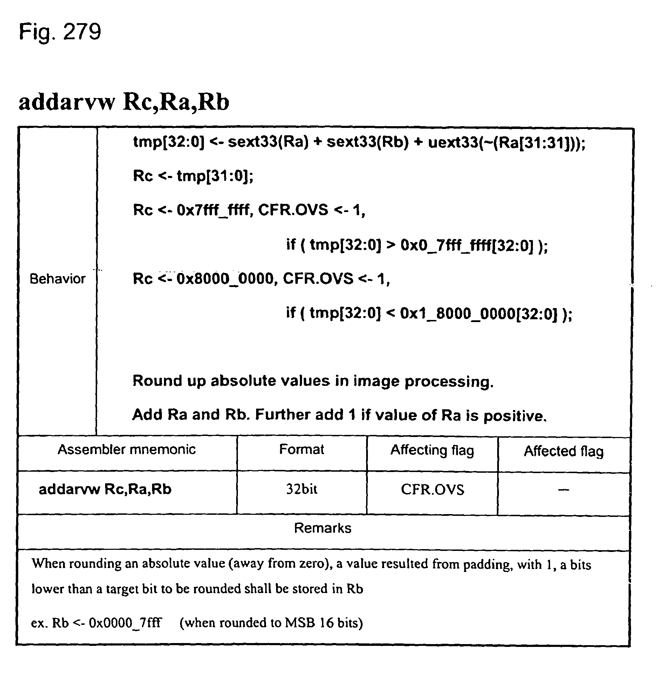

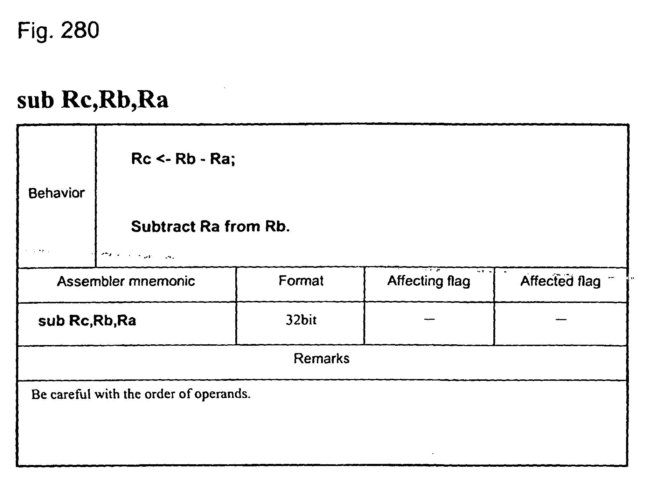

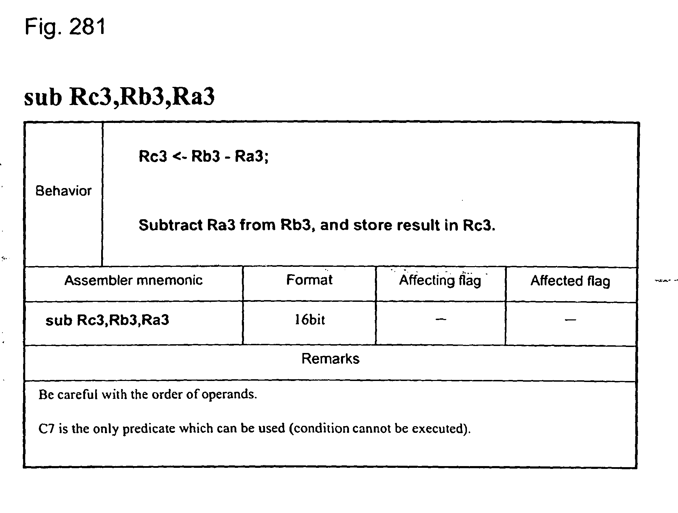

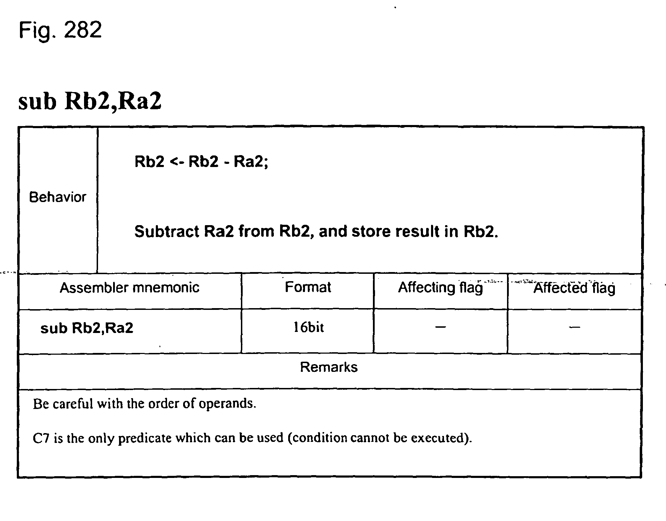

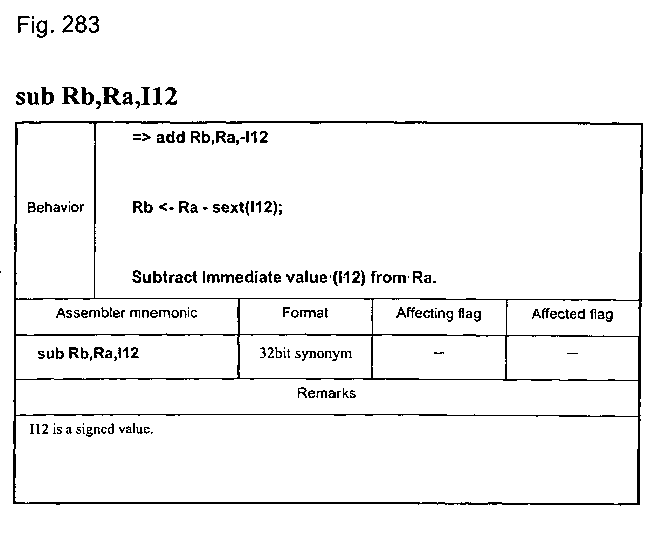

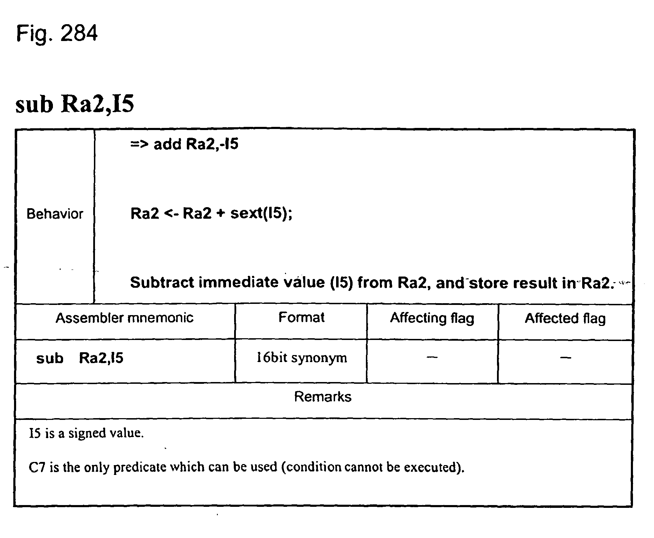

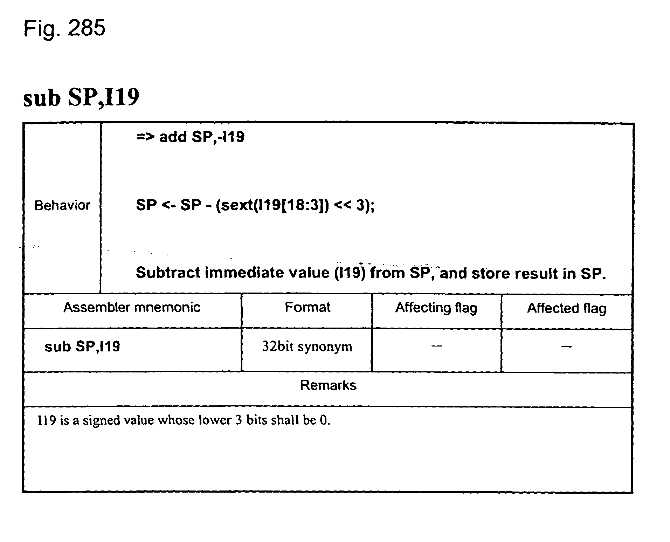

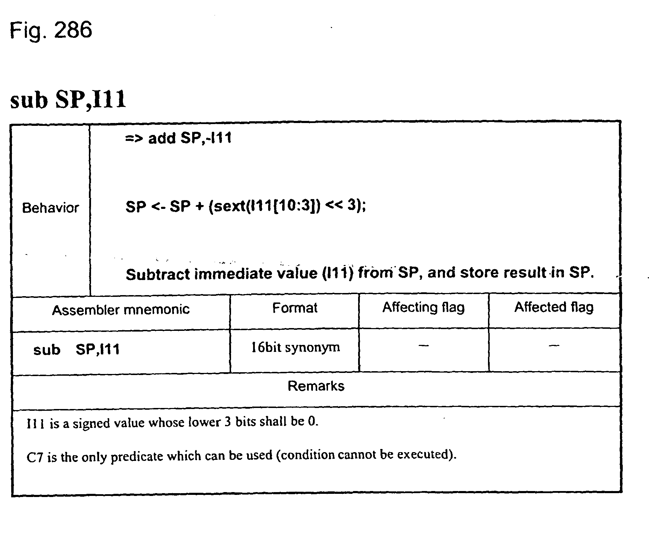

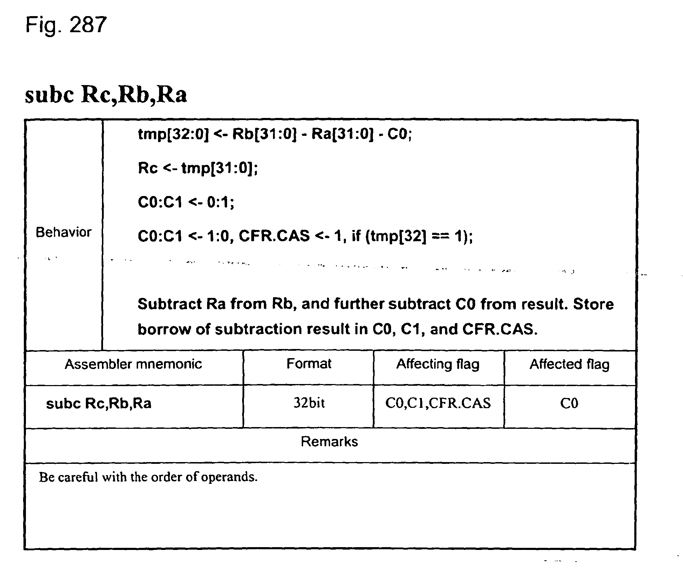

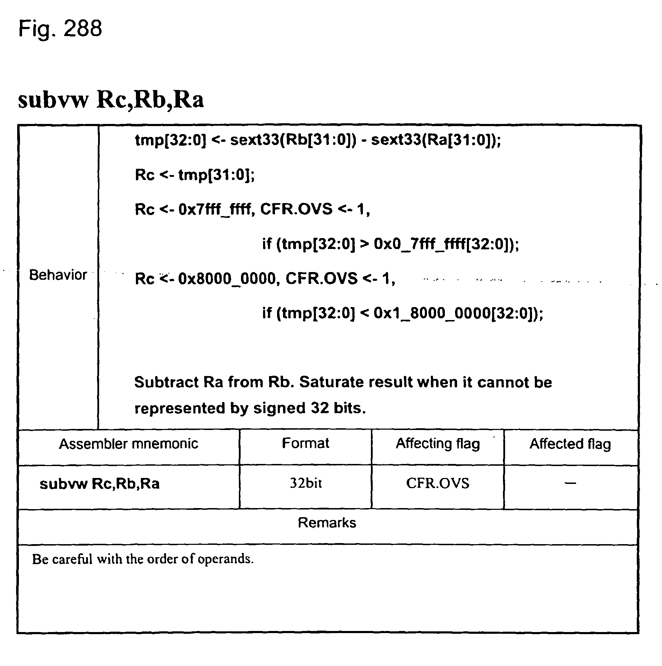

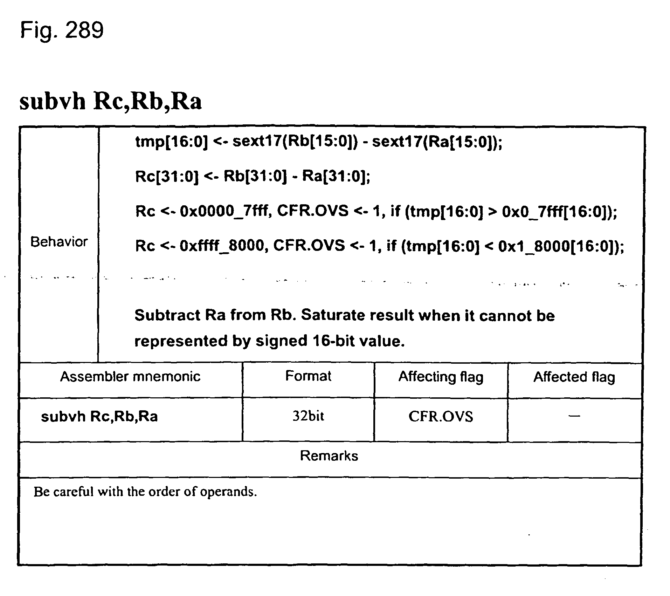

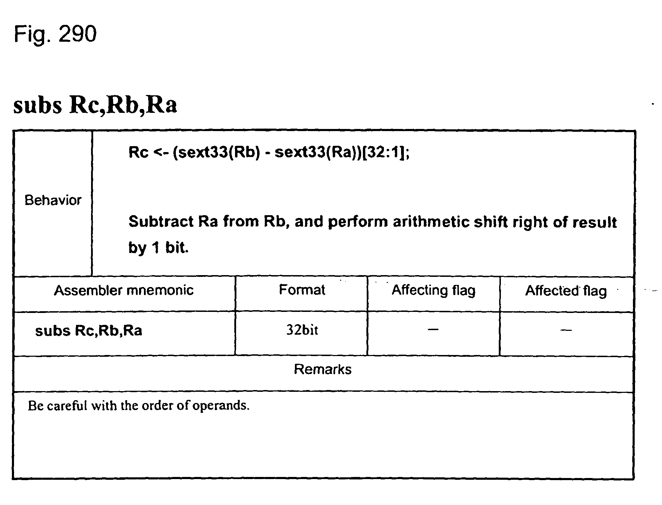

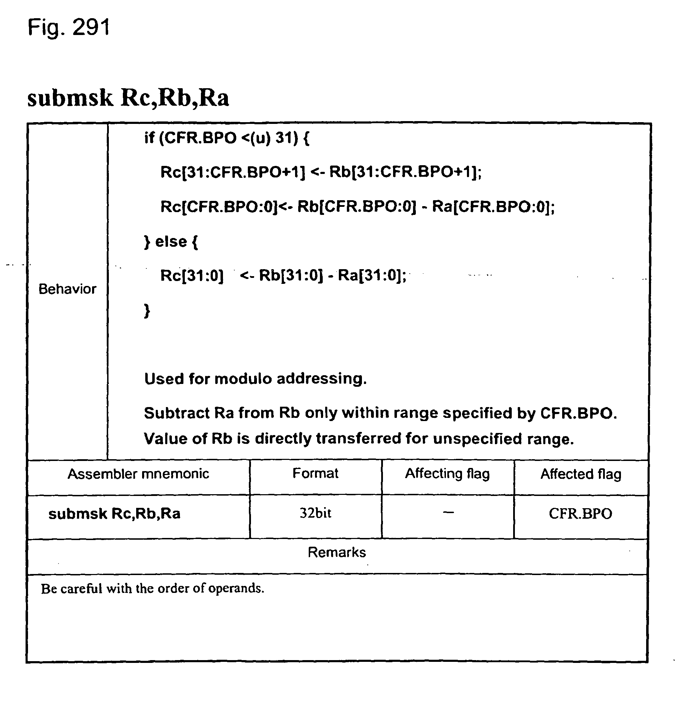

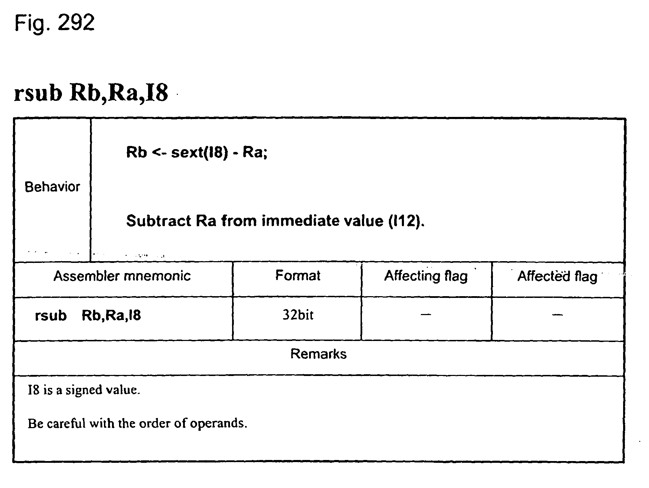

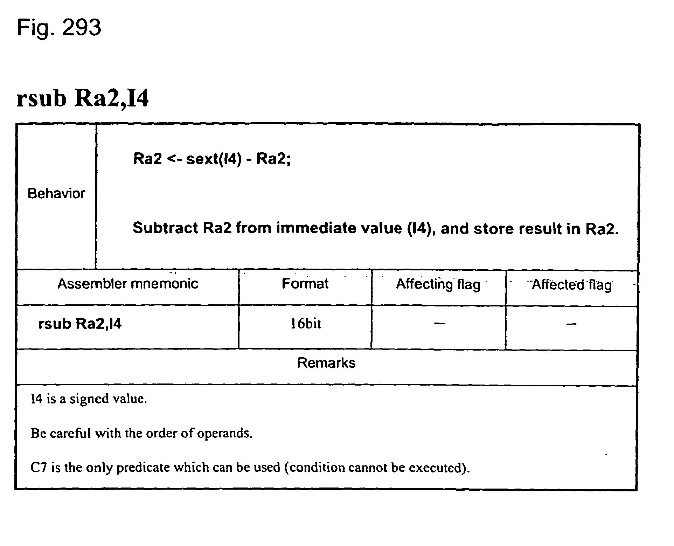

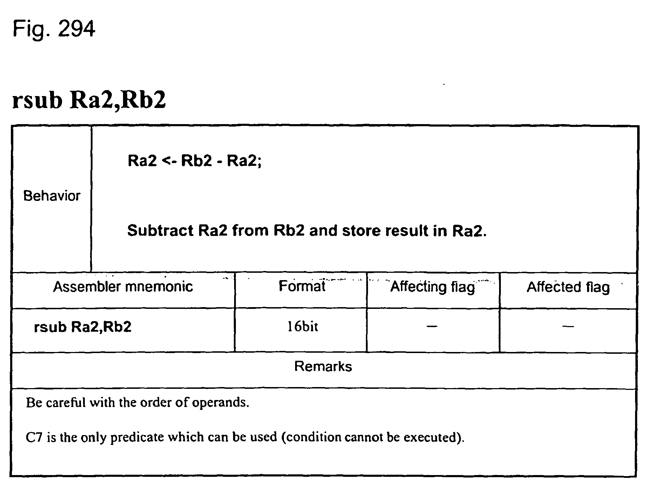

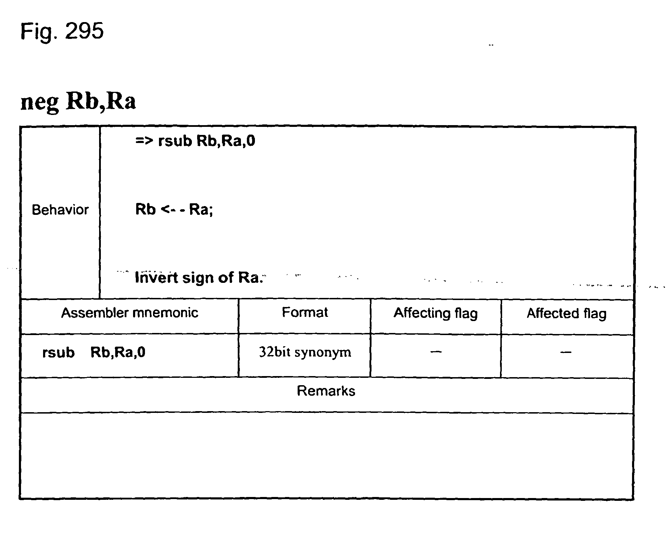

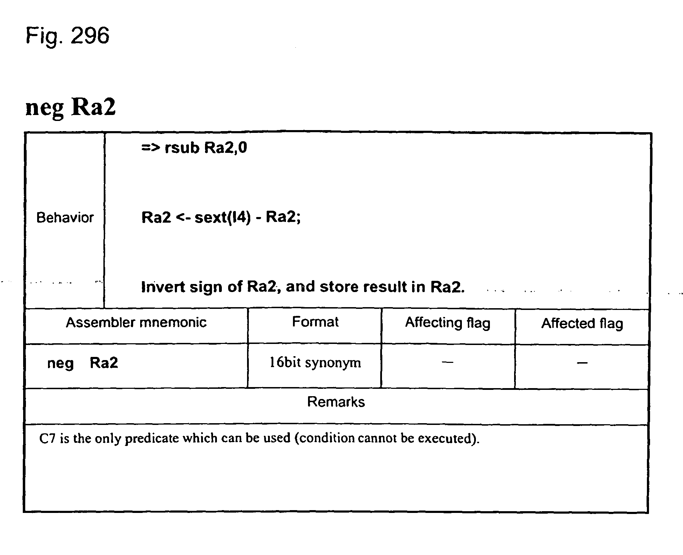

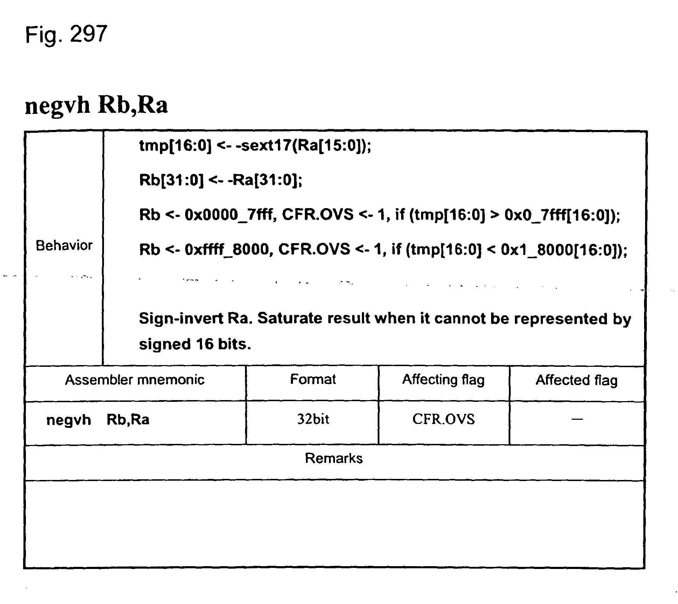

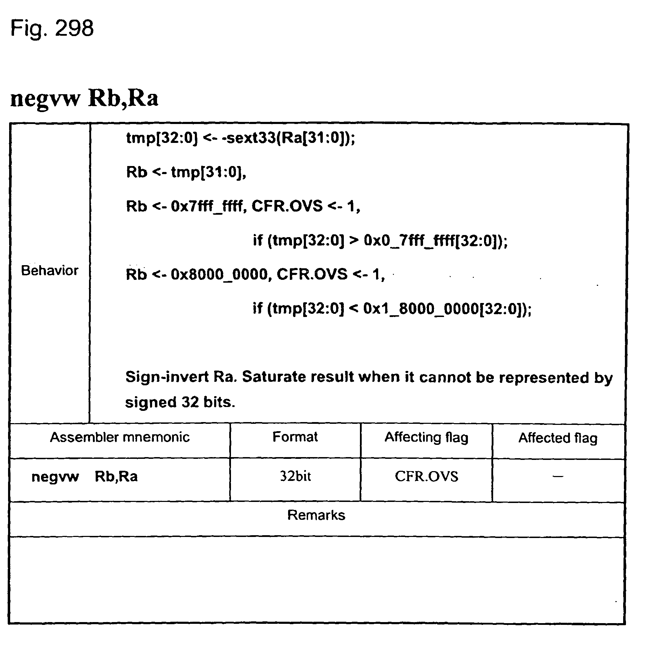

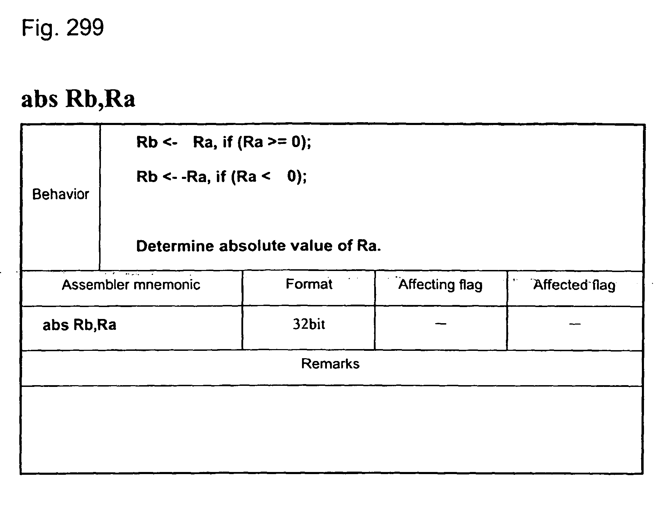

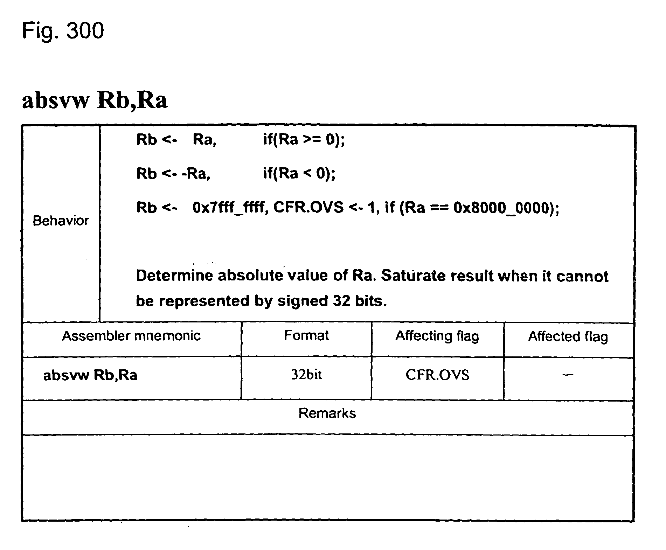

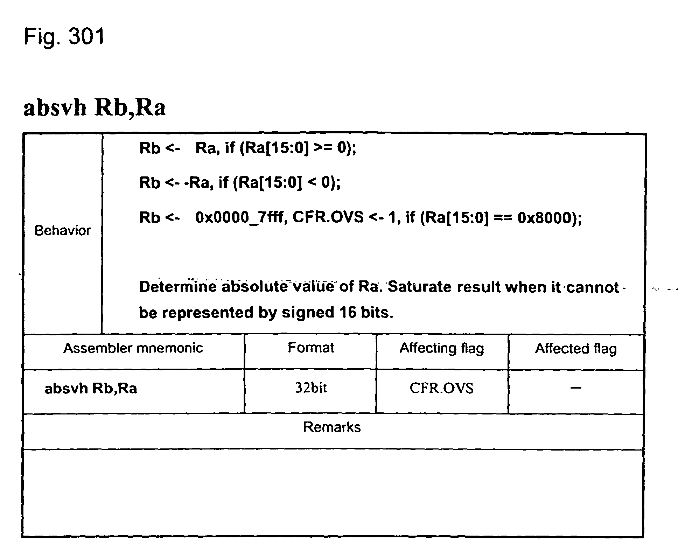

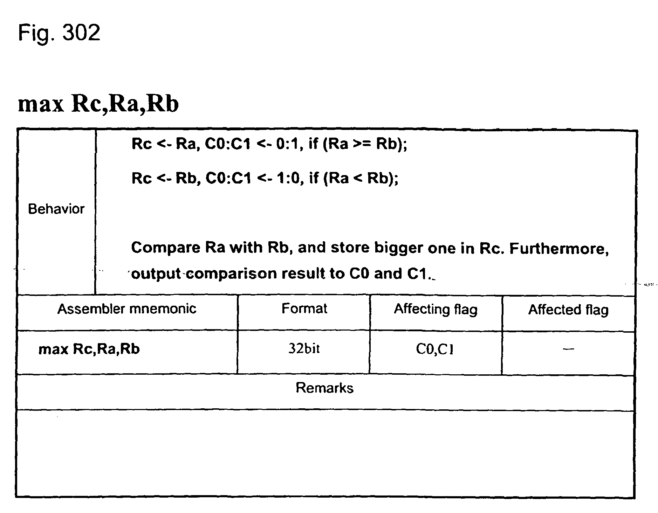

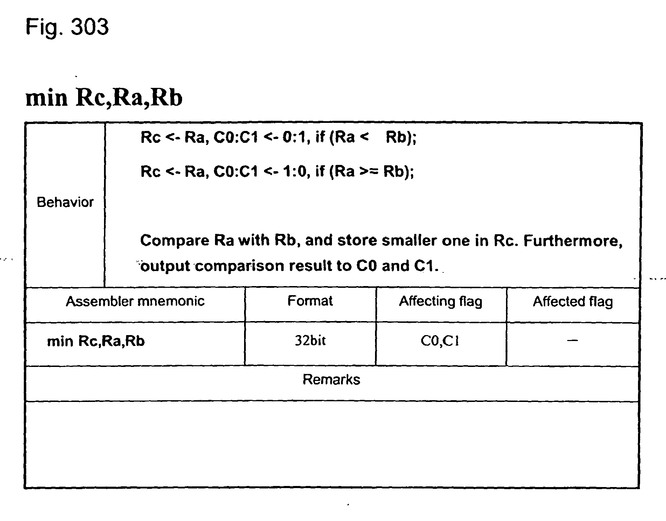

Figs.259~303 are diagrams explaining instructions relating to "arithmetic".

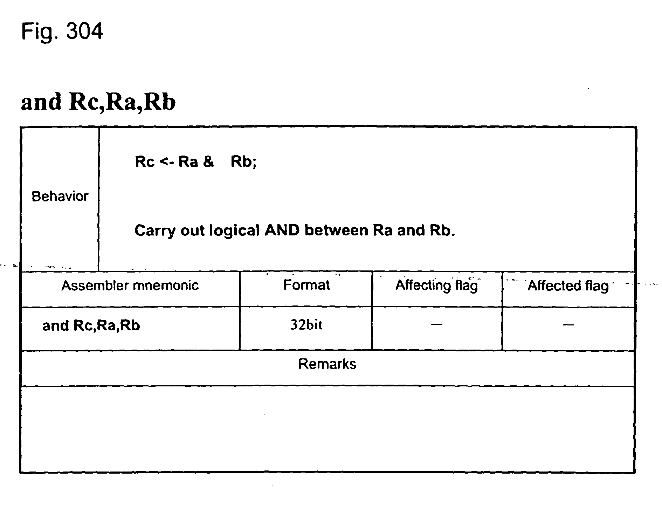

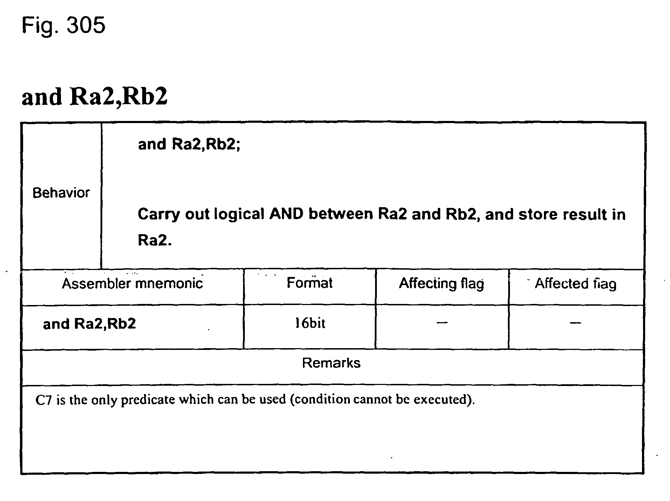

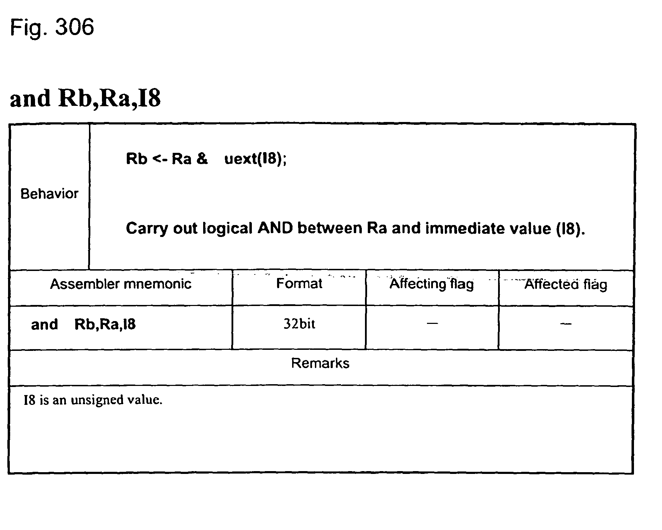

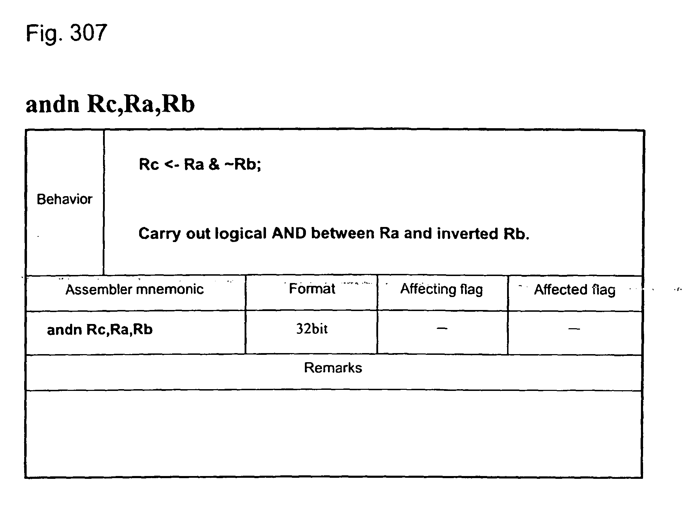

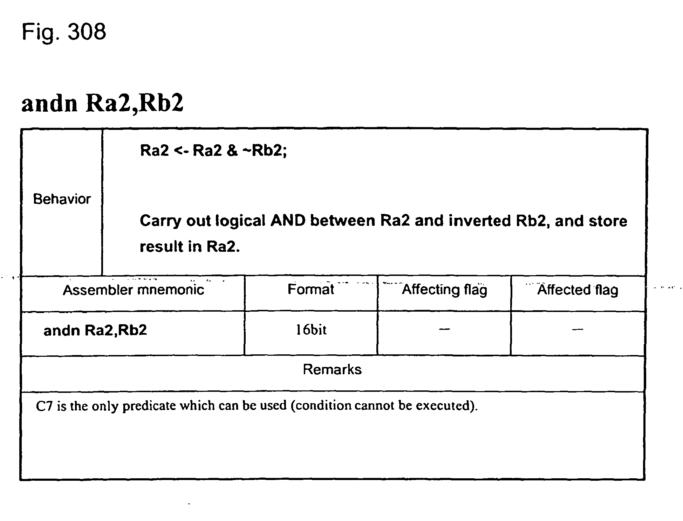

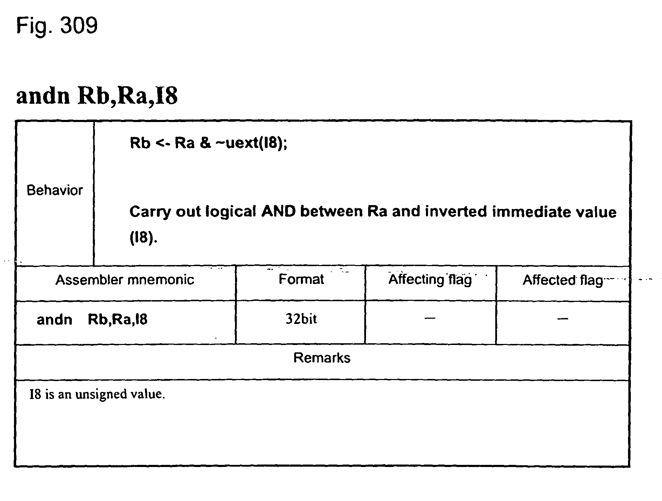

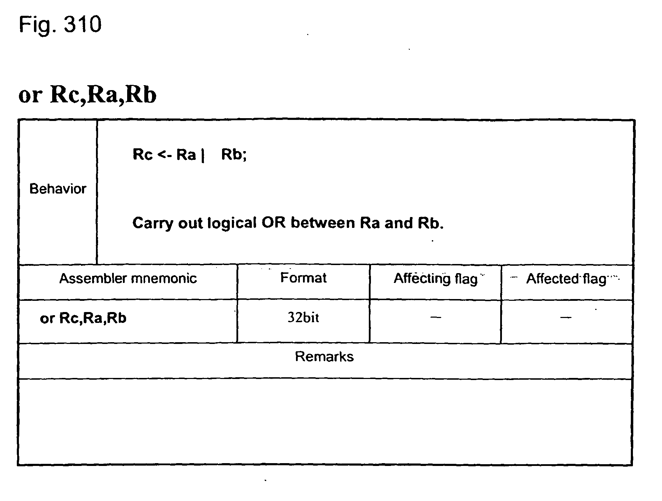

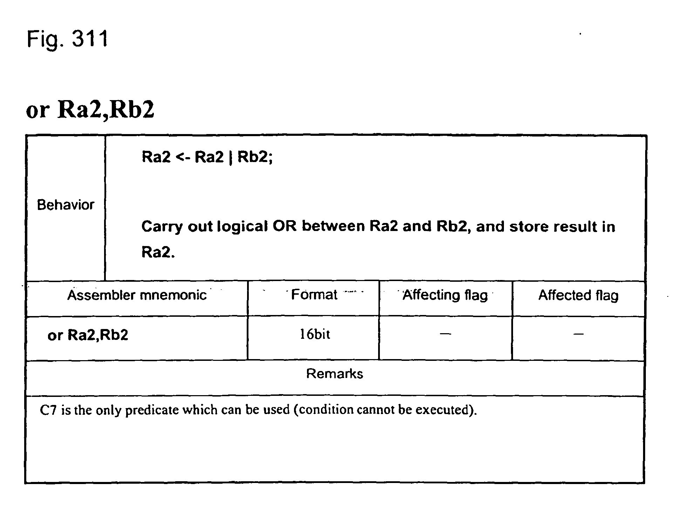

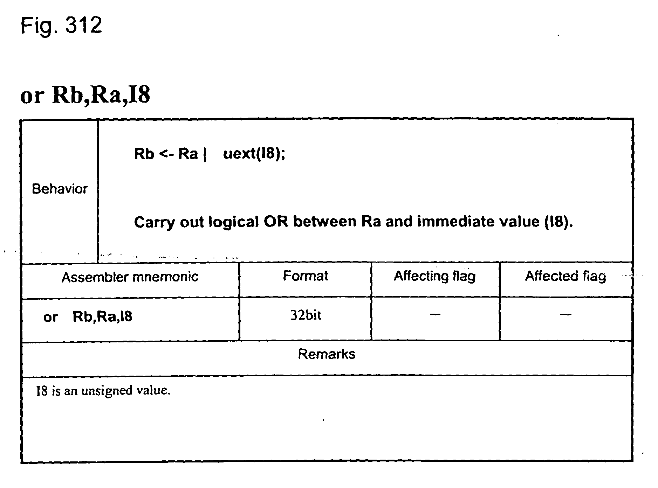

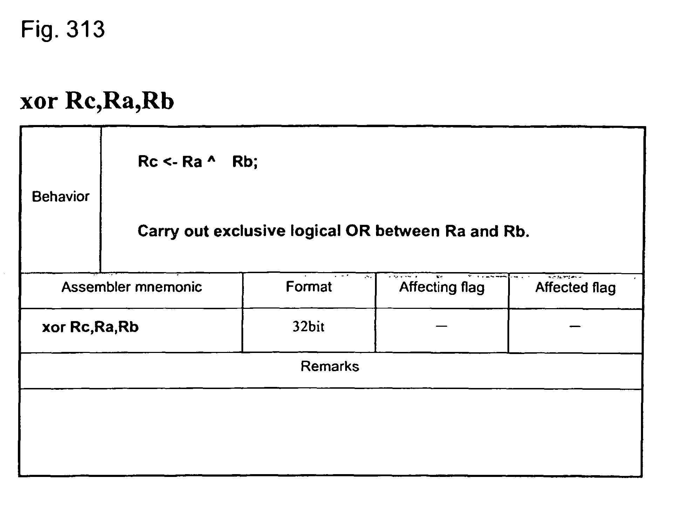

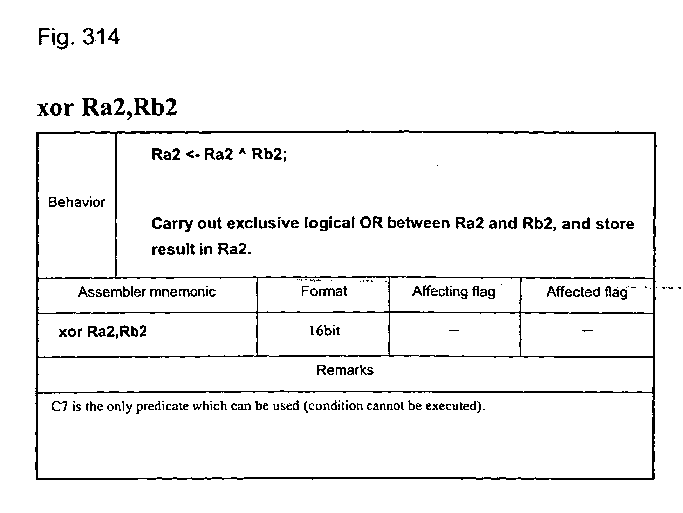

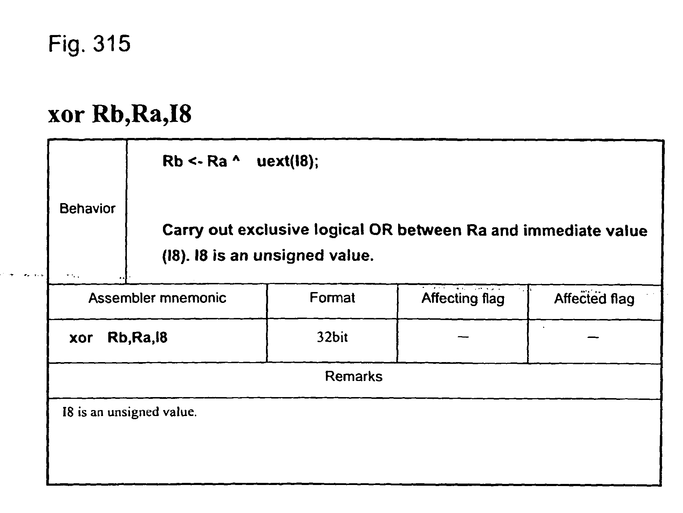

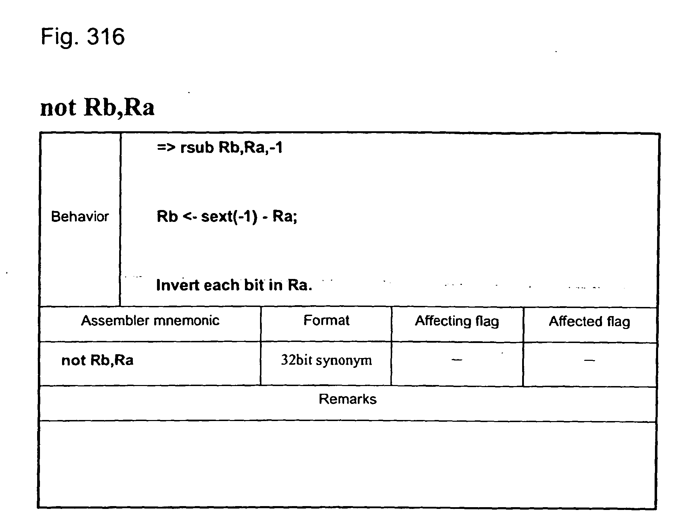

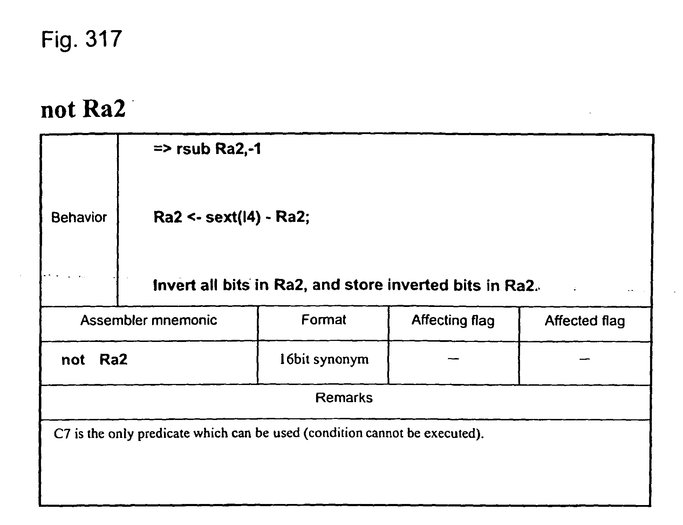

Figs.304~317 are diagrams explaining instructions relating to "logic".

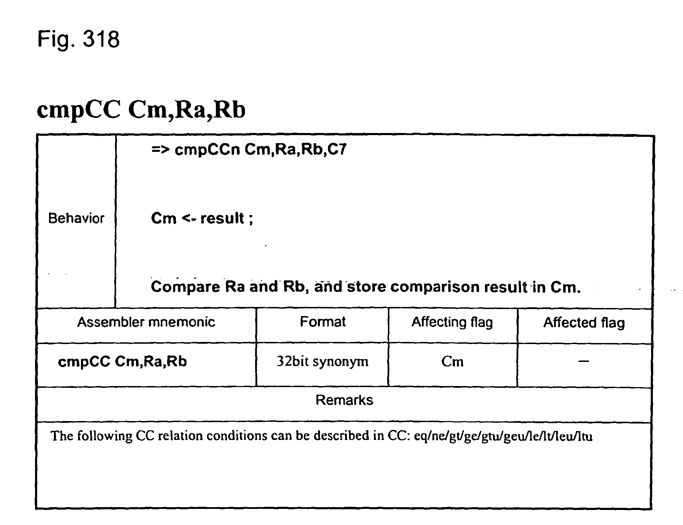

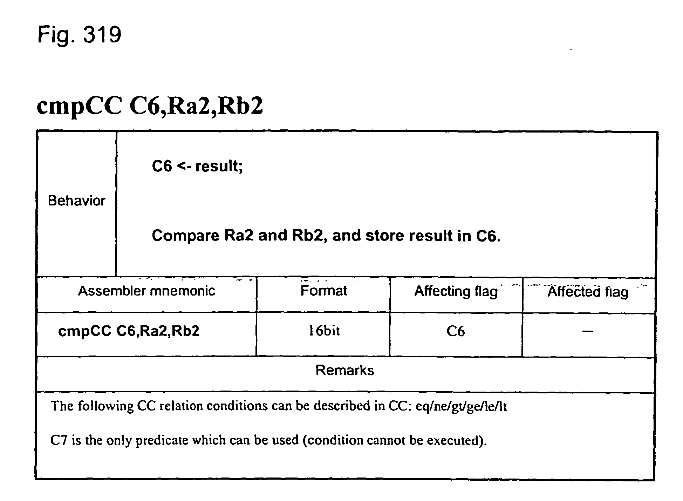

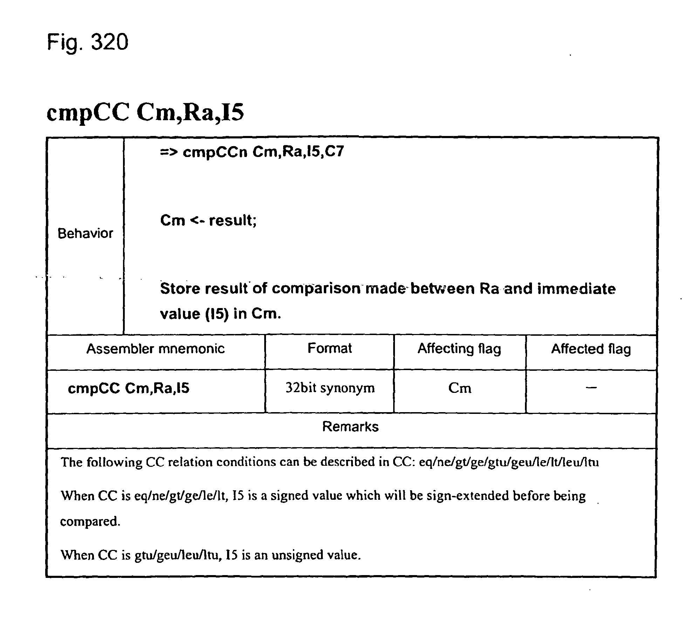

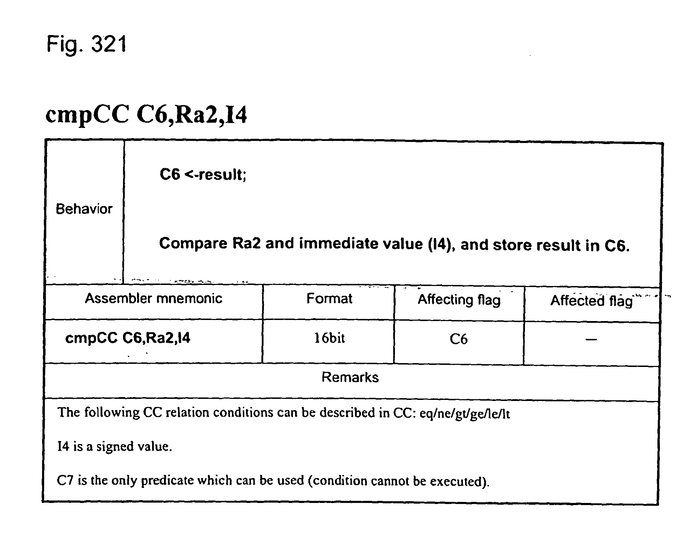

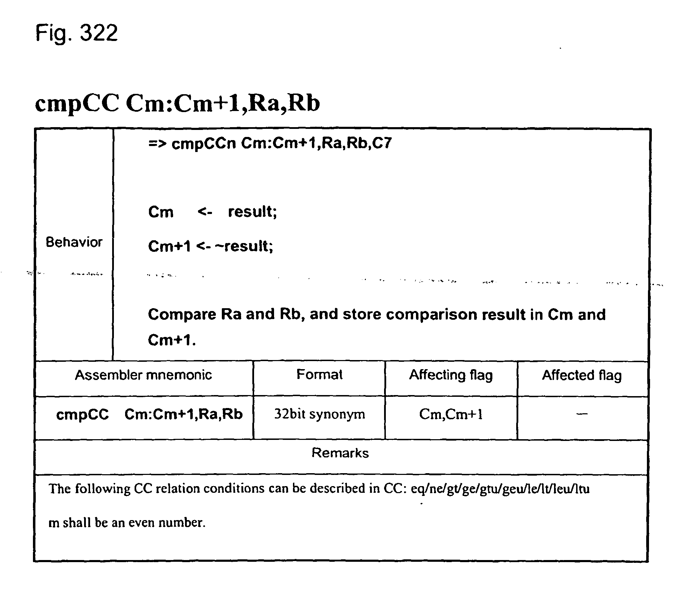

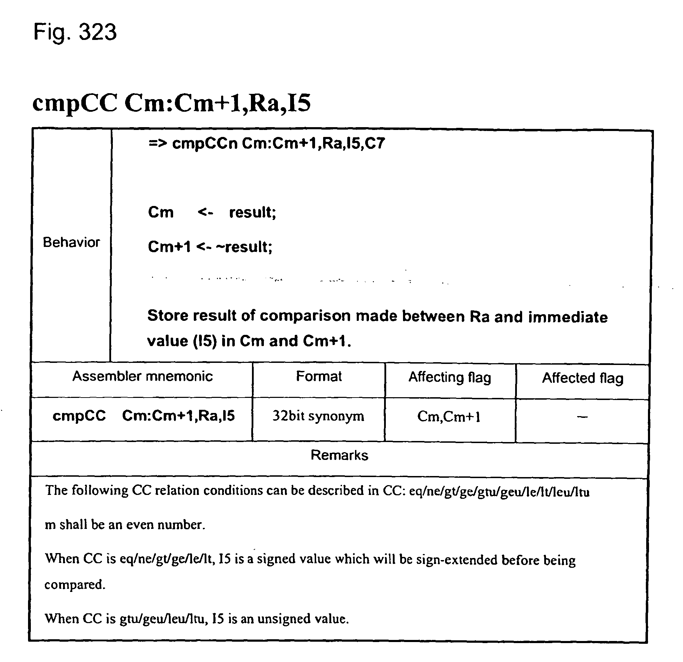

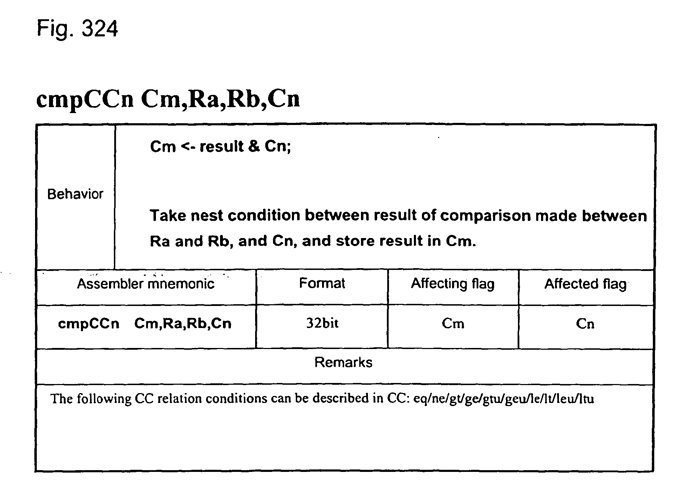

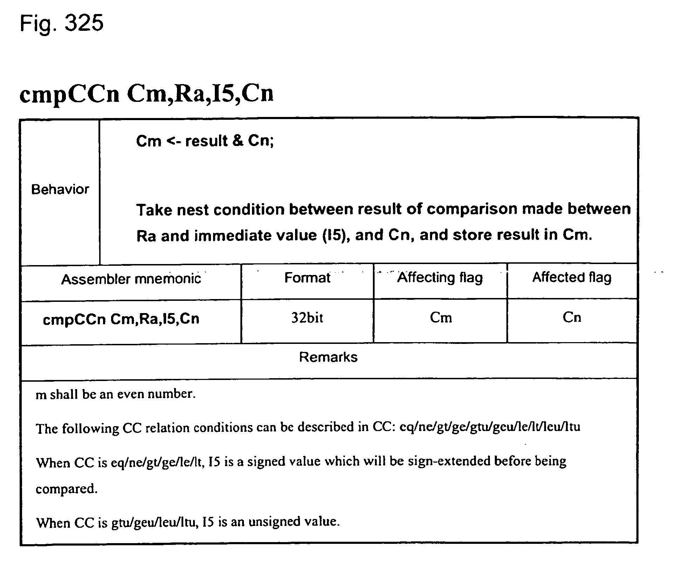

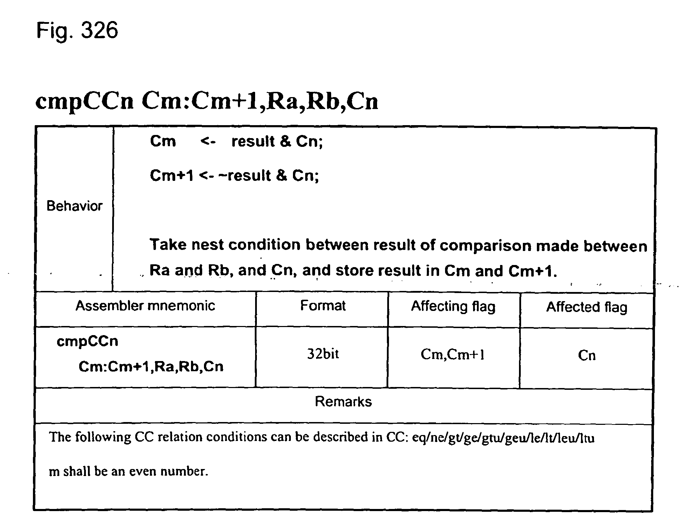

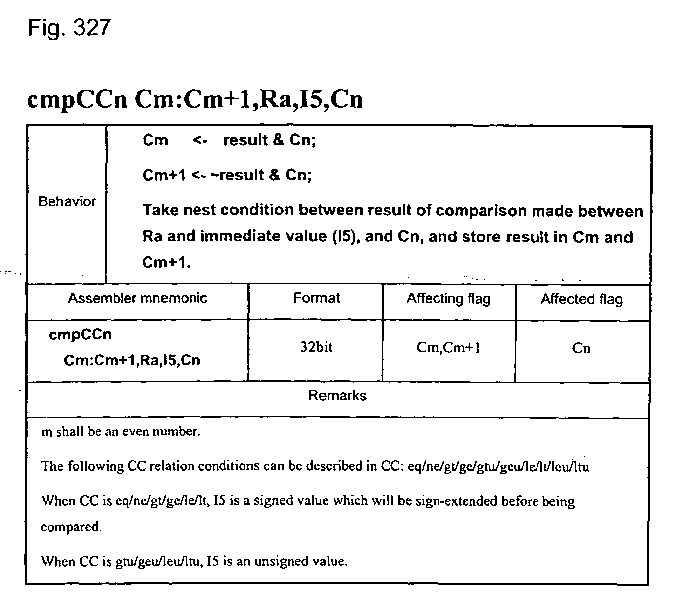

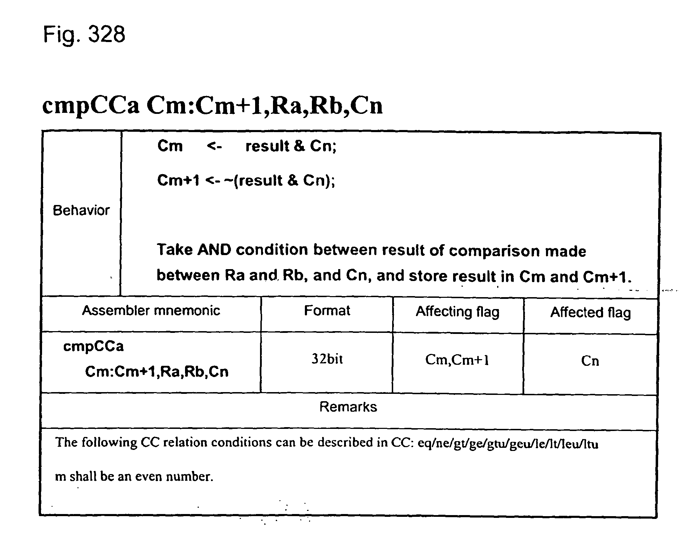

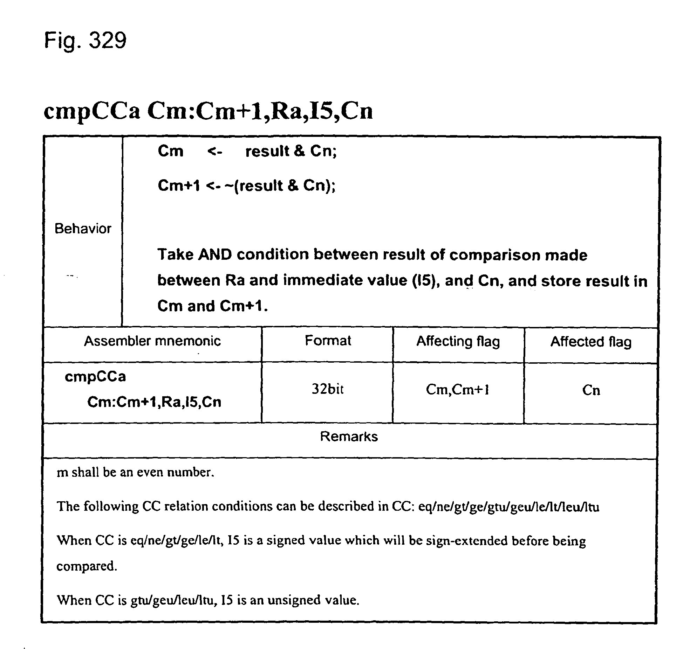

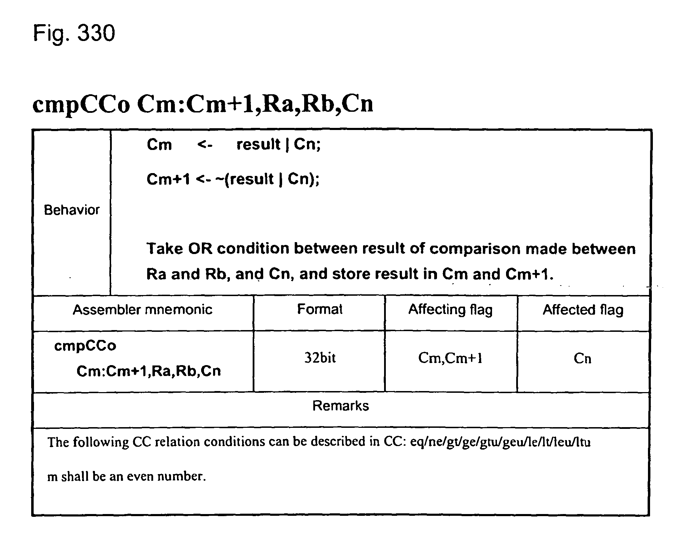

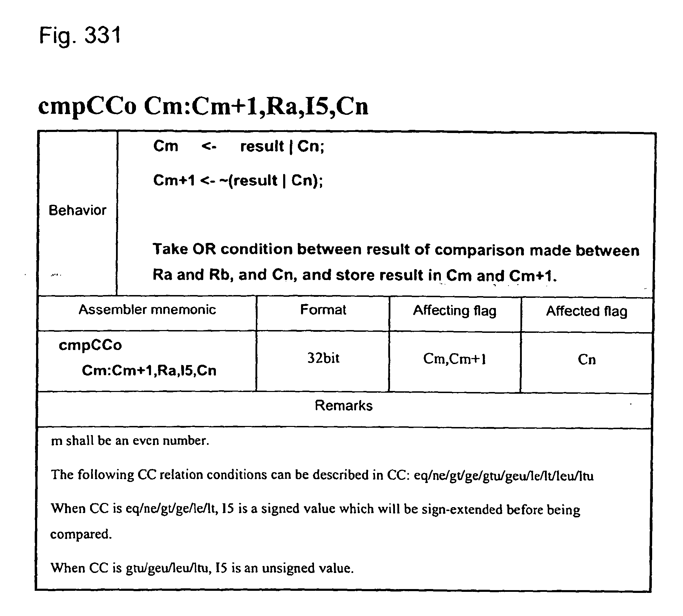

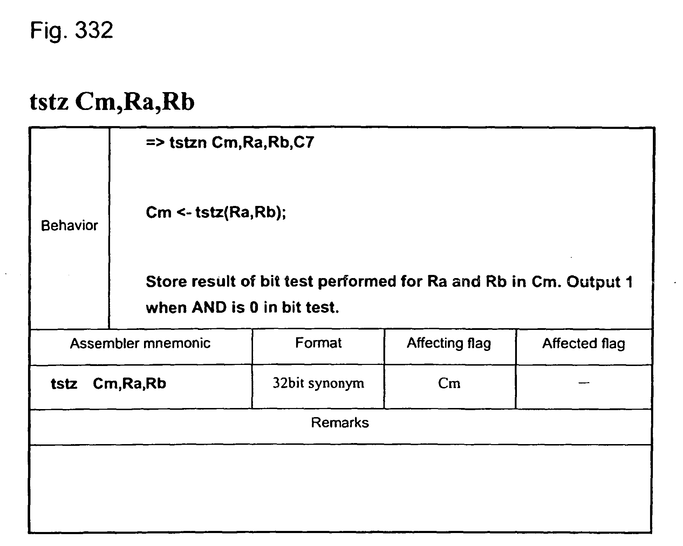

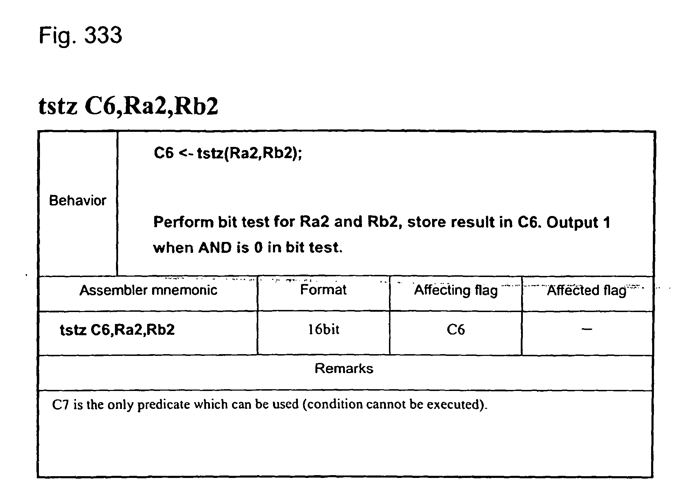

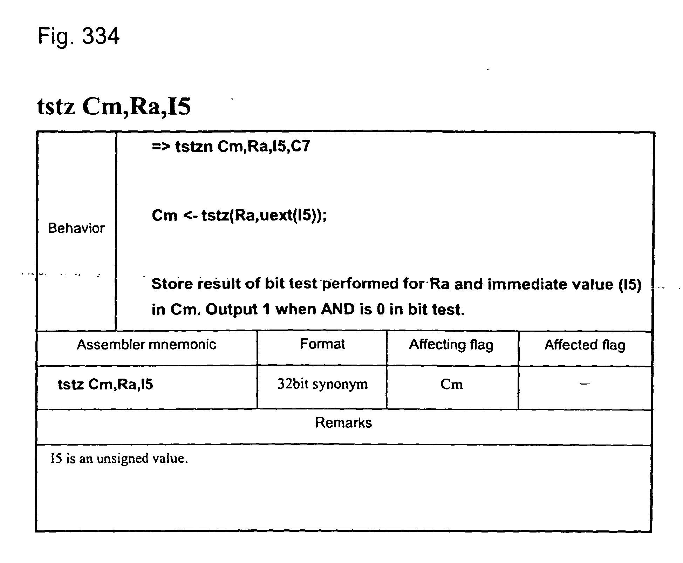

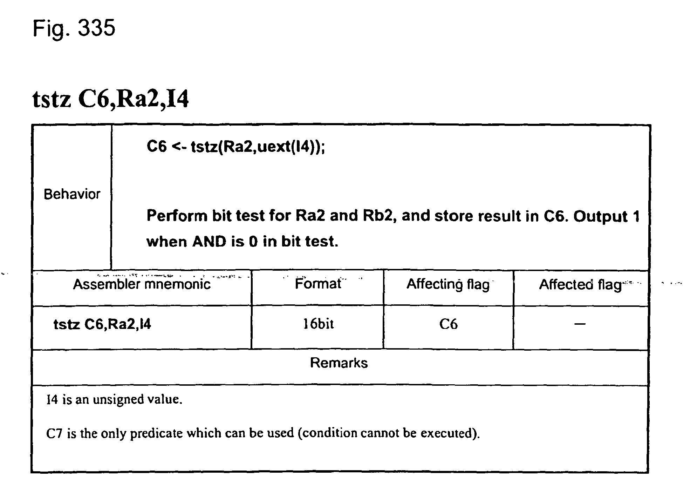

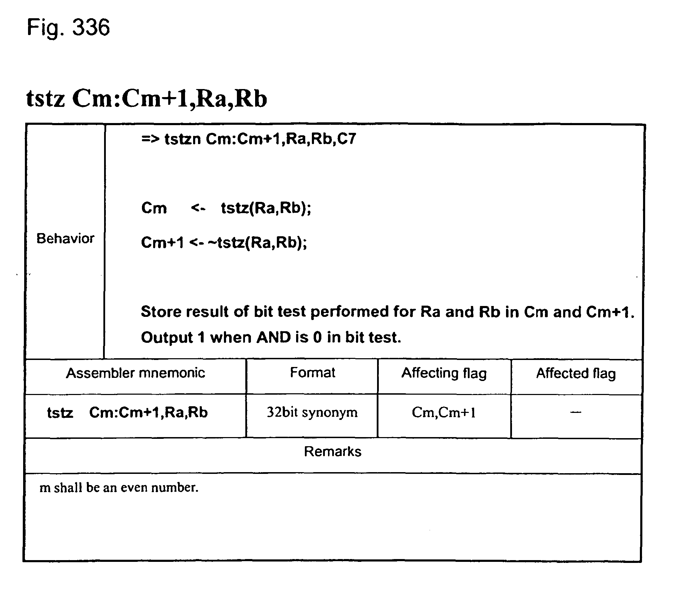

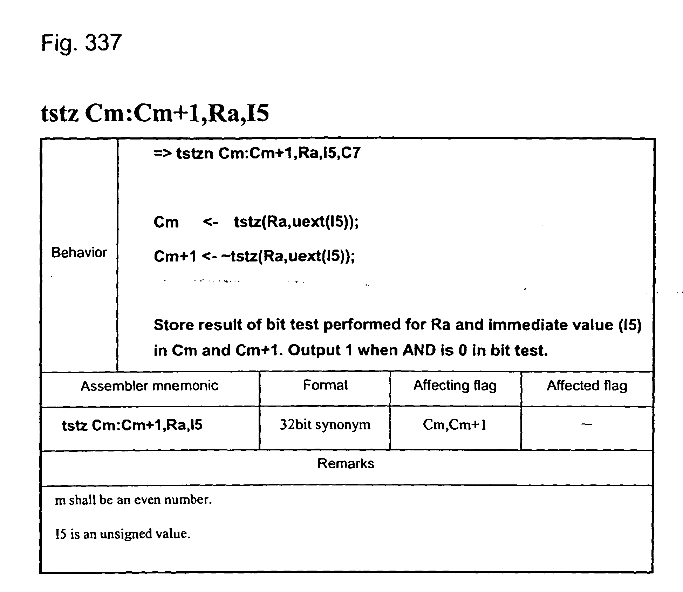

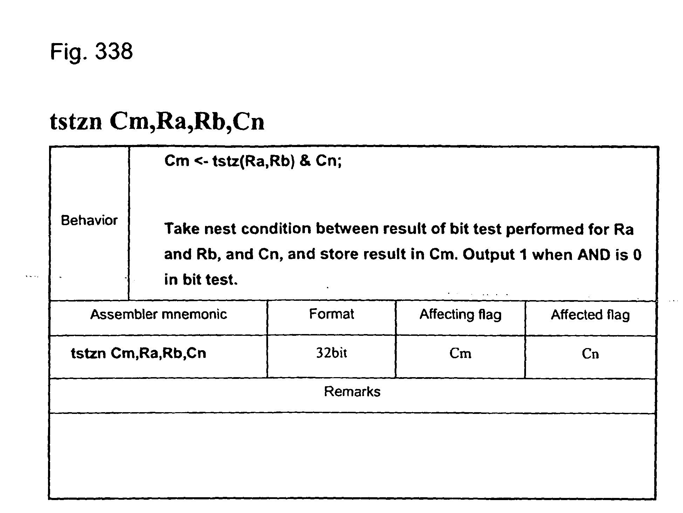

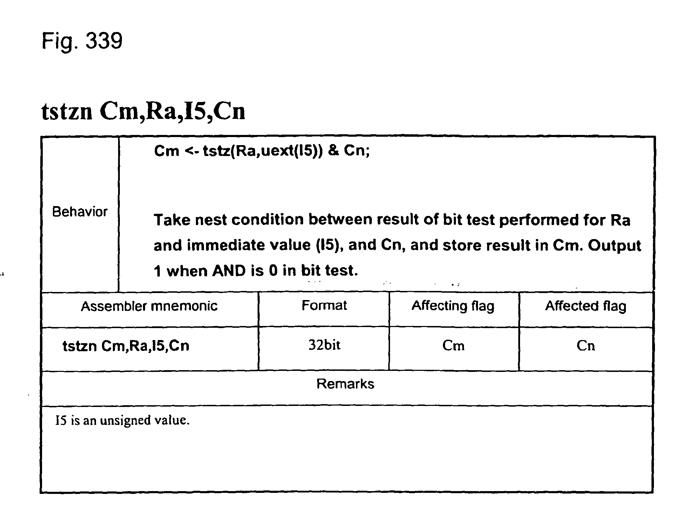

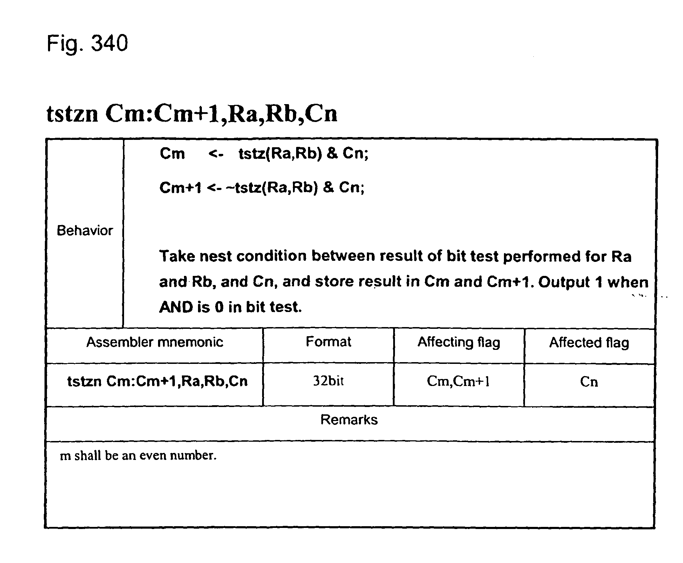

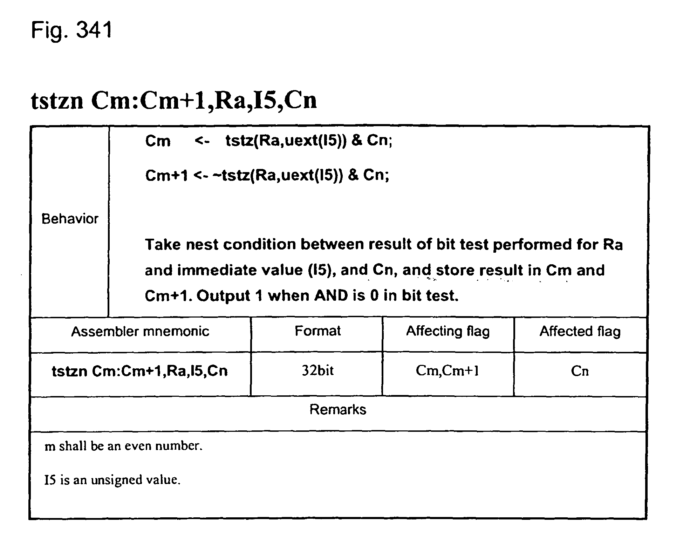

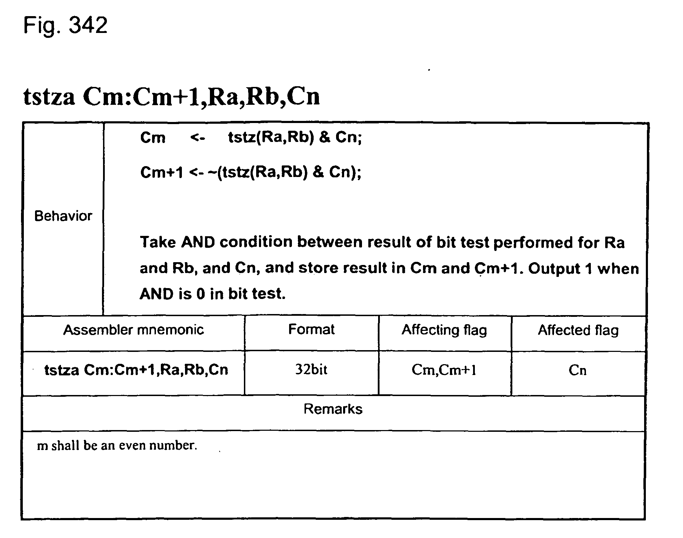

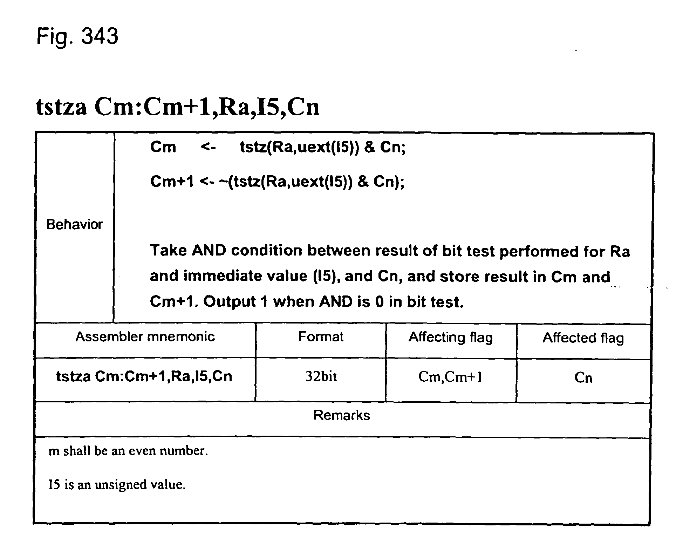

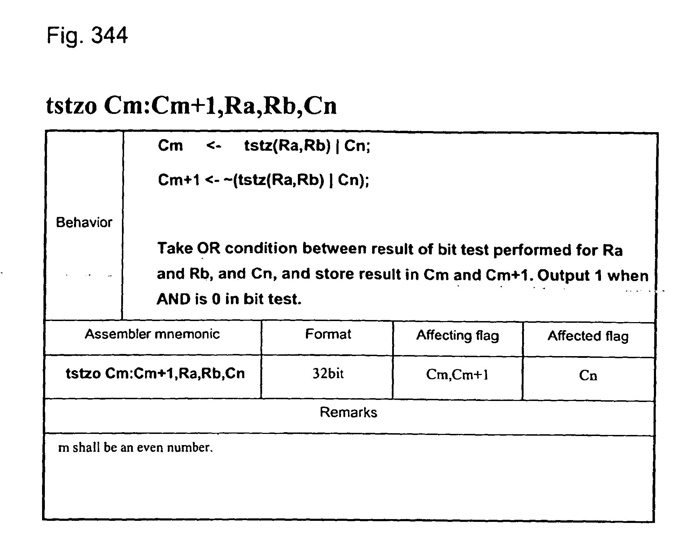

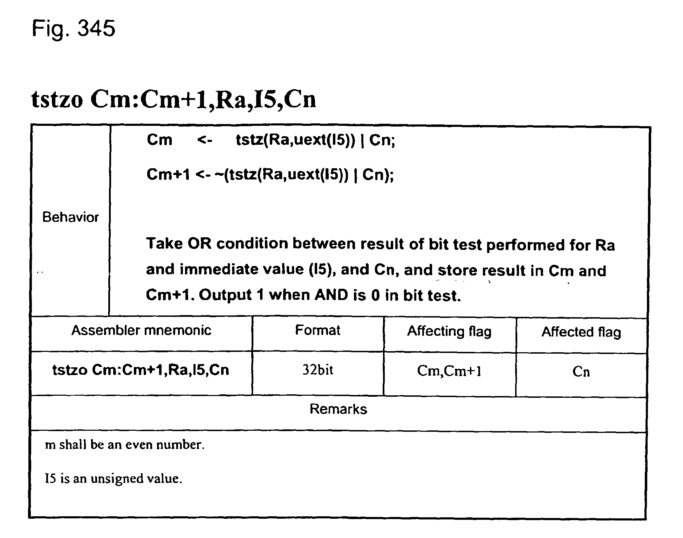

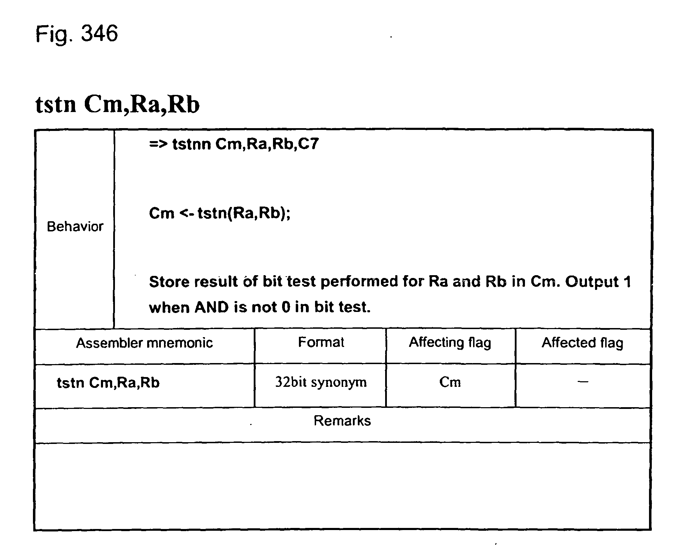

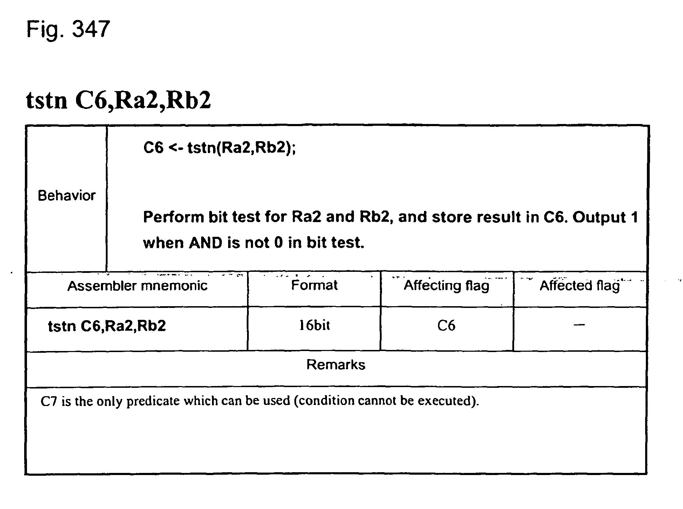

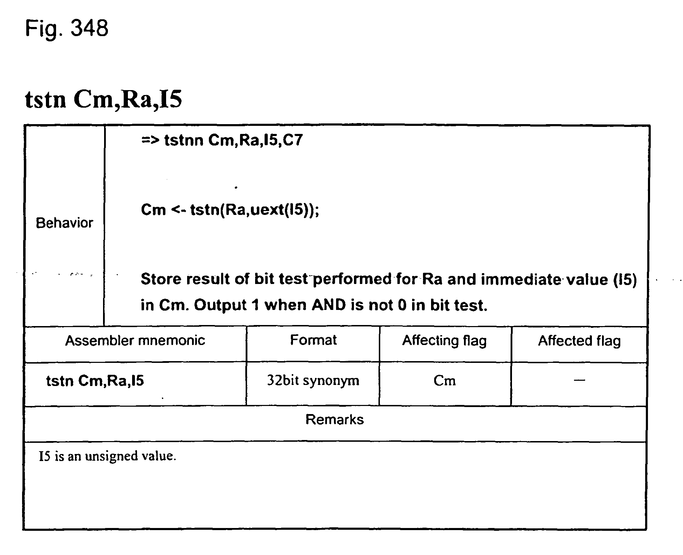

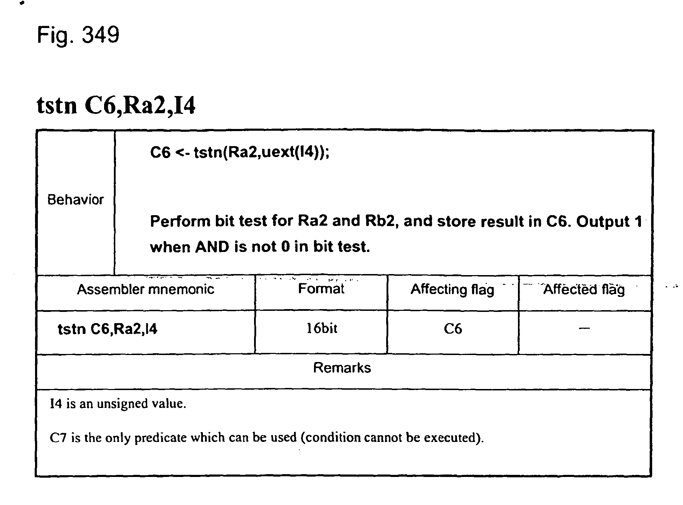

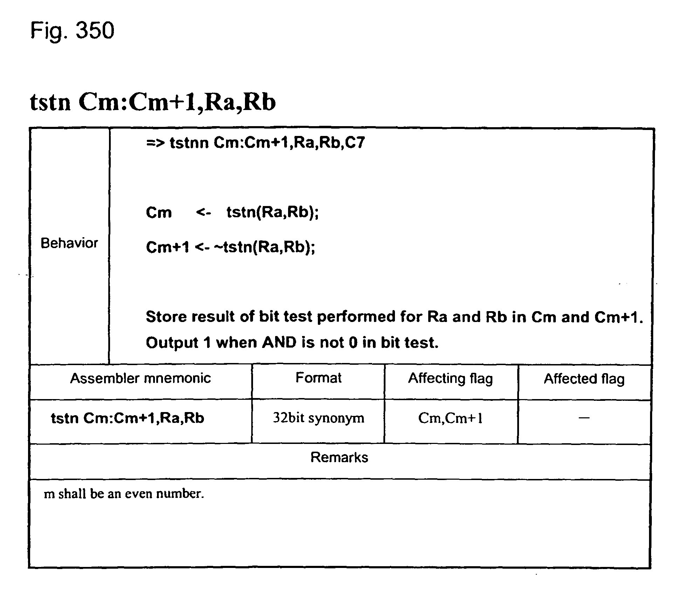

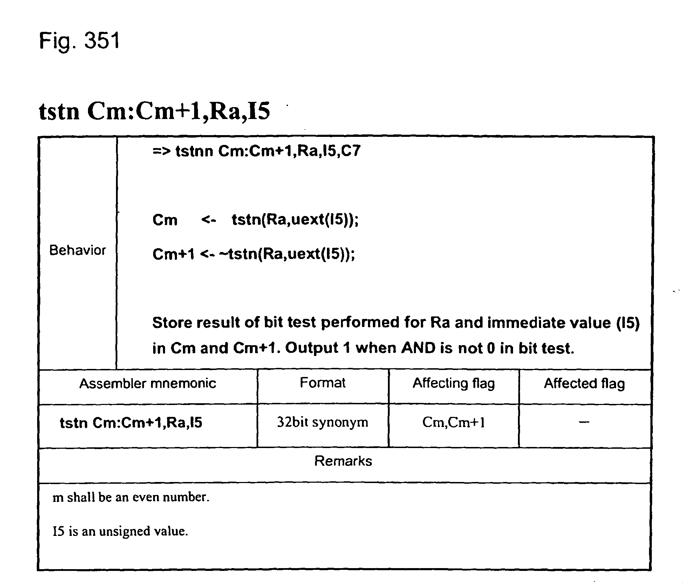

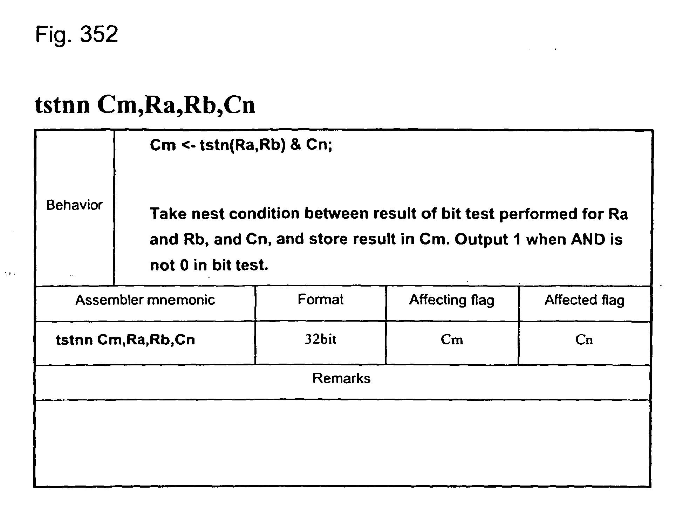

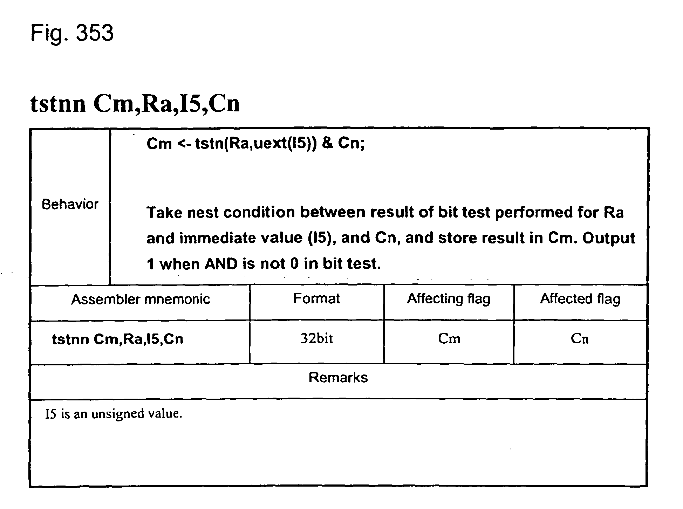

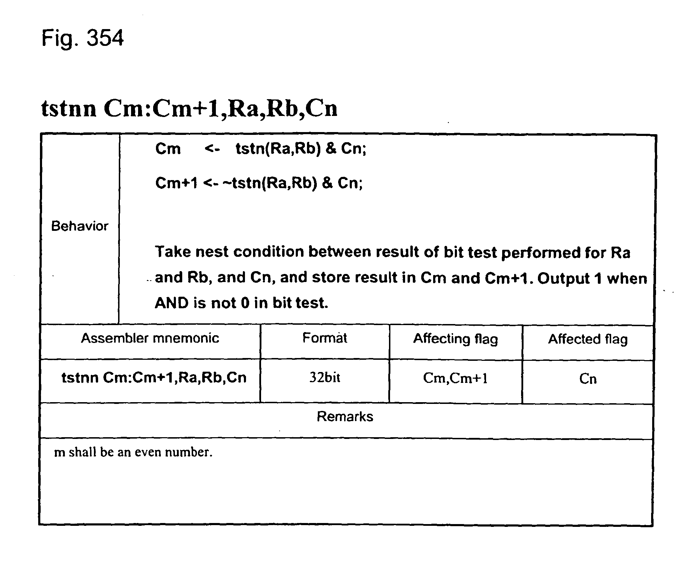

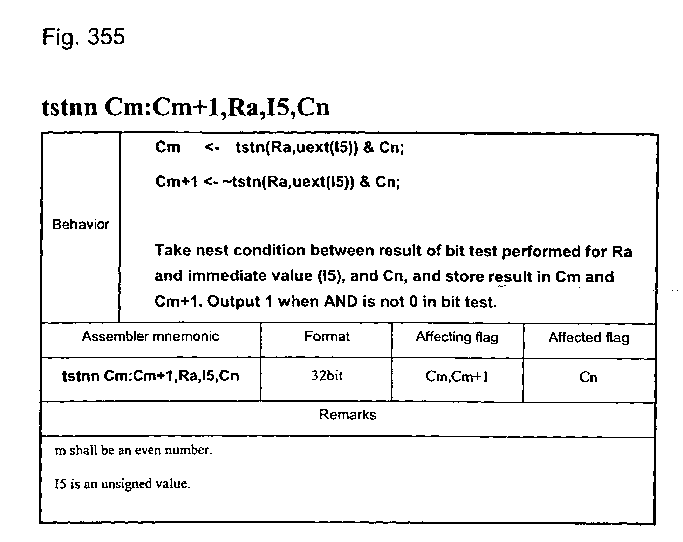

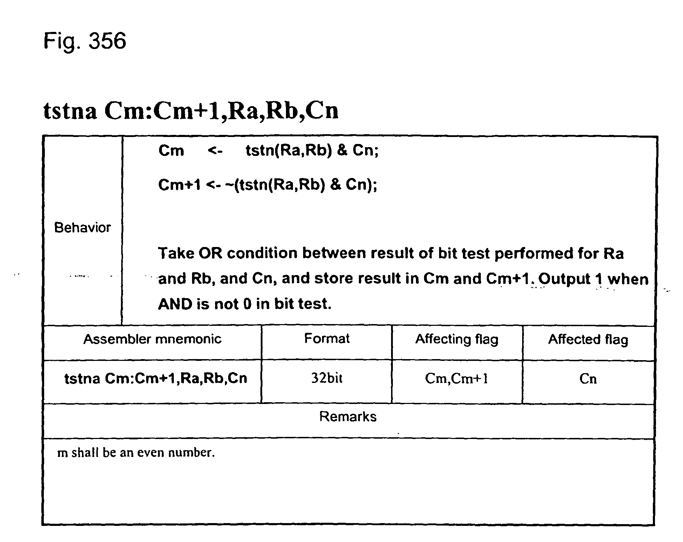

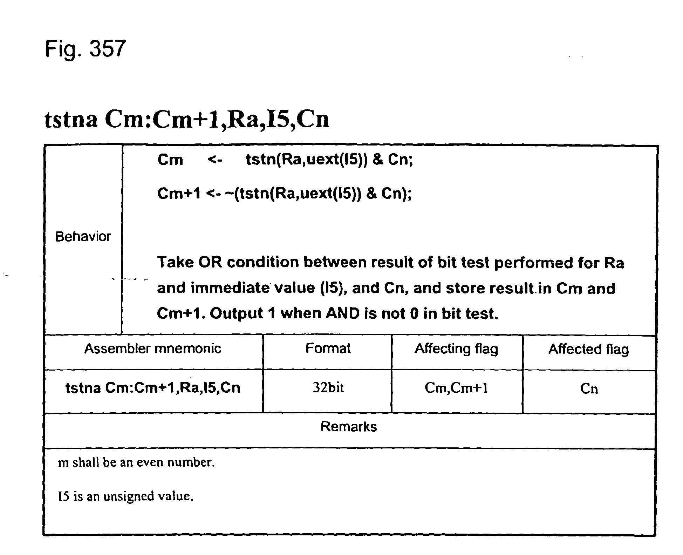

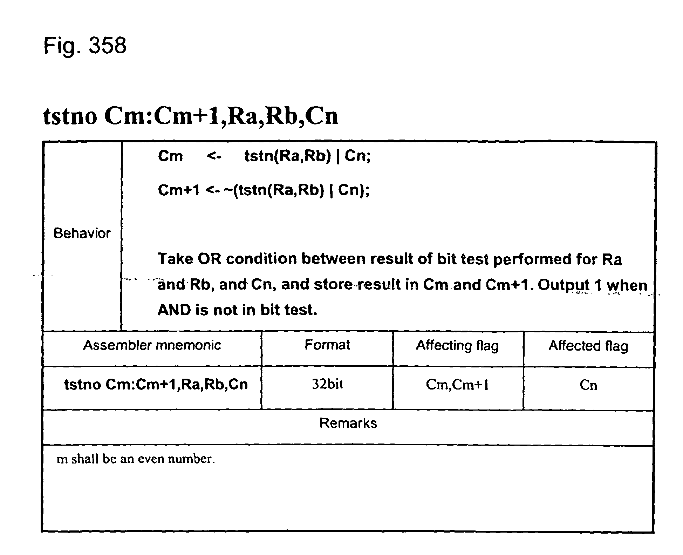

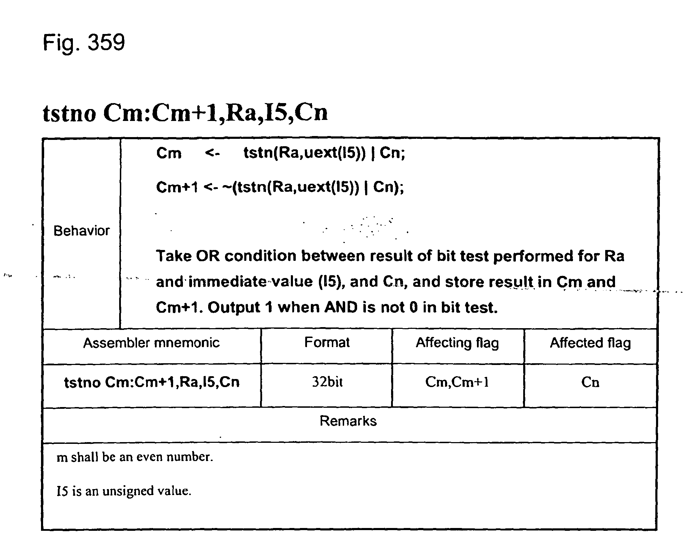

Figs.318~359 are diagrams explaining instructions relating to "compare".

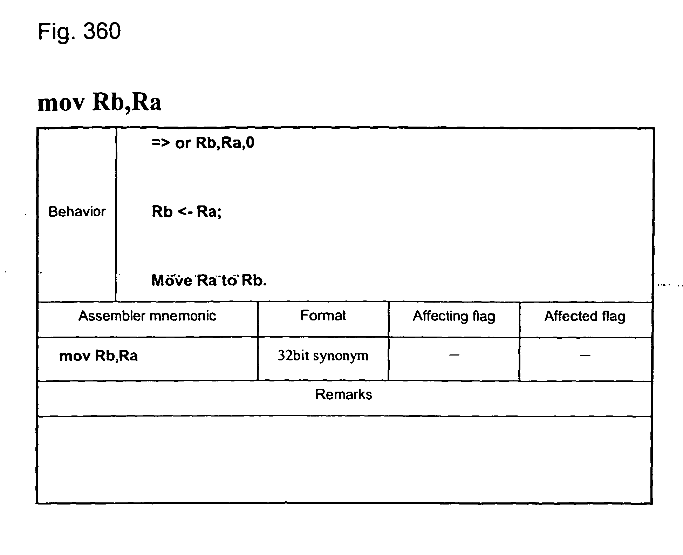

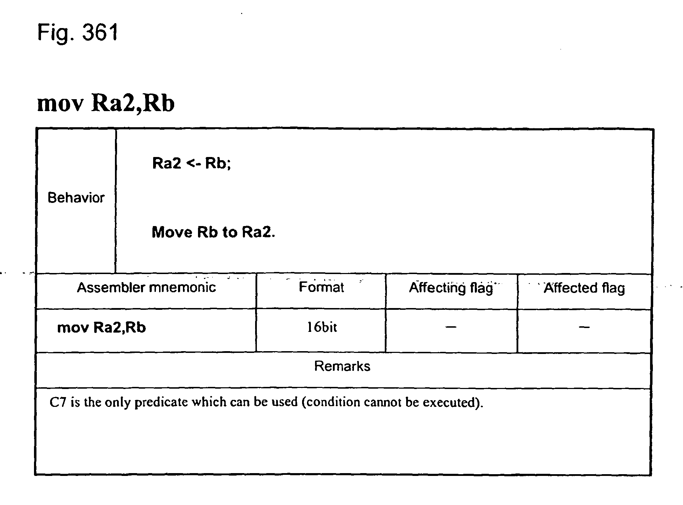

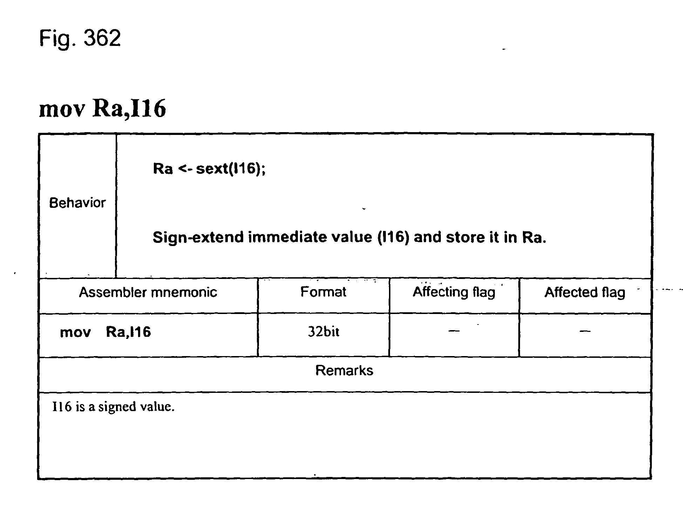

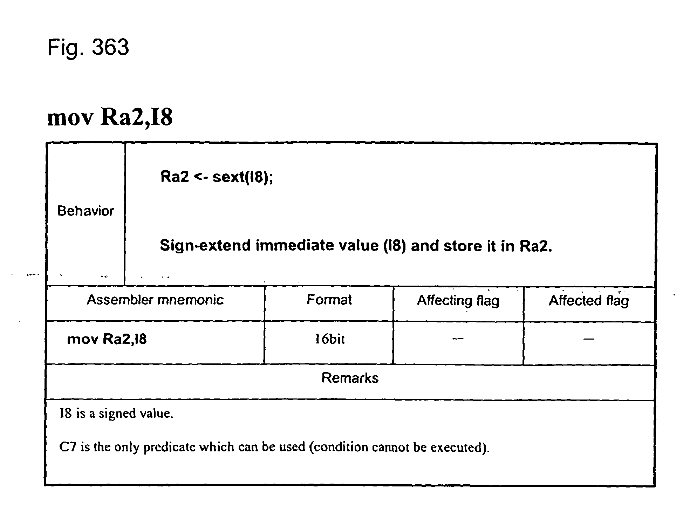

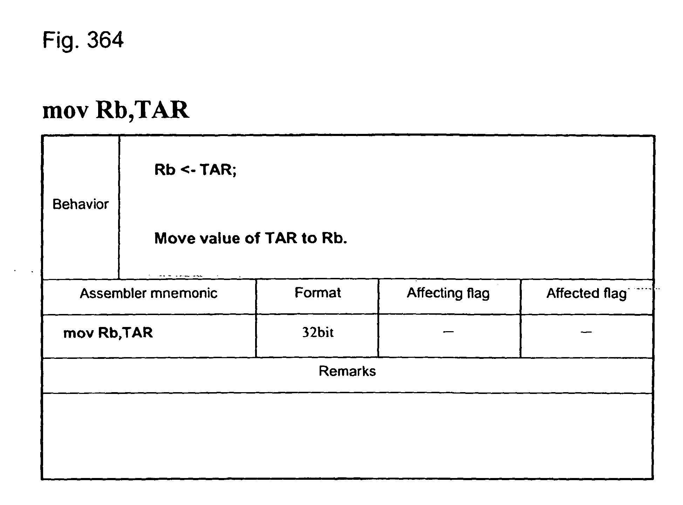

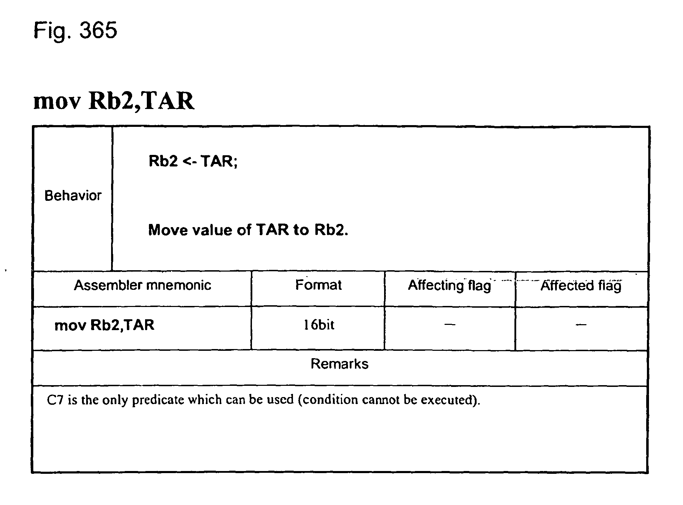

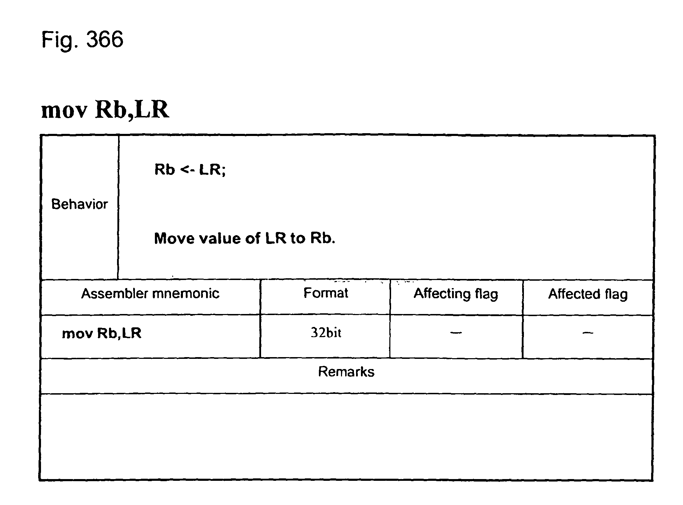

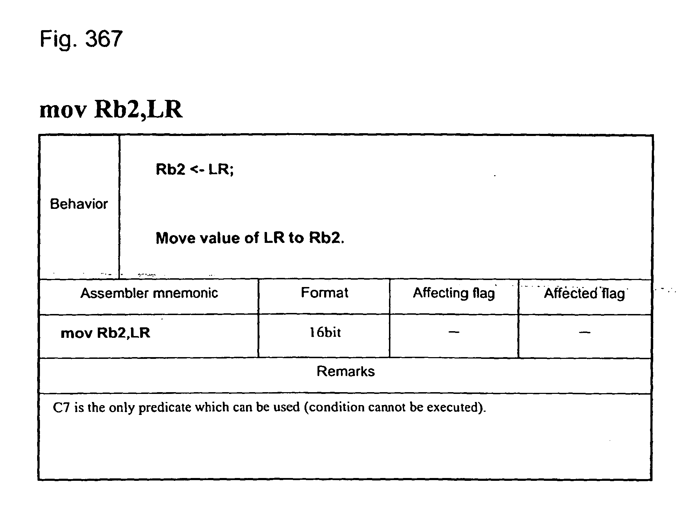

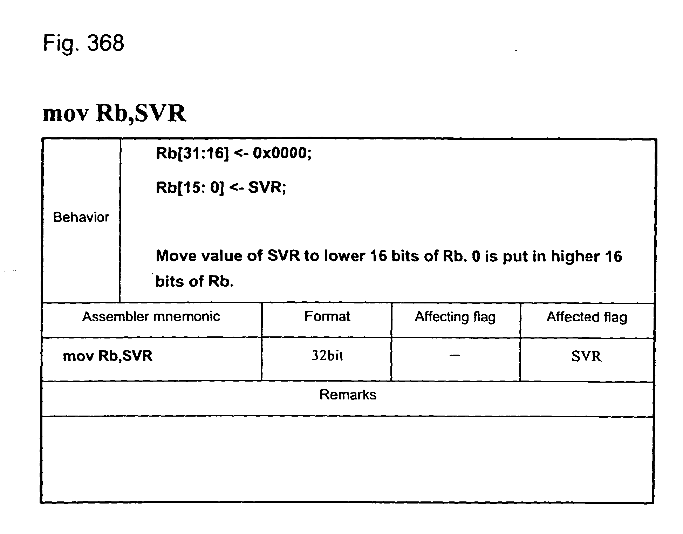

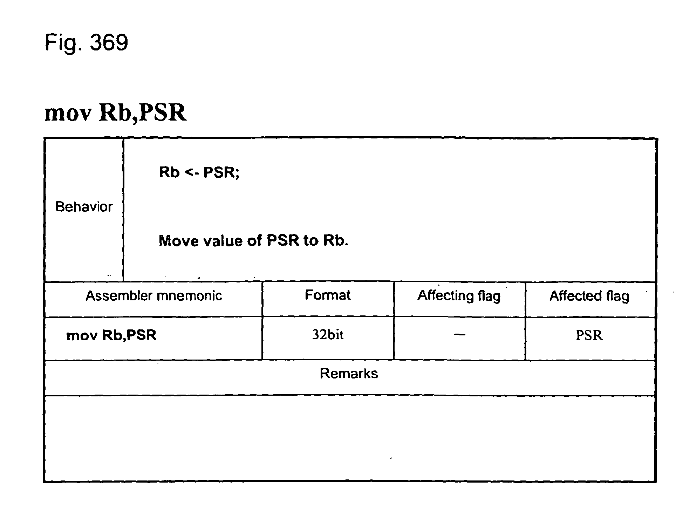

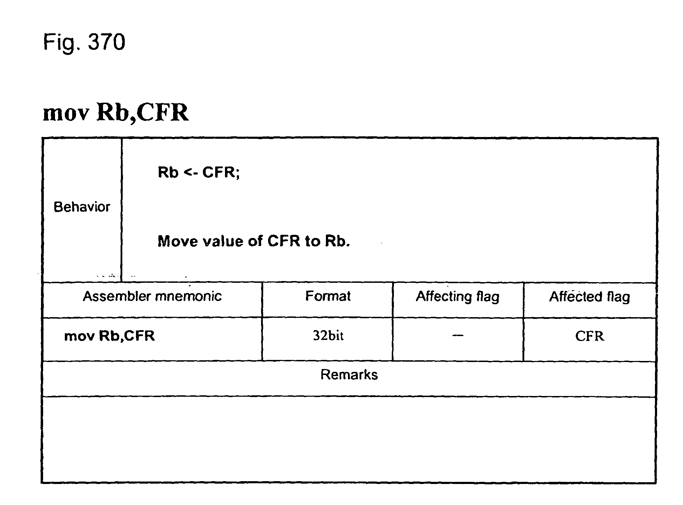

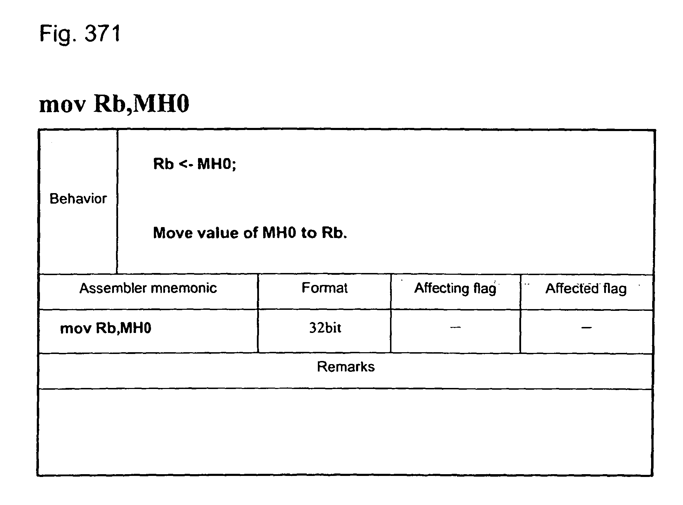

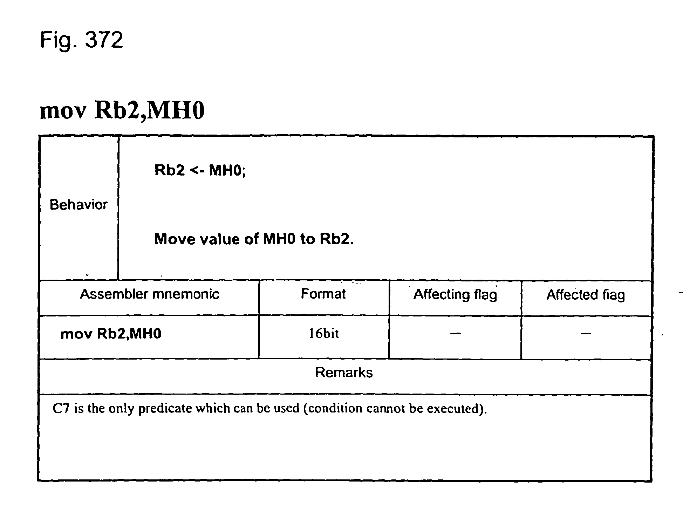

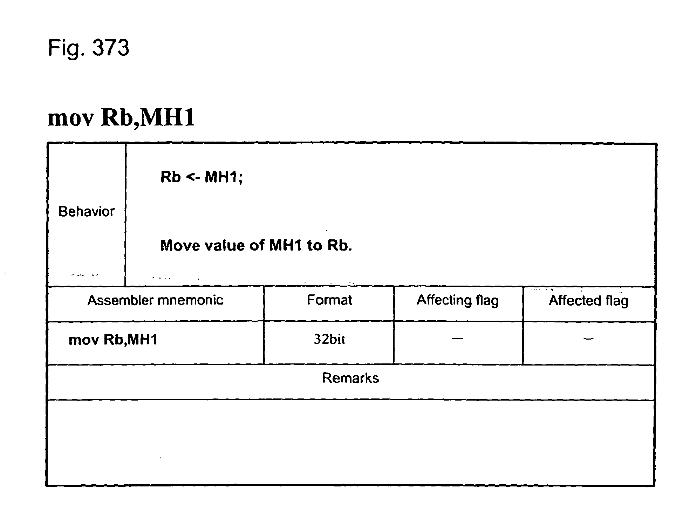

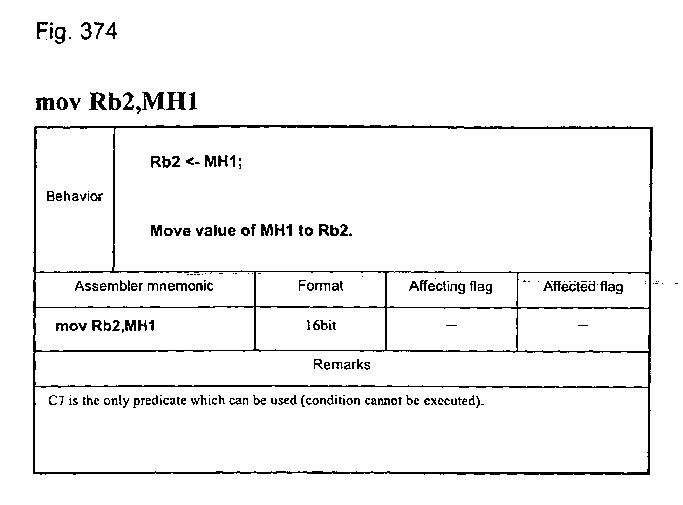

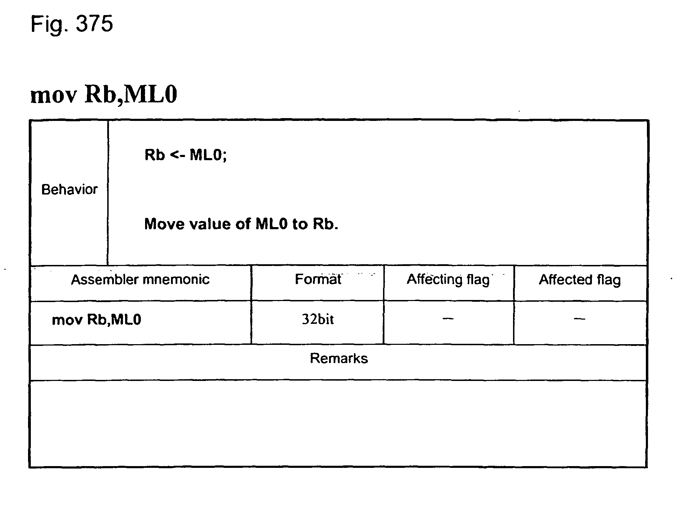

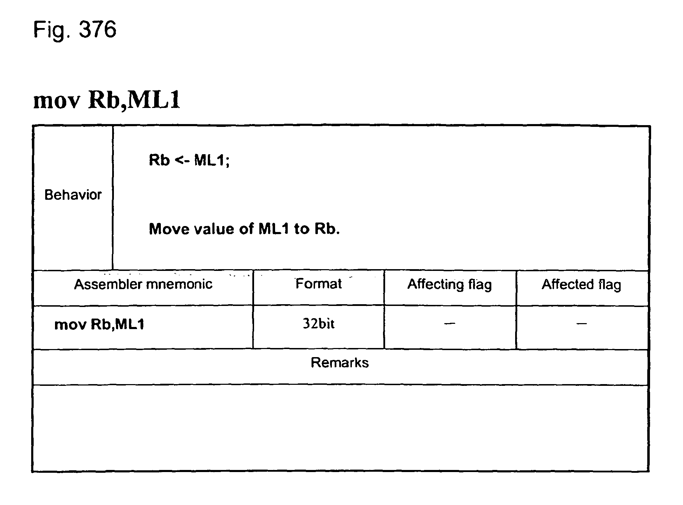

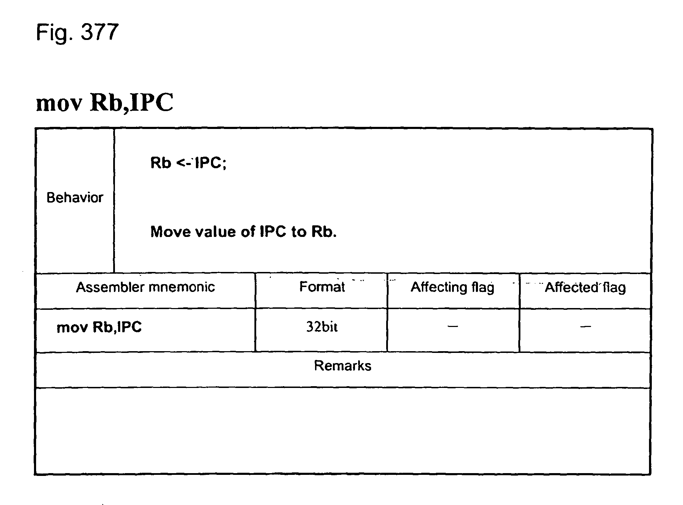

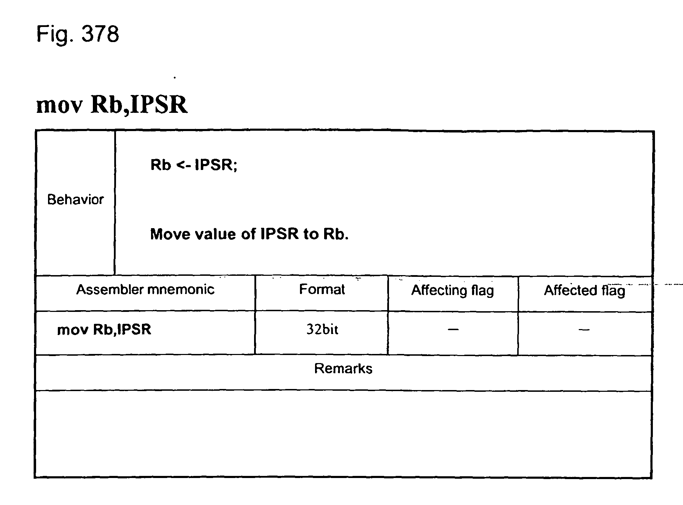

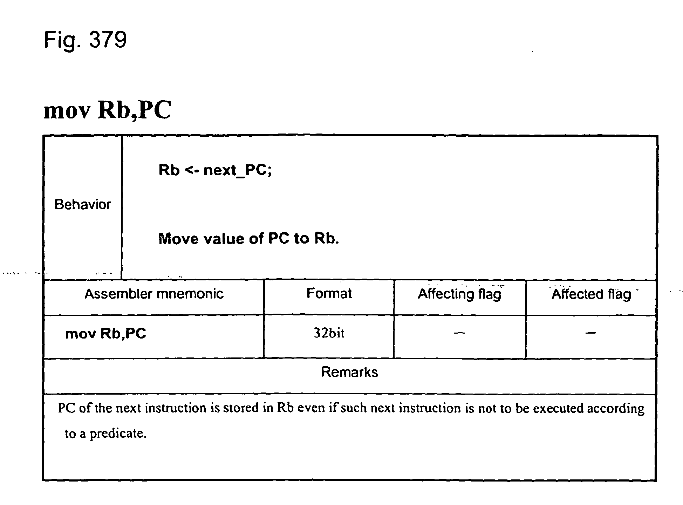

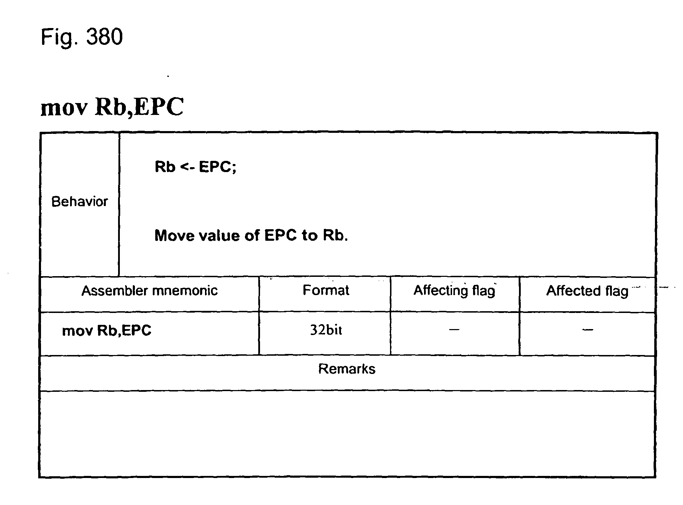

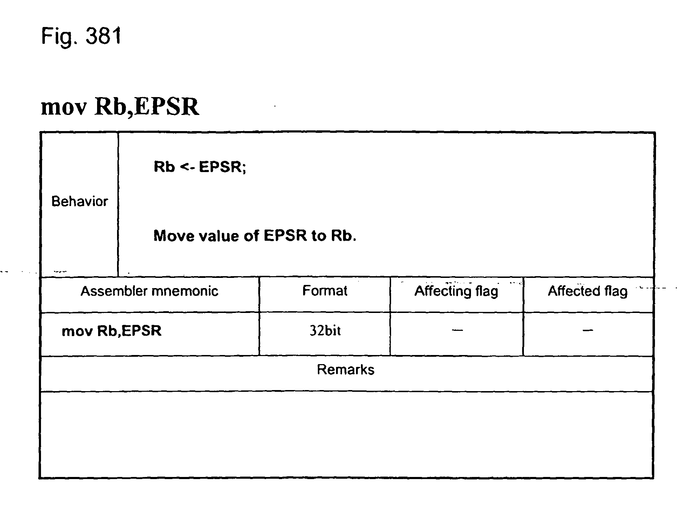

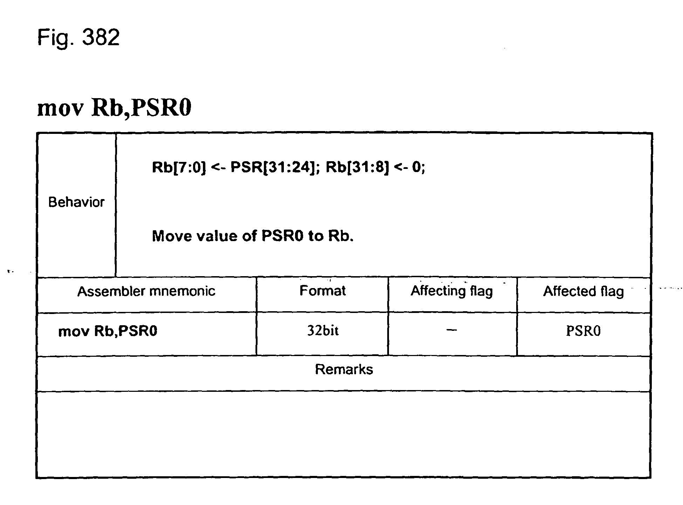

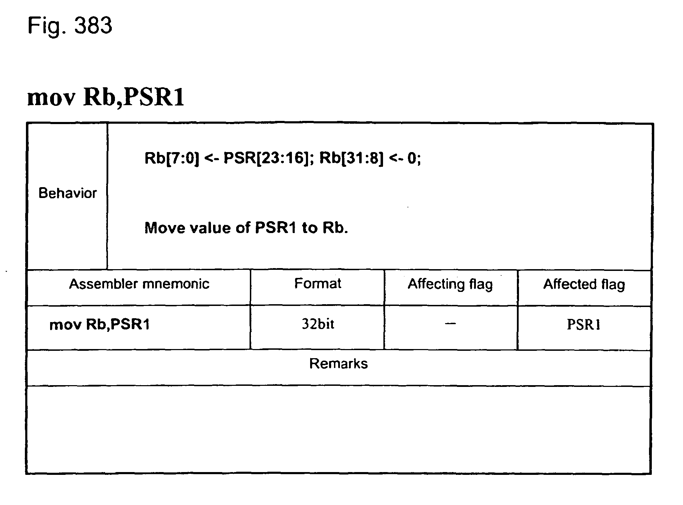

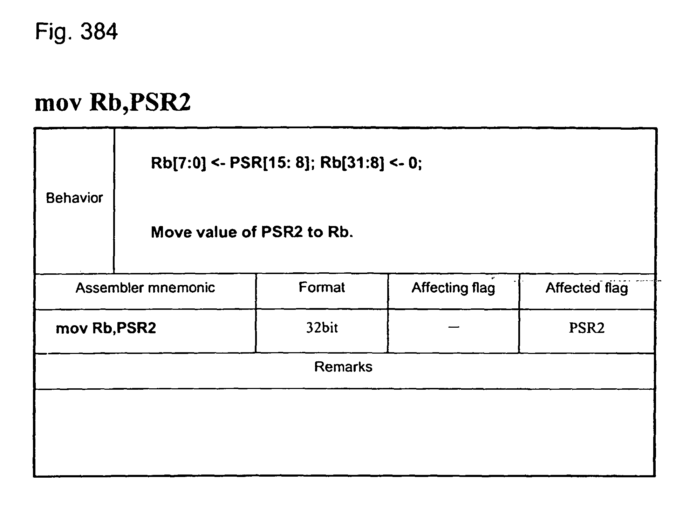

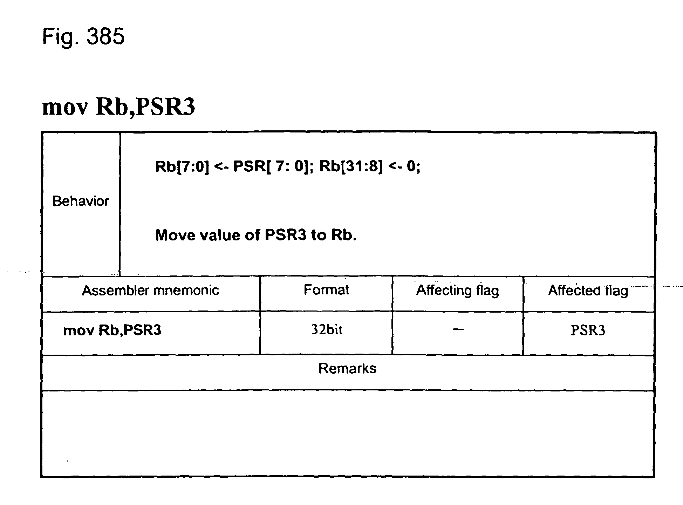

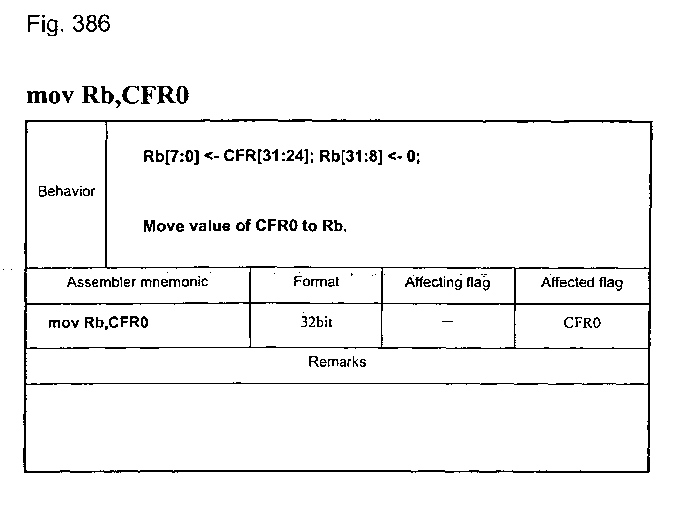

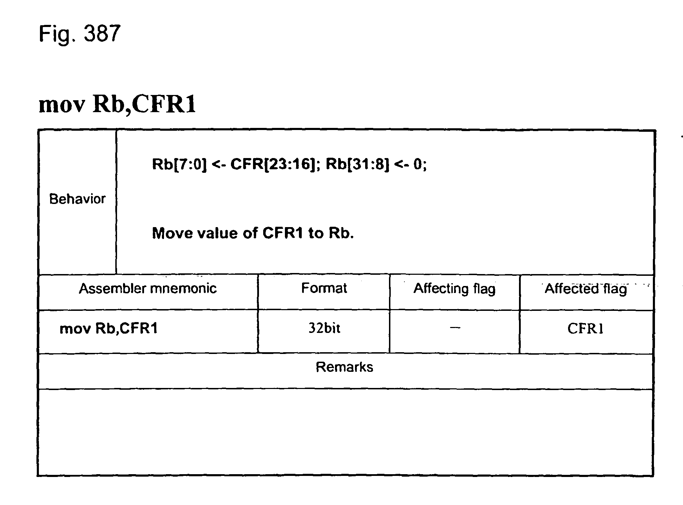

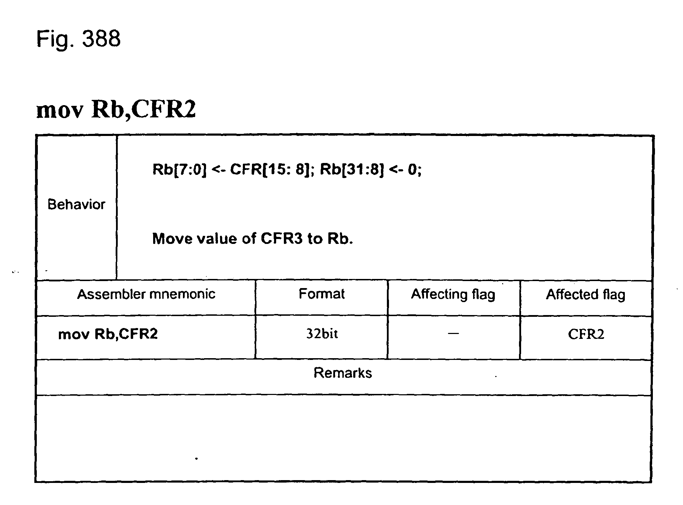

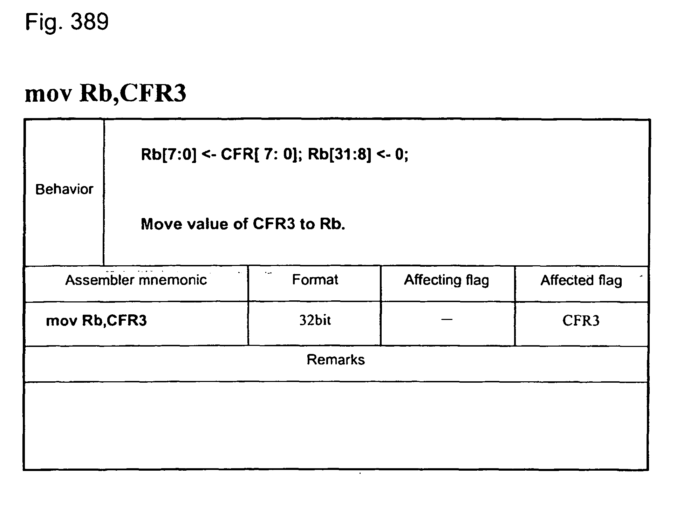

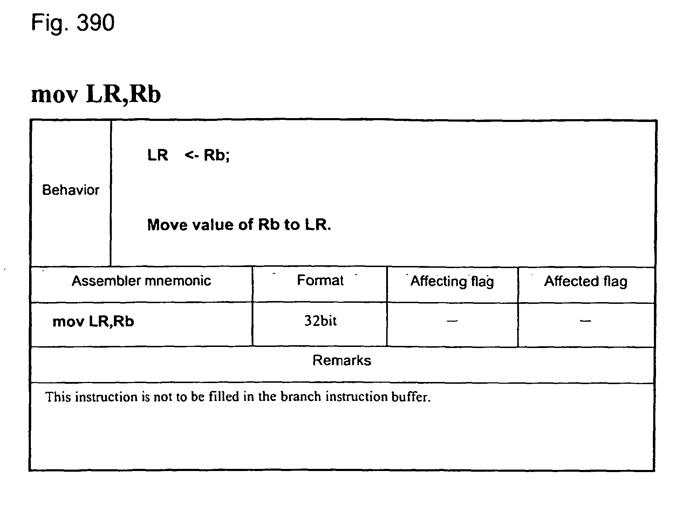

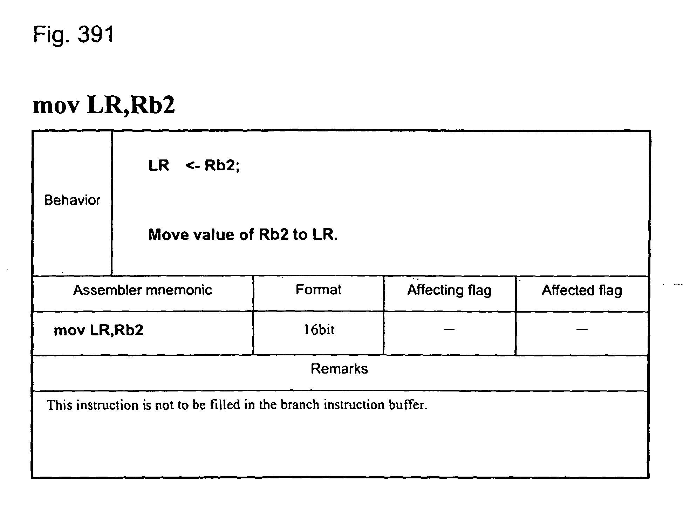

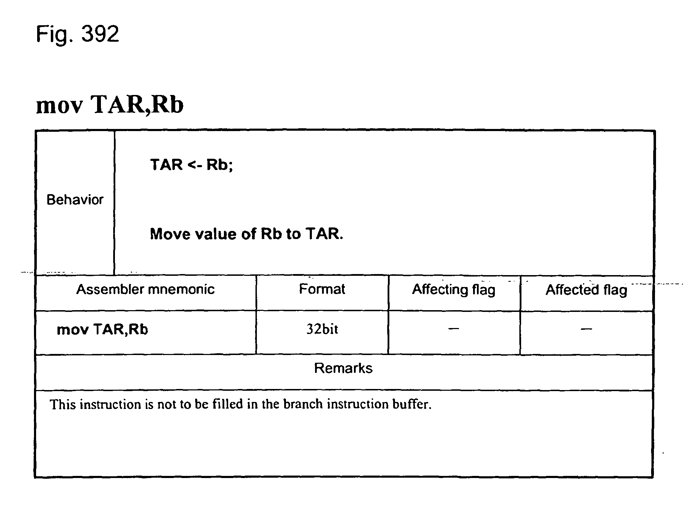

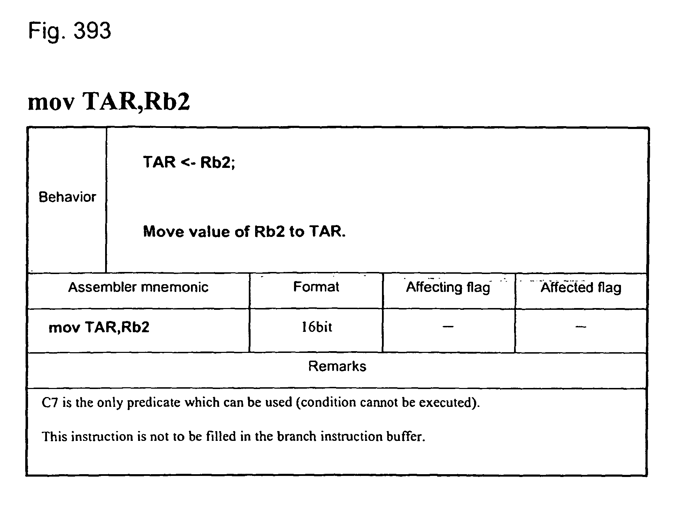

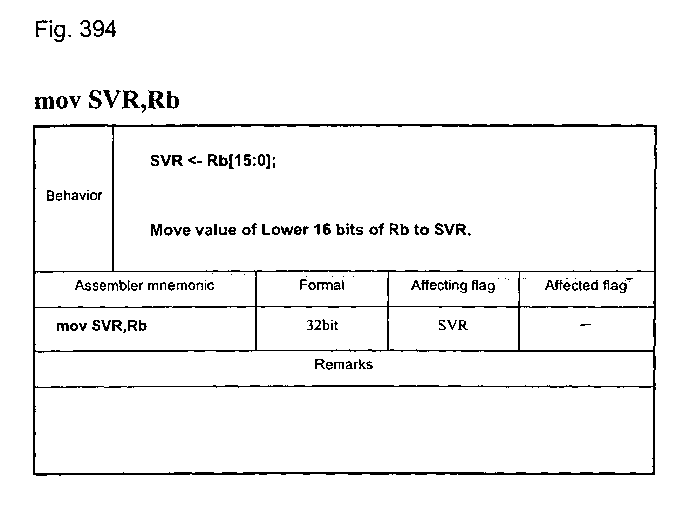

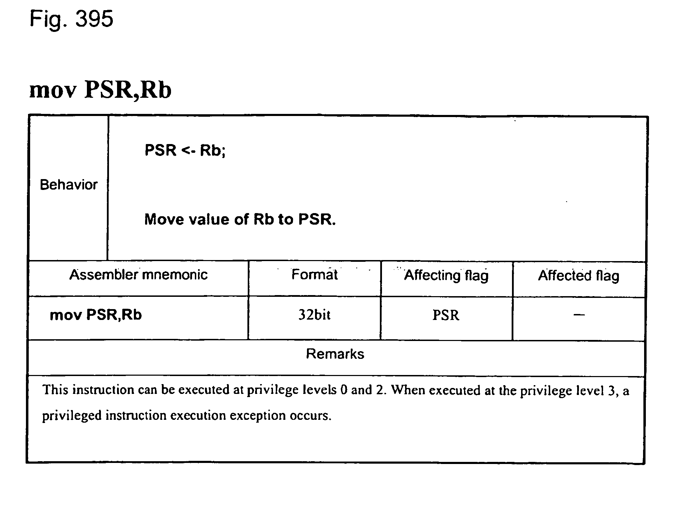

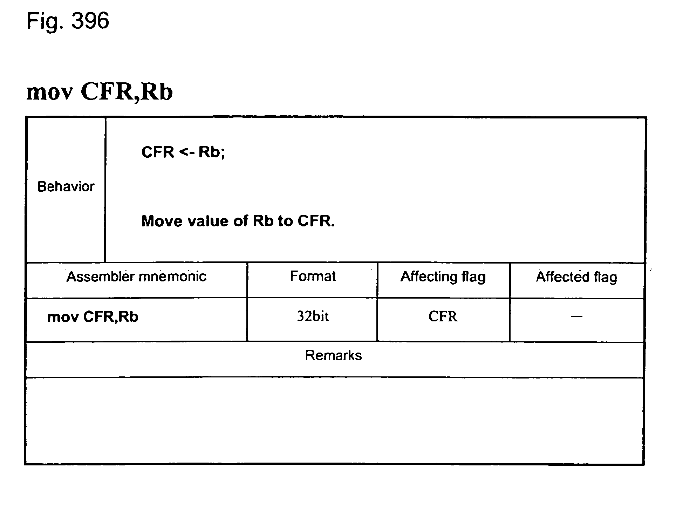

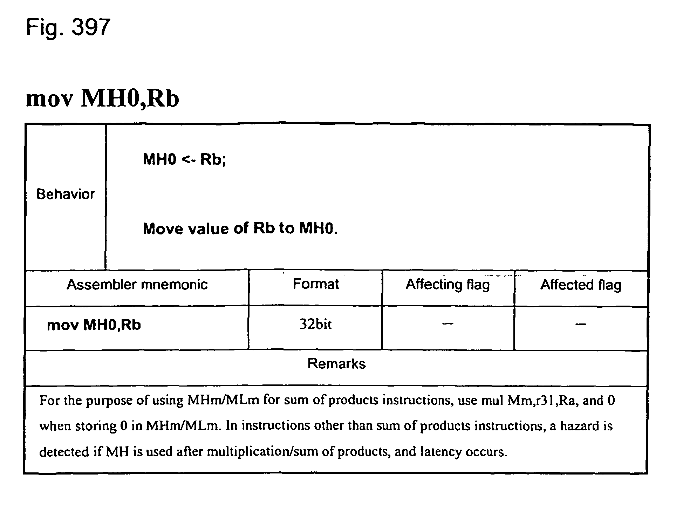

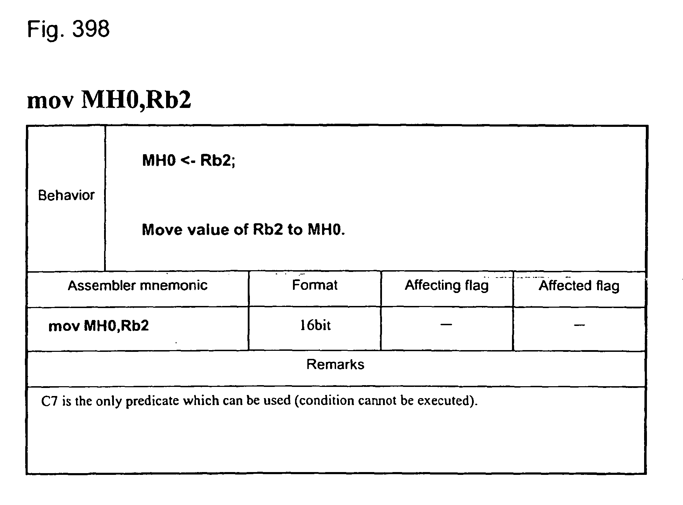

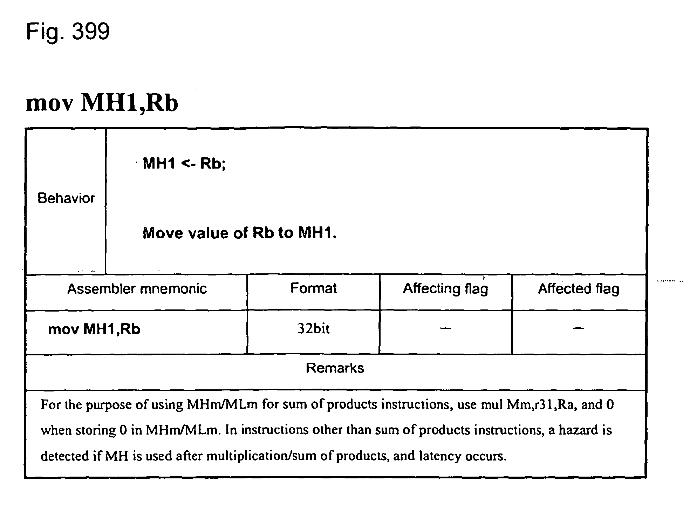

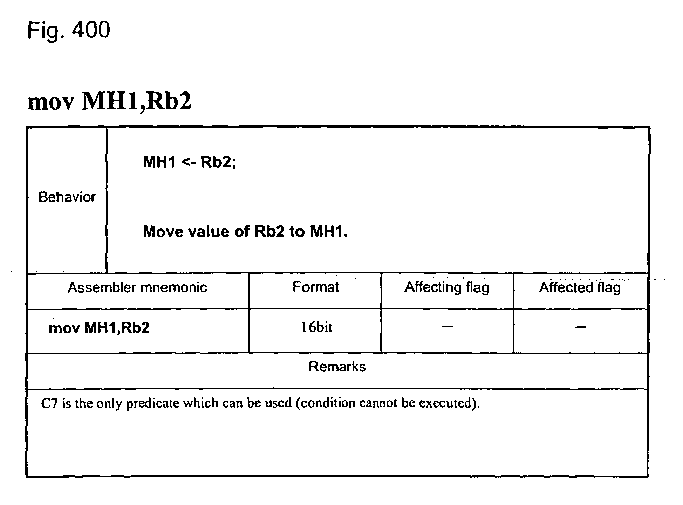

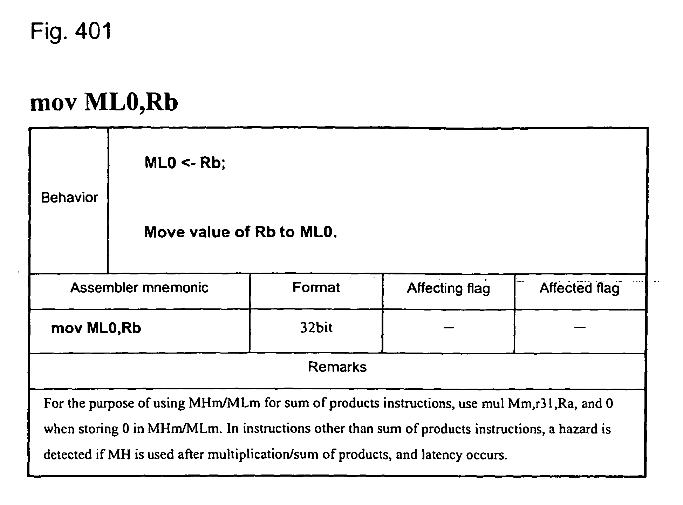

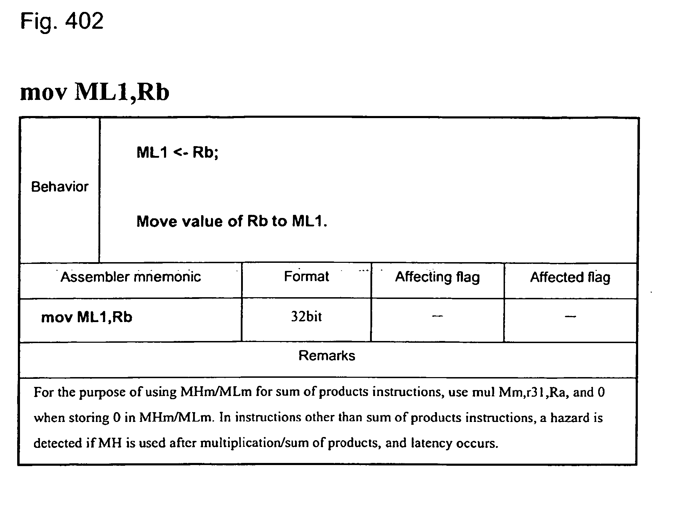

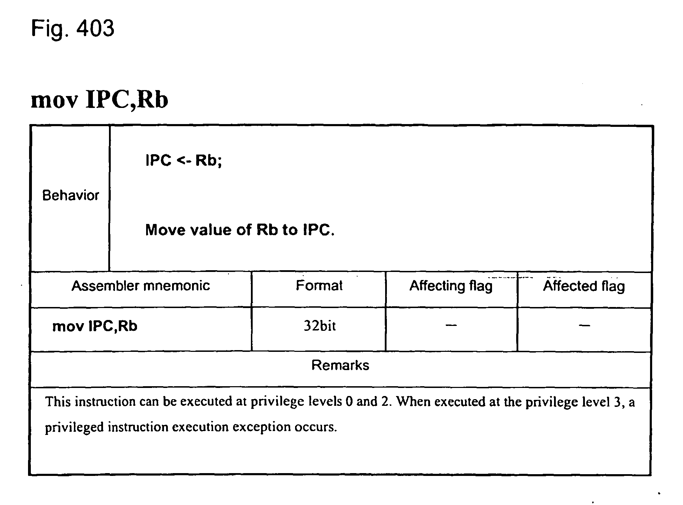

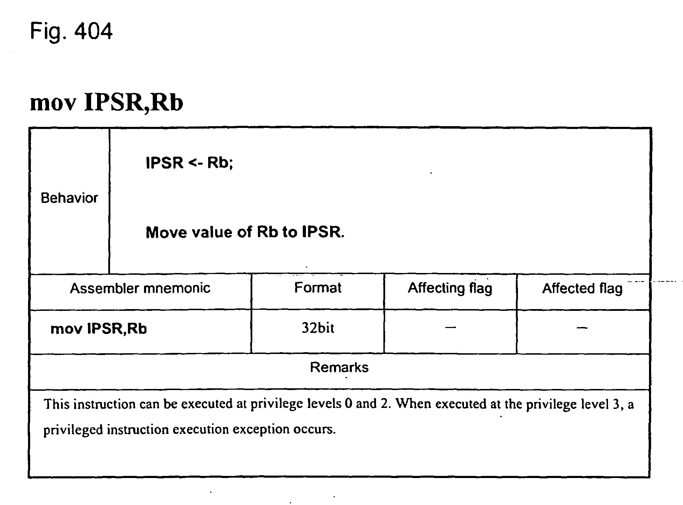

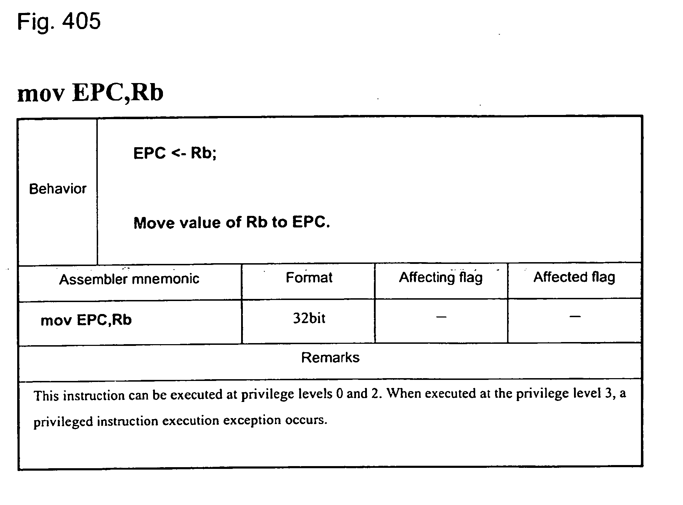

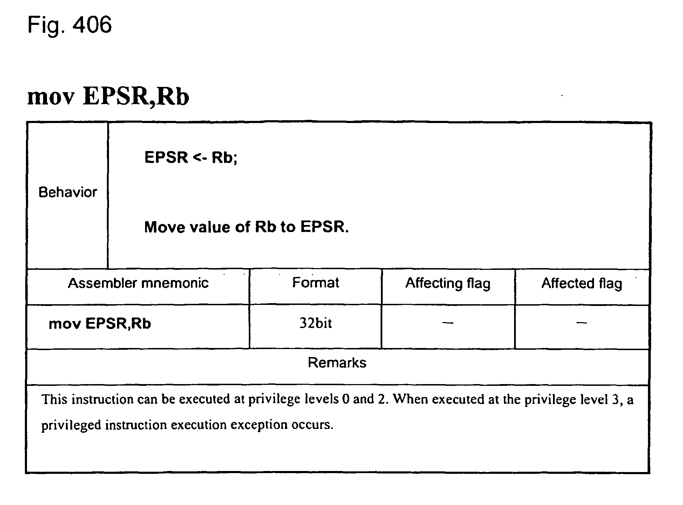

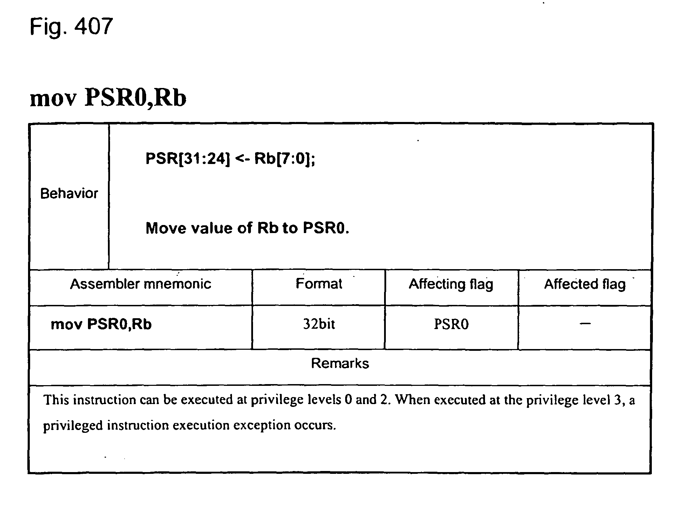

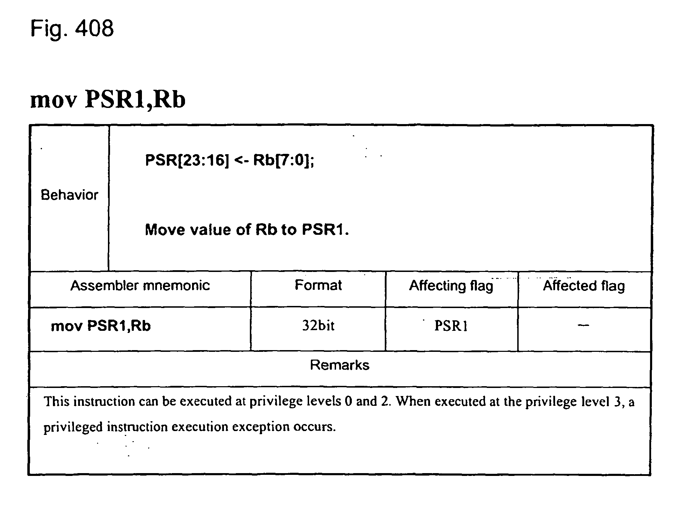

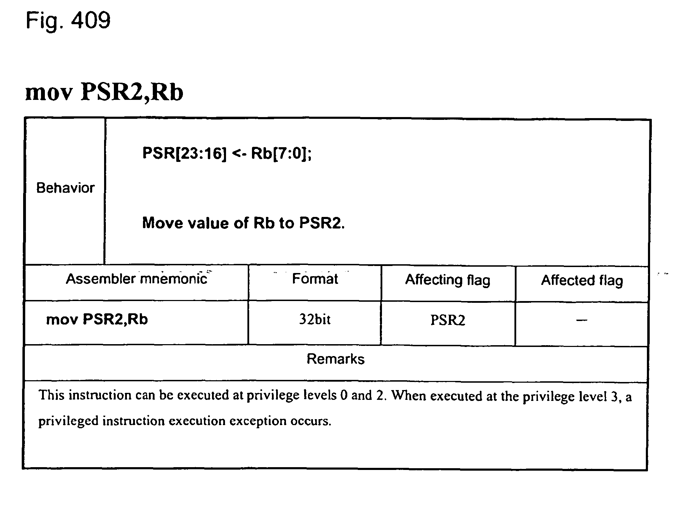

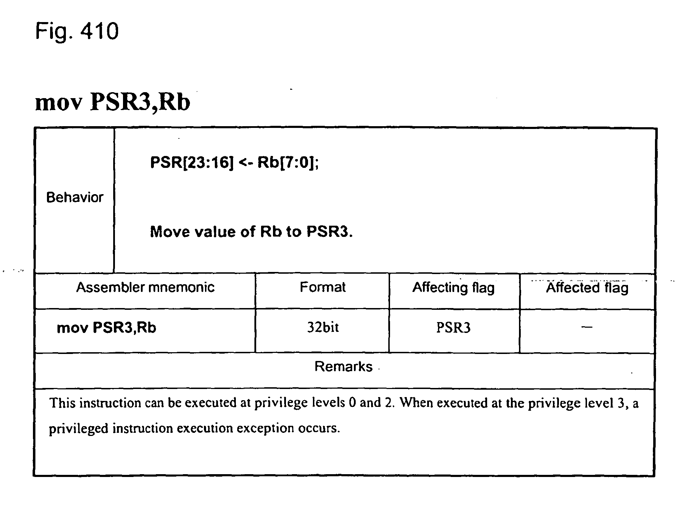

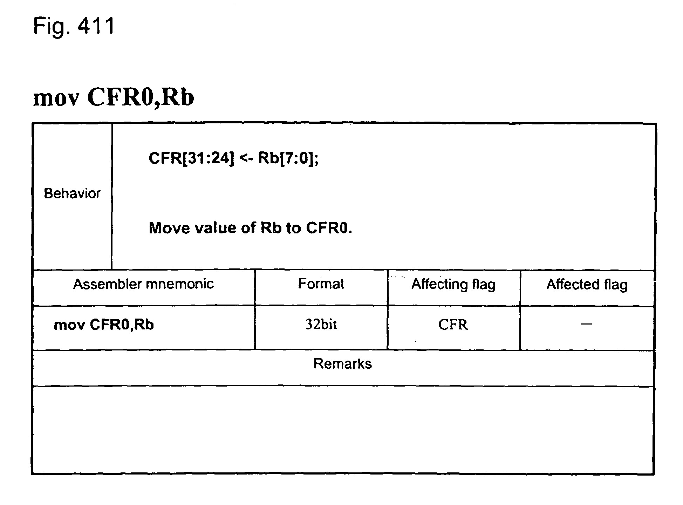

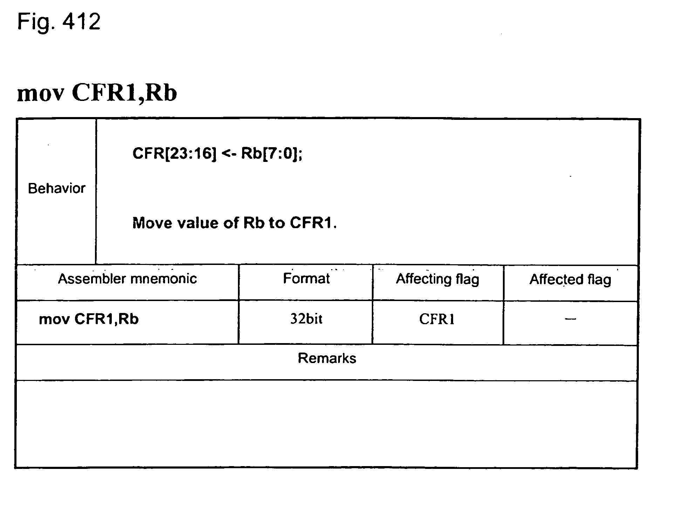

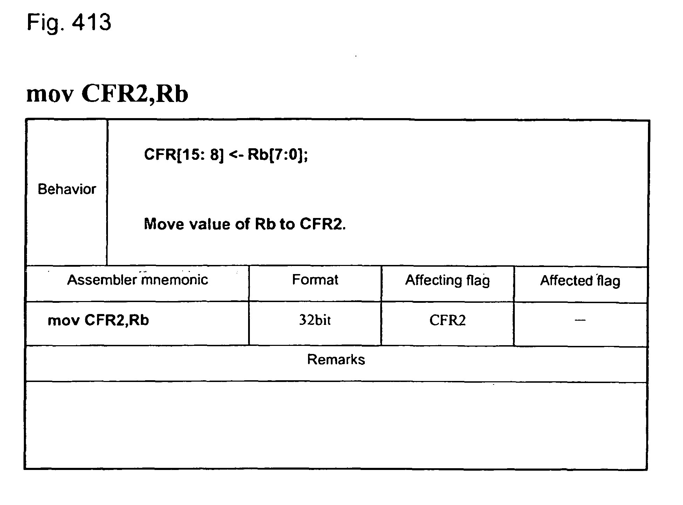

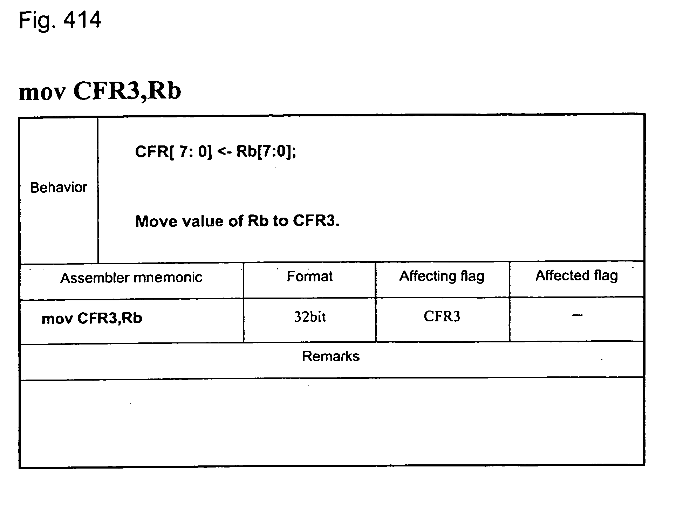

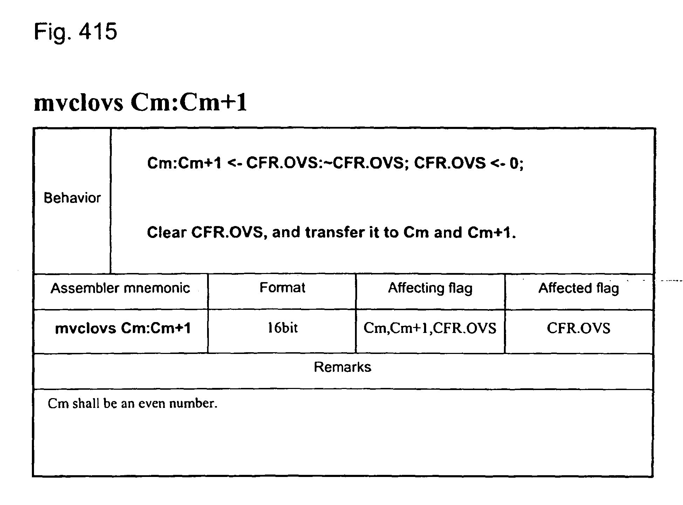

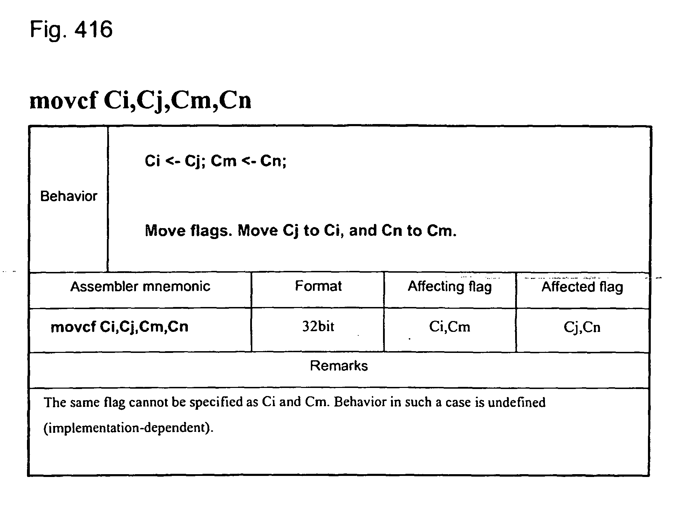

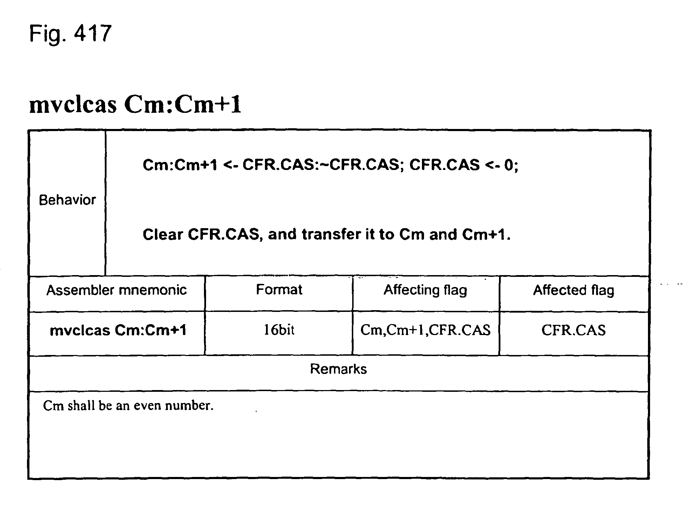

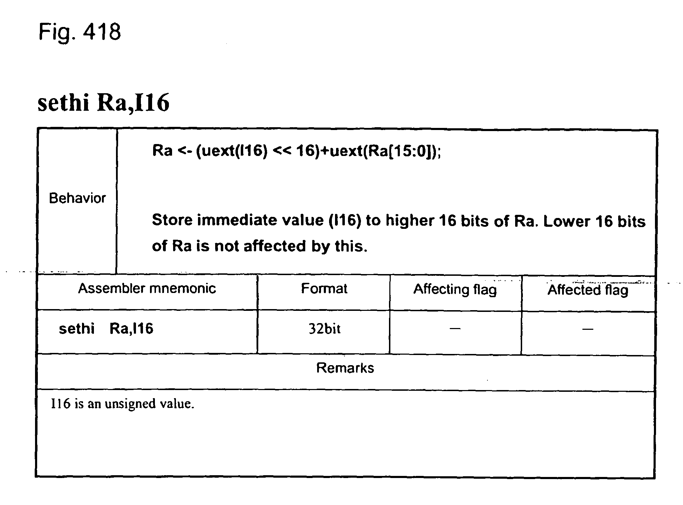

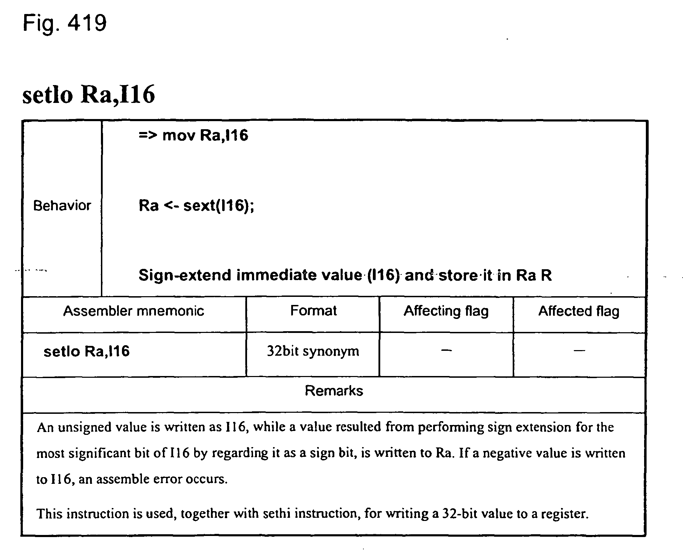

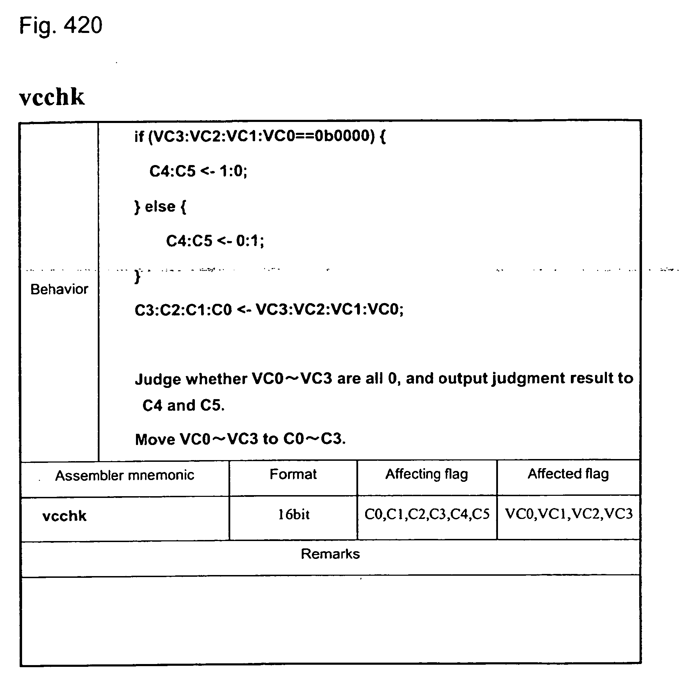

Figs.360~420 are diagrams explaining instructions relating to "move".

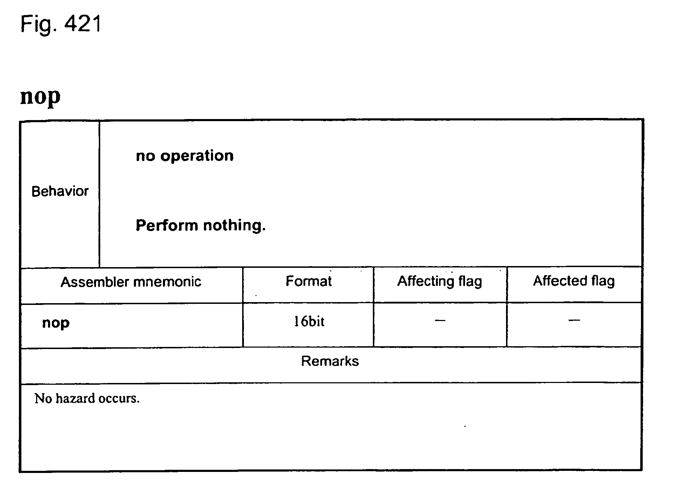

Figs.421 is a diagram explaining an instruction relating to "nop".

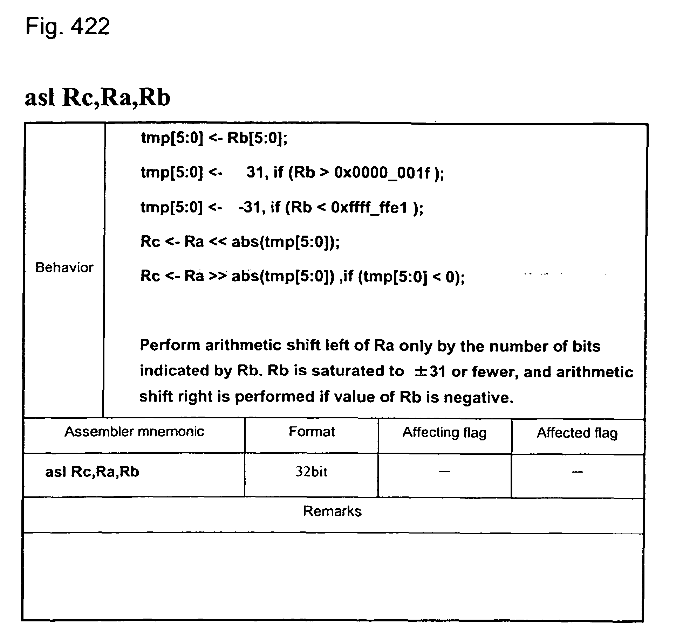

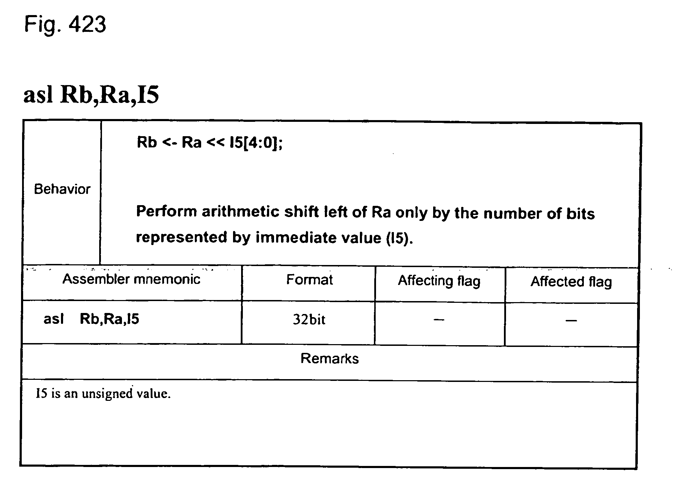

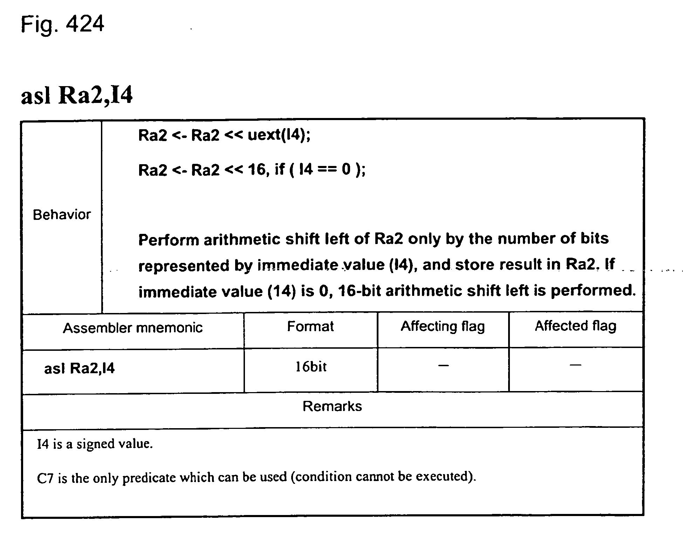

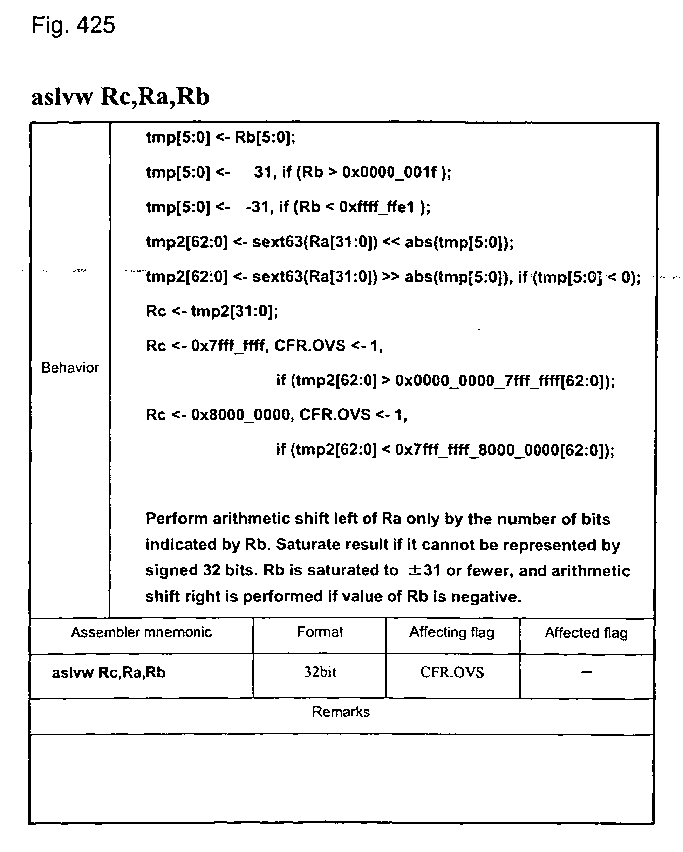

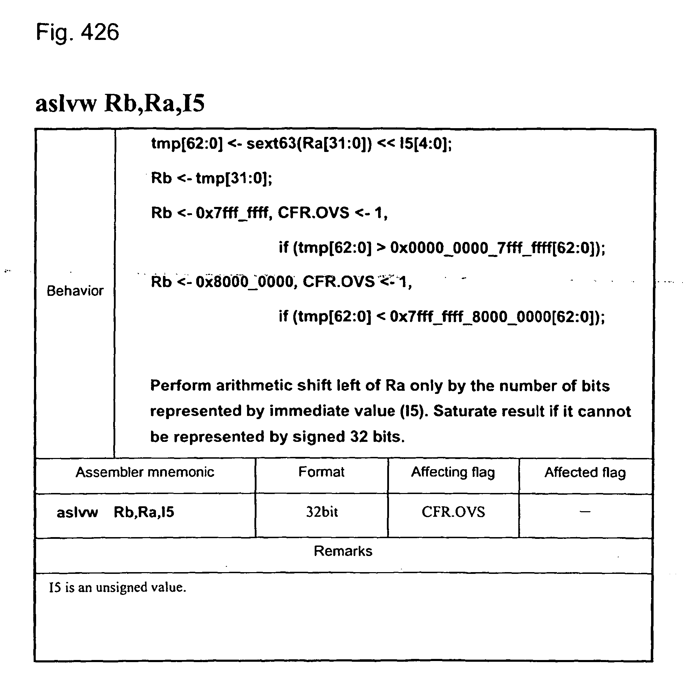

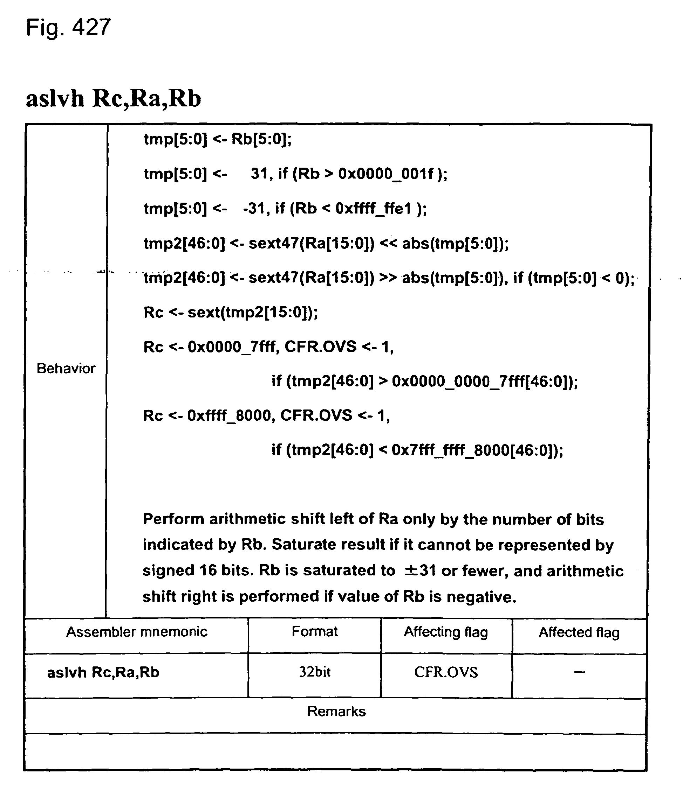

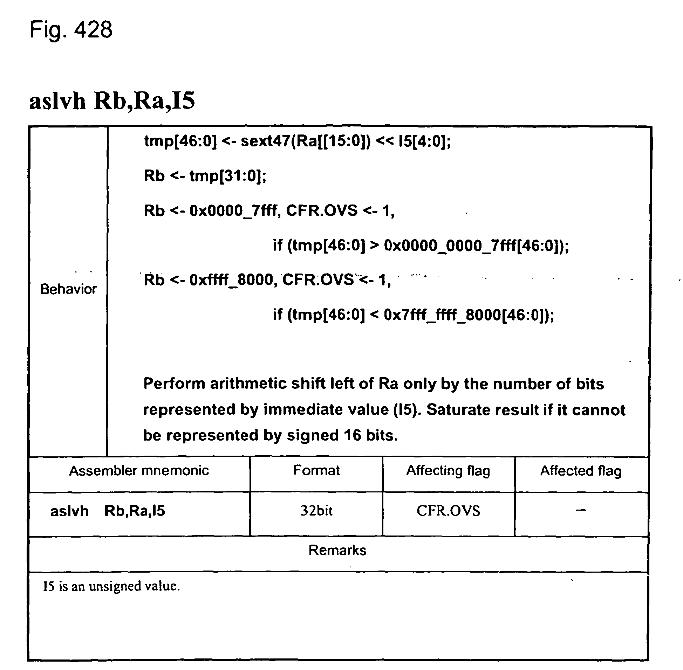

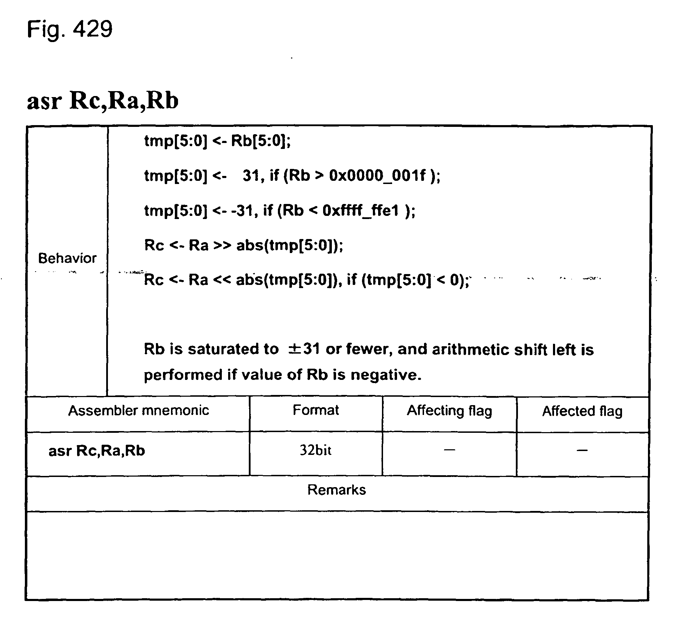

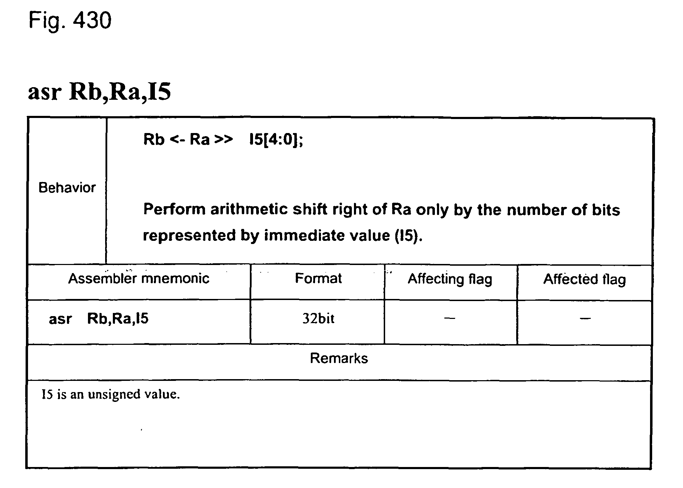

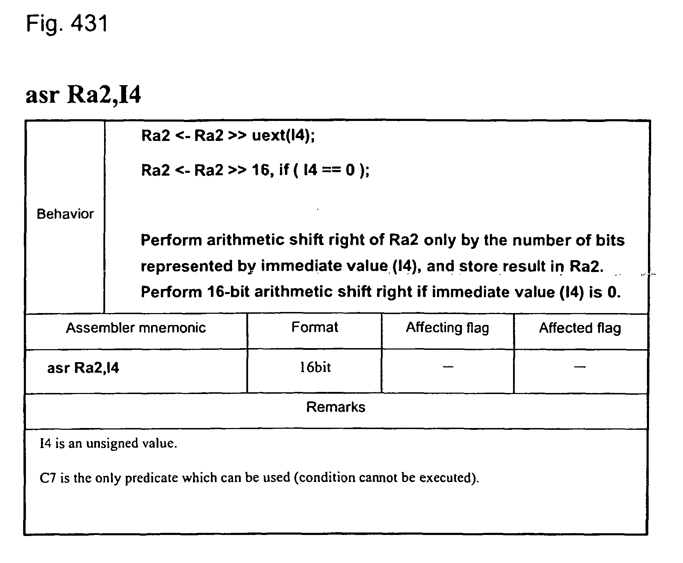

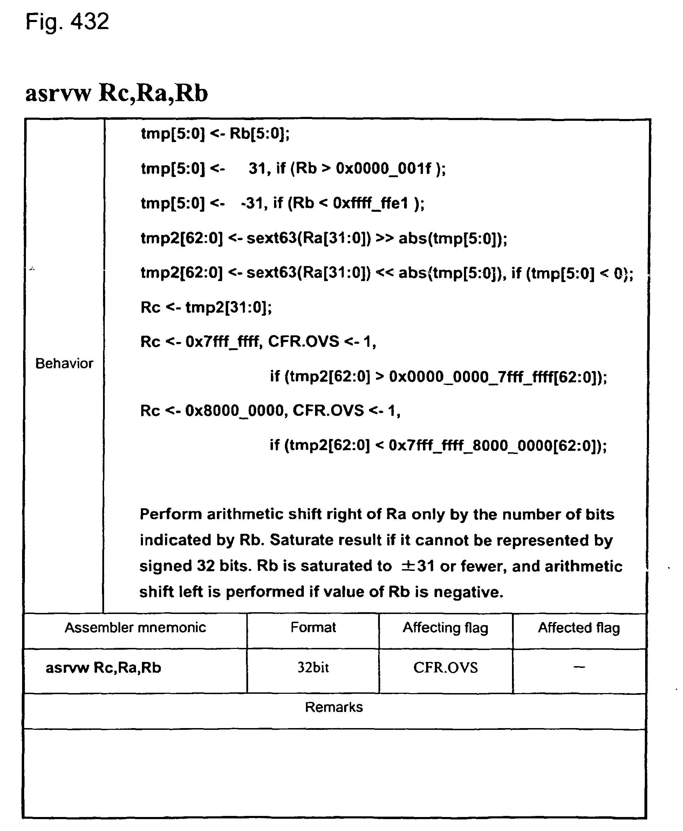

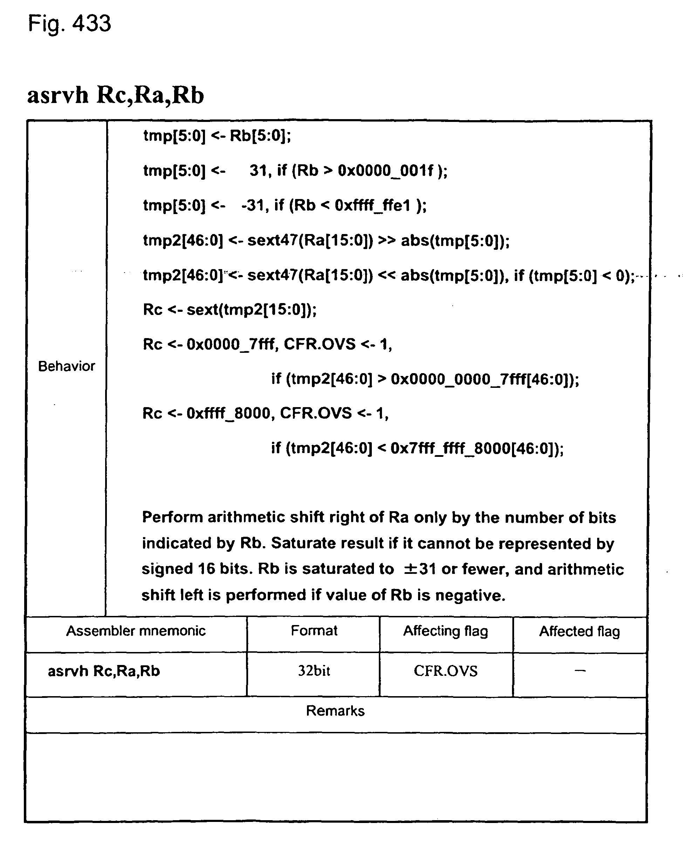

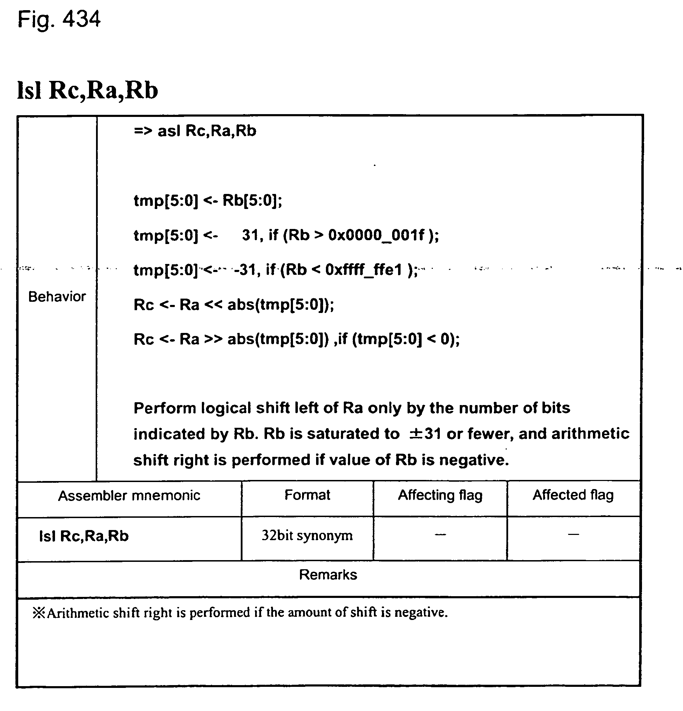

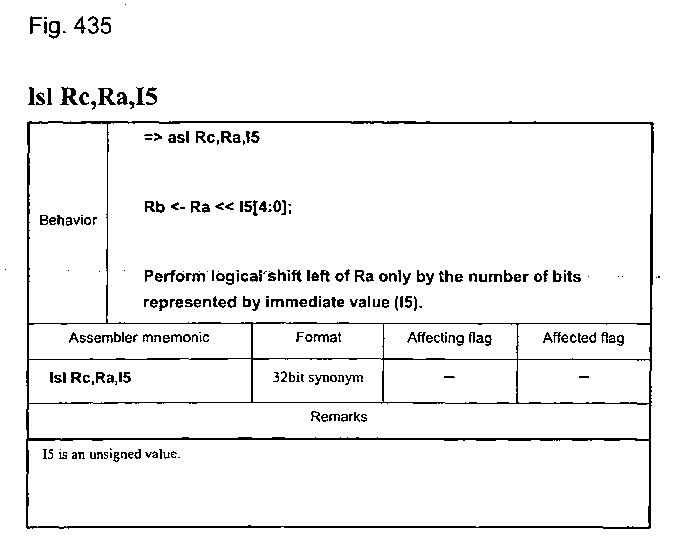

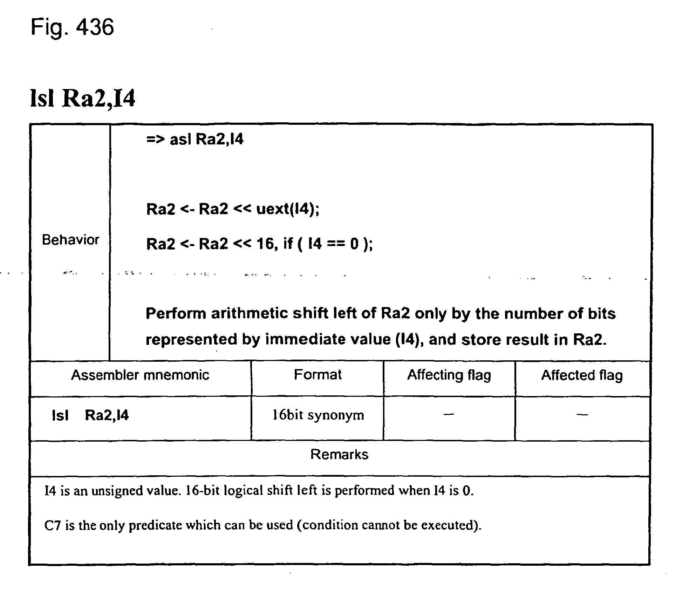

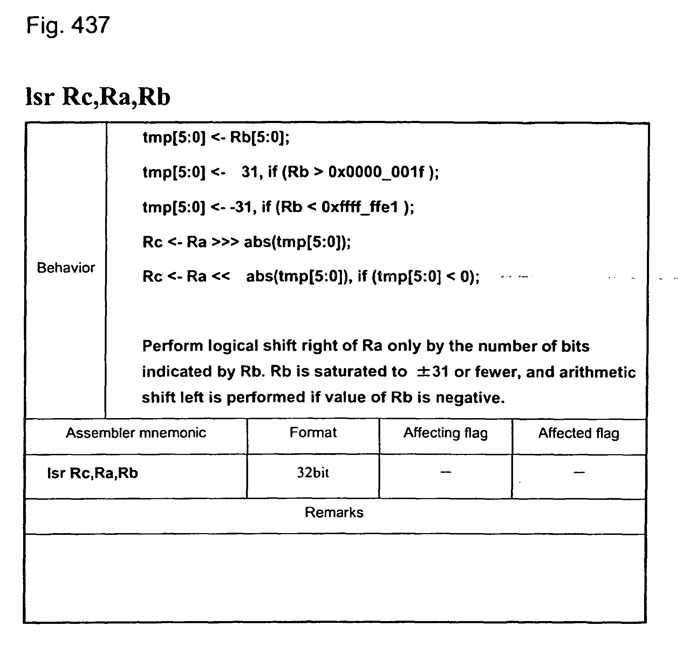

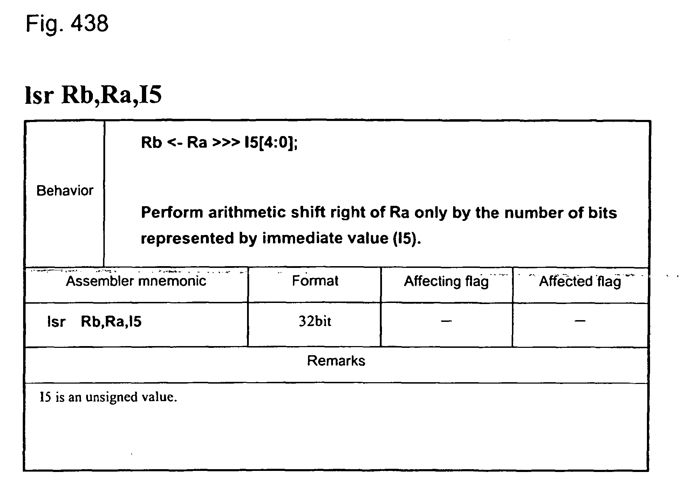

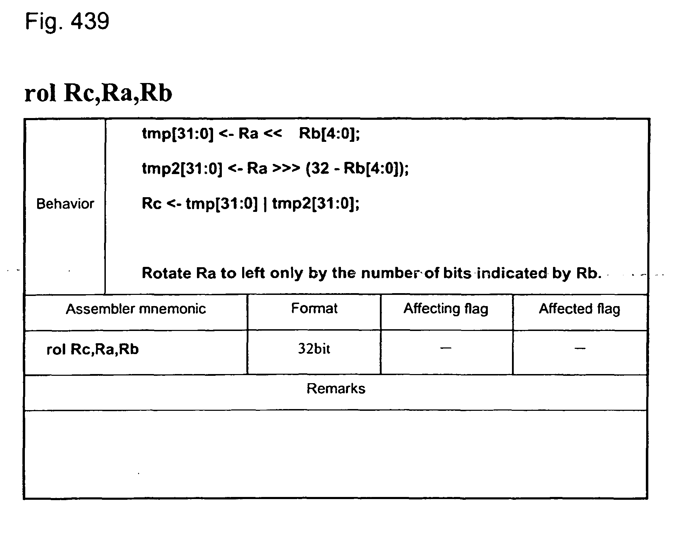

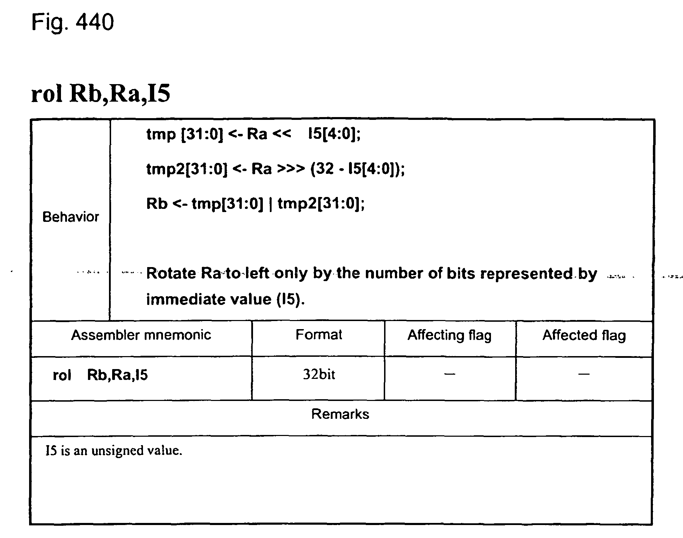

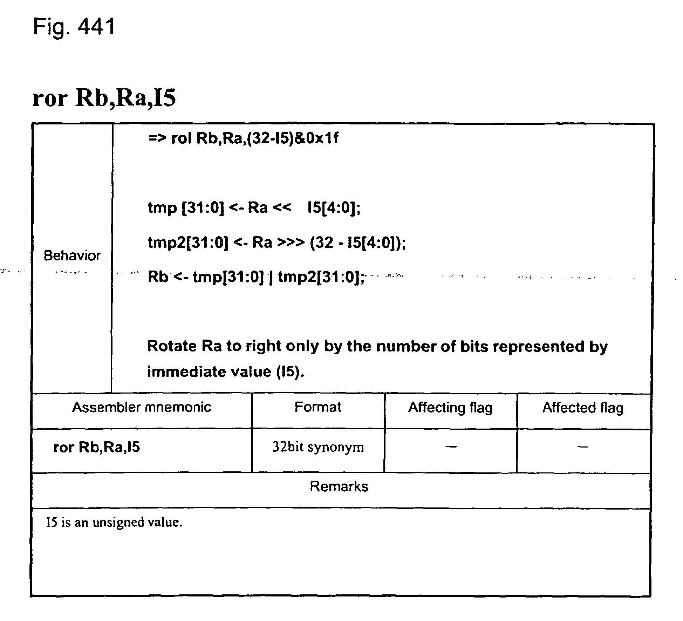

Figs. 422~441 are diagrams explaining instructions relating to "shift (S1)".

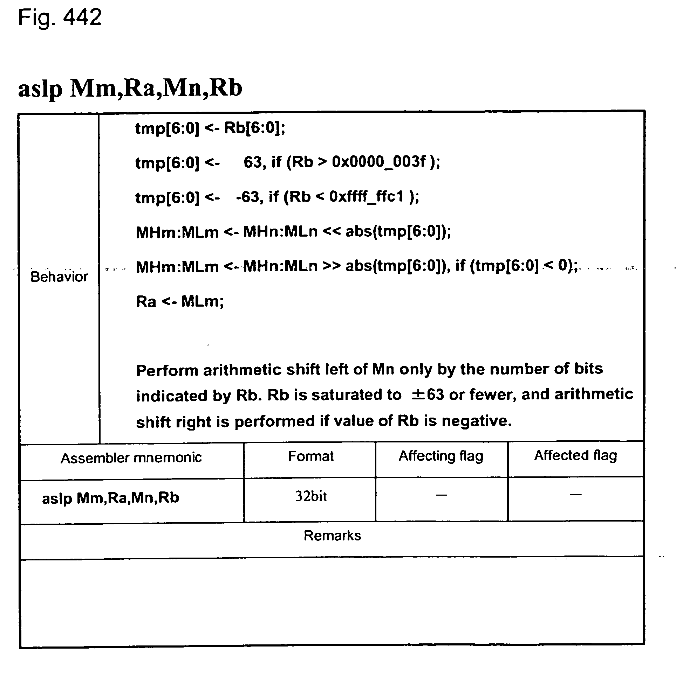

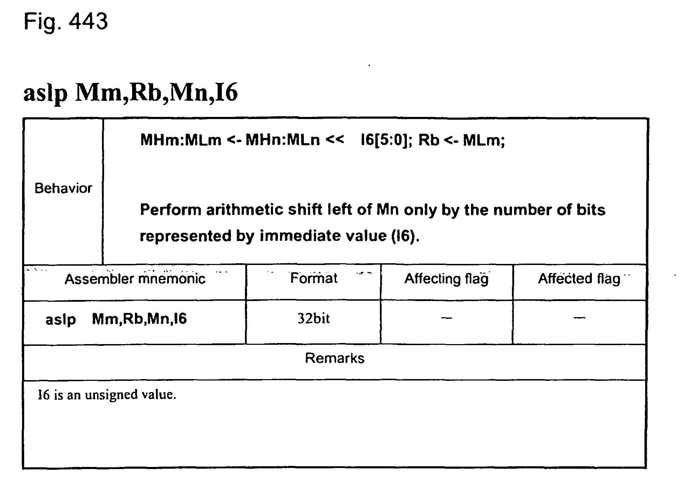

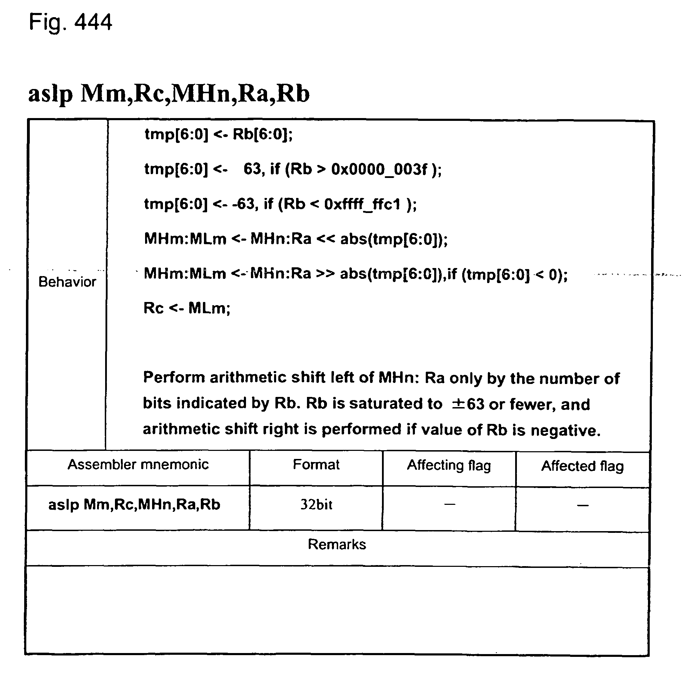

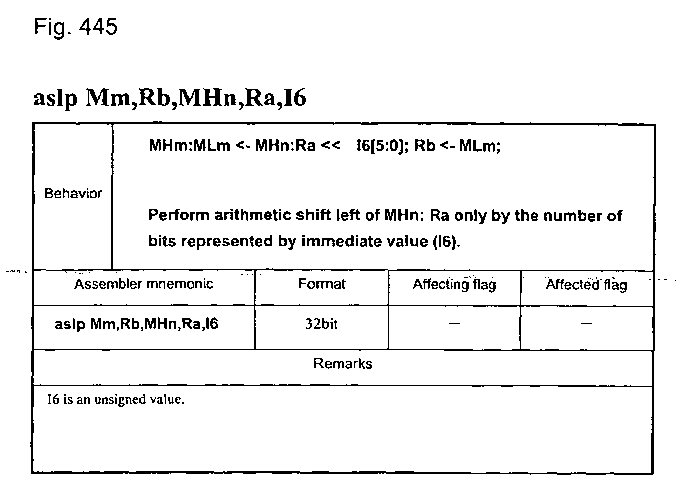

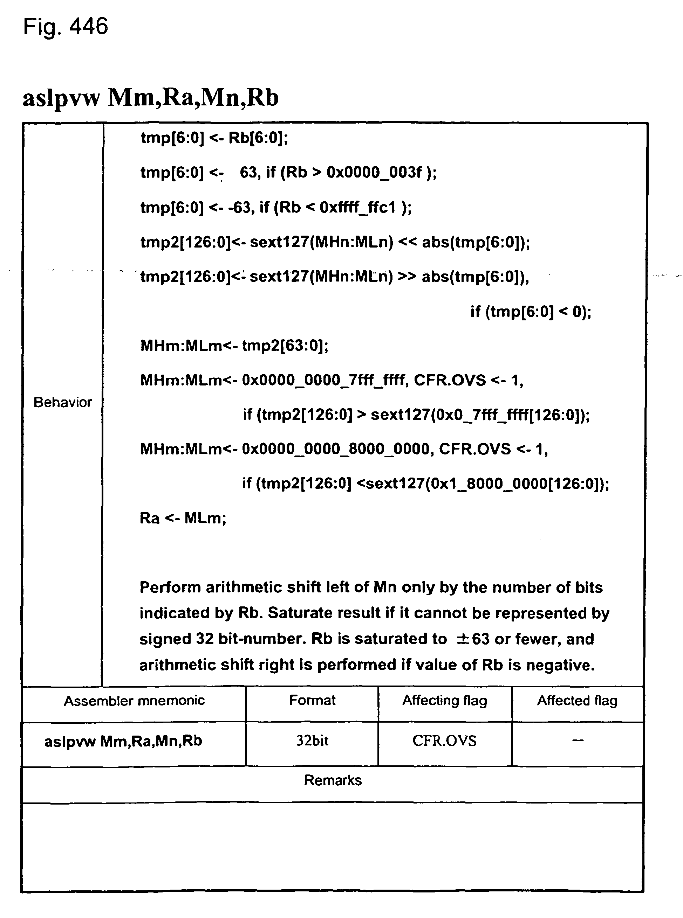

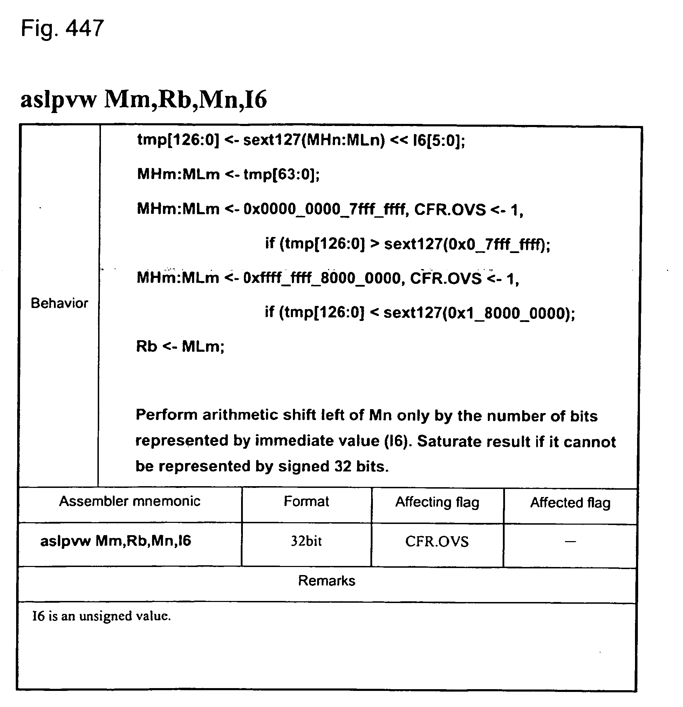

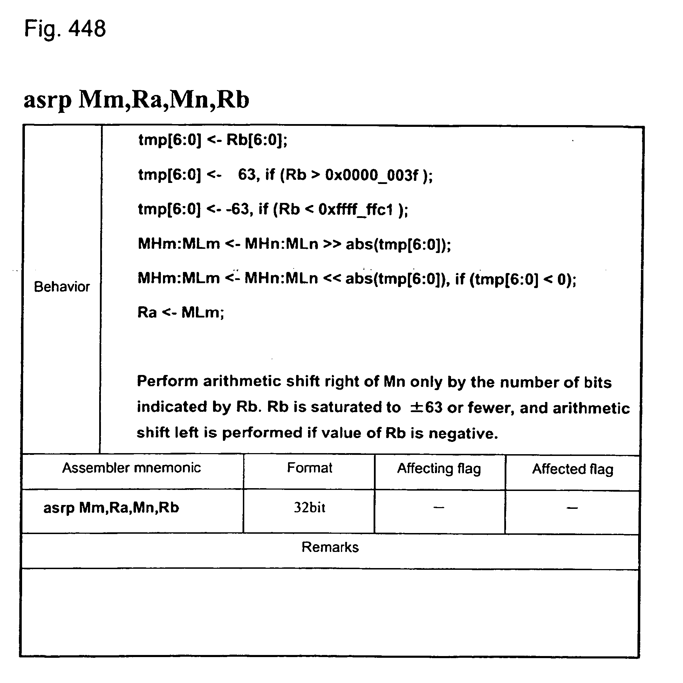

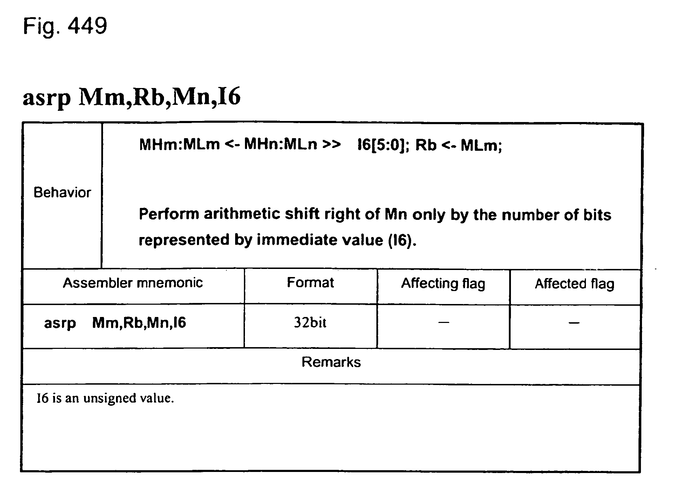

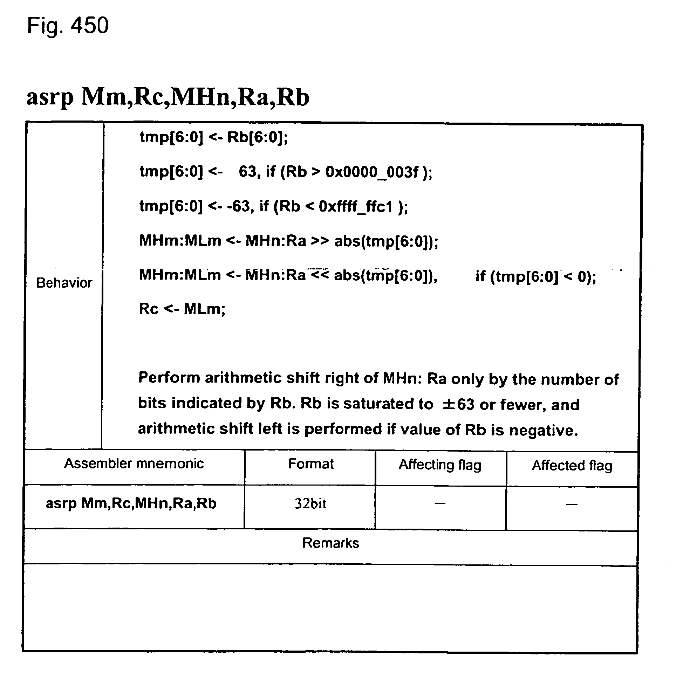

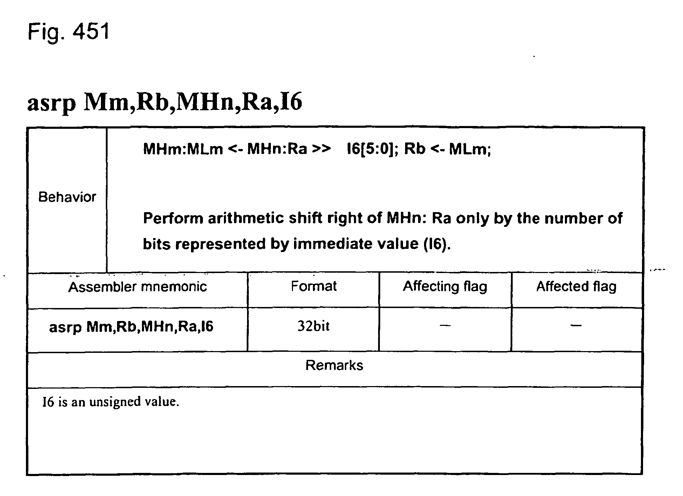

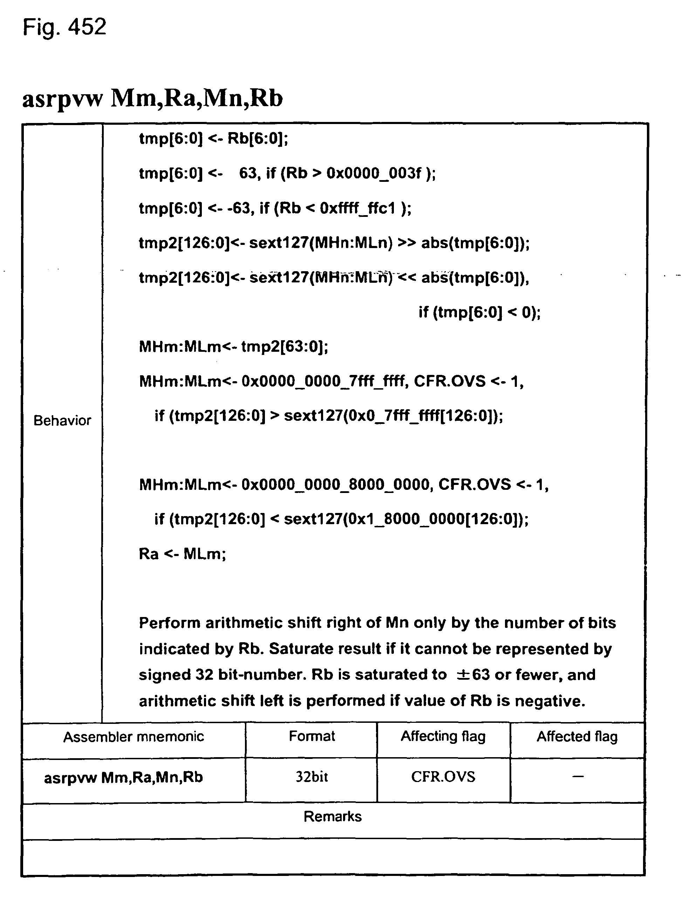

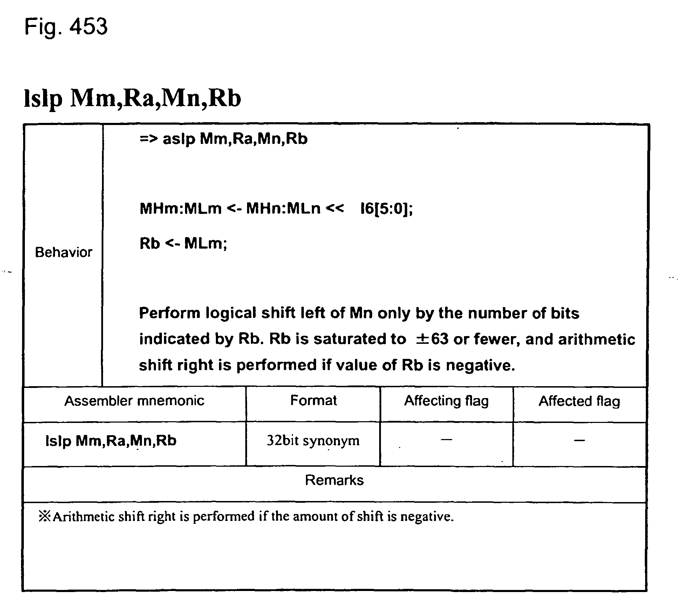

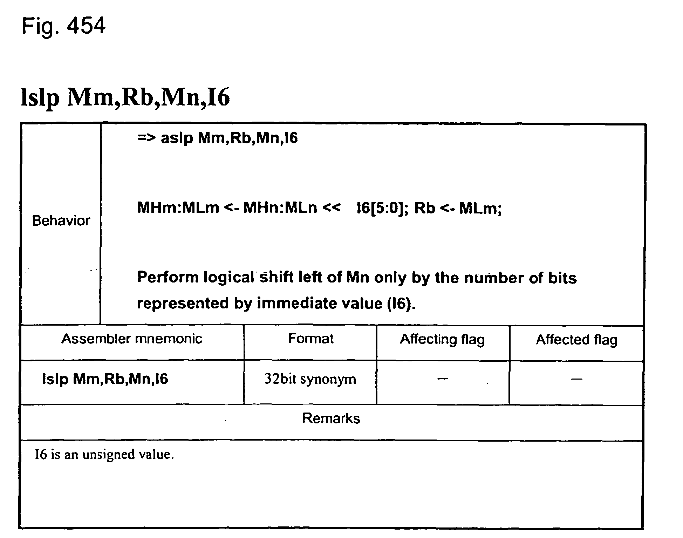

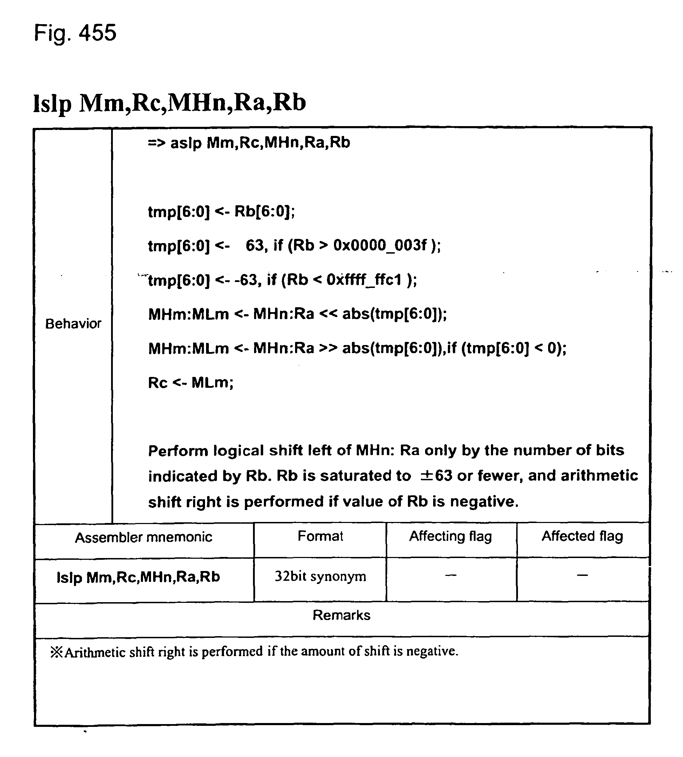

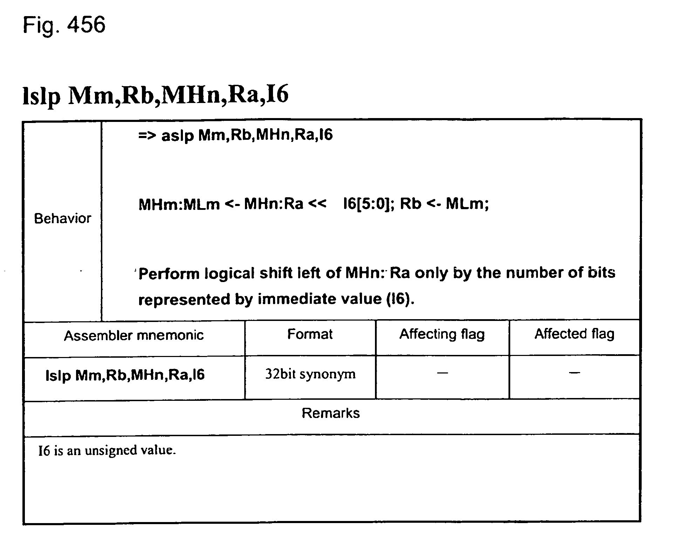

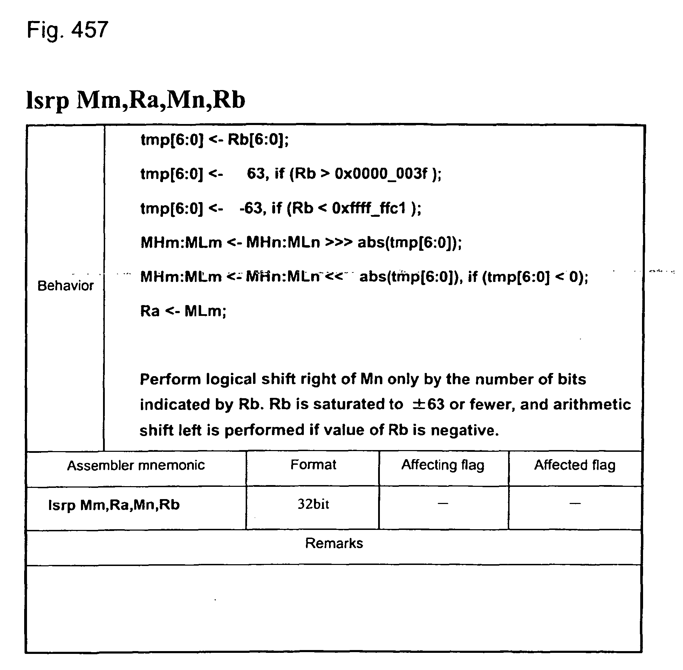

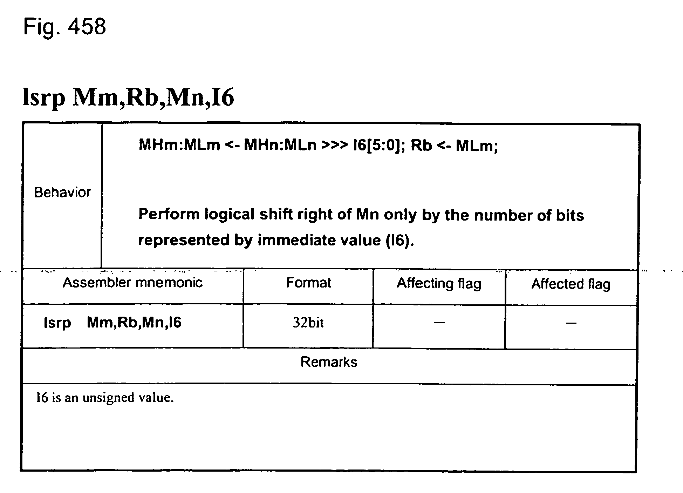

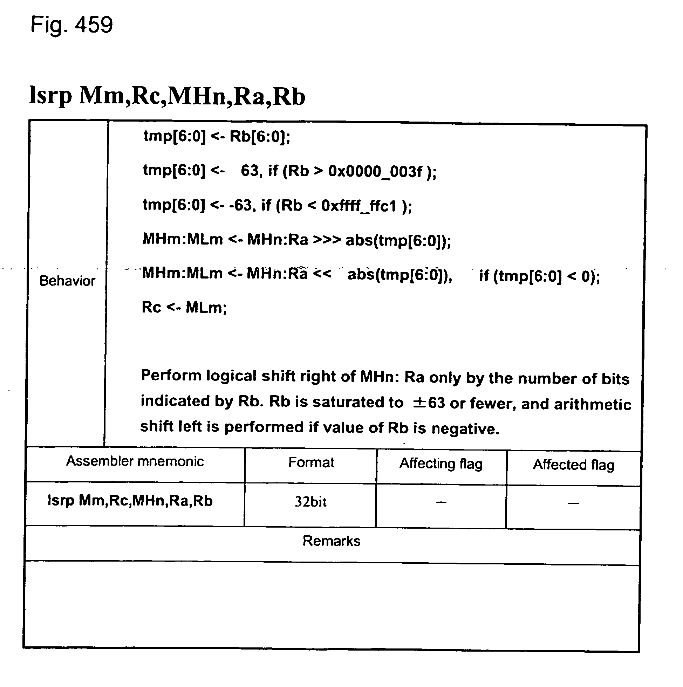

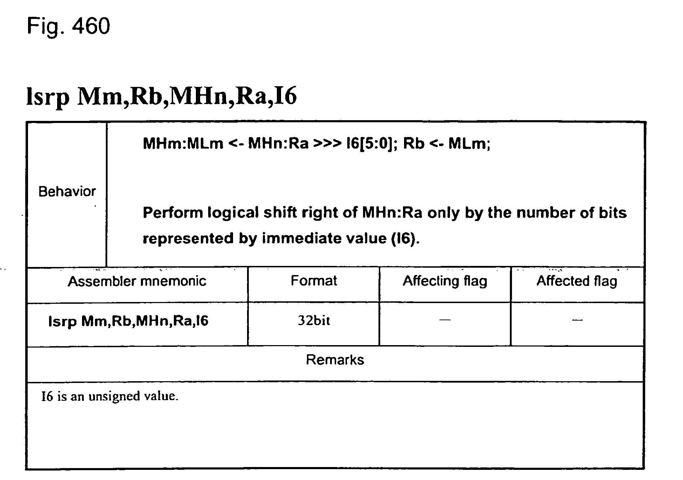

Figs.422~460 are diagrams explaining instructions relating to "shift (S2)".

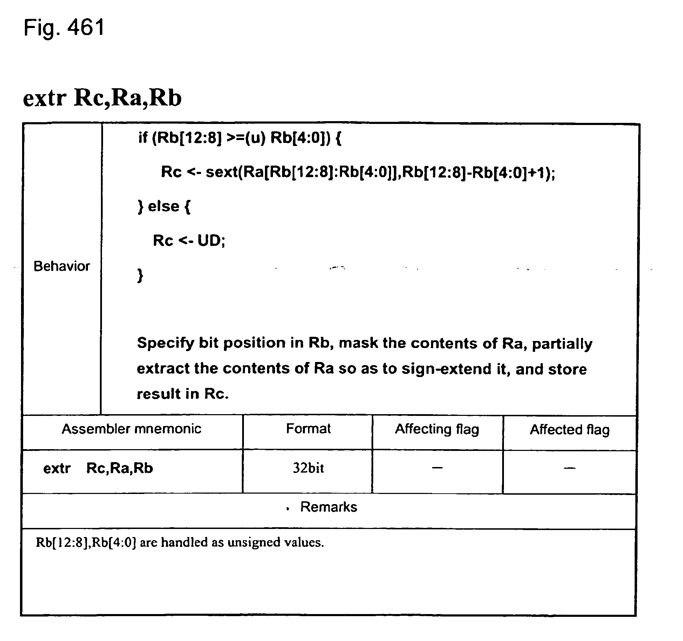

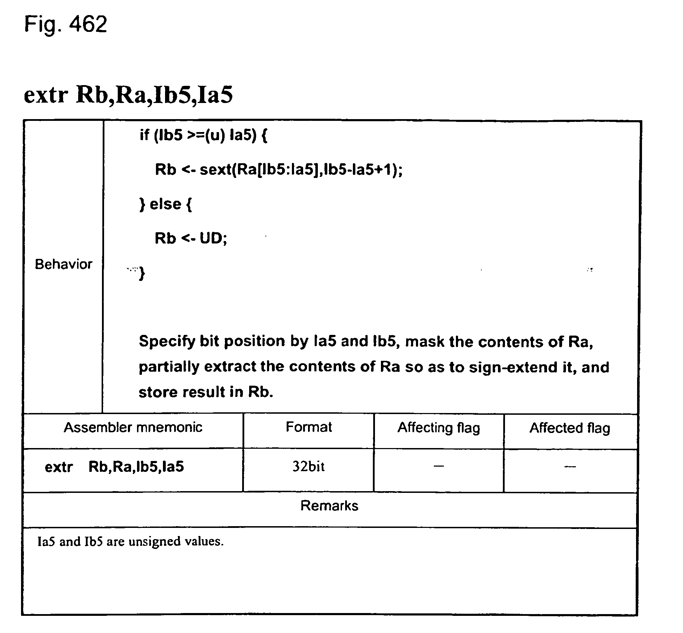

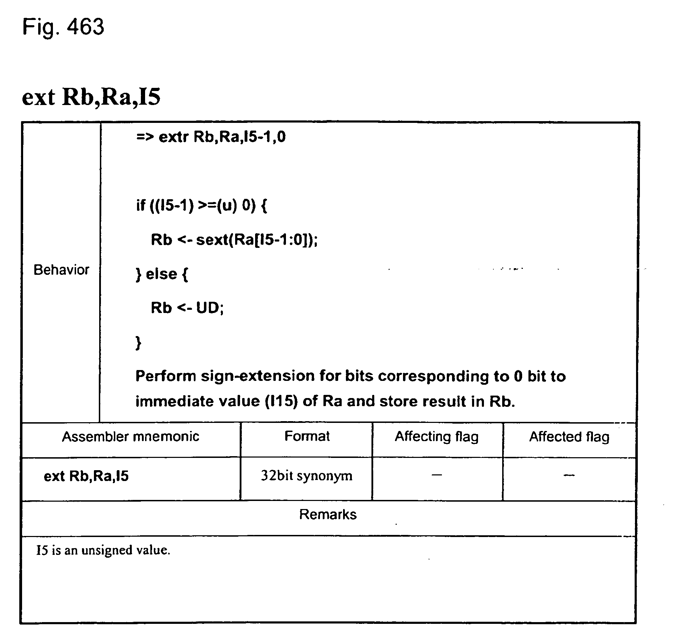

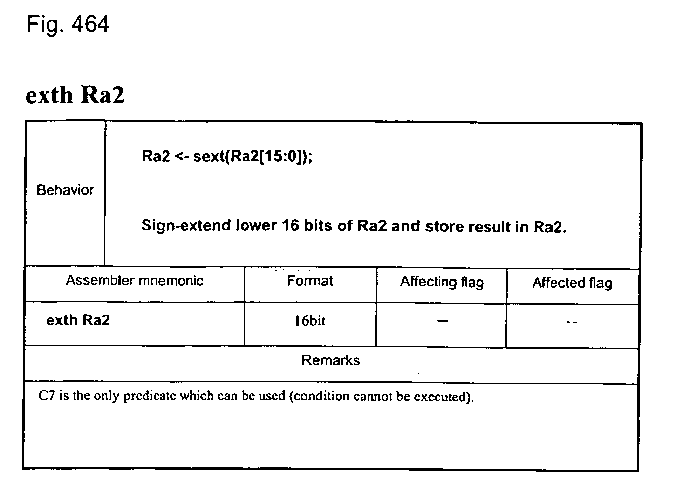

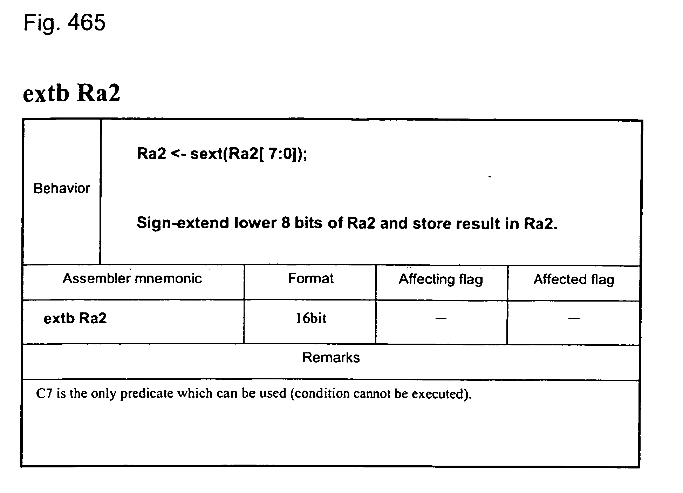

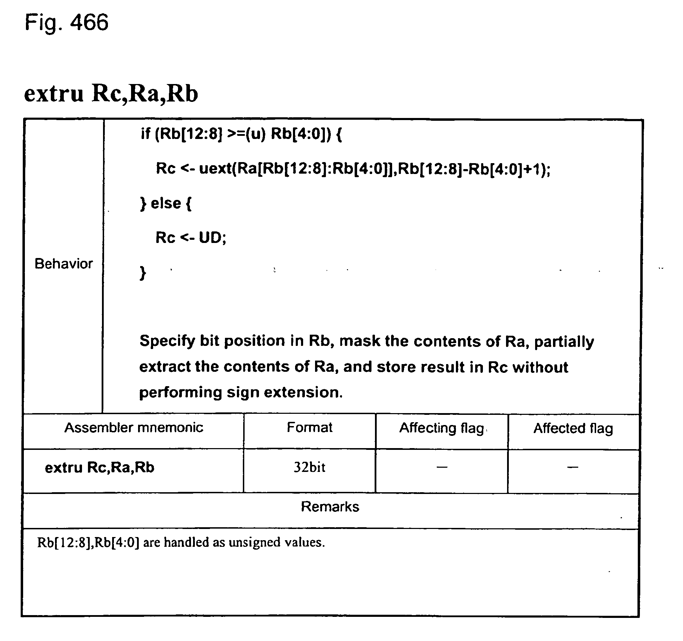

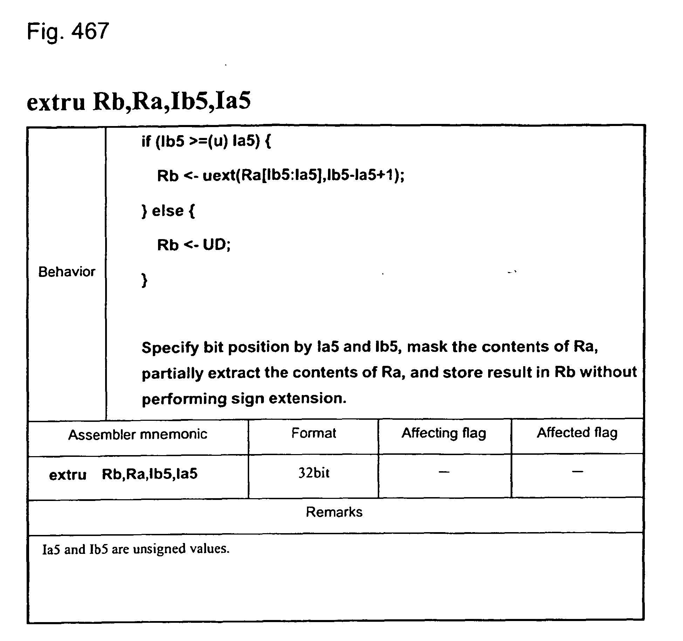

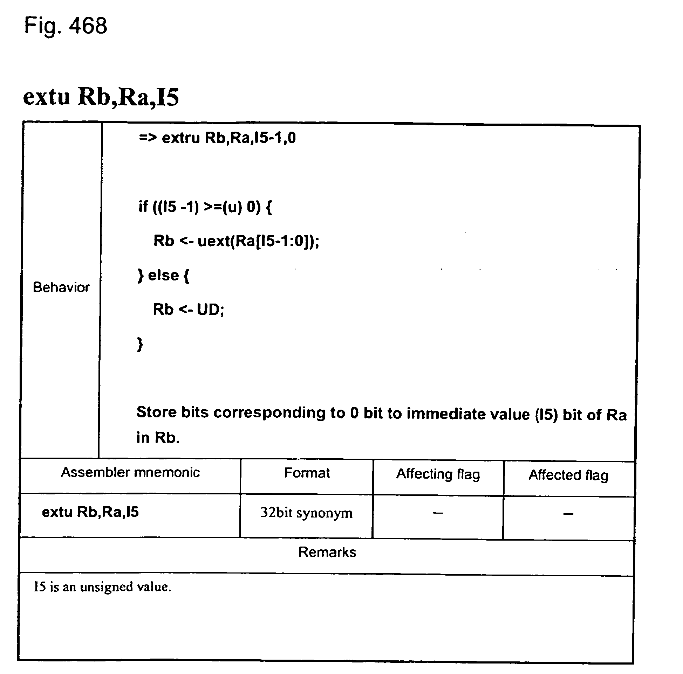

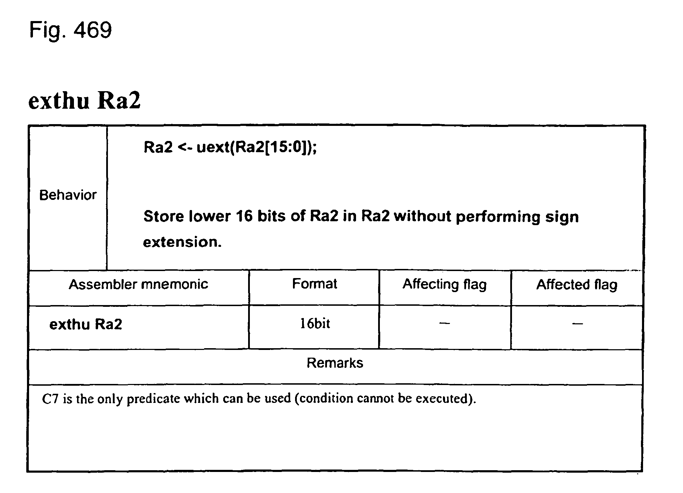

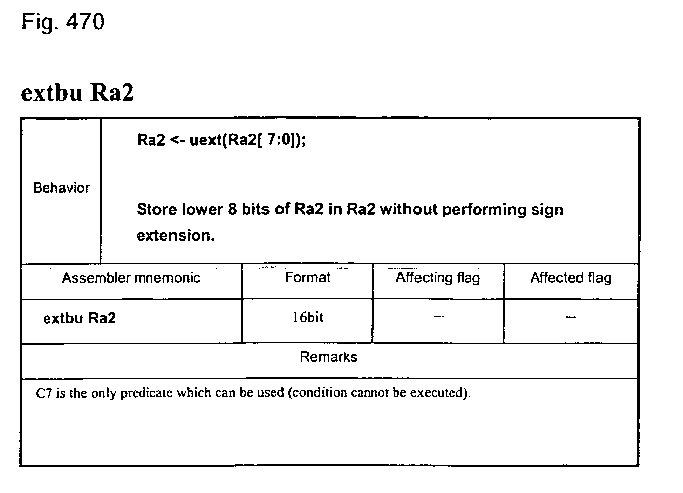

Figs.461~470 are diagrams explaining instructions relating to "extract".

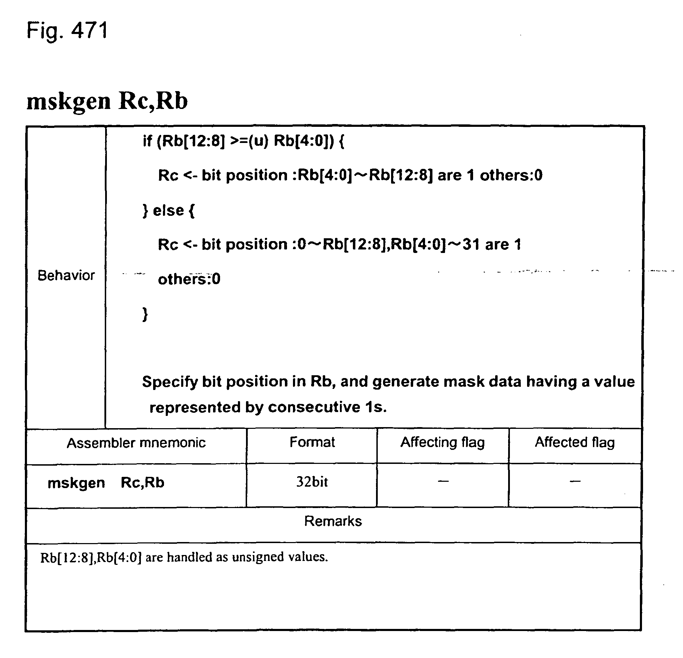

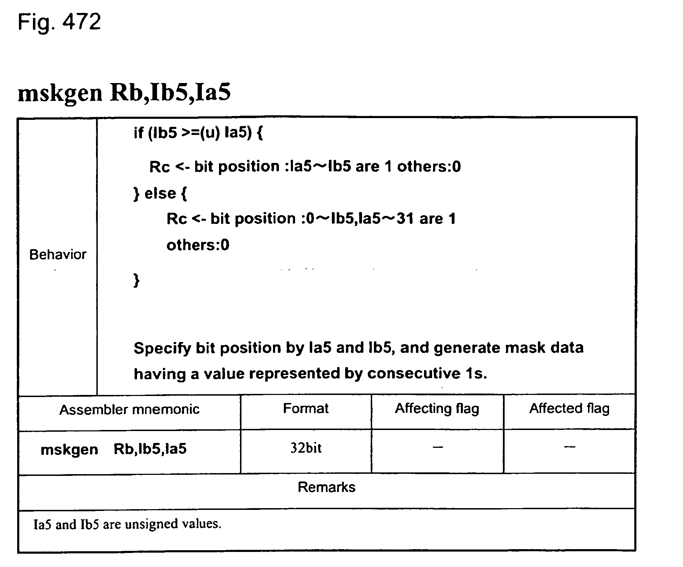

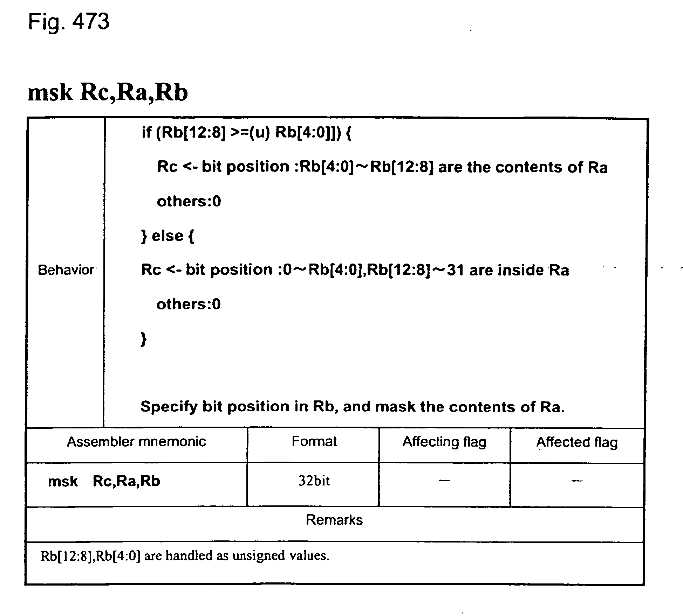

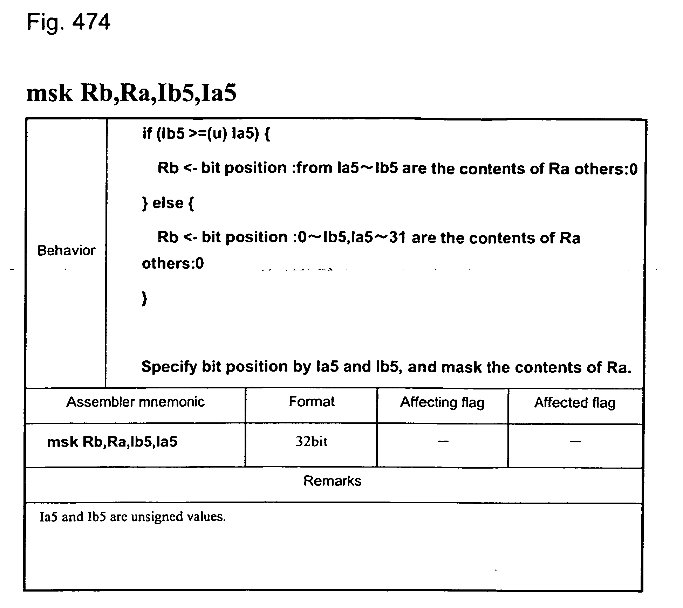

Figs.471~474 are diagrams explaining instructions relating to "mask".

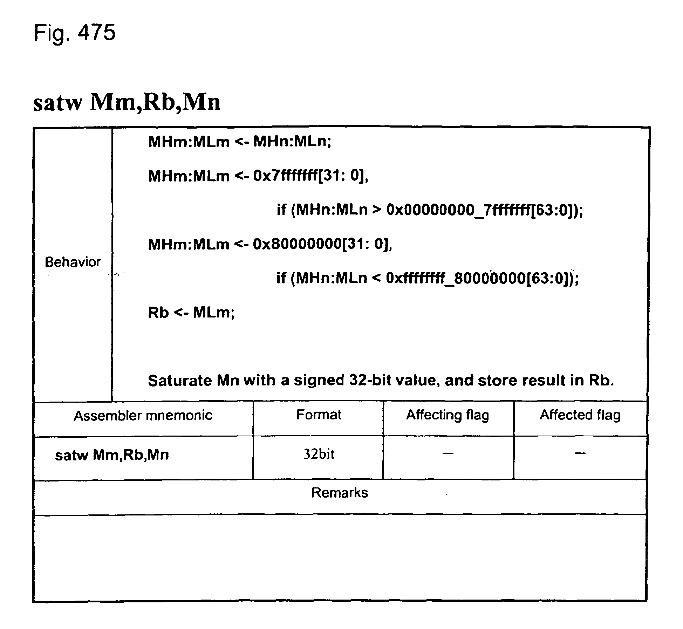

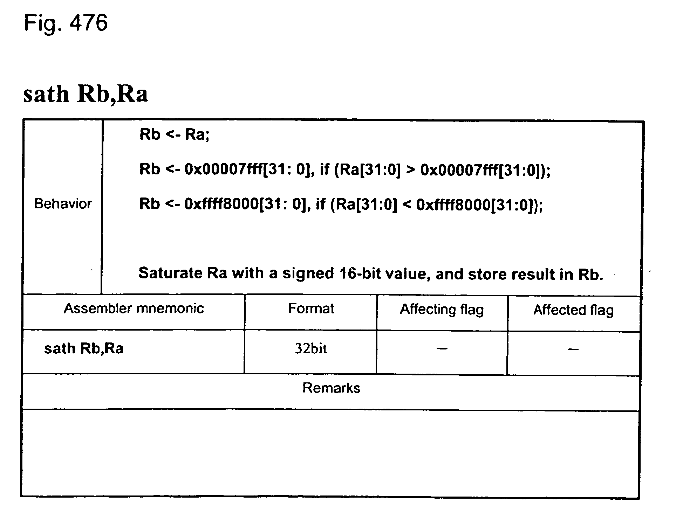

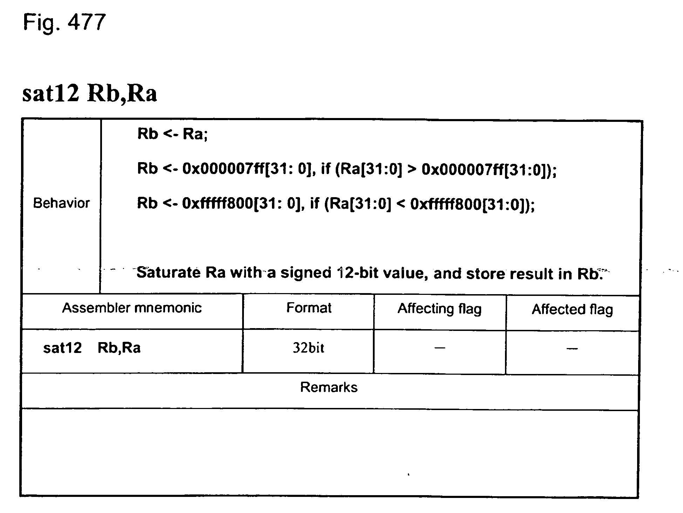

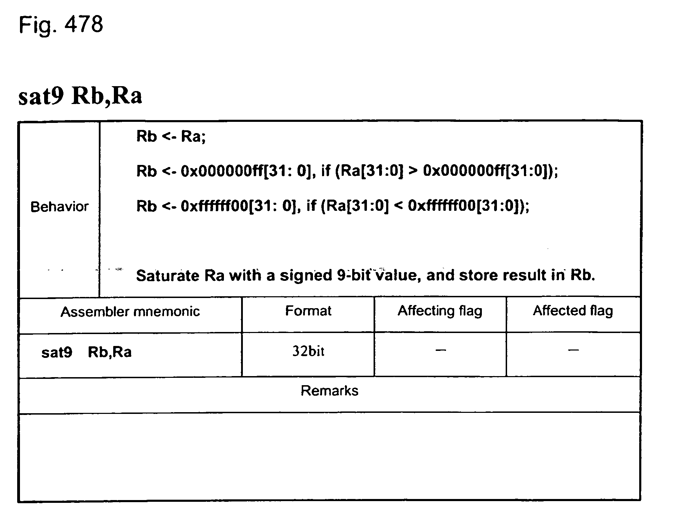

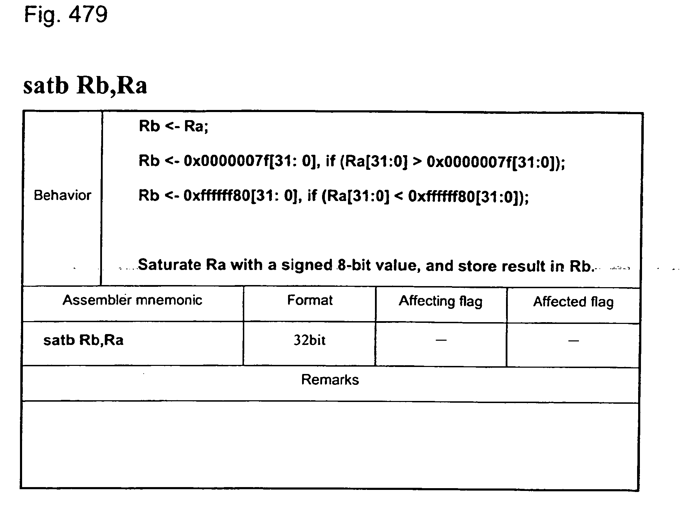

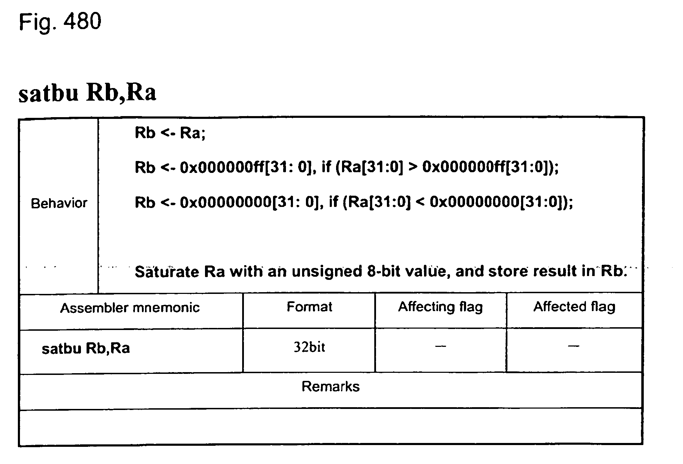

Figs.475~480 are diagrams explaining instructions relating to "saturation".

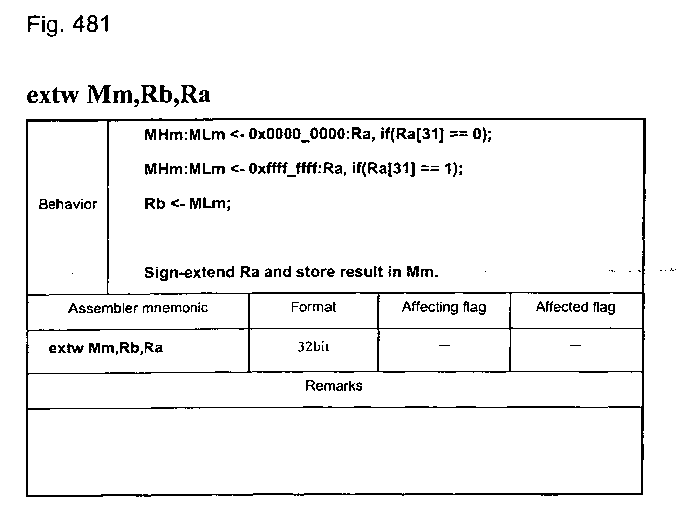

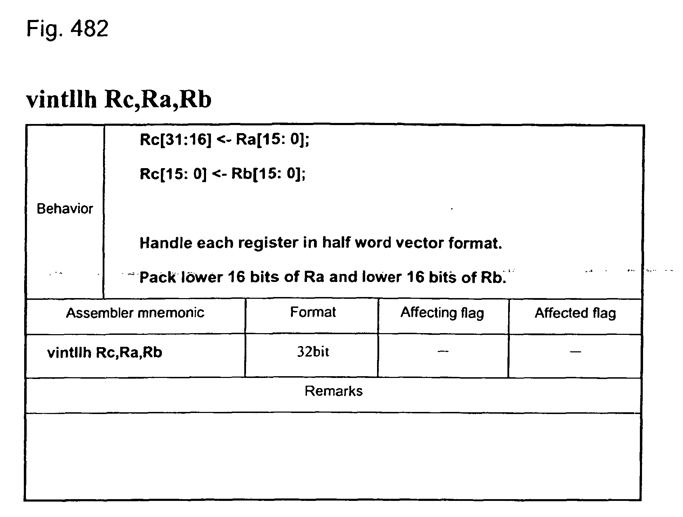

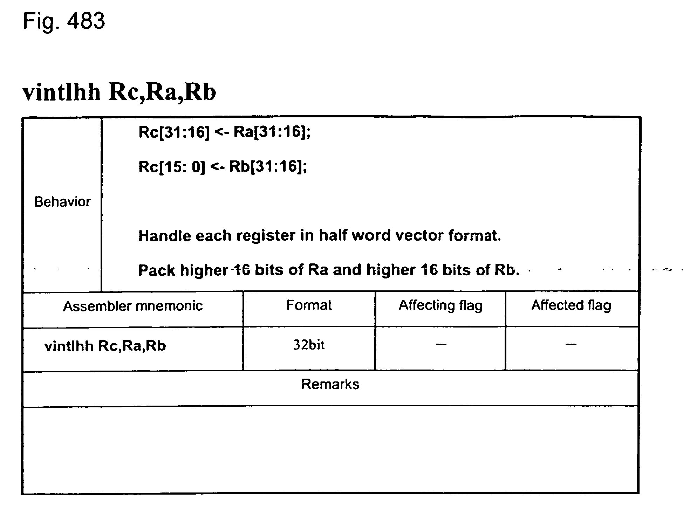

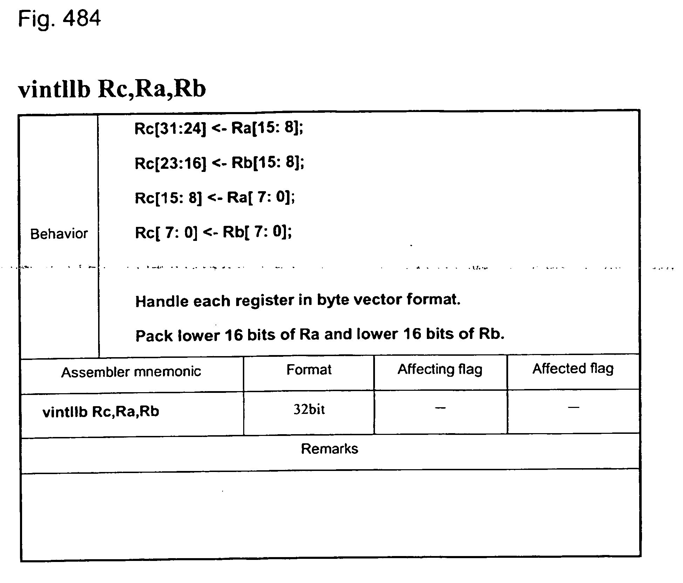

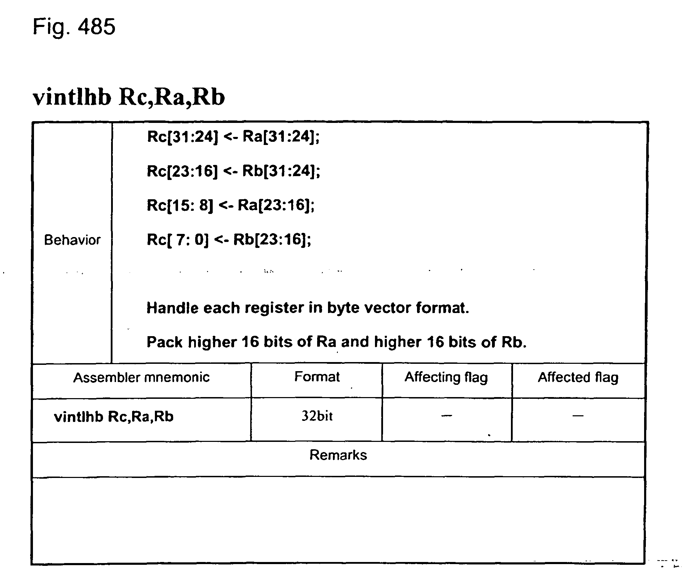

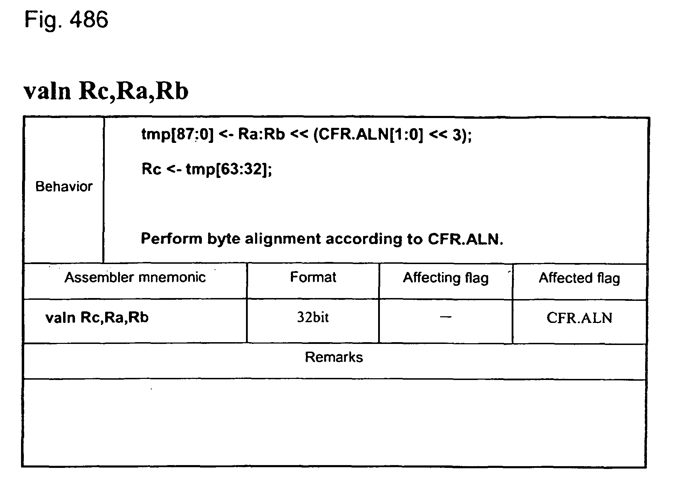

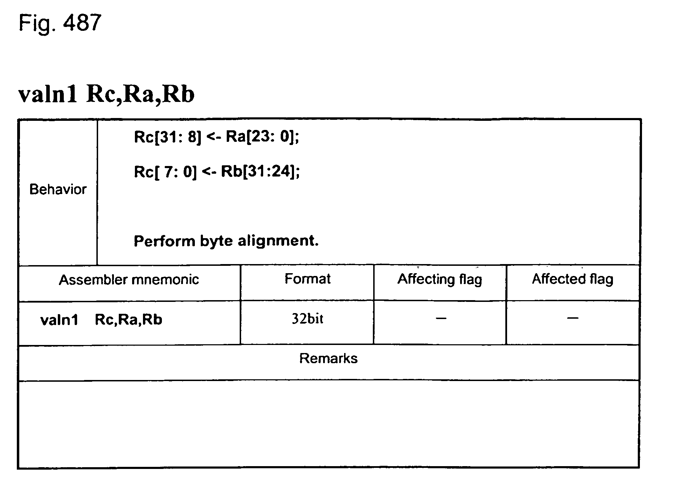

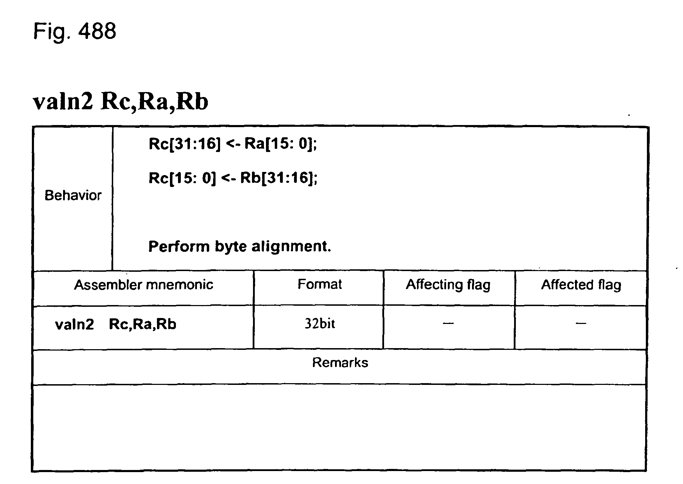

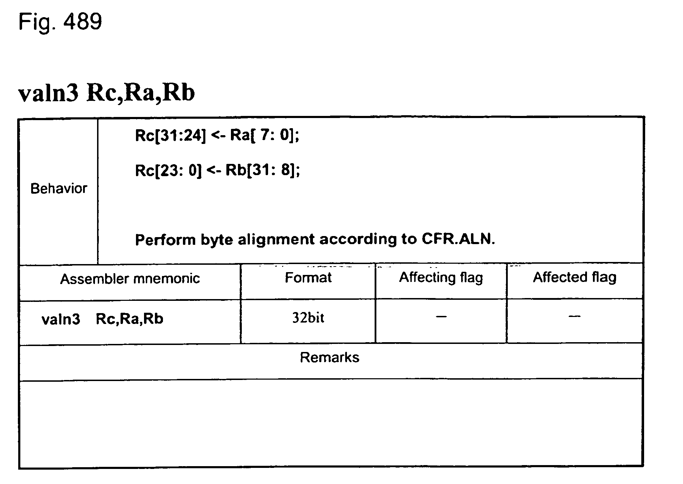

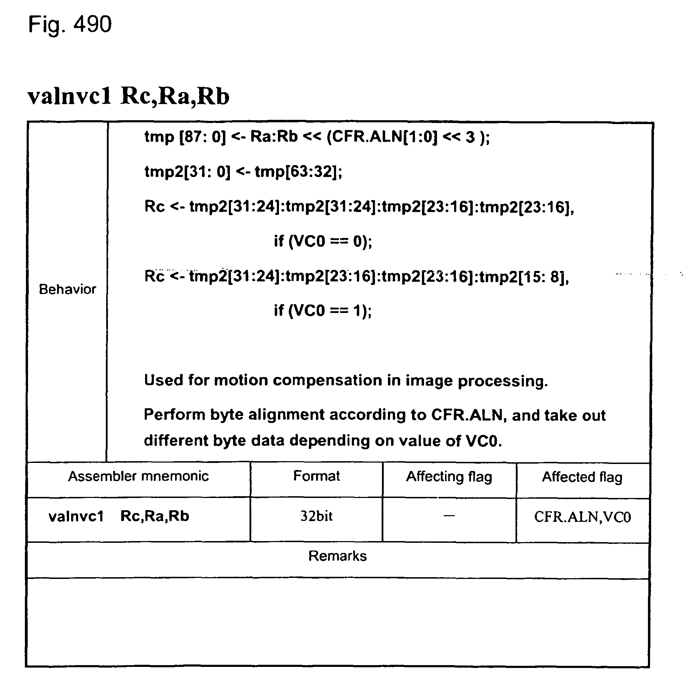

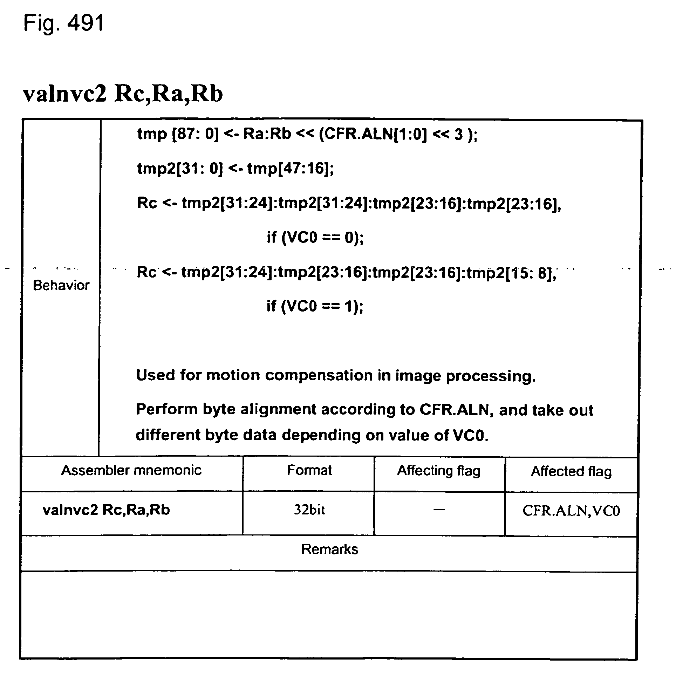

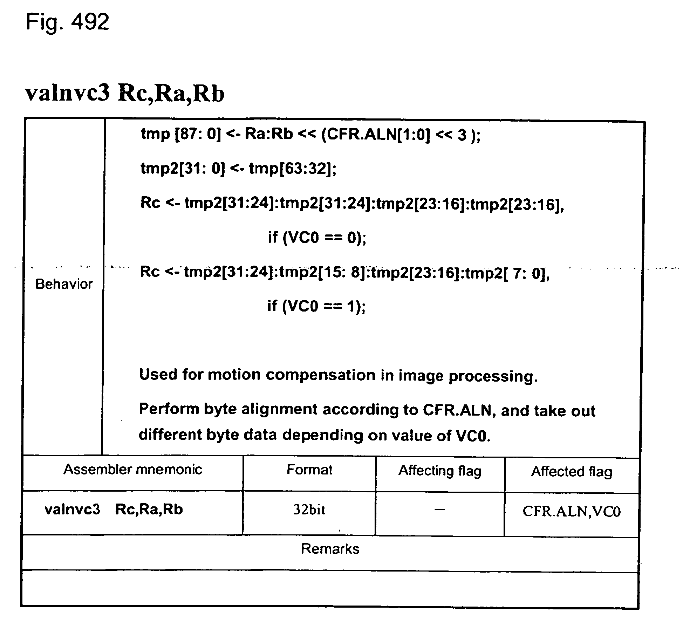

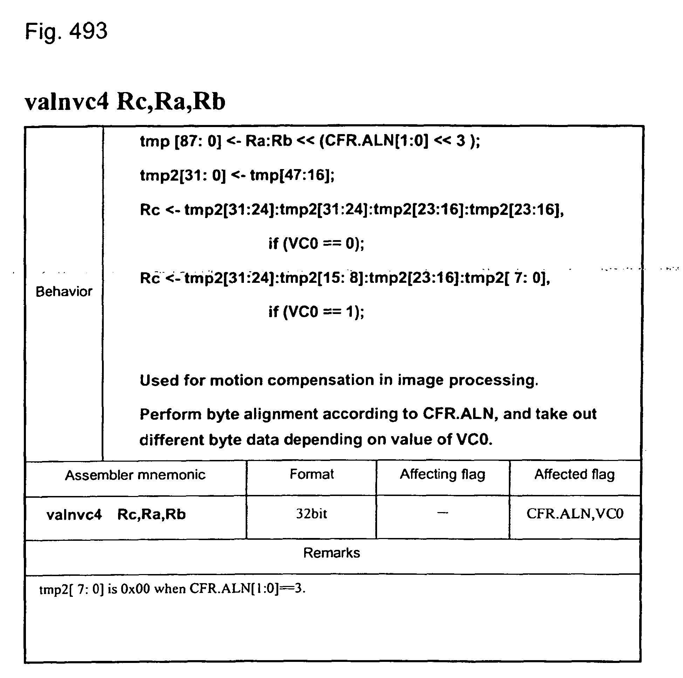

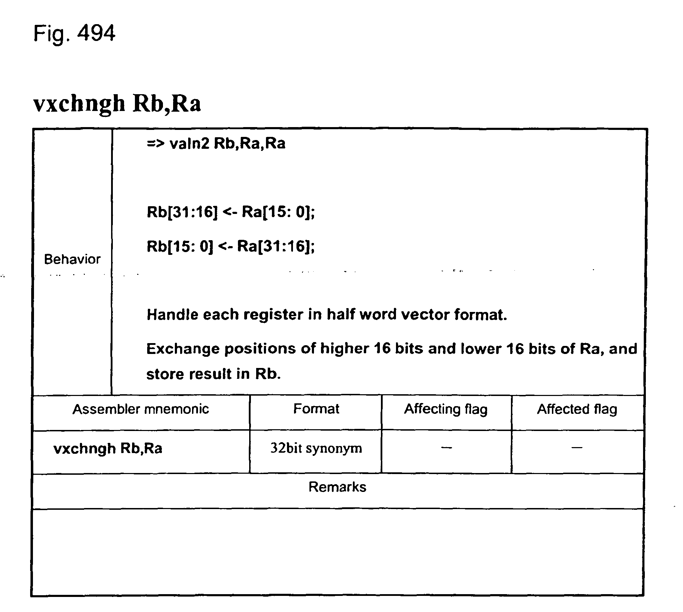

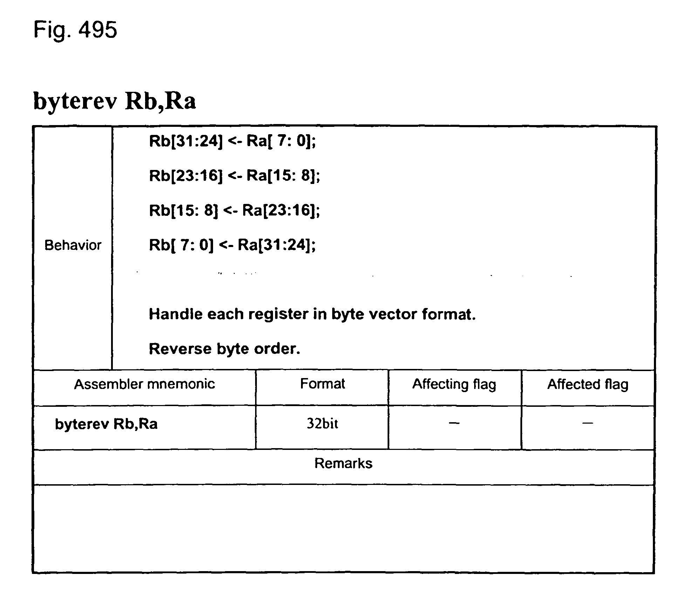

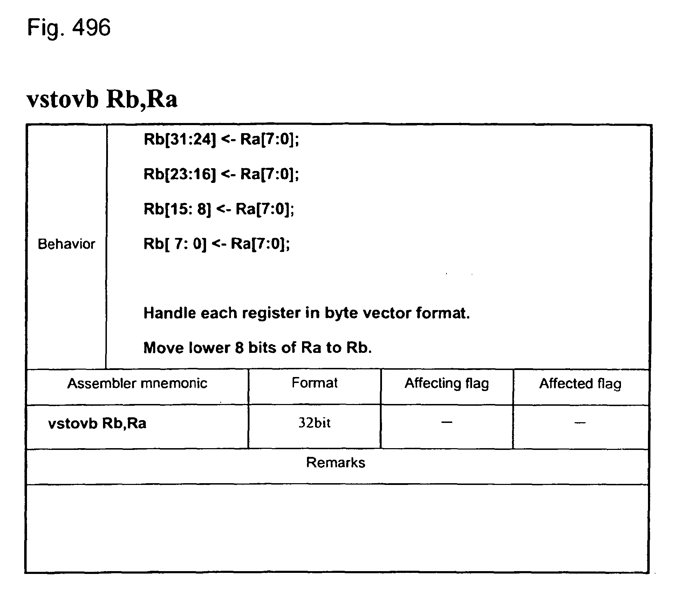

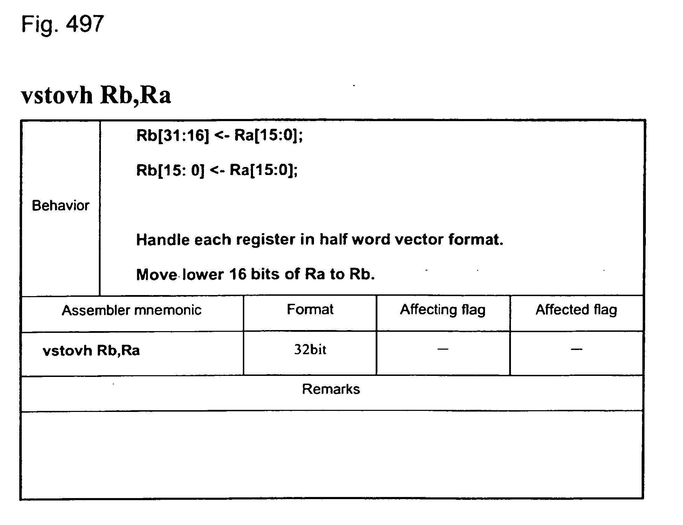

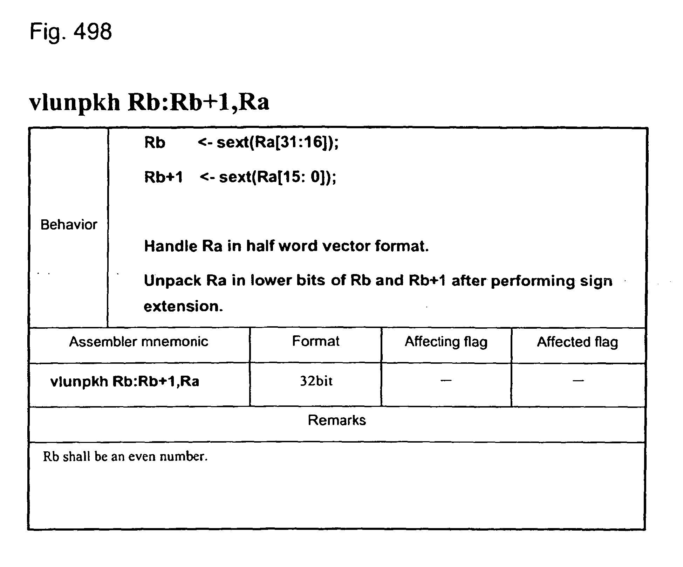

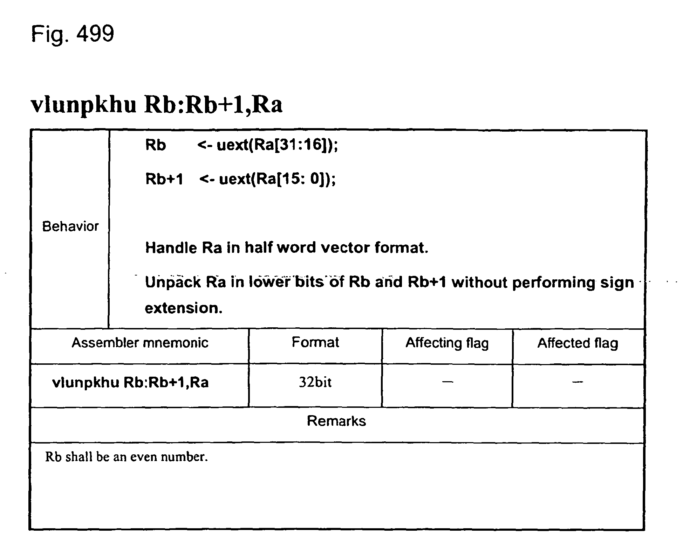

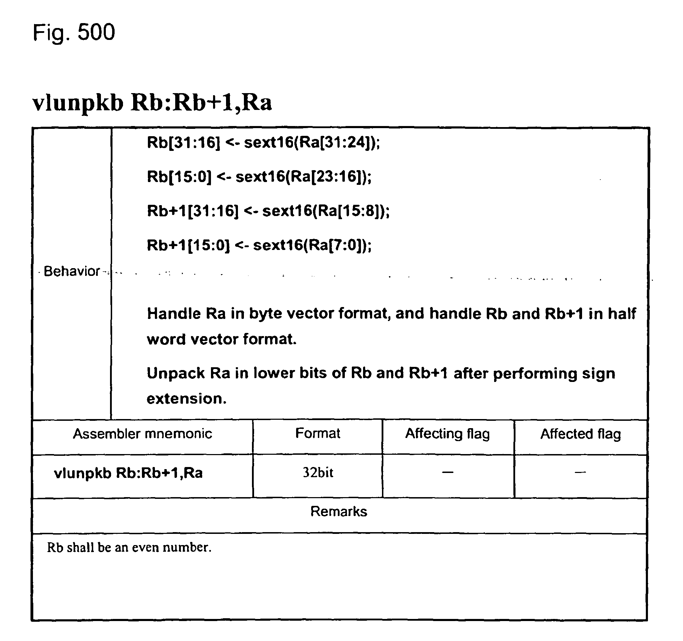

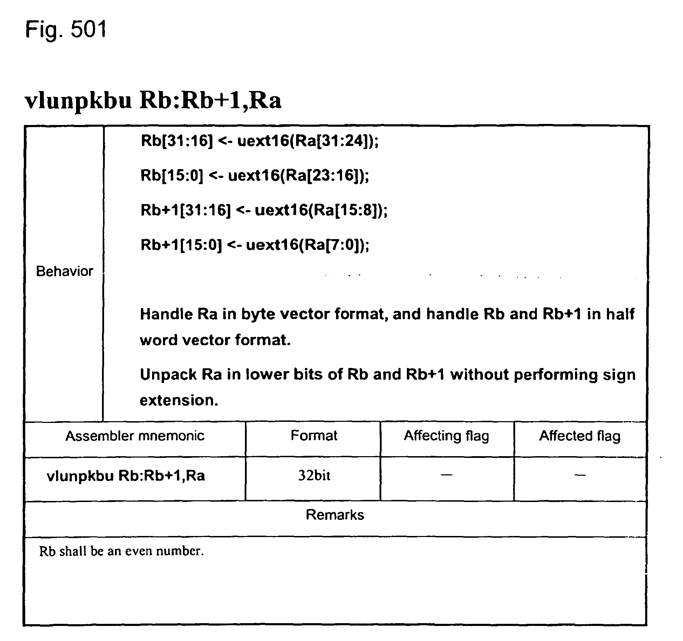

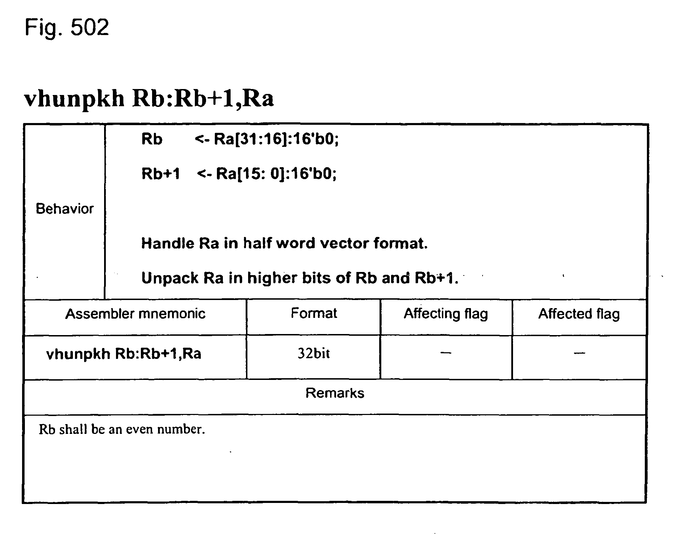

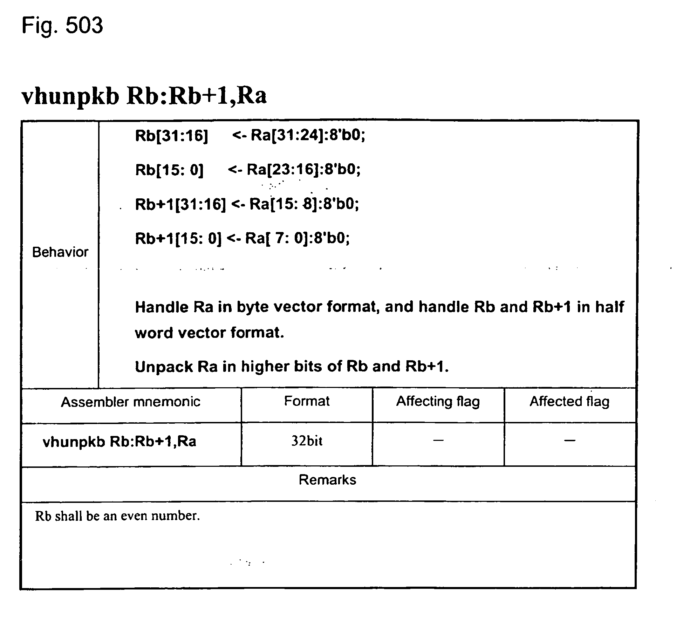

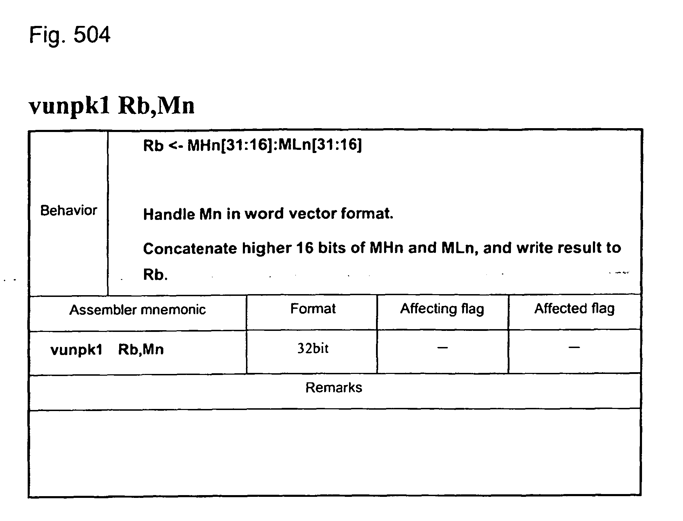

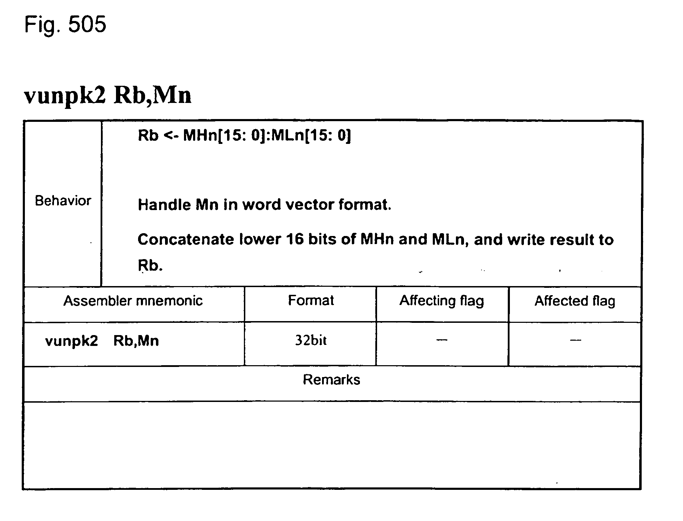

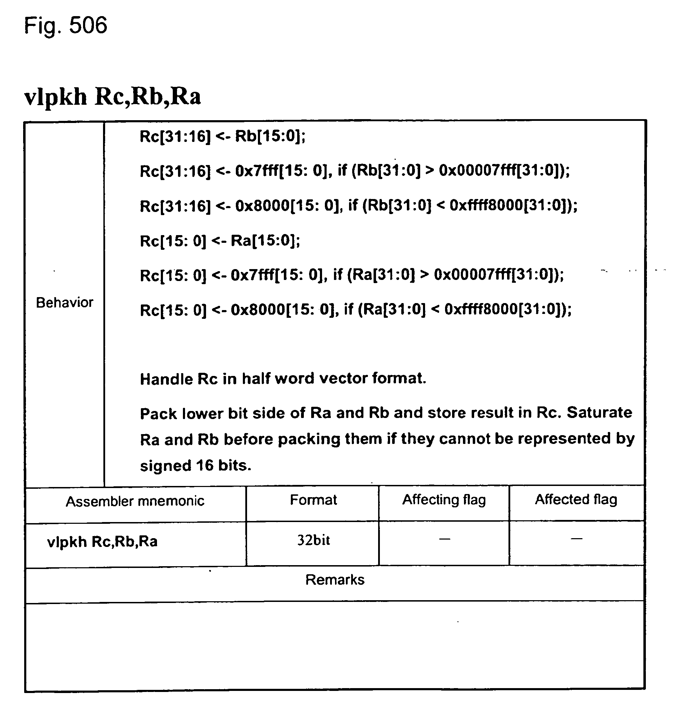

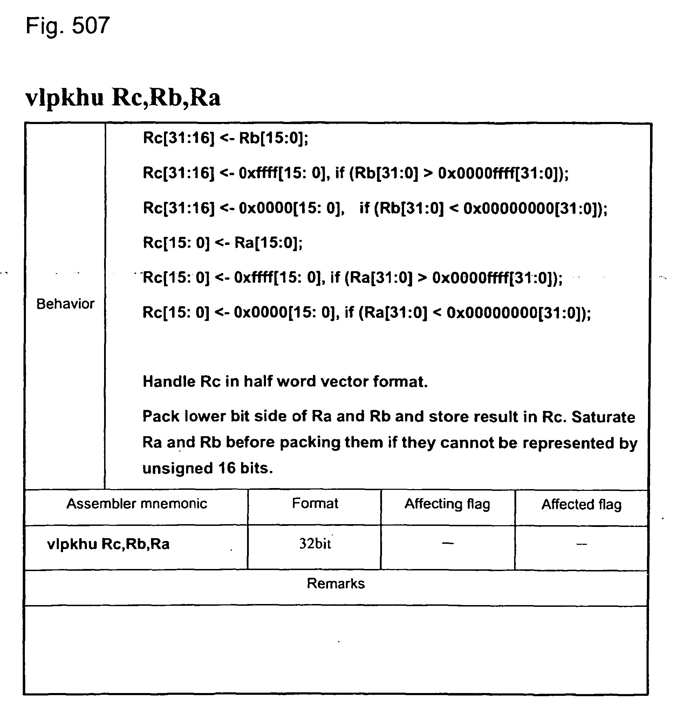

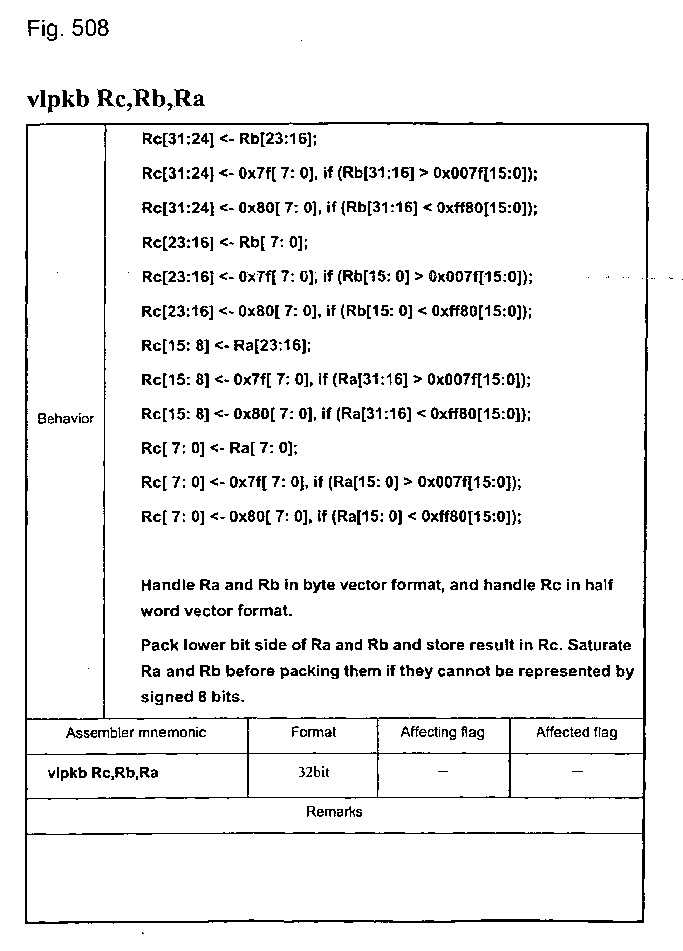

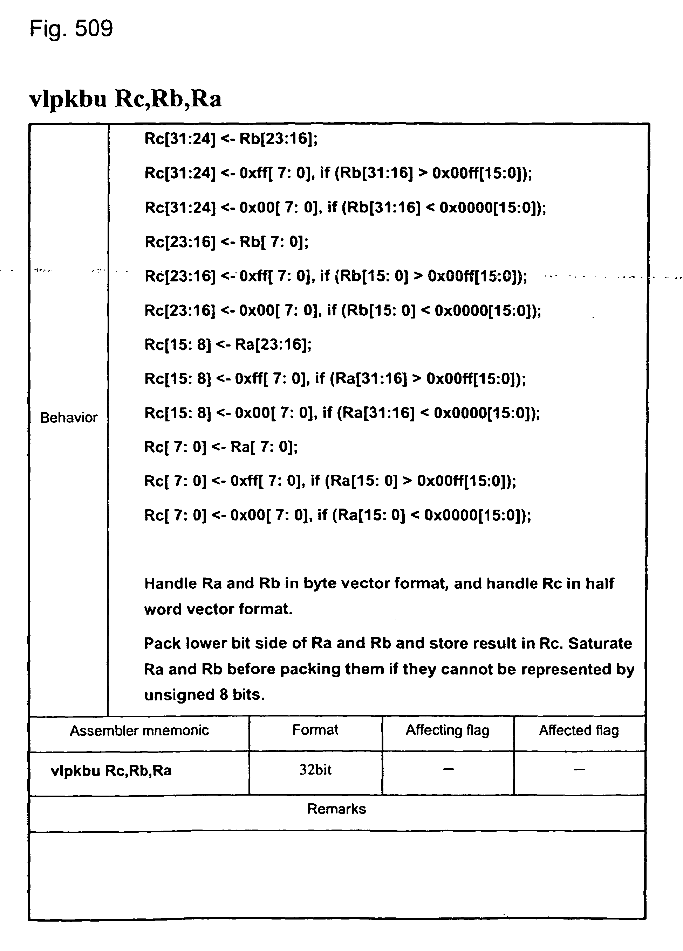

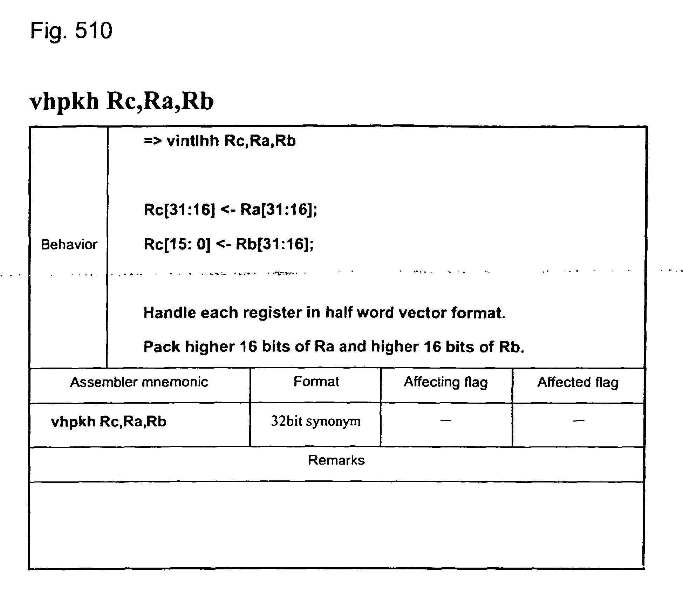

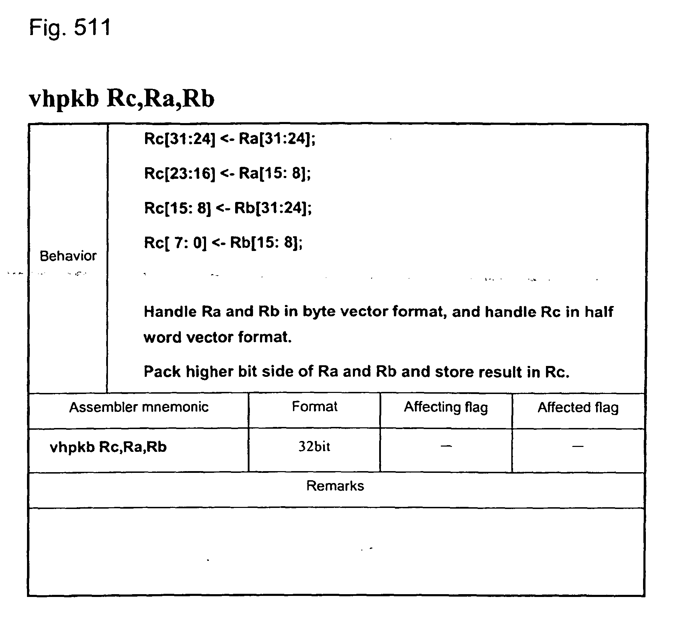

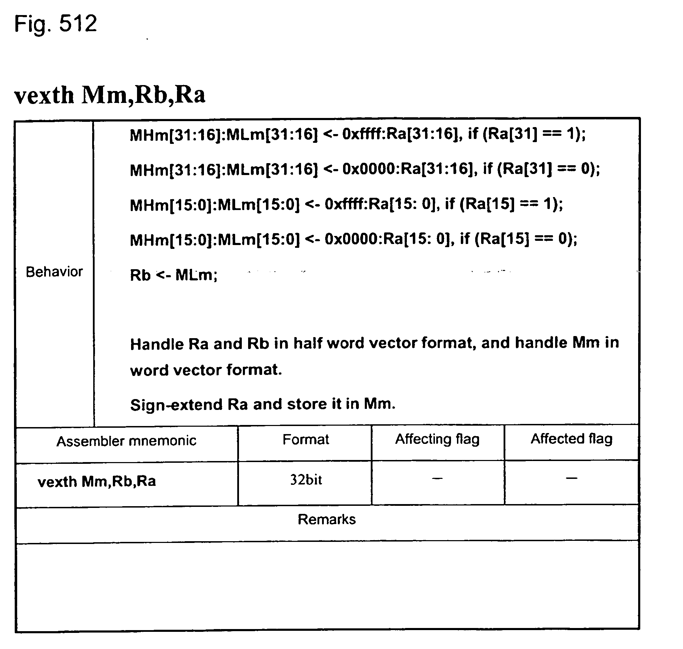

Figs.481~512 are diagrams explaining instructions relating to "conversion".

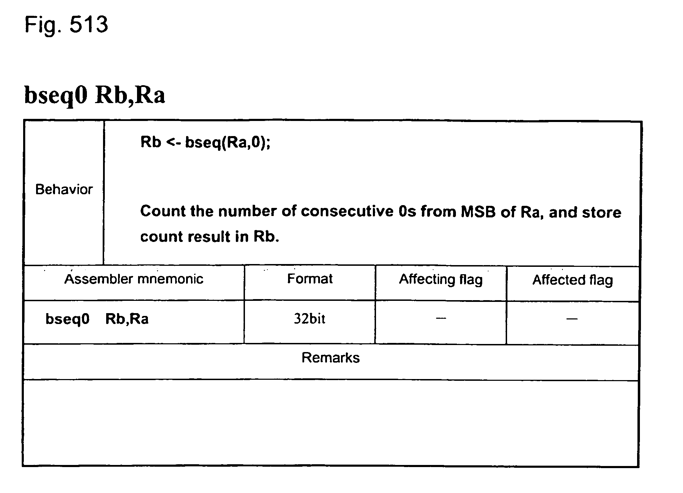

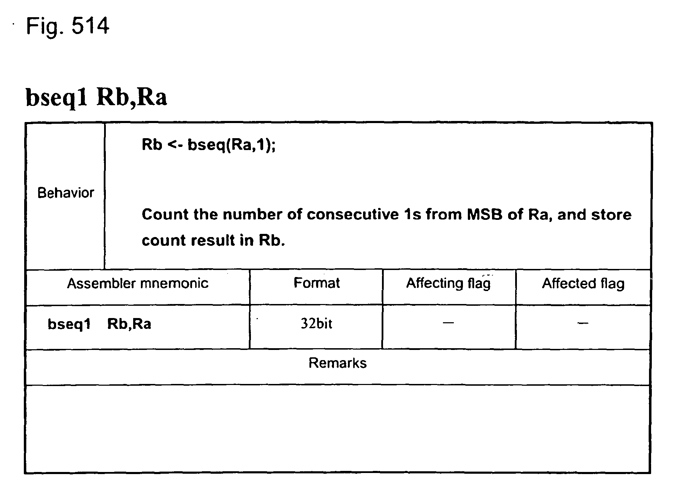

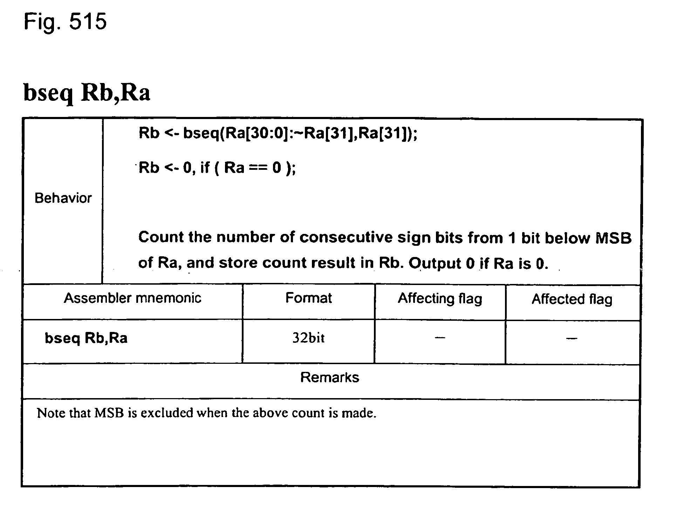

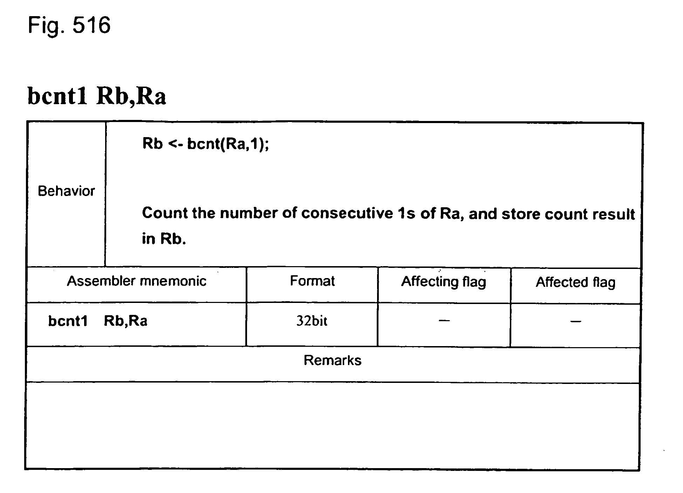

Figs.513~516 are diagrams explaining instructions relating to "bit count".

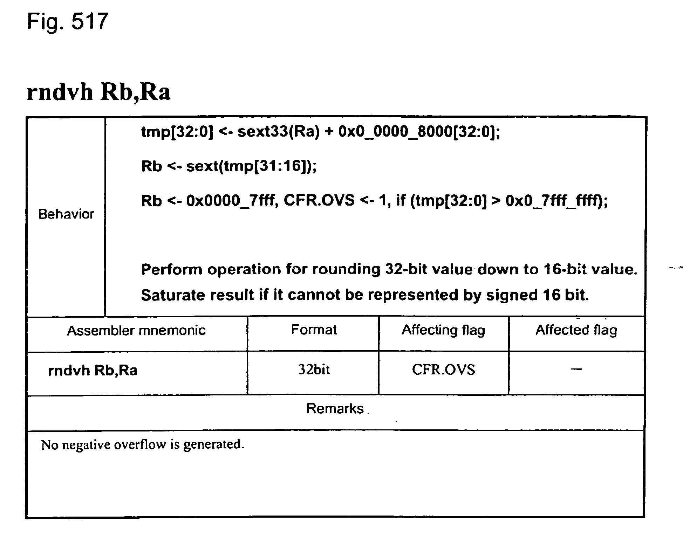

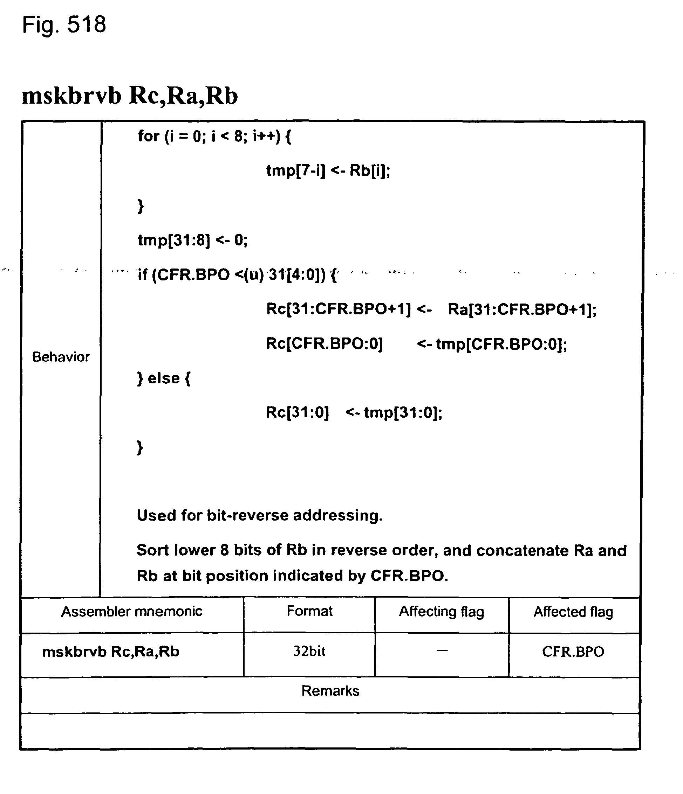

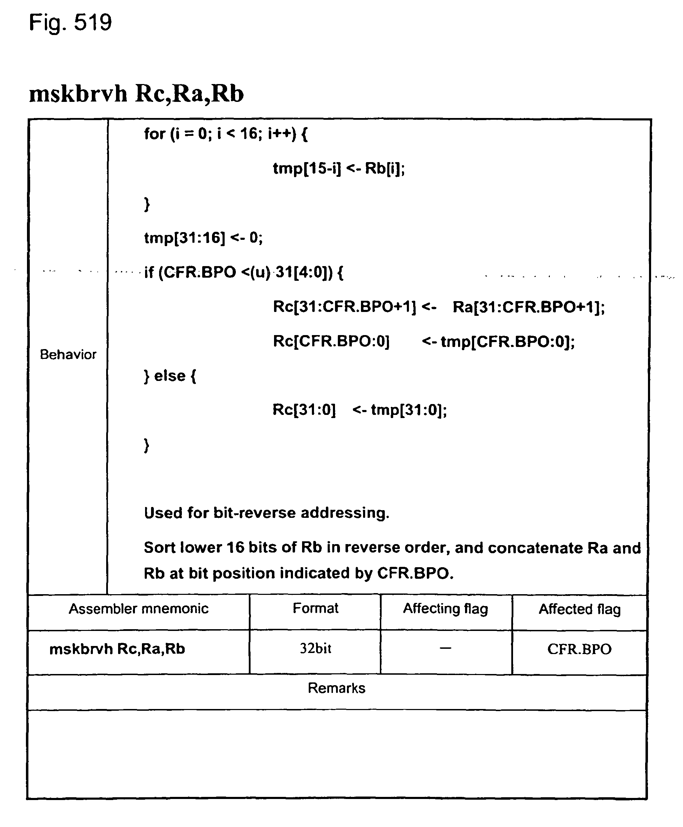

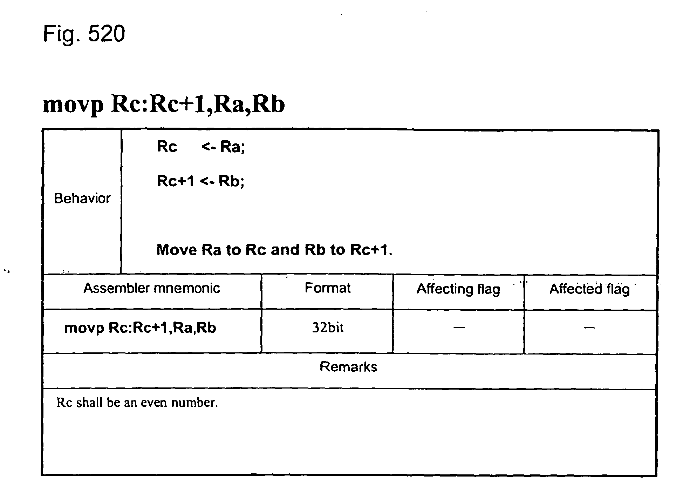

Figs.517~520 are diagrams explaining instructions relating to "etc".

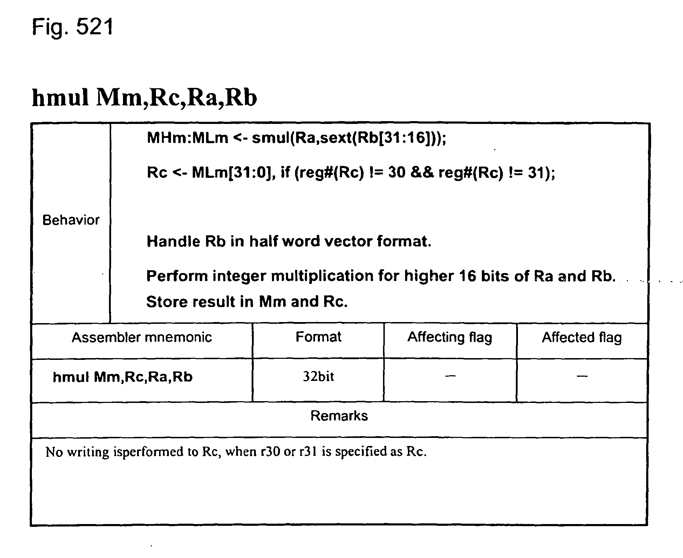

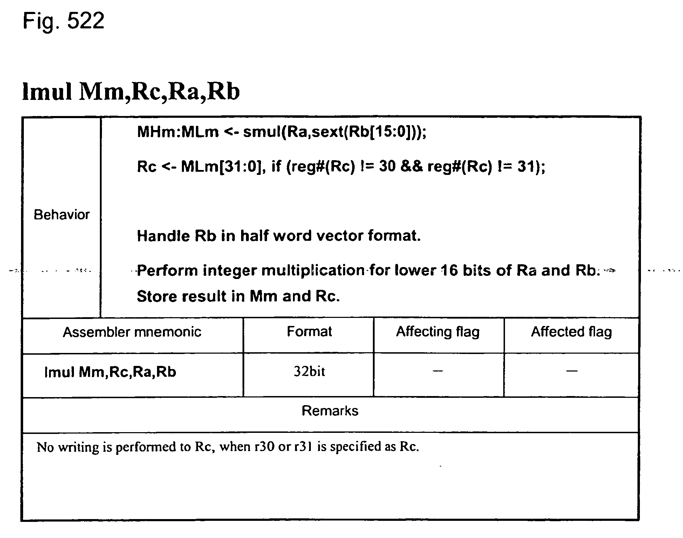

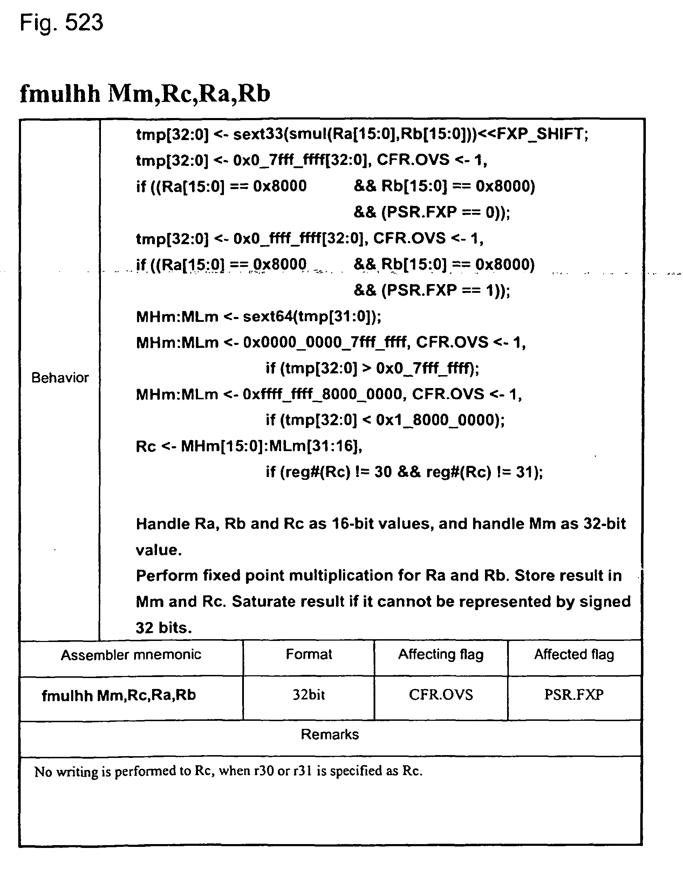

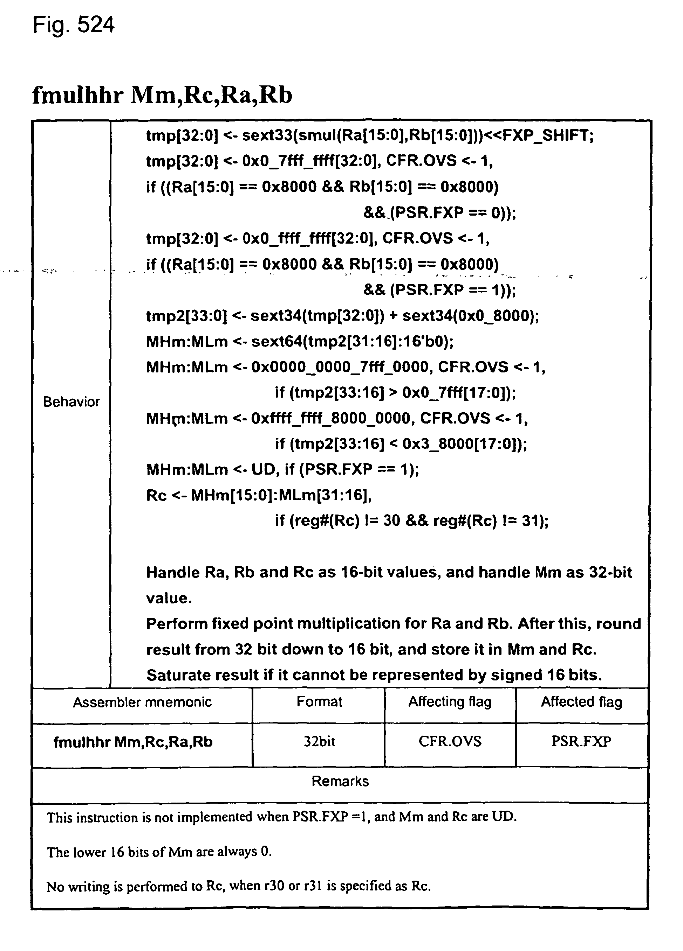

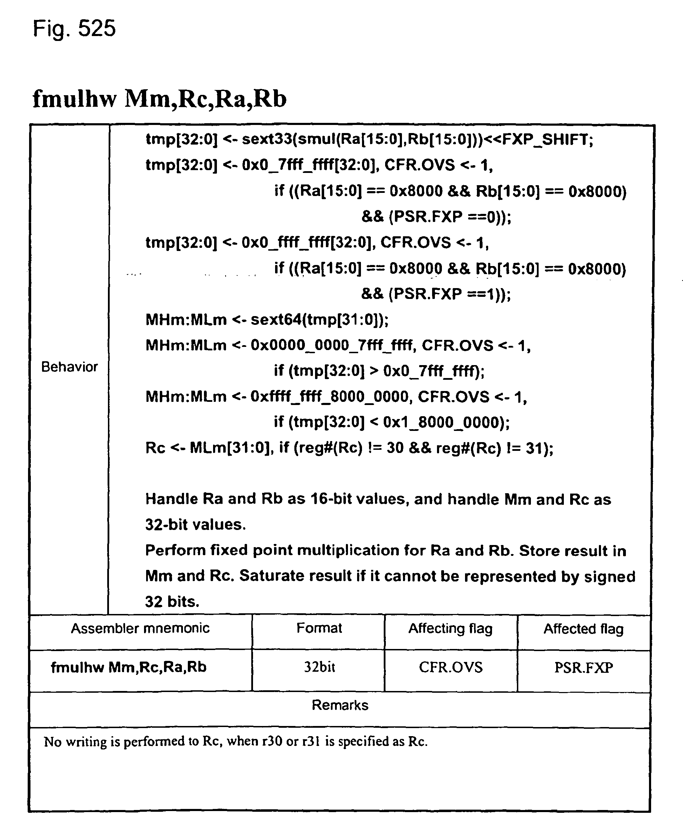

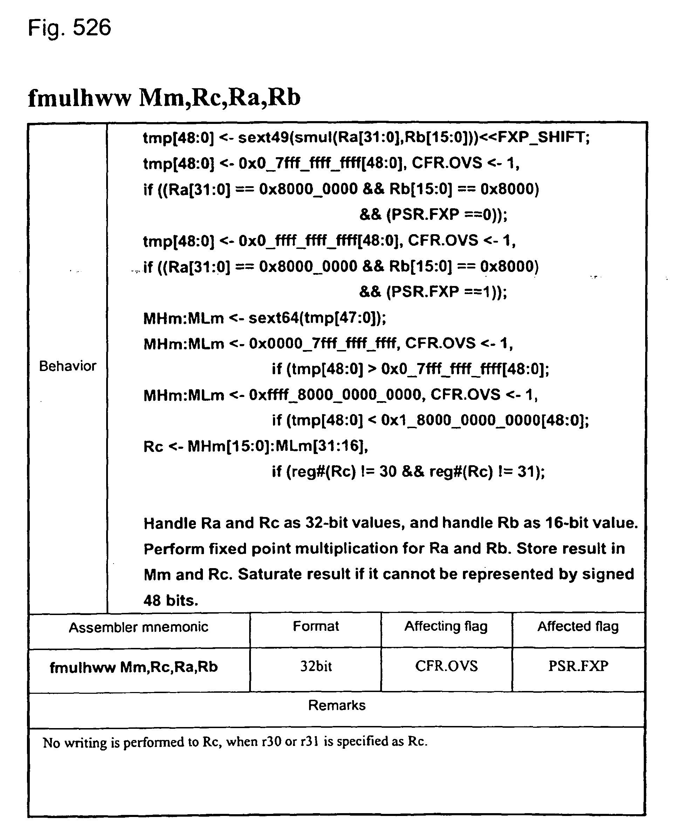

Figs.521~526 are diagrams explaining instructions relating to "mul (X1)".

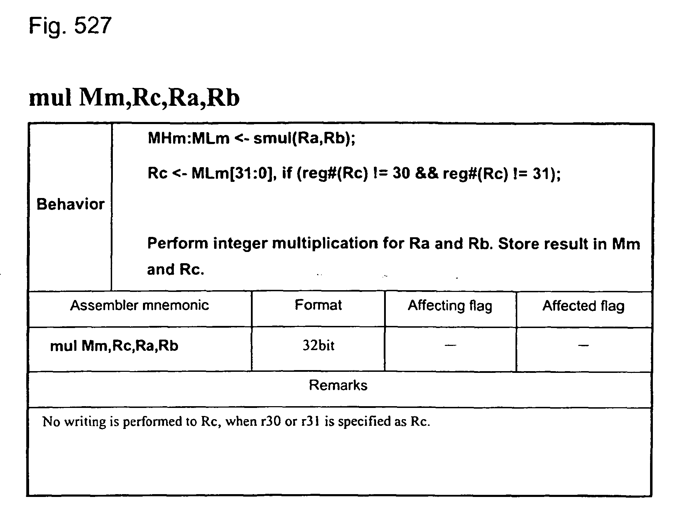

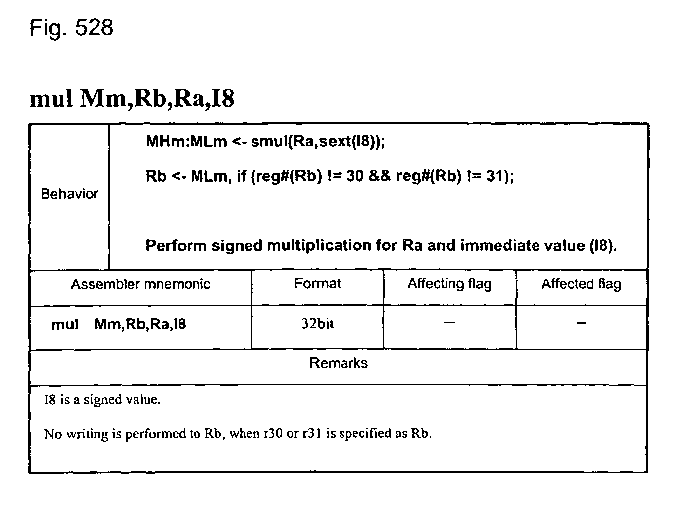

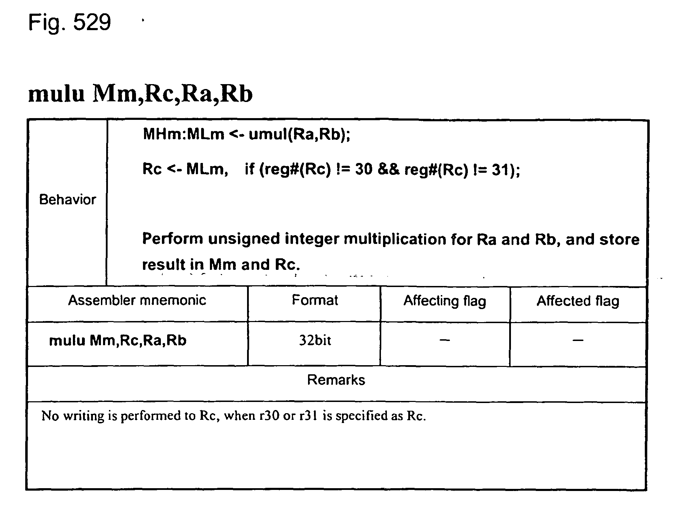

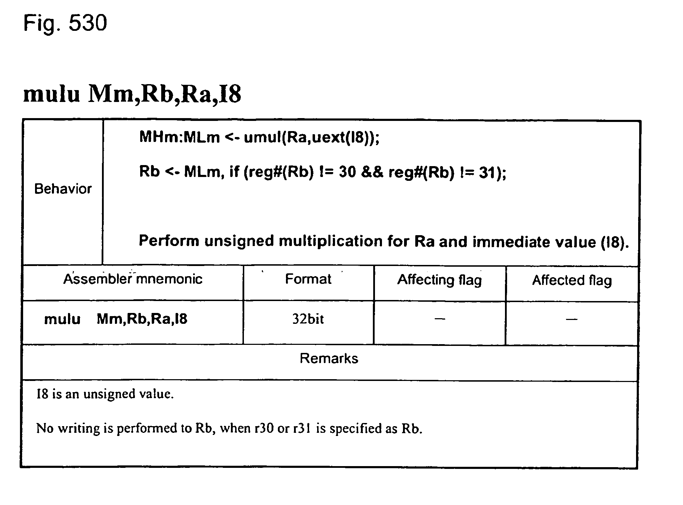

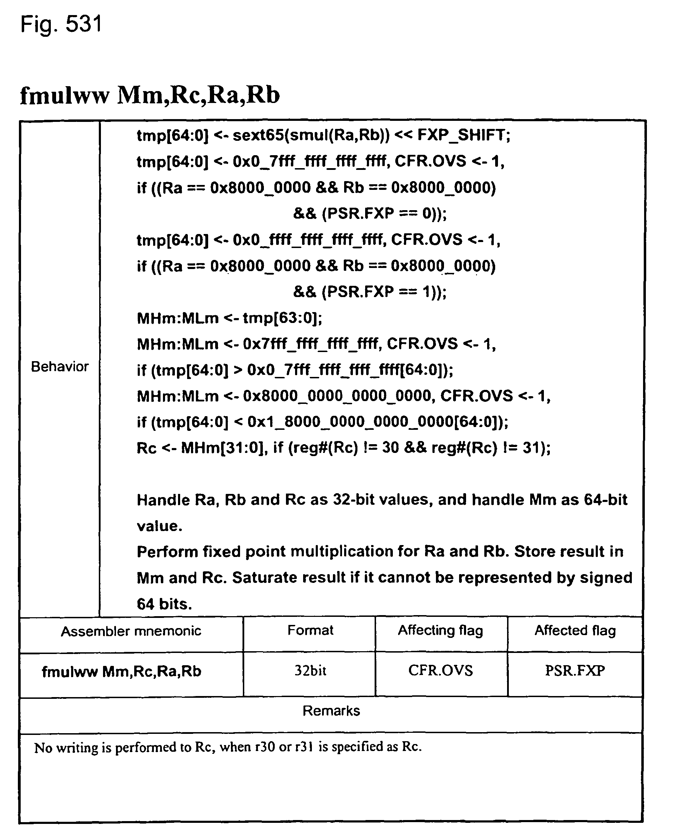

Figs.527~531 are diagrams explaining instructions relating to "mul (X2)".

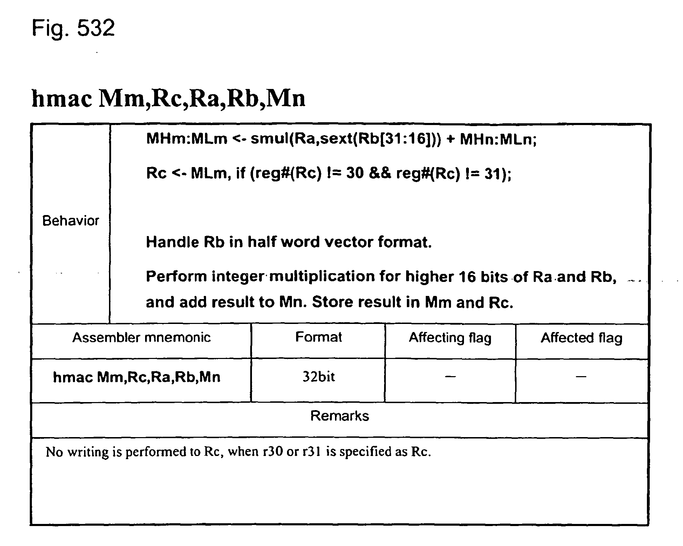

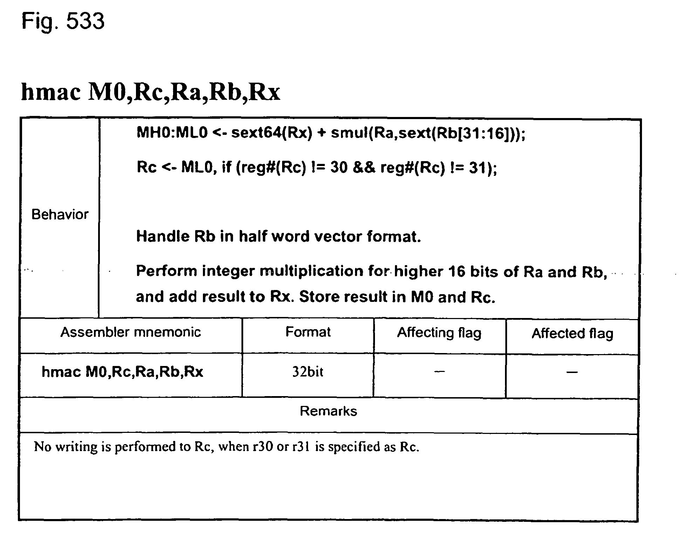

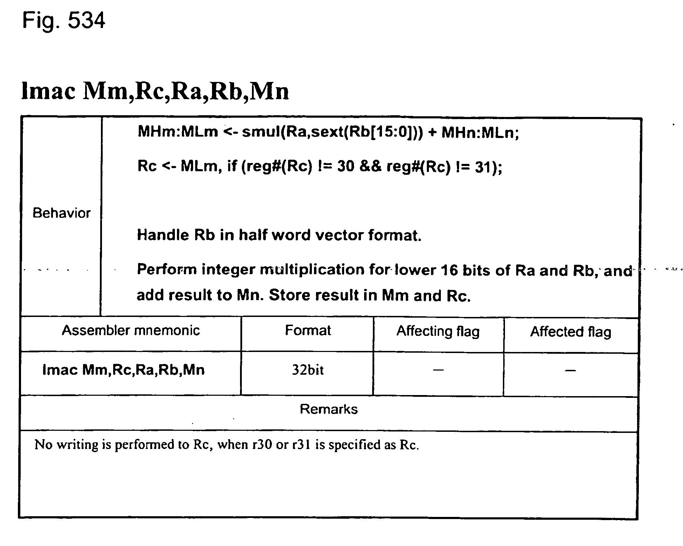

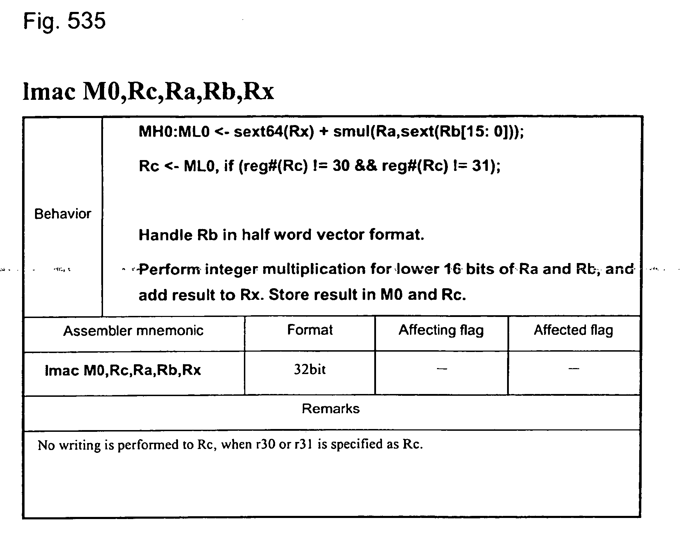

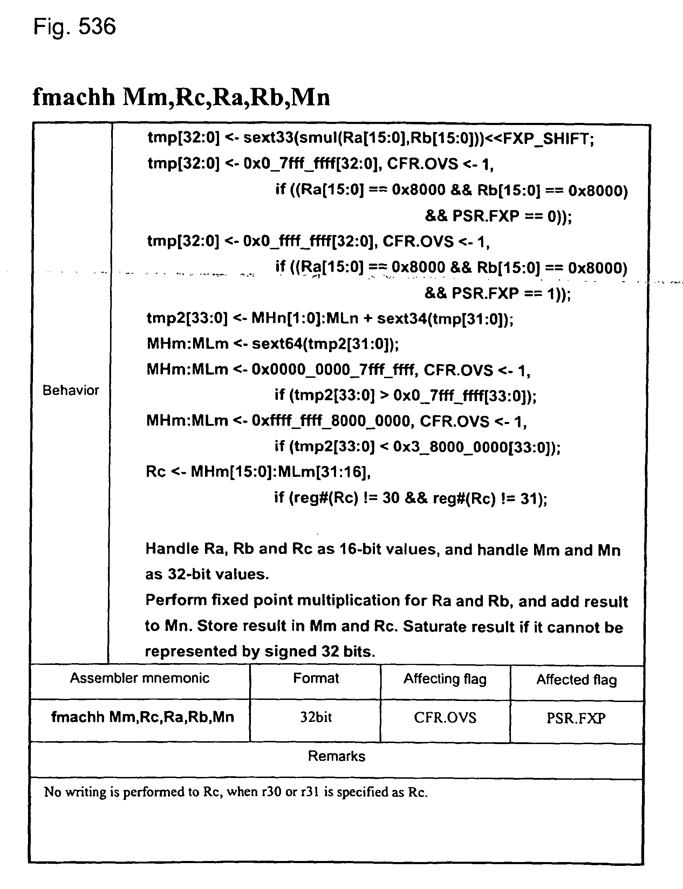

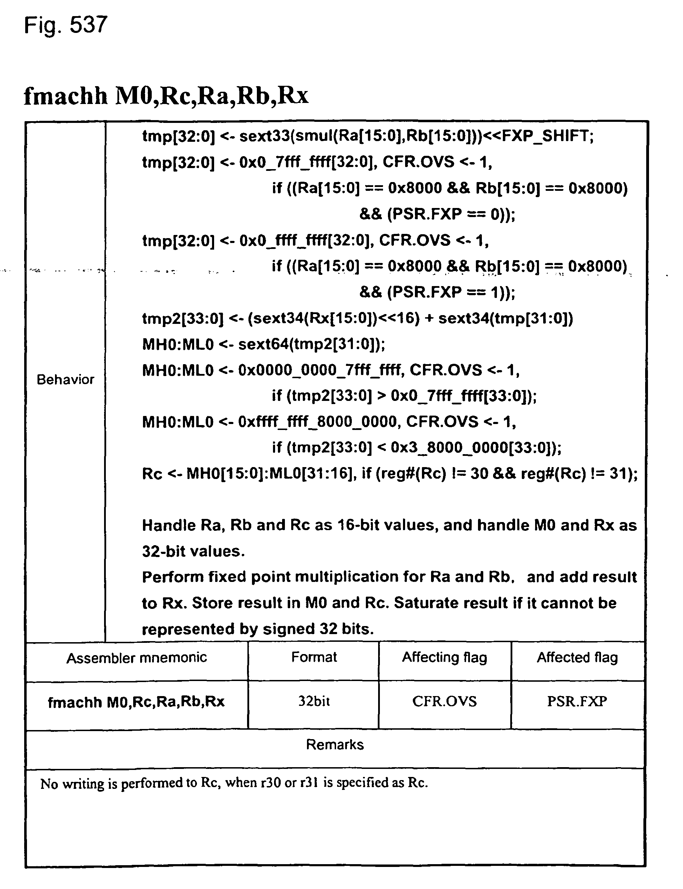

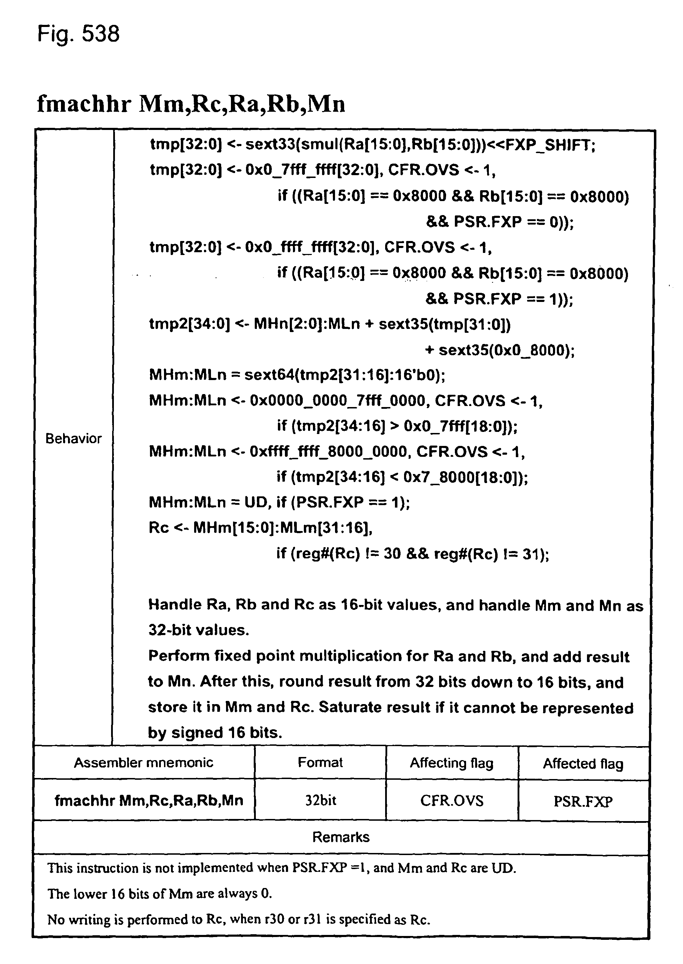

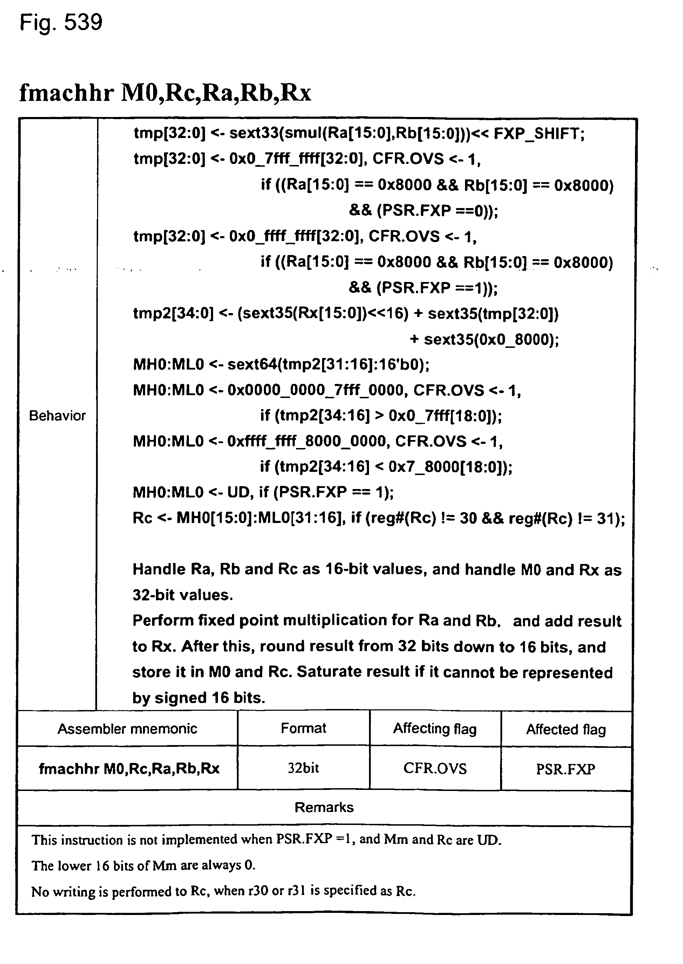

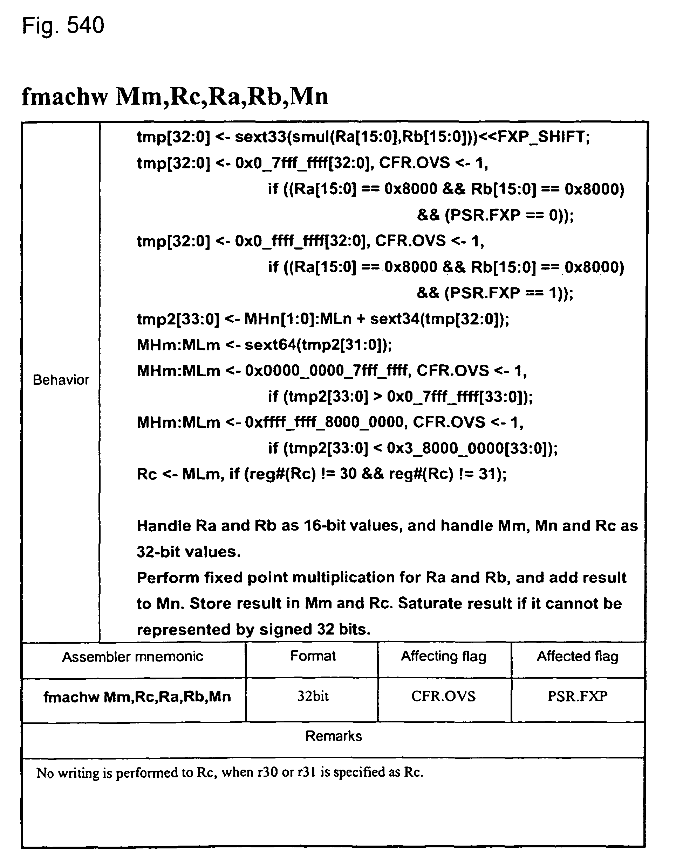

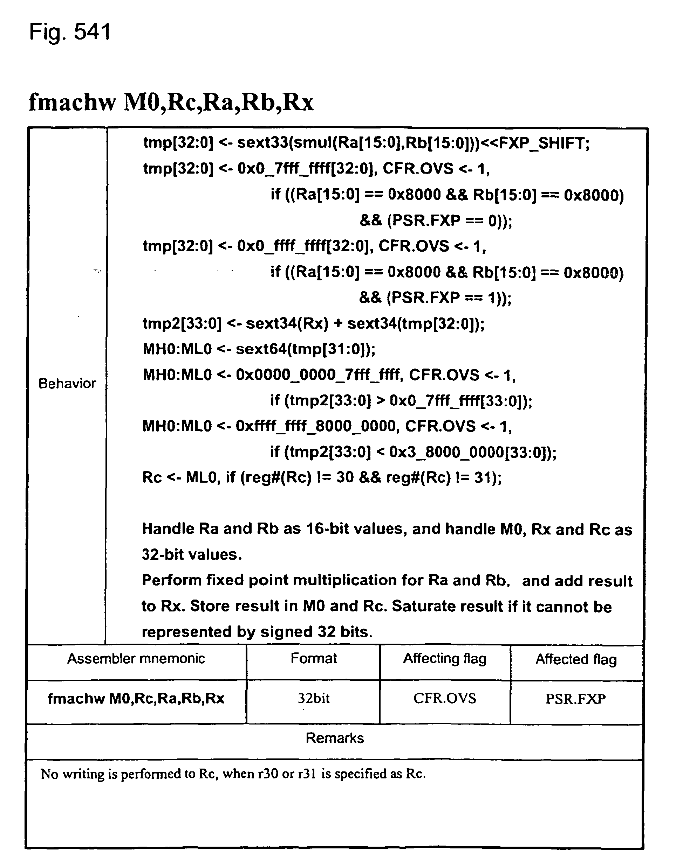

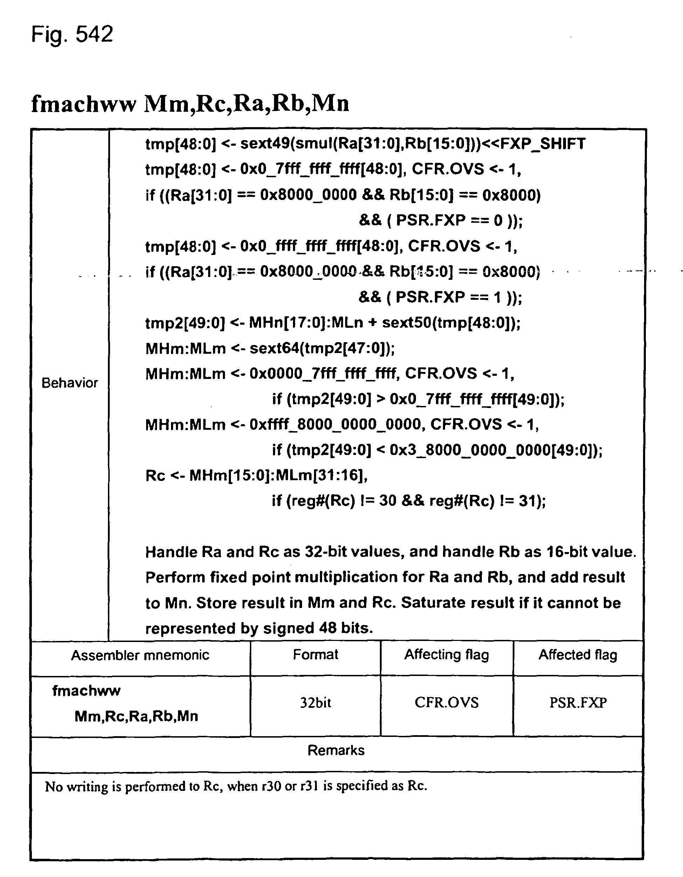

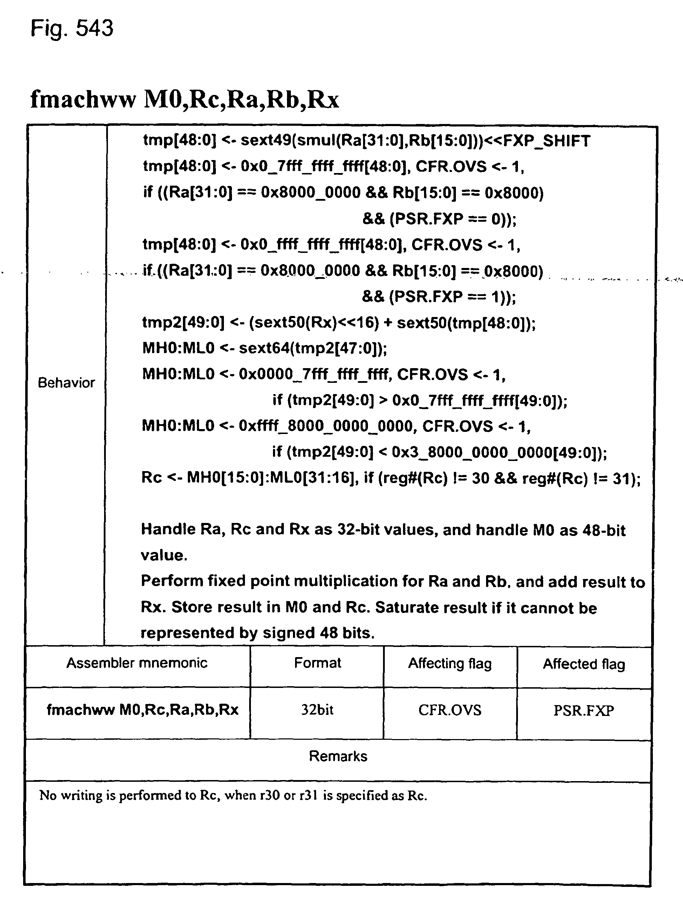

Figs.532~543 are diagrams explaining instructions relating to "mac (X1)".

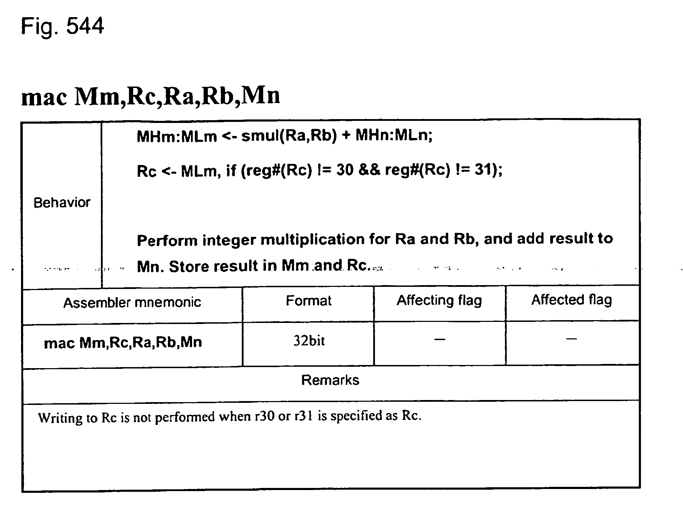

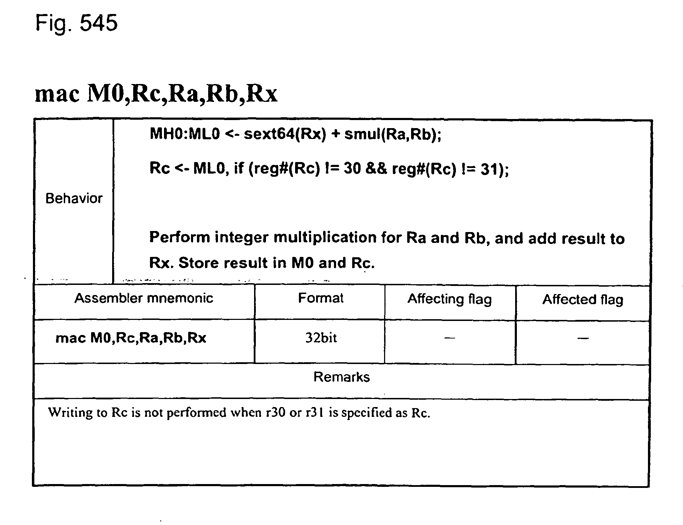

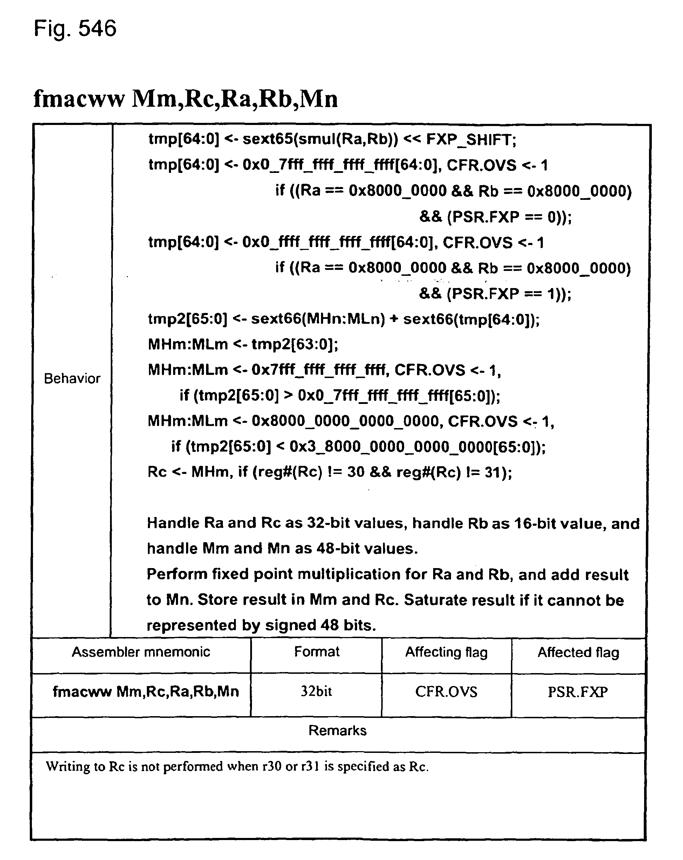

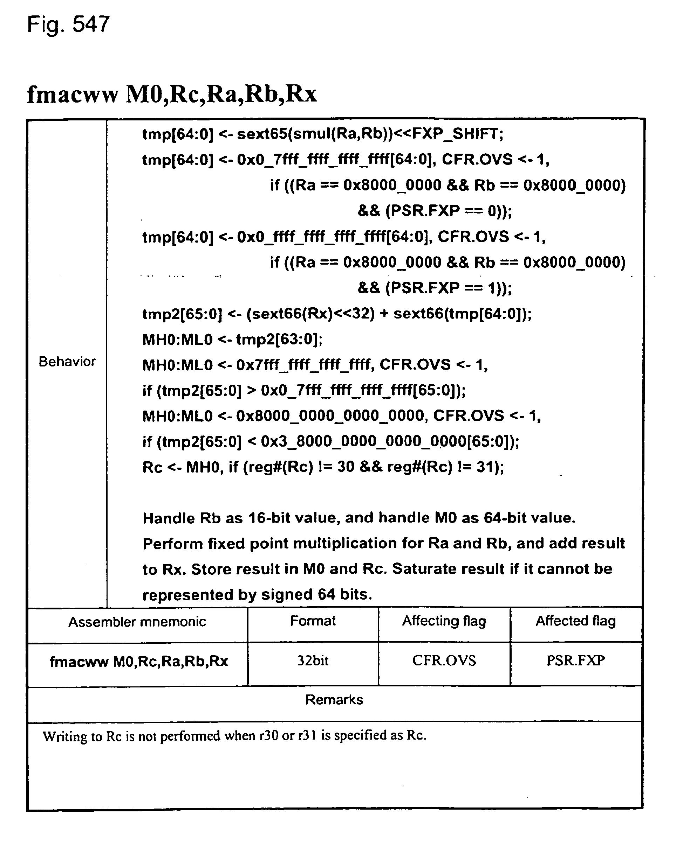

Figs.544~547 are diagrams explaining instructions relating to "mac (X2)".

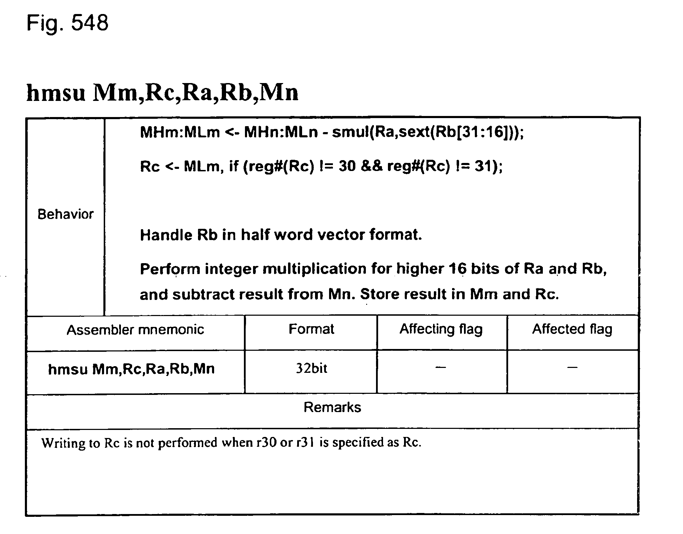

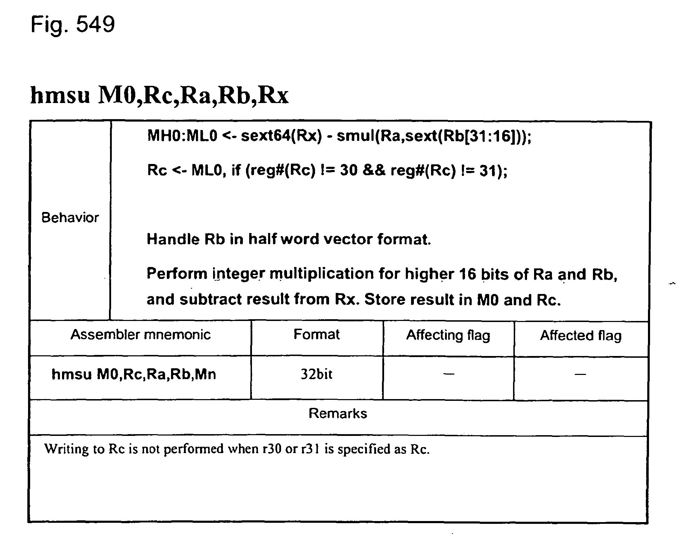

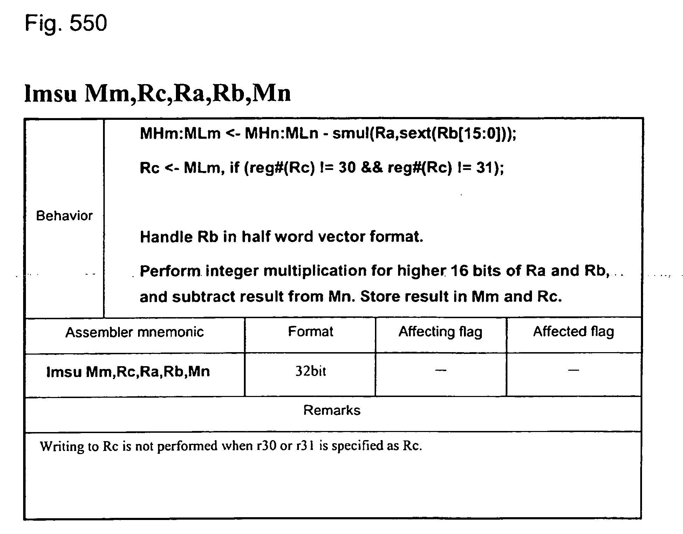

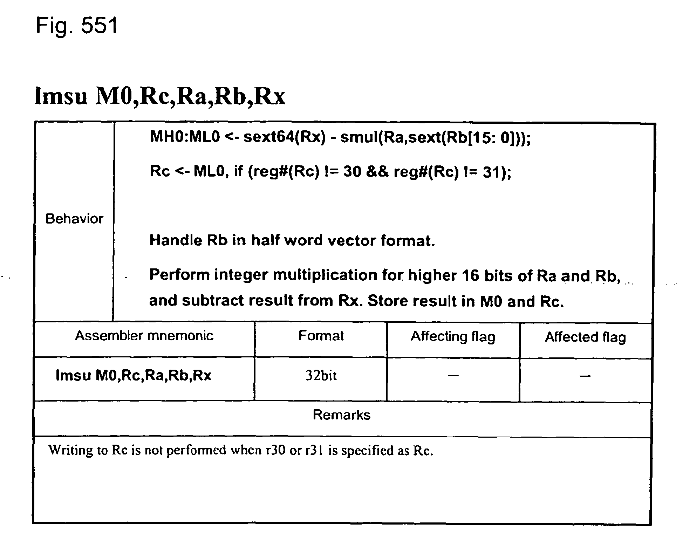

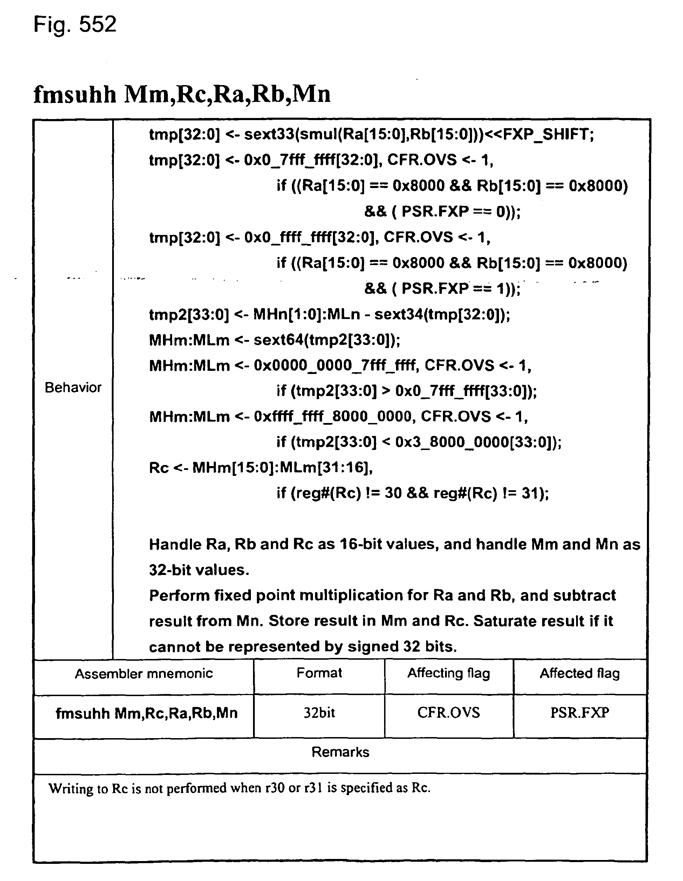

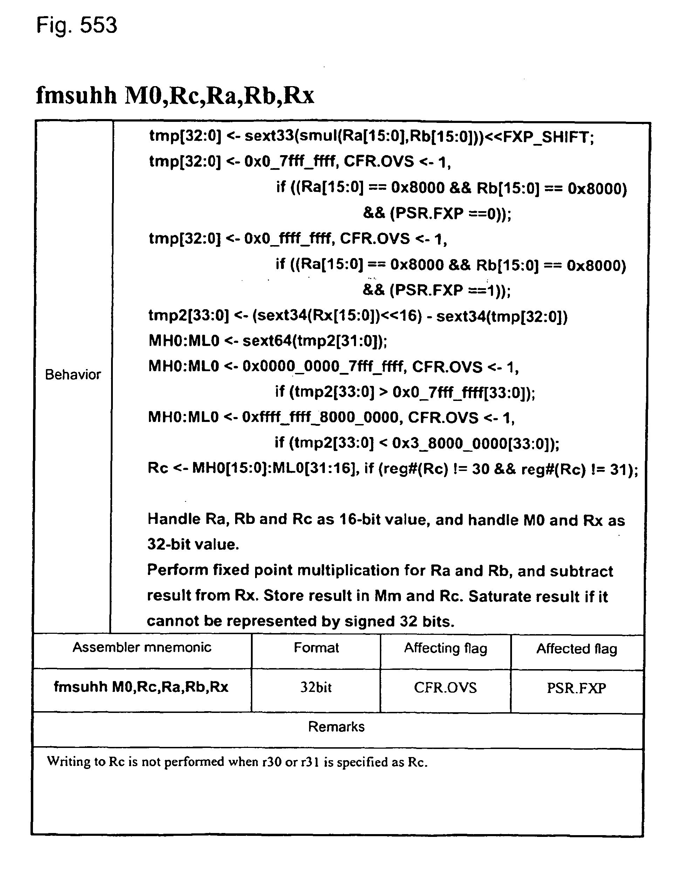

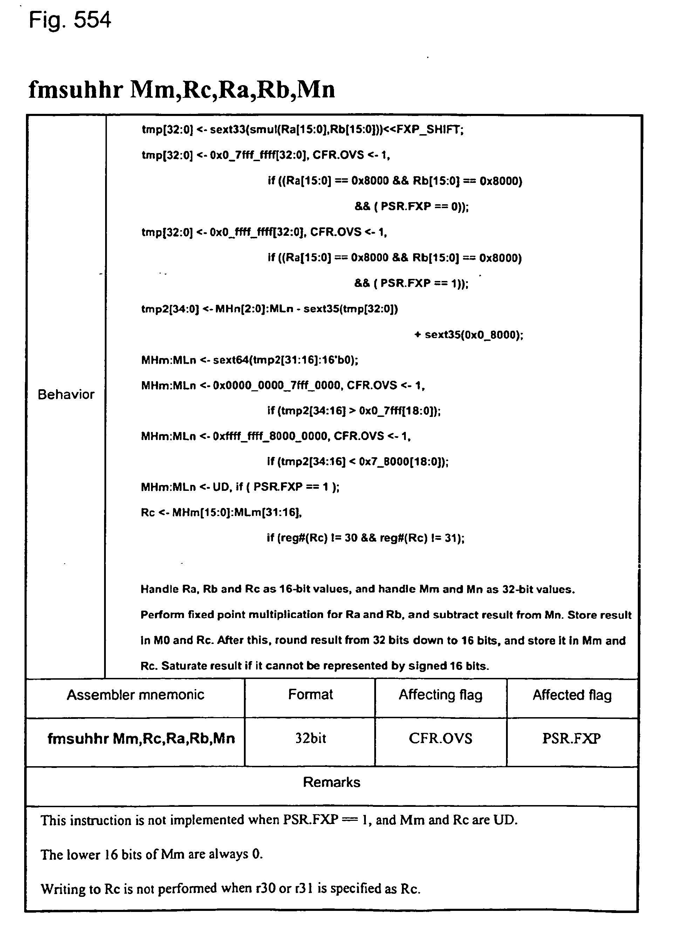

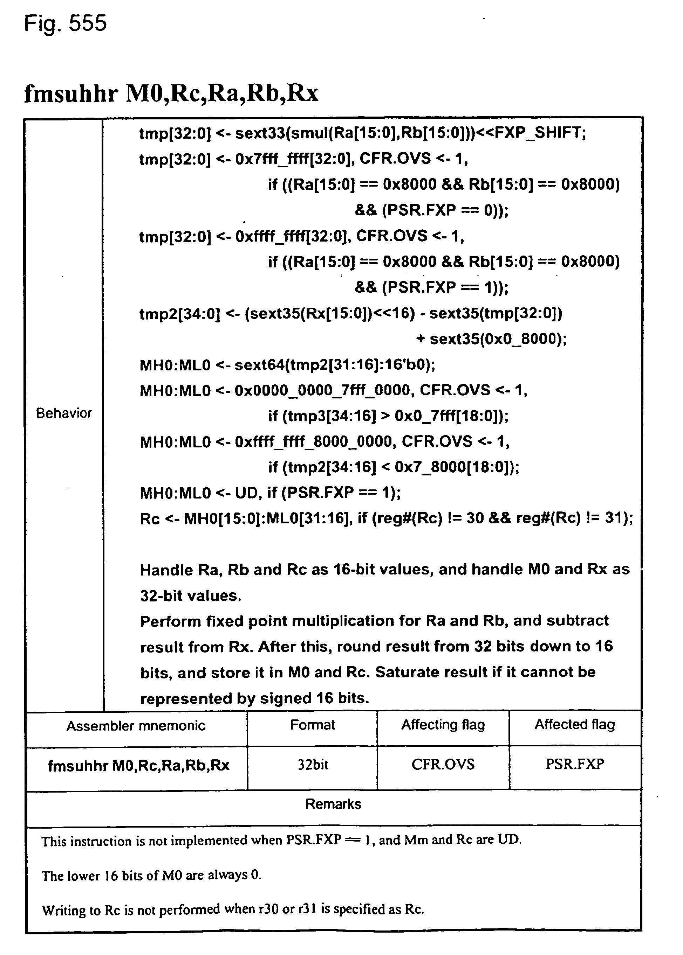

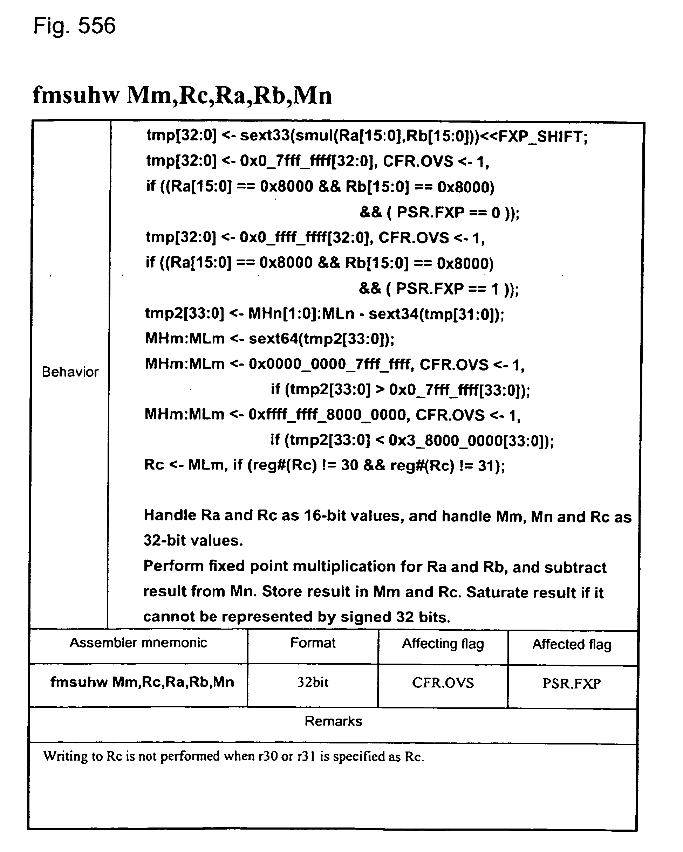

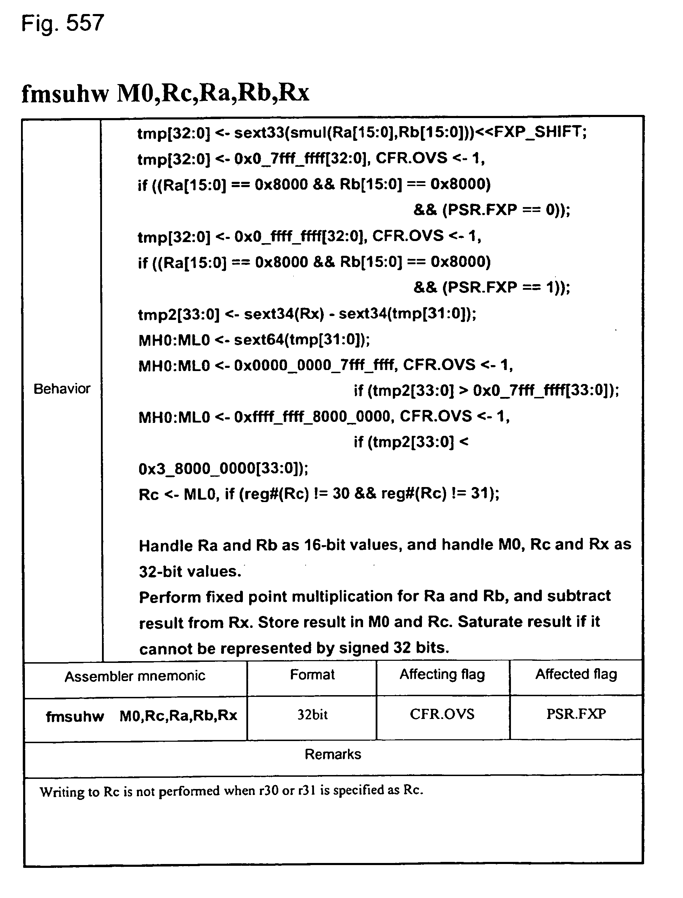

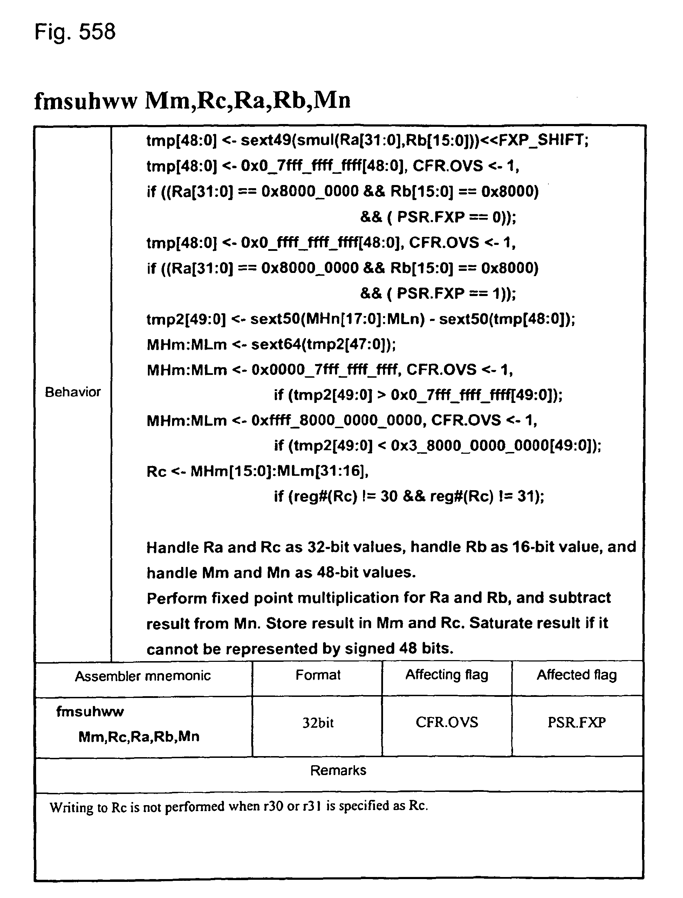

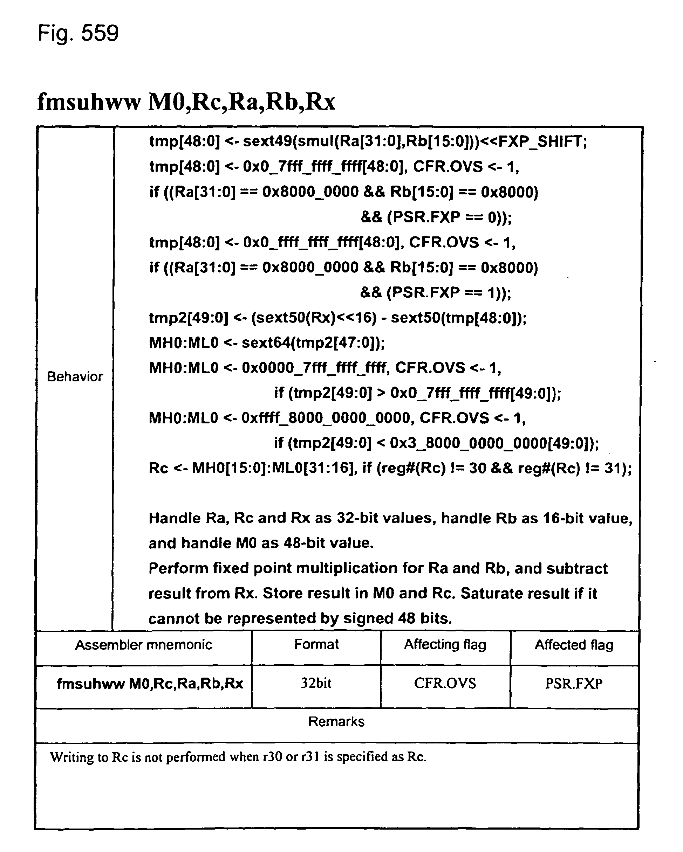

Figs.548~559 are diagrams explaining instructions relating to "msu (X1)".

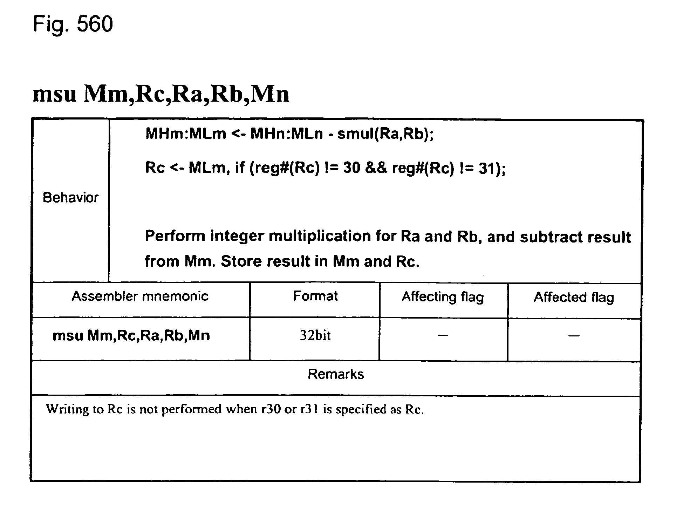

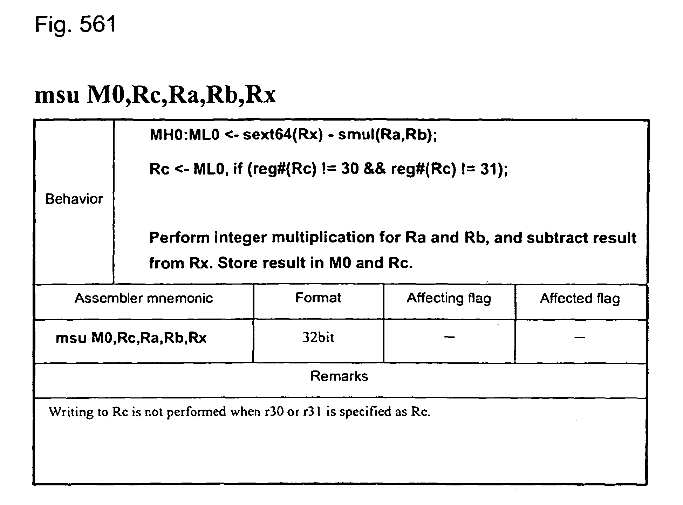

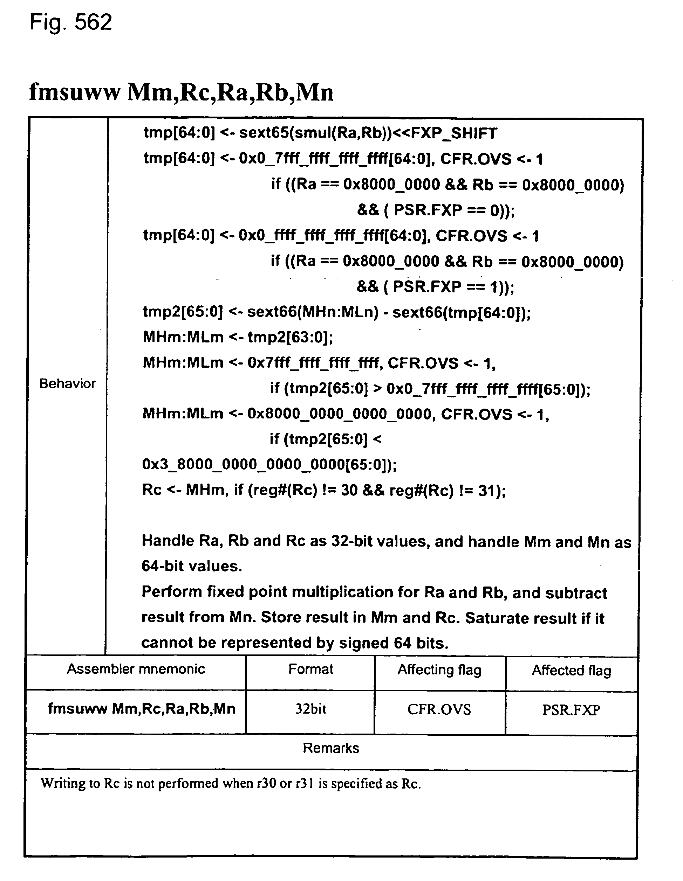

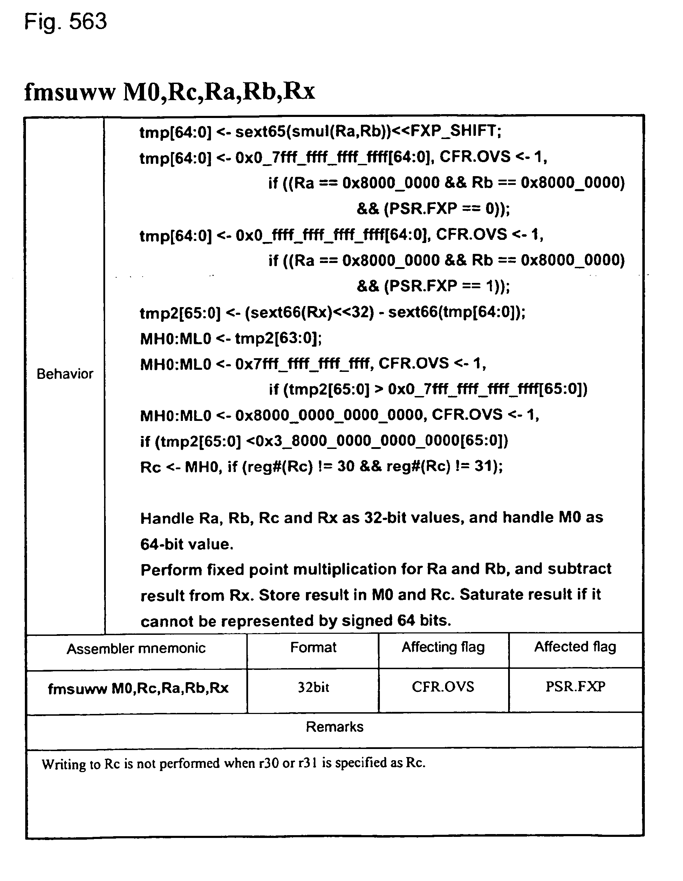

Figs.560~563 are diagrams explaining instructions relating to "msu (X2)".

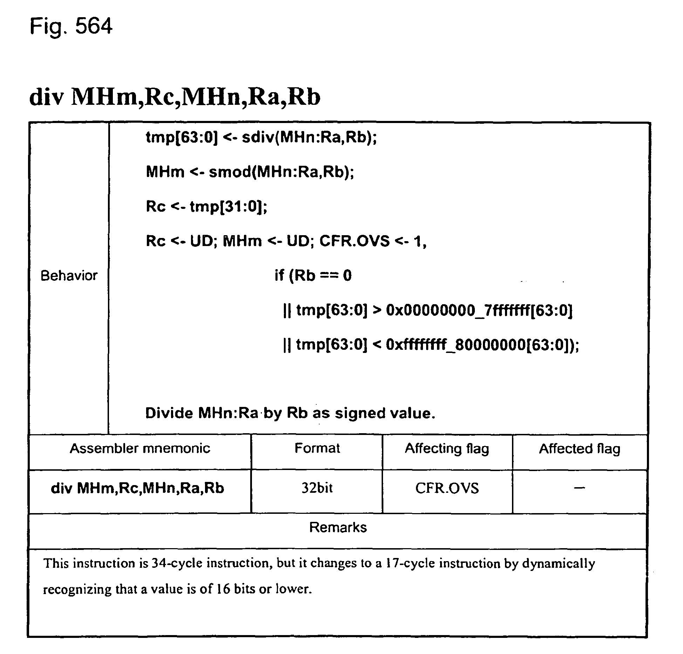

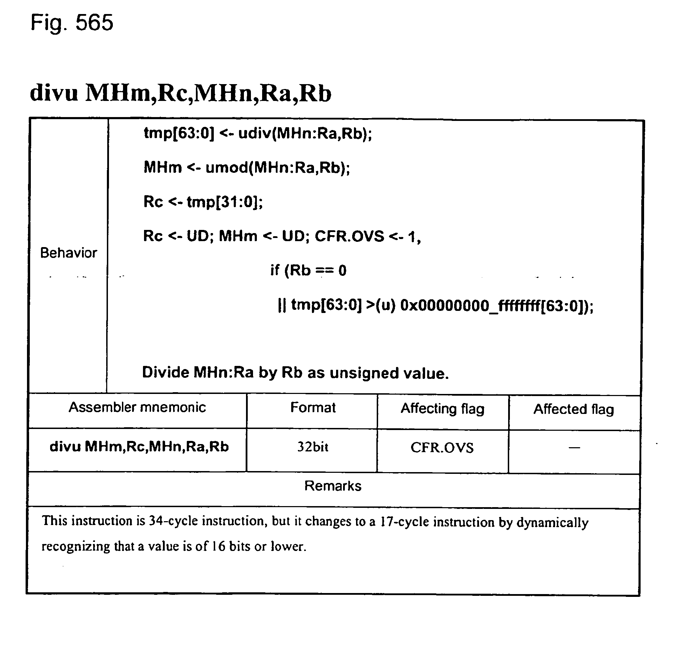

Figs.564~565 are diagrams explaining instructions relating to "divide".

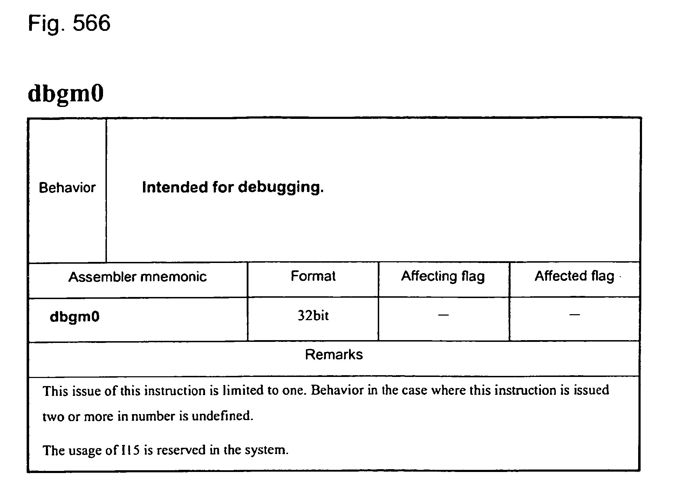

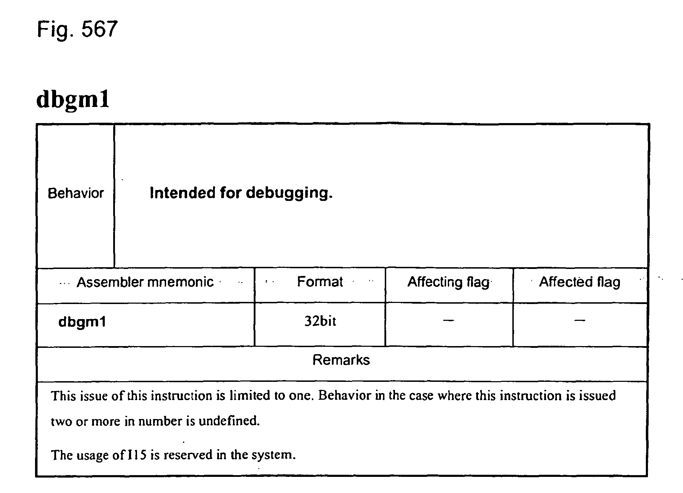

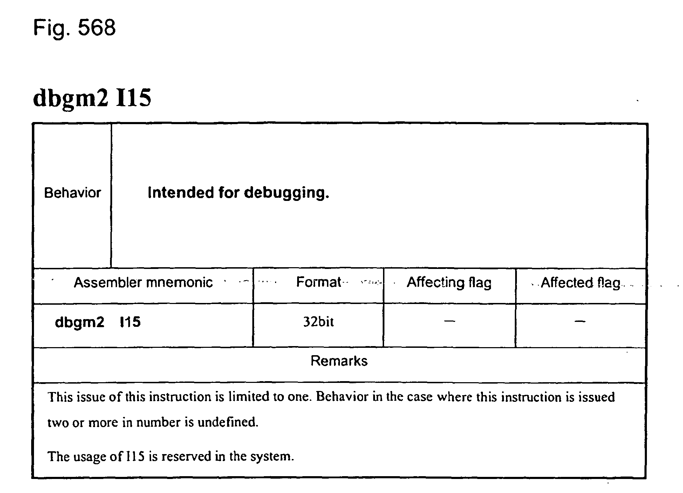

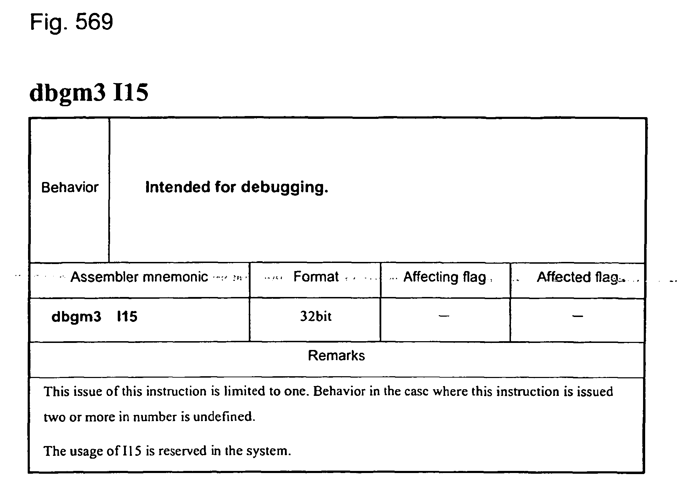

Figs.566~569 are diagrams explaining instructions relating to "debug".

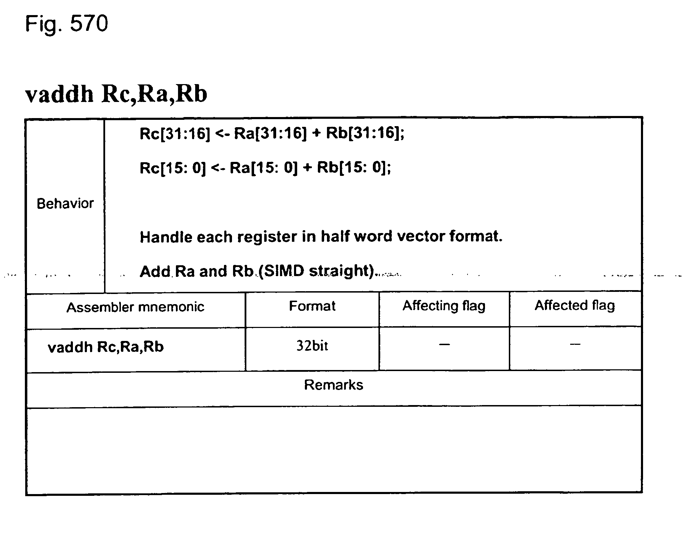

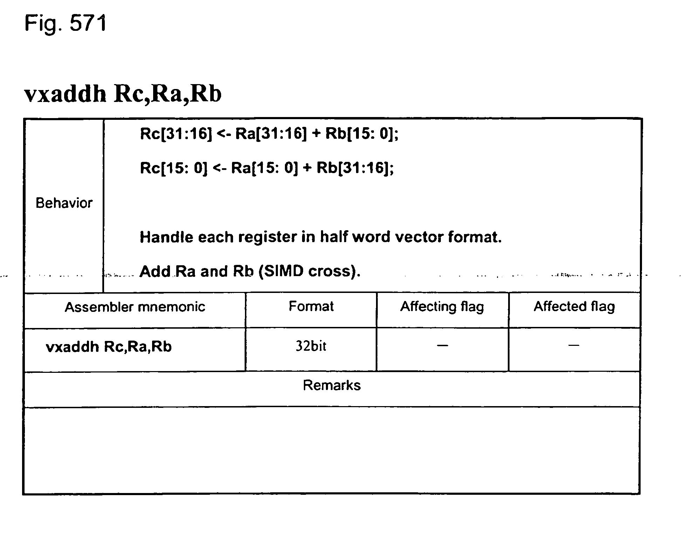

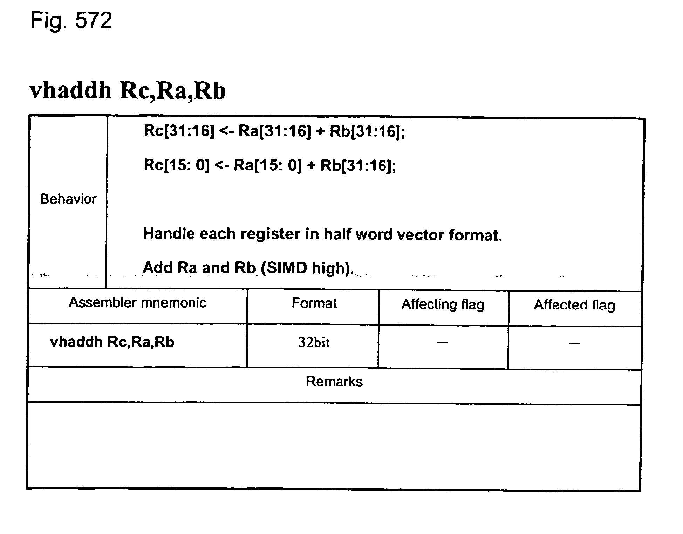

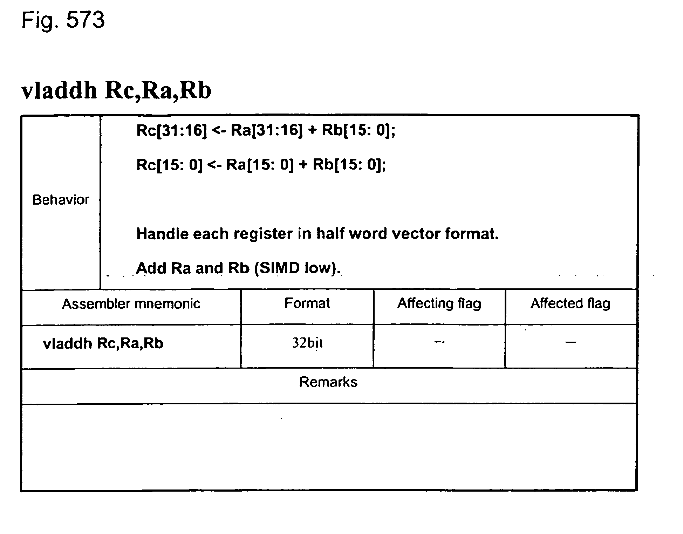

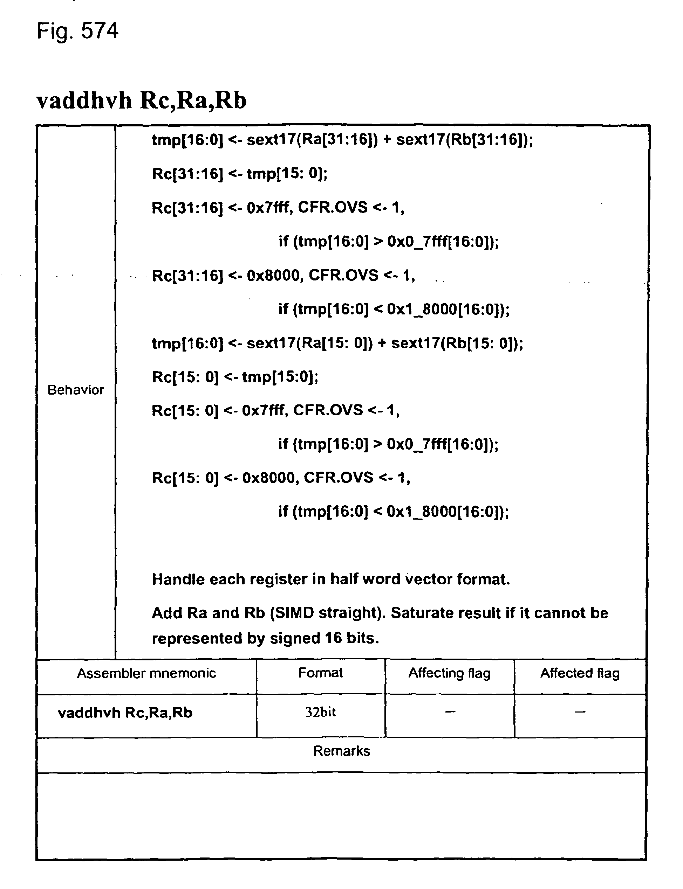

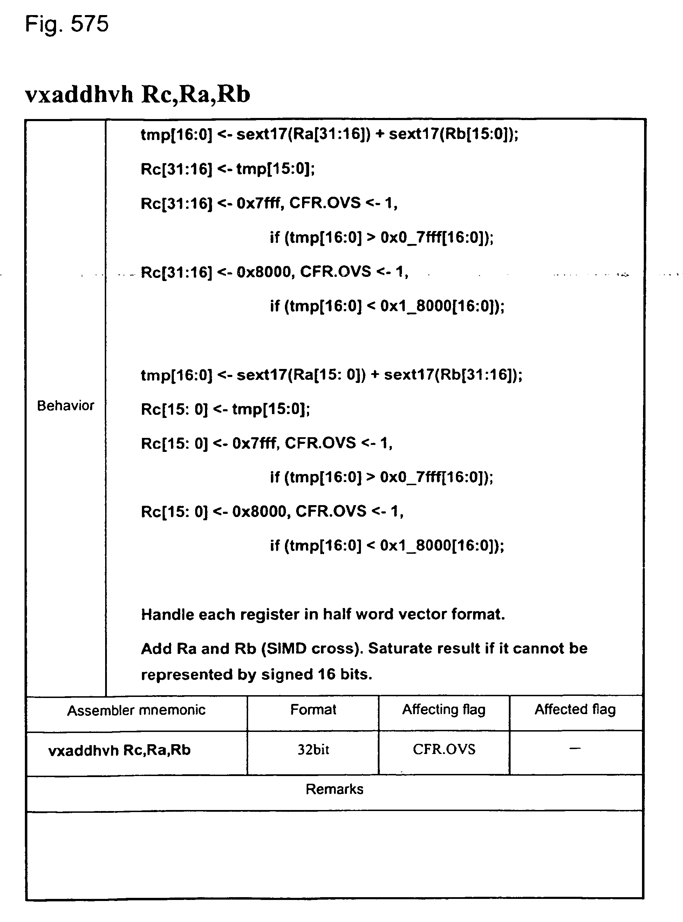

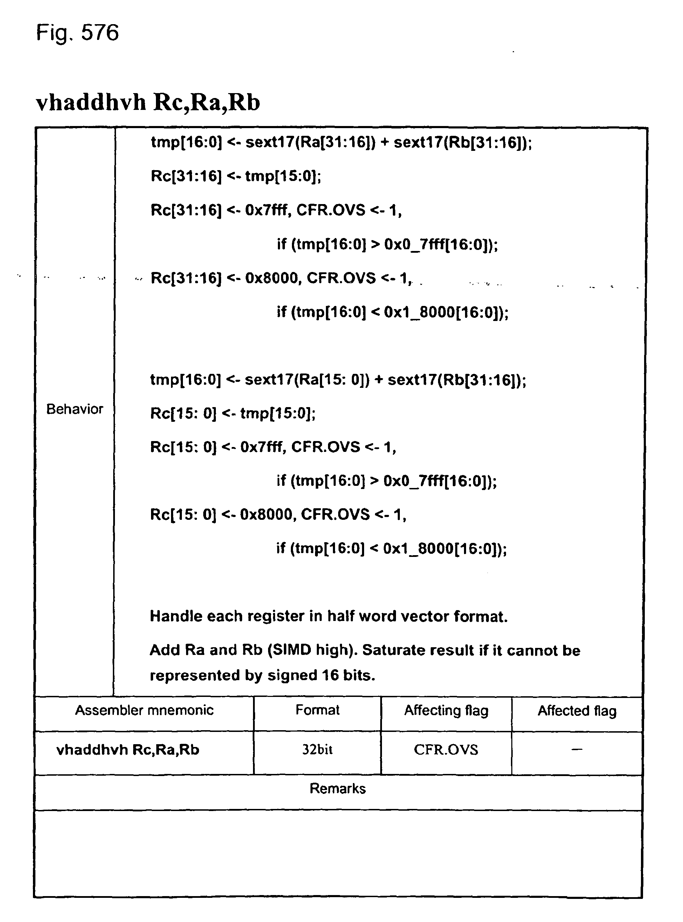

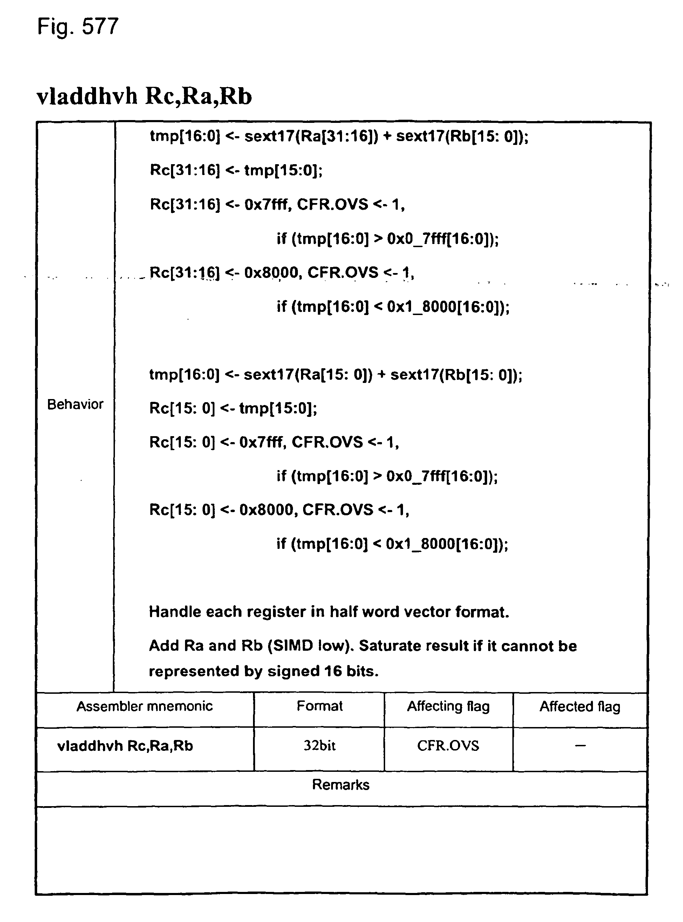

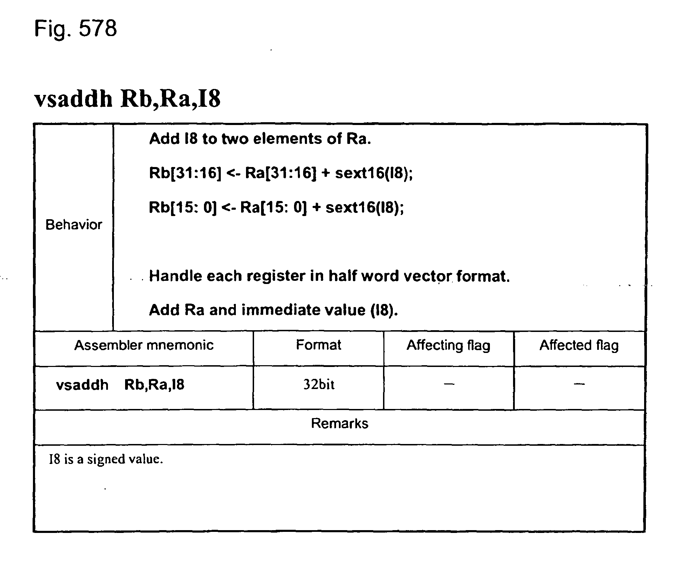

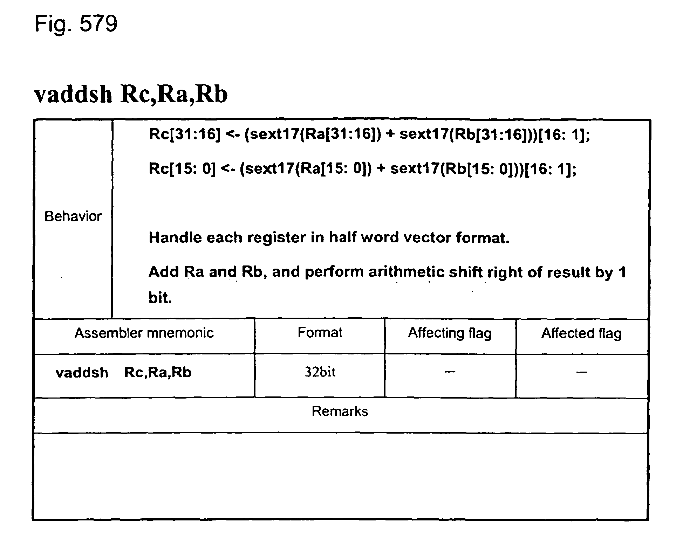

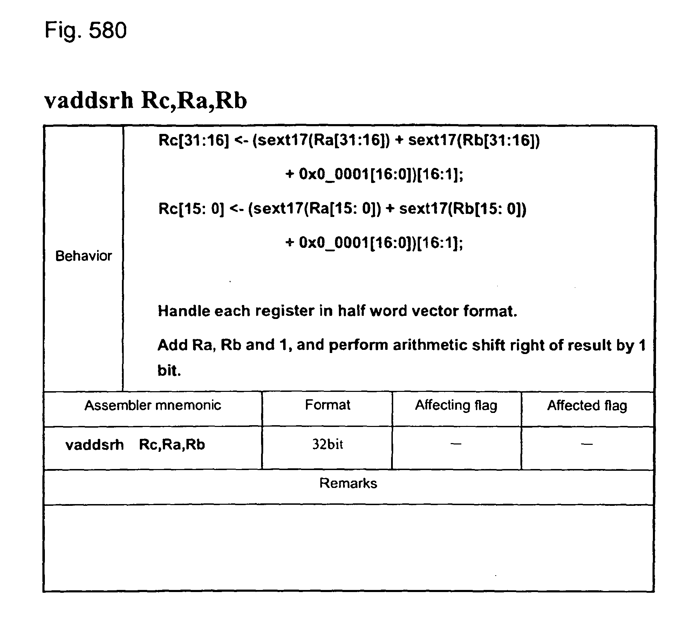

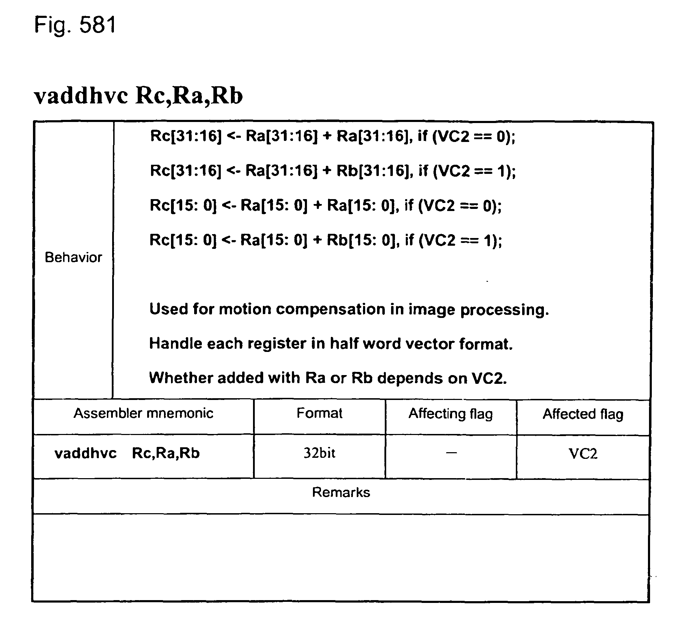

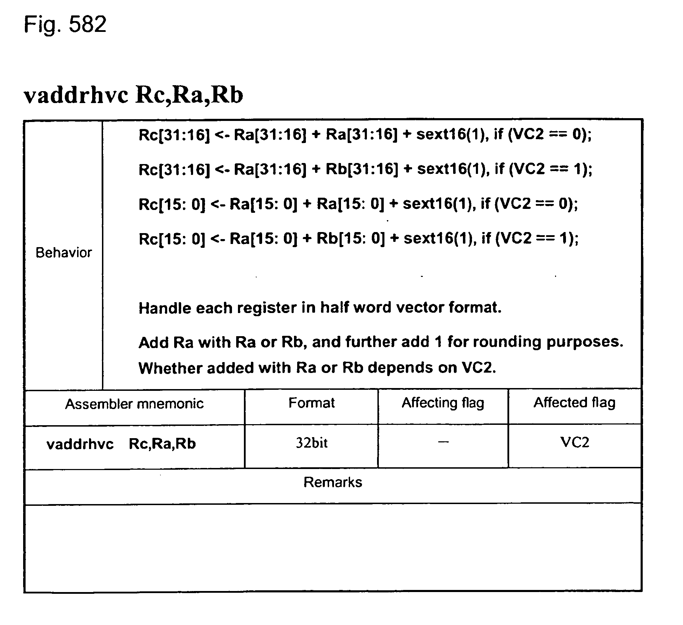

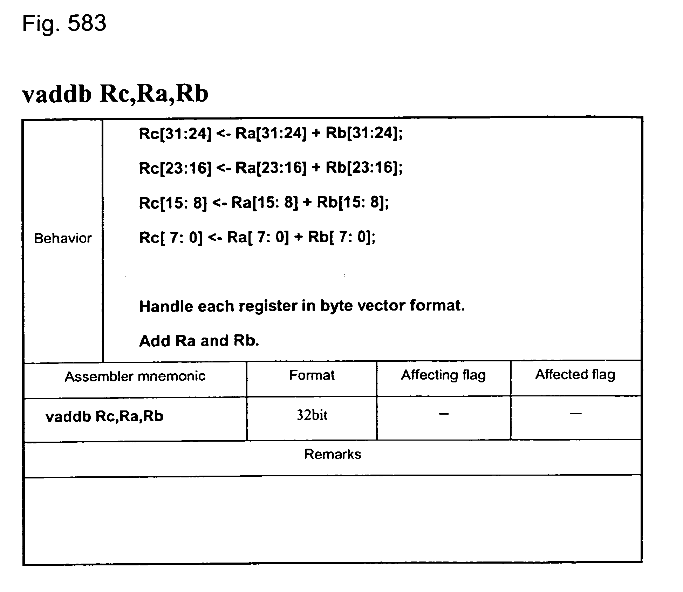

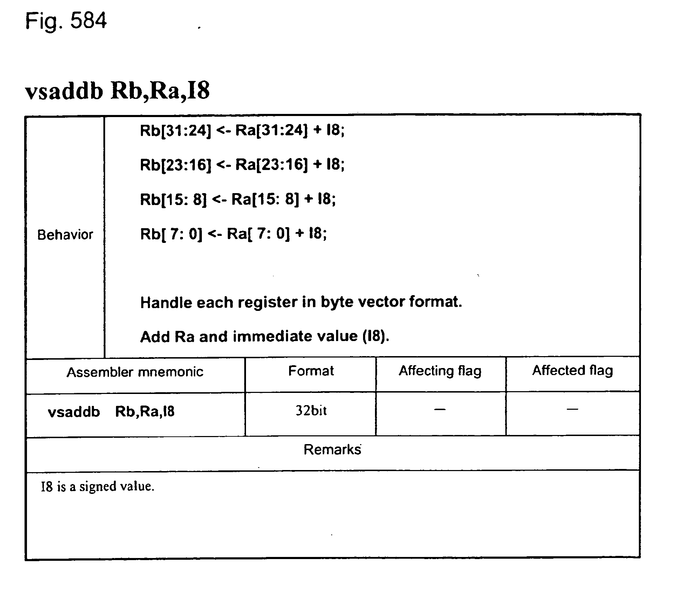

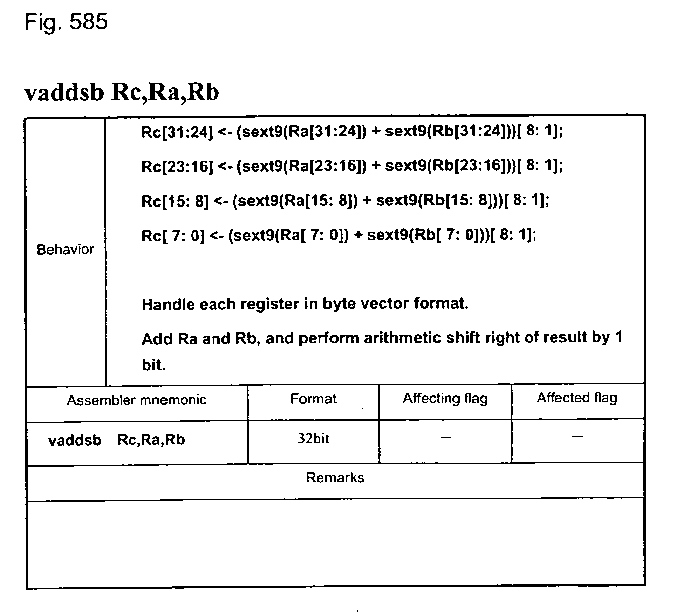

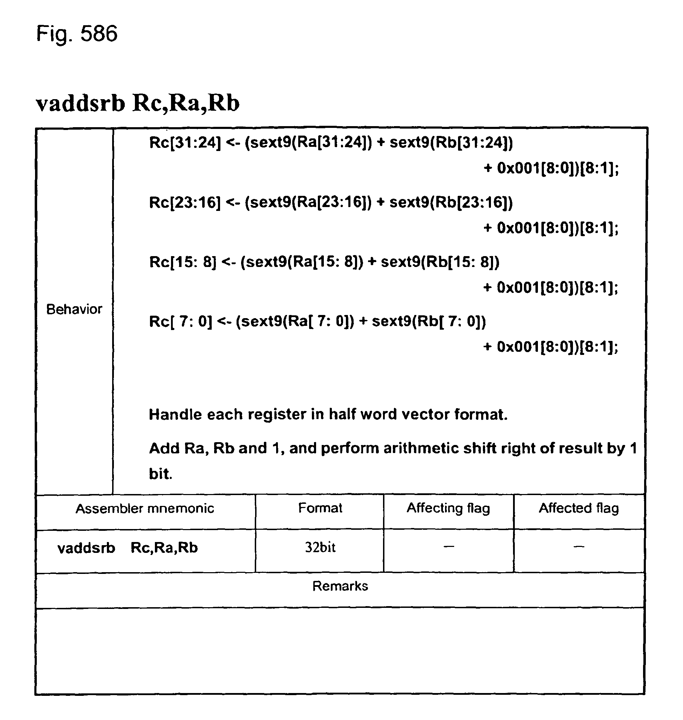

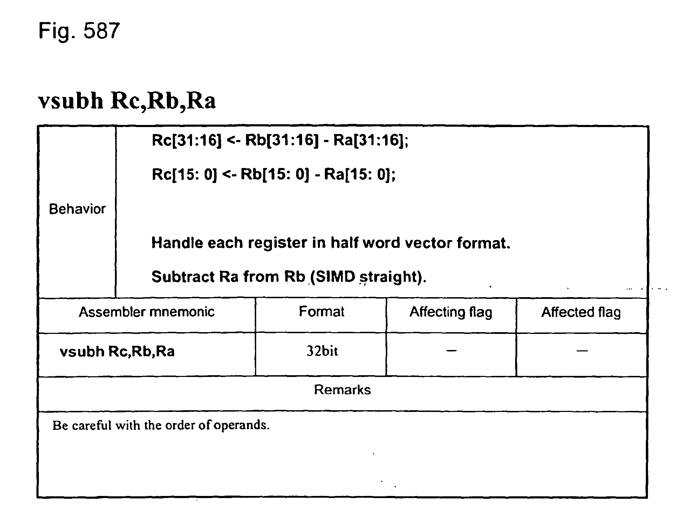

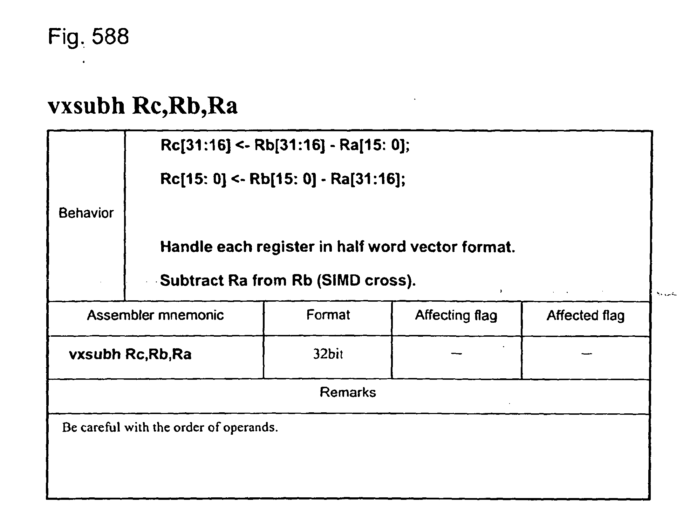

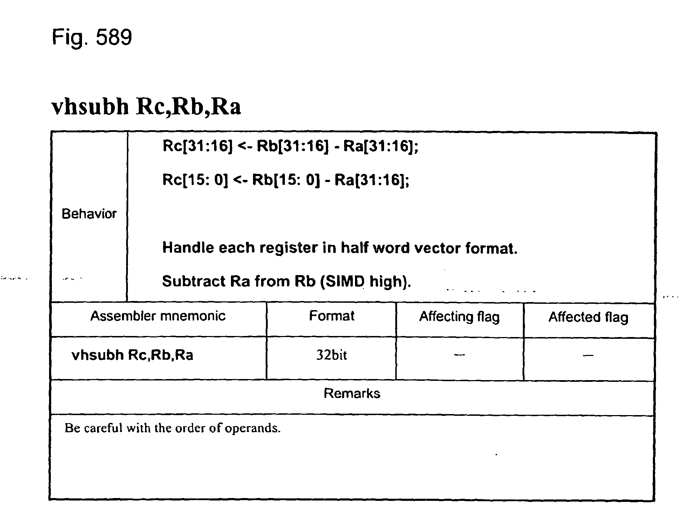

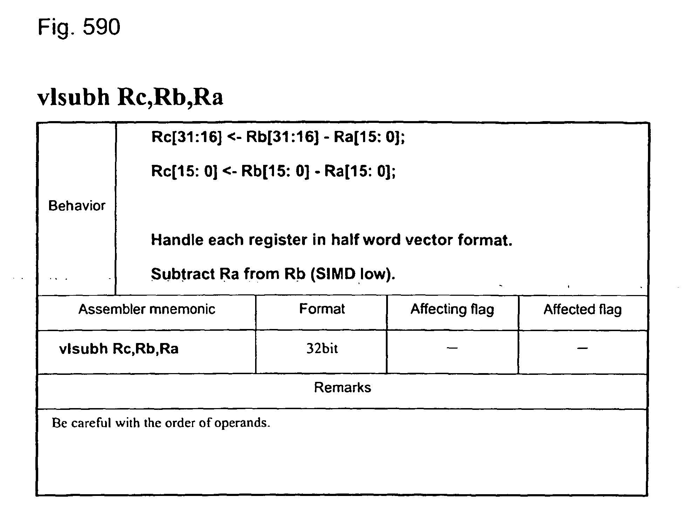

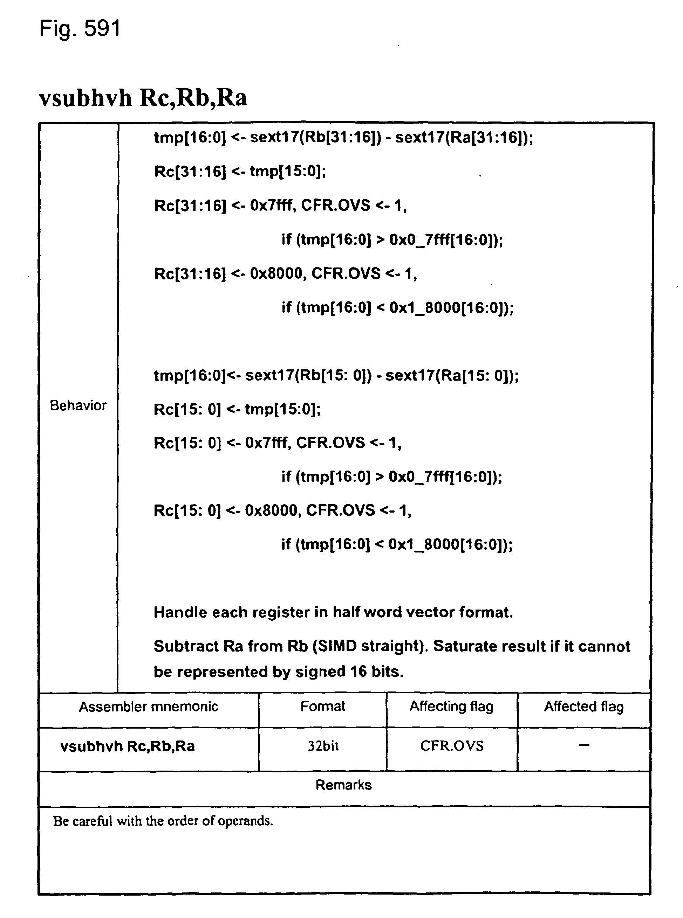

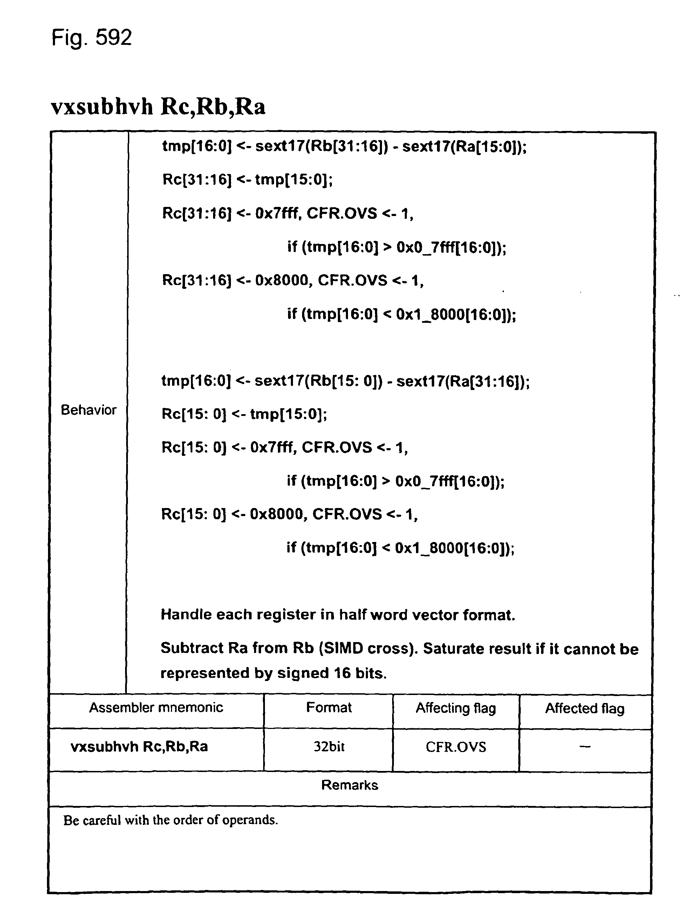

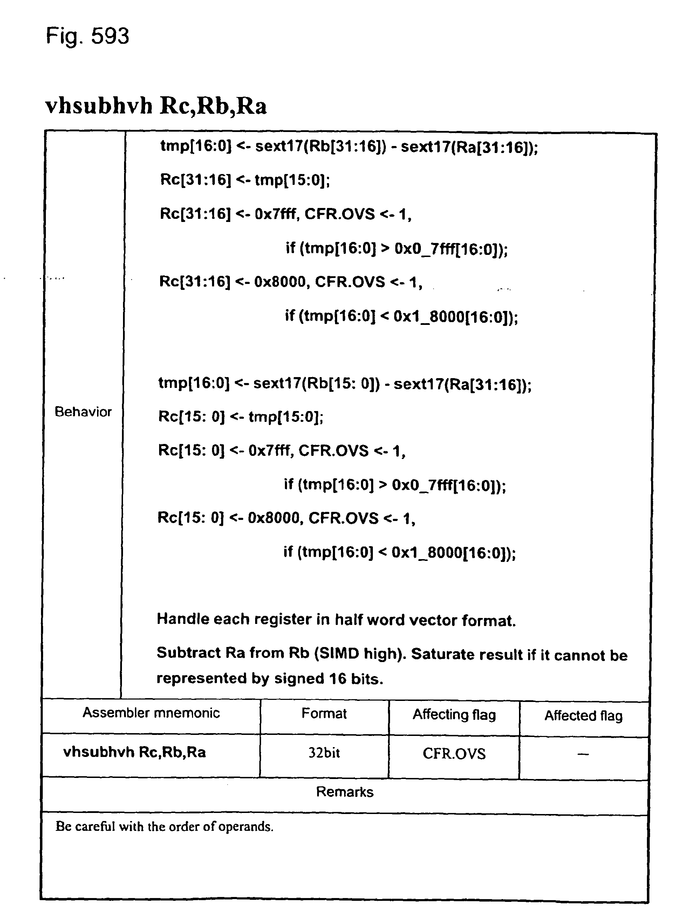

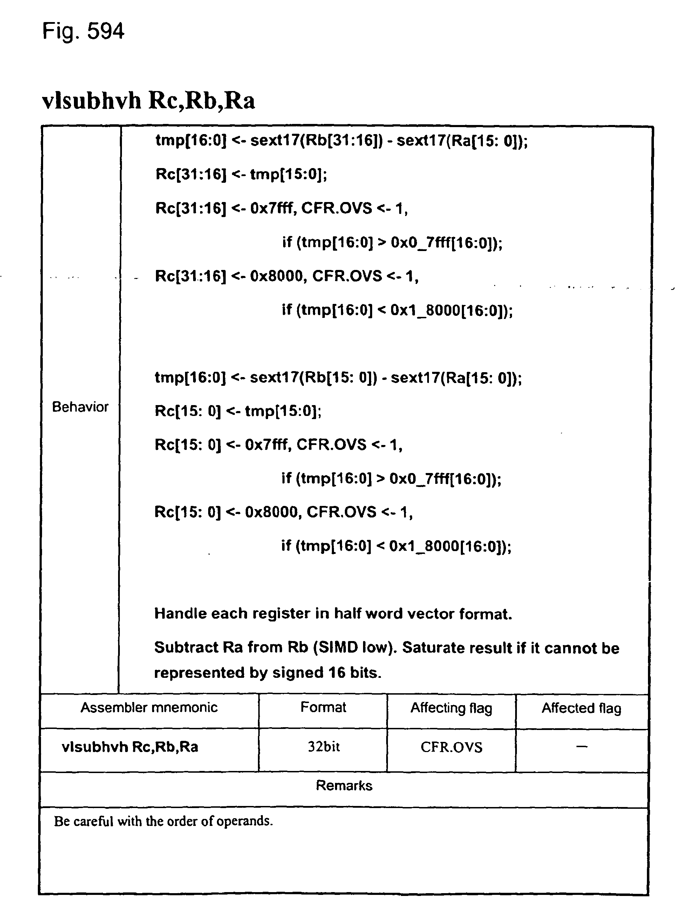

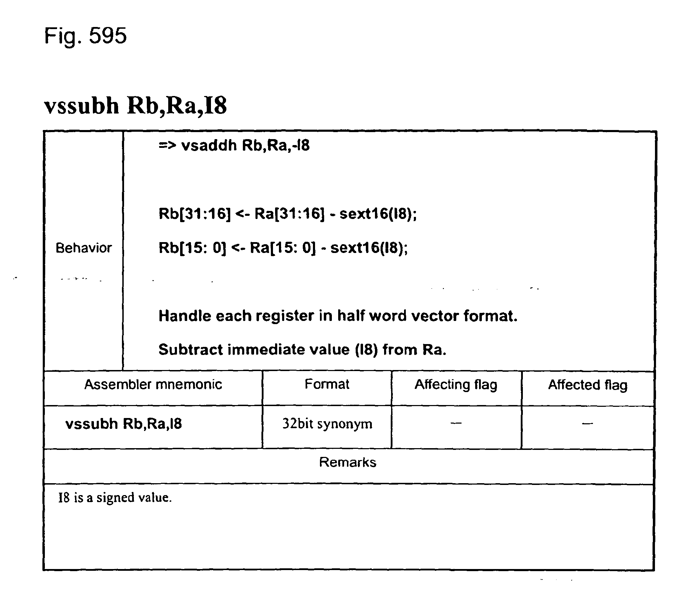

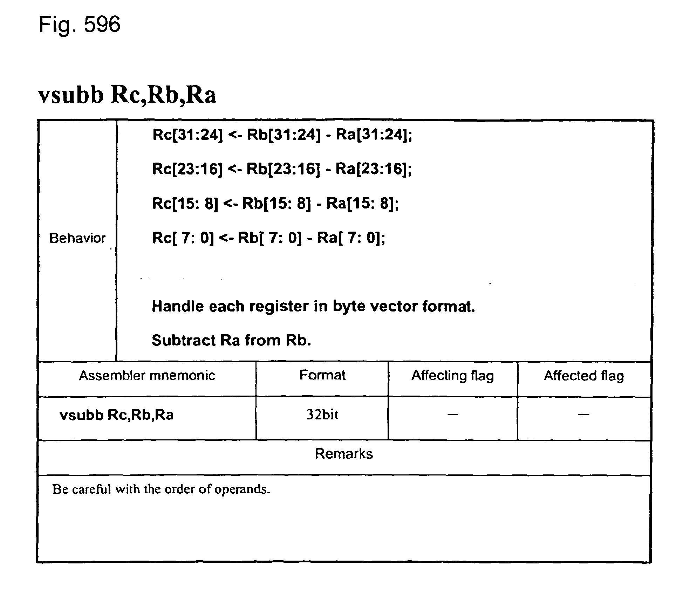

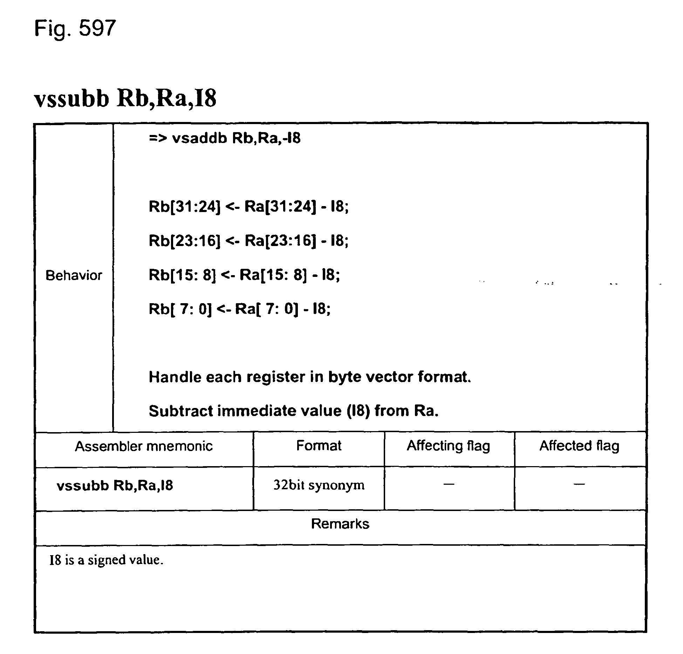

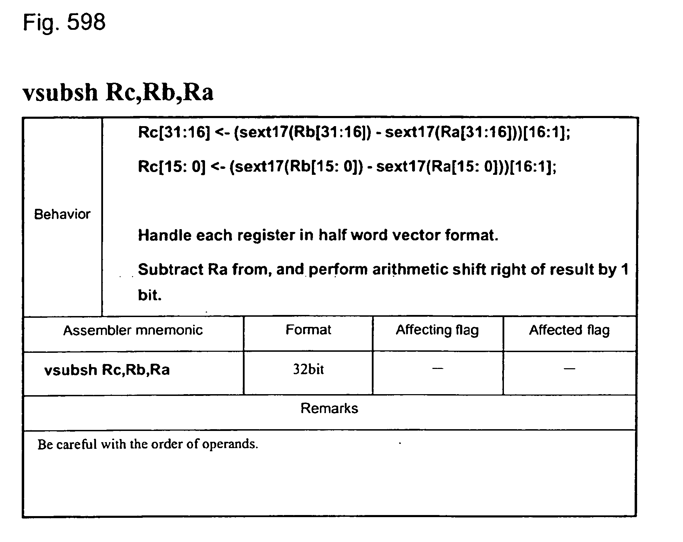

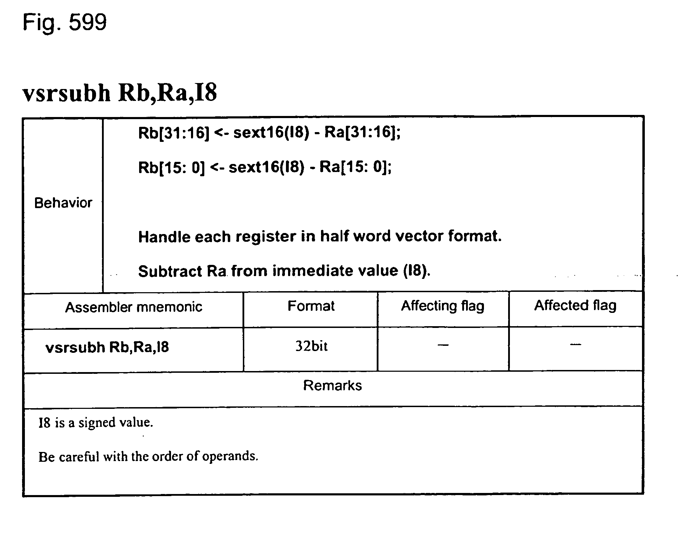

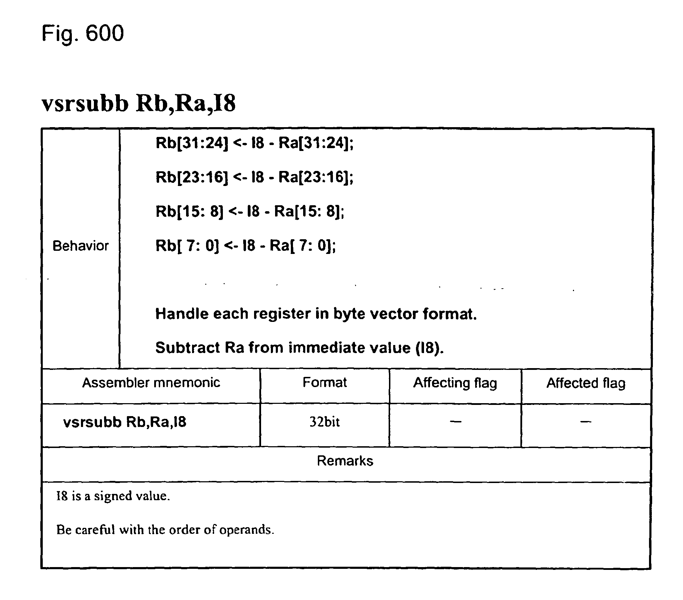

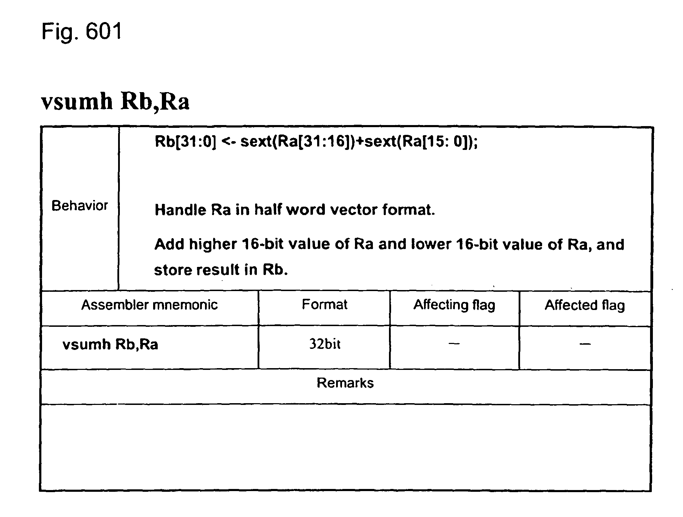

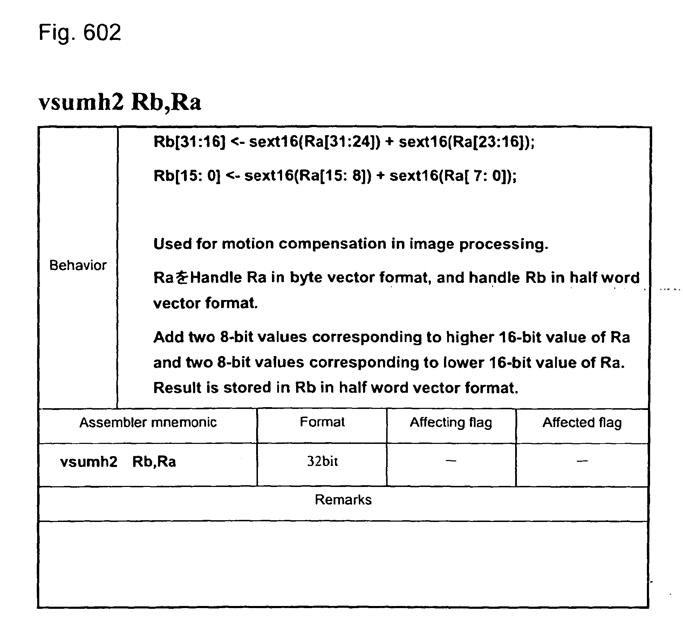

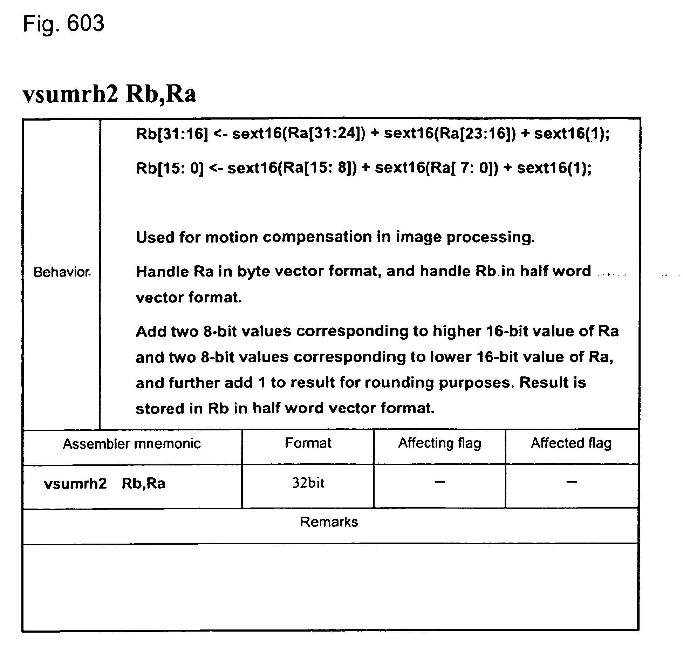

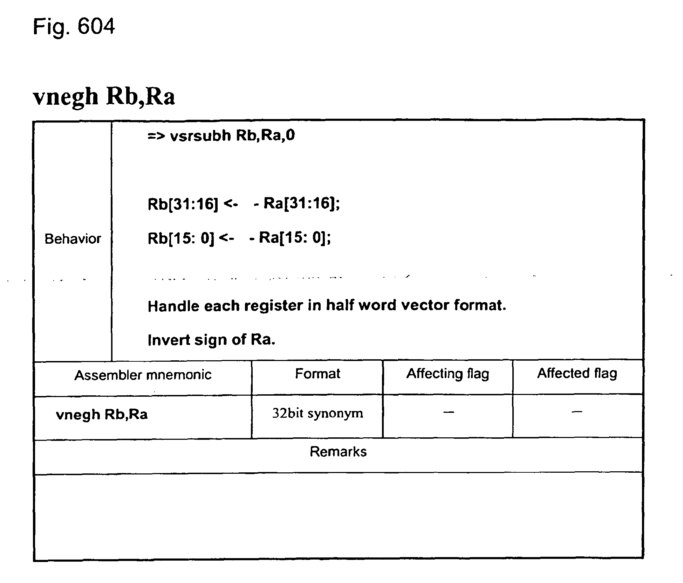

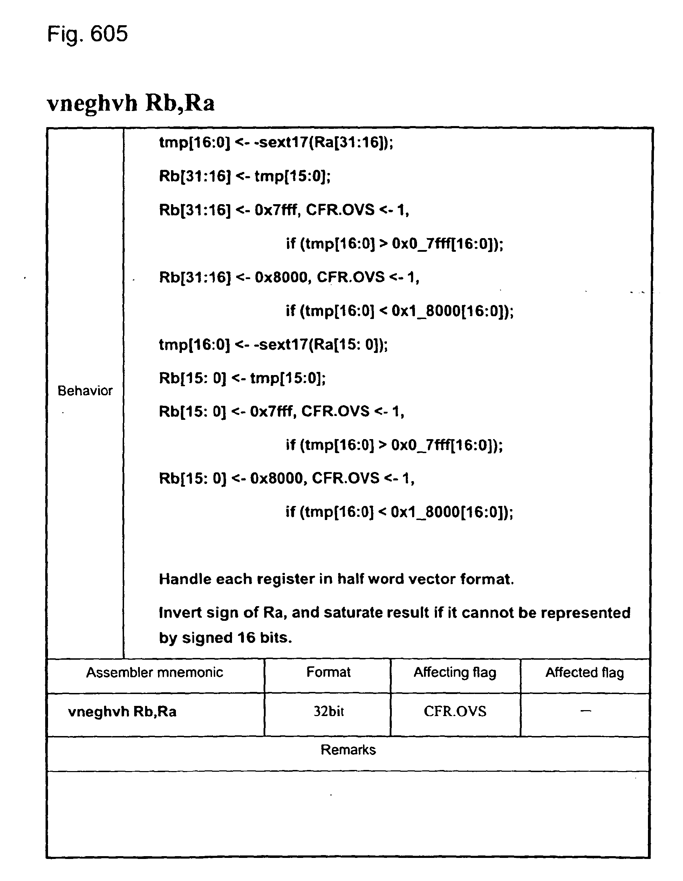

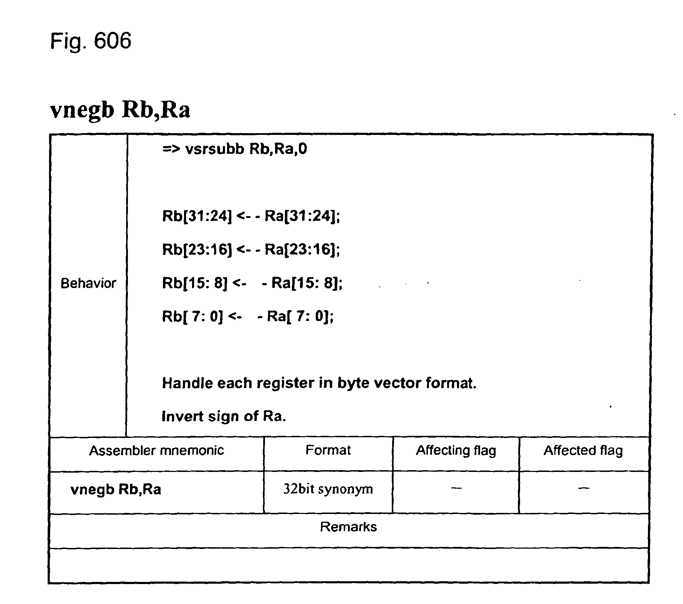

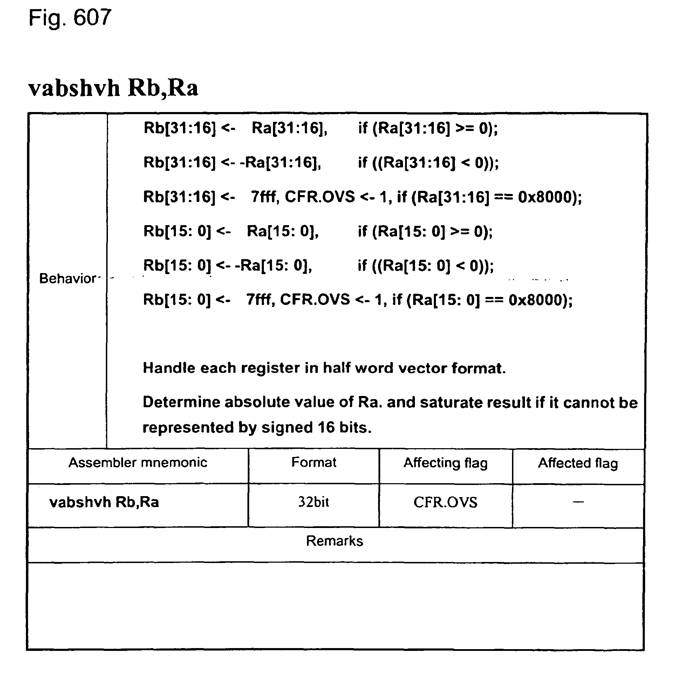

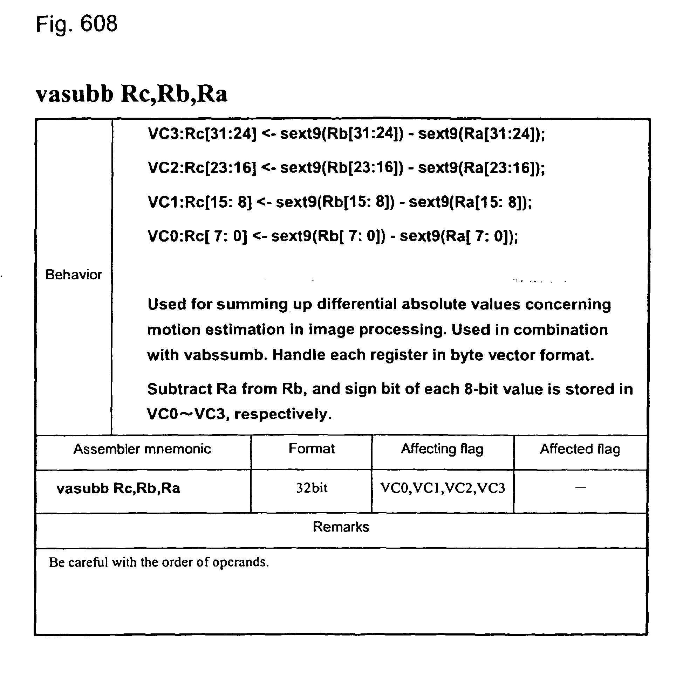

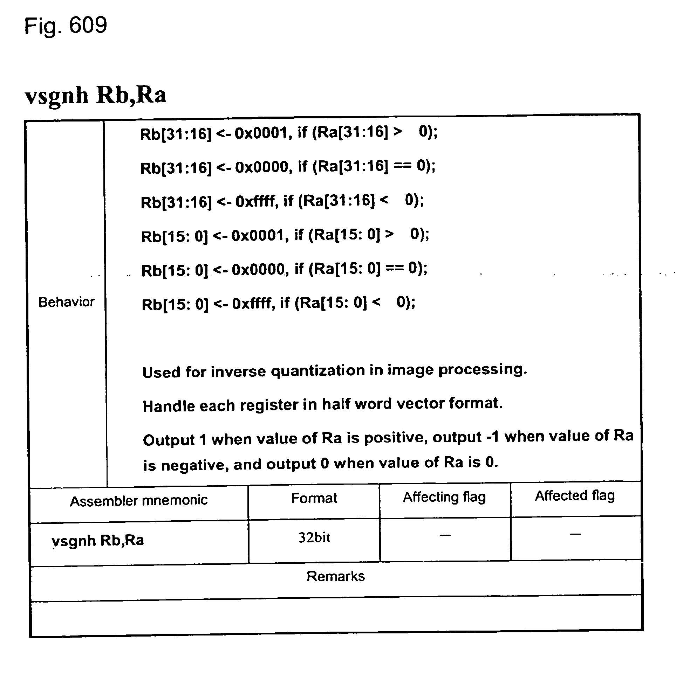

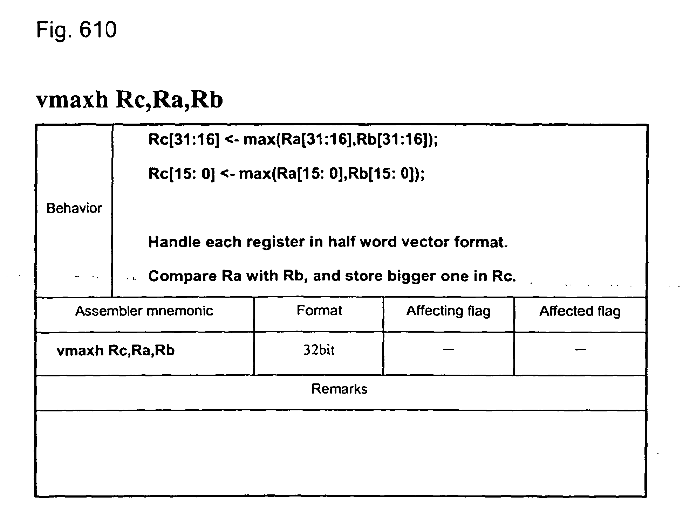

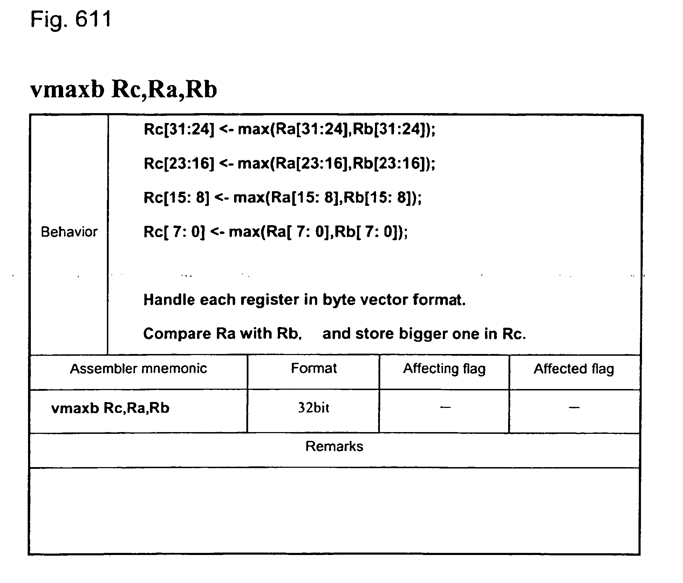

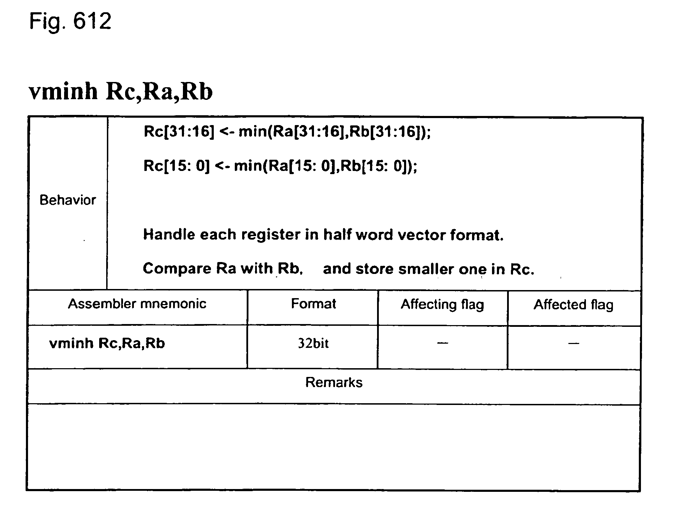

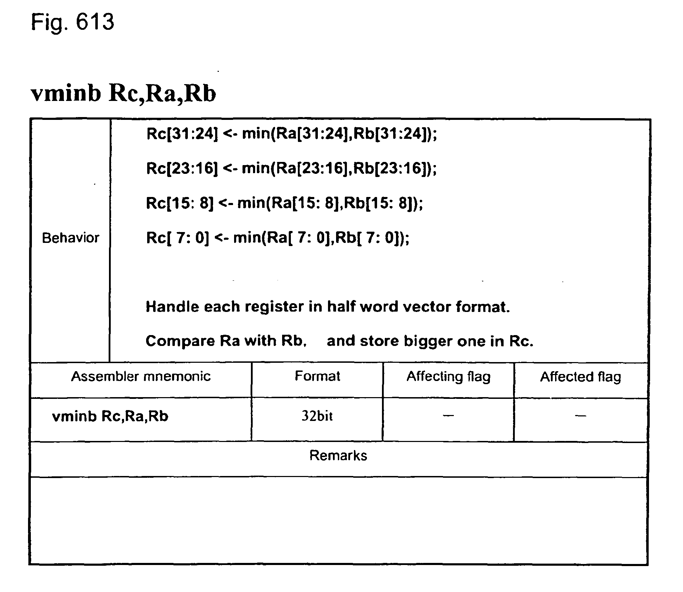

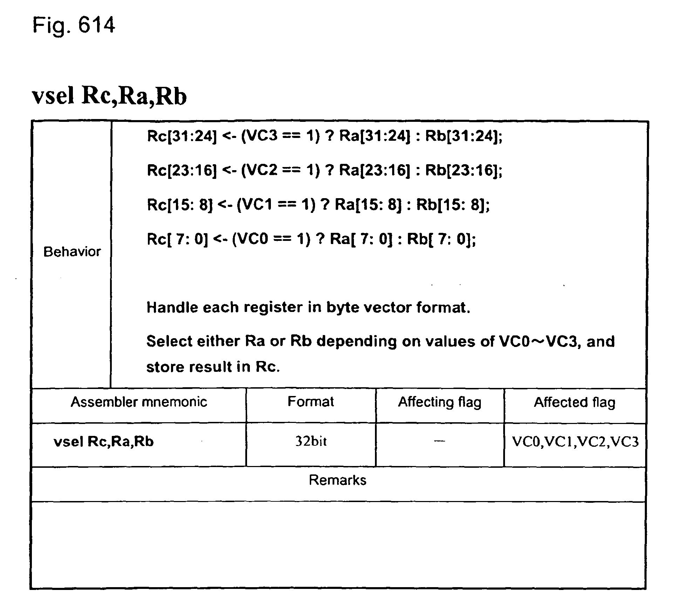

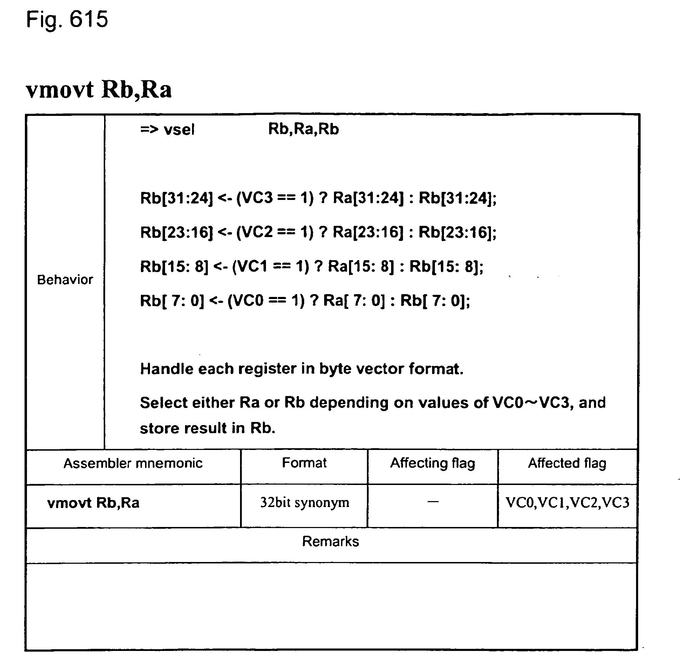

Figs.570~615 are diagrams explaining instructions relating to "SIMD arithmetic".

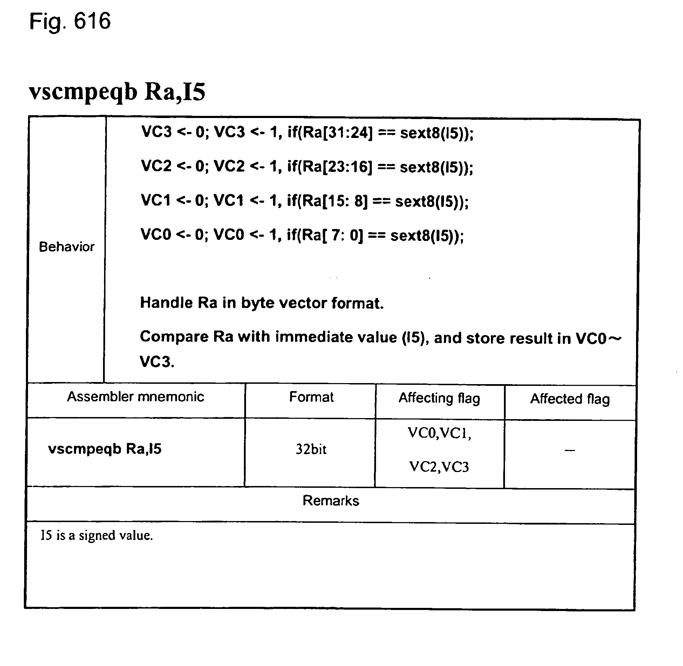

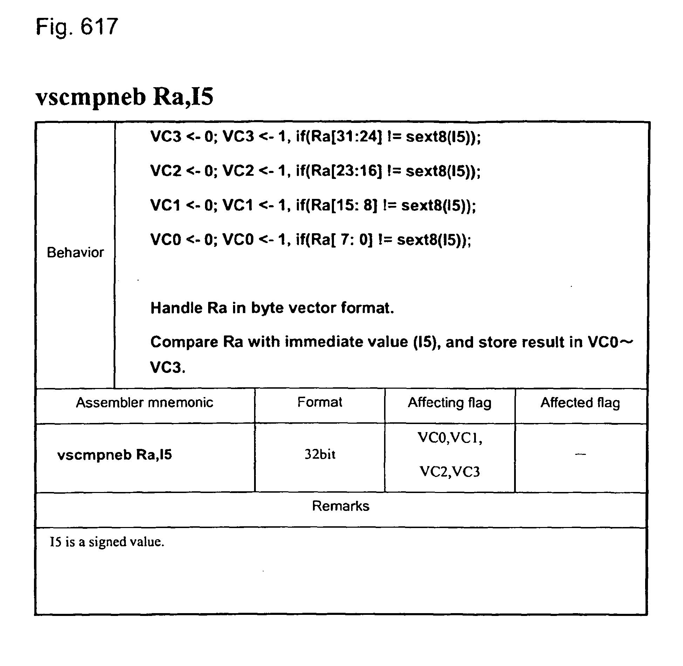

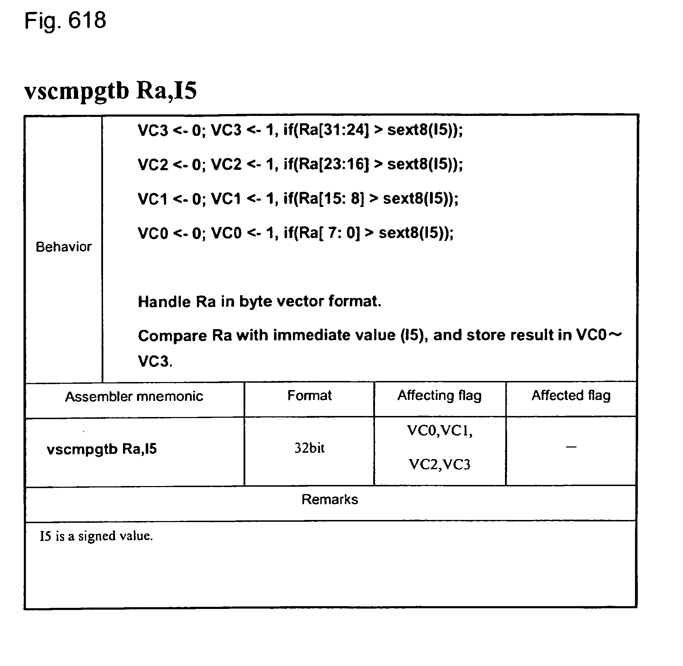

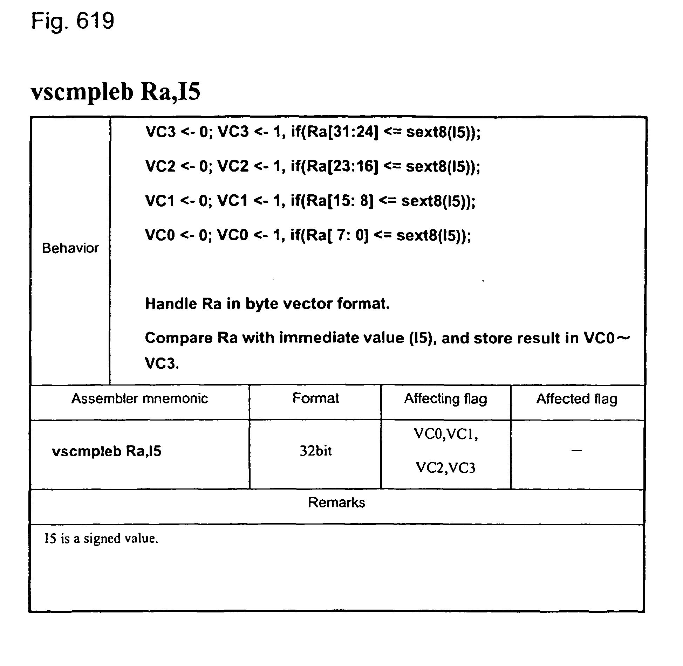

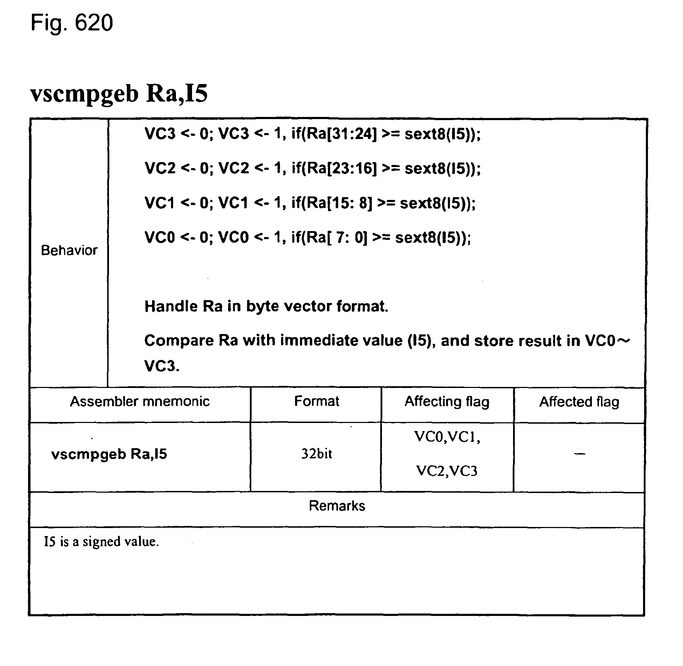

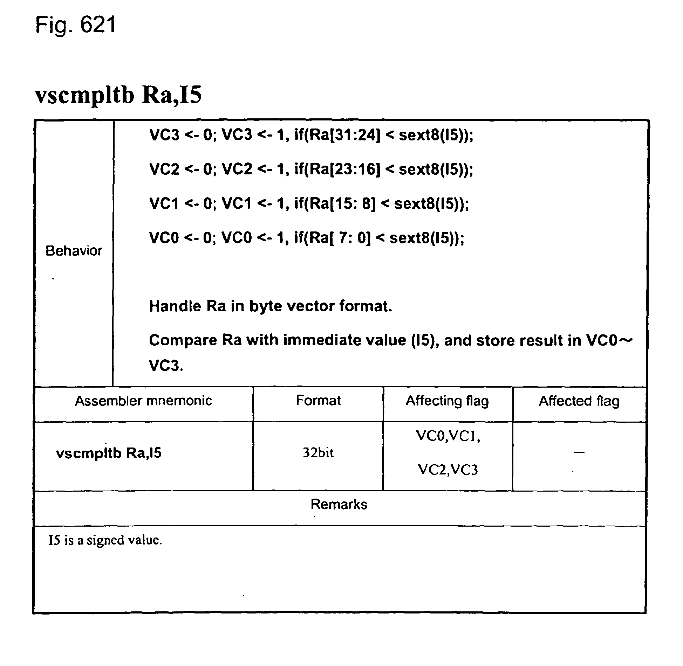

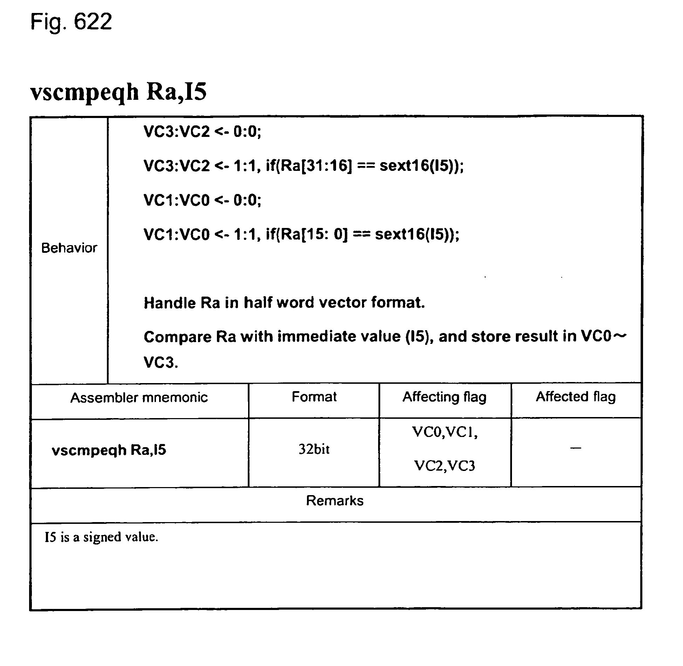

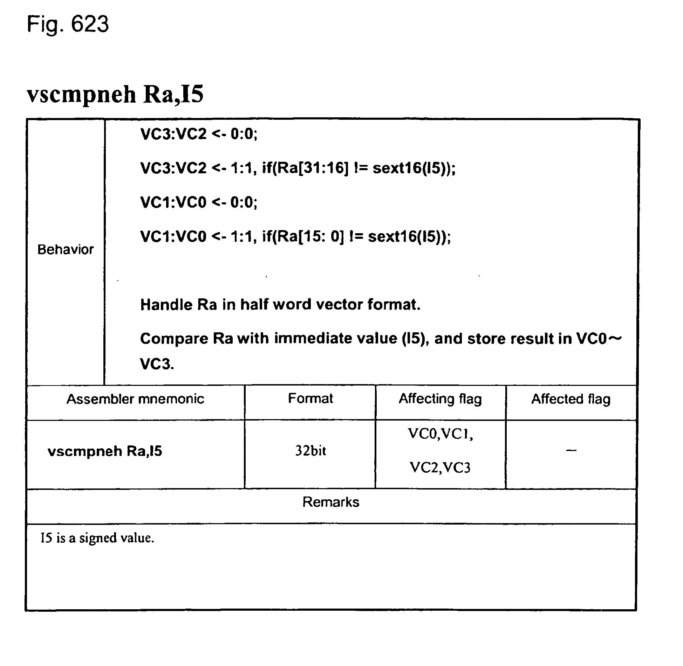

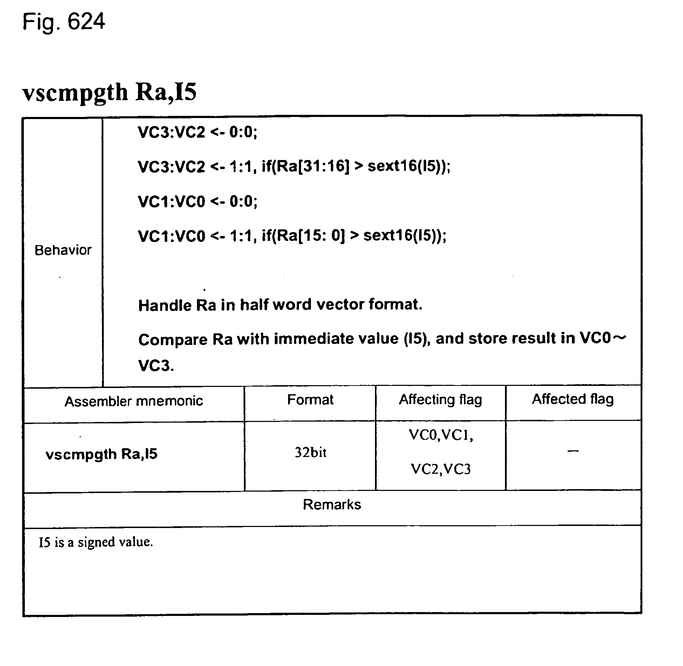

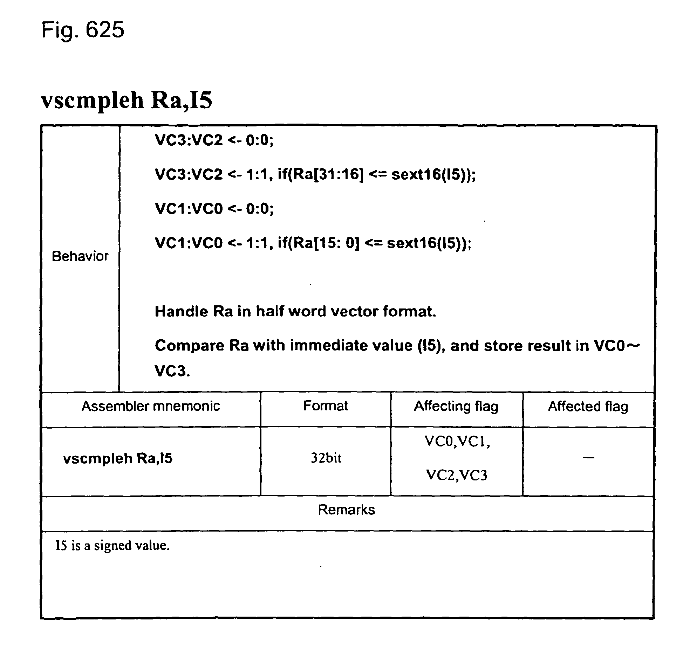

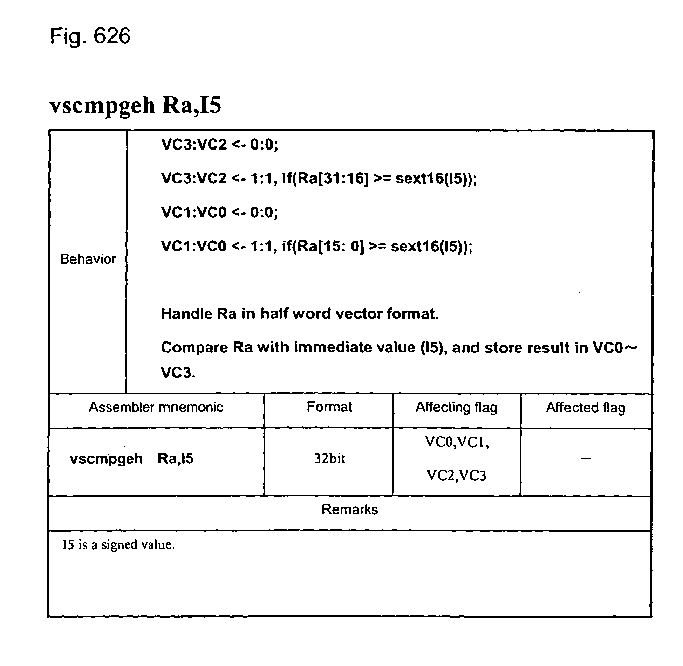

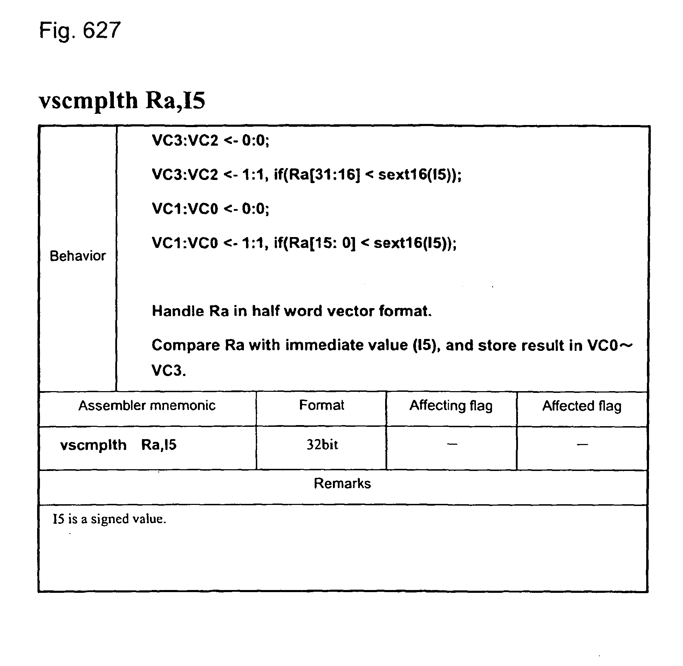

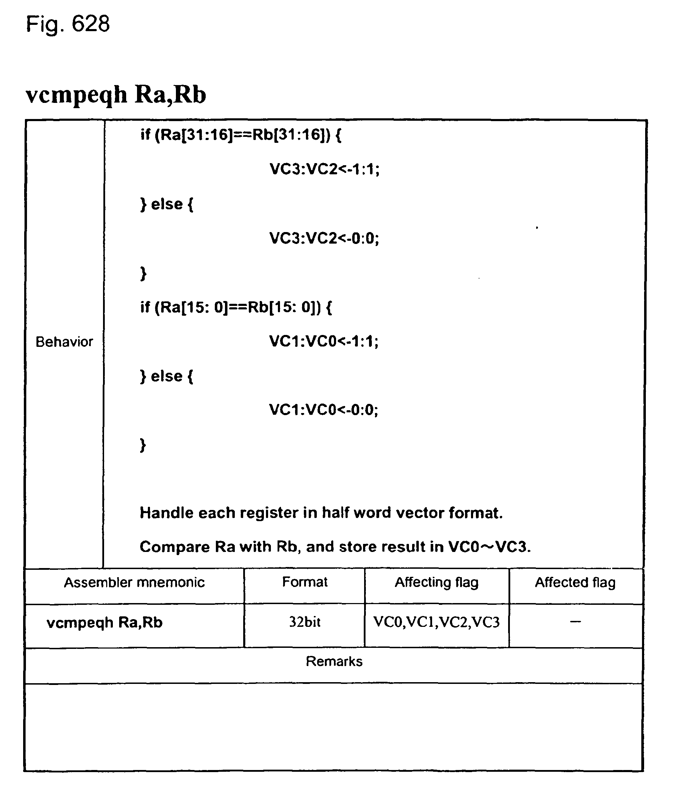

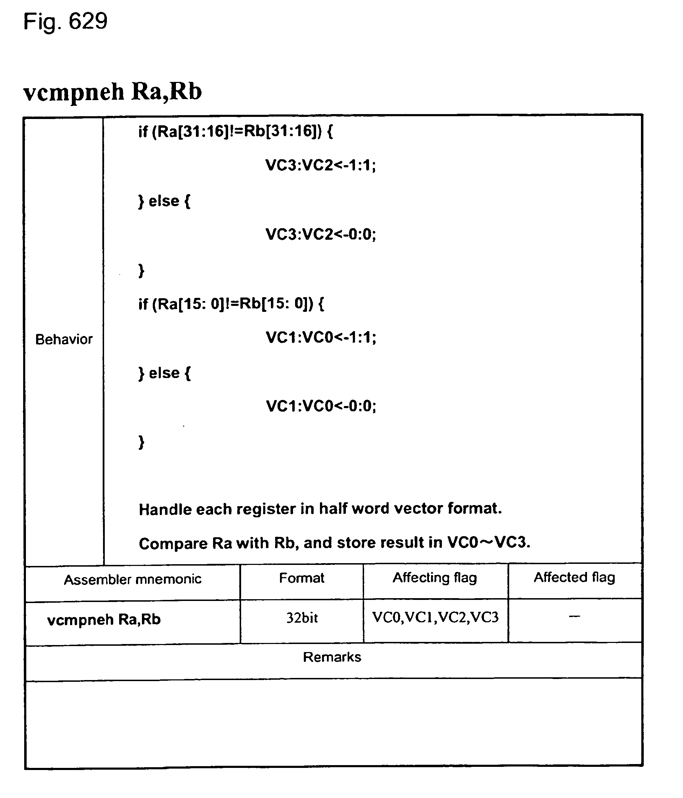

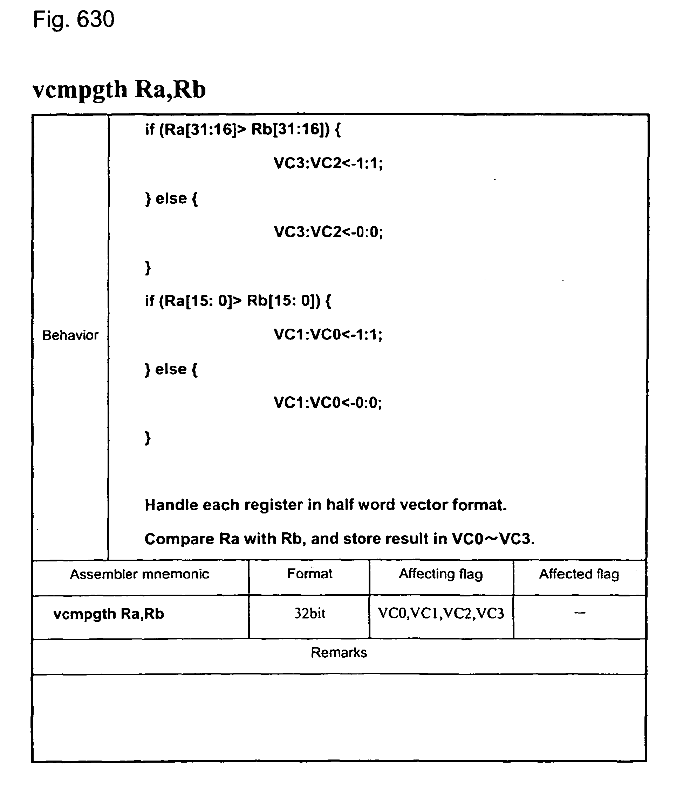

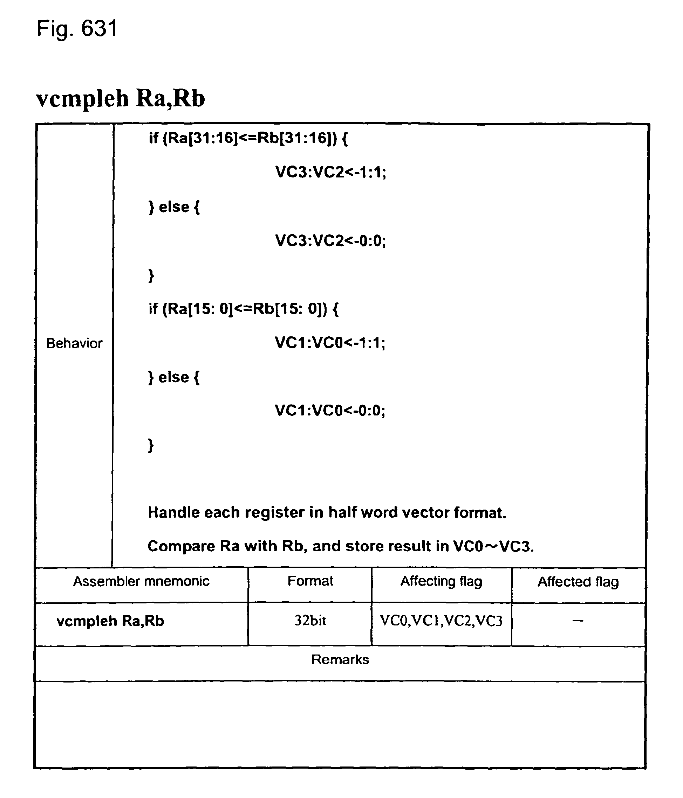

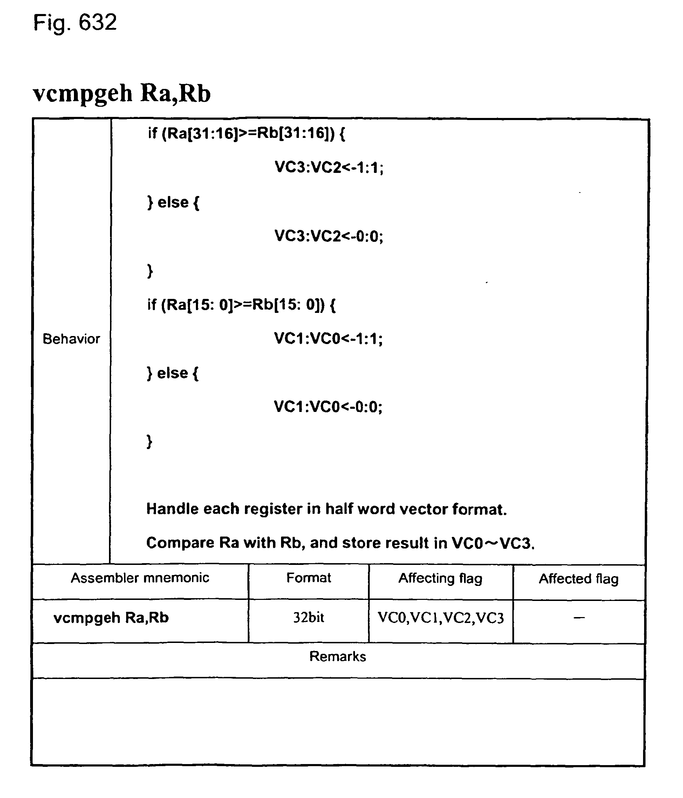

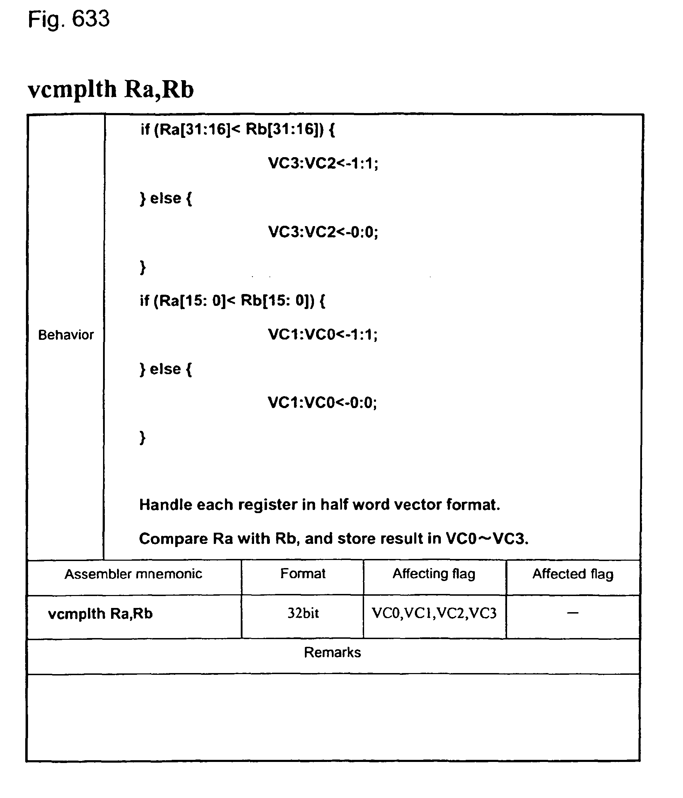

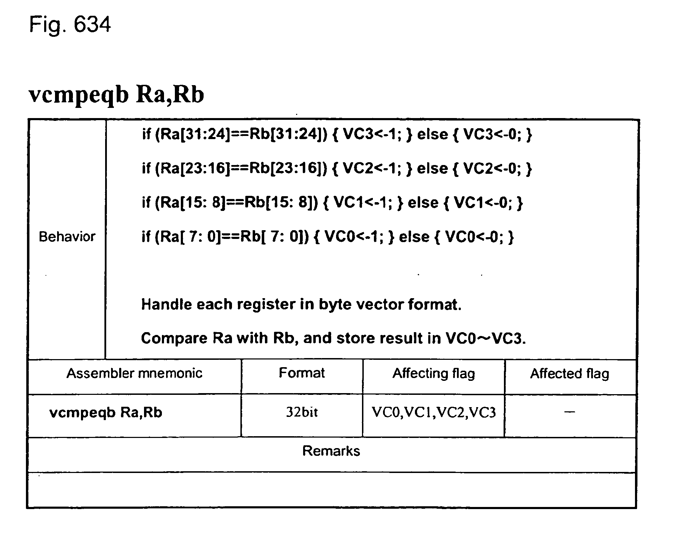

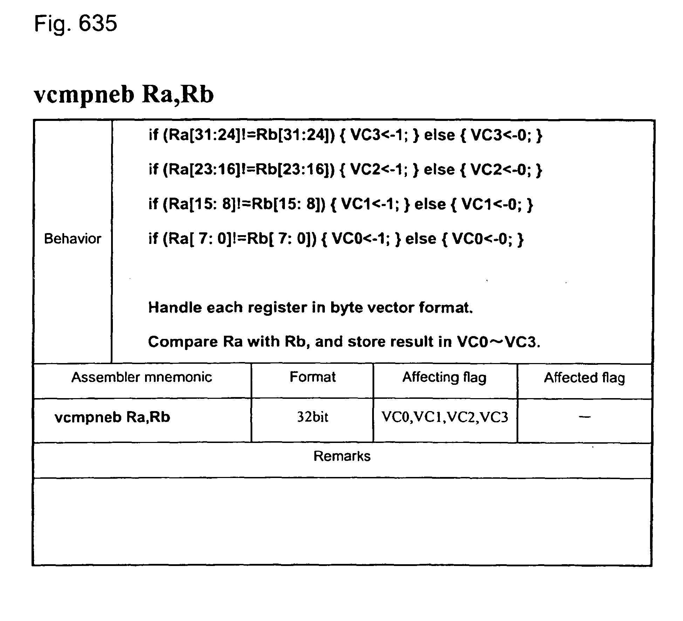

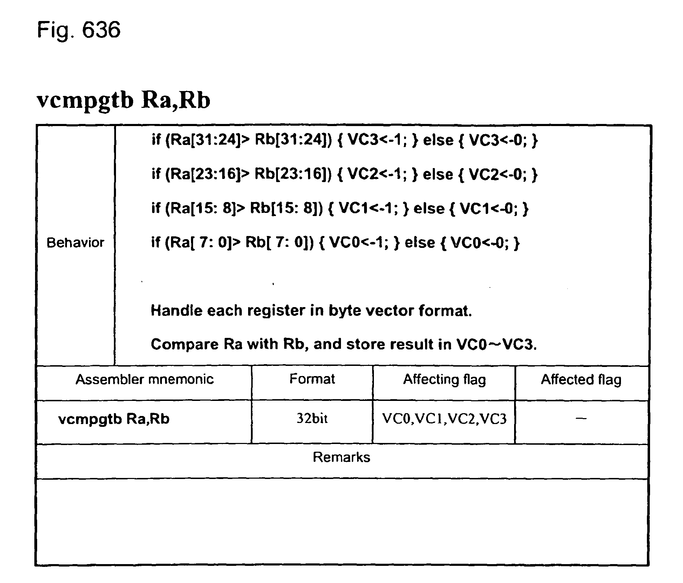

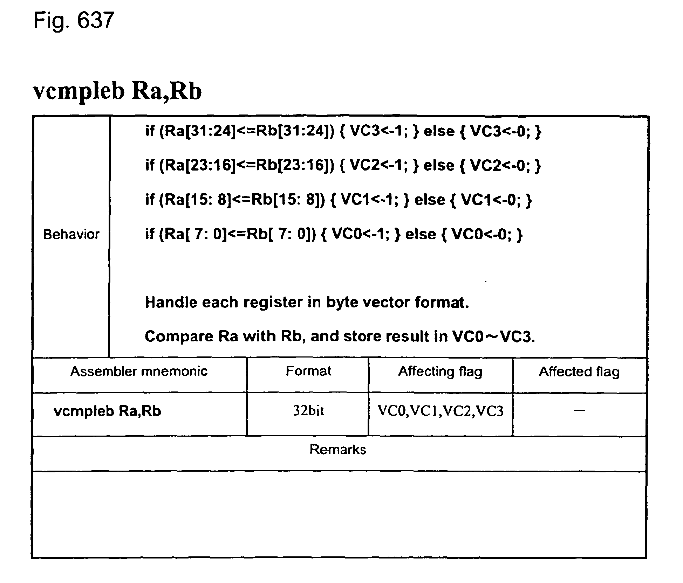

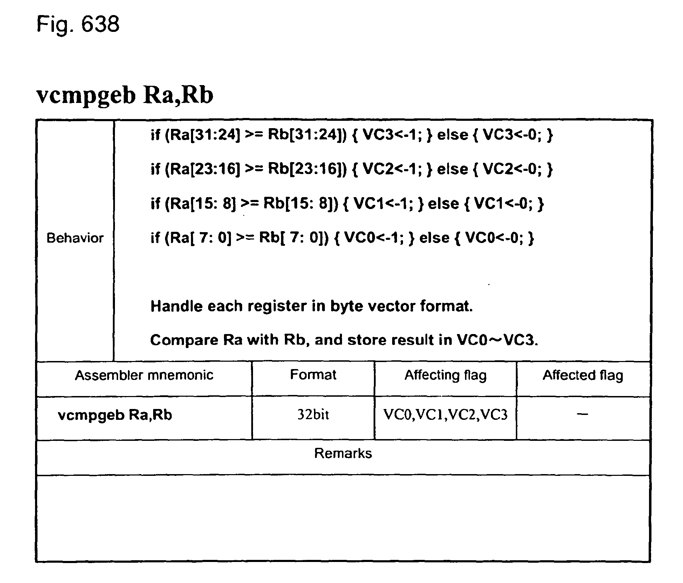

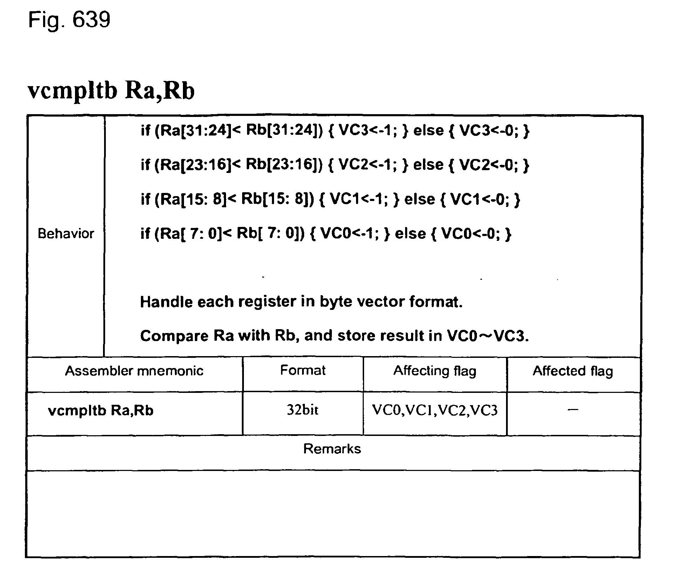

Figs.616~639 are diagrams explaining instructions relating to "SIMD compare".

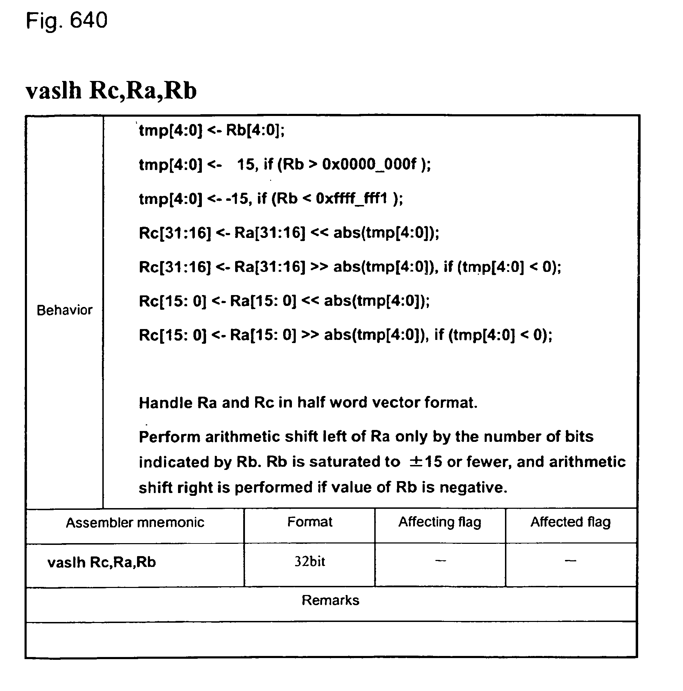

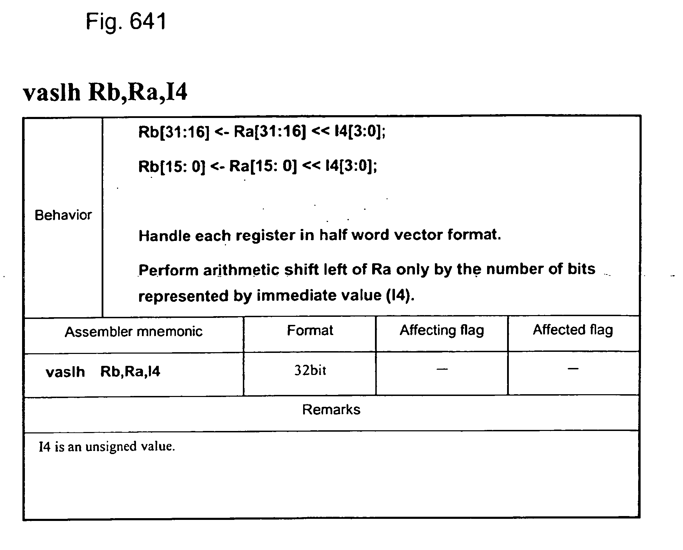

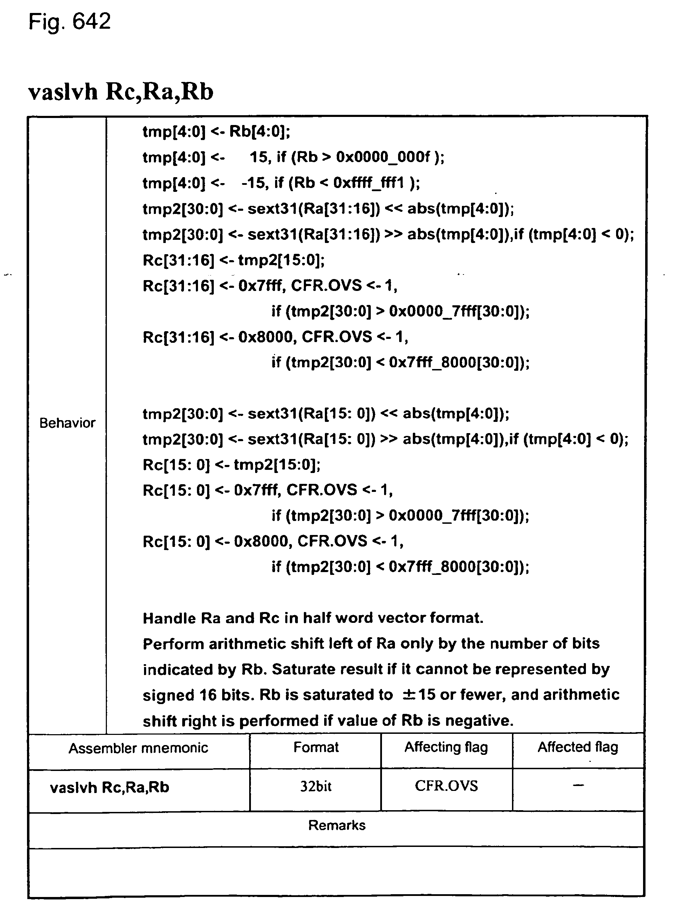

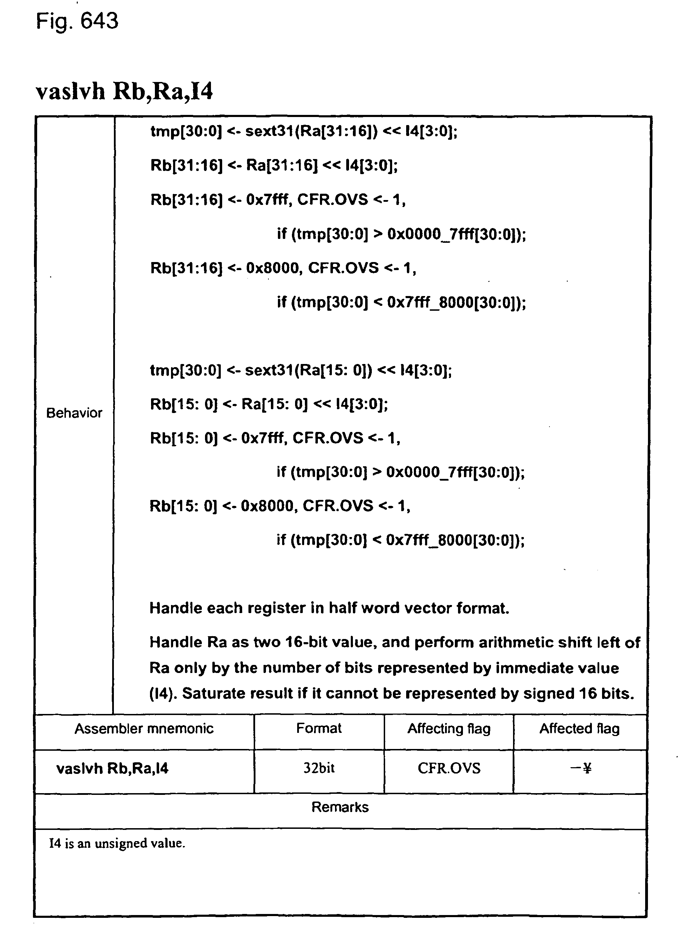

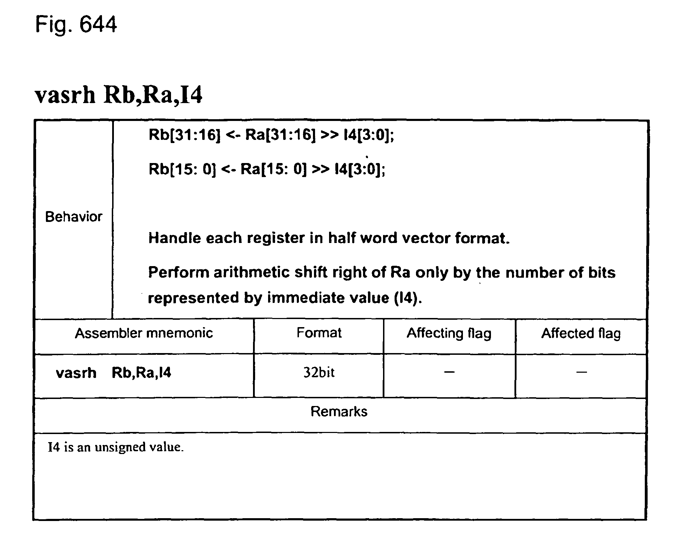

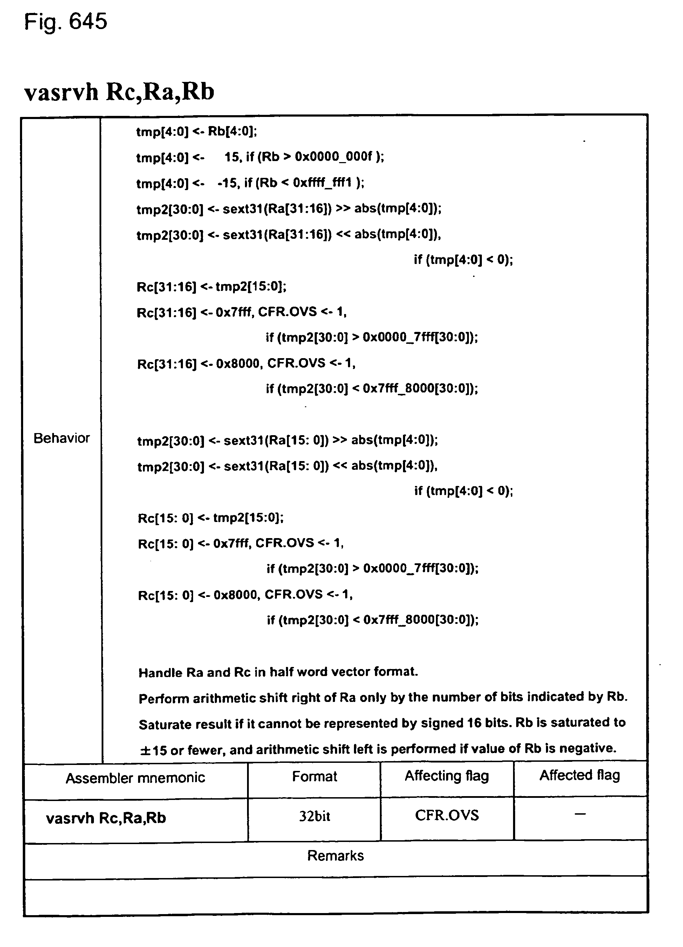

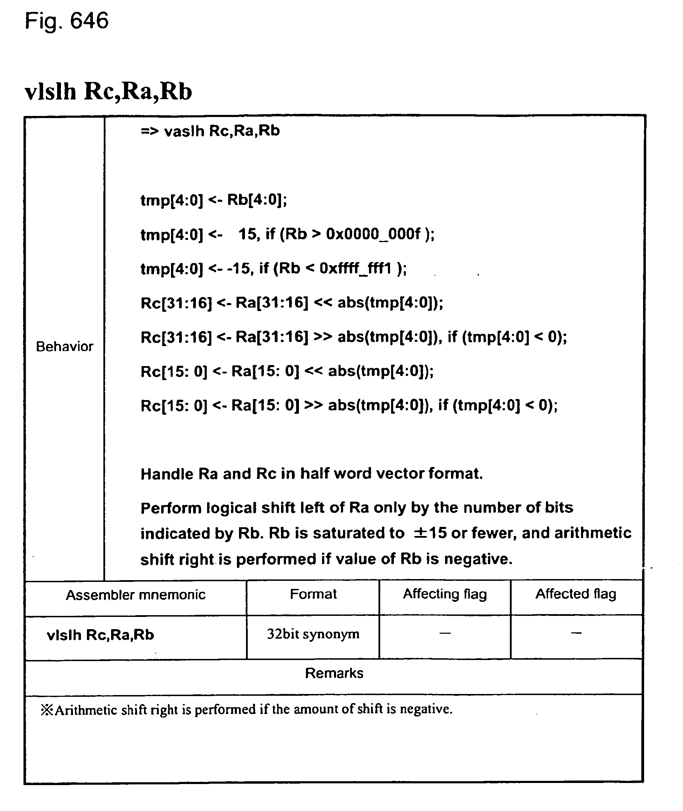

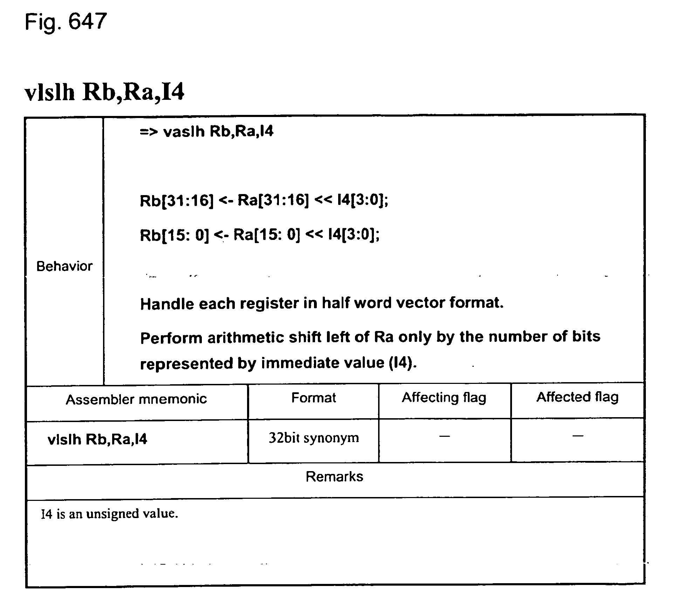

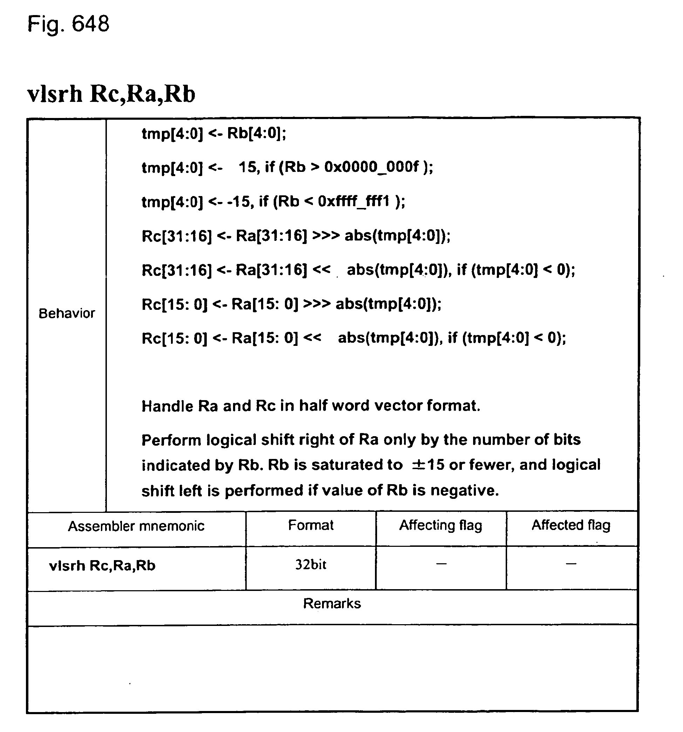

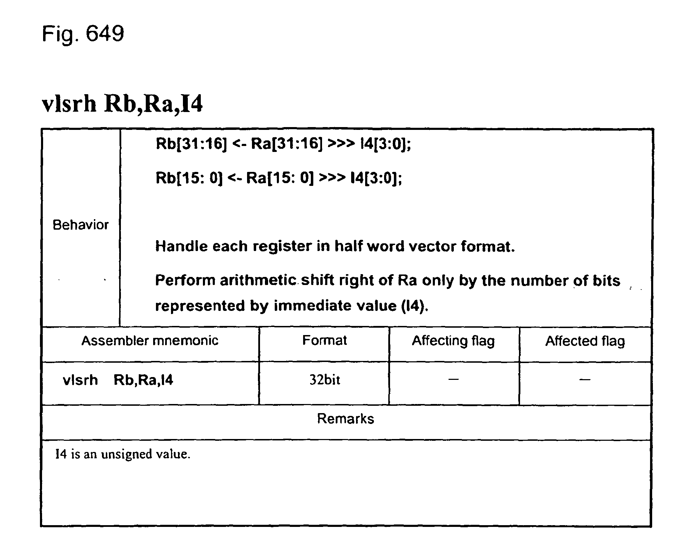

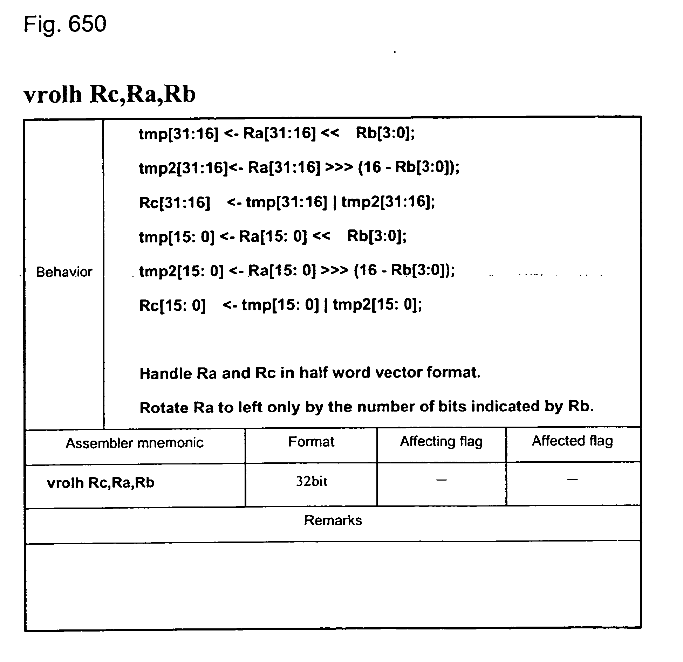

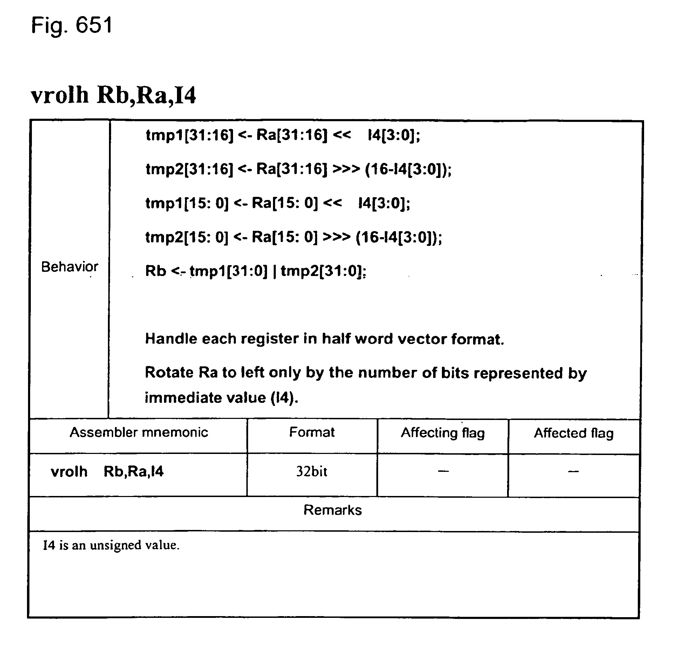

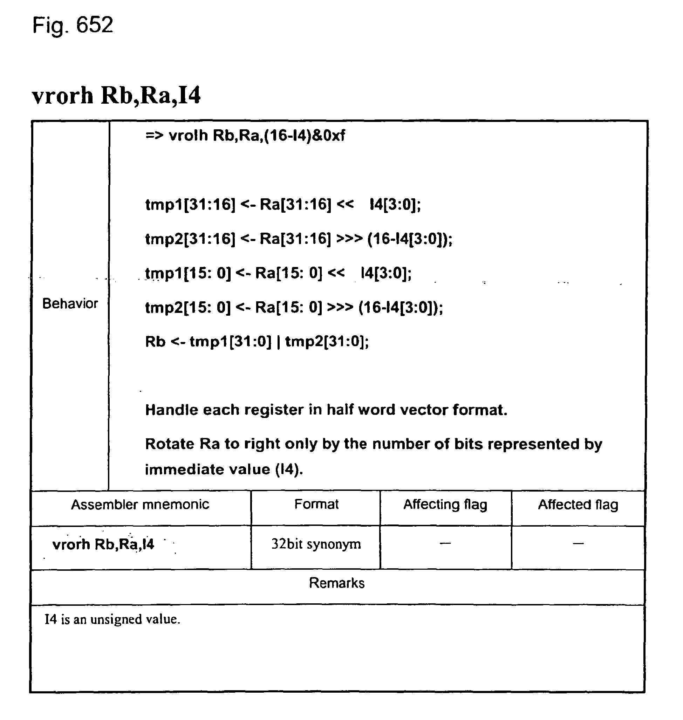

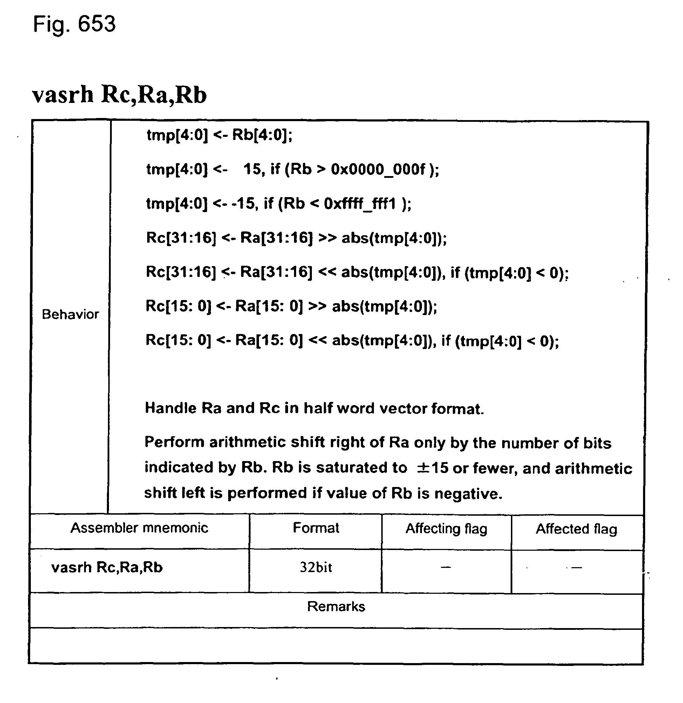

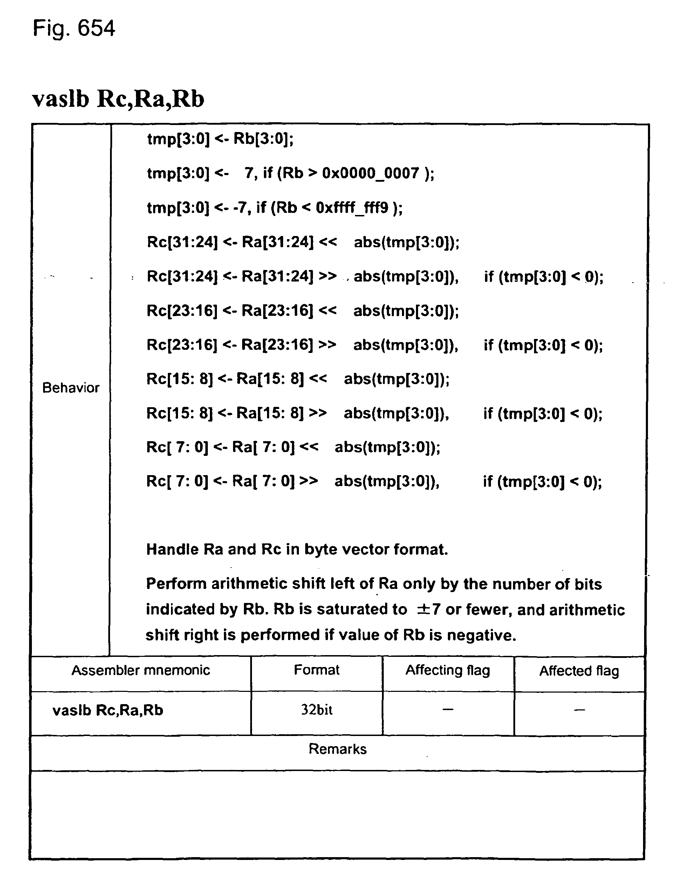

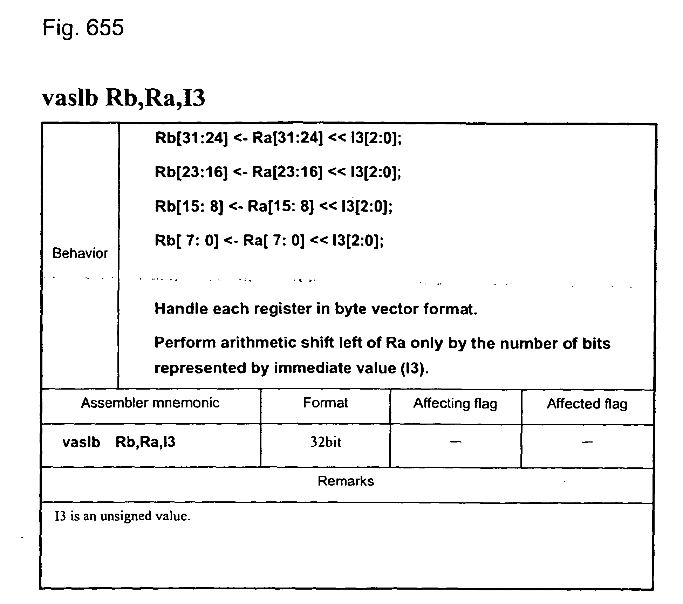

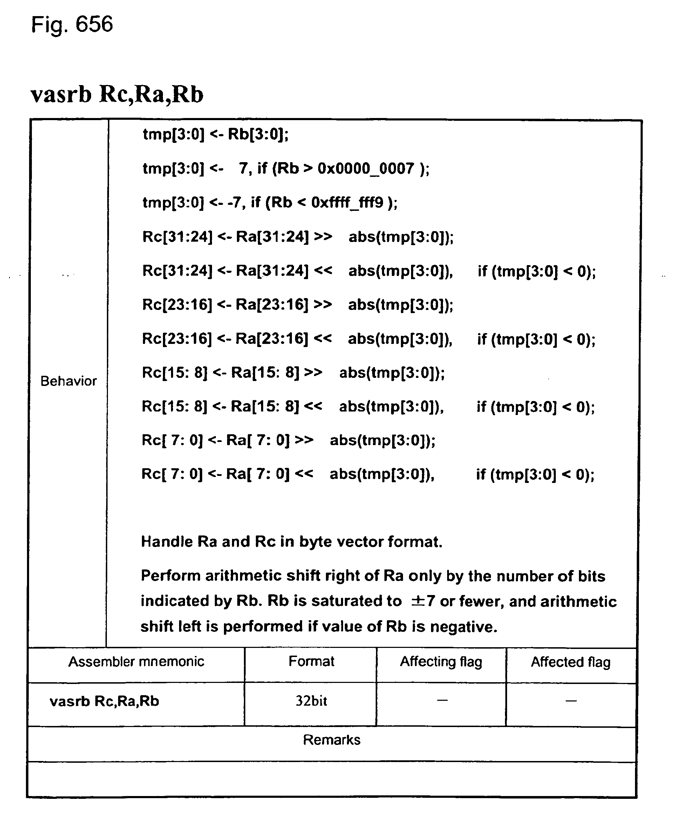

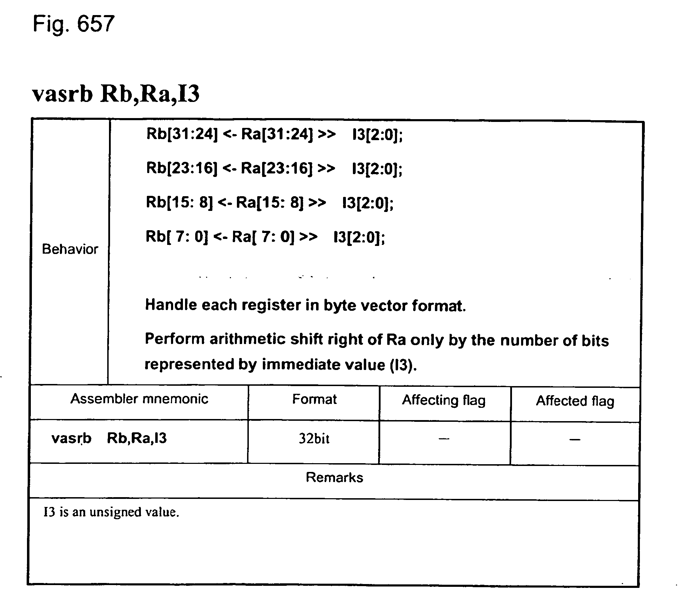

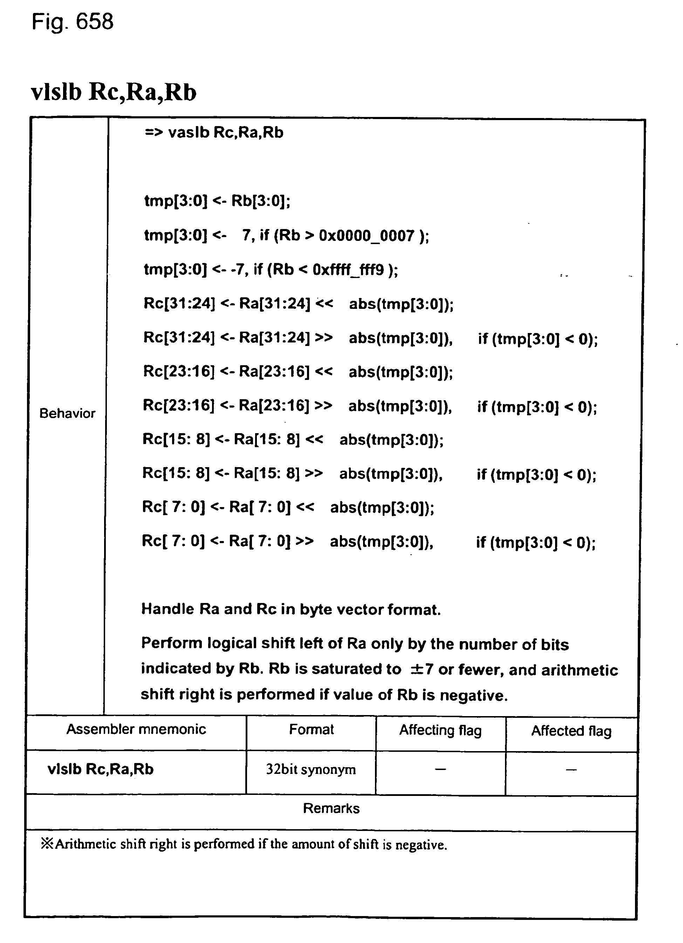

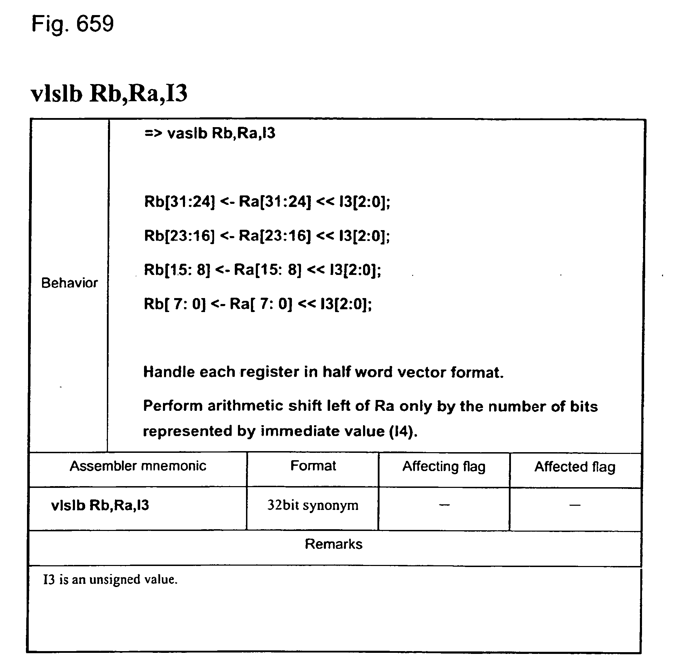

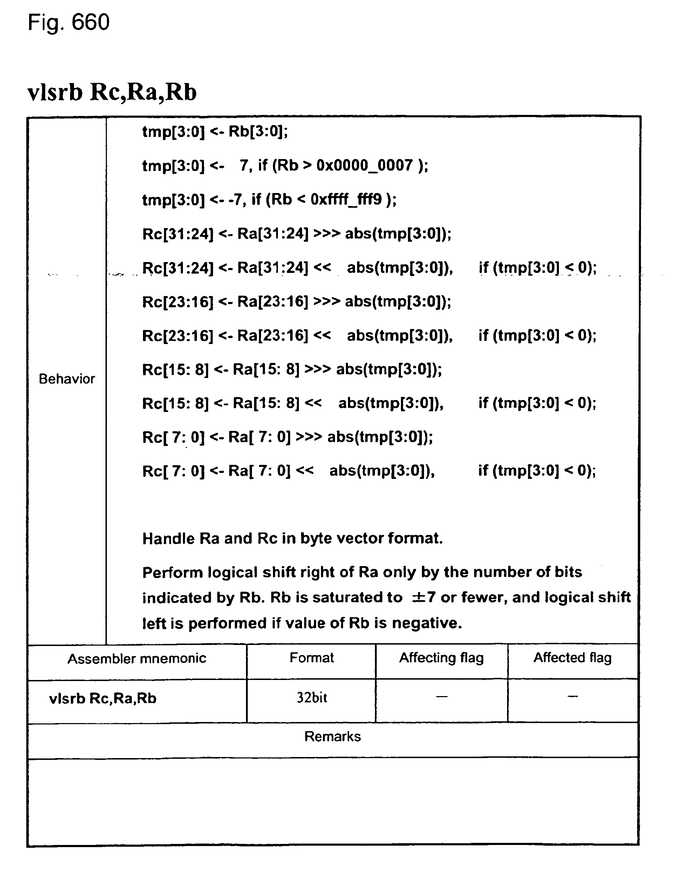

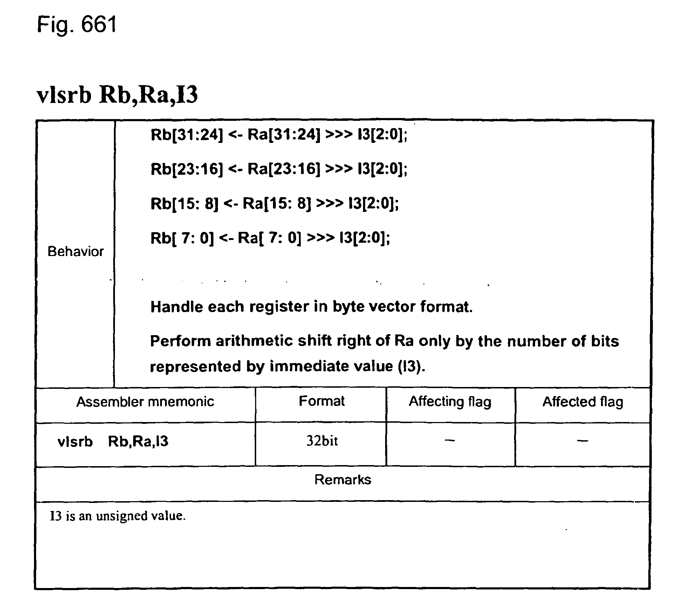

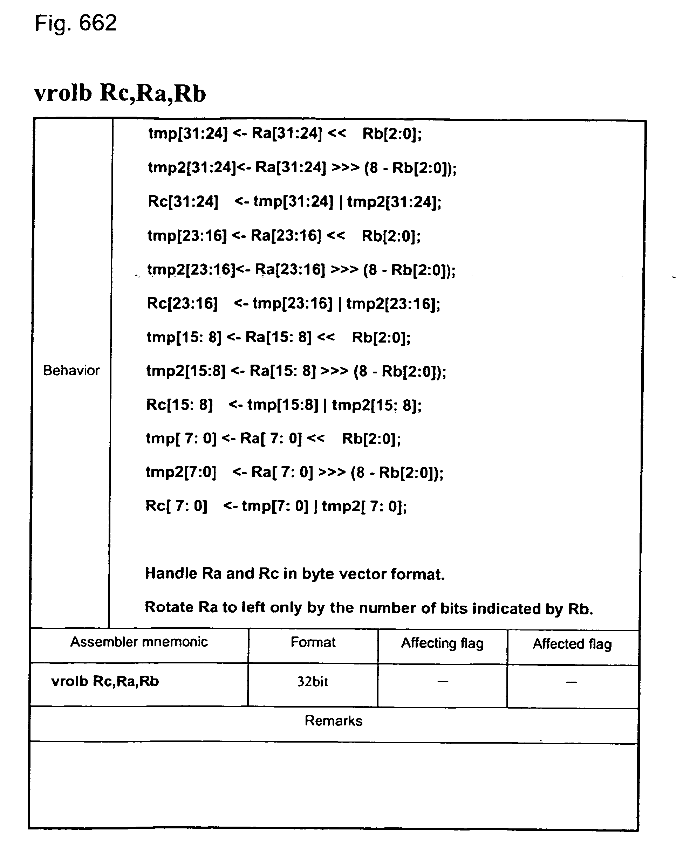

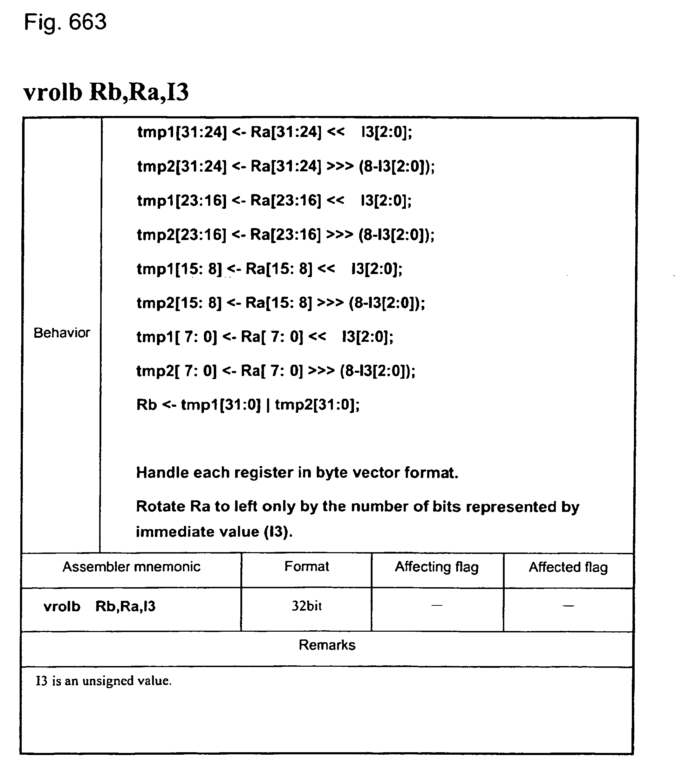

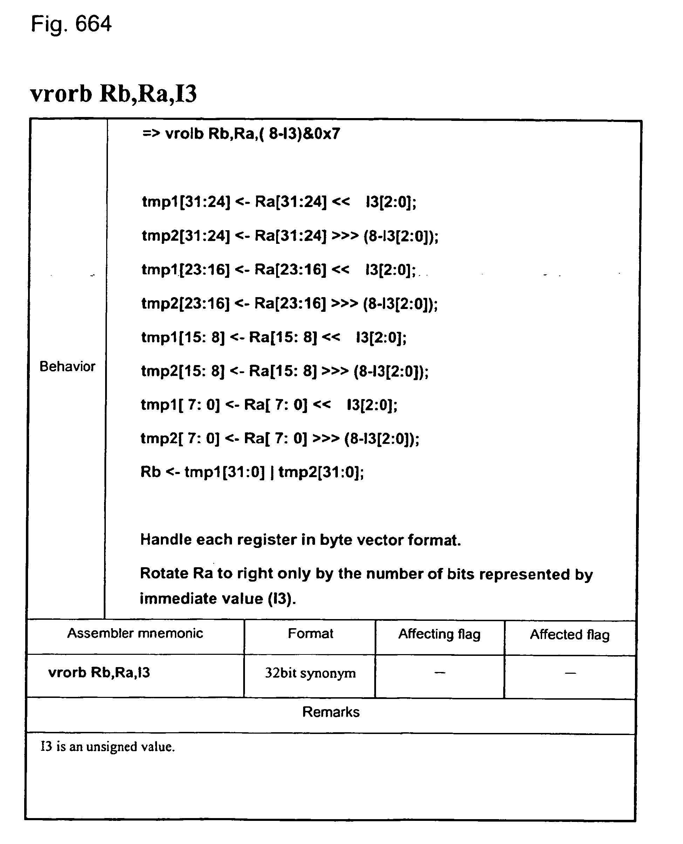

Figs.640~664 are diagrams explaining instructions relating to "SIMD shift (S1)".

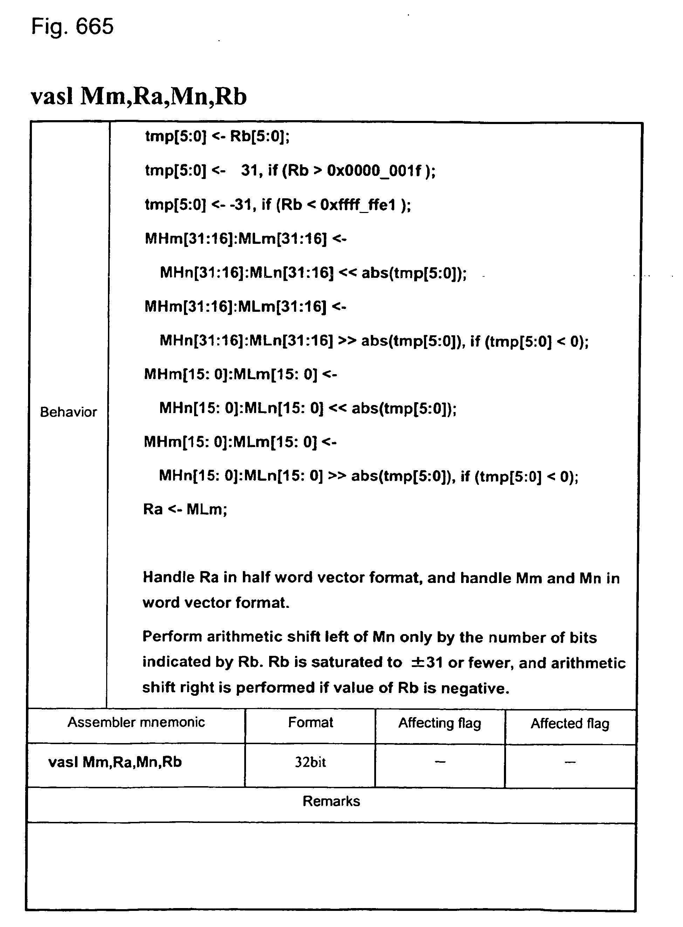

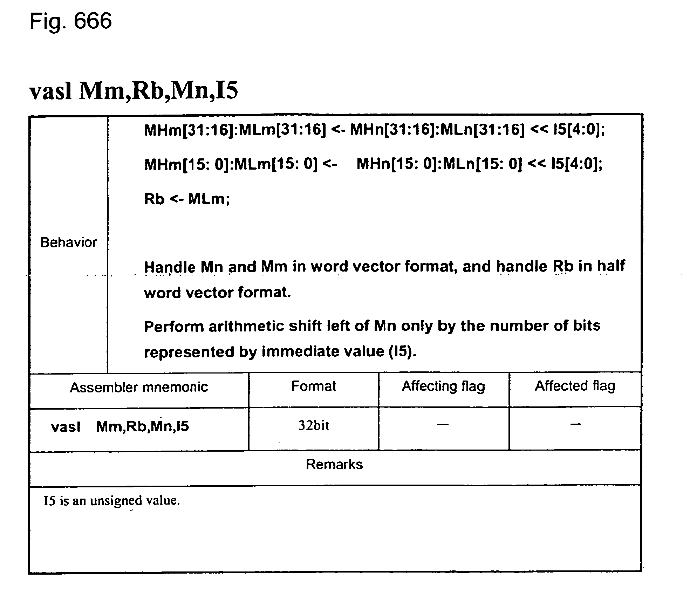

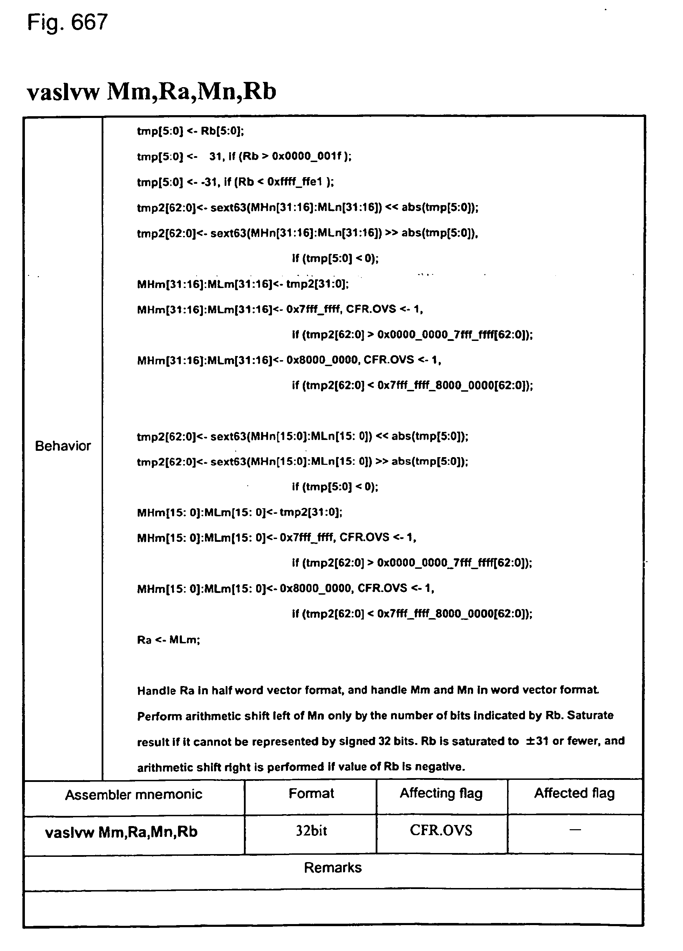

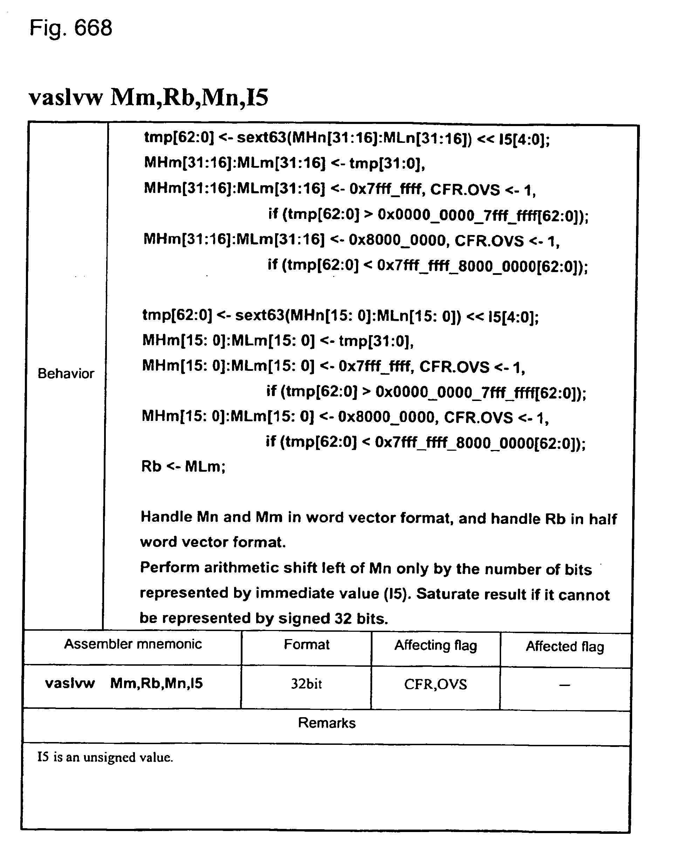

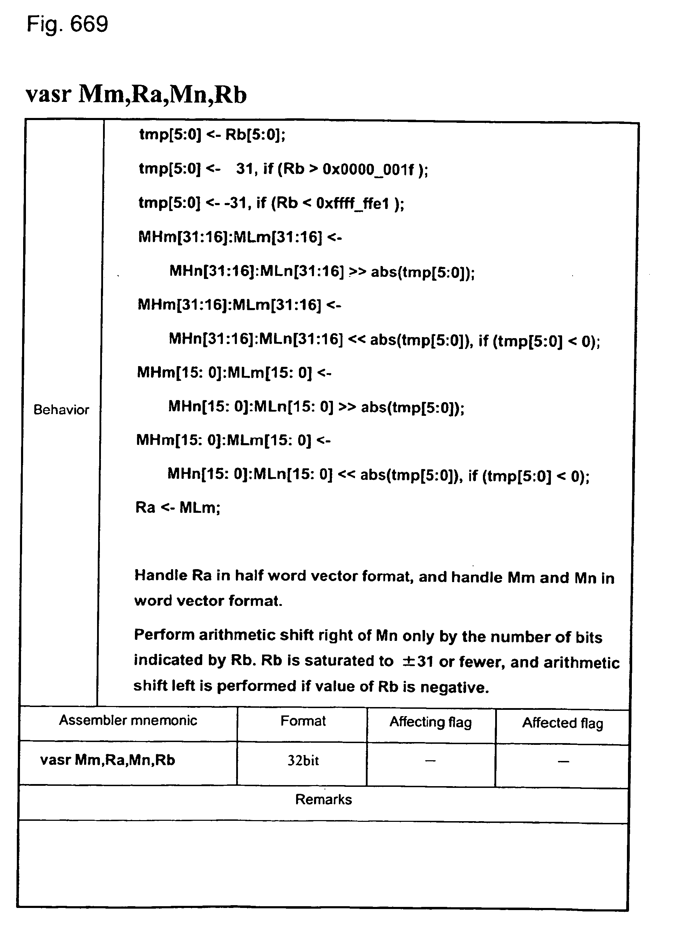

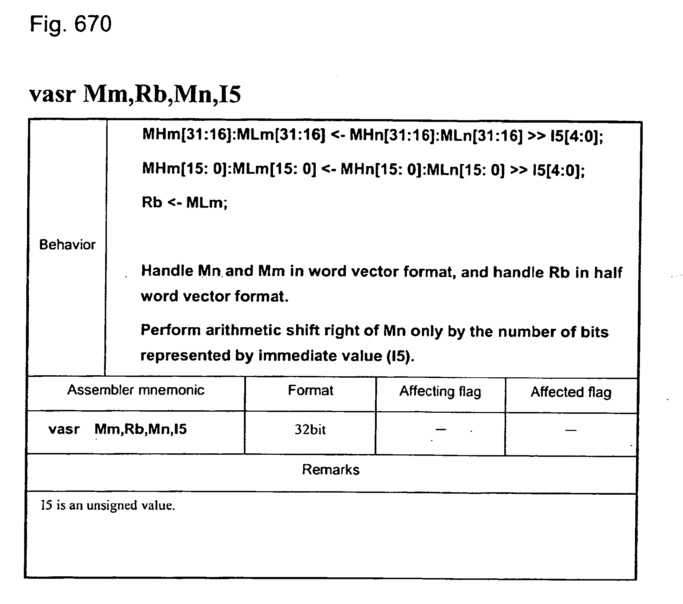

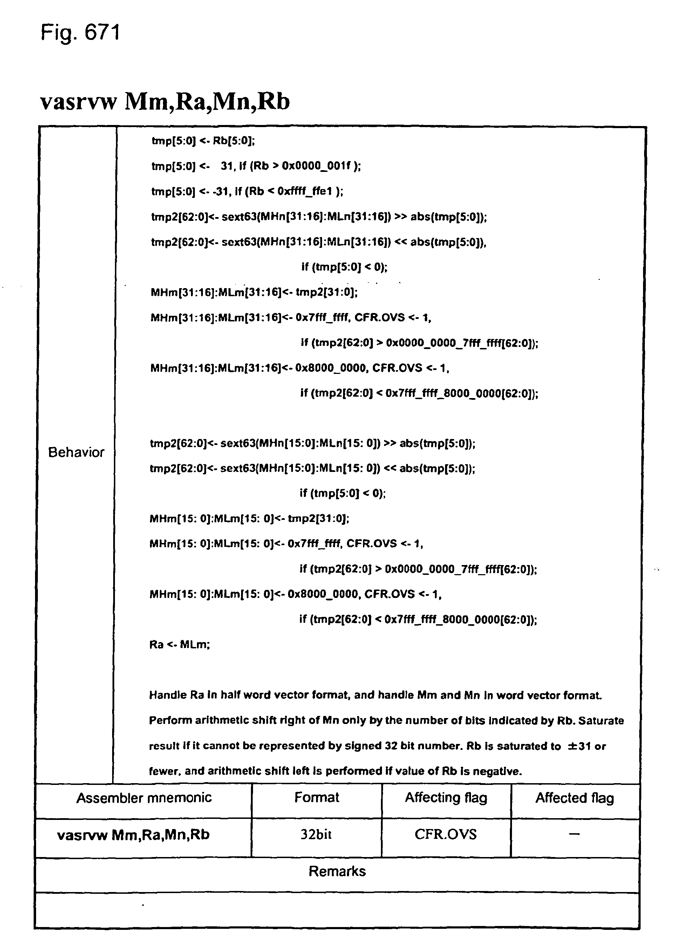

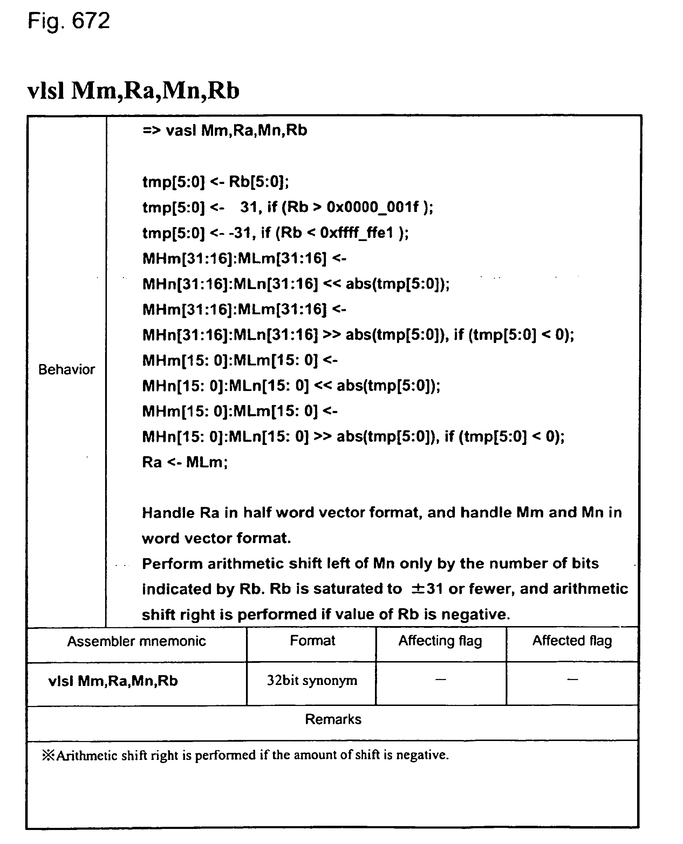

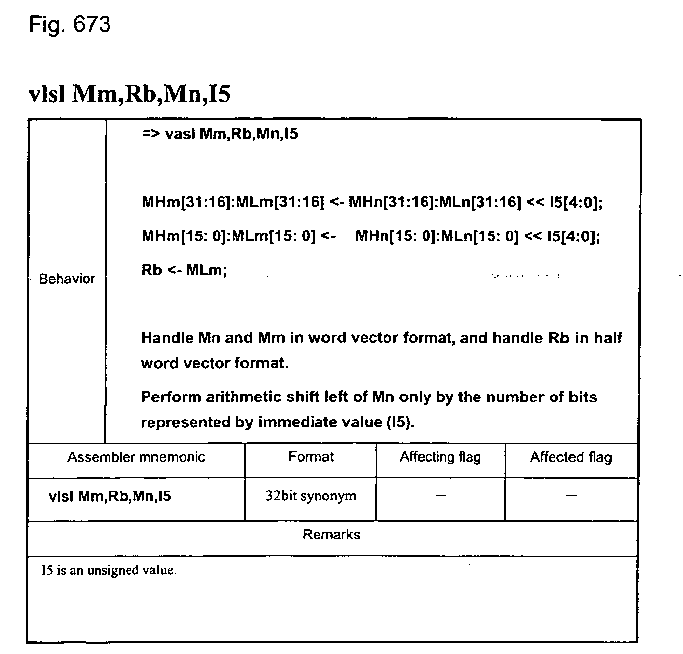

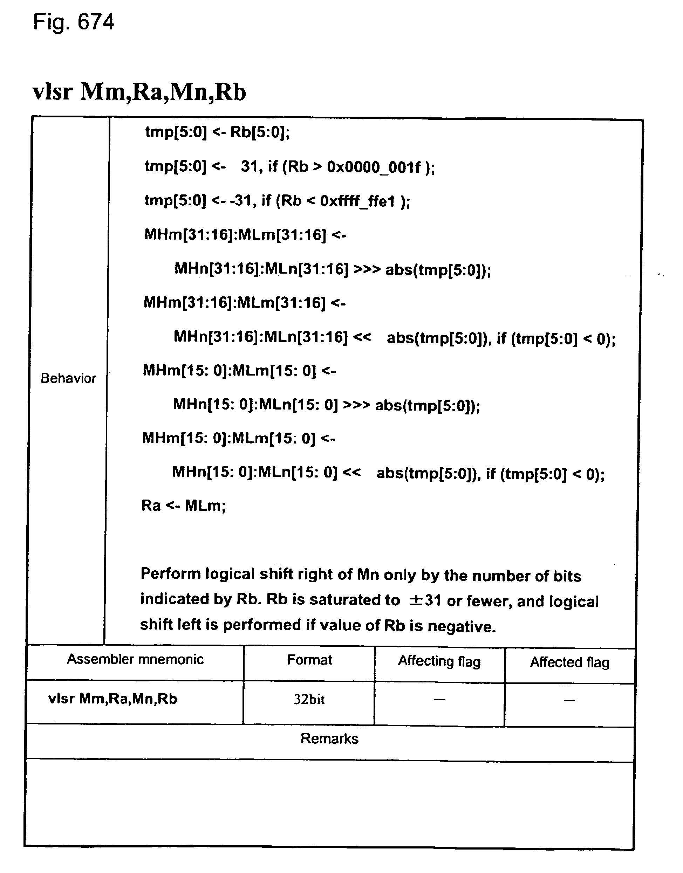

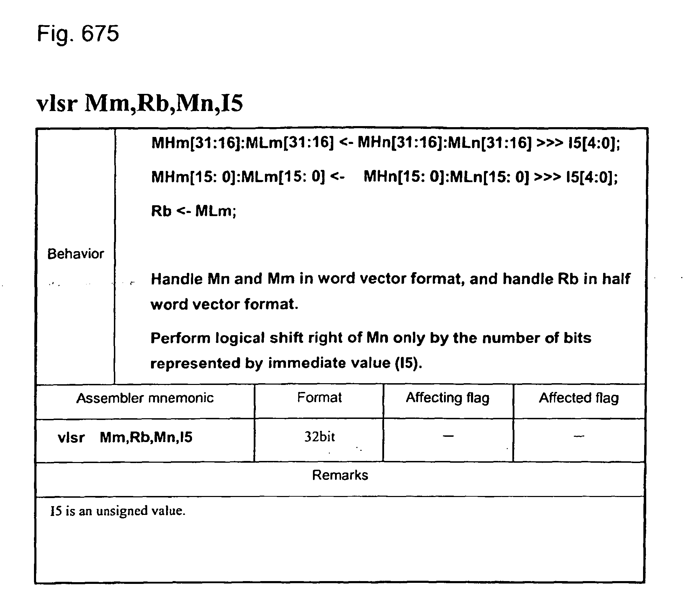

Figs.665~675 are diagrams explaining instructions relating to "SIMD shift (S2)".

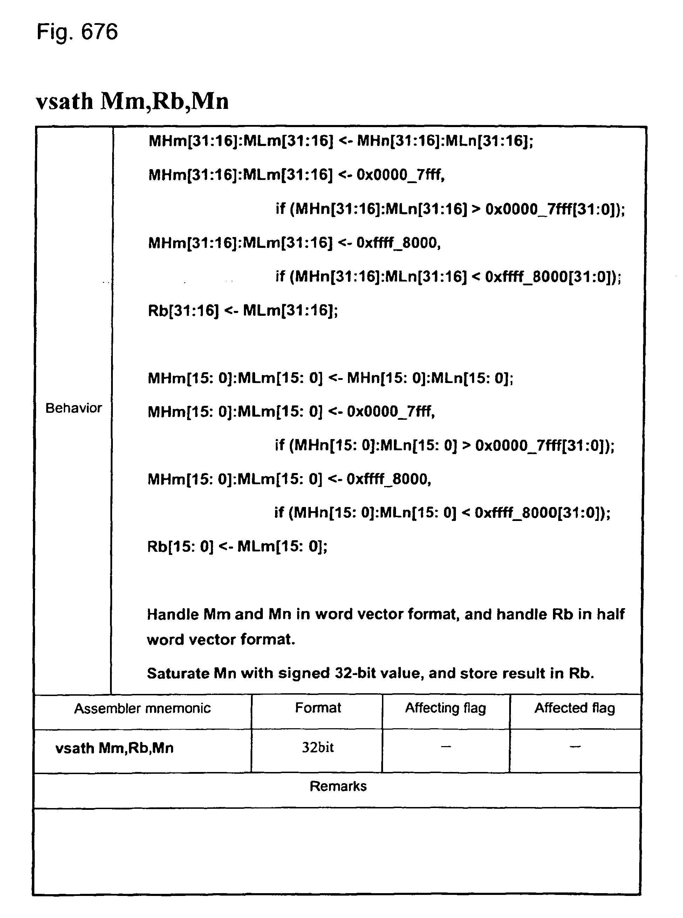

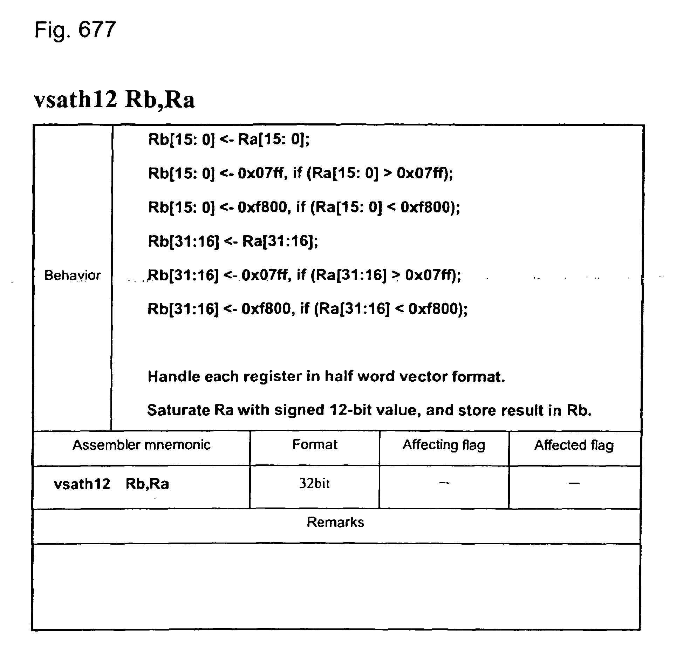

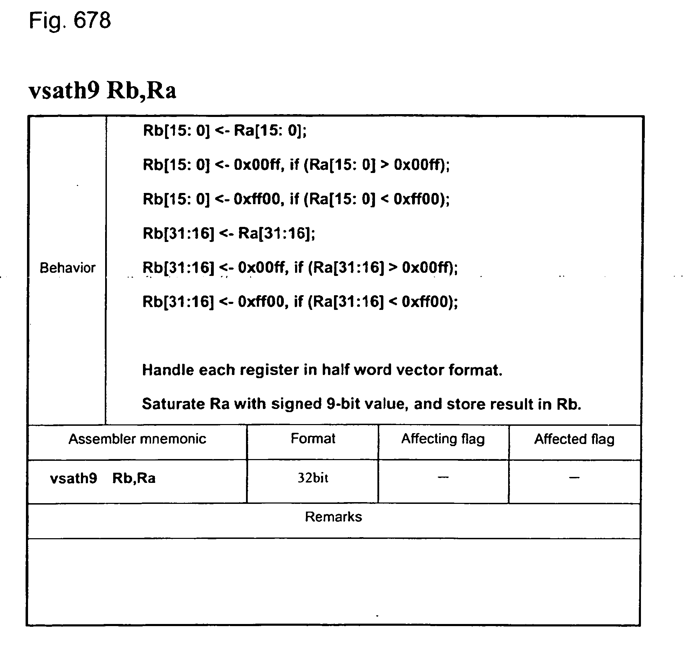

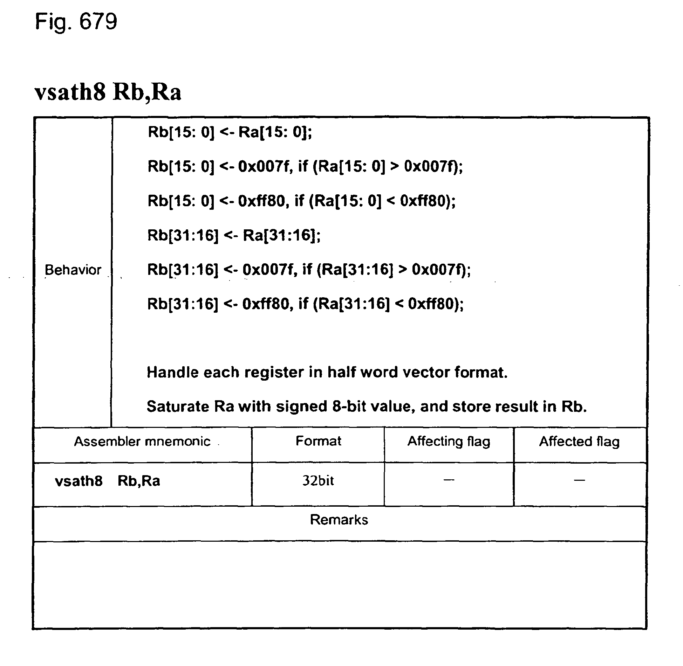

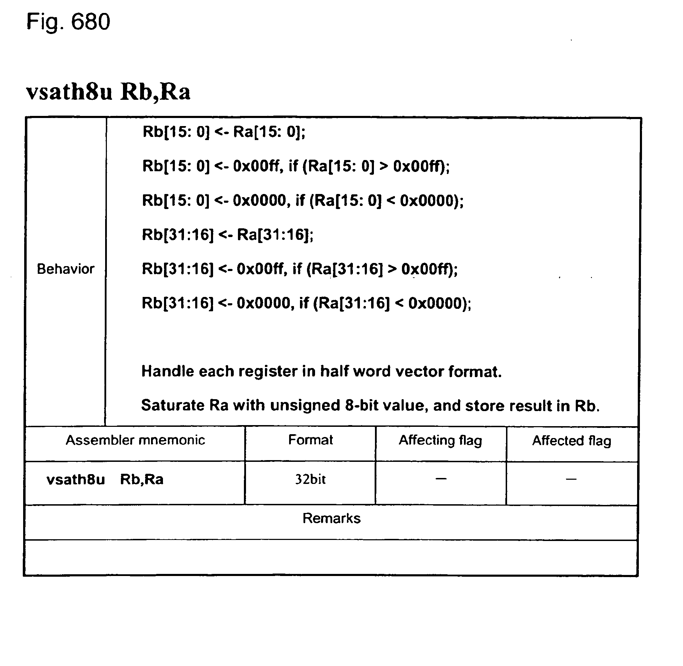

Figs.676~680 are diagrams explaining instructions relating to "SIMD saturation".

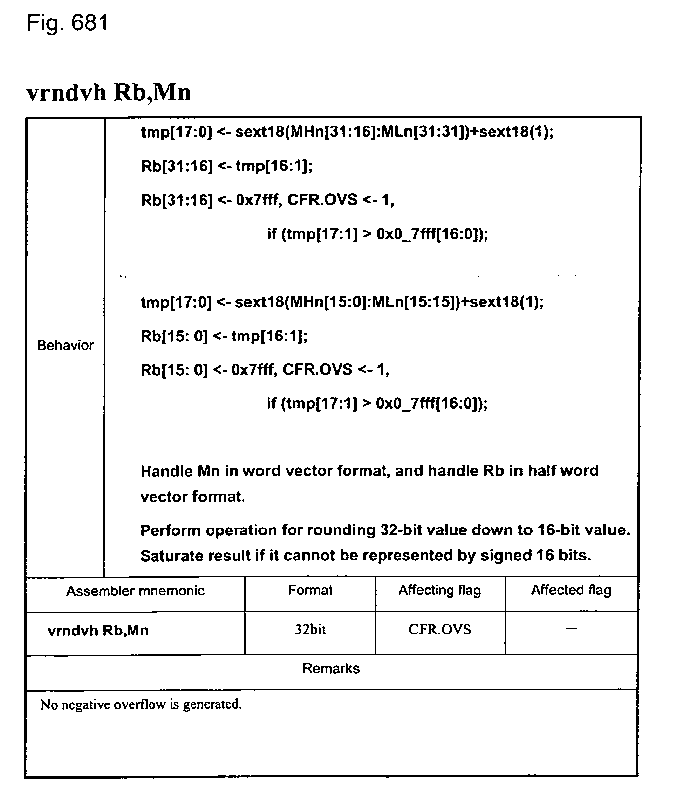

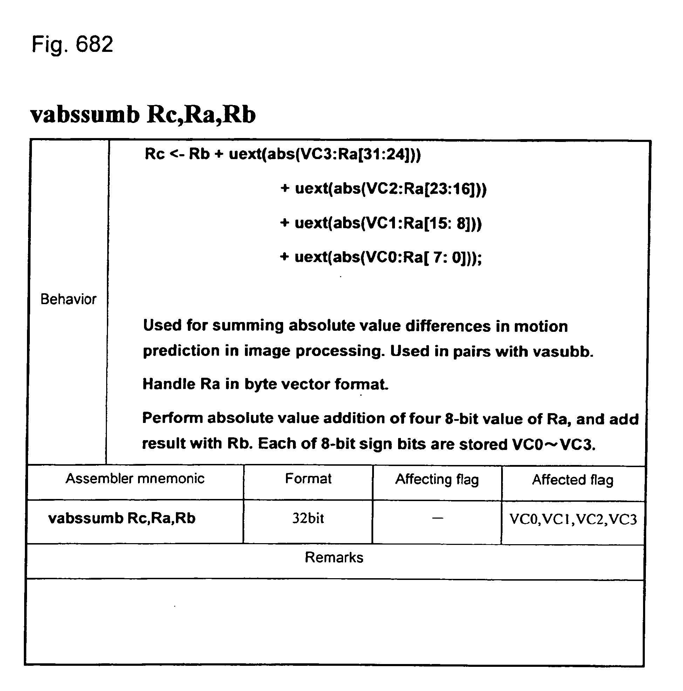

Figs.681~682 are diagrams explaining instructions relating to "SIMD etc".

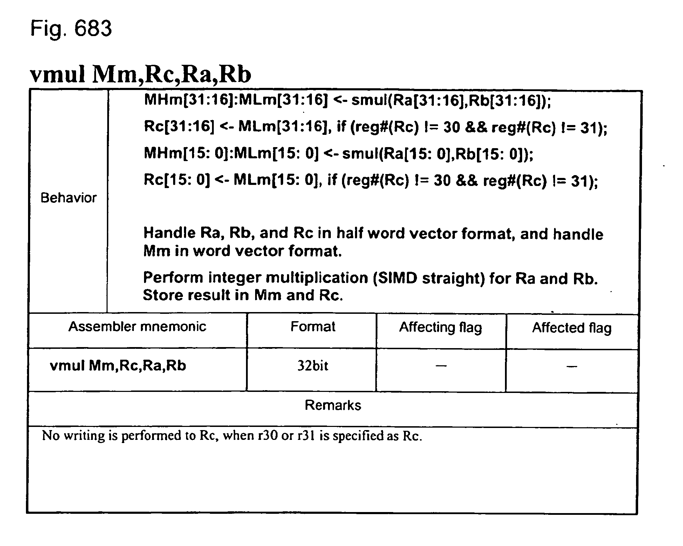

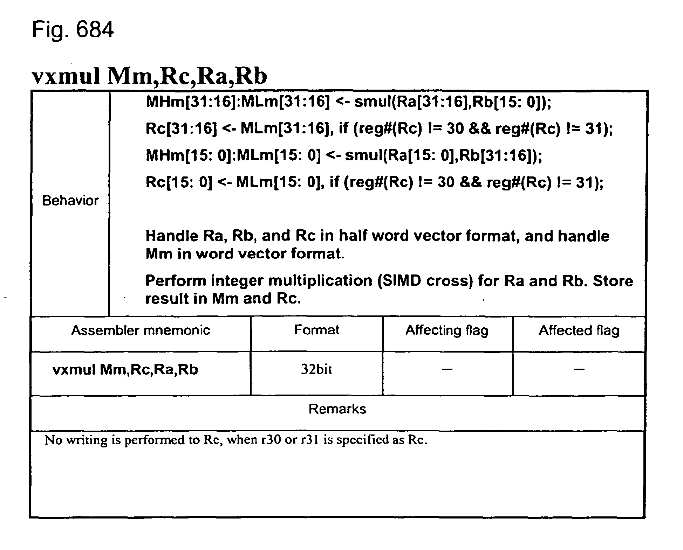

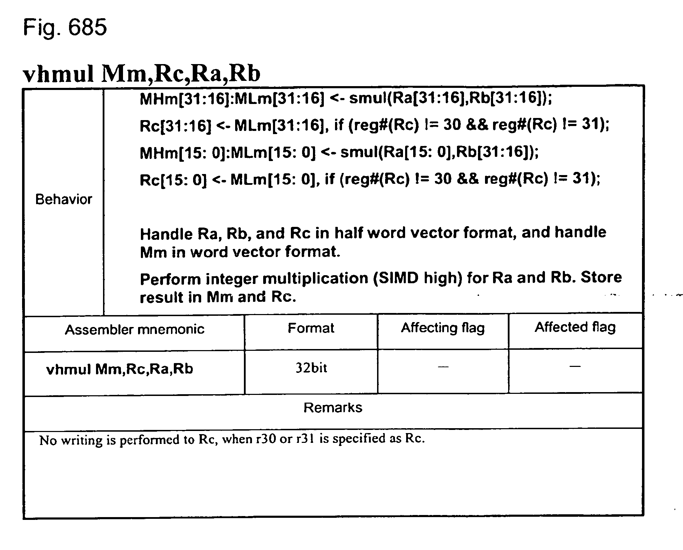

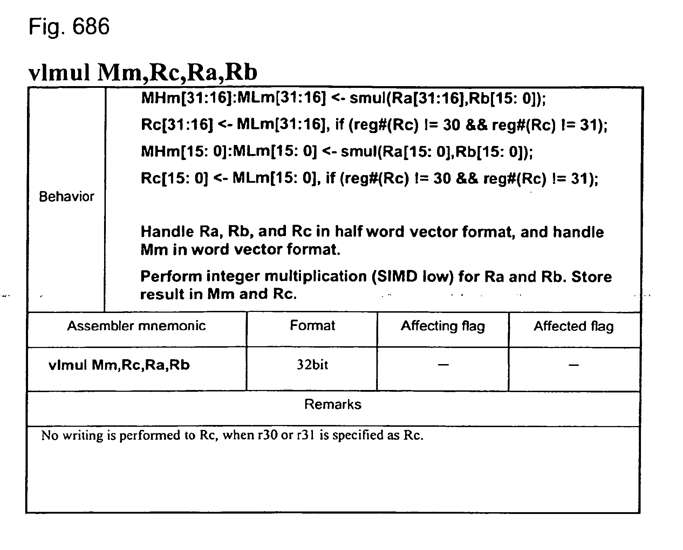

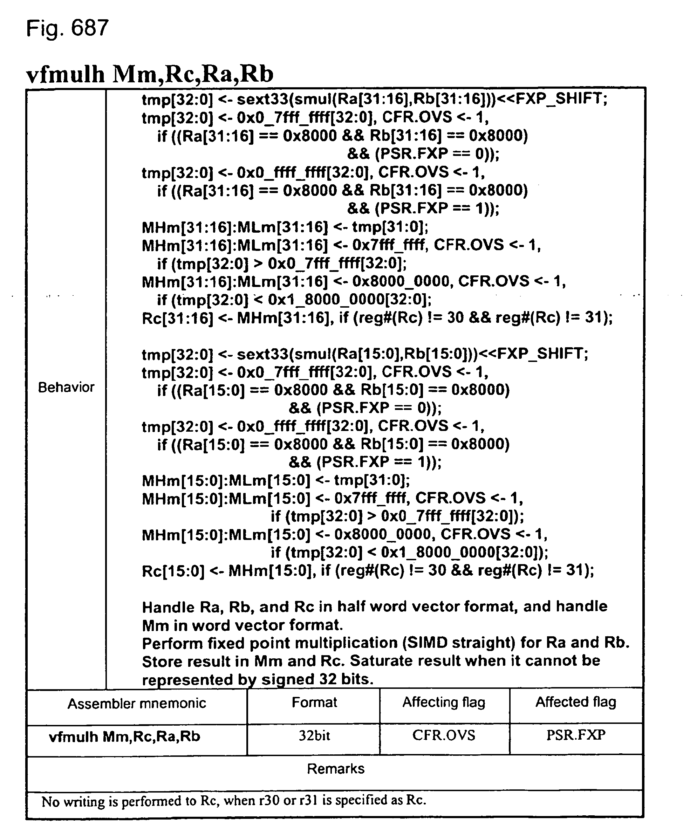

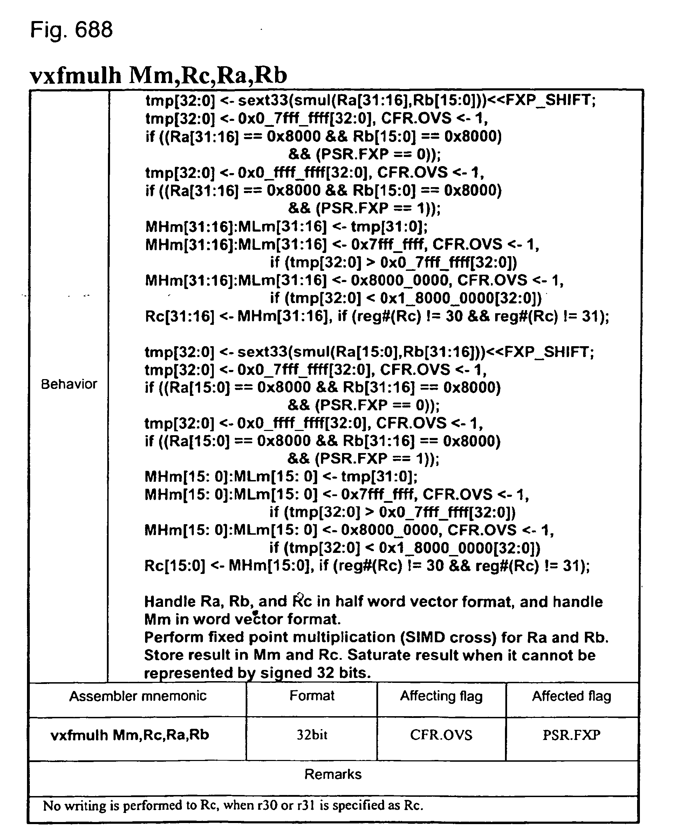

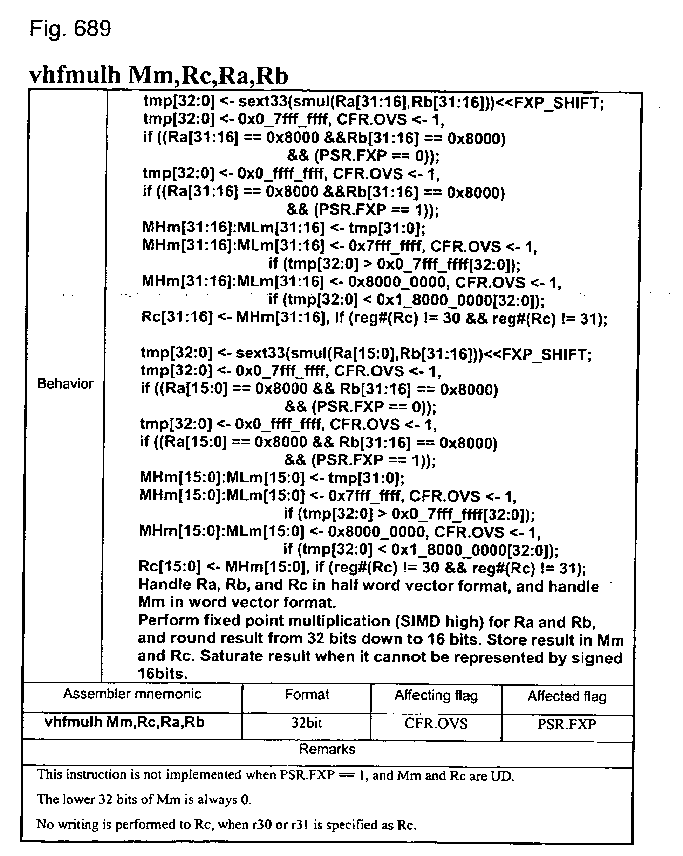

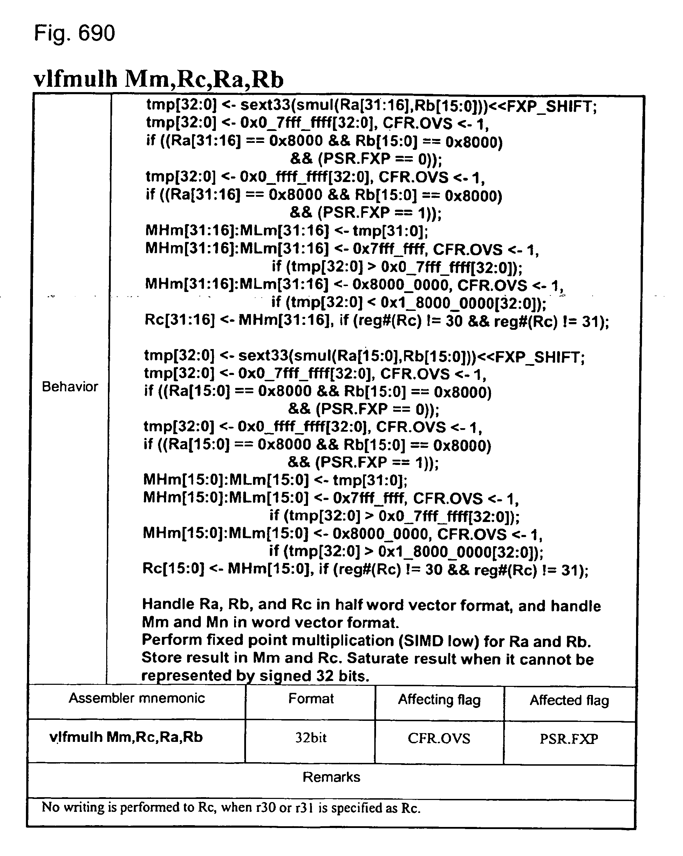

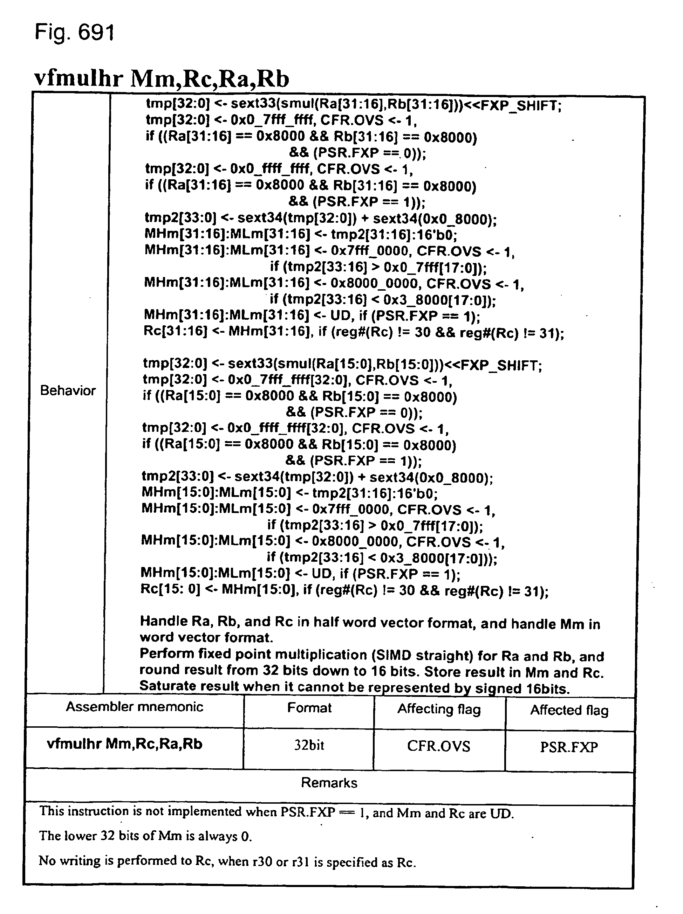

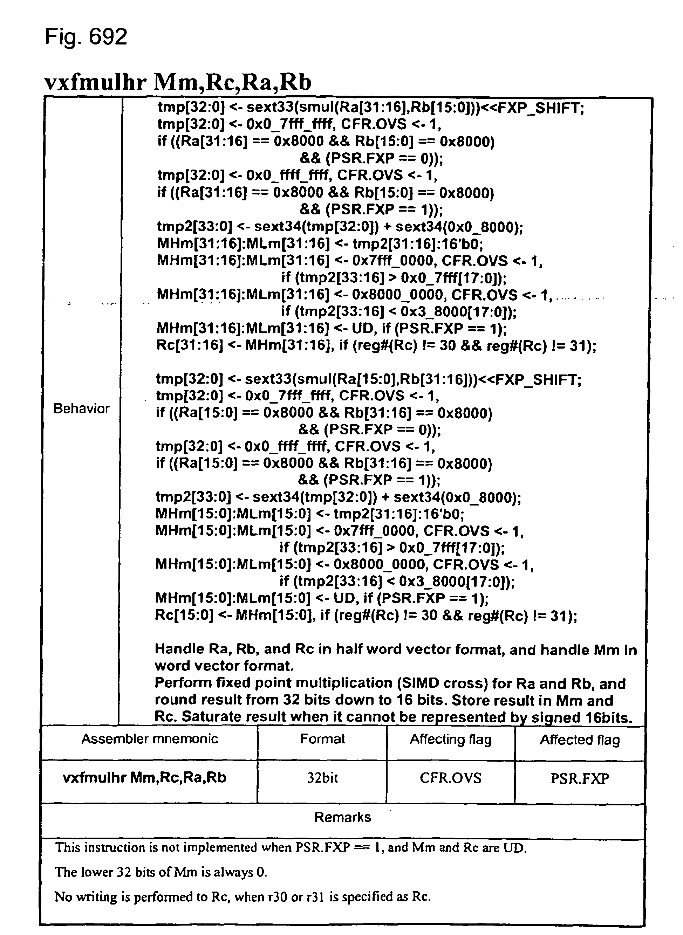

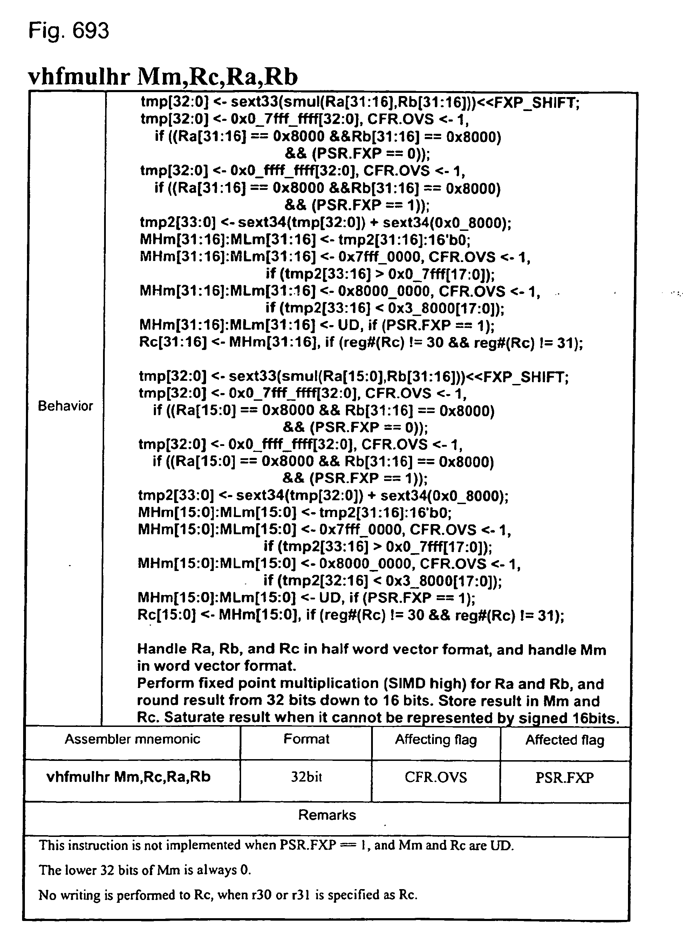

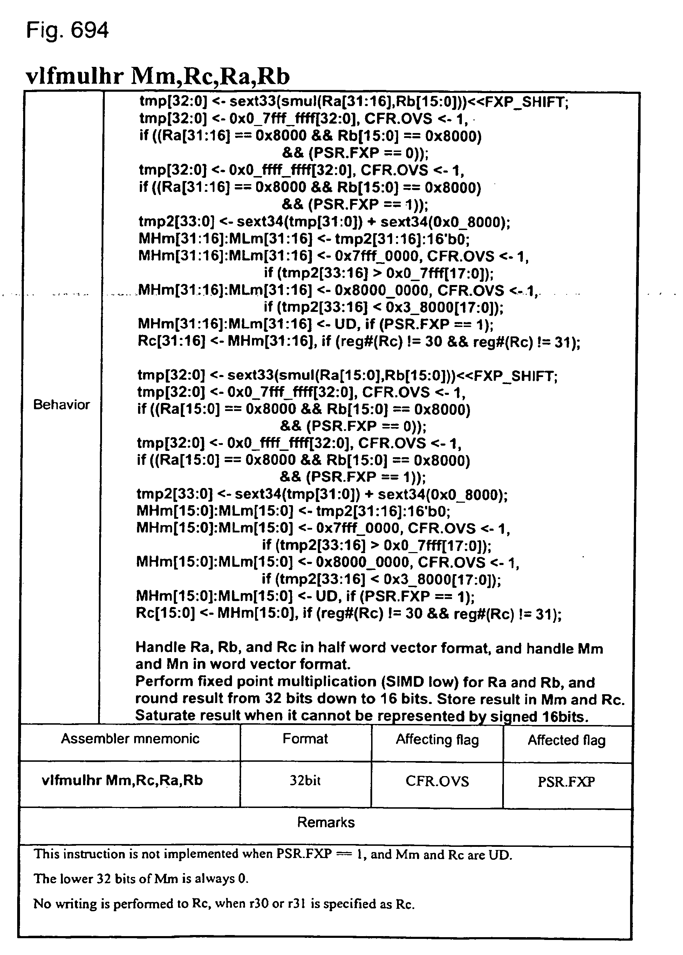

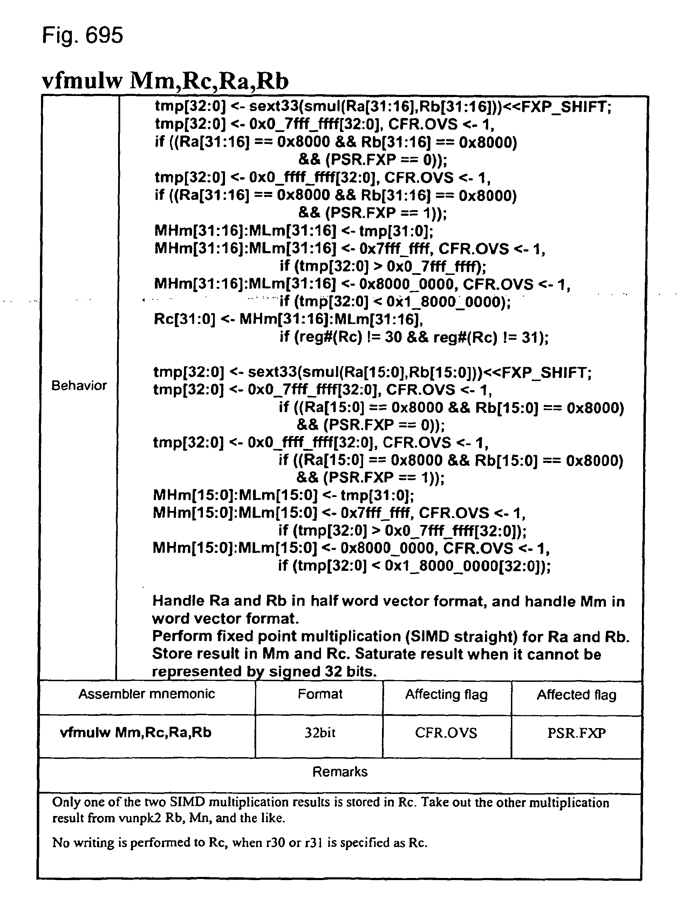

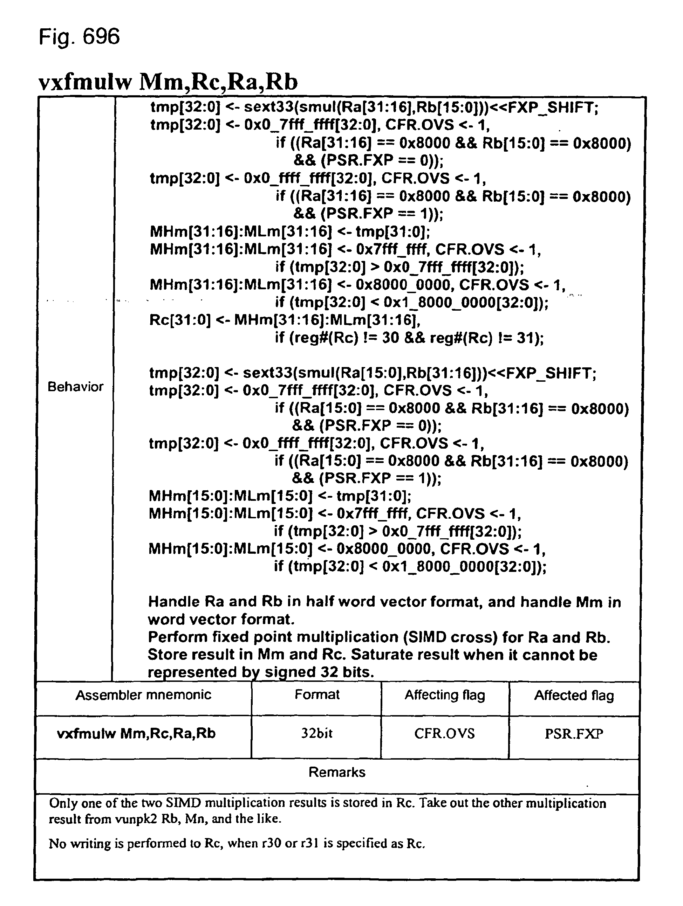

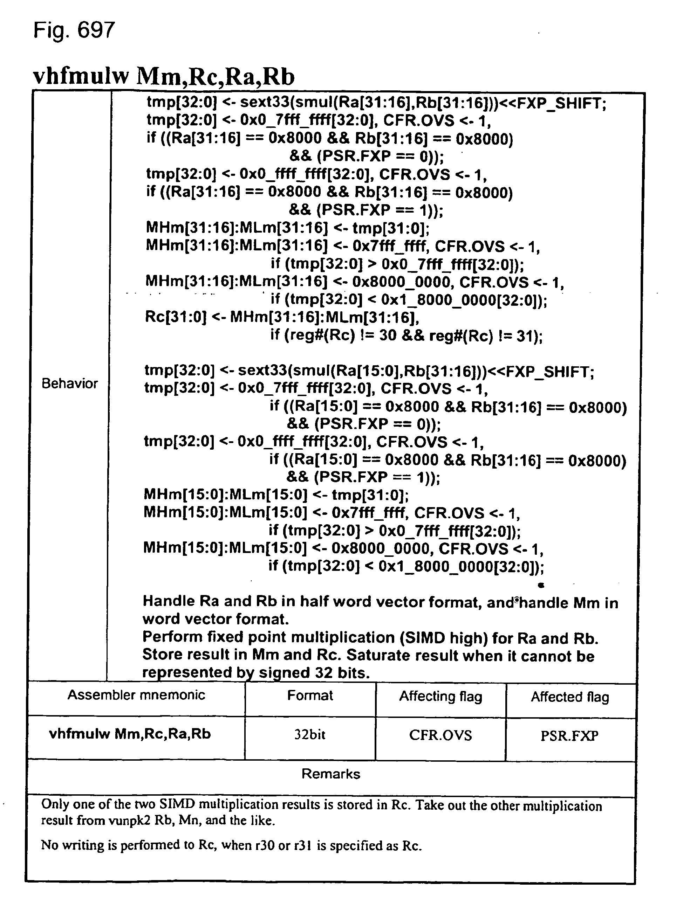

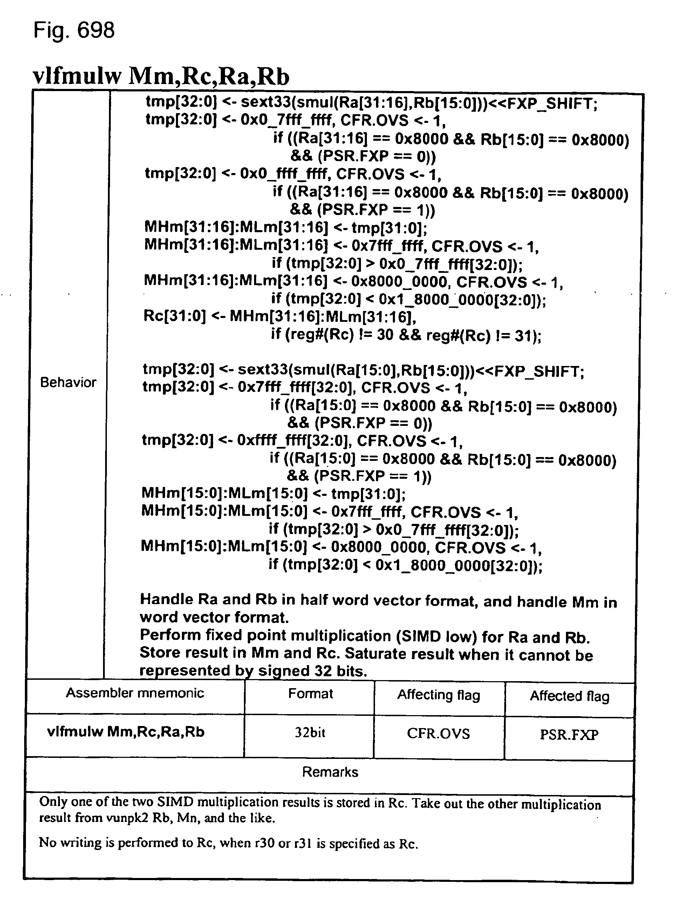

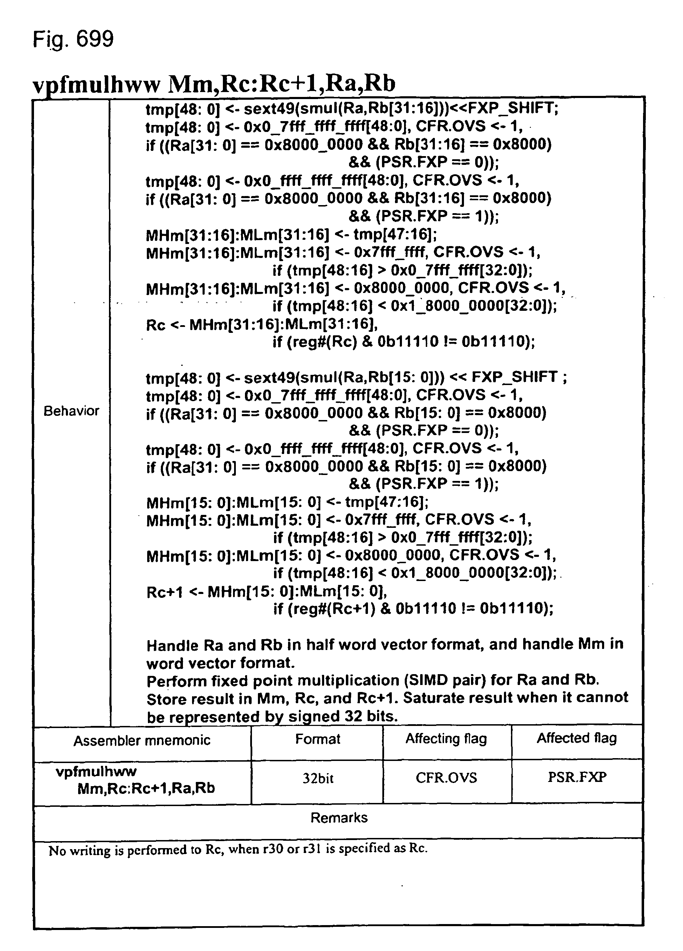

Figs.683~699 are diagrams explaining instructions relating to "SIMD mul (X2)".

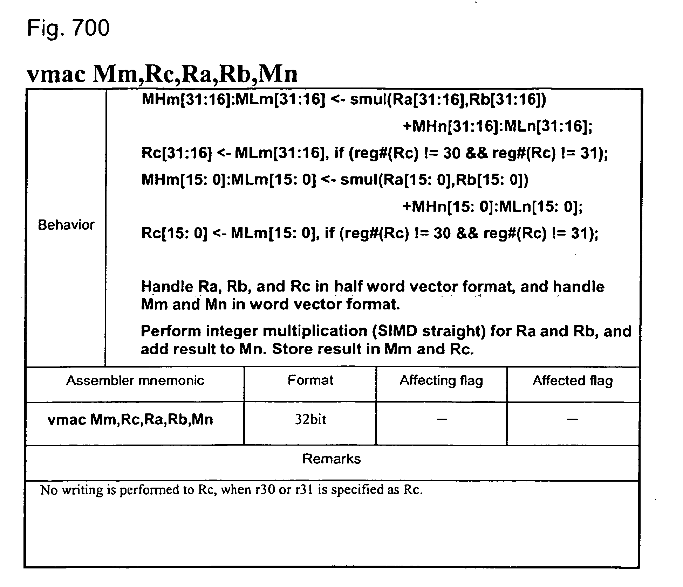

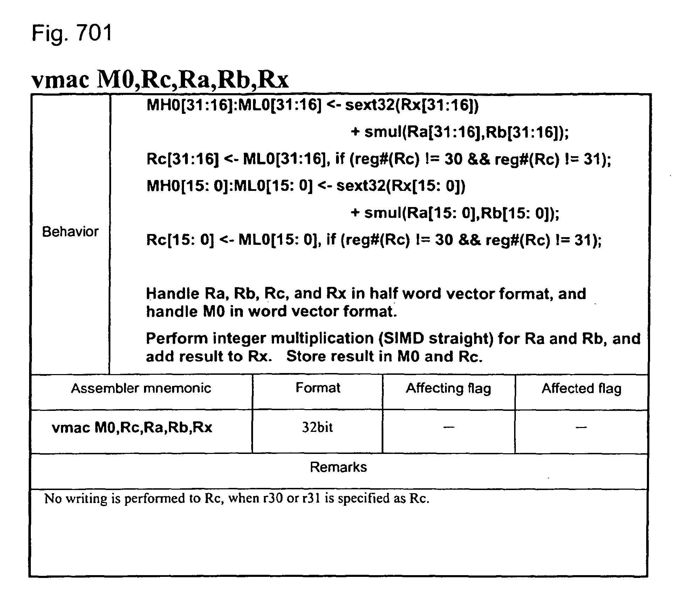

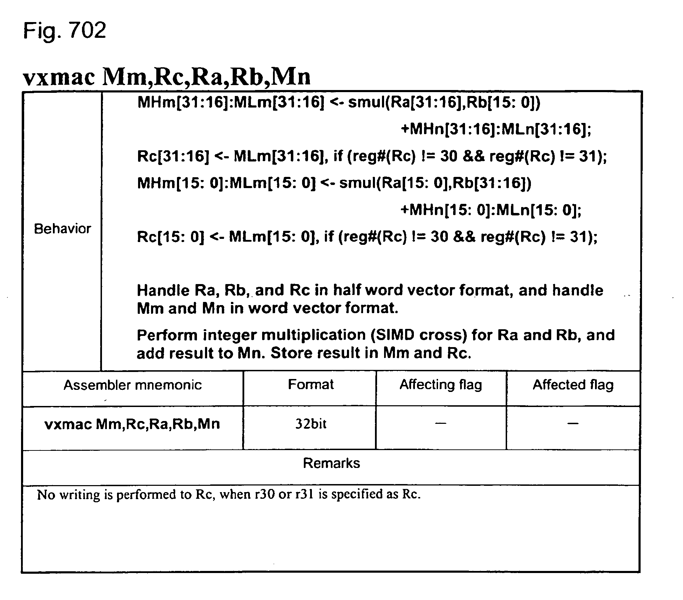

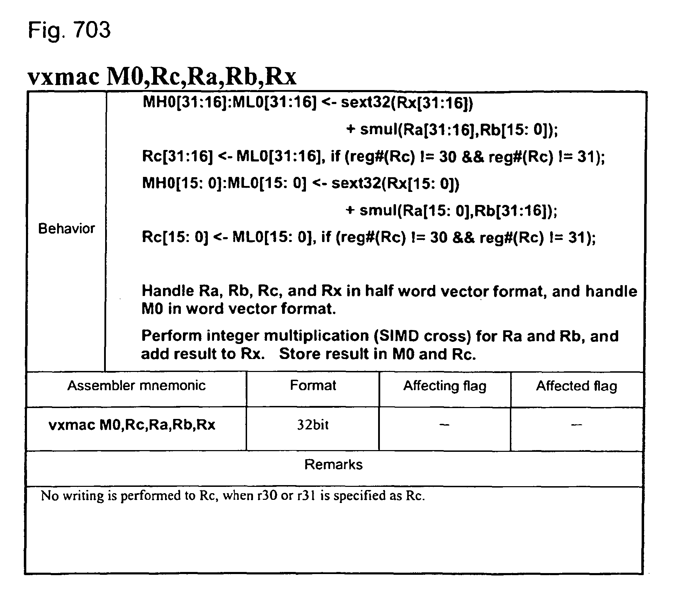

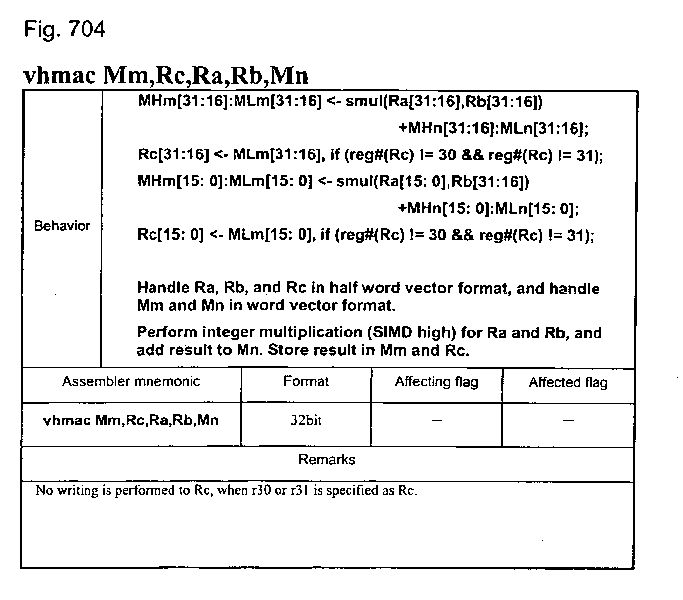

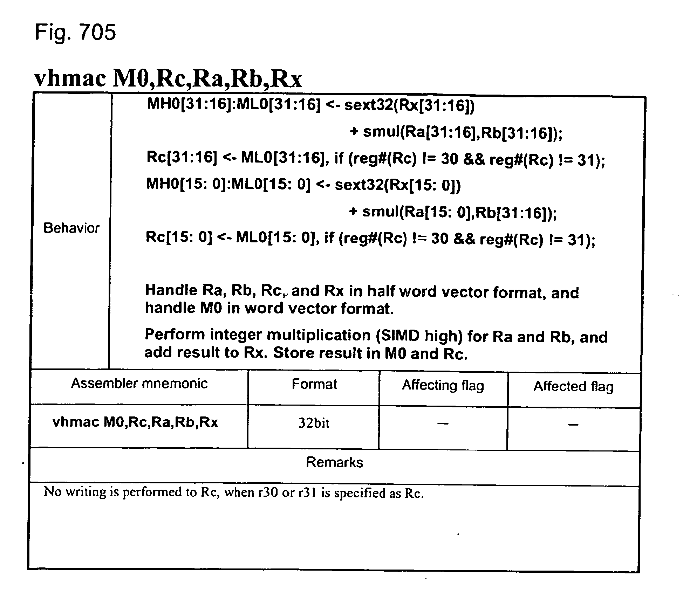

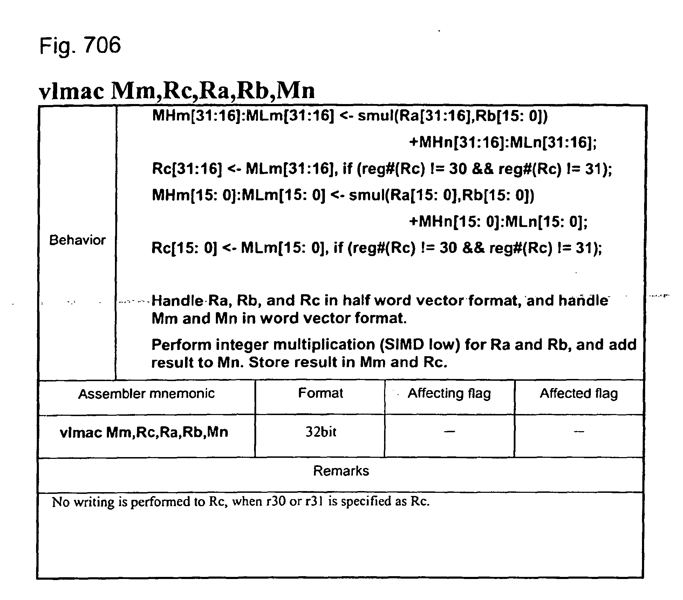

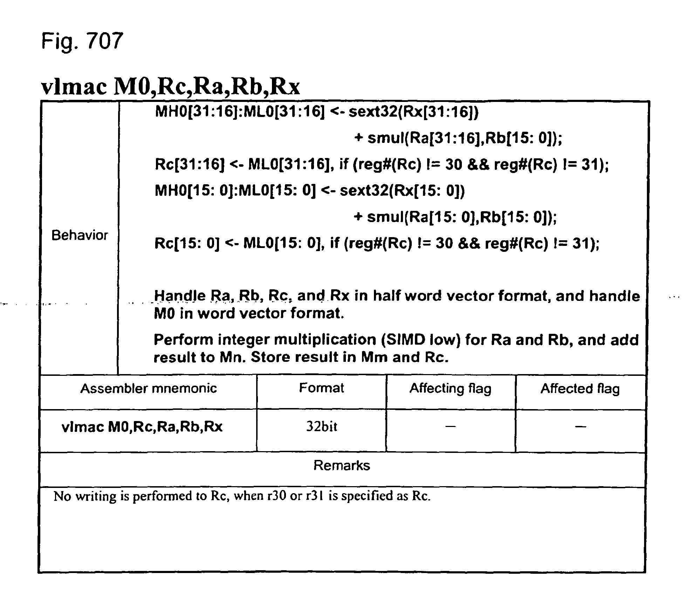

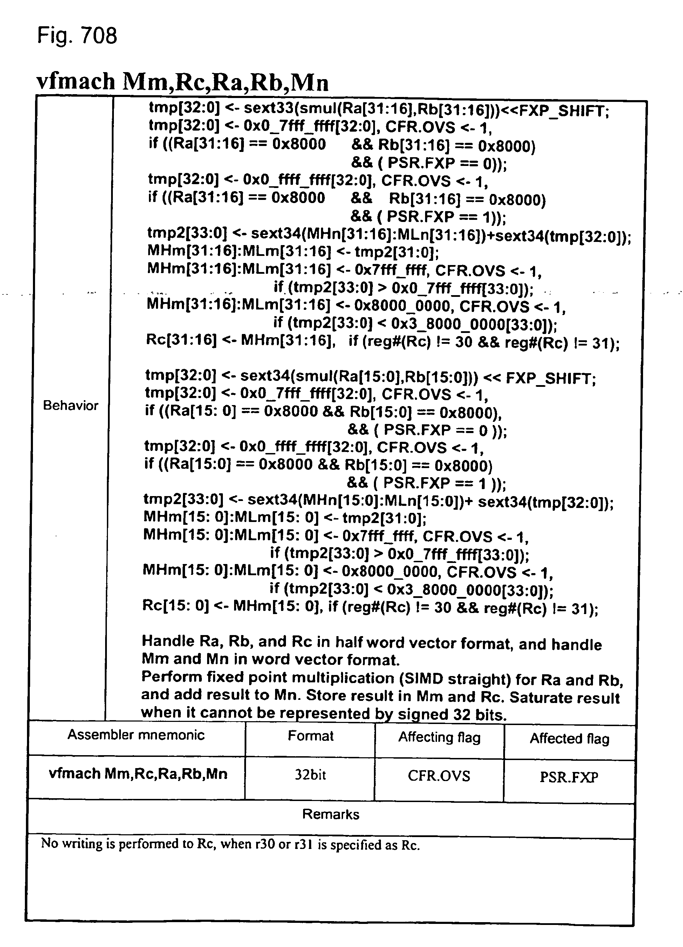

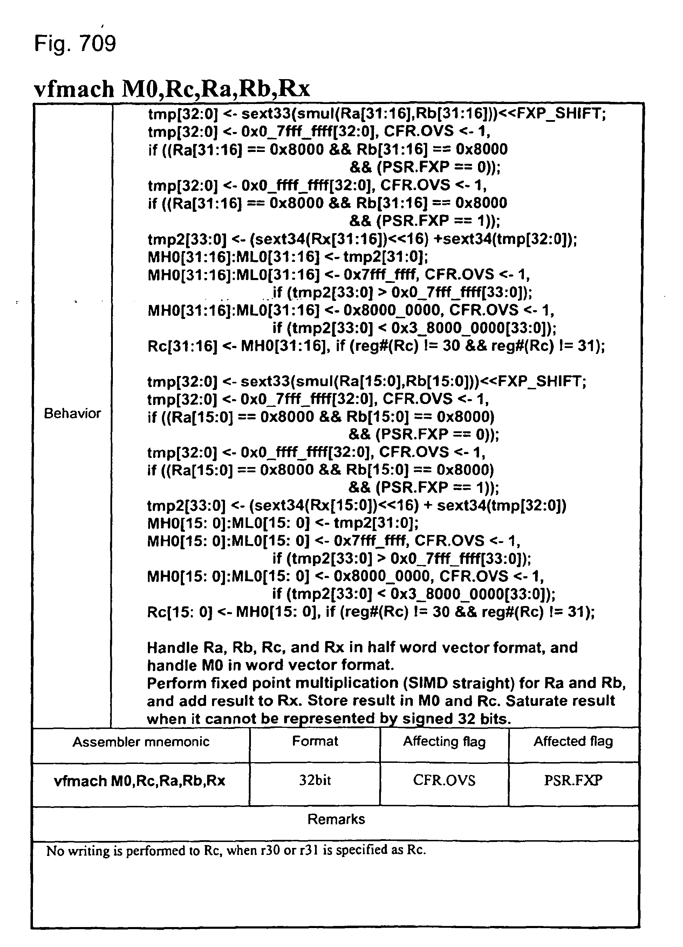

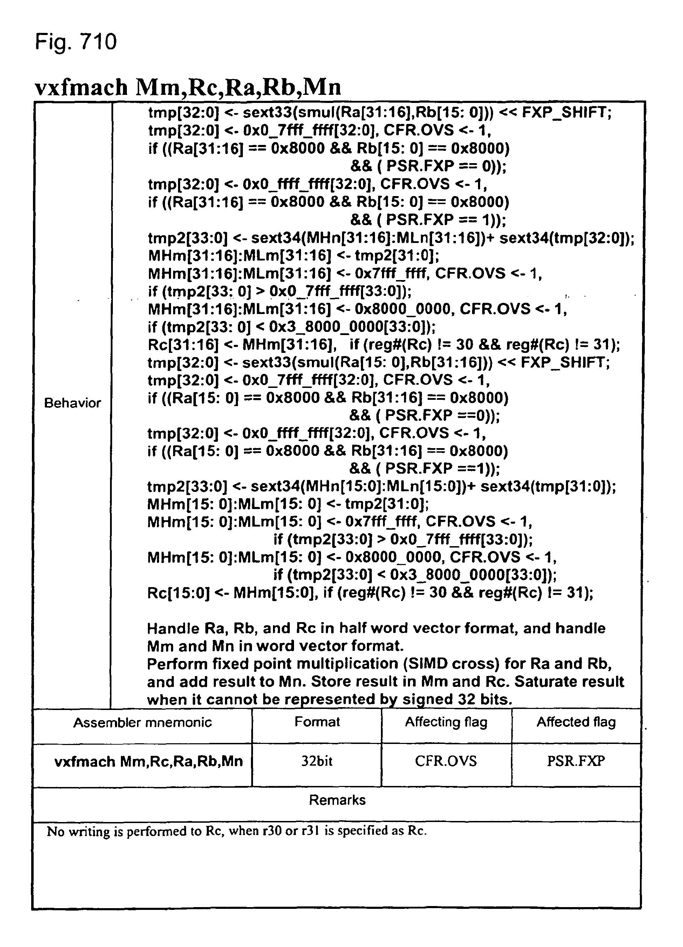

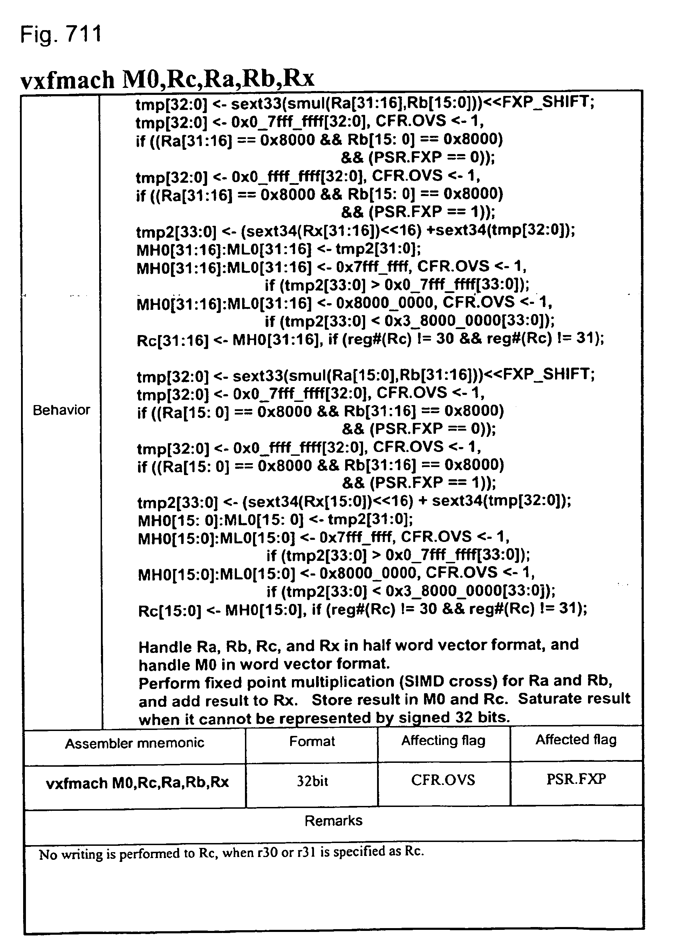

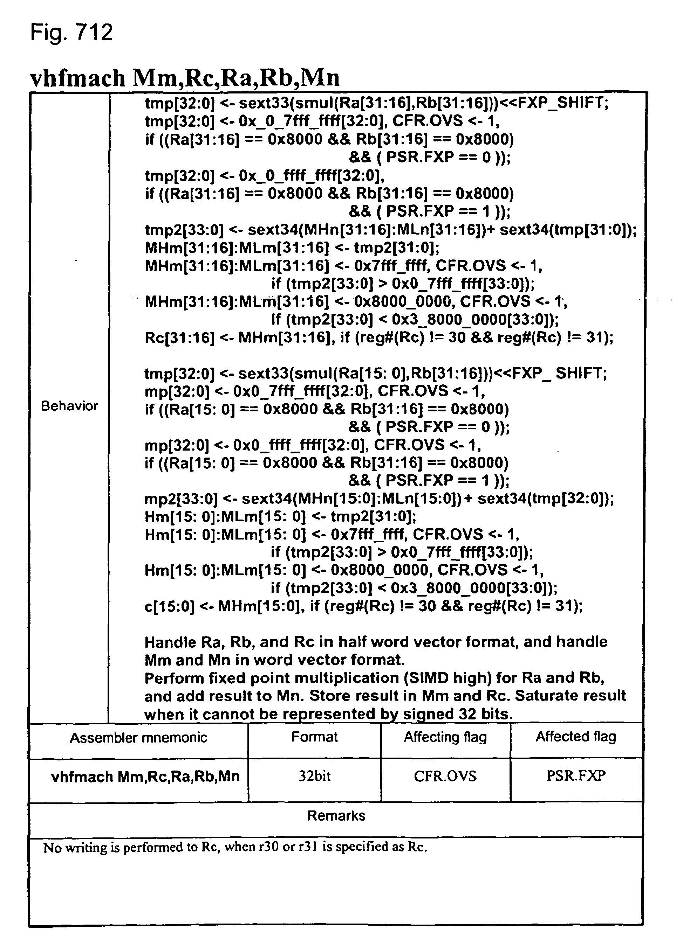

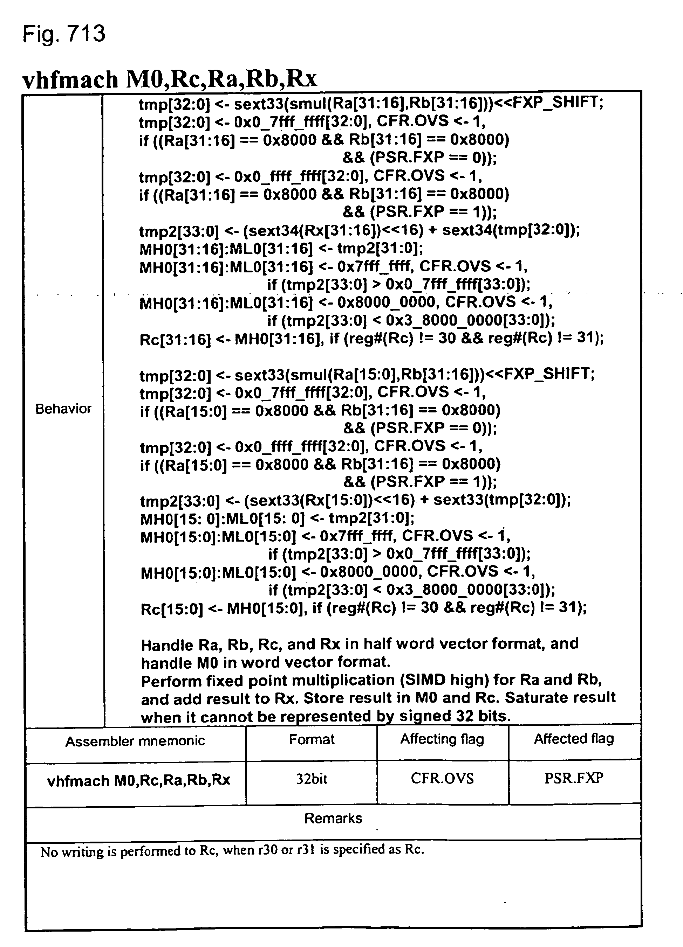

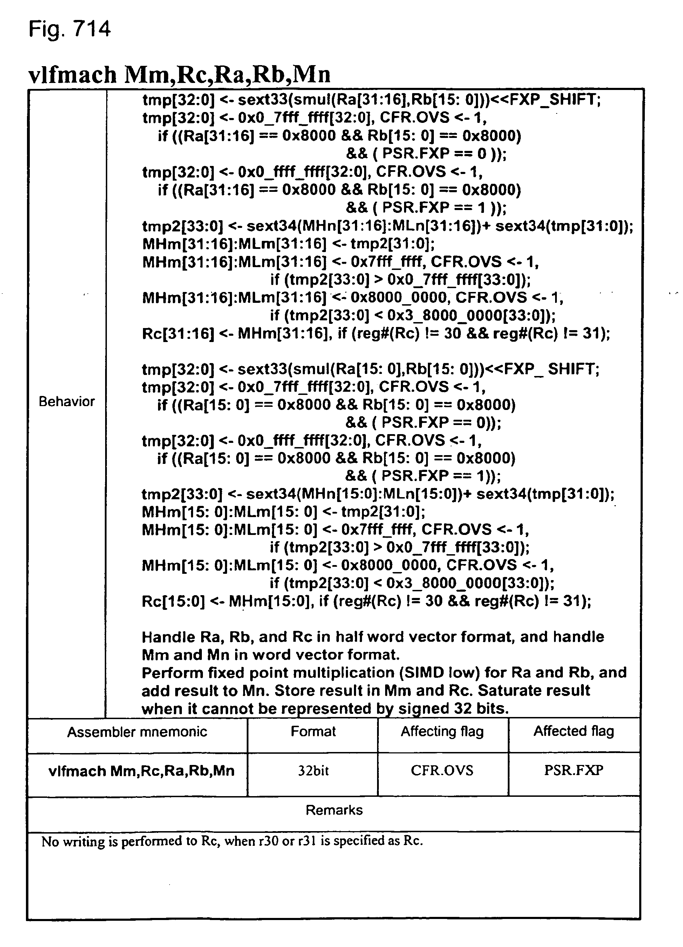

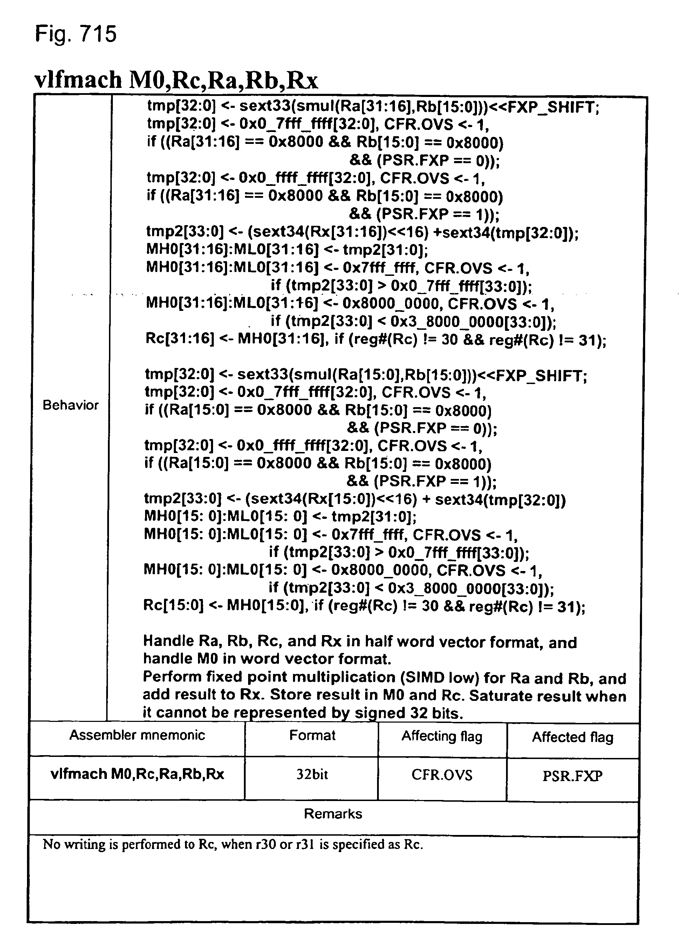

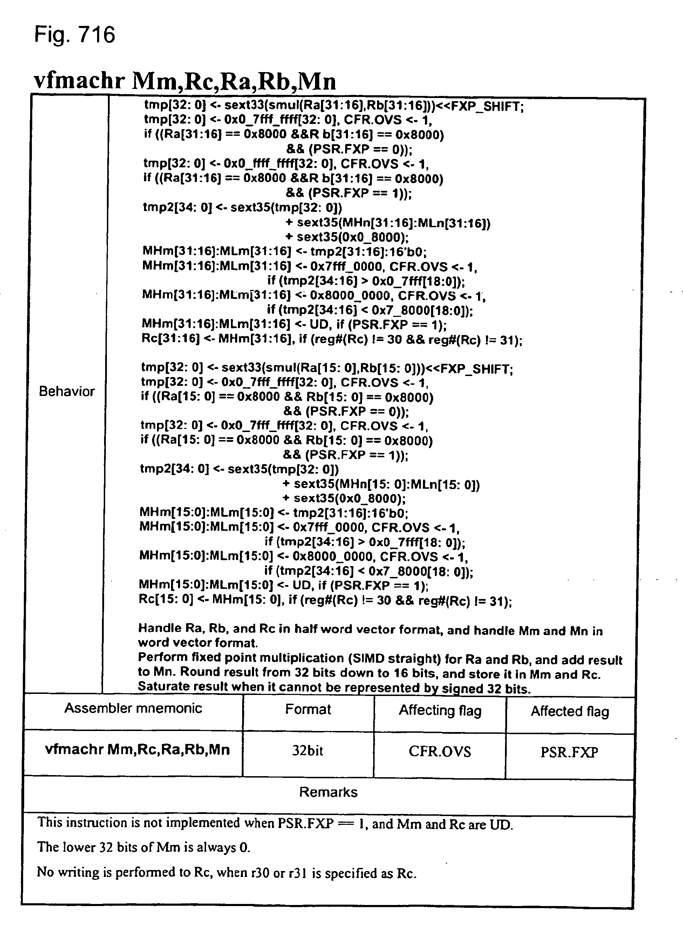

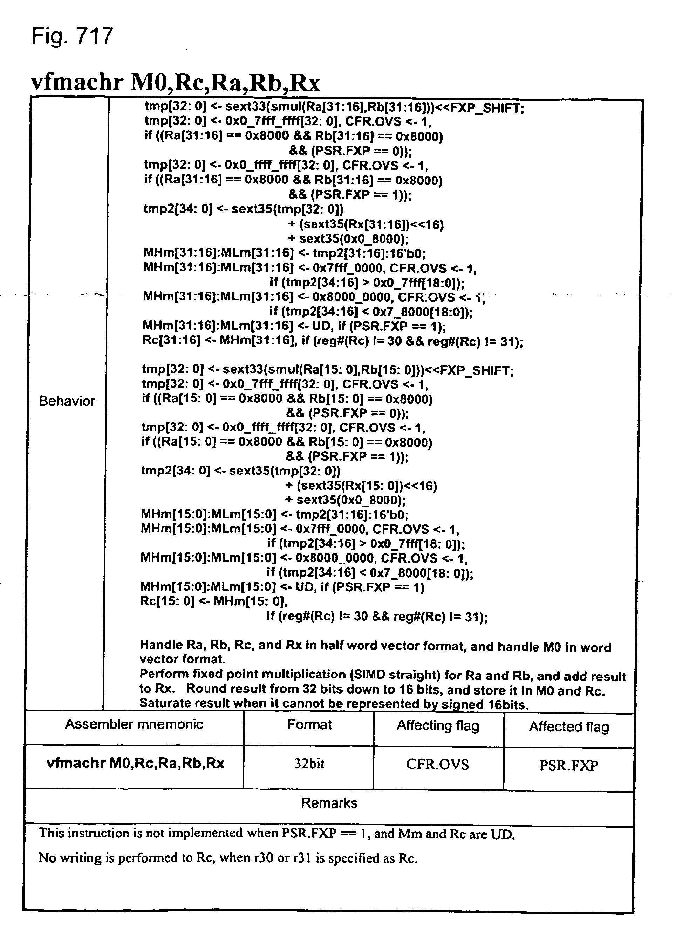

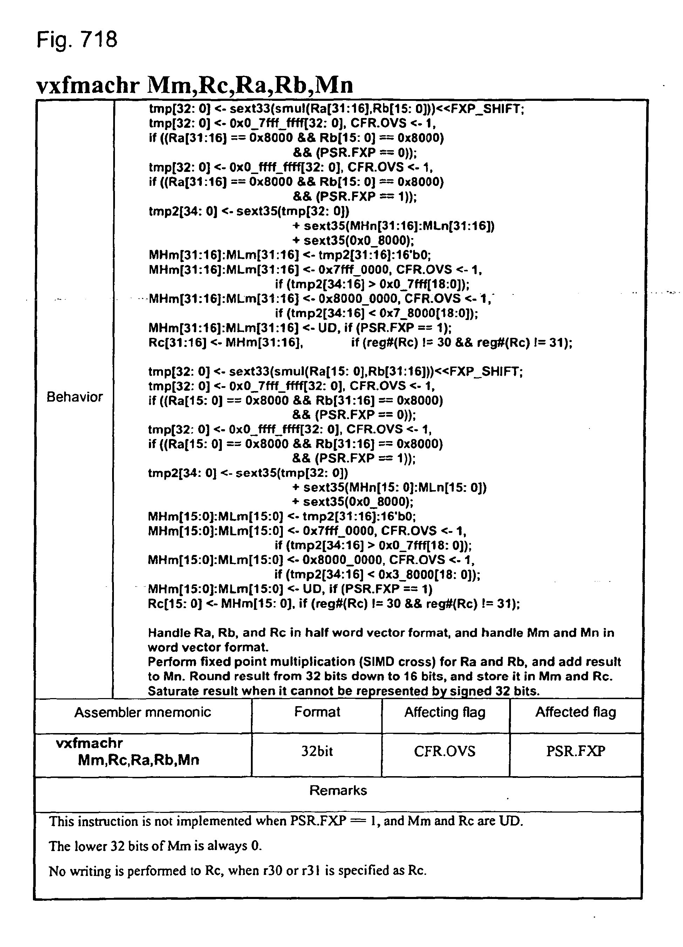

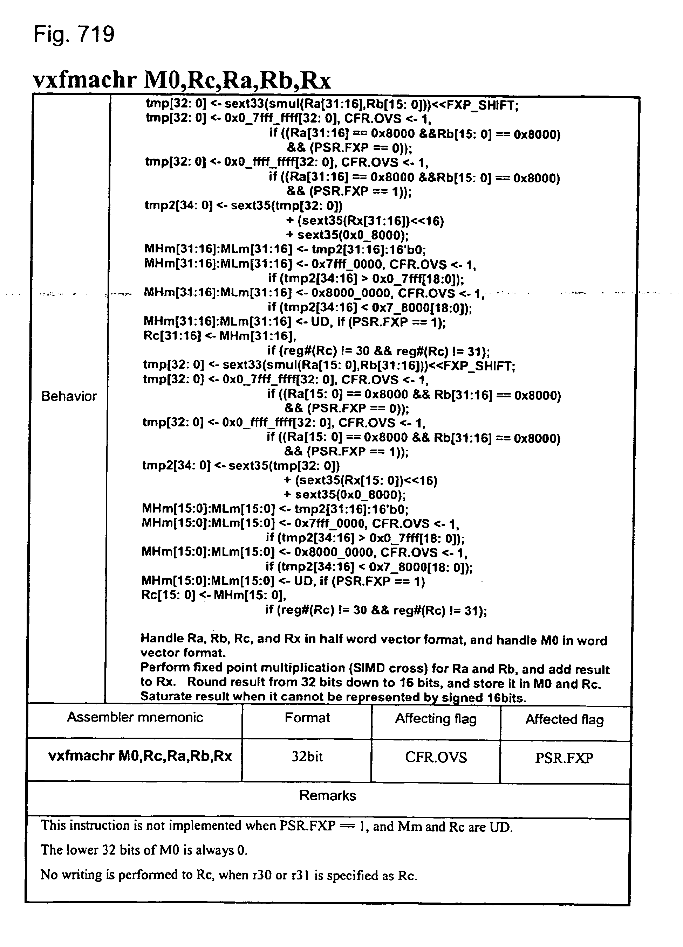

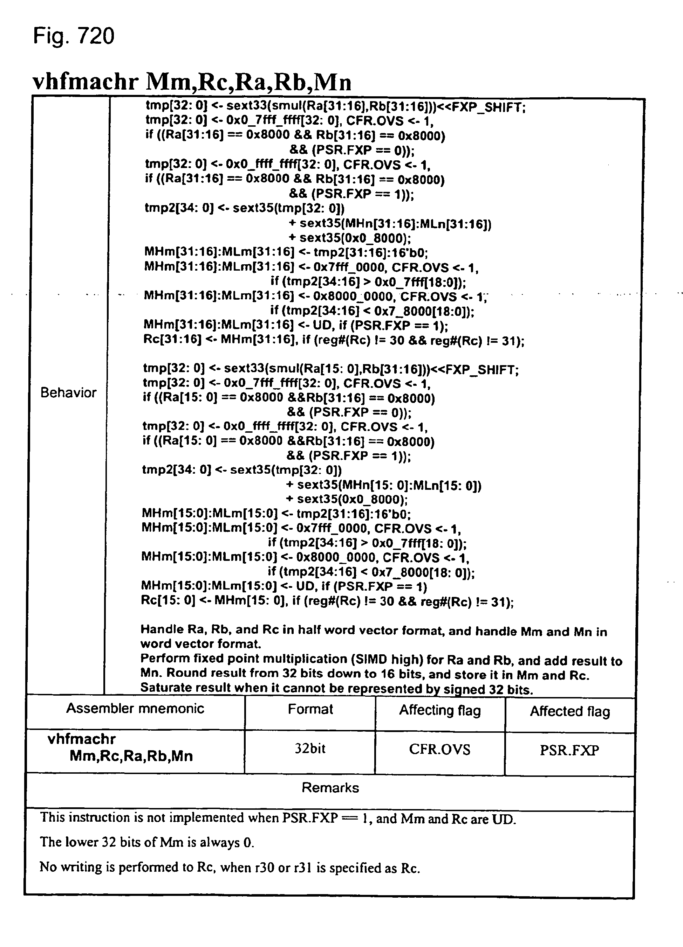

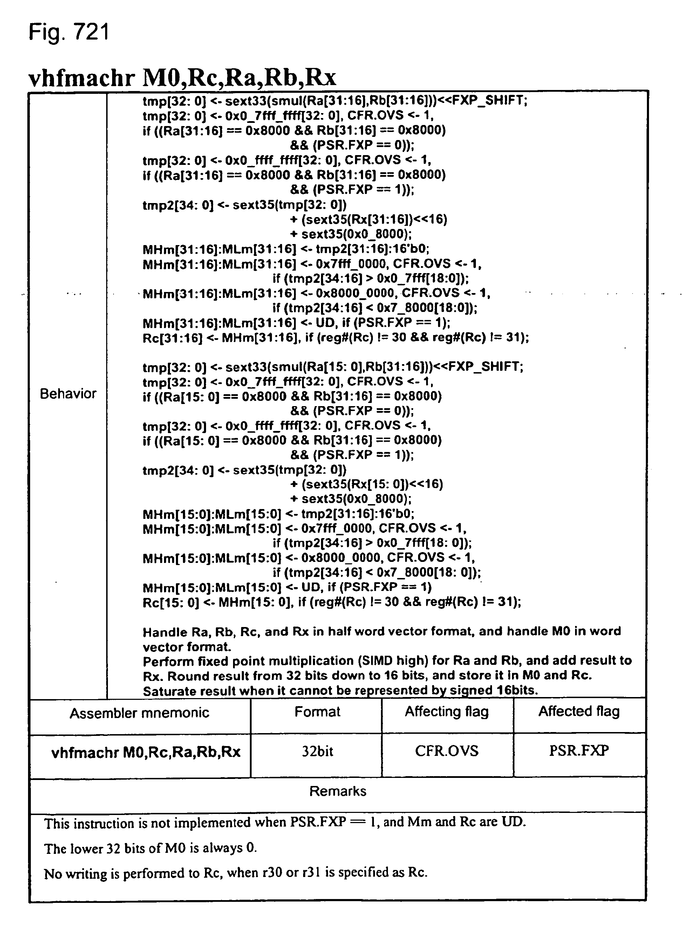

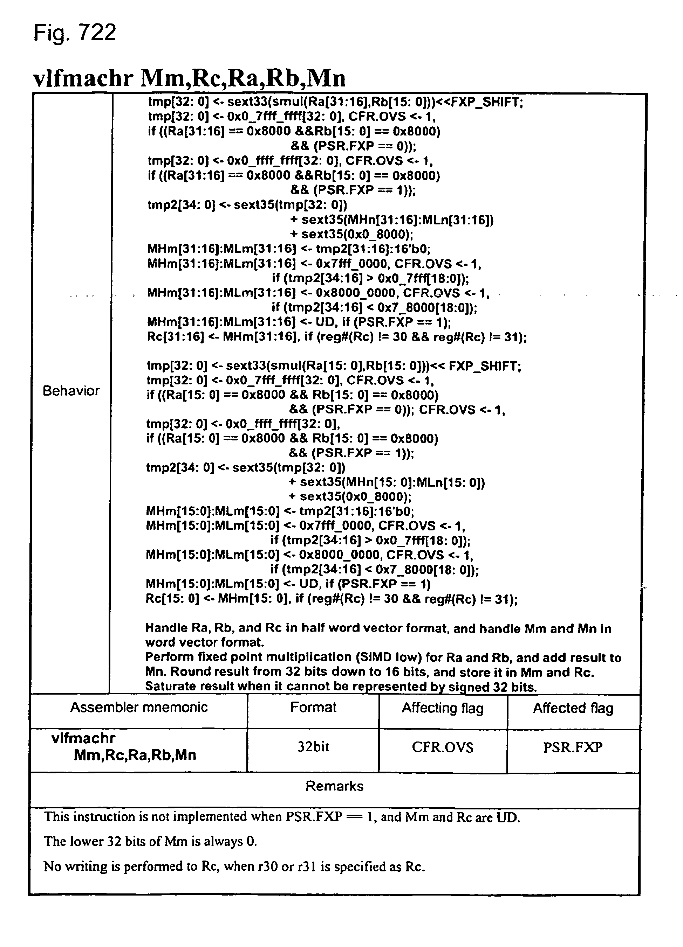

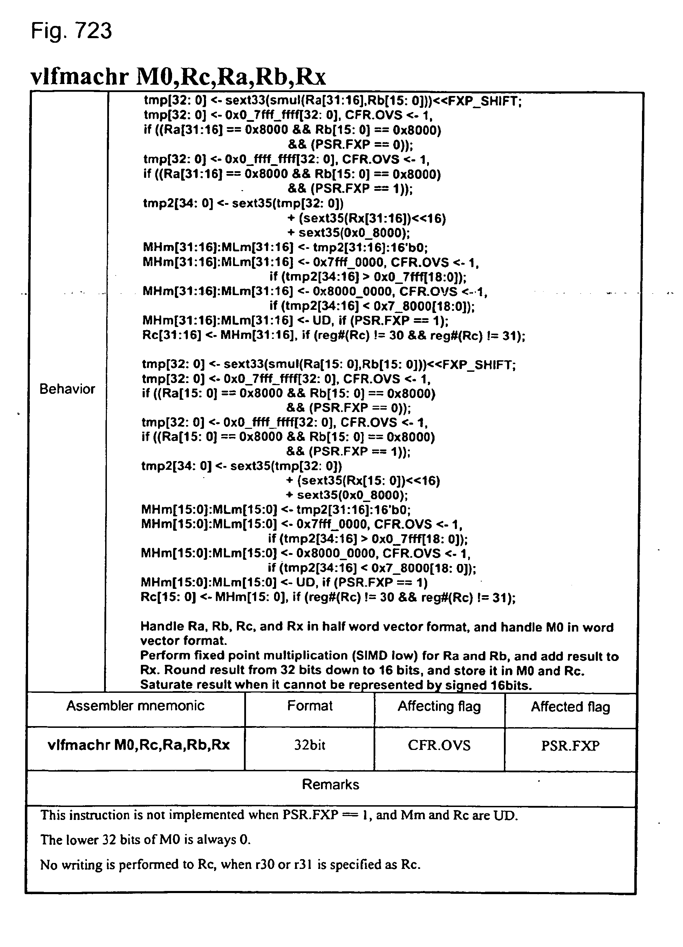

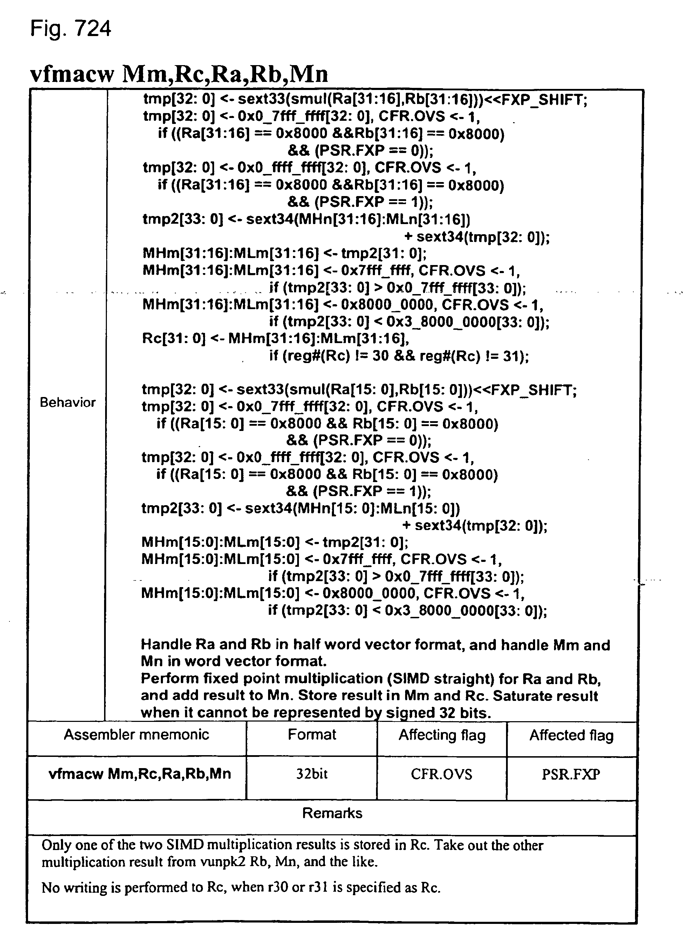

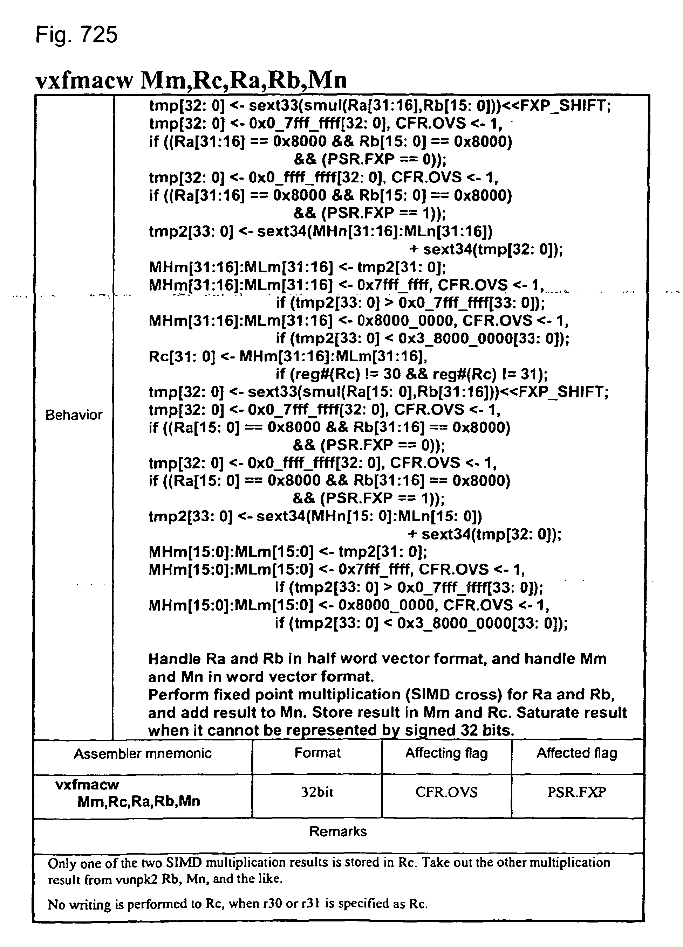

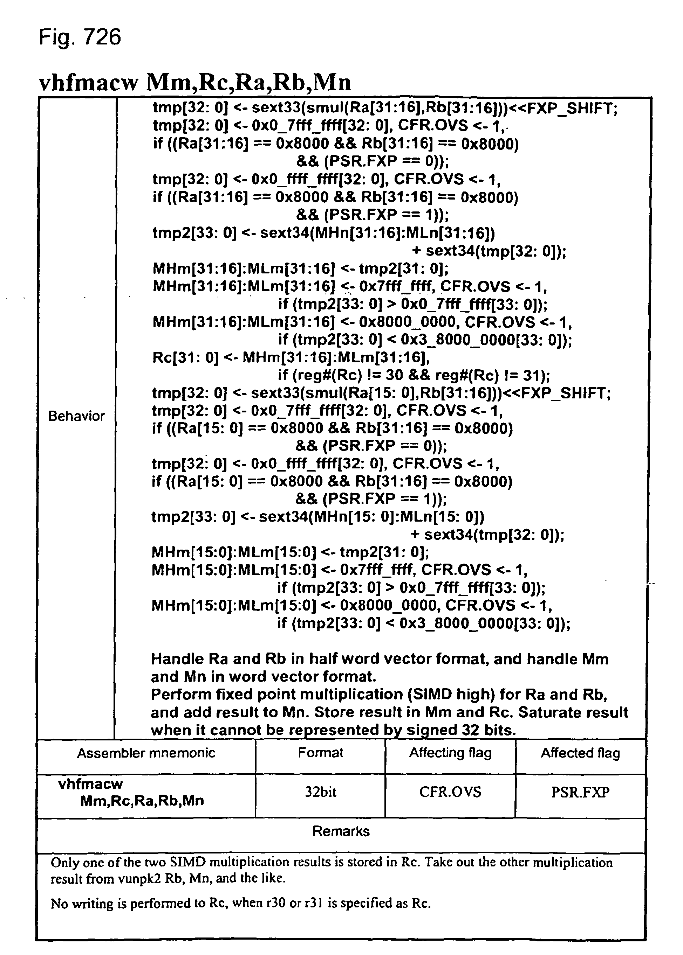

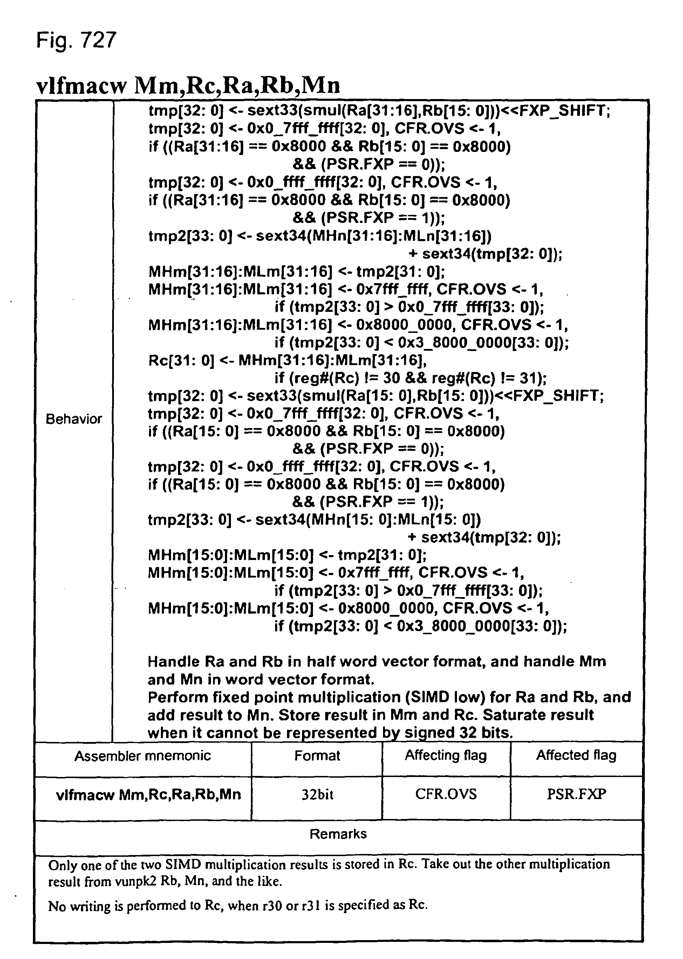

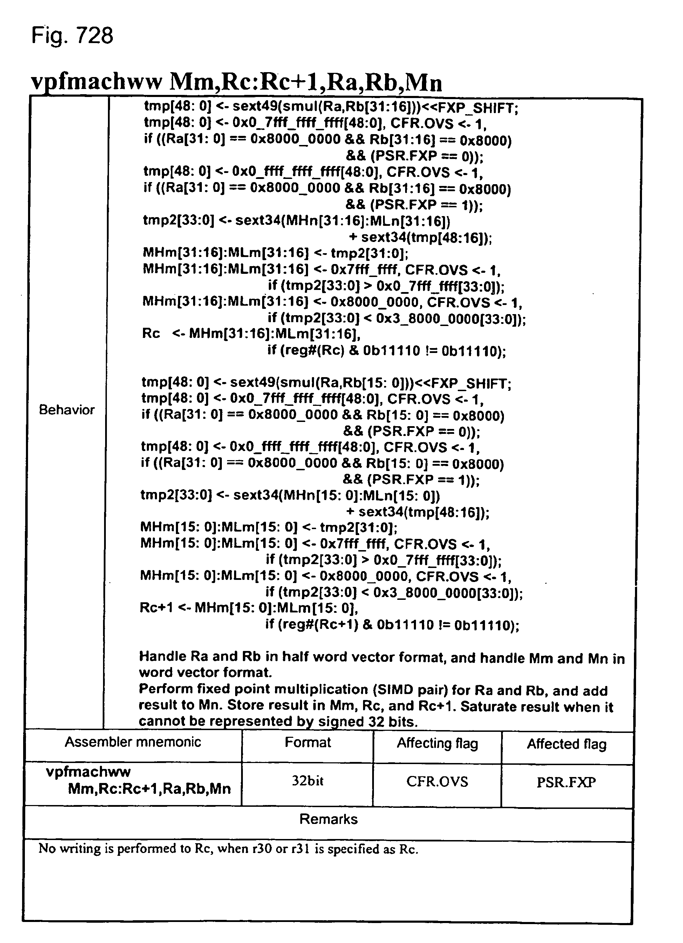

Figs.700~728 are diagrams explaining instructions relating to "SIMD mac (X2)".

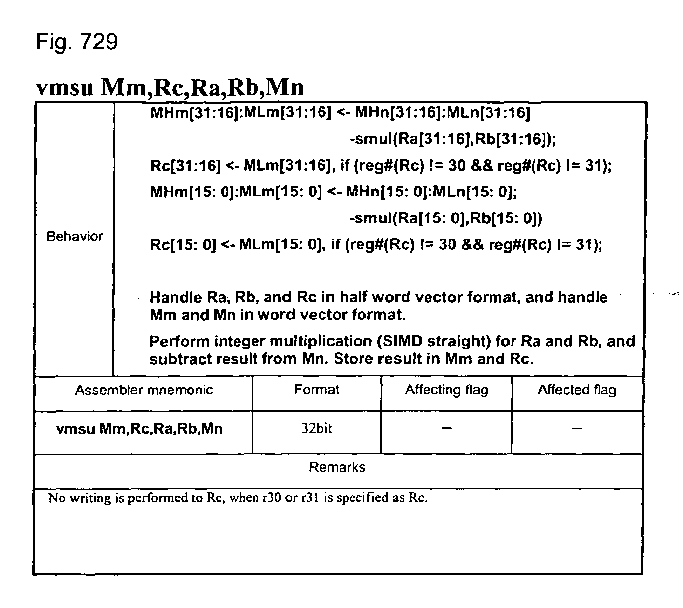

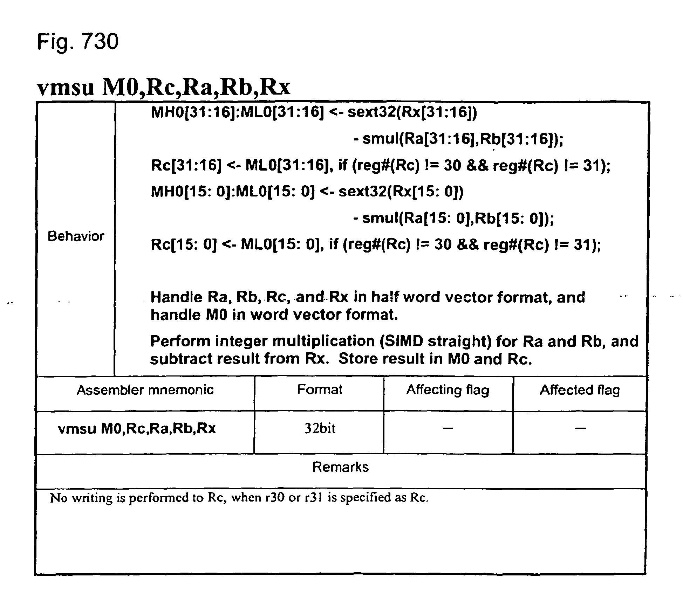

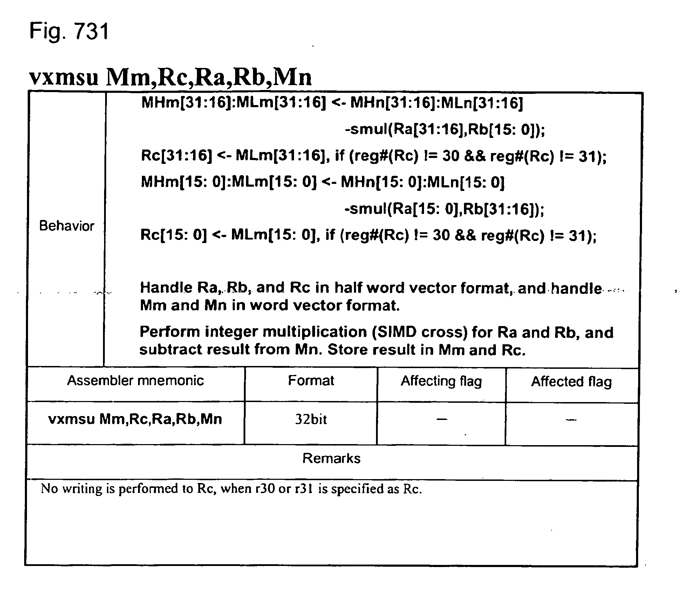

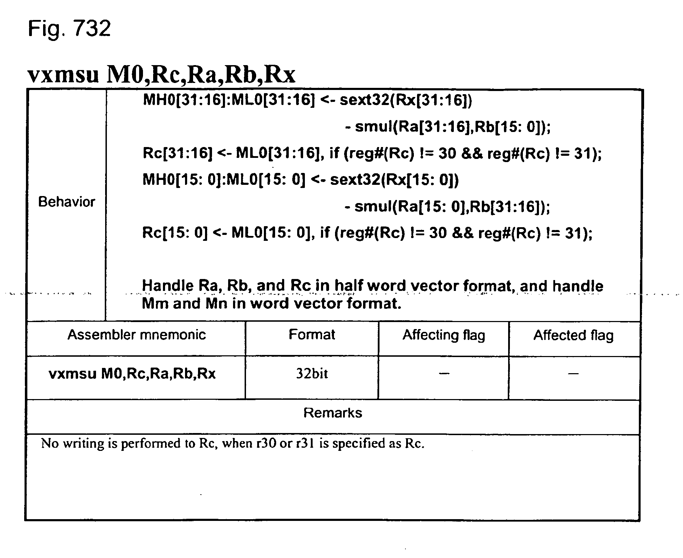

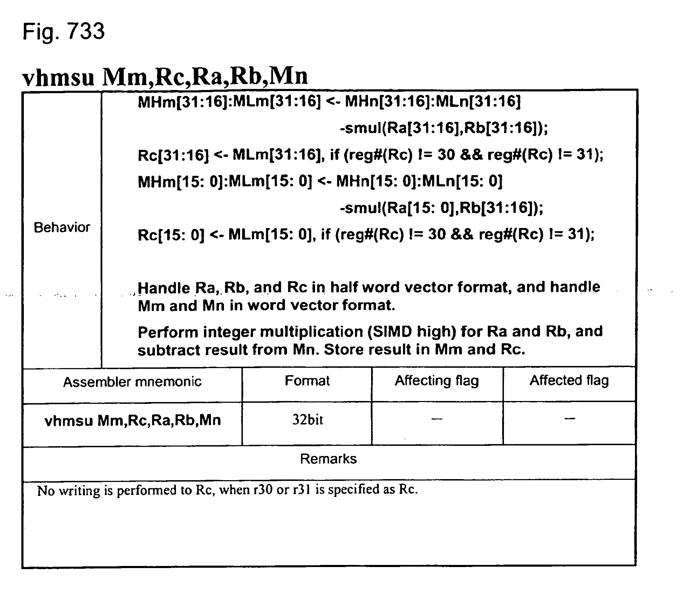

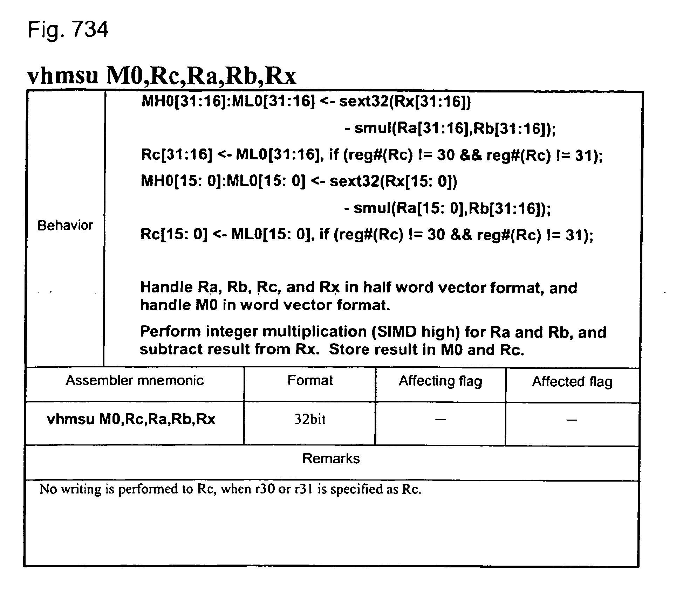

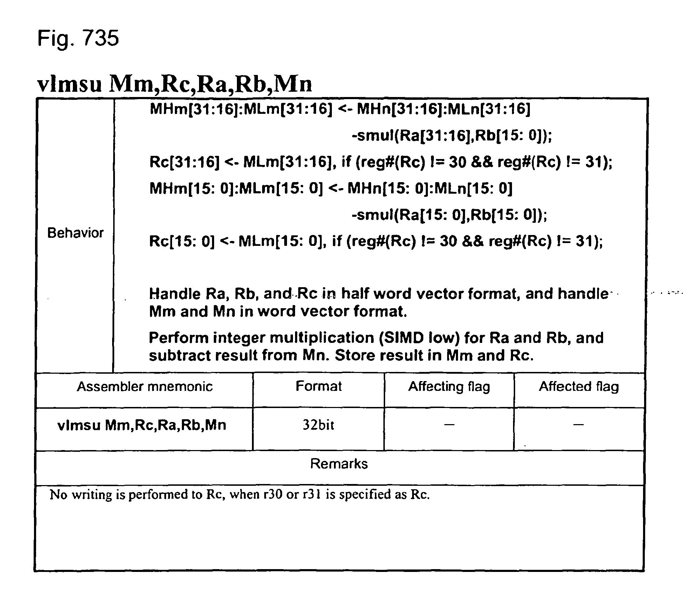

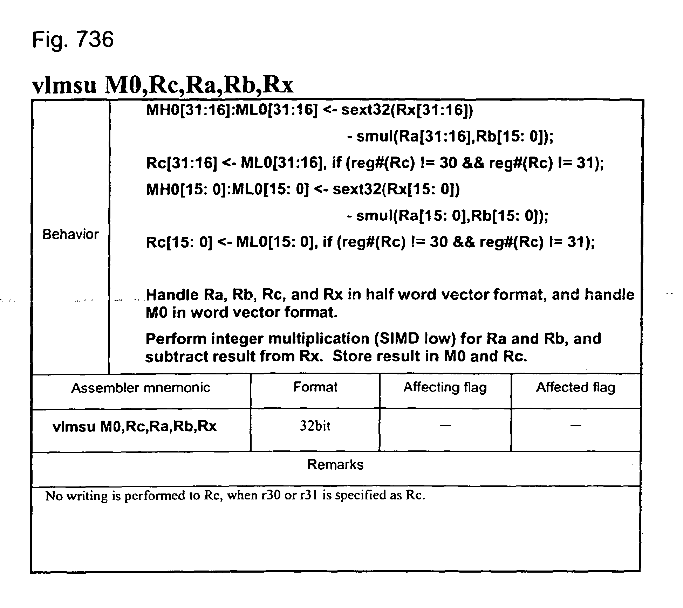

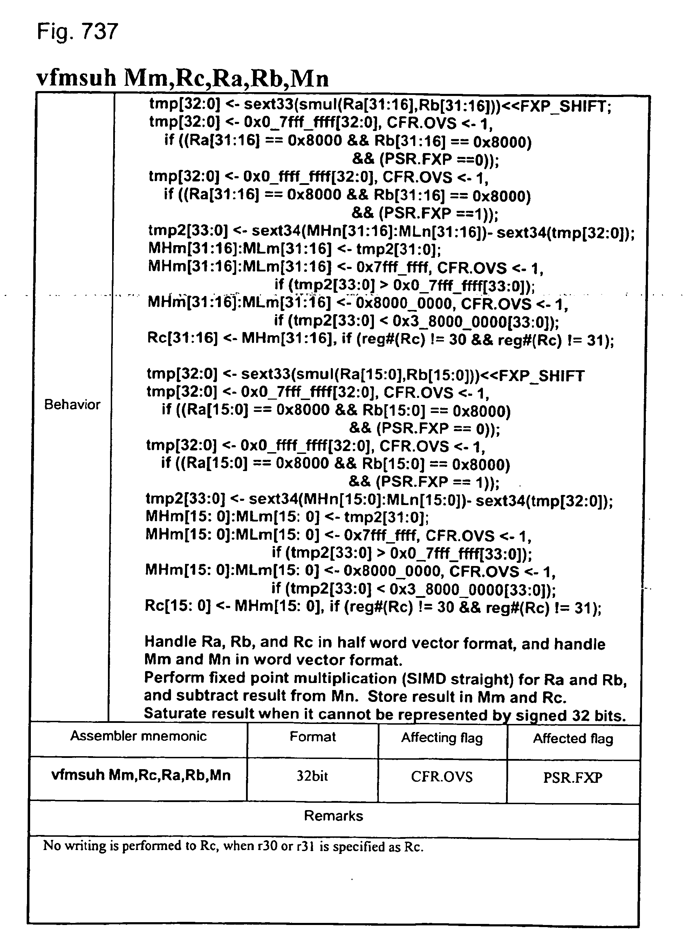

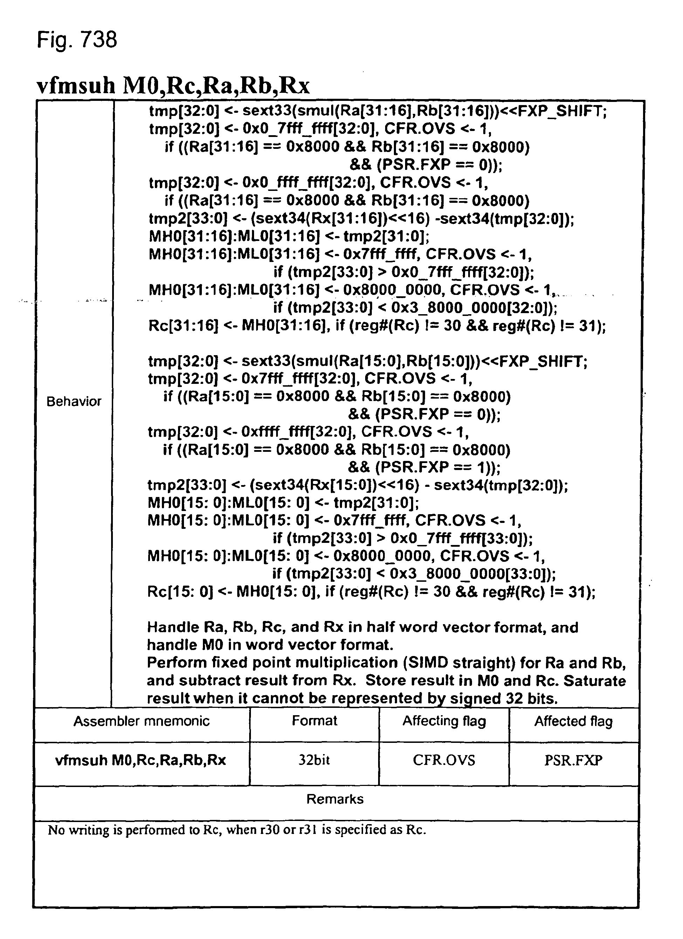

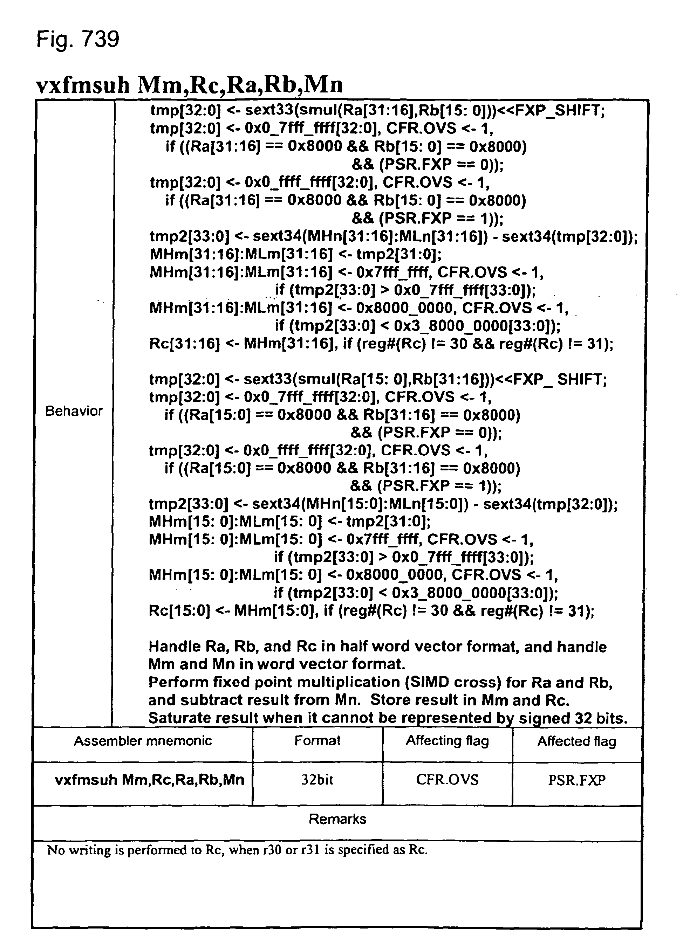

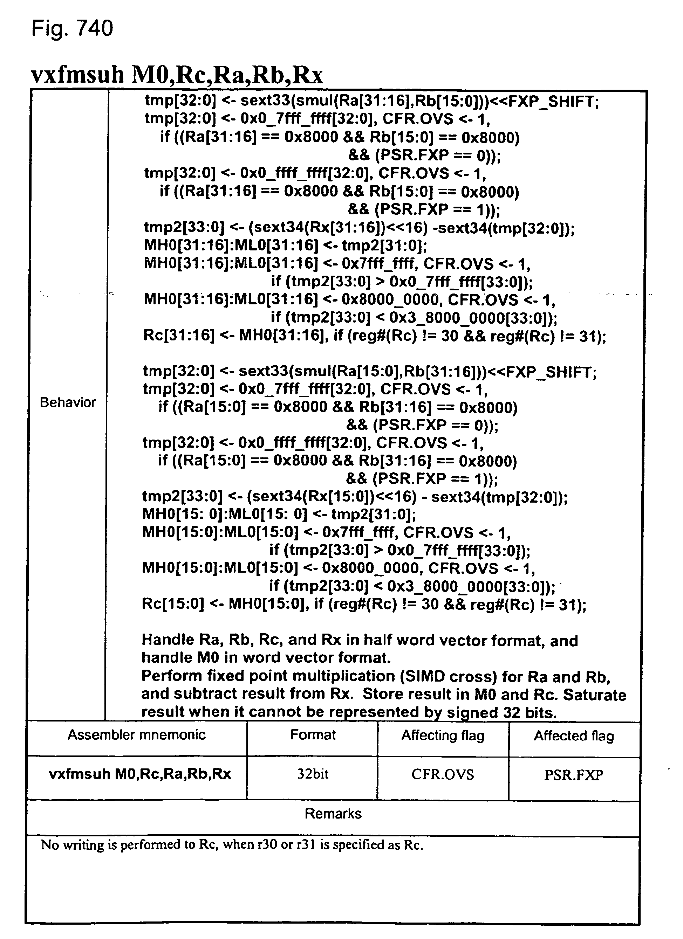

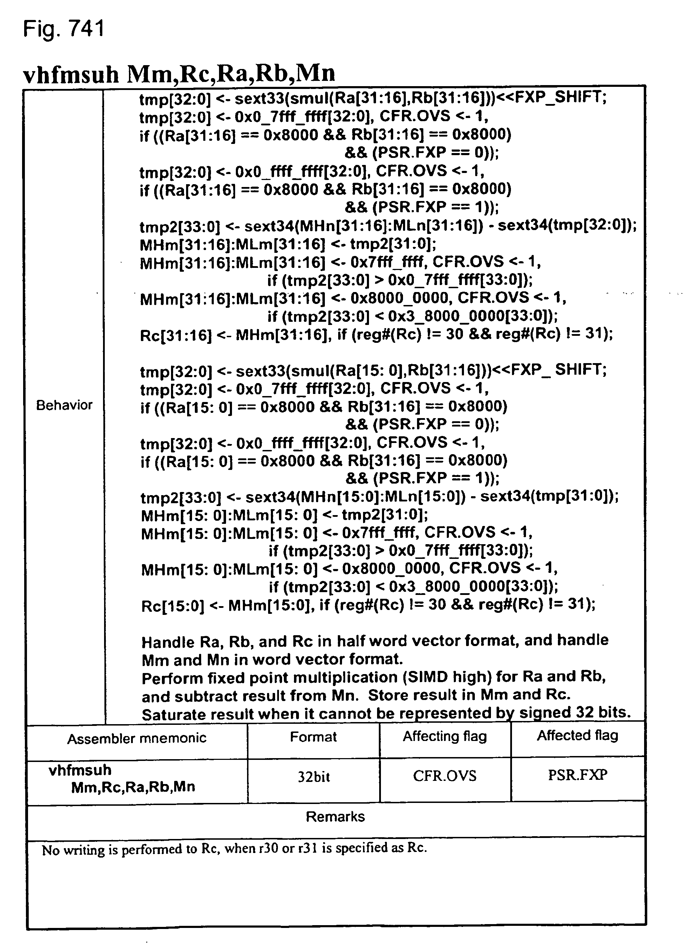

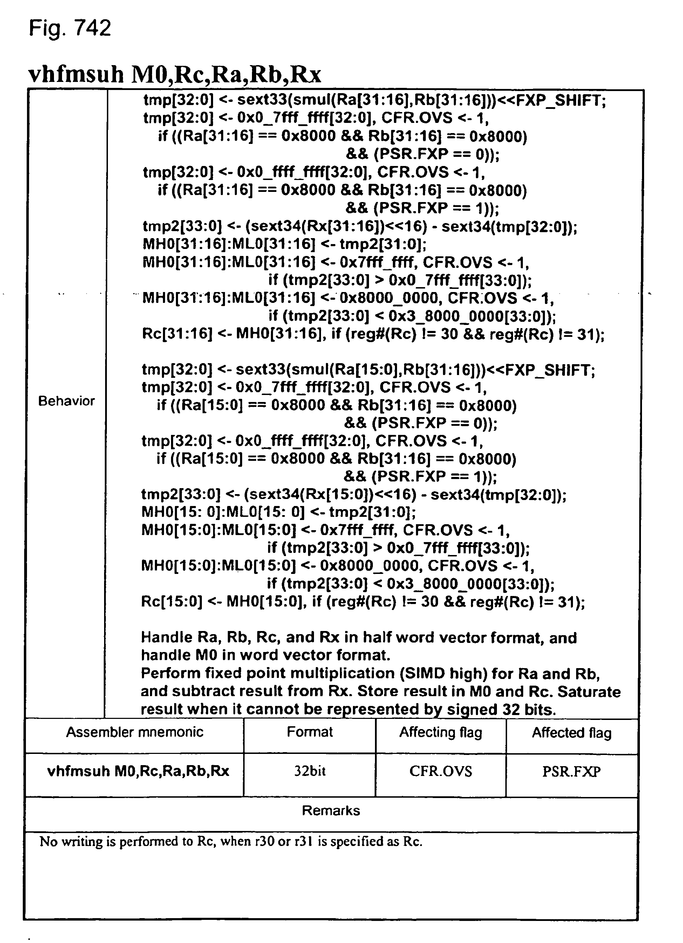

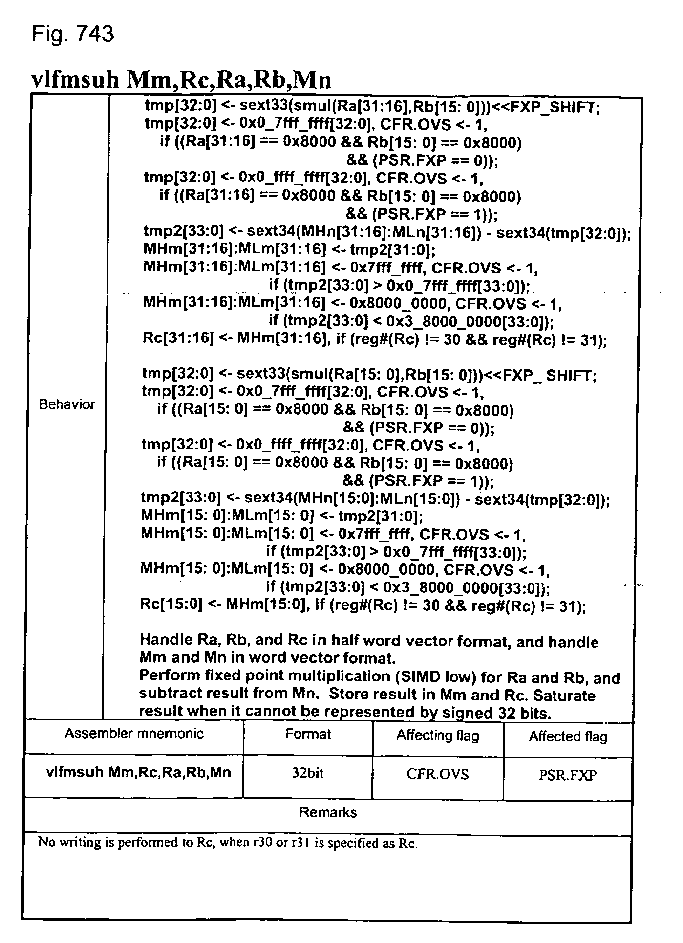

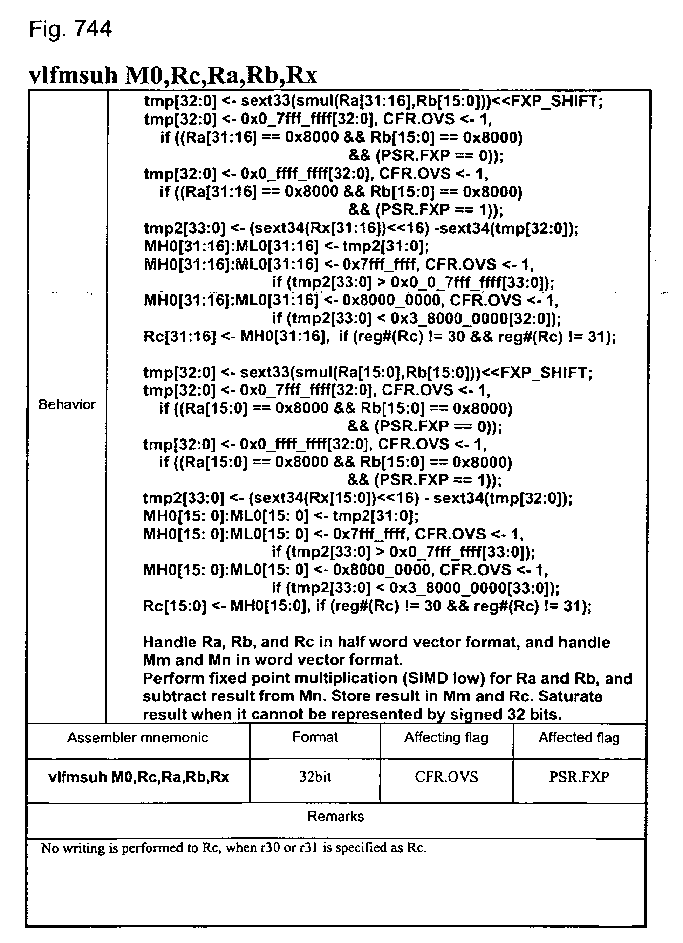

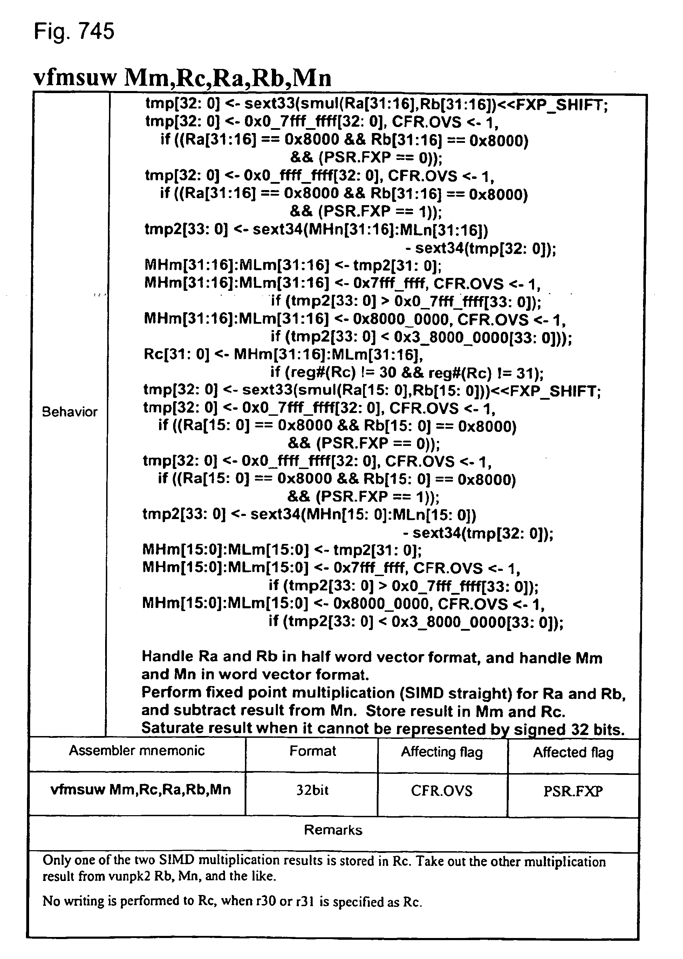

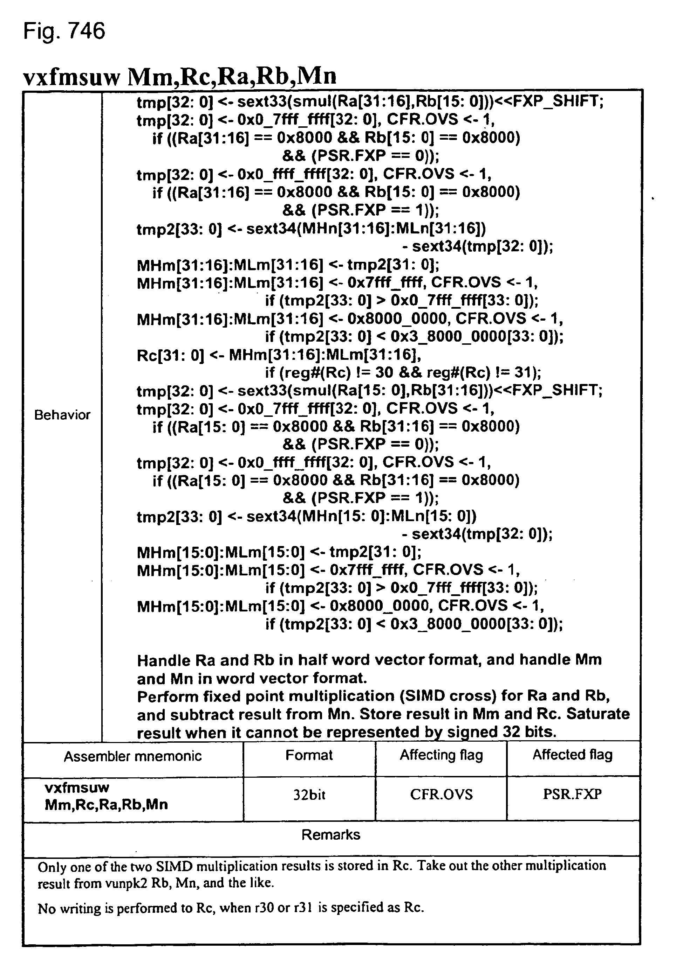

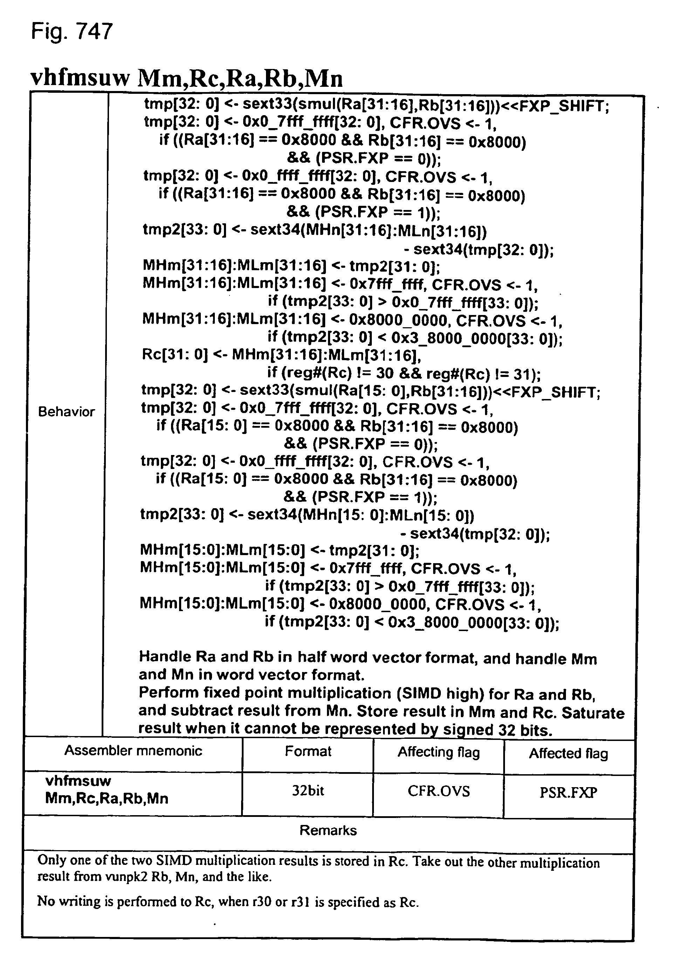

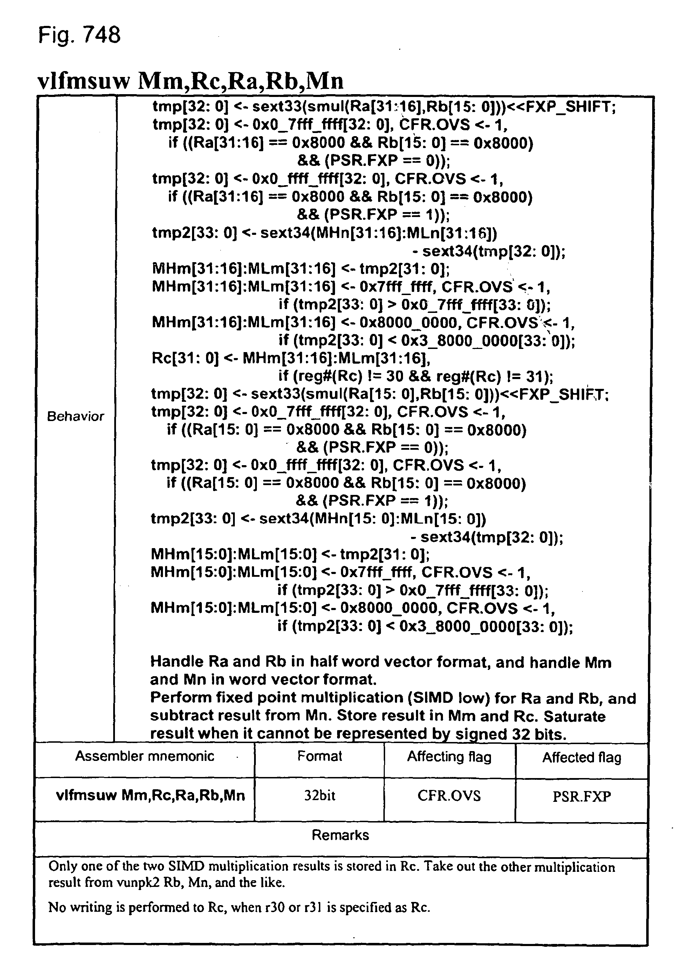

Figs.729~748 are diagrams explaining instructions relating to "SIMD msu (X2)".

Next, an explanation is given for the behaviors of the processor 1 concerning some of the characteristic instructions.

### (1) Instructions for performing SIMD binary operations by crossing operands:

First, an explanation is given for instructions for performing operations on operands in a diagonally crossed position, out of two parallel SIMD operations.

### [Instruction vxaddh]

Instruction vxaddh is a SIMD instruction for adding two sets of operands in a diagonally crossed position on a per half word (16 bits) basis. For example, when
vxaddh Rc, Ra, Rb the processor 1 behaves as follows using the arithmetic and logic/comparison operation unit 41 and the like:
(i) adds the higher 16 bits of the register Ra to the lower 16 bits of the register Rb, stores the result in the higher 16 bits of the register Rc, and in parallel with this,
(ii) adds the lower 16 bits of the register Ra to the higher 16 bits of the register Rb, and stores the result in the lower 16 bits of the register Rc.

The above instruction is effective in the case where two values which will be multiplied by the same coefficient need to be added to each other (or subtracted) in advance in order to reduce the number of times multiplications are performed in a symmetric filter (coefficients which are symmetric with respect to the center).

Note that the processor 1 performs processing equivalent to this add instruction for subtract instructions (vxsubh etc.).

### [Instruction vxmul]

Instruction vxmul is a SIMD instruction for multiplying two sets of operands in a diagonally crossed position on a per half word (16 bits) basis, and retaining the lower half words of the respective results (SIMD storage). For example, when
vxmul Rc, Ra, Rb
the processor 1 behaves as follows using the multiplication/sum of products operation unit 44 and the like:
(i) multiplies the higher 16 bits of the register Ra by the lower 16 bits of the register Rb, stores the multiplication result in the higher 16 bits of an operation register MHm and the higher 16 bits of an operation register MLm, as well as storing the lower 16 bits of such multiplication result in the higher 16 bits of the register Rc, and in parallel with this,
(ii) multiplies the lower 16 bits of the register Ra by the higher 16 bits of the register Rb, and stores the multiplication result in the lower 16 bits of the operation register MHm and the lower 16 bits of the operation register MLm, as well as storing the lower 16 bits of such multiplication result in the lower 16 bits of the register Rc.

The above instruction is effective when calculating the inner products of complex numbers. Taking out the lower bits of a result is effective when handling integer data (mainly images).

### [Instruction vxfmulh]

Instruction vxfmulh is a SIMD instruction for multiplying two sets of operands in a diagonally crossed position on a per half word (16 bits) basis, and retaining the higher half words of the respective results (SIMD storage). For example, when
vxfmulh Rc, Ra, Rb the processor 1 behaves as follows using the multiplication/sum of products operation unit 44 and the like:
(i) multiplies the higher 16 bits of the register Ra by the lower 16 bits of the register Rb, stores the multiplication result in the higher 16 bits of the operation register MHm and the higher 16 bits of the operation register MLm, as well as storing the higher 16 bits of such multiplication result in the higher 16 bits of the register Rc, and in parallel with this,
(ii) multiplies the lower 16 bits of the register Ra by the higher 16 bits of the register Rb, and stores the multiplication result in the lower 16 bits of the operation register MHm and the lower 16 bits of the operation register MLm, as well as storing the higher 16 bits of such multiplication result in the lower 16 bits of the register Rc.

The above instruction is effective when calculating the inner products of complex numbers. Taking out the higher bits of a result is effective when handling fixed point data. This instruction can be applied to a standard format (MSB-aligned) known as Q31/Q15.

### [Instruction vxfmulw]

Instruction vxfmulw is a SIMD instruction for multiplying two sets of operands in a diagonally crossed position on a per half word (16 bits) basis, and retaining only one of the two multiplication results (non-SIMD storage). For example, when
vxfmulw Rc, Ra, Rb
the processor 1 behaves as follows using the multiplication/sum of products operation unit 44 and the like:
(i) multiplies the higher 16 bits of the register Ra by the lower 16 bits of the register Rb, stores the multiplication result in the higher 16 bits of the operation register MHm and the higher 16 bits of the operation register MLm, as well as storing such multiplication result (word) in the register Rc, and in parallel with this,
(ii) multiplies the lower 16 bits of the register Ra by the higher 16 bits of the register Rb, and stores the multiplication result in the lower 16 bits of the operation register MHm and the lower 16 bits of the operation register MLm (not to be stored in the register Rc).

The above instruction is effective in a case where 16 bits becomes inefficient to maintain bit precision, making SIMD unable to be carried out (e.g. audio).

### [Instruction vxmac]

Instruction vxmac is a SIMD instruction for calculating the sum of products of two sets of operands in a diagonally crossed position on a per half word (16 bits) basis, and retaining the lower half words of the respective results (SIMD storage). For example, when
vxmac Mm, Rc, Ra, Rb, Mm
the processor 1 behaves as follows using the multiplication/sum of products operation unit 44 and the like:
(i) multiplies the higher 16 bits of the register Ra by the lower 16 bits of the register Rb, adds this multiplication result to 32 bits consisting of the higher 16 bits of the operation registers MHn and MLn, stores the 32 bits of the addition result in a 32-bit area consisting of the higher 16 bits of the operation registers MHm and MLm, as well as storing the lower 16 bits of such addition result in the higher 16 bits of the register Rc, and in parallel with this,
(ii) multiplies the lower 16 bits of the register Ra by the higher 16 bits of the register Rb, adds this multiplication result to 32 bits consisting of the lower 16 bits of the operation registers MHn and MLn, stores the 32 bits of the addition result in a 32-bit area consisting of the lower 16 bits of the operation registers MHm and MLm, as well as storing the lower 16 bits of such addition result in the lower 16 bits of the register Rc.

The above instruction is effective when calculating the inner products of complex numbers. Taking out the lower bits of a result is effective when handling integer data (mainly images).

### [Instruction vxfmach]

Instruction vxfmach is a SIMD instruction for calculating the sum of products of two sets of operands in a diagonally crossed position on a per half word (16 bits) basis, and retaining the higher half words of the respective results (SIMD storage). For example, when
vxfmach Mm, Rc, Ra, Rb, Mm
the processor 1 behaves as follows using the multiplication/sum of products operation unit 44 and the like:
(i) multiplies the higher 16 bits of the register Ra by the lower 16 bits of the register Rb, adds this multiplication result to 32 bits consisting of the higher 16 bits of the operation registers MHn and MLn, stores the 32 bits of the addition result in a 32-bit area consisting of the higher 16 bits of the operation registers MHm and MLm, as well as storing the higher 16 bits of such addition result in the higher 16 bits of the register Rc, and in parallel with this,
(ii) multiplies the lower 16 bits of the register Ra by the higher 16 bits of the register Rb, adds this multiplication result to 32 bits consisting of the lower 16 bits of the operation registers MHn and MLn, stores the 32 bits of the addition result in a 32-bit area consisting of the lower 16 bits of the operation registers MHm and MLm, as well as storing the higher 16 bits of such addition result in the lower 16 bits of the register Rc.

The above instruction is effective when calculating the inner products of complex numbers. Taking out the higher bits of a result is effective when handling fixed point data. This instruction can be applied to a standard format (MSB-aligned) known as Q31/Q15.

### [Instruction vxfmacw]

Instruction vxfmacw is a SIMD instruction for multiplying two sets of operands in a diagonally crossed position on a per half word (16 bits) basis, and retaining only one of the two multiplication results (non-SIMD storage). For example, whenwhen
vxfmacw Mm, Rc, Ra, Rb, Mm
the processor 1 behaves as follows using the multiplication/sum of products operation unit 44 and the like:
(i) multiplies the higher 16 bits of the register Ra by the lower 16 bits of the register Rb, adds this multiplication result to 32 bits consisting of the higher 16 bits of the operation registers MHn and MLn, stores the 32 bits of the addition result in a 32-bit area consisting of the higher 16 bits of the operation registers MHm and MLm, as well as storing the 32 bits of such addition result in the register Rc, and in parallel with this,
(ii) multiplies the lower 16 bits of the register Ra by the higher 16 bits of the register Rb, adds this multiplication result to 32 bits consisting of the lower 16 bits of the operation registers MHn and MLn, stores the 32 bits of the addition result in a 32-bit area consisting of the lower 16 bits of the operation registers MHm and MLm (not to be stored in the register Rc).

The above instruction is effective in a case where 16 bits becomes inefficient to maintain bit precision, making SIMD unable to be carried out (e.g. audio).

Note that the processor 1 performs processing equivalent to these sum of products instructions for difference of products instructions (vxmsu, vxmsuh, vxmsuw etc.).

Also note that the processor 1 is capable of performing not only operations (addition, subtraction, multiplication, sum of products, and difference of products under two-parallel SIMD) on two sets of operands in a diagonally crossed position as described above, but also extended operations (four parallel, eight parallel SIMD operations etc.) on "n" sets of operands.

For example, assuming that four pieces of byte data stored in the register Ra are Ra1, Ra2, Ra3, and Ra4 from the most significant byte respectively, and that four pieces of byte data stored in the register Rb are Rb1, Rb2, Rb3, and Rb4 from the most significant byte respectively, the processor 1 may cover SIMD operation instructions executed on the register Ra and the register Rb, the instructions for performing operations on byte data in a diagonally crossed position in parallel, which are as listed below:
(i) One symmetric cross instruction
   Four parallel SIMD operation instruction executed on each of the following: Ra1 and Rb4; Ra2 and Rb3; Ra3 and Rb2; and Ra4 and Rb1;
(ii) Two symmetric cross instruction
   Four parallel SIMD operation instruction executed on each of the following: Ra1 and Rb2; Ra2 and Rb1; Ra3 and Rb4; and Ra4 and Rb3; and
(iii) Double cross instruction
   Four parallel SIMD operations instruction executed on each of the following: Ra1 and Rb3; Ra2 and Rb4; Ra3 and Rb1; and Ra4 and Rb2.

These three types of SIMD operations executed on four data elements in parallel can be applied to all of addition, subtraction, multiplication, sum of products, and difference of products, as in the case of the aforementioned two-parallel SIMD operations. Furthermore, regarding multiplication, sum of products, and difference of products, the following instructions may be supported as in the case of the above two-parallel SIMD operation instructions (e.g. vxmul, vxfmulh, vxfmulw): an instruction capable of SIMD storage of only the lower bytes of each of four operation results to the register Rc or the like; an instruction capable of SIMD storage of only the higher bytes of each of four operation results to the register Rc or the like; and an instruction capable of SIMD storage of only two of four operation results to the register Rc or the like.

Note that three types of operations performed on data in the above-listed diagonally crossed positions can be generalized and represented as below. Assuming that an operand is a set of data comprised of the "i"th data in a data array in the first data group made up of "n" data elements and the "j"th data in a data array in the second data group made up of "n" data elements, the following relationships are established:
in (i) One symmetric cross instruction, j=n-i+1;
in (ii) Two symmetric cross instruction, j=i-(-1) ^ (i mod 2); and
in (iii) Double cross instruction, j=n-i+1+(-1) ^ (i mod 2). Note that " ^ " denotes exponentiation and "mod" denotes modulo here.
The above instructions are effective in a case where operations are performed simultaneously on two complex numbers such as in a case of inner products of complex numbers.

### (2) Instructions for performing SIMD binary operations with one of two operands being fixed:

Next, an explanation is given for instructions for performing operations with one of two operands fixed (one of the operands is fixed as the common operand), out of two parallel SIMD operations.

### [Instruction vhaddh]

Instruction vhaddh is a SIMD instruction for adding two sets of operands, one of which (the higher 16 bits of a register) is fixed as the common operand, on a per half word (16 bits) basis. For example, when when
vhaddh Rc, Ra, Rb
the processor 1 behaves as follows using the arithmetic and logic/comparison operation unit 41 and the like:
(i) adds the higher 16 bits of the register Ra to the higher 16 bits of the register Rb, stores the result in the higher 16 bits of the register Rc, and in parallel with this,
(ii) adds the lower 16 bits of the register Ra to the higher 16 bits of the register Rb, and stores the result in the lower 16 bits of the register Rc.

The above instruction is effective in the case where SIMD is difficult to be applied to add and subtract operations to be executed on elements in two arrays due to misalignment between such arrays.

Note that the processor 1 performs processing equivalent to this add instruction for subtract instructions (vhsubh etc.).

### [Instruction vhmul]

Instruction vhmul is a SIMD instruction for multiplying two sets of operands, one of which (the higher 16 bits of a register) is fixed as the common operand, on a per half word (16 bits) basis, and retaining the lower half words of the respective results (SIMD storage). For example, when
vhmul Rc, Ra, Rb
the processor 1 behaves as follows using the multiplication/sum of products operation unit 44 and the like:
(i) multiplies the higher 16 bits of the register Ra by the higher 16 bits of the register Rb, stores the multiplication result in the higher 16 bits of the operation register MHm and the higher 16 bits of the operation register MLm, as well as storing the lower 16 bits of such multiplication result in the higher 16 bits of the register Rc, and in parallel with this,
(ii) multiplies the lower 16 bits of the register Ra by the higher 16 bits of the register Rb, and stores the multiplication result in the lower 16 bits of the operation register MHm and the lower 16 bits of the operation register MLm, as well as storing the lower 16 bits of such multiplication result in the lower 16 bits of the register Rc.

The above instruction is effective in a case where SIMD is difficult to be applied, due to misaligned elements, when all elements are multiplied by coefficients such as in a case of gain control where such operation is performed by means of loop iteration and SIMD parallel processing. Basically, this instruction is used in a pair (alternately) with an instruction to be executed by fixing the lower bytes (lower-byte-fixed instruction) described below. Taking out the lower bits of a result is effective when handling integer data (mainly images).

### [Instruction vhfmulh]

Instruction vhfmulh is a SIMD instruction for multiplying two sets of operands, one of which (the higher 16 bits of a register) is fixed as the common operand, on a per half word (16 bits) basis, and retaining the higher half words of the respective results (SIMD storage). For example, when
vhfmulh Rc, Ra, Rb
the processor 1 behaves as follows using the multiplication/sum of products operation unit 44 and the like:
(i) multiplies the higher 16 bits of the register Ra by the higher 16 bits of the register Rb, stores the multiplication result in the higher 16 bits of the operation register MHm and the higher 16 bits of the operation register MLm, as well as storing the higher 16 bits of such multiplication result in the higher 16 bits of the register Rc, and in parallel with this,
(ii) multiplies the lower 16 bits of the register Ra by the higher 16 bits of the register Rb, and stores the multiplication result in the lower 16 bits of the operation register MHm and the lower 16 bits of the operation register MLm, as well as storing the higher 16 bits of such multiplication result in the lower 16 bits of the register Rc.

The above instruction is effective as in the above case. Taking out the higher bits of a result is effective when handling fixed point data. This instruction can be applied to a standard format (MSB-aligned) known as Q31/Q15.

### [Instruction vhfmulw]

Instruction vhfmulw is a SIMD instruction for multiplying two sets of operands, one of which (the higher 16 bits of a register) is fixed as the common operand, on a per half word (16 bits) basis, and retaining only one of the two multiplication results (non-SIMD storage). For example, when
vhfmulw Rc, Ra, Rb
the processor 1 behaves as follows using the multiplication/sum of products operation unit 44 and the like:
(i) multiplies the higher 16 bits of the register Ra by the higher 16 bits of the register Rb, stores the multiplication result in the higher 16 bits of the operation register MHm and the higher 16 bits of the operation register MLm, as well as storing such multiplication result (word) in the register Rc, and in parallel with this,
(ii) multiplies the lower 16 bits of the register Ra by the higher 16 bits of the register Rb, and stores the multiplication result in the lower 16 bits of the operation register MHm and the lower 16 bits of the operation register MLm (not to be stored in the register Rc).

The above instruction is effective when assuring precision.

### [Instruction vhmac]

Instruction vhmac is a SIMD instruction for calculating the sum of products of two sets of operands, one of which (the higher 16 bits of a register) is fixed as the common operand, on a per half word (16 bits) basis, and retaining the lower half words of the respective results (SIMD storage). For example, when
vhmac Mm, Rc, Ra, Rb, Mm
the processor 1 behaves as follows using the multiplication/sum of products operation unit 44 and the like:
(i) multiplies the higher 16 bits of the register Ra by the higher 16 bits of the register Rb, adds this multiplication result to 32 bits consisting of the higher 16 bits of the operation registers MHn and MLn, stores the 32 bits of the addition result in a 32-bit area consisting of the higher 16 bits of the operation registers MHm and MLm, as well as storing the lower 16 bits of such addition result in the higher 16 bits of the register Rc, and in parallel with this,
(ii) multiplies the lower 16 bits of the register Ra by the higher 16 bits of the register Rb, adds this multiplication result to 32 bits consisting of the lower 16 bits of the operation registers MHn and MLn, stores the 32 bits of the addition result in a 32-bit area consisting of the lower 16 bits of the operation registers MHm and MLm, as well as storing the lower 16 bits of such addition result in the lower 16 bits of the register Rc.

The above instruction is effective in the case where SIMD is difficult to be applied to FIR (filter), due to misaligned elements, in which such filtering is performed by means of loop iteration and SIMD parallel processing. Basically, this instruction is used in a pair (alternately) with a lower byte-fixed instruction described below. Taking out the lower bits of a result is effective when handling integer data (mainly images).

### [Instruction vhfmach]

Instruction vhfmach is a SIMD instruction for calculating the sum of products of two sets of operands, one of which (the higher 16 bits of a register) is fixed as the common operand, on a per half word (16 bits) basis, and retaining the higher half words of the respective results (SIMD storage). For example, when
vhfmach Mm, Rc, Ra, Rb, Mm
the processor 1 behaves as follows using the multiplication/sum of products operation unit 44 and the like:
(i) multiplies the higher 16 bits of the register Ra by the higher 16 bits of the register Rb, adds this multiplication result to 32 bits consisting of the higher 16 bits of the operation registers MHn and MLn, stores the 32 bits of the addition result in a 32-bit area consisting of the higher 16 bits of the operation registers MHm and MLm, as well as storing the higher 16 bits of such addition result in the higher 16 bits of the register Rc, and in parallel with this,
(ii) multiplies the lower 16 bits of the register Ra by the higher 16 bits of the register Rb, adds this multiplication result to 32 bits consisting of the lower 16 bits of the operation registers MHn and MLn, stores the 32 bits of the addition result in a 32-bit area consisting of the lower 16 bits of the operation registers MHm and MLm, as well as storing the higher 16 bits of such addition result in the lower 16 bits of the register Rc.

The above instruction is effective as in the above case. Taking out the higher bits of a result is effective when handling fixed point data. This instruction can be applied to a standard format (MSB-aligned) known as Q31/Q15.

### [Instruction vhfmacw]

Instruction vhfmacw is a SIMD instruction for multiplying two sets of operands, one of which (the higher 16 bits of a register) is fixed as the common operand, on a per half word (16 bits) basis, and retaining only one of the two multiplication results (non-SIMD storage). For example, when
vhfmacw Mm, Rc, Ra, Rb, Mm
the processor 1 behaves as follows using the multiplication/sum of products operation unit 44 and the like:
(i) multiplies the higher 16 bits of the register Ra by the higher 16 bits of the register Rb, adds this multiplication result to 32 bits consisting of the higher 16 bits of the operation registers MHn and MLn, stores the 32 bits of the addition result in a 32-bit area consisting of the higher 16 bits of the operation registers MHm and MLm, as well as storing the 32 bits of such addition result in the register Rc, and in parallel with this,
(ii) multiplies the lower 16 bits of the register Ra by the higher 16 bits of the register Rb, adds this multiplication result to 32 bits consisting of the lower 16 bits of the operation registers MHn and MLn, stores the 32 bits of the addition result in a 32-bit area consisting of the lower 16 bits of the operation registers MHm and MLm (not to be stored in the register Rc).

The above instruction is effective when assuring precision.

Note that the processor 1 performs processing equivalent to these sum of products instructions for difference of products instructions (vhmsu, vhmsuh, vhmsuw etc.).

Also note that although the higher 16 bits of a register is fixed (fixed as common) in the above instructions, the processor 1 is capable of performing processing equivalent to the above processing for instructions (vladdh, vlsubh, vlmul, vlfmulh, vlfmulw, vlmac, vlmsu, vlfmach, vlmsuh, vlfmacw, vlmsuw etc.) in which the lower 16 bits of a register is fixed (fixed as common). Such instructions are effective when used in a pair with the above higher byte-fixed instructions.

Also note that the processor 1 is capable of performing not only operations (addition, subtraction, multiplication, sum of products, and difference of products under two parallel SIMD instruction) on two sets of operands, one of which (the higher 16 bits of a register) is fixed as the common operand as described above, but also extended operations (four parallel, eight parallel SIMD operations etc.) to be performed on "n" sets of operands.

For example, assuming that four pieces of byte data stored in the register Ra are Ra1, Ra2, Ra3, and Ra4 from the most significant byte respectively, and that four pieces of byte data stored in the register Rb are Rb1, Rb2, Rb3, and Rb4 from the most significant byte respectively, the processor 1 may cover SIMD operation instructions executed on the register Ra and the register Rb, the instructions for executing parallel operations on byte data wherein one of the two operands (1 byte in a register) is fixed as the common operand, which are as listed below:
(i) Most significant byte-fixed instruction
   Four parallel SIMD operation instruction executed on each of the following: Ra1 and Rb1; Ra2 and Rb1; Ra3 and Rb1; and Ra4 and Rb1;
(ii) Second most significant byte-fixed instruction
   Four parallel SIMD operations instruction executed on each of the following: Ra1 and Rb2; Ra2 and Rb2; Ra3 and Rb2; and Ra4 and Rb2;
(iii) Second least significant byte-fixed instruction
   Four parallel SIMD operations instruction executed on each of the following: Ra1 and Rb3; Ra2 and Rb3; Ra3 and Rb3; and Ra4 and Rb3; and
(iv) Second least significant byte-fixed instruction
   Four parallel SIMD operations instruction executed on each of the following: Ra1 and Rb4; Ra2 and Rb4; Ra3 and Rb4; and Ra4 and Rb4.

These four types of SIMD operations executed on four data elements in parallel can be applied to all of addition, subtraction, multiplication, sum of products, and difference of products, as in the case of the aforementioned two parallel SIMD operations. Furthermore, regarding multiplication, sum of products, and difference of products, the following instructions may be supported as in the case of the above two parallel SIMD operation instructions (e.g. vhmul, vhfmulh, vhfmulw): an instruction capable of SIMD storage of only the lower bytes of each of four operation results to the register Rc or the like; an instruction capable of SIMD storage of only the higher bytes of each of four operation results to the register Rc or the like; and an instruction capable of SIMD storage of only two of four operation results to the register Rc or the like. These instructions are effective in a case where operations are performed on each element by shifting one of the two elements one by one. This is because operations performed on one element shifted, two elements shifted and three elements shifted, are required.

Note that three types of operations performed for data wherein one of the two operands is fixed as the common operand, can be generalized and represented as below. As a SIMD instruction which includes the first operand specifying the first data group containing a data array comprised of "n"(≧2) pieces of data and the second operand specifying the second data group containing a data array comprised of "n" pieces of data, the processor 1 may perform operations on each of "n" sets of operands, each made up of "i"th data in the first data group and the "j"th data in the second data group when "i"=1, 2, ..., "n", and "j"=a fixed value.

### (3) Instruction for performing SIMD binary operations and performing bit shifts of the results:

Next, an explanation is given for an instruction for performing operations on operands in a diagonally crossed position, out of two parallel SIMD operations.

### [Instruction vaddsh]

Instruction vaddsh is a SIMD instruction for adding two sets of operands on a per half word (16 bits) basis, and performing an arithmetic shift right of the result only by 1 bit. For example, when
vaddsh Rc, Ra, Rb
the processor 1 behaves as follows using the arithmetic and logic/comparison operation unit 41 and the like:
(i) adds the higher 16 bits of the register Ra to the higher 16 bits of the register Rb, stores in the higher 16 bits of the register Rc the value obtained as a result of performing an arithmetic shift right of the result only by one bit, and in parallel with this,
(ii) adds the lower 16 bits of the register Ra to the lower 16 bits of the register Rb, and stores in the lower 16 bits of the register Rc the value obtained as a result of performing an arithmetic shift right of the result only by one bit

The above instruction is effective when precision needs to be assured by shifting down a result of addition before data exceeds 16-bit precision. Some results need to be rounded. This instruction is frequently utilized for fast Fourier transform (butterfly) which involves repetitive additions and subtractions performed on complex numbers.

Note that the processor 1 performs processing equivalent to this add instruction for subtract instructions (vsubsh etc.).

Also note that the processor 1 is capable of performing not only operations (addition and subtraction under two parallel SIMD instruction) on two sets of operands as described above, but also extended operations (four-parallel, eight-parallel SIMD operations etc.) performed on "n" sets of operands.

For example, assuming that four pieces of byte data stored in the register Ra are Ra1, Ra2, Ra3, and Ra4 from the most significant byte respectively, and that four pieces of byte data stored in the register Rb are Rb1, Rb2, Rb3, and Rb4 from the most significant byte respectively, the processor 1 may cover SIMD operation instructions executed on the register Ra and the register Rb, the instructions for performing such an operation and a bit shift, that is to say, a SIMD operation instruction for performing operations in parallel on the following fours sets of operands: Ra1 and Rb1, Ra2 and Rb2, Ra3 and Rb3, and Ra4 and Rb4 as its operand, respectively. An example of such instruction is Instruction vaddsb which performs additions on four sets of operands on a per byte basis, and performs an arithmetic shift right of the respective results only by 1 bit.

The above instruction is effective when assuring precision as in the above case, and mainly used when calculating an average (a vertical average).

Also note that this characteristic instruction which performs SIMD operations and shifts is not limited to an instruction for performing a shift only by 1 bit to the right as described above. This means that the amount of a shift may be either fixed or variable, and such a shift may be performed either to the right or o the left. Moreover, overflow bits resulted from a shift right may be rounded (e.g. Instruction vaddsrh and Instruction vaddsrb).

### (4) Instructions for accumulating and adding SIMD (vector) data so as to convert such vector data into scalar data or into a lower dimensional vector:

Next, an explanation is given for a SIMD instruction for converting vector data into scalar data or into a lower dimensional vector.

### [Instruction vsumh]

Instruction vsumh is a SIMD instruction for adding two pieces of SIMD data (vector data) on a per half word (16 bits) basis so as to convert such vector data into scalar data. For example, when
vsumh Rb, Ra
the processor 1, using the arithmetic and logic/comparison operation unit 41 and the like, adds the higher 16 bits of the register Ra to the lower 16 bits of the register Ra, and stores the result in the register Rb.

The above instruction can be employed for various purposes such as calculating an average (horizontal average), summing up results of operations (sum of products and addition) obtained individually.

### [Instruction vsumh2]

Instruction vsumh2 is a SIMD instruction for accumulating and adding elements of two sets of operands, each set made up of two pieces of SIMD data (vector data), on a per byte basis, so as to convert them into scalar data. For example, when
vsumh2 Rb, Ra
the processor 1 behaves as follows using the arithmetic and logic/comparison operation unit 41 and the like:
(i) accumulates and adds the most significant byte and the second most significant byte in the register Ra, stores the result in the higher 16 bits of the register Rb, and in parallel with this,
(ii) accumulates and adds the second least significant byte and the least significant byte in the register Ra, and stores the result in the lower 16 bits of the register Rb.

This is effective as an instruction intended for image processing, motion compensation (MC) and halfpels.

Note that the processor 1 is capable of performing not only the above operation for converting two parallel SIMD data into scalar data, but also an extended operation for converting "n" parallel SIMD data made up of "n" (e.g. 4, 8) pieces of elements into scalar data.

For example, assuming that four pieces of byte data stored in the register Ra are Ra1, Ra2, Ra3, and Ra4 from the most significant byte respectively, the processor 1 may cover an operation instruction for accumulating and adding Ra1, Ra2, Ra3, and Ra4, and storing the result in the register Rb.

Furthermore, not only is it possible for the processor 1 to convert a vector containing more than one piece of element data into a scalar containing only one element data, it may also turn a vector into a lower dimensional vector containing a reduced number of elements data.

Also, addition is not the only operation type to which the above instruction is used, and therefore an operation for calculating an average value is also in the scope of application. This instruction is effective for such purposes as calculating an average, and summing up operation results.

### (5) Other SIMD instructions:

Next, an explanation is given for other SIMD instructions which do not belong to the aforementioned instruction categories.

### [Instruction vexth]

Instruction vexth is a SIMD instruction for performing sign extension on each of two pieces of SIMD data on a per half word (16 bits) basis. For example, when
vexth Mm, Rb, Ra
the processor 1 behaves as follows using the saturation block (SAT) 47a and the like of the converter 47:
(i) performs sign extension for the higher 16 bits of the register Ra so as to extend it to 32 bits, stores the result in the higher 16 bits of the operation register MHm and the higher 16 bits of the operation register MLm, and in parallel with this,
(ii) performs sign extension for the lower 16 bits of the register Ra so as to extend it to 32 bits, stores the result in the lower 16 bits of the operation register MHm and the lower 16 bits of the operation register MLm, and in parallel with this,
(iii) stores the 32 bits of the register Ra in the register Rb.

Note that "sign extension" is to lengthen data without changing its sign information. An example is to convert a signed value represented as a half word into the same value represented as a word. More specifically, sign extension is a process for filling extended higher bits with a sign bit (the most significant bit) of its original data.

The above instruction is effective when transferring SIMD data to the accumulators (when precision is required).

### [Instruction vasubb]

Instruction vasubb is a SIMD instruction for performing a subtraction on each of four sets of SIMD data on a per byte basis, and storing the resulting four signs in the condition flag register. For example, when
vasubb Rc, Rb, Ra
the processor 1 behaves as follows using the arithmetic and logic/comparison operation unit 41 and the like:
(i) subtracts the most significant 8 bits of the register Ra from the most significant 8 bits of the register Rb, stores the result in the most significant 8 bits of the register Rc, as well as storing the resulting sign in the VC3 of the condition flag register (CFR) 32, and in parallel with this,
(ii) subtracts the second most significant 8 bits of the register Ra from the second most significant 8 bits of the register Rb, stores the result in the second most significant 8 bits of the register Rc, as well as storing the resulting sign in the VC2 of the condition flag register (CFR) 32 and in parallel with this,
(iii) subtracts the second least significant 8 bits of the register Ra from the second least significant 8 bits of the register Rb, stores the result in the second least significant 8 bits of the register Rc, as well as storing the resulting sign in the VC1 of the condition flag register (CFR) 32, and in parallel with this,
(iv) subtracts the least significant 8 bits of the register Ra from the least significant 8 bits of the register Rb, stores the result in the least significant 8 bits of the register Rc, as well as storing the resulting sign in the VC0 of the condition flag register (CFR) 32.

The above instruction is effective when 9-bit precision is temporally required for obtaining a sum of absolute value differences.

### [Instruction vabssumb]

Instruction vabssumb is a SIMD instruction for adding absolute values of respective four sets of SIMD data on a per byte basis, and adding the result to other 4-byte data. For example, when
vabssumb Rc, Rb, Ra
the processor 1, using the arithmetic and logic/comparison operation unit 41 and the like, adds the absolute value of the most significant 8 bits, the absolute value of the second most significant 8 bits, the absolute value of the second least significant 8 bits and the absolute value of the least significant 8 bits of the register Ra, adds the result to the 32 bits of the register Rb, and stores such result in the register Rc. Note that the processor 1 uses the flags VC0~VC3 of the condition flag register (CFR) 32 to identify the absolute value of each byte stored in the register Ra.

The above instruction is effective for calculating a sum of absolute value differences in motion estimation as part of image processing, since when this instruction is used in combination with the aforementioned Instruction vasubb, a value resulted from summing up the absolute values of differences among a plurality of data pairs can be obtained after calculating the difference of each of such plurality of data pairs.

### (6) Instructions concerning mask operation and others:

Next, an explanation is given for non-SIMD instructions for performing characteristic processing.

### [Instruction addmsk]

Instruction addmsk is an instruction for performing addition by masking some of the bits (the higher bits) of one of two operands. For example, when
addmsk Rc, Rb, Ra
the processor 1, using the arithmetic and logic/comparison operation unit 41, the converter 47 and the like, adds data stored in the register Ra and the register Rb only within the range (the lower bits) specified by the BPO of the condition flag register (CFR) 32 and stores the result in the register Rc. At the same time, as for data in the unspecified range (the higher bits), the processor 1 stores the value of the register Ra in the register Rc directly.

The above instruction is effective for supporting modulo addressing (which is commonly employed in DSP). This instruction is required when reordering data into a specific pattern in advance as a preparation for a butterfly operation.

Note that the processor 1 performs processing equivalent to this add instruction for subtract instructions (submsk etc.).

### [Instruction mskbrvh]

Instruction mskbrvh is an instruction for concatenating bits of two operands after sorting some of the bits (the lower bits) of one of the two operands in reverse order. For example, when
mskbrvh Rc, Rb, Ra
the processor 1, using the converter 47 and the like, concatenates data of the register Ra and data of the register Rb at a bit position specified by the BPO of the condition flag register (CFR) 32 after sorting the lower 16 bits of the register Rb in reverse order, and stores the result in the register Rc. When this is done, of the higher 16 bits of the register Rb, the part lower than the position specified by the BPO is masked to 0.

The above instruction, which supports reverse addressing, is required for reordering data into a specific pattern in advance as a preparation for a butterfly operation.

Note that the processor 1 performs processing equivalent to this instruction not only for instructions for sorting 16 bits in reverse order, but also for instructions for reordering 1 byte and other areas in reverse order (mskbrvb etc.).

### [Instruction msk]

Instruction msk is an instruction for masking (putting to 0) an area sandwiched between specified two bit positions, or masking the area outside such area, out of the bits making up the operands. For example, when
msk Rc, Rb, Ra
the processor 1 behaves as follows using the converter 47 and the like:
(i) when Rb[12:8]≦Rb[4:0],
   while leaving as it is an area from a bit position designated by the 0~4^{th} 5-bit Rb [4:0] of the register Rb to a bit position designated by the 8~12^{th} 5-bit Rb [12:8] of the register Rb, out of the 32 bits stored in the register Ra, masks (puts to 0) the other bits so as to store such masked bits in the register Rc,
(ii) when Rb[12:8]<Rb[4:0],
   while masking (putting to 0) an area from a bit position designated by the 8~12^{th} 5-bit Rb [12:8] of the register Rb to a bit position designated by the 0~4^{th} 5-bit Rb [4:0] of the register Rb, out of the 32 bits stored in the register Ra, leaves the other bits as they are so as to store such bits in the register Rc.

The above instruction can be used for the extraction and insertion (construction) of bit fields, and when VLD/VLC is carried out using software.

### [Instruction bseq]

Instruction bseq is an instruction for counting the number of consecutive sign bits from 1 bit below the MSB of an operand. For example, when
bseq Ra, Rb
the processor 1, using the BSEQ block 47b of the converter 47 and the like, counts the number of consecutive sign bits from one bit below the register Ra, and stores the result in the register Rb. When the value of the register Ra is 0, 0 is stored in the register Rb.

The above instruction can be used for detecting significant digits. Since a wide dynamic range is concerned, floating point operations need to be performed for some parts. This instruction can be used, for example, for normalizing all data in accordance with data with the largest number of significant digits in the array so as to perform an operation.

### [Instruction ldbp]

Instruction ldbp is an instruction for performing sign extension for 2-byte data from a memory and loading such data into a register. For example, when
ldbp Rb: Rb+1, (Ra, D9)
the processor 1, using the I/F unit 50 and the like, performs sign extension for two pieces of byte data from an address resulted from adding a displacement value (D9) to the value of the register Ra, and loads such two data elements respectively into the register Ra and a register (Ra+1).

The above instruction contributes to a faster data supply.

Note that the processor 1 performs processing equivalent to this load instruction (load which involves sign extension) not only for loading data into two registers but also for loading data into the higher half word and the lower half word of a single register (ldbh etc.).

### [Instruction rde]

Instruction rde is an instruction for reading a value of an external register and generating an error exception when such reading ends in failure. For example, when
rde C0: C1, Rb, (Ra, D5)
the processor 1, using the I/F unit 50 and the like, defines a value resulted from adding a displacement value (D5) to the value of the register Ra as an external register number and reads the value of such external register (extended register unit 80) into the register Rb, as well as outputting whether such reading ended in success or failure to the condition flags C0 and C1 of the condition flog register (CFR) 32. When reading fails, an extended register error exception is generated.

The above instruction is effective as an instruction for controlling a hardware accelerator. An exception is generated when the hardware accelerator returns an error, which will be reflected to flags.

Note that the processor 1 performs processing equivalent to this read instruction (setting of flags, generation of an exception) not only for data reading from the external register but also for data writing to the external register (Instruction wte).

### [Instruction addarvw]

Instruction addarvw is an instruction for performing an addition intended for rounding an absolute value (rounding away from 0). For example, when
addarvw Rc, Rb, Ra
the processor 1, using the arithmetic and logic/comparison operation unit 41 and the like, adds the 32 bits of the register Ra and the 32 bits of the register Rb, and rounds up a target bit if the result is positive, while rounding off a target bit if the result is negative. To be more specific, the processor 1 adds the values of the registers Ra and Rb, and adds 1 if the value of the register Ra is positive. Note that when an absolute value is rounded, a value resulted from padding, with 1, bits lower than the bit to be rounded is stored in the register Rb.

The above instruction is effective for add IDCT (Inverse Discrete Cosine Transform) intended for rounding an absolute value (rounding away from 0).

## Claims

1. A SIMD Single Instruction Multiple Data processor (1) for performing a SIMD operation on a plurality of data pairs, wherein
each data pair of the plurality of data pairs is made up of one piece of data belonging to a first data group and one piece of data belonging to a second data group,
comprising:
a decoding unit (20) operable to decode an instruction; and
an execution unit (40) operable to execute the instruction according to a result of the decoding performed by the decoding unit,
wherein, when a SIMD instruction including (i) an operation code specifying an operation type, (ii) a first operand specifying the first data group containing a data array comprised of "n", 11 ≥ 2, pieces of data, and (iii) a second operand specifying the second data group containing a data array comprised of "n" pieces of data, is decoded by the decoding unit, the execution unit performs an operation specified by the operation code on "n" data pairs, each made up of one piece of data belonging to the first data group and one piece of data belonging to the second data group,
**characterized in that**
at least one data pair out of the "n" data pairs is made up of an "i"th data in the data array of the first data group and a "j" th, j≠i, data in the data array of the second data group.

2. The SIMD processor according to claim 1,
wherein the operation type specified by the operation code is one of addition, subtraction, multiplication, sum of products, and difference of products.

3. The SIMD processor according to claim 1,
wherein the "n" is 2,
the data array of the first data group comprises first data and second data,
the data array of the second data group comprises first data and second data, and
the execution unit performs the operation on a data pair made up of the first data in the data array of the first data group and the second data in the data array of the second data group, as well as on a data pair made up of the second data in the data array of the first data group and the first data in the data array of the second data group.

4. The SIMD processor according to claim 3,
wherein the operation type specified by the operation code is one of multiplication, sum of products, and difference of products,
the instruction includes a third operand specifying a third data for storing operation results, and
the execution unit stores, into the third data, a lower-bit part of a result obtained by performing the operation on the data pair made up of the first data in the data array of the first data group and the second data in the data array of the second data group, and a lower-bit part of a result obtained by performing the operation on the data pair made up of the second data in the data array of the first data group and the first data in the data array of the second data group.

5. The SIMD processor according to claim 3,
wherein the operation type specified by the operation code is one of multiplication, sum of products, and difference of products,
the instruction includes a third operand specifying a third data for storing operation results, and
the execution unit stores, into the third data, a higher-bit part of a result obtained by performing the operation on the data pair made up of the first data in the data array of the first data group and the second data in the data array of the second data group, and a higher-bit part of a result obtained by performing the operation on the data pair made up of the second data in the data array of the first data group and the first data in the data array of the second data group.

6. The SIMD processor according to claim 3,
wherein the operation type specified by the operation code is one of multiplication, sum of products, and difference of products,
the instruction includes a third operand specifying a third data for storing operation results, and
the execution unit stores one of the following results in the third data: a result obtained by performing the operation on the data pair made up of the first data in the data array of the first data group and the second data in the data array of the second data group; and a result obtained by performing the operation on the data pair made up of the second data in the data array of the first data group and the first data in the data array of the second data group.

7. The SIMD processor according to claim 1,
wherein the "n" ≥ 4, and
j=n-i+1.

8. The SIMD processor according to claim 1,
wherein the "n" ≥ 4, and
j=i-(-1)^(i mod 2)
("^" denotes exponentiation and "mod" denotes modulo).

9. The SIMD processor according to claim 1,
wherein the "n" ≥ 4, and
j=n-i+ 1 + (-1) ^ (i mod 2).

10. The SIMD processor according to claim 1,
wherein the "n" is 4,
the data array of the first data group comprises first to fourth data,
the data array of the second data group comprises first to fourth data, and
the execution unit performs the operation on the following four data pairs: a data pair made up of the first data in the data array of the first data group and the fourth data in the data array of the second data group; a data pair made up of the second data in the data array of the first data group and the third data in the data array of the second data group; a data pair made up of the third data in the data array of the first data group and the second data in the data array of the second data group; and a data pair made up of the fourth data in the data array of the first data group and the first data in the data array of the second data group.

11. The SIMD processor according to claim 1,
wherein the "n" is 4,
the data array of the first data group comprises first to fourth data,
the data array of the second data group comprises first to fourth data, and
the execution unit performs the operation on the following data pairs: a data pair made up of the first data in the data array of the first data group and the second data in the data array of the second data group; a data pair made up of the second data in the data array of the first data group and the first data in the data array of the second data group; a data pair made up of the third data in the data array of the first data group and the fourth data in the data array of the second data group; and a data pair made up of the fourth data in the data array of the first data group and the third data in the data array of the second data group.

12. The SIMD processor according to claim 1,
wherein the "n" is 4,
the data array of the first data group comprises first to fourth data,
the data array of the second data group comprises first to fourth data, and
the execution unit performs the operation on the following data pairs: a data pair made up of the first data in the data array of the first data group and the third data in the data array of the second data group; a data pair made up of the second data in the data array of the first data group and the fourth data in the data array of the second data group; a data pair made up of the third data in the data array of the first data group and the first data in the data array of the second data group; and a data pair made up of the fourth data in the data array of the first data group and the second data in the data array of the second data group.

13. The SIMD processor according to one of the claims 10 to 12,
wherein the operation type specified by the operation code is one of multiplication, sum of products, and difference of products,
the instruction includes a third operand specifying a third data for storing operation results, and
the execution unit stores, into the third data, a lower-bit part of respective results obtained by performing the operation on each of the four data pairs.

14. The SIMD processor according to one of the claims 10 to 12,
wherein the operation type specified by the operation code is one of multiplication, sum of products, and difference of products,
the instruction includes a third operand specifying a third data for storing operation results, and
the execution unit stores, into the third data, a higher-bit part of respective results obtained by performing the operation on each of the four data pairs.

15. The SIMD processor according to one of the claims 10 to 12,
wherein the operation type specified by the operation code is one of multiplication, sum of products, and difference of products,
the instruction includes a third operand specifying a third data for storing operation results, and
the execution unit stores, into the third data, two of four results obtained by performing the operation on each of the four data pairs.

16. The SIMD processor according to claim 1,
wherein the execution unit performs the operation on each of the "n" data pairs, each made up of the "i" th data in the first data group and "j" th data in the second data group, when the "i" = 1, 2,···, n, and "j" = a fixed value.

17. The SIMD processor according to claim 1,
wherein the "n" is 2,
the data array of the first data group comprises first data and second data,
the data array of the second data group comprises first data and second data, and
the execution unit performs the operation on a data pair made up of the first data in the data array of the first data group and the first data in the data array of the second data group, as well as on a data pair made up of the second data in the data array of the first data group and the first data in the data array of the second data group.

18. The SIMD processor according to claim 1,
wherein the "n" is 2,
the data array of the first data group comprises first data and second data,
the data array of the second data group comprises first data and second data, and
the execution unit performs the operation on a data pair made up of the first data in the data array of the first data group and the second data in the data array of the second data group, as well as on a data pair made up of the second data in the data array of the first data group and the second data in the data array of the second data group.

19. The SIMD processor according to claim 1,
wherein the "n" is 2,
the data array of the first data group comprises first data and second data,
the data array of the second data group comprises first data and second data, and
the execution unit performs the operation on (i) a data pair made up of the first data in the data array of the first data group and the first data in the data array of the second data group, as well as on a data pair made up of the second data in the data array of the first data group and the first data in the data array of the second data group, when a first instruction is decoded by the decoding unit, and on (ii) a data pair made up of the first data in the data array of the first data group and the second data in the data array of the second data group, as well as on a data pair made up of the second data in the data array of the first data group and the second data in the data array of the second data group, when a second instruction is decoded by the decoding unit.

20. The SIMD processor according to one of the claims 17 to 19,
wherein the operation type specified by the operation code is one of multiplication, sum of products, and difference of products,
the instruction includes a third operand specifying a third data for storing operation results, and
the execution unit stores, into the third data, a lower-bit part of respective results obtained by performing the operation on each of the two data pairs.

21. The SIMD processor according to one of the claims 17 to 19,
wherein the operation type specified by the operation code is one of multiplication, sum of products, and difference of products,
the instruction includes a third operand specifying a third data for storing operation results, and
the execution unit stores, into the third data, a higher-bit part of respective results obtained by performing the operation on each of the two data pairs.

22. The SIMD processor according to one of the claims 17 to 19,
wherein the operation type specified by the operation code is one of multiplication, sum of products, and difference of products,
the instruction includes a third operand specifying a third data for storing operation results, and
the execution unit stores, into the third data, one of two results obtained by performing the operation on each of the two data pairs.

23. The SIMD processor according to claim 1,
wherein the "n" is 4,
the data array of the first data group comprises first to fourth data,
the data array of the second data group comprises first to fourth data, and
the execution unit performs the operation on the following four data pairs: a data pair made up of the first data in the data array of the first data group and the first data in the data array of the second data group; a data pair made up of the second data in the data array of the first data group and the first data in the data array of the second data group; a data pair made up of the third data in the data array of the first data group and the first data in the data array of the second data group; and a data pair made up of the fourth data in the data array of the first data group and the first data in the data array of the second data group.

24. The SIMD processor according to claim 1,
wherein the "n" is 4,
the data array of the first data group comprises first to fourth data,
the data array of the second data group comprises first to fourth data, and
the execution unit performs the operation on the following four data pairs: a data pair made up of the first data in the data array of the first data group and the second data in the data array of the second data group; a data pair made up of the second data in the data array of the first data group and the second data in the data array of the second data group; a data pair made up of the third data in the data array of the first data group and the second data in the data array of the second data group; and a data pair made up of the fourth data in the data array of the first data group and the second data in the data array of the second data group.

25. The SIMD processor according to claim 1,
wherein the "n" is 4,
the data array of the first data group comprises first to fourth data,
the data array of the second data group comprises first to fourth data, and
the execution unit performs the operation on the following four data pairs: a data pair made up of the first data in the data array of the first data group and the third data in the data array of the second data group; a data pair made up of the second data in the data array of the first data group and the third data in the data array of the second data group; a data pair made up of the third data in .the data array of the first data group and the third data in the data array of the second data group; and a data pair made up of the fourth data in the data array of the first data group and the third data in the data array of the second data group.

26. The SIMD processor according to claim 1,
wherein the "n" is 4,
the data array of the first data group comprises first to fourth data,
the data array of the second data group comprises first to fourth data, and
the execution unit performs the operation on the following four data pairs: a data pair made up of the first data in the data array of the first data group and the fourth data in the data array of the second data group; a data pair made up of the second data in the data array of the first data group and the fourth data in the data array of the second data group; a data pair made up of the third data in the data array of the first data group and the fourth data in the data array of the second data group; and a data pair made up of the fourth data in the data array of the first data group and the fourth data in the data array of the second data group.

27. The SIMD processor according to one of the claims 23 to 26,
wherein the operation type specified by the operation code is one of multiplication, sum of products, and difference of products,
the instruction includes a third operand specifying a third data for storing operation results, and
the execution unit stores, into the third data, a lower-bit part of respective results obtained by performing the operation on each of the four data pairs.

28. The SIMD processor according to one of the claims 23 to 26,
wherein the operation type specified by the operation code is one of multiplication, sum of products, and difference of products,
the instruction includes a third operand specifying a third data for storing operation results, and
the execution unit stores, into the third data, a higher-bit part of respective results obtained by performing the operation on each of the four data pairs.

29. The SIMD processor according to one of the claims 23 to 26,
wherein the operation type specified by the operation code is one of multiplication, sum of products, and difference of products,
the instruction includes a third operand specifying a third data for storing operation results, and
the execution unit stores, into the third data, two of four results obtained by performing the operation on each of the four data pairs.

## Patentansprüche

1. SIMD-Prozessor (SIMD: Single Instruction Multiple Data) (1) zum Ausführen einer SIMD-Operation an mehreren Datenpaaren, wobei jedes Datenpaar der mehreren Datenpaare aus einem Datenelement, das zu einer ersten Datengruppe gehört, und einem Datenelement, das zu einer zweiten Datengruppe gehört, besteht, mit:
einer Decodiereinheit (20), die so betreibbar ist, dass sie einen Befehl decodiert; und
einer Ausführungseinheit (40), die so betreibbar ist, dass sie den Befehl entsprechend einem Ergebnis der von der Decodiereinheit durchgeführten Decodierung ausführt,
wobei in dem Fall, dass ein SIMD-Befehl, der (1) einen Operationscode, der einen Operationstyp festlegt, (11) einen ersten Operanden, der die erste Datengruppe, die ein Datenfeld enthält, das aus "n" Datenelementen, mit n ≥ 2, besteht, und (III) einen zweiten Operanden enthält, der die zweite Datengruppe festlegt, die ein Datenfeld enthält, das aus "n" Datenelementen besteht, von der Decodiereinheit decodiert wird, die Ausführungseinheit eine von dem Operationscode festgelegte Operation an "n" Datenpaaren ausführt, die jeweils aus einem Datenelement, das zu der ersten Datengruppe gehört, und einem Datenelement, das zu der zweiten Datengruppe gehört, bestehen,
**dadurch gekennzeichnet, dass** mindestens ein Datenpaar der "n" Datenpaare aus "i"-ten Daten in dem Datenfeld der ersten Datengruppe und "j"-ten Daten, mit j ≠ i, in dem Datenfeld der zweiten Datengruppe besteht.

2. SIMD-Prozessor nach Anspruch 1, **dadurch gekennzeichnet, dass** der von dem Operationscode festgelegte Operationstyp ein Element aus der Gruppe Addition, Subtraktion, Multiplikation, Summe von Produkten und Differenz von Produkten ist.

3. SIMD-Prozessor nach Anspruch 1, **dadurch gekennzeichnet, dass**
"n" 2 ist,
das Datenfeld der ersten Datengruppe erste und zweite Daten aufweist,
das Datenfeld der zweiten Datengruppe erste und zweite Daten aufweist und
die Ausführungseinheit die Operation an einem Datenpaar, das aus den ersten Daten in dem Datenfeld der ersten Datengruppe und den zweiten Daten in dem Datenfeld der zweiten Datengruppe besteht, sowie an einem Datenpaar ausführt, das aus den zweiten Daten in dem Datenfeld der ersten Datengruppe und den ersten Daten in dem Datenfeld der zweiten Datengruppe besteht.

4. SIMD-Prozessor nach Anspruch 3, **dadurch gekennzeichnet, dass**
der von dem Operationscode festgelegte Operationstyp ein Element aus der Gruppe Multiplikation, Summe von Produkten und Differenz von Produkten ist,
der Befehl einen dritten Operanden enthält, der dritte Daten zum Speichern von Operationsergebnissen festlegt, und
die Ausführungseinheit in den dritten Daten einen Niedrigerwertiges-Bit-Teil eines Ergebnisses, das durch Ausführen der Operation an dem Datenpaar erhalten wird, das aus den ersten Daten in dem Datenfeld der ersten Datengruppe und den zweiten Daten in dem Datenfeld der zweiten Datengruppe besteht, und einen Niedrigerwertiges-Bit-Teil eines Ergebnisses speichert, das durch Ausführen der Operation an dem Datenpaar erhalten wird, das aus den zweiten Daten in dem Datenfeld der ersten Datengruppe und den ersten Daten in dem Datenfeld der zweiten Datengruppe besteht.

5. SIMD-Prozessor nach Anspruch 3, **dadurch gekennzeichnet, dass**
der von dem Operationscode festgelegte Operationstyp ein Element aus der Gruppe Multiplikation, Summe von Produkten und Differenz von Produkten ist,
der Befehl einen dritten Operanden enthält, der dritte Daten zum Speichern von Operationsergebnissen festlegt, und
die Ausführungseinheit in den dritten Daten einen Höherwertiges-Bit-Teil eines Ergebnisses, das durch Ausführen der Operation an dem Datenpaar erhalten wird, das aus den ersten Daten in dem Datenfeld der ersten Datengruppe und den zweiten Daten in dem Datenfeld der zweiten Datengruppe besteht, und einen Höherwertiges-Bit-Teil eines Ergebnisses speichert, das durch Ausführen der Operation an dem Datenpaar erhalten wird, das aus den zweiten Daten in dem Datenfeld der ersten Datengruppe und den ersten Daten in dem Datenfeld der zweiten Datengruppe besteht.

6. SIMD-Prozessor nach Anspruch 3, **dadurch gekennzeichnet, dass**
der von dem Operationscode festgelegte Operationstyp ein Element aus der Gruppe Multiplikation, Summe von Produkten und Differenz von Produkten ist,
der Befehl einen dritten Operanden enthält, der dritte Daten zum Speichern von Operationsergebnissen festlegt, und
die Ausführungseinheit eines der folgenden Ergebnisse in den dritten Daten speichert: ein Ergebnis, das durch Ausführen der Operation an dem Datenpaar erhalten wird, das aus den ersten Daten in dem Datenfeld der ersten Datengruppe und den zweiten Daten in dem Datenfeld der zweiten Datengruppe besteht; und ein Ergebnis, das durch Ausführen der Operation an dem Datenpaar erhalten wird, das aus den zweiten Daten in dem Datenfeld der ersten Datengruppe und den ersten Daten in dem Datenfeld der zweiten Datengruppe besteht.

7. SIMD-Prozessor nach Anspruch 1, **dadurch gekennzeichnet, dass**
"n" ≥ 4 ist und
j = n - i + 1 ist.

8. SIMD-Prozessor nach Anspruch 1, **dadurch gekennzeichnet, dass**
"n" ≥ 4 ist und
j = i - (-1)^(i mod 2) ist ("^" bezeichnet die Erhebung in eine Potenz, und "mod" bezeichnet den Modulo).

9. SIMD-Prozessor nach Anspruch 1, **dadurch gekennzeichnet, dass**
"n" ≥ 4 ist und
j = n - i + 1 + (-1)^(i mod 2) ist.

10. SIMD-Prozessor nach Anspruch 1, **dadurch gekennzeichnet, dass**
"n" 4 ist,
das Datenfeld der ersten Datengruppe erste bis vierte Daten aufweist,
das Datenfeld der zweiten Datengruppe erste bis vierte Daten aufweist und
die Ausführungseinheit die Operation an den folgenden vier Datenpaaren ausführt: einem Datenpaar, das aus den ersten Daten in dem Datenfeld der ersten Datengruppe und den vierten Daten in dem Datenfeld der zweiten Datengruppe besteht; einem Datenpaar, das aus den zweiten Daten in dem Datenfeld der ersten Datengruppe und den dritten Daten in dem Datenfeld der zweiten Datengruppe besteht; einem Datenpaar, das aus den dritten Daten in dem Datenfeld der ersten Datengruppe und den zweiten Daten in dem Datenfeld der zweiten Datengruppe besteht; und einem Datenpaar, das aus den vierten Daten in dem Datenfeld der ersten Datengruppe und den ersten Daten in dem Datenfeld der zweiten Datengruppe besteht.

11. SIMD-Prozessor nach Anspruch 1, **dadurch gekennzeichnet, dass**
"n" 4 ist,
das Datenfeld der ersten Datengruppe erste bis vierte Daten aufweist,
das Datenfeld der zweiten Datengruppe erste bis vierte Daten aufweist und
die Ausführungseinheit die Operation an den folgenden Datenpaaren ausführt: einem Datenpaar, das aus den ersten Daten in dem Datenfeld der ersten Datengruppe und den zweiten Daten in dem Datenfeld der zweiten Datengruppe besteht; einem Datenpaar, das aus den zweiten Daten in dem Datenfeld der ersten Datengruppe und den ersten Daten in dem Datenfeld der zweiten Datengruppe besteht; einem Datenpaar, das aus den dritten Daten in dem Datenfeld der ersten Datengruppe und den vierten Daten in dem Datenfeld der zweiten Datengruppe besteht; und einem Datenpaar, das aus den vierten Daten in dem Datenfeld der ersten Datengruppe und den dritten Daten in dem Datenfeld der zweiten Datengruppe besteht.

12. SIMD-Prozessor nach Anspruch 1, **dadurch gekennzeichnet, dass**
"n" 4 ist,
das Datenfeld der ersten Datengruppe erste bis vierte Daten aufweist,
das Datenfeld der zweiten Datengruppe erste bis vierte Daten aufweist und
die Ausführungseinheit die Operation an den folgenden Datenpaaren ausführt: einem Datenpaar, das aus den ersten Daten in dem Datenfeld der ersten Datengruppe und den dritten Daten in dem Datenfeld der zweiten Datengruppe besteht; einem Datenpaar, das aus den zweiten Daten in dem Datenfeld der ersten Datengruppe und den vierten Daten in dem Datenfeld der zweiten Datengruppe besteht; einem Datenpaar, das aus den dritten Daten in dem Datenfeld der ersten Datengruppe und den ersten Daten in dem Datenfeld der zweiten Datengruppe besteht; und einem Datenpaar, das aus den vierten Daten in dem Datenfeld der ersten Datengruppe und den zweiten Daten in dem Datenfeld der zweiten Datengruppe besteht.

13. SIMD-Prozessor nach einem der Ansprüche 10 bis 12, **dadurch gekennzeichnet, dass**
der von dem Operationscode festgelegte Operationstyp ein Element aus der Gruppe Multiplikation, Summe von Produkten und Differenz von Produkten ist,
der Befehl einen dritten Operanden enthält, der dritte Daten zum Speichern von Operationsergebnissen festlegt, und
die Ausführungseinheit in den dritten Daten einen Niedrigerwertiges-Bit-Teil von entsprechenden Ergebnissen speichert, die durch Ausführen der Operation an jedem der vier Datenpaare erhalten werden.

14. SIMD-Prozessor nach einem der Ansprüche 10 bis 12, **dadurch gekennzeichnet, dass**
der von dem Operationscode festgelegte Operationstyp ein Element aus der Gruppe Multiplikation, Summe von Produkten und Differenz von Produkten ist,
der Befehl einen dritten Operanden enthält, der dritte Daten zum Speichern von Operationsergebnissen festlegt, und
die Ausführungseinheit in den dritten Daten einen Höherwertiges-Bit-Teil von entsprechenden Ergebnissen speichert, die durch Ausführen der Operation an jedem der vier Datenpaare erhalten werden.

15. SIMD-Prozessor nach einem der Ansprüche 10 bis 12, **dadurch gekennzeichnet, dass**
der von dem Operationscode festgelegte Operationstyp ein Element aus der Gruppe Multiplikation, Summe von Produkten und Differenz von Produkten ist,
der Befehl einen dritten Operanden enthält, der dritte Daten zum Speichern von Operationsergebnissen festlegt, und
die Ausführungseinheit in den dritten Daten zwei von vier Ergebnissen speichert, die durch Ausführen der Operation an jedem der vier Datenpaare erhalten werden.

16. SIMD-Prozessor nach Anspruch 1, **dadurch gekennzeichnet, dass** die Ausführungseinheit die Operation an jedem der "n" Datenpaare ausführt, die jeweils aus den "i"-ten Daten in der ersten Datengruppe und den "j"-ten Daten in der zweiten Datengruppe bestehen, wenn "i" = 1, 2, ... , n ist und "j" ein Festwert ist.

17. SIMD-Prozessor nach Anspruch 1, **dadurch gekennzeichnet, dass**
"n" = 2 ist,
das Datenfeld der ersten Datengruppe erste Daten und zweite Daten aufweist,
das Datenfeld der zweiten Datengruppe erste Daten und zweite Daten aufweist und
die Ausführungseinheit die Operation an einem Datenpaar, das aus den ersten Daten in dem Datenfeld der ersten Datengruppe und den ersten Daten in dem Datenfeld der zweiten Datengruppe besteht, sowie an einem Datenpaar ausführt, das aus den zweiten Daten in dem Datenfeld der ersten Datengruppe und den ersten Daten in dem Datenfeld der zweiten Datengruppe besteht.

18. SIMD-Prozessor nach Anspruch 1, **dadurch gekennzeichnet, dass**
"n" = 2 ist,
das Datenfeld der ersten Datengruppe erste Daten und zweite Daten aufweist,
das Datenfeld der zweiten Datengruppe erste Daten und zweite Daten aufweist und
die Ausführungseinheit die Operation an einem Datenpaar, das aus den ersten Daten in dem Datenfeld der ersten Datengruppe und den zweiten Daten in dem Datenfeld der zweiten Datengruppe besteht, sowie an einem Datenpaar ausführt, das aus den zweiten Daten in dem Datenfeld der ersten Datengruppe und den zweiten Daten in dem Datenfeld der zweiten Datengruppe besteht.

19. SIMD-Prozessor nach Anspruch 1, **dadurch gekennzeichnet, dass**
"n" = 2 ist,
das Datenfeld der ersten Datengruppe erste Daten und zweite Daten aufweist,
das Datenfeld der zweiten Datengruppe erste Daten und zweite Daten aufweist und
die Ausführungseinheit die Operation an (1) einem Datenpaar, das aus den ersten Daten in dem Datenfeld der ersten Datengruppe und den ersten Daten in dem Datenfeld der zweiten Datengruppe besteht, sowie an einem Datenpaar, das aus den zweiten Daten in dem Datenfeld der ersten Datengruppe und den ersten Daten in dem Datenfeld der zweiten Datengruppe besteht, ausführt, wenn ein erster Befehl von der Decodiereinheit decodiert wird, und an (II) einem Datenpaar, das aus den ersten Daten in dem Datenfeld der ersten Datengruppe und den zweiten Daten in dem Datenfeld der zweiten Datengruppe besteht, sowie an einem Datenpaar, das aus den zweiten Daten in dem Datenfeld der ersten Datengruppe und den zweiten Daten in dem Datenfeld der zweiten Datengruppe besteht, ausführt, wenn ein zweiter Befehl von der Decodiereinheit decodiert wird.

20. SIMD-Prozessor nach einem der Ansprüche 17 bis 19, **dadurch gekennzeichnet, dass**
der von dem Operationscode festgelegte Operationstyp ein Element aus der Gruppe Multiplikation, Summe von Produkten und Differenz von Produkten ist,
der Befehl einen dritten Operanden enthält, der dritte Daten zum Speichern von Operationsergebnissen festlegt, und
die Ausführungseinheit in den dritten Daten einen Niedrigerwertiges-Bit-Teil von entsprechenden Ergebnissen speichert, die durch Ausführen der Operation an jedem der zwei Datenpaare erhalten werden.

21. SIMD-Prozessor nach einem der Ansprüche 17 bis 19, **dadurch gekennzeichnet, dass**
der von dem Operationscode festgelegte Operationstyp ein Element aus der Gruppe Multiplikation, Summe von Produkten und Differenz von Produkten ist,
der Befehl einen dritten Operanden enthält, der dritte Daten zum Speichern von Operationsergebnissen festlegt, und
die Ausführungseinheit in den dritten Daten einen Höherwertiges-Bit-Teil von entsprechenden Ergebnissen speichert, die durch Ausführen der Operation an jedem der zwei Datenpaare erhalten werden.

22. SIMD-Prozessor nach einem der Ansprüche 17 bis 19, **dadurch gekennzeichnet, dass**
der von dem Operationscode festgelegte Operationstyp ein Element aus der Gruppe Multiplikation, Summe von Produkten und Differenz von Produkten ist,
der Befehl einen dritten Operanden enthält, der dritte Daten zum Speichern von Operationsergebnissen festlegt, und
die Ausführungseinheit in den dritten Daten eines von zwei Ergebnissen speichert, die durch Ausführen der Operation an jedem der zwei Datenpaare erhalten werden.

23. SIMD-Prozessor nach Anspruch 1, **dadurch gekennzeichnet, dass**
"n" = 4 ist,
das Datenfeld der ersten Datengruppe erste bis vierte Daten aufweist,
das Datenfeld der zweiten Datengruppe erste bis vierte Daten aufweist und
die Ausführungseinheit die Operation an den folgenden vier Datenpaaren ausführt: einem Datenpaar, das aus den ersten Daten in dem Datenfeld der ersten Datengruppe und den ersten Daten in dem Datenfeld der zweiten Datengruppe besteht; einem Datenpaar, das aus den zweiten Daten in dem Datenfeld der ersten Datengruppe und den ersten Daten in dem Datenfeld der zweiten Datengruppe besteht; einem Datenpaar, das aus den dritten Daten in dem Datenfeld der ersten Datengruppe und den ersten Daten in dem Datenfeld der zweiten Datengruppe besteht; und einem Datenpaar, das aus den vierten Daten in dem Datenfeld der ersten Datengruppe und den ersten Daten in dem Datenfeld der zweiten Datengruppe besteht.

24. SIMD-Prozessor nach Anspruch 1, **dadurch gekennzeichnet, dass**
"n" 4 ist,
das Datenfeld der ersten Datengruppe erste bis vierte Daten aufweist,
das Datenfeld der zweiten Datengruppe erste bis vierte Daten aufweist und die Ausführungseinheit die Operation an den folgenden vier Datenpaaren ausführt: einem Datenpaar, das aus den ersten Daten in dem Datenfeld der ersten Datengruppe und den zweiten Daten in dem Datenfeld der zweiten Datengruppe besteht; einem Datenpaar, das aus den zweiten Daten in dem Datenfeld der ersten Datengruppe und den zweiten Daten in dem Datenfeld der zweiten Datengruppe besteht; einem Datenpaar, das aus den dritten Daten in dem Datenfeld der ersten Datengruppe und den zweiten Daten in dem Datenfeld der zweiten Datengruppe besteht; und einem Datenpaar, das aus den vierten Daten in dem Datenfeld der ersten Datengruppe und den zweiten Daten in dem Datenfeld der zweiten Datengruppe besteht.

25. SIMD-Prozessor nach Anspruch 1, **dadurch gekennzeichnet, dass**
"n" 4 ist,
das Datenfeld der ersten Datengruppe erste bis vierte Daten aufweist,
das Datenfeld der zweiten Datengruppe erste bis vierte Daten aufweist und
die Ausführungseinheit die Operation an den folgenden vier Datenpaaren ausführt: einem Datenpaar, das aus den ersten Daten in dem Datenfeld der ersten Datengruppe und den dritten Daten in dem Datenfeld der zweiten Datengruppe besteht; einem Datenpaar, das aus den zweiten Daten in dem Datenfeld der ersten Datengruppe und den dritten Daten in dem Datenfeld der zweiten Datengruppe besteht; einem Datenpaar, das aus den dritten Daten in dem Datenfeld der ersten Datengruppe und den dritten Daten in dem Datenfeld der zweiten Datengruppe besteht; und einem Datenpaar, das aus den vierten Daten in dem Datenfeld der ersten Datengruppe und den dritten Daten in dem Datenfeld der zweiten Datengruppe besteht.

26. SIMD-Prozessor nach Anspruch 1, **dadurch gekennzeichnet, dass**
"n" 4 ist,
das Datenfeld der ersten Datengruppe erste bis vierte Daten aufweist,
das Datenfeld der zweiten Datengruppe erste bis vierte Daten aufweist und
die Ausführungseinheit die Operation an den folgenden vier Datenpaaren ausführt: einem Datenpaar, das aus den ersten Daten in dem Datenfeld der ersten Datengruppe und den vierten Daten in dem Datenfeld der zweiten Datengruppe besteht; einem Datenpaar, das aus den zweiten Daten in dem Datenfeld der ersten Datengruppe und den vierten Daten in dem Datenfeld der zweiten Datengruppe besteht; einem Datenpaar, das aus den dritten Daten in dem Datenfeld der ersten Datengruppe und den vierten Daten in dem Datenfeld der zweiten Datengruppe besteht; und einem Datenpaar, das aus den vierten Daten in dem Datenfeld der ersten Datengruppe und den vierten Daten in dem Datenfeld der zweiten Datengruppe besteht.

27. SIMD-Prozessor nach einem der Ansprüche 23 bis 26, **dadurch gekennzeichnet, dass**
der von dem Operationscode festgelegte Operationstyp ein Element aus der Gruppe Multiplikation, Summe von Produkten und Differenz von Produkten ist,
der Befehl einen dritten Operanden enthält, der dritte Daten zum Speichern von Operationsergebnissen festlegt, und
die Ausführungseinheit in den dritten Daten einen Niedrigerwertiges-Bit-Teil von entsprechenden Ergebnissen speichert, die durch Ausführen der Operation an jedem der vier Datenpaare erhalten werden.

28. SIMD-Prozessor nach einem der Ansprüche 23 bis 26, **dadurch gekennzeichnet, dass**
der von dem Operationscode festgelegte Operationstyp ein Element aus der Gruppe Multiplikation, Summe von Produkten und Differenz von Produkten ist,
der Befehl einen dritten Operanden enthält, der dritte Daten zum Speichern von Operationsergebnissen festlegt, und
die Ausführungseinheit in den dritten Daten einen Höherwertiges-Bit-Teil von entsprechenden Ergebnissen speichert, die durch Ausführen der Operation an jedem der vier Datenpaare erhalten werden.

29. SIMD-Prozessor nach einem der Ansprüche 23 bis 26, **dadurch gekennzeichnet, dass**
der von dem Operationscode festgelegte Operationstyp ein Element aus der Gruppe Multiplikation, Summe von Produkten und Differenz von Produkten ist,
der Befehl einen dritten Operanden enthält, der dritte Daten zum Speichern von Operationsergebnissen festlegt, und
die Ausführungseinheit in den dritten Daten zwei von vier Ergebnissen speichert, die durch Ausführen der Operation an jedem der vier Datenpaare erhalten werden.

## Revendications

1. Processeur du type instruction unique - données multiples SIMD (1) destiné à exécuter une opération du type SIMD sur une pluralité de paires de données, dans lequel
chaque paire de données de la pluralité de paires de données est constituée d'un élément de donnée appartenant à un premier groupe de données et d'un élément de donnée appartenant à un second groupe de données,
comprenant :
une unité de décodage (20) pouvant être mise en oeuvre pour décoder une instruction, et
une unité d'exécution (40) pouvant être mise en oeuvre pour exécuter l'instruction conformément à un résultat du décodage exécuté par l'unité de décodage,
dans lequel, lorsqu'une instruction de type SIMD comprenant (i) un code d'opération spécifiant un type d'opération, (ii) un premier opérande spécifiant le premier groupe de données comprenant une matrice de données constituée de "n", n ≥ 2, éléments de données, et (iii) un second opérande spécifiant le second groupe de données contenant une matrice de données constituée de "n" éléments de données, est décodée par l'unité de décodage, l'unité d'exécution exécute une opération spécifiée par le code d'opération sur "n" paires de données, chacune étant constituée d'un élément de donnée appartenant au premier groupe de données et d'un élément de donnée appartenant au second groupe de données,
**caractérisé en ce que**
au moins une paire de données parmi les "n" paires de données est constituée des "i^{e}" données dans la matrice de données du premier groupe de données et des "j^{e}" données, j # i, dans la matrice de données du second groupe de données.

2. Processeur de type SIMD selon la revendication 1,
dans lequel le type d'opération spécifiée par le code d'opération est un type parmi l'addition, la soustraction, la multiplication, la somme de produits et la différence de produits.

3. Processeur de type SIMD selon la revendication 1,
dans lequel "n" vaut 2,
la matrice de données du premier groupe de données comprend des premières données et des secondes données,
la matrice de données du second groupe de données comprend des premières données et des secondes données,
l'unité d'exécution exécute l'opération sur une paire de données constituée des premières données de la matrice de données du premier groupe de données, et des secondes données de la matrice de données du second groupe de données, de même que sur une paire de données constituée des secondes données dans la matrice de données du premier groupe de données et des premières données de la matrice de données du second groupe de données.

4. Processeur de type SIMD selon la revendication 3,
dans lequel le type d'opération spécifié par le code d'opération est un type parmi la multiplication, la somme de produits et la différence de produits,
l'instruction comprend un troisième opérande spécifiant des troisièmes données pour mémoriser les résultats d'opération, et
l'unité d'exécution mémorise, dans les troisièmes données, une partie de bits inférieurs du résultat obtenu en exécutant l'opération sur la paire de données constituée des premières données de la matrice de données du premier groupe de données et des secondes données de la matrice de données du second groupe de données, et une partie de bits inférieurs d'un résultat obtenu en exécutant l'opération sur la paire de données constituée des secondes données de la matrice de données du premier groupe de données et des premières données de la matrice de données du second groupe de données.

5. Processeur de type SIMD selon la revendication 3,
dans lequel le type d'opération spécifié par le code d'opération est un type parmi la multiplication, la somme de produits et la différence de produits,
l'instruction comprend un troisième opérande spécifiant des troisièmes données pour mémoriser des résultats d'opération, et
l'unité d'exécution mémorise, dans les troisièmes données, une partie de bits supérieurs d'un résultat obtenu en exécutant l'opération sur la paire de données constituée des premières données de la matrice de données du premier groupe de données et des secondes données de la matrice de données du second groupe de données, et une partie de bits supérieurs d'un résultat obtenu en exécutant l'opération sur la paire de données constituée des secondes données de la matrice de données du premier groupe de données et des premières données de la matrice de données du second groupe de données.

6. Processeur de type SIMD selon la revendication 3,
dans lequel le type d'opération spécifié par le code d'opération est un type parmi la multiplication, la somme de produits et la différence de produits,
l'instruction comprend un troisième opérande spécifiant des troisièmes données pour mémoriser des résultats d'opération, et
l'unité d'exécution mémorise l'un des résultats suivants dans les troisièmes données: un résultat obtenu en exécutant l'opération sur la paire de données constituée des premières données de la matrice de données du premier groupe de données et des secondes données de la matrice de données du second groupe de données, et un résultat obtenu en exécutant l'opération sur la paire de données constituée des secondes données de la matrice de données du premier groupe de données et des premières données de la matrice de données du second groupe de données.

7. Processeur de type SIMD selon la revendication 1,
dans lequel "n" ≥ 4, et j = n - i + 1.

8. Processeur de type SIMD selon la revendication 1,
dans lequel "n" ≥ 4, et
j = i - (- 1) ^ (i mod 2)
("^" désigne l'élévation à la puissance et "mod" signifie modulo).

9. Processeur de type SIMD selon la revendication 1,
dans lequel "n" ≥ 4, et
j = n - i + 1 + (- 1) ^ (i mod 2).

10. Processeur de type SIMD selon la revendication 1,
dans lequel "n" vaut 4,
la matrice de données du premier groupe de données comprend des premières à quatrièmes données,
la matrice de données du second groupe de données comprend des premières à quatrièmes données, et
l'unité d'exécution exécute l'opération sur les quatre paires de données suivantes : une paire de données constituée des premières données de la matrice de données du premier groupe de données et des quatrièmes données de la matrice de données du second groupe de données, une paire de données constituée des secondes données de la matrice de données du premier groupe de données et des troisièmes données de la matrice de données du second groupe de données, une paire de données constituée des troisièmes données de la matrice de données du premier groupe de données et des secondes données de la matrice de données du second groupe de données, et une paire de données constituée des quatrièmes données de la matrice de données du premier groupe de données et des premières données de la matrice de données du second groupe de données.

11. Processeur de type SIMD selon la revendication 1,
dans lequel "n" vaut 4,
la matrice de données du premier groupe de données comprend des premières à quatrièmes données,
la matrice de données du second groupe de données comprend des premières à quatrièmes données, et
l'unité d'exécution exécute l'opération sur les paires de données suivantes : une paire de données constituée des premières données de la matrice de données du premier groupe de données et des secondes données de la matrice de données du second groupe de données, une paire de données constituée des secondes données de la matrice de données du premier groupe de données et des premières données de la matrice de données du second groupe de données, une paire de données constituée des troisièmes données de la matrice de données du premier groupe de données et des quatrièmes données de la matrice de données du second groupe de données, et une paire de données constituée des quatrièmes données de la matrice de données du premier groupe de données et des troisièmes données de la matrice de données du second groupe de données.

12. Processeur de type SIMD selon la revendication 1,
dans lequel "n" vaut 4,
la matrice de données du premier groupe de données comprend des premières à quatrièmes données,
la matrice de données du second groupe de données comprend des premières à quatrièmes données, et
l'unité d'exécution exécute l'opération sur les paires de données suivantes : une paire de données constituée des premières données de la matrice de données du premier groupe de données et des troisièmes données de la matrice de données du second groupe de données, une paire de données constituée des secondes données de la matrice de données du premier groupe de données et des quatrièmes données de la matrice de données du second groupe de données, une paire de données constituée des troisièmes données de la matrice de données du premier groupe de données et des premières données de la matrice de données du second groupe de données, et une paire de données constituée des quatrièmes données de la matrice de données du premier groupe de données et des secondes données de la matrice de données du second groupe de données.

13. Processeur de type SIMD selon l'une des revendications 10 à 12,
dans lequel le type d'opération spécifié par le code d'opération est un type parmi la multiplication, la somme de produits et la différence de produits,
l'instruction comprend un troisième opérande spécifiant des troisièmes données pour mémoriser des résultats d'opération, et
l'unité d'exécution mémorise, dans les troisièmes données, une partie de bits inférieurs de résultats respectifs obtenus en exécutant l'opération sur chacune des quatre paires de données.

14. Processeur de type SIMD selon l'une des revendications 10 à 12,
dans lequel le type d'opération spécifié par le code d'opération est un type parmi la multiplication, la somme de produits et la différence de produits,
l'instruction comprend un troisième opérande spécifiant des troisièmes données pour mémoriser des résultats d'opération, et
l'unité d'exécution mémorise, dans les troisièmes données, une partie de bits supérieurs de résultats respectifs obtenus en exécutant l'opération sur chacune des quatre paires de données.

15. Processeur de type SIMD selon l'une des revendications 10 à 12,
dans lequel le type d'opération spécifié par le code d'opération est un type parmi la multiplication, la somme de produits et la différence de produits,
l'instruction comprend un troisième opérande spécifiant des troisièmes données pour mémoriser des résultats d'opération, et
l'unité d'exécution mémorise, dans les troisièmes données, deux des quatre résultats obtenus en exécutant l'opération sur chacune des quatre paires de données.

16. Processeur de type SIMD selon la revendication 1,
dans lequel l'unité d'exécution exécute l'opération sur chacune des "n" paires de données, chacune étant constituée des "i^{e}" données dans le premier groupe de données et des "j^{e}" données dans le second groupe de données, lorsque "i" = 1, 2, ..., n, et "j" vaut une valeur fixe.

17. Processeur de type SIMD selon la revendication 1,
dans lequel "n" vaut 2,
la matrice de données du premier groupe de données comprend des premières données et des secondes données,
la matrice de données du second groupe de données comprend des premières données et des secondes données, et
l'unité d'exécution exécute l'opération sur une paire de données constituée des premières données de la matrice de données du premier groupe de données et des premières données de la matrice de données du second groupe de données, de même que sur une paire de données constituée des secondes données de la matrice de données du premier groupe de données et des premières données de la matrice de données du second groupe de données.

18. Processeur de type SIMD selon la revendication 1,
dans lequel "n" vaut 2,
la matrice de données du premier groupe de données comprend des premières données et des secondes données,
la matrice de données du second groupe de données comprend des premières données et des secondes données, et
l'unité d'exécution exécute l'opération sur une paire de données constituée des premières données de la matrice de données du premier groupe de données et des secondes données de la matrice de données du second groupe de données, de même que sur une paire de données constituée des secondes données de la matrice de données du premier groupe de données et des secondes données de la matrice de données du second groupe de données.

19. Processeur de type SIMD selon la revendication 1,
dans lequel "n" vaut 2,
la matrice de données du premier groupe de données comprend des premières données et des secondes données,
la matrice de données du second groupe de données comprend des premières données et des secondes données, et
l'unité d'exécution exécute l'opération sur (i) une paire de données constituée des premières données de la matrice de données du premier groupe de données et des premières données de la matrice de données du second groupe de données, de même que sur une paire de données constituée des secondes données de la matrice de données du premier groupe de données et des premières données de la matrice de données du second groupe de données, lorsqu'une première instruction est décodée par l'unité de décodage, et sur (ii) une paire de données constituée des premières données de la matrice de données du premier groupe de données et des secondes données de la matrice de données du second groupe de données, de même que sur une paire de données constituée des secondes données de la matrice de données du premier groupe de données et des secondes données de la matrice de données du second groupe de données, lorsqu'une seconde instruction est décodée par l'unité de décodage.

20. Processeur de type SIMD selon l'une des revendications 17 à 19,
dans lequel le type d'opération spécifié par le code d'opération est un type parmi la multiplication, la somme de produits et la différence de produits,
l'instruction comprend un premier opérande spécifiant les troisièmes données pour mémoriser des résultats d'opération, et
l'unité d'exécution mémorise, dans les troisièmes données, une partie de bits inférieurs de résultats respectifs obtenus en exécutant l'opération sur chacune des deux paires de données.

21. Processeur de type SIMD selon l'une des revendications 17 à 19,
dans lequel le type d'opération spécifié par le code d'opération est un type parmi la multiplication, la somme de produits et la différence de produits,
l'instruction comprend un troisième opérande spécifiant des troisièmes données pour mémoriser des résultats d'opération, et
l'unité d'exécution mémorise, dans les troisièmes données, une partie de bits supérieurs de résultats respectifs obtenus en exécutant l'opération sur chacune des deux paires de données.

22. Processeur de type SIMD selon l'une des revendications 17 à 19,
dans lequel le type d'opération spécifié par le code d'opération est un type parmi la multiplication, la somme de produits et la différence de produits,
l'instruction comprend un troisième opérande spécifiant les troisièmes données pour mémoriser des résultats d'opération, et
l'unité d'exécution mémorise, dans les troisièmes données, un ou deux résultats obtenus en exécutant l'opération sur chacune des deux paires de données.

23. Processeur de type SIMD selon la revendication 1,
dans lequel "n" vaut 4,
la matrice de données du premier groupe de données comprend des premières à quatrièmes données,
la matrice de données du second groupe de données comprend des premières à quatrièmes données, et
l'unité d'exécution exécute l'opération sur les quatre paires de données suivantes : une paire de données constituée des premières données de la matrice de données du premier groupe de données et des premières données de la matrice de données du second groupe de données, une paire constituée des secondes données de la matrice de données du premier groupe de données et des premières données de la matrice de données du second groupe de données, une paire de données constituée des troisièmes données de la matrice de données du premier groupe de données et des premières données de la matrice de données du second groupe de données, et une paire de données constituée des quatrièmes données de la matrice de données du premier groupe de données et des premières données de la matrice de données du second groupe de données.

24. Processeur de type SIMD selon la revendication 1,
dans lequel "n" vaut 4,
la matrice de données du premier groupe de données comprend des premières à quatrièmes données,
la matrice de données du second groupe de données comprend des premières à quatrièmes données, et
l'unité d'exécution exécute l'opération sur les quatre paires de données suivantes: une paire de données constituée des premières données de la matrice de données du premier groupe de données et des secondes données de la matrice de données du second groupe de données, une paire de données constituée des secondes données de la matrice de données du premier groupe de données et des secondes données de la matrice de données du second groupe de données, une paire de données constituée des troisièmes données de la matrice de données du premier groupe de données et des secondes données de la matrice de données du second groupe de données, et une paire de données constituée des quatrièmes données de la matrice de données du premier groupe de données et des secondes données de la matrice de données du second groupe de données.

25. Processeur de type SIMD selon la revendication 1,
dans lequel "n" vaut 4,
la matrice de données du premier groupe de données comprend des premières à quatrièmes données,
la matrice de données du second groupe de données comprend des premières à quatrièmes données, et
l'unité d'exécution exécute l'opération sur les quatre paires de données suivantes : une paire de données constituée des premières données de la matrice de données du premier groupe de données et des troisièmes données de la matrice de données du second groupe de données, une paire constituée des secondes données de la matrice de données et du premier groupe de données et des troisièmes données de la matrice de données du second groupe de données, une paire de données constituée des troisièmes données de la matrice de données du premier groupe de données et des troisièmes données de la matrice de données du second groupe de données, et une paire de données constituée des quatrièmes données de la matrice de données du premier groupe de données et des troisièmes données de la matrice de données du second groupe de données.

26. Processeur de type SIMD selon la revendication 1,
dans lequel "n" vaut 4,
la matrice de données du premier groupe de données comprend des premières à quatrièmes données,
la matrice de données du second groupe de données comprend des premières à quatrièmes données, et
l'unité d'exécution exécute l'opération sur les quatre paires de données suivantes : une paire de données constituée des premières données de la matrice de données du premier groupe de données et des quatrièmes données de la matrice de données du second groupe de données, une paire de données constituée des secondes données de la matrice de données du premier groupe de données et des quatrièmes données de la matrice de données du second groupe de données, une paire de données constituée des troisièmes données de la matrice de données du premier groupe de données et des quatrièmes données de la matrice de données du second groupe de données, et une paire de données constituée des quatrièmes données de la matrice de données du.premier groupe de données et des quatrièmes données de la matrice de données du second groupe de données.

27. Processeur de type SIMD selon l'une des revendications 23 à 26,
dans lequel le type d'opération spécifié par le code d'opération est un type parmi la multiplication, la somme de produits et la différence de produits,
l'instruction comprend un troisième opérande spécifiant des troisièmes données pour mémoriser des résultats d'opération, et
l'unité d'exécution mémorise, dans les troisièmes données, une partie de bits inférieurs de résultats respectifs obtenus en exécutant l'opération sur chacune des quatre paires de données.

28. Processeur de type SIMD selon l'une des revendications 23 à 26,
dans lequel le type d'opération spécifié par le code d'opération est un type parmi la multiplication, la somme de produits et la différence de produits,
l'instruction comprend un troisième opérande spécifiant des troisièmes données pour mémoriser des résultats d'opération, et
l'unité d'exécution mémorise, dans les troisièmes données, une partie de bits supérieurs de résultats respectifs obtenus en exécutant l'opération sur chacune des quatre paires de données.

29. Processeur de type SIMD selon l'une des revendications 23 à 26,
dans lequel le type d'opération spécifié par le code d'opération est un type parmi la multiplication, la somme de produits et la différence de produits,
l'instruction comprend un troisième opérande spécifiant des troisièmes données pour mémoriser des résultats d'opération, et
l'unité d'exécution mémorise, dans les troisièmes données, deux des quatre résultats obtenus en exécutant l'opération sur chacune des quatre paires de données.
